(19) Europäisches Patentamt
European Patent Office
Office européen des brevets

(11) EP 4 782 519 A1

(12) EUROPEAN PATENT APPLICATION

(43) Date of publication:
**29.07.2026 Bulletin 2026/31**

(21) Application number: **26152849.1**

(22) Date of filing: **20.01.2026**

(51) International Patent Classification (IPC):
***C09K 19/30*** *(2006.01)* ***C09K 19/34*** *(2006.01)*

(52) Cooperative Patent Classification (CPC):
**C09K 19/3098;** C09K 19/3048; C09K 19/3491; C09K 2019/0466; C09K 2019/122; C09K 2019/123; C09K 2019/3004; C09K 2019/3009; C09K 2019/301

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.01.2025 EP 25153757**

(71) Applicant: **Merck Patent GmbH**
**64293 Darmstadt (DE)**

(72) Inventors:
- **Laut, Sven Christian**
  **64293 Darmstadt (DE)**
- **Lin, Sam**
  **115018 Taipei (TW)**
- **Hsia, Tzu-Feng**
  **115018 Taipei (TW)**

(74) Representative: **Merck Patent Association**
**Merck Patent GmbH**
**64271 Darmstadt (DE)**

# (54) LIQUID-CRYSTALLINE MEDIUM

(57) The present invention relates to liquid-crystalline (LC) media or LC materials and to energy efficient liquid-crystal displays (LCDs) containing these media, especially to gaming displays and augmented reality (AR) / virtual reality (VR) headsets addressed by an active matrix and in particular to LC displays of the TN, PS-TN, STN, TN-TFT, OCB, IPS, PS-IPS, FFS, HB-FFS, XB-FFS, PS-FFS, SA-HB-FFS, SA-XB-FFS, polymer stabilised SA-HB-FFS, polymer stabilised SA-XB-FFS, positive VA or positive PS-VA type.

EP 4 782 519 A1

## Description

The present invention relates to liquid-crystalline (LC) media and to energy efficient liquid-crystal displays (LCDs) containing these media having a high contrast ratio and improved transmission, e.g. gaming displays, displays for automotive applications, IT monitors and augmented reality (AR) / virtual reality (VR) applications which are addressed by an active matrix and, in particular, to LC displays of the TN, PS-TN, STN, TN-TFT, OCB, IPS, PS-IPS, FFS, HB-FFS, XB-FFS, PS-FFS, SA-HB-FFS, SA-XB-FFS, polymer stabilised SA-HB-FFS, polymer stabilised SA-XB-FFS, positive VA or positive PS-VA type. The LC media of the present invention have positive dielectric anisotropy.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is generated substantially perpendicular to the substrates and the LC layer.

Besides these modes, there are also electro-optical modes that utilise an electric field which is substantially parallel to the substrates or the LC layer. For example, WO 91/10936 A1 discloses a LC display in which the electric signals are generated in such a way that the electric fields have a significant component parallel to the LC layer, and which has since then become known as *"in-plane switching"* (IPS) display. The principles of operating such a display are described, for example, by R.A. Soref in Journal of Applied Physics, Vol. 45, No. 12, pp. 5466-5468 (1974).

IPS displays contain a LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568 A2, for example, discloses various possibilities for the design of the electrodes and for addressing an IPS display. DE 198 24 137 A1 likewise describes various embodiments of such IPS displays.

Liquid-crystalline materials for IPS displays of this type are described, for example, in DE 195 28 104 A1.

Furthermore, so-called *"fringe-field switching"* (FFS) displays have been reported (see, *inter alia* S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called *"fringe field"* is thereby generated, *i.e.* a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern desktop monitors, TV sets and multimedia applications. The LC media according to the present invention are preferably used in displays of this type. In general, dielectrically positive LC media having rather lower values of the dielectric anisotropy are used in FFS displays, but in some cases LC media having a dielectric anisotropy of only about 3 or even less are also used in IPS displays.

A further improvement has been achieved by the HB-FFS mode. One of the unique features of the HB-FFS mode in contrast to the traditional FFS technology is that it enables higher transmittance which allows operation of the panel with less energy consumption.

Another recently developed mode is the XB-FFS mode, wherein the LC medium additionally contains a polar liquid crystal compound with low dielectric anisotropy.

Liquid-crystal compositions which are suitable for LCDs and especially for FFS and IPS displays are known in prior art, for example, from JP 07-181 439 (A), EP 0 667 555 A1, EP 0 673 986 A2, DE 195 09 410 A1, DE 195 28 106 A1 and DE 195 28 107 A1. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

FFS and IPS displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably addressed by an active matrix, preferably by a matrix of TFT. However, the LC media according to the invention can also advantageously be used in displays having other known addressing means.

Typical applications of IPS and FFS technologies are monitors, notebooks, televisions, mobile telephones, tablet PCs, etc. Both the IPS and the FFS technology have certain advantages over other LCD technologies, such as, for example, the vertical alignment (VA) technology, e.g. a broad viewing angle dependency of the contrast.

The provision of further LC media and the use thereof in a display having high transmission, a good black state

and a high contrast ratio is a central challenge for modern FFS and IPS applications. In addition, modern applications also require a good reliability and fast addressing times. Both the IPS and the FFS technology have certain advantages over other LCD technologies, such as, for example, the vertical alignment (VA) technology, e.g. a broad viewing angle dependency of the contrast.

However, there is still a need in the art for further liquid-crystalline media and the use thereof in displays having high transmission, a good black state and a high contrast ratio, especially in FFS and IPS applications giving good low-temperature stability and fast addressing times.

An object of the present invention is therefore to provide liquid-crystalline media, in particular for FFS, HB-FFS and IPS displays, but also for TN, positive VA or STN displays, and in particular for active-matrix displays like those addressed by TFTs, which do not exhibit the disadvantages indicated above or only do so to a lesser extent and which preferably have high specific resistance, low threshold voltage, suitable dielectric anisotropy, a good low temperature stability (LTS), fast response times and low rotational viscosities, enable high brightness and high transmittance, and which in addition exhibit favourable reliability and stability.

It is a further object of the present invention to provide displays with a high contrast ratio, a high optical transmittance in one optical state, fast addressing times and a favourable stability, in particular at low temperatures and at high temperatures. Further objects of the present invention are immediately evident to the person skilled in the art from the following detailed description.

It has favourably been recognized that a high brightness in displays like those of the HB-FFS mode can be obtained by using liquid-crystalline media having positive dielectric anisotropy and also having an increased dielectric constant $\varepsilon_\perp$ perpendicular to the longitudinal axes of the liquid-crystalline molecules. This provision can advantageously be achieved by adding a limited amount of liquid-crystalline compounds with negative dielectric anisotropy, which have high $\varepsilon_\perp$ properties, to the liquid-crystalline medium whilst maintaining a positive dielectric anisotropy of the entire medium.

However, the addition of compounds with high $\varepsilon_\perp$ may have some drawbacks. For example, this addition can lead to higher values of the rotational viscosity $\gamma_1$ and consequently to higher values of the ratio $\gamma_1$ / $K_2$ of the rotational viscosity $\gamma_1$ and the elastic constant $K_2$ for twist deformation, which leads to higher response times. $K_2$ is approximately proportional to the elastic constant $K_1$ for splay deformation, where the value of $K_2$ is typically about half the value of $K_1$. Hence, $K_2$ can suitably be determined by measuring $\gamma_1$ and $K_1$. It has also been recognized that the reliability, in particular the voltage holding ratio (VHR), of such mixtures, especially HB-FFS mixtures, may be also affected compared to conventional FFS mixtures.

Surprisingly, the media according to the invention advantageously show a relatively high value of $\varepsilon_\perp$ and at the same time have a low the rotational viscosity and the ratios of $\gamma_1$ / $K_2$ and $\gamma_1$ / $K_1$, and enable high optical transmittance and fast response times in displays using liquid-crystalline media as described and claimed herein. In addition, the displays that make use of the media according to the invention favourably exhibit a particularly high contrast and excellent reliability. In this respect, the addition of the one or more stabilizers to the medium can advantageously contribute to obtaining an improved reliability and stability, in particular with respect to light, especially UV light, and heat, also under extreme load. This stabilizing effect can surprisingly be even further improved by adding at least two different stabilizers to the liquid-crystal media as described and claimed herein.

According to the invention, liquid-crystalline media which show a moderately positive dielectric anisotropy and at the same time an increased dielectric constant $\varepsilon_\perp$ perpendicular to the longitudinal axes of the liquid-crystalline molecules may be provided, which favourably can maintain a low rotational viscosity and a low value of the ratio $\gamma_1$ / $K_1$. This enables the provision of liquid-crystal displays, especially of the HB-FFS, FFS and IPS modes, with high brightness and transmittance and short response times.

EP 4261267 A1 describes dielectrically negative LC media comprising *inter alia* a combination of the following components:

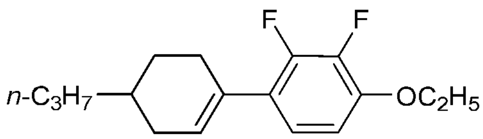

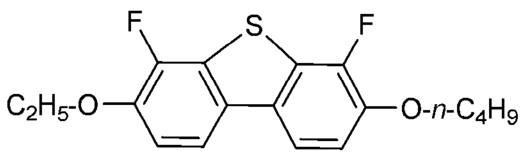

Now, it has been found surprisingly that LCs of the FFS type using liquid crystals with positive dielectric anisotropy

may be realised using specially selected liquid crystalline media. These media are characterised by a particularly advantageous combination of physical properties. Most decisive amongst these are high $\varepsilon_\perp$ and $\varepsilon_\perp$ / $\Delta\varepsilon$ leading to an improved optical transmission. Besides this, they show high values of the elastic constant(s), in particular by high $K_1$ and their excellent, low ratio $\gamma_1$/ $K_1$ of the rotational viscosity $\gamma_1$ and the elastic constant $K_1$.

The liquid crystalline media according to the present invention preferably have a positive dielectric anisotropy $\Delta\varepsilon$, preferably in the range from 1.5 or more, more preferably in the range from 1.8 or more to 10.0 or less and, most preferably in the range from 2.0 or more to 8.0 or less.

The liquid crystalline media according to the present invention preferably have a dielectric constant perpendicular to the director of the liquid crystal molecules $\varepsilon_\perp$ of 2.0 or more, more preferably of 2.5 or more, more preferably of 3.0 or more.

The liquid crystalline media according to the present invention preferably have a dielectric ratio $\varepsilon_\perp$ / $\Delta\varepsilon$ of 0.65 or more, more preferably of 0.75 or more.

In particular, it has now been surprisingly found that LC media according to the present invention which contain a combination of compounds of the Formula I

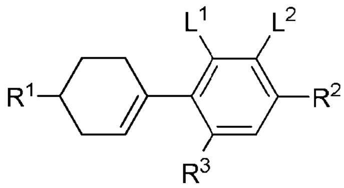

I

and one or more compounds selected from the group consisting of compounds of the formulae P, S and B:

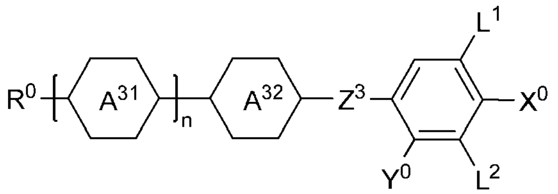

P

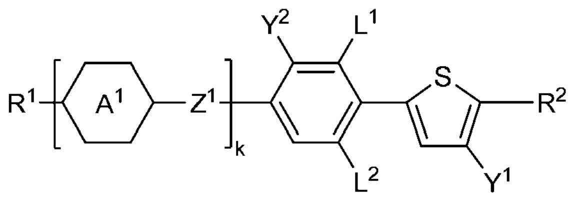

S

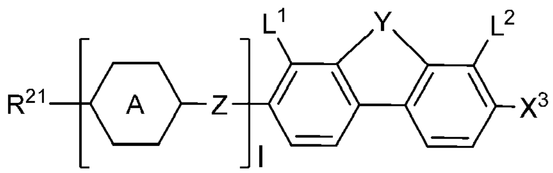

B

in which the individual substituents are specified in Claim 1,
show several remarkable improvements, especially when being used in FFS mode displays, like a high average elastic constant $K_{av}$ in combination with a high $\varepsilon_\perp$ and $\varepsilon_\perp$ / $\Delta\varepsilon$ leading to an excellent optical transmission. Additionally, the LC media according to the present invention have high clearing points, an excellent low temperature stability (LTS) and provide a best motion picture quality and an improved overall image quality, in particular a high contrast ratio.

The present invention relates to a LC medium, characterised in that it comprises one or more compounds of the Formula I

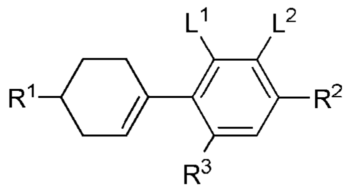

I

in which the individual substituents have the following meanings:

$R^1$ and $R^2$ each, independently of one another, denote an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

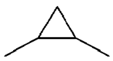, 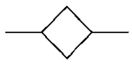,

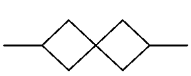, 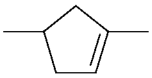, 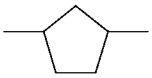,

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 12 C atoms, in which one or more H atoms may be replaced by a halogen atom;

$R^3$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;

$L^1$ and $L^2$ each, independently of one another, denote F, Cl, $CF_3$ or $CHF_2$; preferably $L^1$ and $L^2$ both denote F; and

one or more compounds selected from the group consisting of compounds of the Formulae P, S and B:

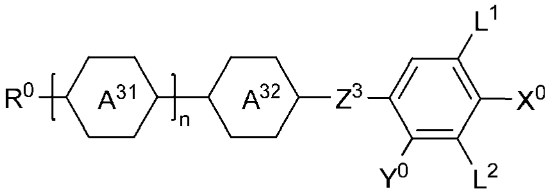

P

in which

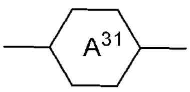 and 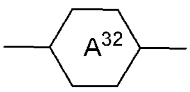

on each appearance, independently of one another, are

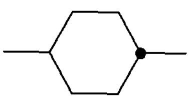, 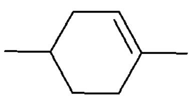, 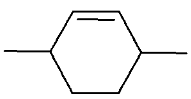,

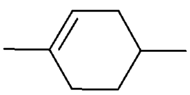, 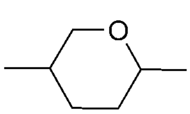, 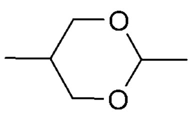,

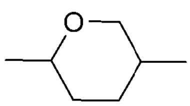, 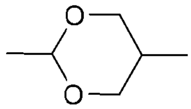,

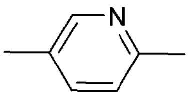, 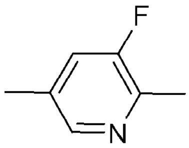, 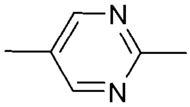,

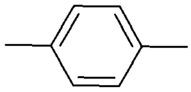, 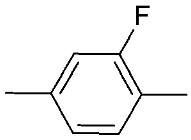, 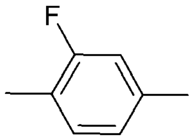,

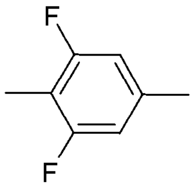 or 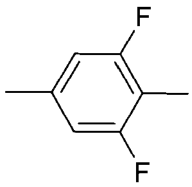,

preferably

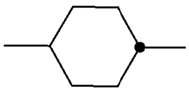, 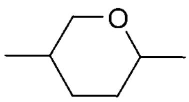, 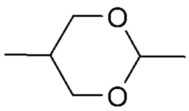,

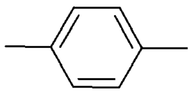, 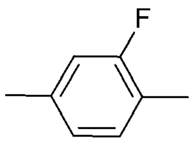, 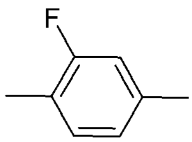,

or

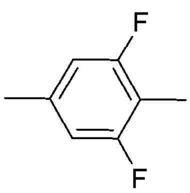,

$R^0$ denotes an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

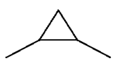, 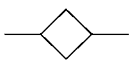, 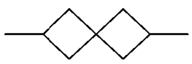, 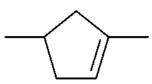, 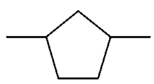,

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 12 C atoms, in which one or more H atoms may be replaced by a halogen atom;

$L^1$ and $L^2$ independently of one another, denote H or F, preferably $L^2$ denotes F,

$Y^0$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;

$X^0$ denotes halogen, halogenated alkyl or alkoxy having 1 to 6 C atoms or halogenated alkenyl or alkenyloxy having 2 or 6 C atoms, F, Cl, $-OCF_3$, - $OCHF_2$, $-O-CH_2CF_3$, $-O-CH=CF_2$, $-O-CH=CH_2$ or $-CF_3$, very preferably F, $-CF_3$, $-CHF_2$, $-OCHF_2$ or $-OCF_3$,

$Z^3$ denotes $-CH_2CH_2-$, $-CF_2CF_2-$, -COO-, -OCO-, *trans*-CH=CH-, *trans*-CF=CF-, $-CH_2O-$, $-OCH_2-$ or a single bond, preferably $-CH_2CH_2-$, -COO-, *trans*-CH=CH- or a single bond and very preferably -COO-, *trans*-CH=CH- or a single bond, and

n denotes 0, 1, 2 or 3, preferably 1, 2 or 3 and particularly preferably 1;

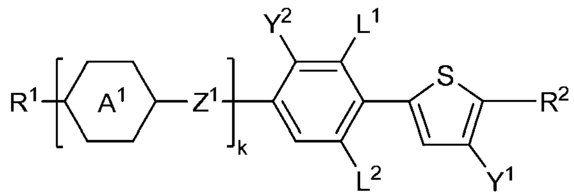 S

in which the individual substituents, on each occurrence identically or differently, and each, independently of one another, have the following meanings:

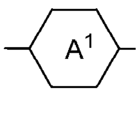 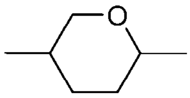 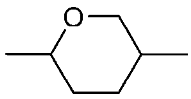 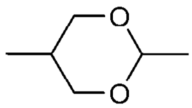 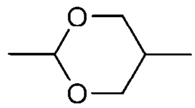

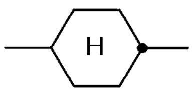 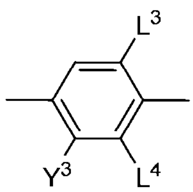 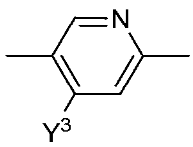 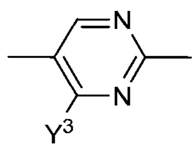

$R^1$ and $R^2$ each, independently of one another, denote a H atom, a halogen atom, - an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

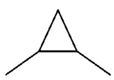, 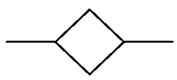, 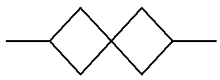, 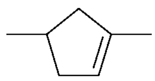, 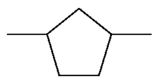,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

$L^1$ to $L^4$ each, independently of one another, denote H, F or Cl;

$Y^1$ to $Y^3$ each, independently of one another, denote a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;

$Z^1$ denotes $-CF_2O-$, $-OCF_2-$, $-CH_2O-$, $-OCH_2-$, -CO-O-, -O-CO-, $-C_2H_4-$, $-C_2F_4-$, $-CF_2CH_2-$, $-CH_2CF_2-$, -CFHCFH-, $-CFHCH_2-$, $-CH_2CFH-$, $-CF_2CFH-$, $-CFHCF_2-$, -CH=CH-, -CF=CH-, -CH=CF-, -CF=CF-, -C≡C- or a single bond;

k denotes 0, 1, 2 or 3;

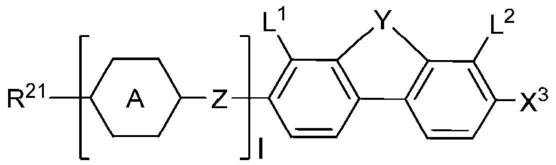 B

in which the individual substituents have the following meanings:

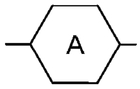 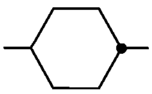, 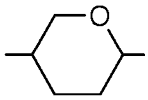, 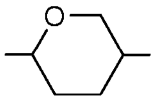, 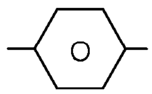, 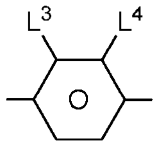

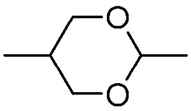, 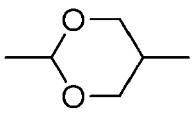, 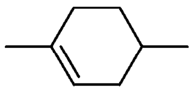, 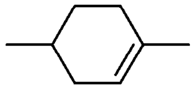

$R^{21}$ denotes an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

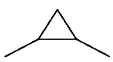, 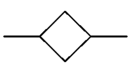, 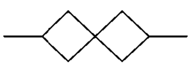, 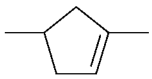, 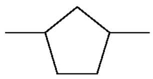,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

$X^3$ denotes halogen, halogenated alkyl or alkoxy having 1 to 3 C atoms or halogenated alkenyl or alkenyloxy having 2 or 3 C atoms, F, Cl, $-OCF_3$, - $OCHF_2$, $-O-CH_2CF_3$, $-O-CH=CF_2$, $-O-CH=CH_2$ or $-CF_3$, very preferably F, Cl, $-O-CH=CF_2$, $-OCHF_2$ or $-OCF_3$;

$L^1$ and $L^2$ each, independently of one another, denote F, Cl, $CF_3$ or $CHF_2$;

$L^3$ and $L^4$ each, independently of one another, denote H or F;

Z denotes a single bond, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O$;

Y denotes S or O, $CH_2$, $CH_2CH_2$, $CH_2O$, $OCH_2$, CH=CH;

l 0 or 1.

The LC media according to the present invention are especially suitable for use in energy efficient LC displays of the FFS, HB-FFS, XB-FFS and IPS mode and augmented reality (AR) / virtual reality (VR) applications and polymer stabilised variants thereof.

The invention further relates to the use of a LC medium as described above and below for electro-optical purposes, in particular for the use in LC displays, shutter glasses, LC windows, 3D applications, preferably in TN, PS-TN, STN, TN-TFT, OCB, IPS, PS-IPS, FFS, HB-FFS, XB-FFS, PS-HB-FFS, PS-XB-FFS, SA-HB-FFS, SA-XB-FFS, polymer stabilised SA-HB-FFS, polymer stabilised SA-XB-FFS, positive VA and positive PS-VA displays, very preferably in FFS, HB-FFS, IPS, PS-HB-FFS and PS-IPS displays.

The invention further relates to an electro-optical LC display containing a LC medium as described above and below, in particular a TN, PS-TN, STN, TN-TFT, OCB, IPS, PS-IPS, FFS, HB-FFS, XB-FFS, PS-HB-FFS, PS-XB-FFS, SA-HB-FFS, SA-XB-FFS, polymer stabilised SA-HB-FFS, polymer stabilised SA-XB-FFS, positive VA or positive PS-VA display, preferably a FFS, HB-FFS, IPS, PS-HB-FFS or PS-IPS display.

In the present application, all atoms also include their isotopes. In some embodiments, one or more or even all

hydrogen atoms (H) may be optionally replaced by deuterium (D).

In the Formulae I, P, S and B , if $R^1$, $R^2$, $R^0$ or $R^{21}$ denote an alkyl group and/or an alkoxy group, this may be straight-chain or branched. It is preferably straight-chain, has 2, 3, 4, 5, or 6 C atoms and preferably denotes ethyl, propyl, butyl, pentyl, hexyl, ethoxy, propoxy, butoxy, pentoxy, or hexyloxy, furthermore methyl, methoxy. $R^1$, $R^2$, $R^0$ or $R^{21}$ preferably denote straight-chain alkyl having 1 to 6 C atoms or an alkenyl group having 2 to 6 C atoms.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl.

If $R^1$, $R^2$, $R^0$ or $R^{21}$ denote an alkoxy or oxaalkyl group it may also contain one or more additional oxygen atoms, provided that oxygen atoms are not linked directly to one another.

In another preferred embodiment, one or more of $R^1$, $R^2$, $R^0$ or $R^{21}$ are selected from the group consisting of

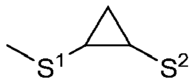 , 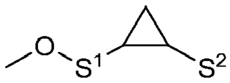 , 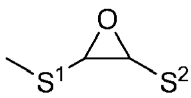 ,

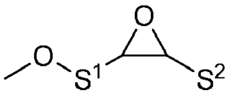 , 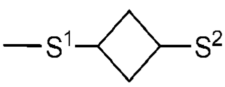 , 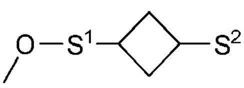 , 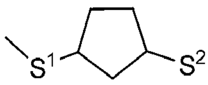 ,

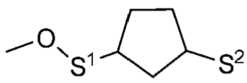 ,

$-S^1-F$, $-O-S^1-F$, $-O-S_1-O-S_2$, wherein $S^1$ is $C_{1-12}$-alkylene or $C_{2-12}$-alkenylene and $S^2$ is H, $C_{1-12}$-alkyl or $C_{2-12}$-alkenyl, and very preferably one or more of $R^1$, $R^2$, $R^0$ or $R^{21}$ are selected from the group consisting of

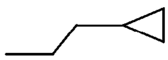 , 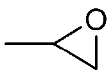 , 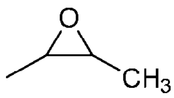 , 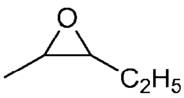 , 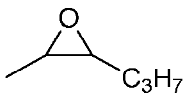 ,

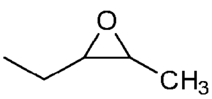 , 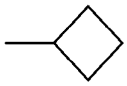 , 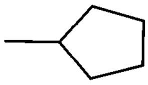 , 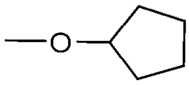 , 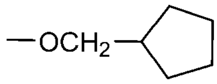 ,

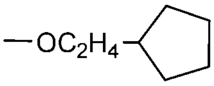 ,

$-OCH_2OCH_3$, $-O(CH_2)_2OCH_3$,
$-O(CH_2)_3OCH_3$, $-O(CH_2)_4OCH_3$, $-O(CH_2)_2F$, $-O(CH_2)_3F$, $-O(CH_2)_4F$.

If $R^1$, $R^2$, $R^0$ or $R^{21}$ denotes an alkenyl group, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4-or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1- , -2- , -3- , -4- , -5- , -6- , -7- , -8- or -9-enyl.

If $R^1$, $R^2$, $R^0$ or $R^{21}$ denotes an alkyl or alkenyl group which is at least monosubstituted by halogen, this group is preferably straight-chain, and halogen is preferably F or Cl. In the case of polysubstitution, halogen is preferably F. The resultant groups also include perfluorinated groups. In the case of monosubstitution, the fluorine or chlorine substituent may be in any desired position, but is preferably in the ω-position. $R^2$ being an alkyl, alkenyl, alkoxy or alkenyloxy group having 1 to 6 carbon atom is preferred, wherein $R^2$ being an ethoxy group is particularly preferred.

$Z^3$, $Z^1$ and Z in Formulae P, S and B particularly preferably denote $-CH_2O-$, $-OCH_2-$, $-C_2H_4-$, $-CH=CH-$, or a single bond, wherein a single bond is mostly preferred.

Preference is furthermore given to compounds of the Formulae I and P, S and B and B, in which $R^1$ , $R^2$, $R^0$ and $R^{21}$, each, independently of one another, denote alkyl, alkenyl, alkoxy having up to 8, preferably up to 5 C atoms.

Preferred groups $R^3$ and $Y^0$, $Y^1$, $Y^2$, $Y^3$ in Formulae I and P and S, respectively, denote an H atom, or alkyl or alkenyl group having up to 3 C atoms. Very particularly preferably, $R^3$ and $Y^0$, $Y^1$, $Y^2$, $Y^3$ are a methyl group or an H atom.

Preferred alkyl groups are, for example, methyl, ethyl, n-propyl, n-butyl, n-pentyl, n-hexyl, n-heptyl and n-octyl.

Preferred alkenyl groups are, for example, ethenyl, propenyl, butenyl and pentenyl.

Preferred alkoxy groups are, for example, methoxy, ethoxy, n-propoxy, n-butoxy, n-pentoxy, n-hexoxy, n-heptoxy, n-octoxy.

Halogen preferably denotes F or Cl, F being mostly preferred.

Particularly preferred compounds of the Formula I are those selected from the following sub-formulae:

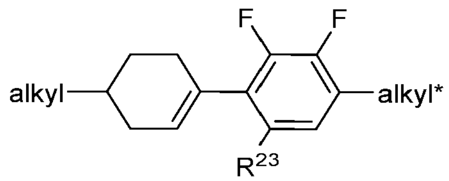

I-1

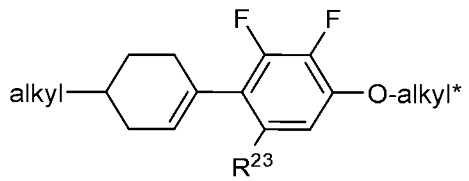

I-2

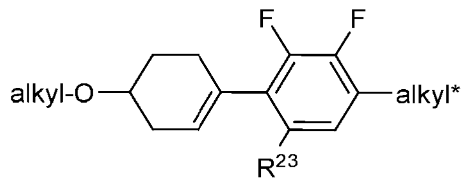

I-3

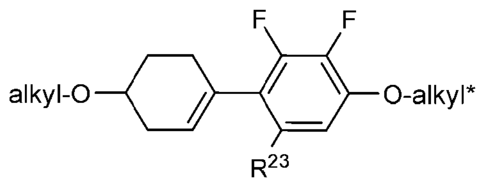

I-4

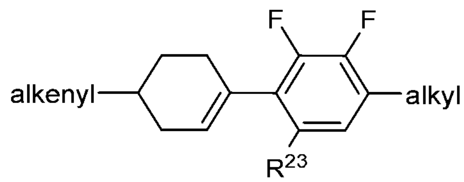

I-5

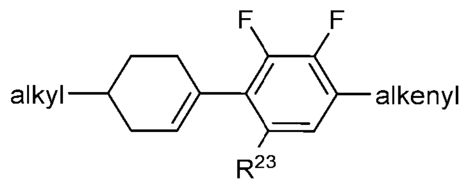

I-6

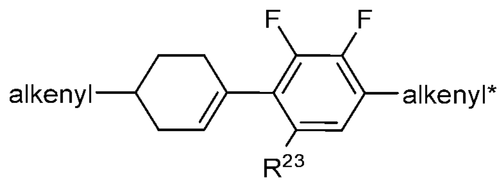

I-7

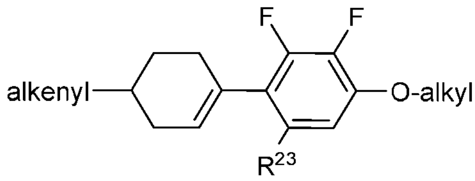

I-8

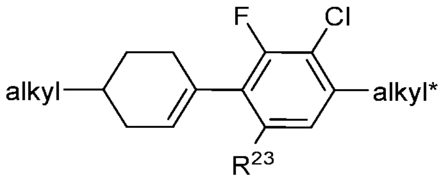

I-9

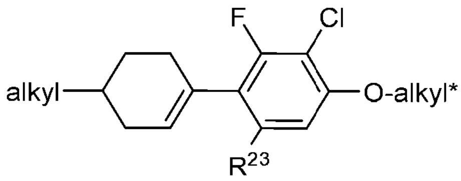

I-10

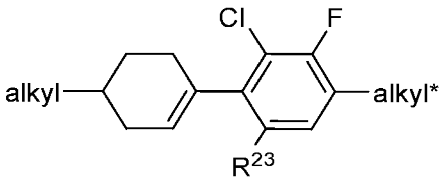

I-11

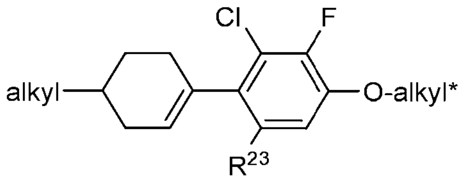

I-12

in which

| | |
|---|---|
| alkyl and alkyl* | each, independently of one another, denote a straight-chain alkyl group having 1 to 6 C atoms, |
| alkenyl | denotes a straight-chain alkenyl group having 2 to 6 C atoms, and |
| $R^{23}$ | denotes a H atom or an alkyl group having 1 to 3 C atoms, preferably H or $CH_3$, H being particularly preferred. |

Mostly preferred compounds of Formula I include, in particular, one or more of the following:

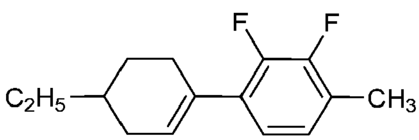

I-1-1

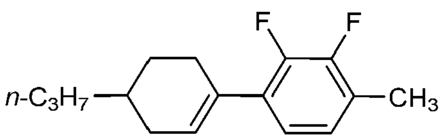

I-1-2

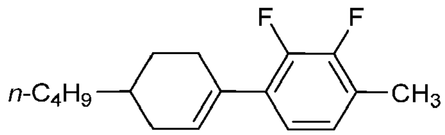

I-1-3

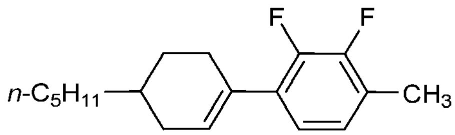

I-1-4

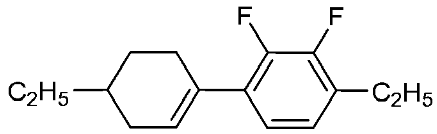

I-1-5

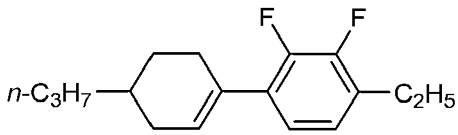

I-1-6

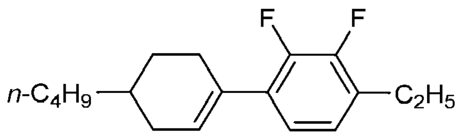

I-1-7

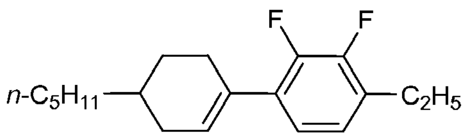

I-1-8

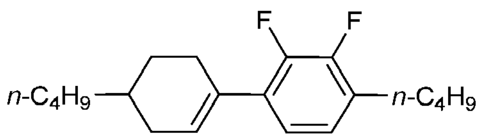

I-1-9

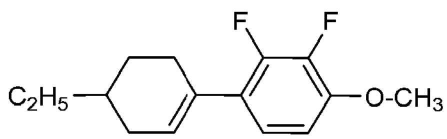

I-2-1

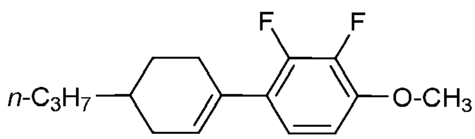

I-2-2

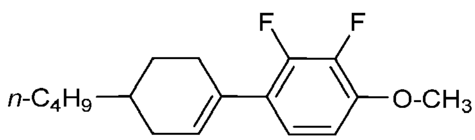

I-2-3

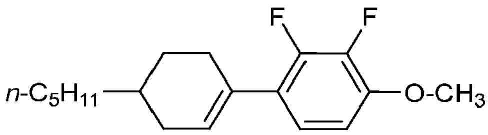

I-2-4

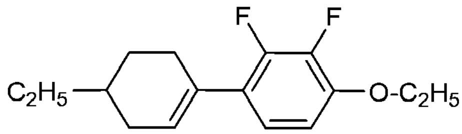

I-2-5

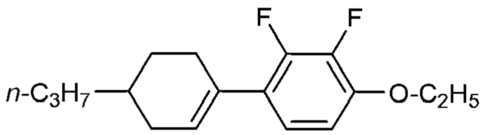

I-2-6

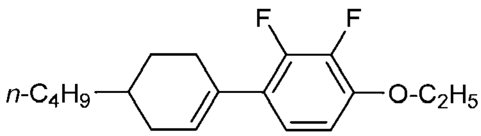

I-2-7

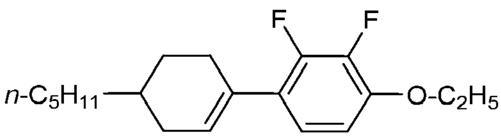

I-2-8

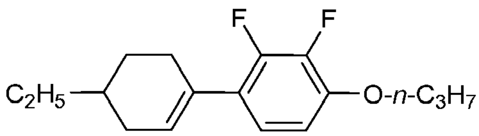

I-2-9

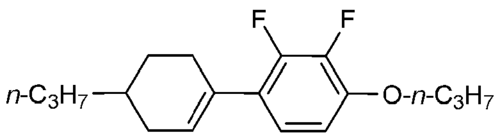

I-2-10

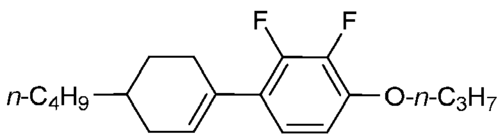

I-2-11

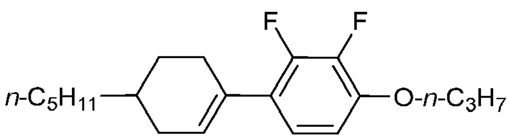

I-2-12

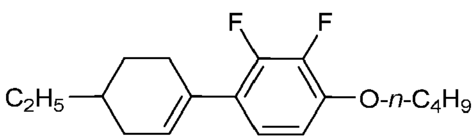

I-2-13

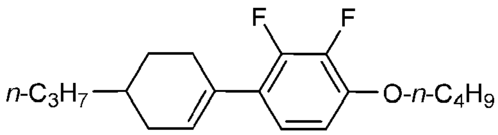

I-2-14

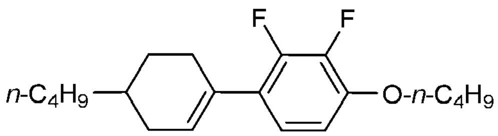

I-2-15

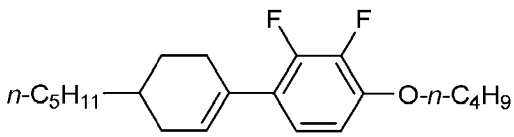

I-2-16

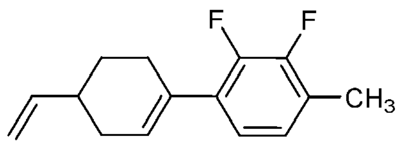

I-5-1

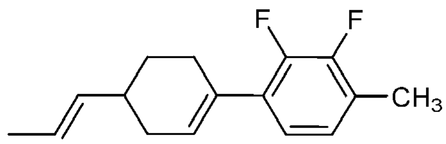

I-5-2

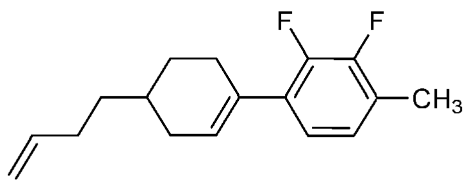

I-5-3

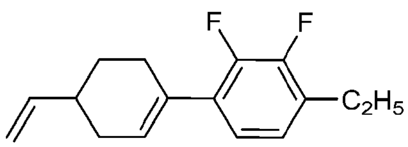

I-5-4

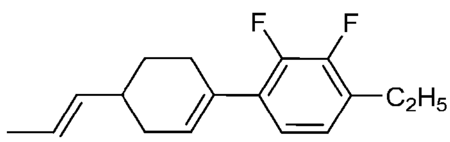

I-5-5

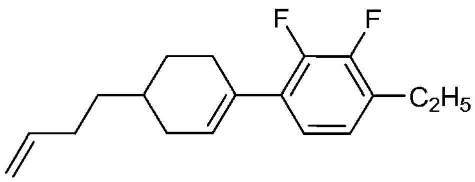

I-5-6

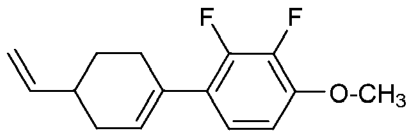

I-8-1

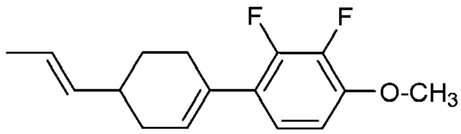

I-8-2

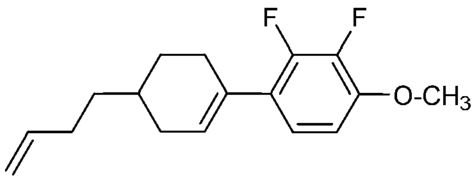

I-8-3

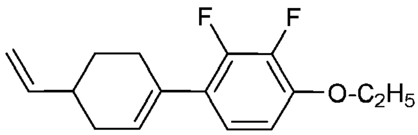

I-8-4

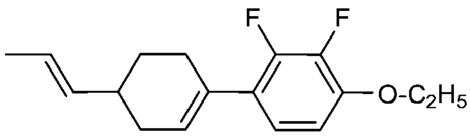

I-8-5

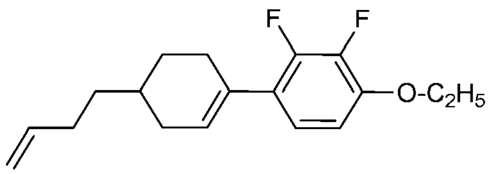

I-8-6

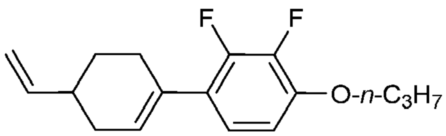

I-8-7

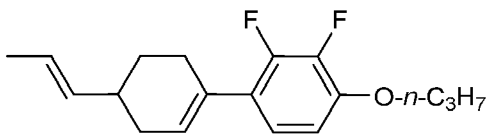

I-8-8

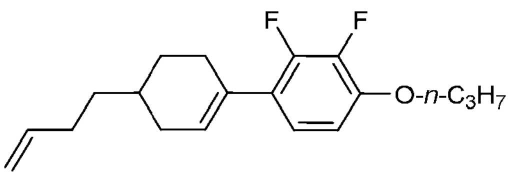

I-8-9

In a further preferred embodiment, the following compounds of Formula I can be used:

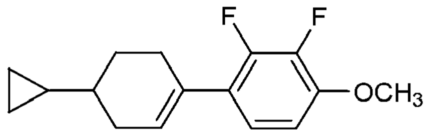

I-2-17

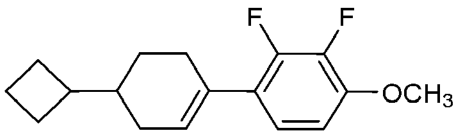

I-2-18

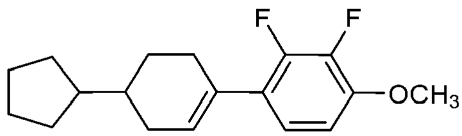

I-2-19

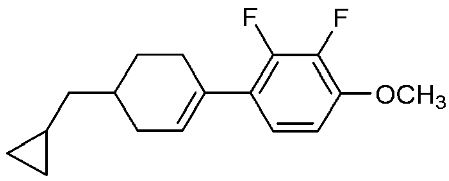

I-2-20

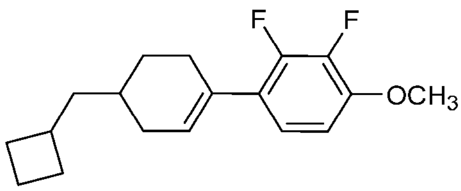

I-2-21

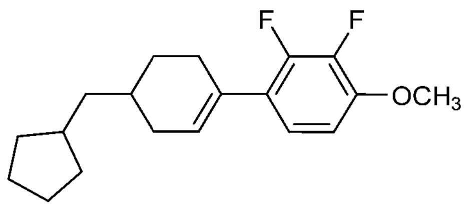

I-2-22

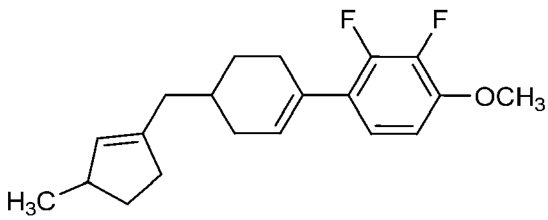

I-2-23

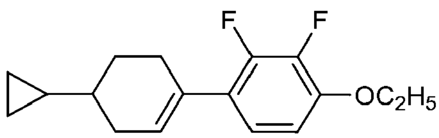

I-2-24

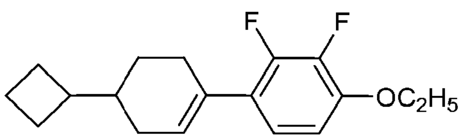

I-2-25

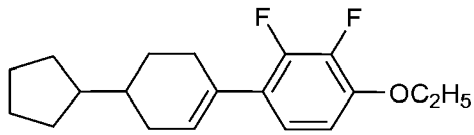

I-2-26

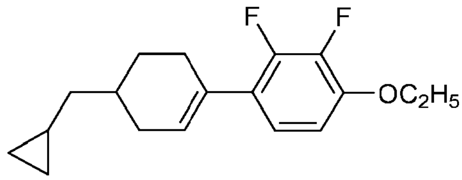

I-2-27

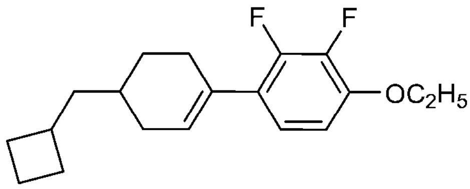

I-2-28

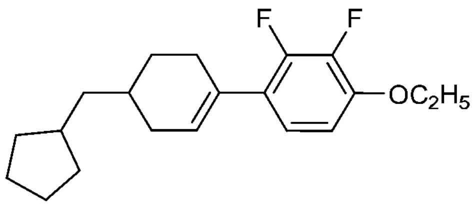

I-2-29

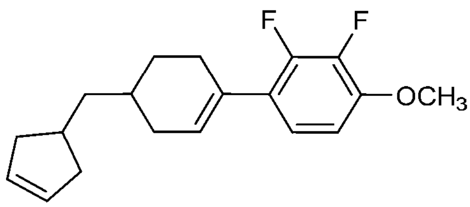

I-2-30

The compounds of the Formula I can be prepared analogously to processes known to the person skilled in the art and described in standard works of organic chemistry, such as, for example, in Houben-Weyl, Methoden der organischen Chemie [Methods of Organic Chemistry], Thieme-Verlag, Stuttgart.

The proportion of compounds of the Formula I or, preferably of the subformula I-2, more preferably of the subformula 1-2-6, in the LC medium is preferably from 0.5 to 20%, very preferably from 1 to 15%, most preferably from 2 to 10% by weight.

In some embodiments, the one or more compounds of Formula P may be selected from the group consisting of the following formulae:

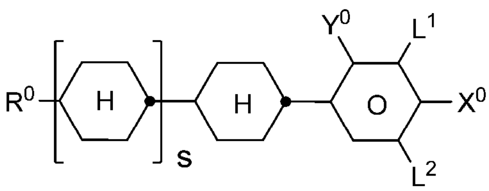

IV

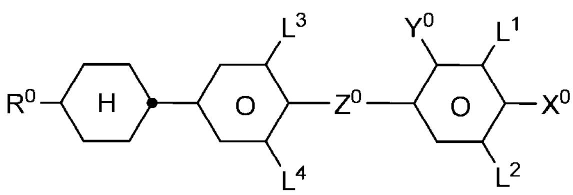

V

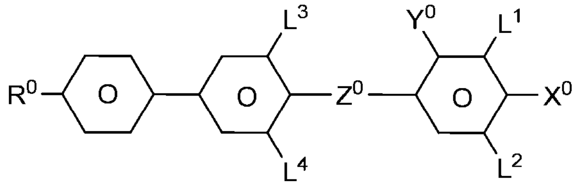

VI

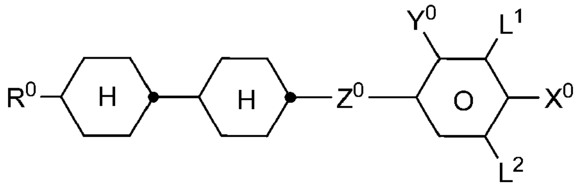

VII

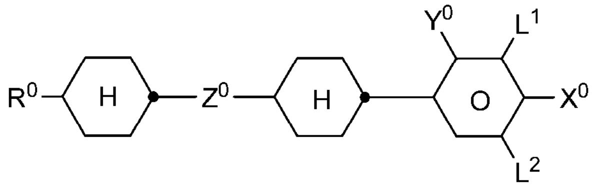

VIII

in which

$R^0$ denotes an alkyl or an alkoxy group having 1 to 6 C atoms or an alkenyl or an alkenyloxy group having 2 to 6 C atoms in which one or more non-adjacent $CH_2$ groups are optionally substituted by -C≡C-, $-CF_2O-$, $-OCF_2-$, -CH=CH-,

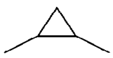 , 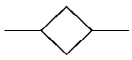 , 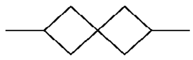 , 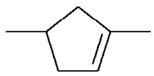 ,

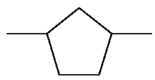 , .

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 6 C atoms, in which one or more H atoms may be replaced by a halogen atom;

$X^0$ denotes halogen, halogenated alkyl or alkoxy having 1 to 3 C atoms or halogenated alkenyl or alkenyloxy having 2 or 3 C atoms, F, Cl, $-OCF_3$, $-OCHF_2$, $-O-CH_2CF_3$, $-O-CH=CF_2$, $-O-CH=CH_2$ or $-CF_3$, very preferably F, $-CF_3$, $-CHF_2$, $-OCHF_2$ or $-OCF_3$,

$L^1$ to $L^4$ each, independently of one another, denote H, F or Cl;

$Y^0$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;

$Z^0$ denotes $-C_2H_4-$, $-(CH_2)_4-$, -CH=CH-, -CF=CF-, $-C_2F_4-$, $-CH_2CF_2-$, $-CF_2CH_2-$, $-CH_2O-$, $-OCH_2-$, -COO-, $-CF_2O-$, or $-OCF_2-$, in the Formulae V and VI also a single bond; and

s denotes 0 or 1.

The compounds of the Formula IV are preferably selected from the following formulae:

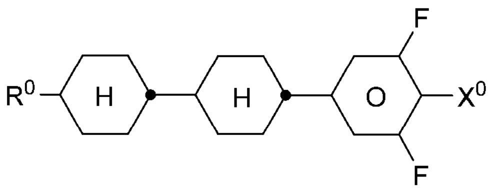

IVa

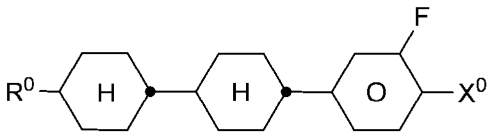

IVb

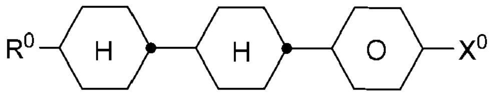

IVc

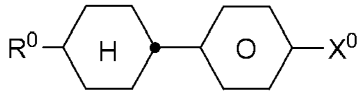

IVd

in which $R^0$ and $X^0$ have the meanings indicated in the Formula IV.

$R^0$ preferably denotes alkyl having 1 to 6 C atoms, cycloalkyl having 3 to 6 C atoms or cycloalkenyl having 5 or 6 C atoms, very preferably ethyl, propyl, butyl or pentyl. $X^0$ preferably denotes F, $CF_3$, $CHF_2$, $OCHF_2$, or $OCF_3$, furthermore $OCF{=}CF_2$ , $OCHFCF_3$ or Cl.

The compounds of the Formula IVa are preferably represented by the following subformula:

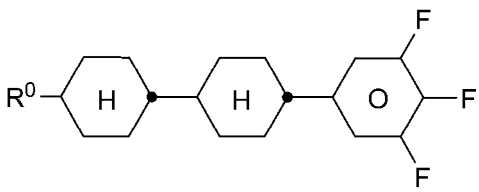

IVa-1

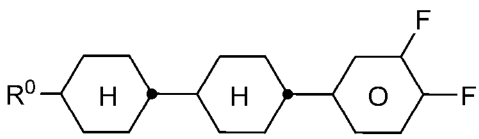

IVb-1

in which $R^0$ has the meanings indicated in the Formula IV.

The compounds of the Formula IVb are preferably represented by the following formula:

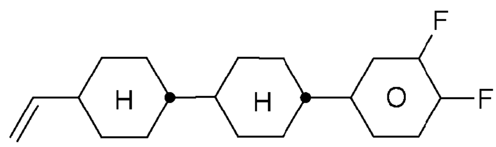

IVb-1-1

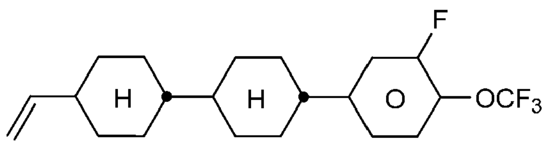

IVb-2-1

The compounds of the Formula IVc are preferably represented by the following subformula:

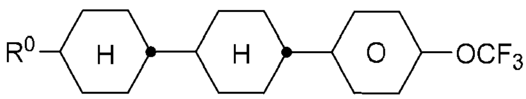

IVc-1

in which $R^0$ has the meanings indicated in the Formula IV and is preferably alkyl having 1 to 6 C atoms, cycloalkyl having 3 to 6 C atoms or cycloalkenyl having 5 or 6 C atoms, very preferably ethyl, propyl, butyl or pentyl.

Particularly preferred compounds of Formulae IVa, IVc and IVd are selected from one or more of the following:

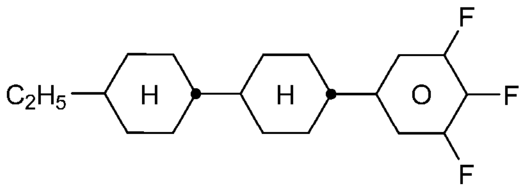
IVa-1-1

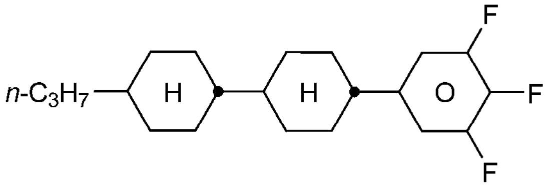
IVa-1-2

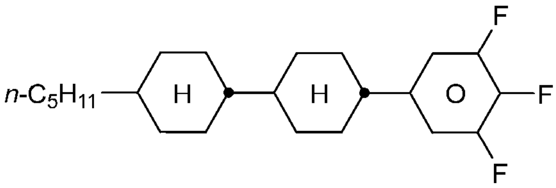
IVa-1-3

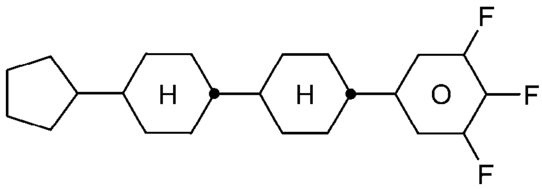
IVa-1-4

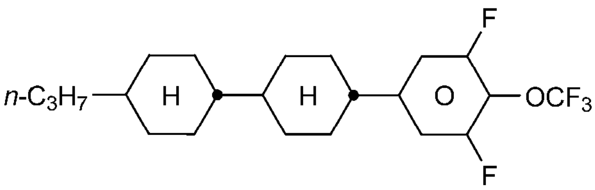
IVa-2-1

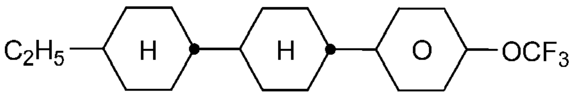
IVc-1-1

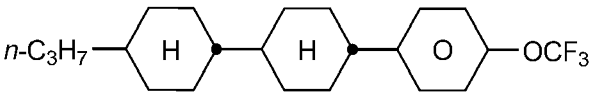
IVc-1-2

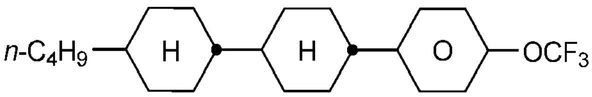
IVc-1-3

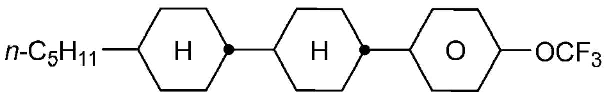
IVc-1-4

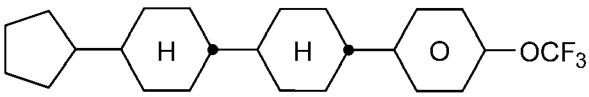
IVc-1-5

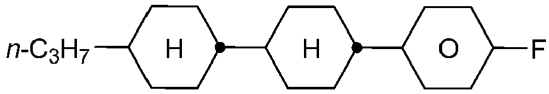

IVc-2-1

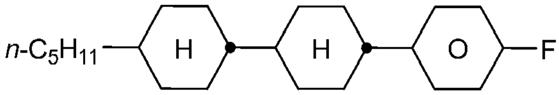

IVc-2-2

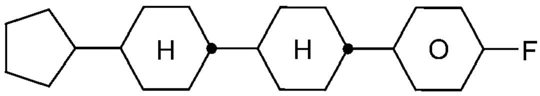

IVc-2-3

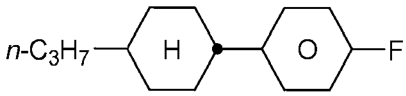

IVd-1

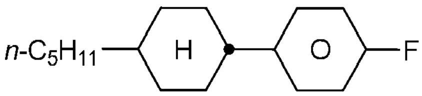

IVd-2

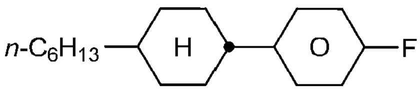

IVd-3

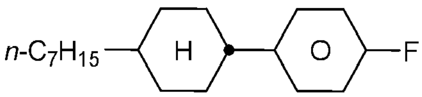

IVd-4

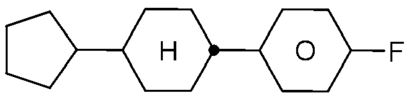

IVd-5

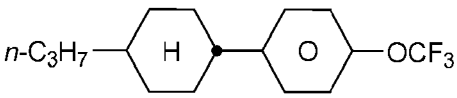

IVd-6

The compounds of the Formulae IVa to IVd are preferably employed in the LC media in amounts of 0 to 20% by weight, particularly preferably 0 to 10% by weight.

The compounds of the Formula V are preferably selected from the following subformulae:

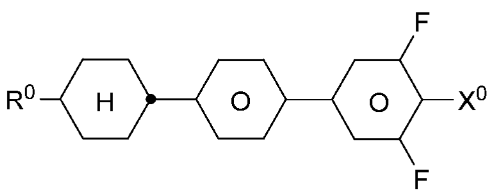

Va

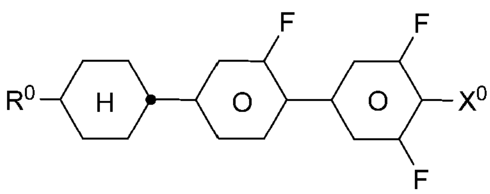

Vb

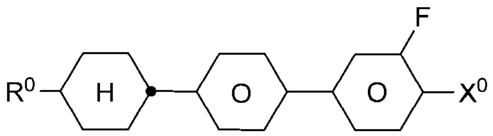

Vc

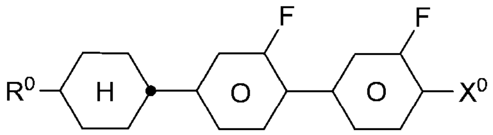

Vd

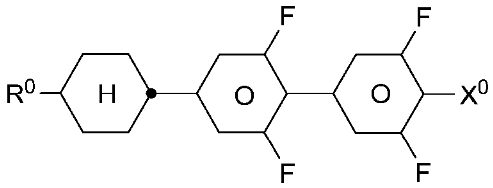

Ve

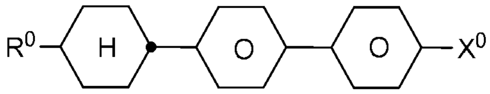

Vf

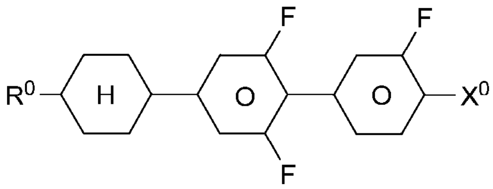

Vg

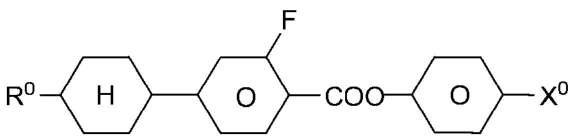

Vh

in which $R^0$ and $X^0$ have the meanings indicated in the Formula V.

$R^0$ preferably denotes alkyl having 1 to 6 C atoms, cycloalkyl having 3 to 6 C atoms or cycloalkenyl having 5 or 6 C atoms, very preferably ethyl, propyl, butyl or pentyl. $X^0$ preferably denotes F, $CHF_2$ and $OCF_3$, furthermore $OCHF_2$, $CF_3$, $OCF=CF_2$ , $OCHFCF_3$ and $OCH=CF_2$.

Particularly preferred compounds of Formulae V are selected from one or more of the following:

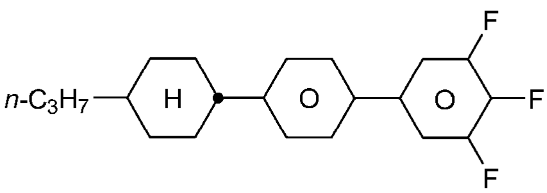

Va-1

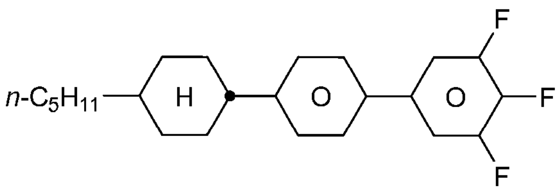

Va-2

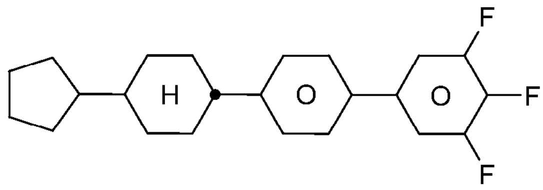
Va-3

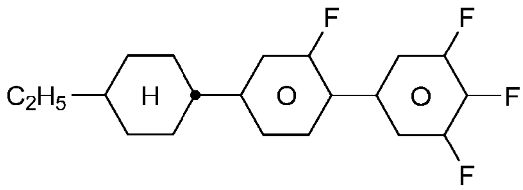
Vb-1

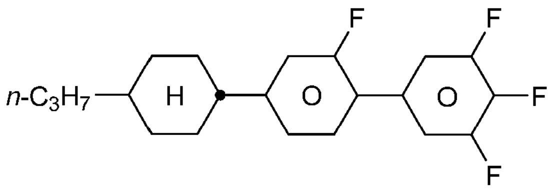
Vb-2

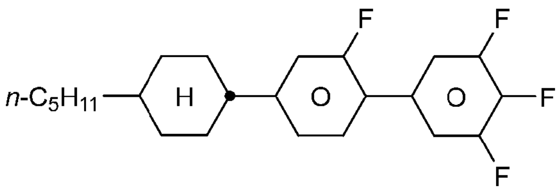
Vb-3

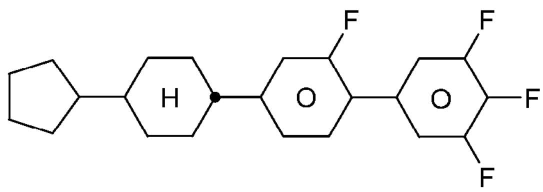
Vb-4

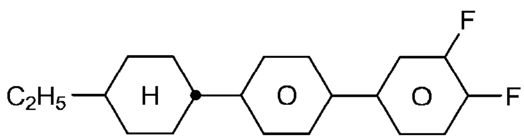
Vc-1

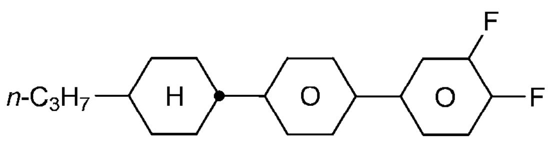
Vc-2

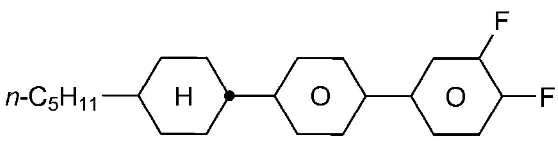
Vc-3

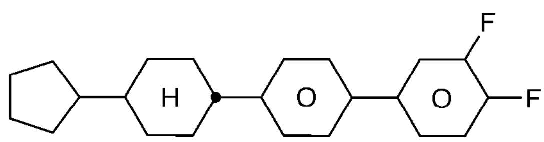
Vc-4

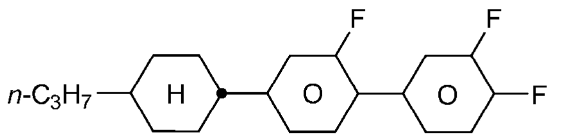

Vd-1

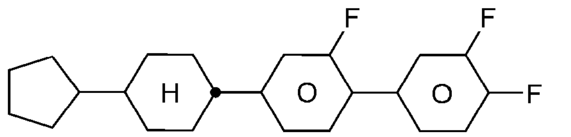

Vd-2

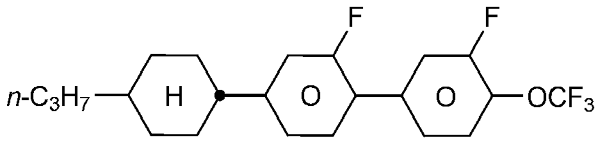

Vd-3

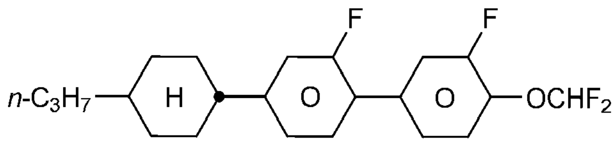

Vd-4

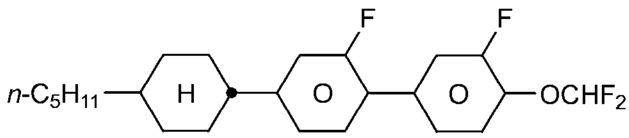

Vd-5

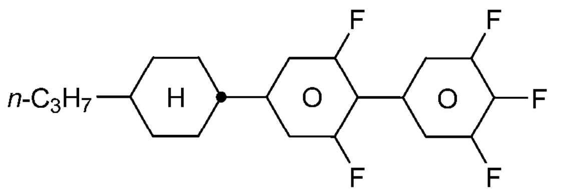

Ve-1

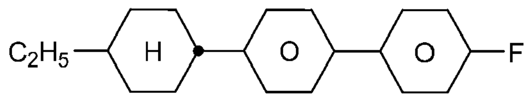

Vf-1

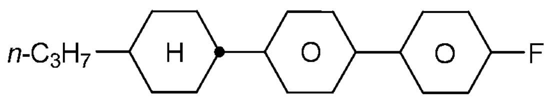

Vf-2

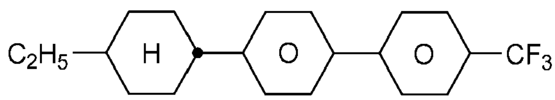

Vf-3

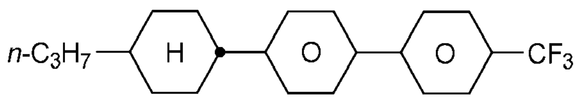

Vf-4

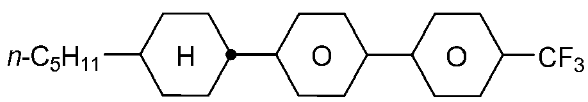

Vf-4

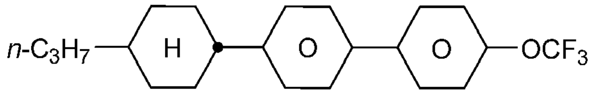

Vf-5

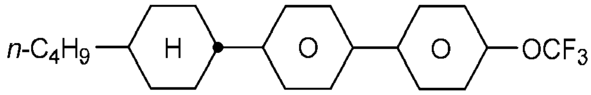

Vf-6

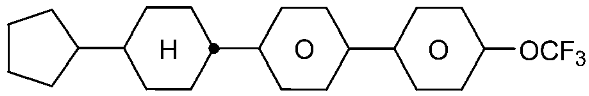

Vf-7

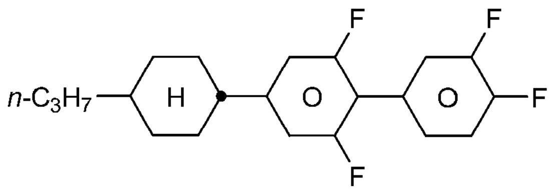

Vg-1

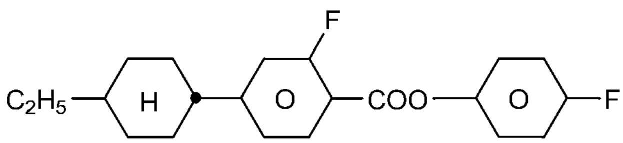

Vh-1

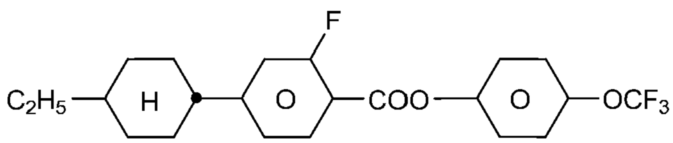

Vh-2

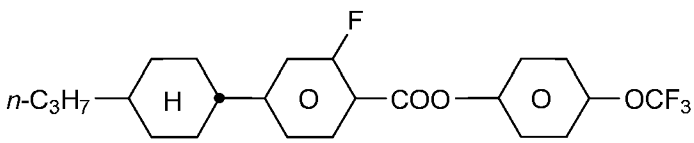

Vh-3

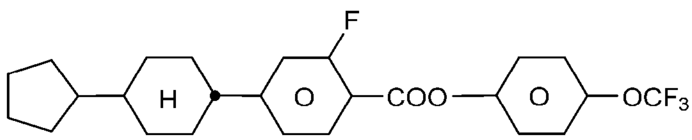

Vh-4

The compounds of the Formula VI are preferably selected from the following subformulae:

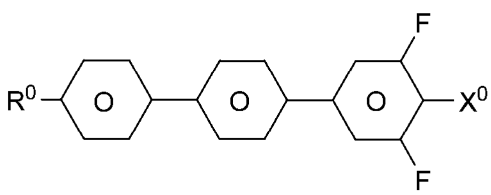

VIa

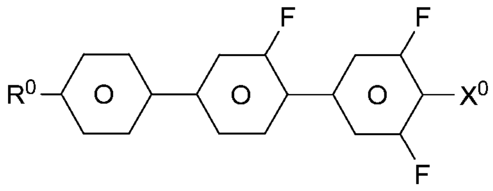

VIb

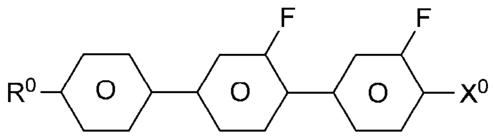

VIc

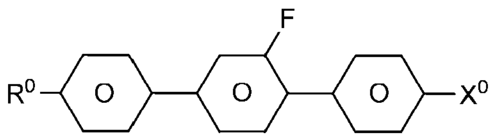

VId

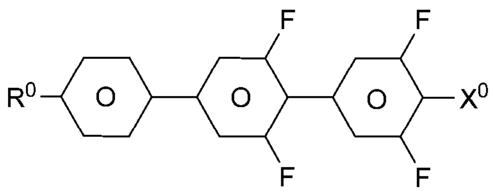

VIe

in which $R^0$ and $X^0$ have the meanings indicated in the Formula V.

$R^0$ preferably denotes alkyl having 1 to 6 C atoms, cycloalkyl having 3 to 6 C atoms or cycloalkenyl having 5 or 6 C atoms, very preferably ethyl, propyl, butyl or pentyl. $X^0$ preferably denotes F, furthermore $OCF_3$, $CF_3$, $CHF_2$, $CF{=}CF_2$, $OCHF_2$ , $OCHFCF_3$ and $OCH{=}CF_2$.

Particularly preferred compounds of Formula VI are selected from one or more of the following:

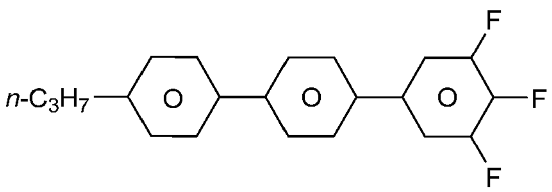

VIa-1

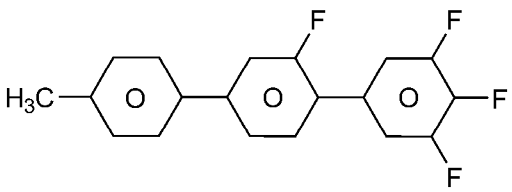

VIb-1

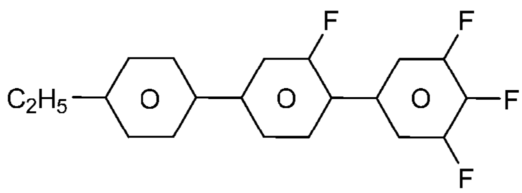

VIb-2

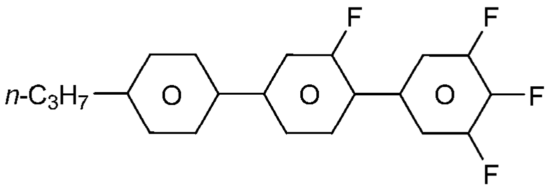

VIb-3

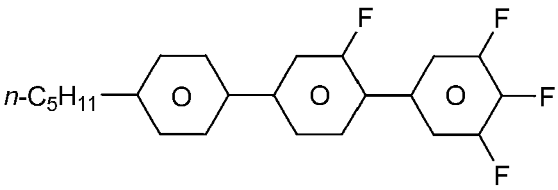

VIb-4

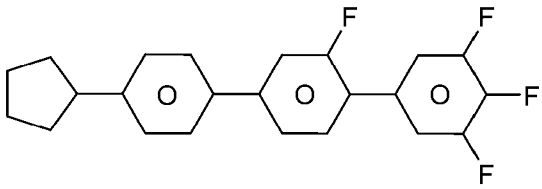

VIb-5

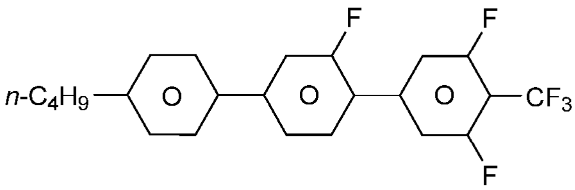

VIb-6

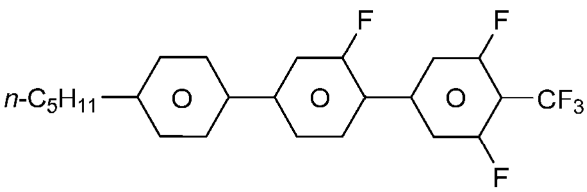

VIb-7

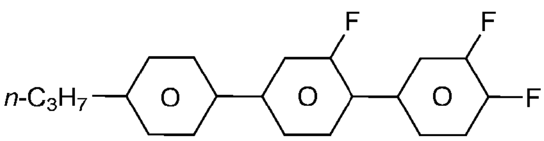

VIc-1

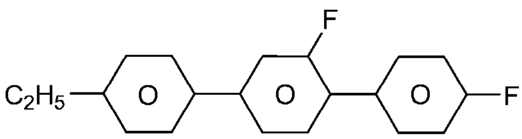

VId-1

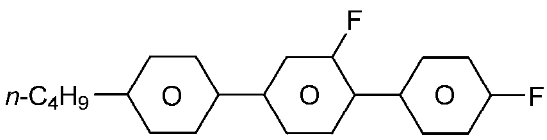

VId-2

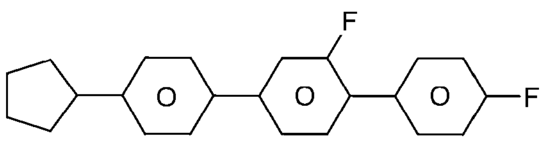

VId-3

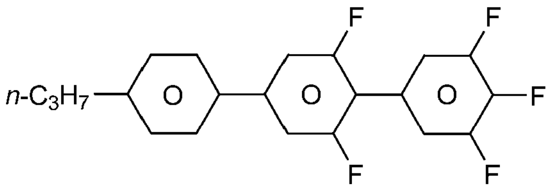

VIe-1

The compounds of the Formula VII are preferably selected from the following subformulae:

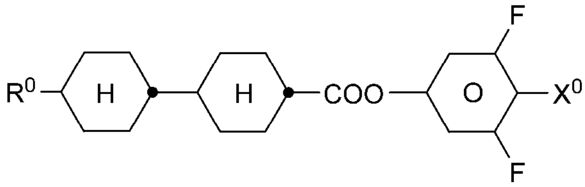

VIIa

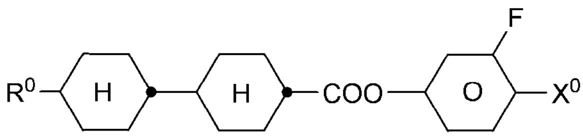

VIIb

in which $R^0$ and $X^0$ have the meanings indicated in the Formula VII.

$R^0$ preferably denotes alkyl having 1 to 6 C atoms, cycloalkyl having 3 to 6 C atoms or cycloalkenyl having 5 or 6 C atoms, very preferably ethyl, propyl, butyl or pentyl. $X^0$ preferably denotes F, $CF_3$ , $CHF_2$ , furthermore $OCF_3$, $OCHF_2$ , $OCHFCF_3$ and $OCH=CF_2$.

Particularly preferred compounds of Formula VII are selected from one or more of the following:

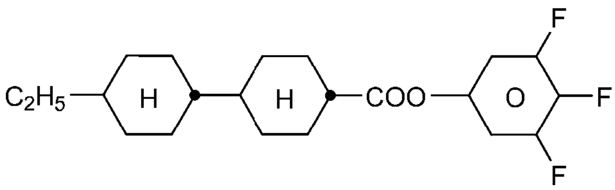

VIIa-1

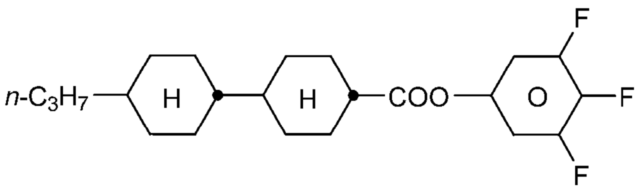

VIIa-2

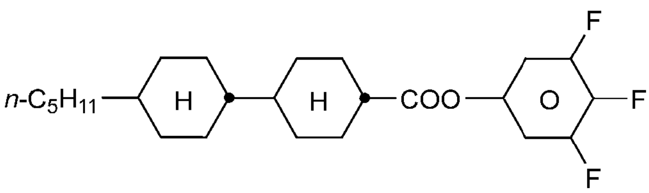

VIIa-3

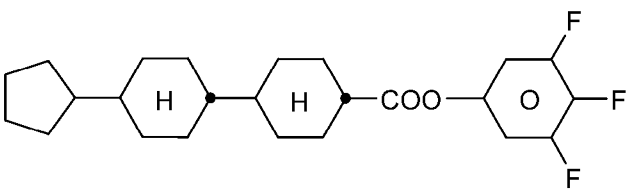

VIIa-4

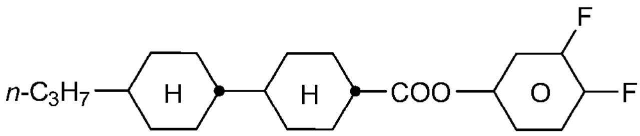

VIIb-1

In some embodiments, the one or more compounds of Formula P may be selected from the group consisting of the following formulae:

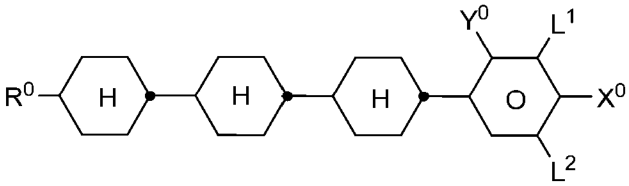

XVIII

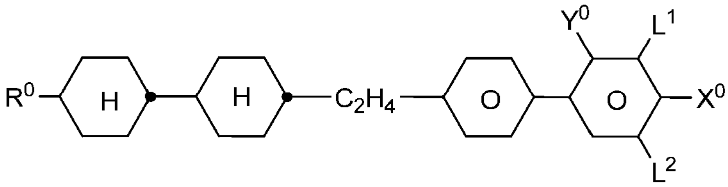

XIX

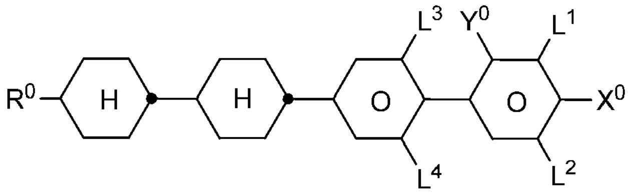

XX

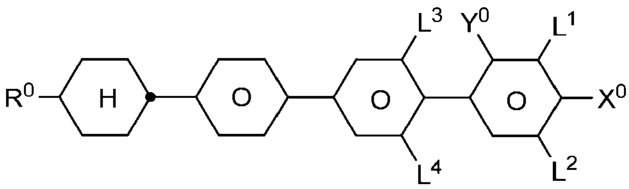

XXI

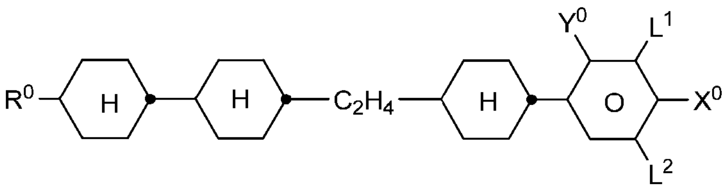

XXII

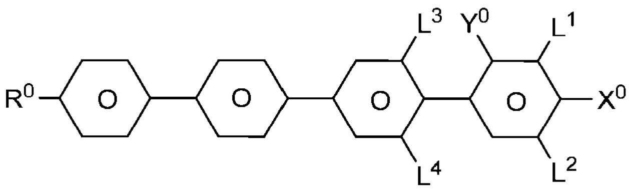

XXIII

in which $R^0$, $x^0$, $Y^0$ and $L^{1-4}$ each, independently of one another, have one of the meanings indicated in Formulae IV to VIII above.

Preferred compounds of Formula XVIII may be selected from one of the following:

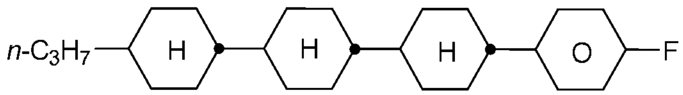
XVIIIa-1

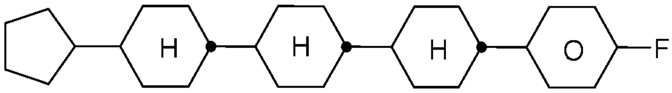
XVIIIa-2

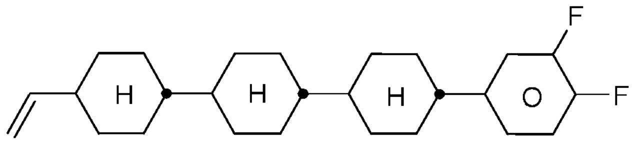
XVIIIb-1

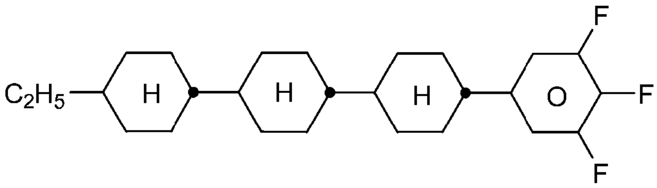
XVIIIc-1

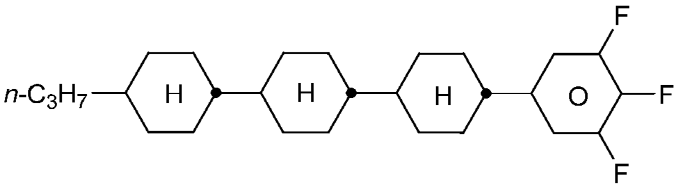
XVIIIc-2

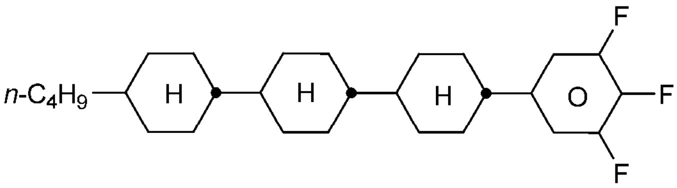
XVIIIc-3

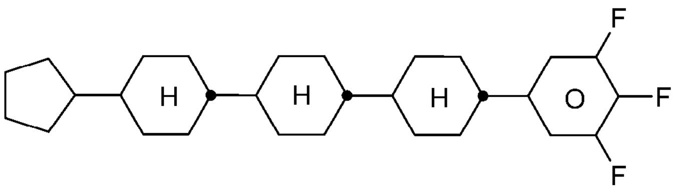
XVIIIc-4

Preferred compounds of Formula XIX may be selected from one of the following:

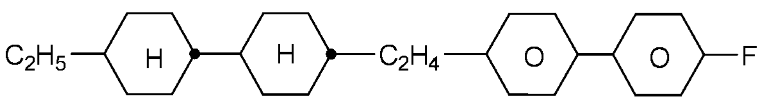
XIXa-1

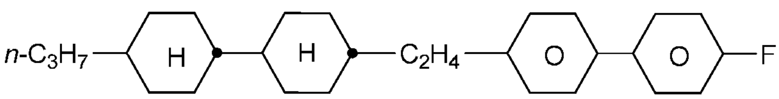
XIXa-2

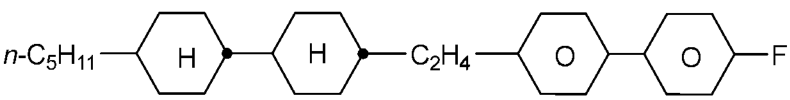
XIXa-3

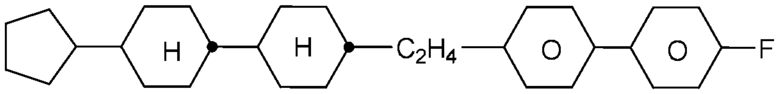

XIXa-4

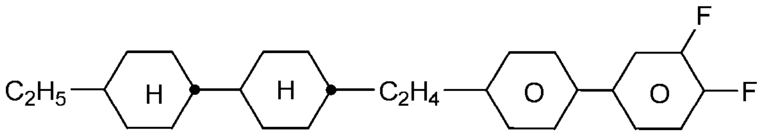

XIXb-1

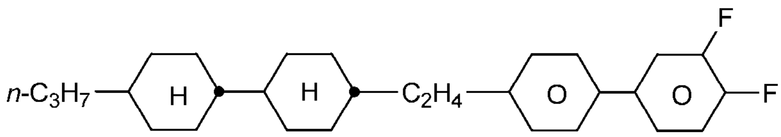

XIXb-2

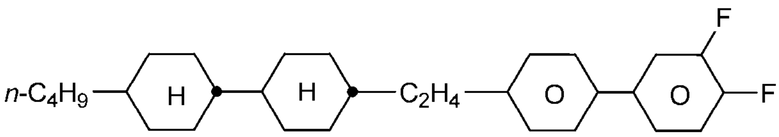

XIXb-3

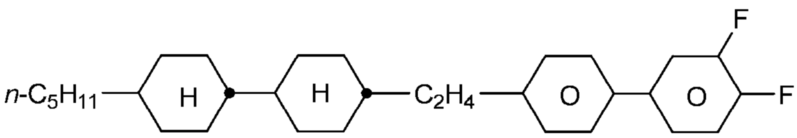

XIXb-4

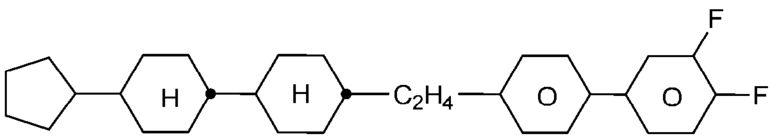

XIXb-5

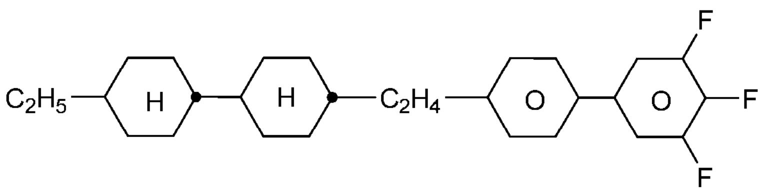

XIXc-1

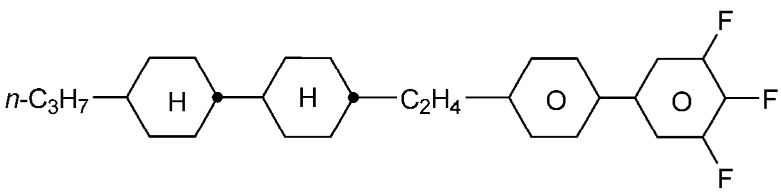

XIXc-2

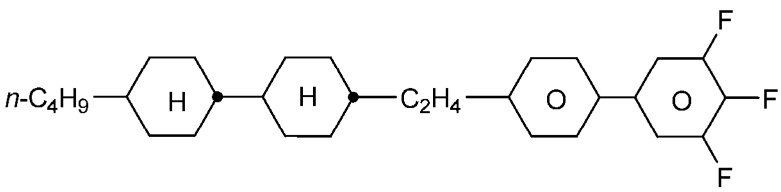

XIXc-3

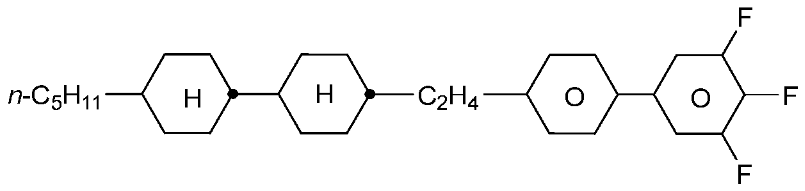

XIXc-4

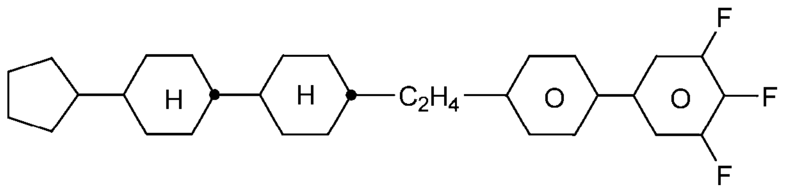

XIXc-5

Preferred compounds of Formula XX may be selected from one of the following:

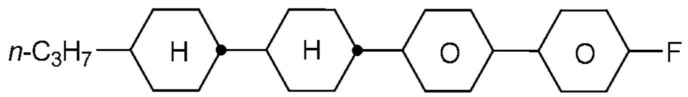

XXa-1

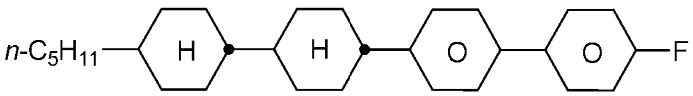

XXa-2

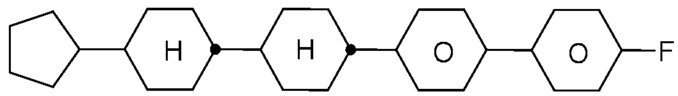

XXa-3

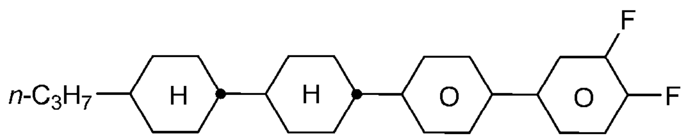

XXb-1

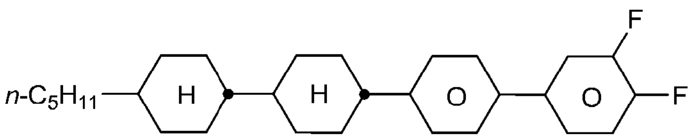

XXb-2

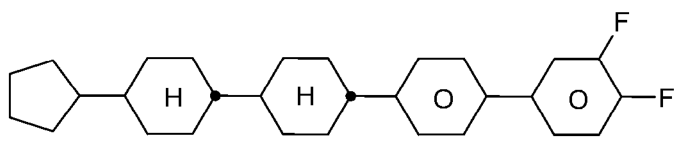

XXb-3

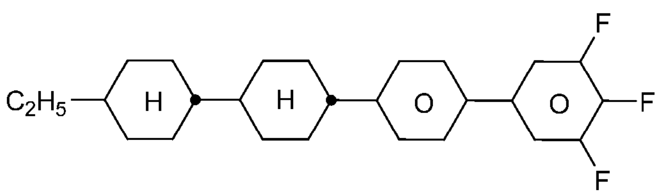

XXc-1

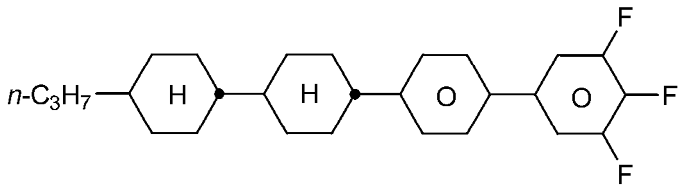

XXc-2

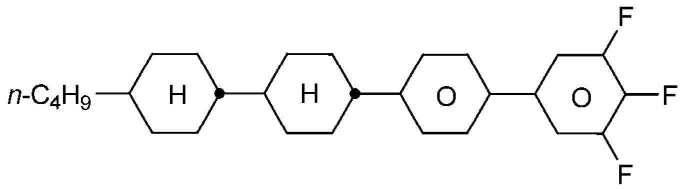

XXc-3

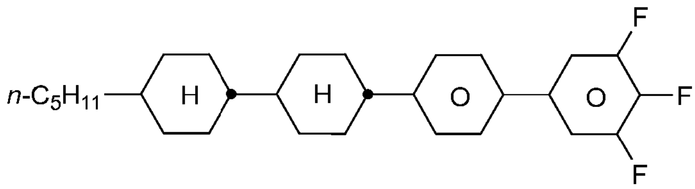

XXc-4

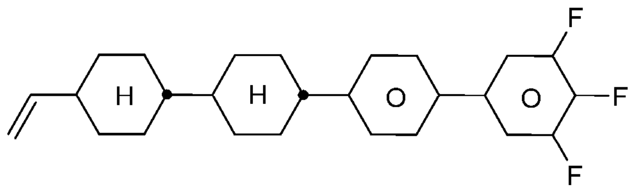

XXc-5

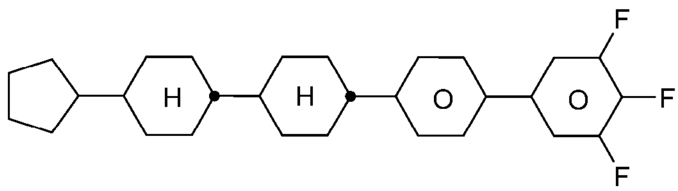

XXc-6

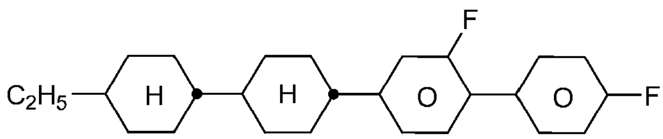

XXd-1

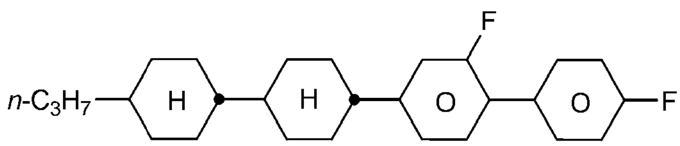

XXd-2

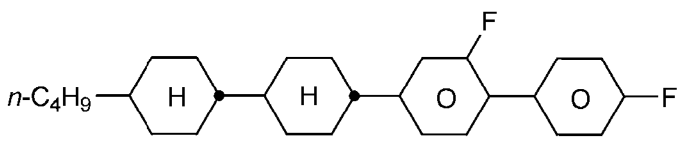

XXd-3

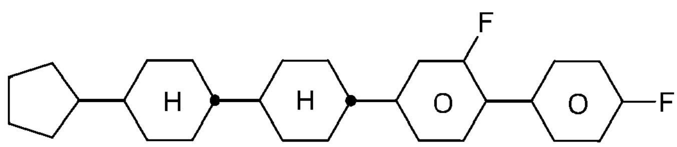

XXd-4

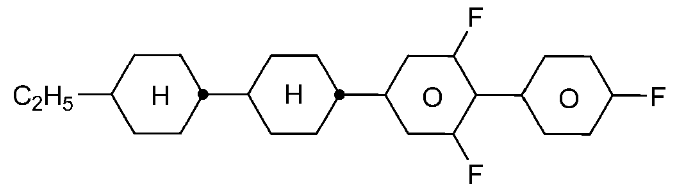

XXe-1

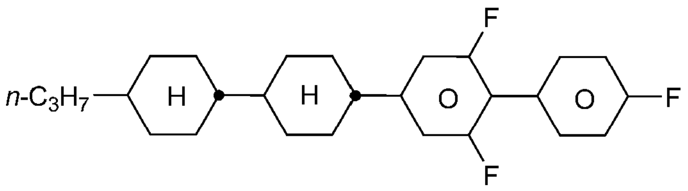

XXe-2

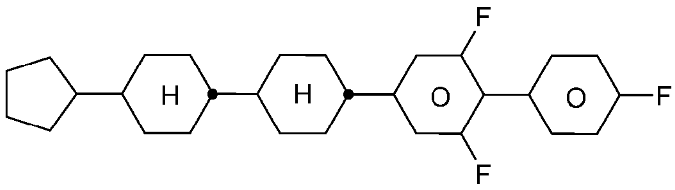

XXe-3

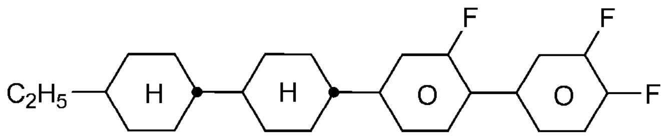

XXf-1

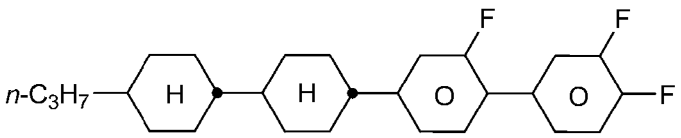

XXf-2

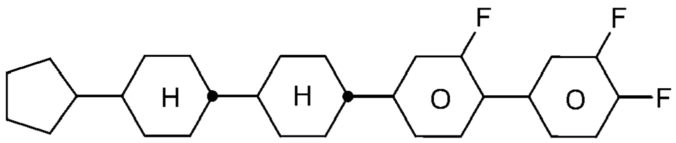

XXf-3

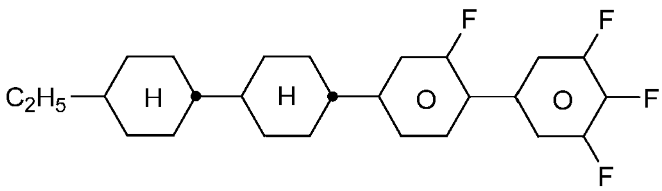

XXg-1

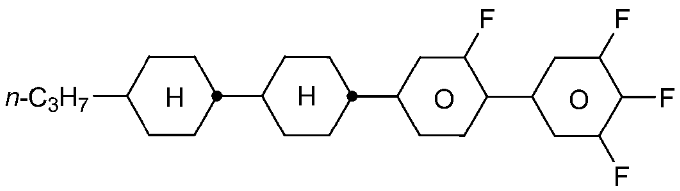

XXg-2

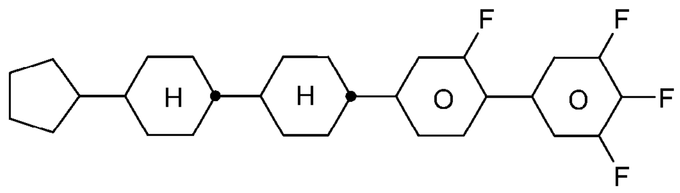

XXg-3

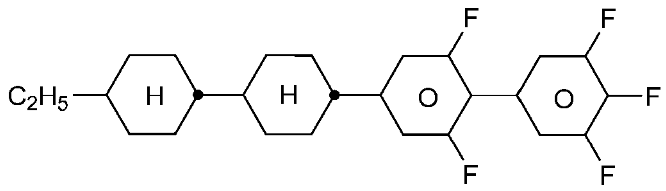

XXg-1

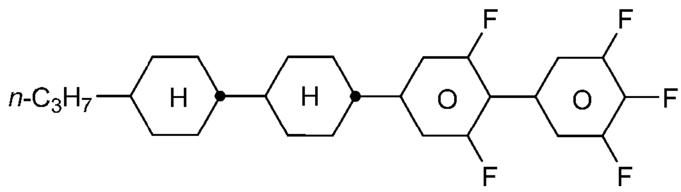

XXg-2

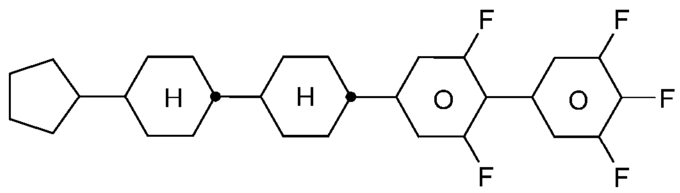

XXg-3

Preferred compounds of Formula XXI may be selected from one of the following:

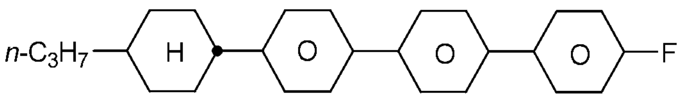

XXIa-1

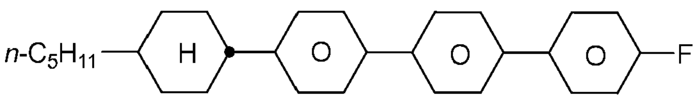

XXIa-2

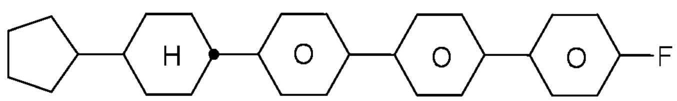

XXIa-3

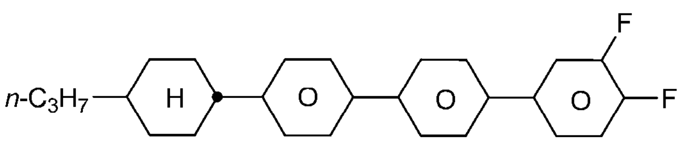

XXIb-1

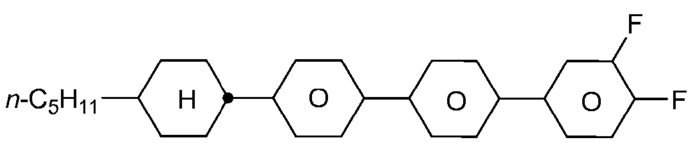

XXIb-2

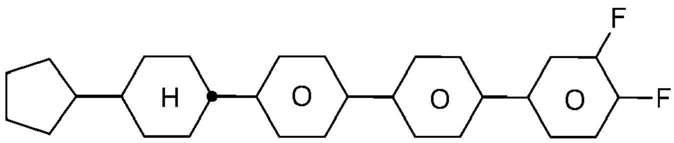

XXIb-3

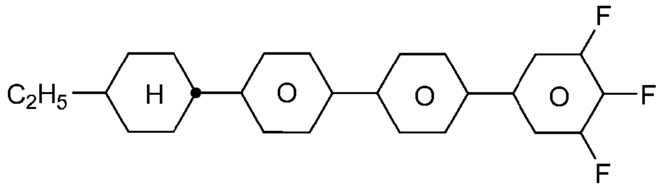

XXIc-1

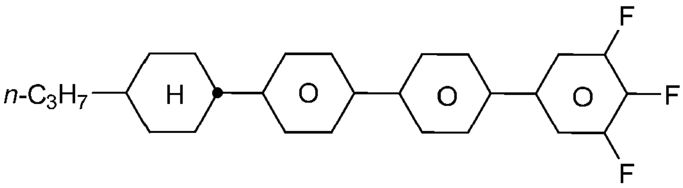

XXIc-2

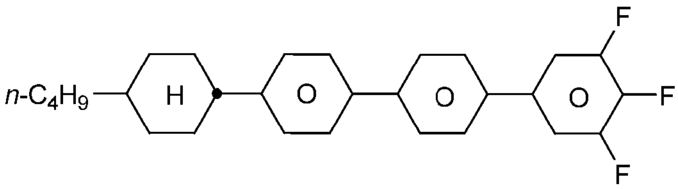

XXIc-3

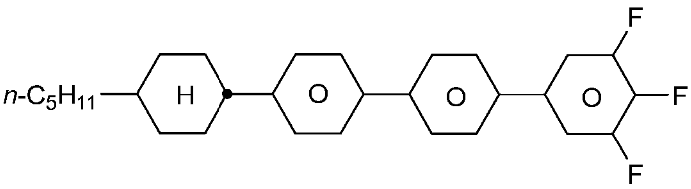

XXIc-4

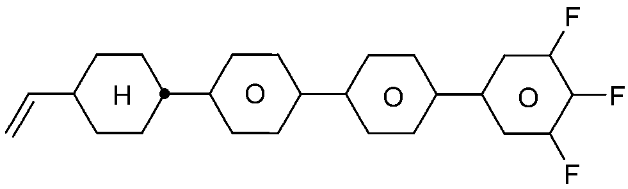

XXIc-5

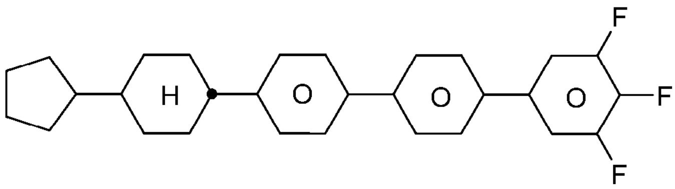

XXIc-6

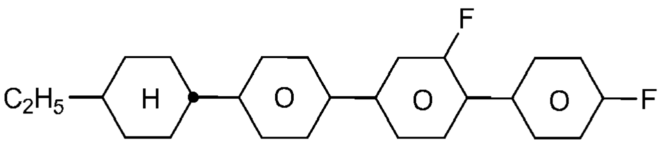

XXId-1

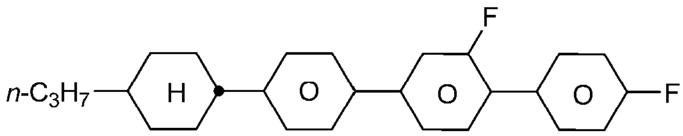

XXId-2

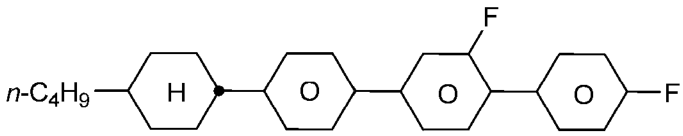

XXId-3

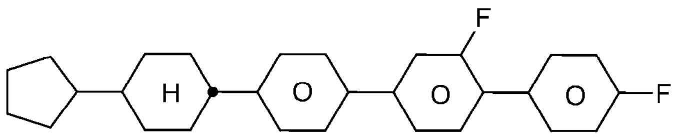

XXId-4

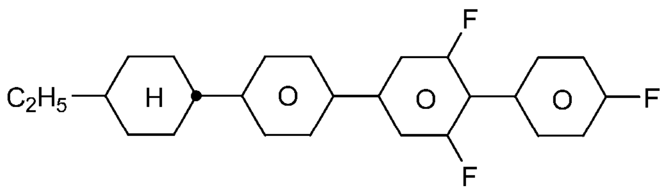

XXIe-1

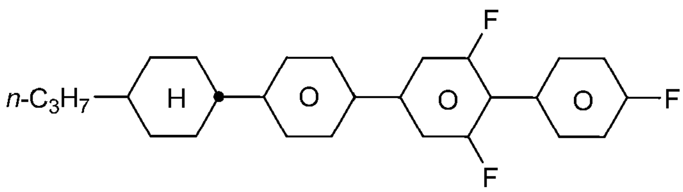

XXIe-2

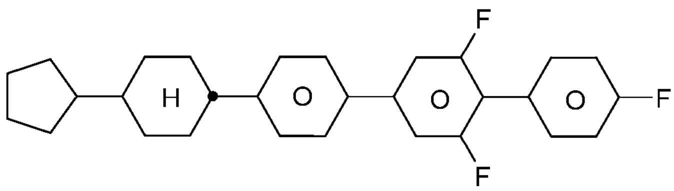

XXIe-3

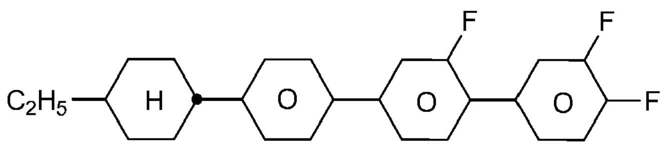

XXIf-1

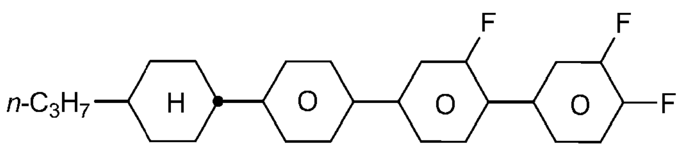

XXIf-2

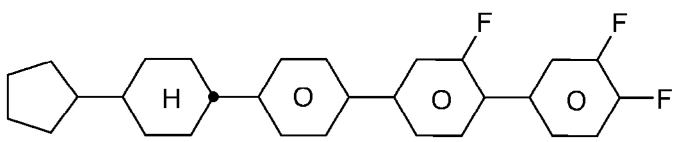

XXIf-3

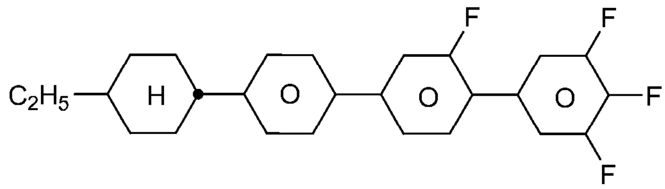

XXIg-1

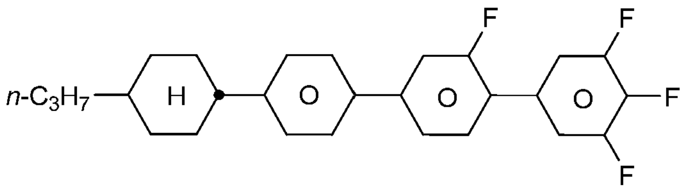

XXIg-2

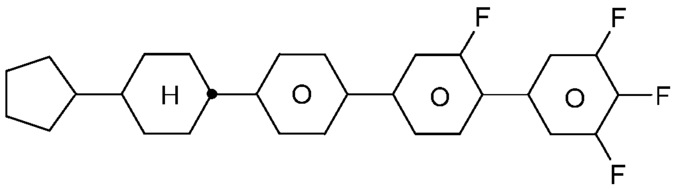

XXIg-3

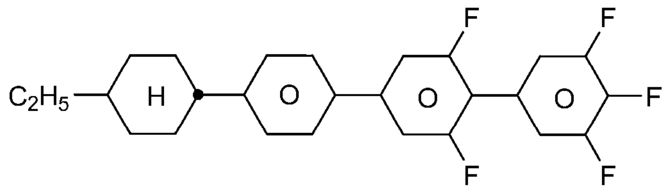

XXIg-1

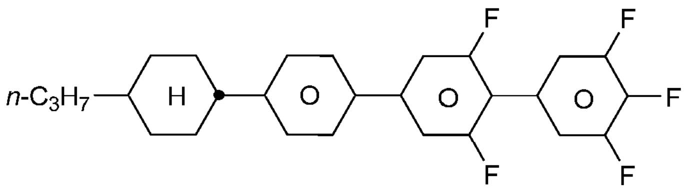

XXIg-2

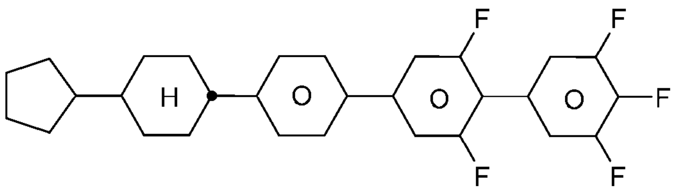

XXIg-3

Preferred compounds of Formula XXII may be selected from one of the following:

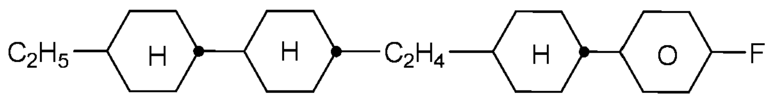

XXIIa-1

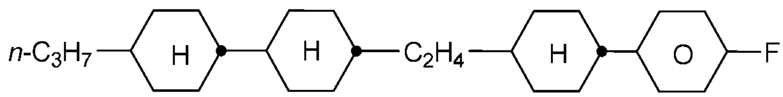

XXIIa-2

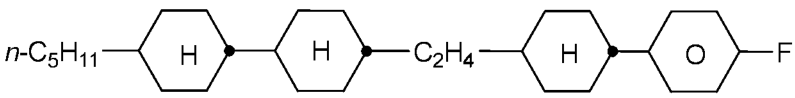

XXIIa-3

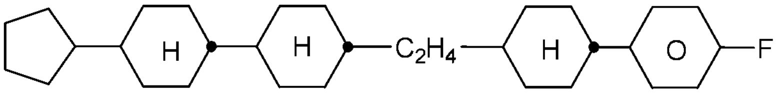

XXIIa-4

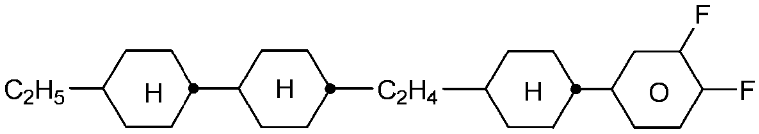

XXIIb-1

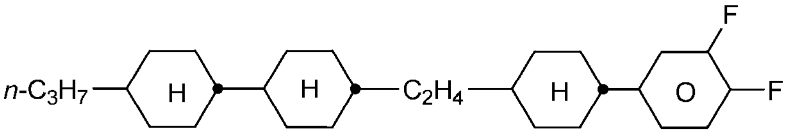

XXIIb-2

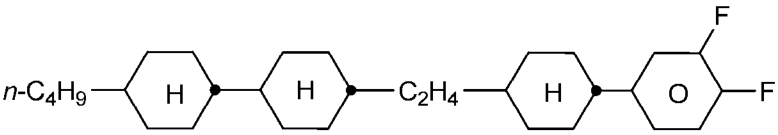

XXIIb-3

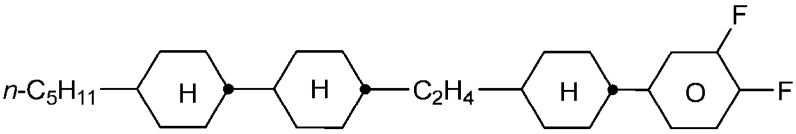

XXIIb-4

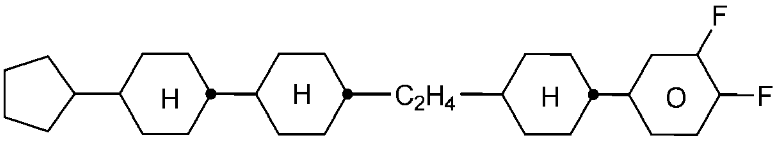

XXIIb-5

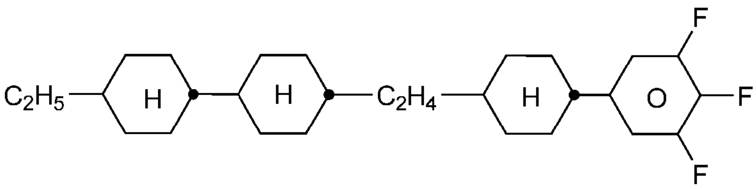

XXIIc-1

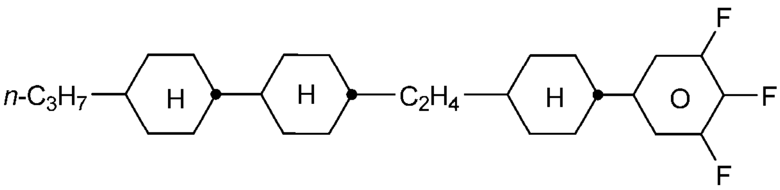

XXIIc-2

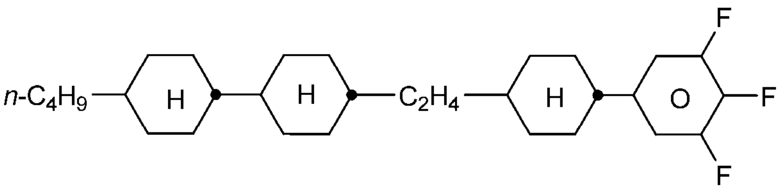

XXIIc-3

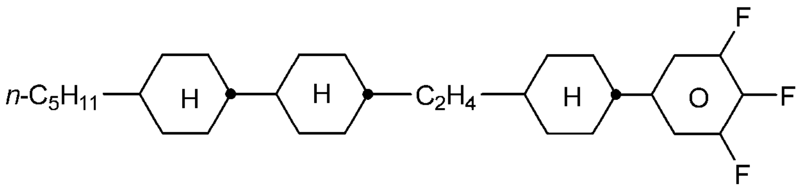

XXIIc-4

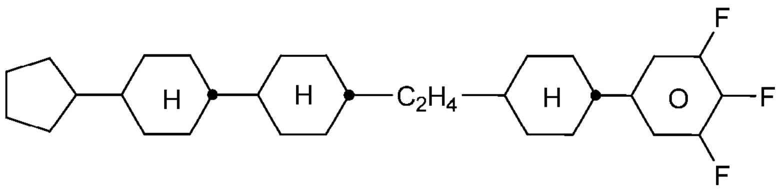

XXIIc-5

Preferred compounds of Formula XXIII may be selected from one of the following:

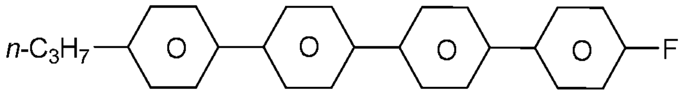

XXIIIa-1

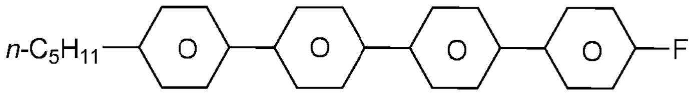

XXIIIa-2

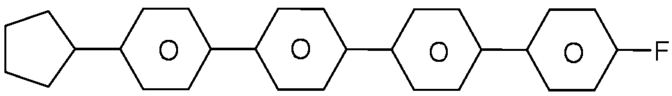

XXIIIa-3

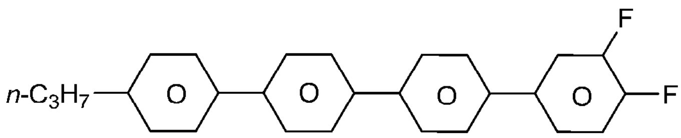

XXIIIb-1

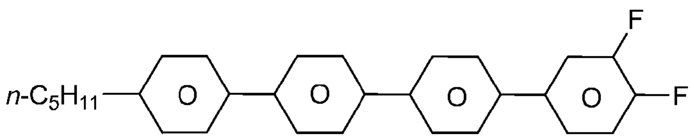

XXIIIb-2

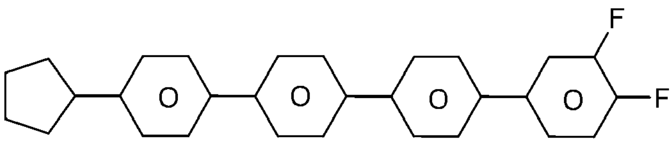

XXIIIb-3

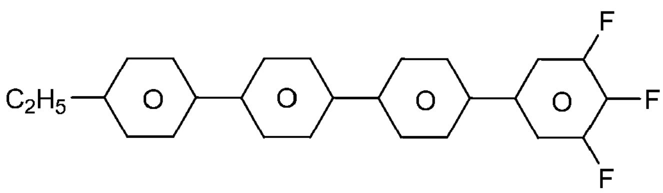

XXIIIc-1

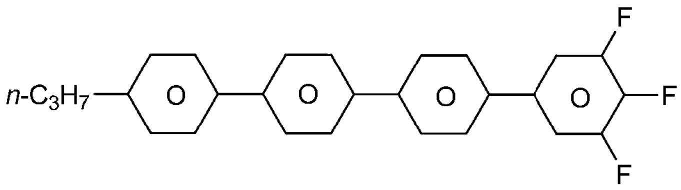

XXIIIc-2

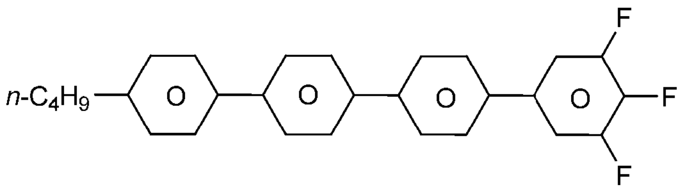

XXIIIc-3

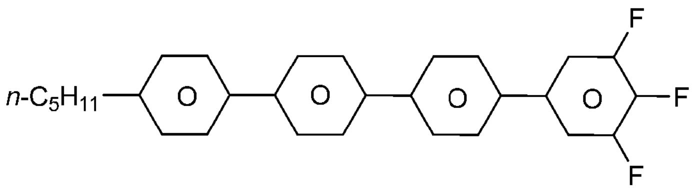

XXIIIc-4

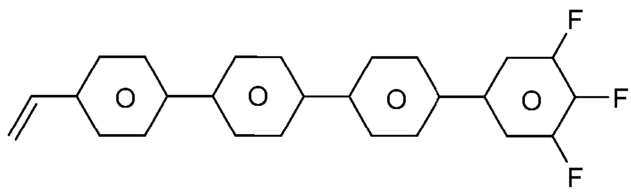

XXIIIc-5

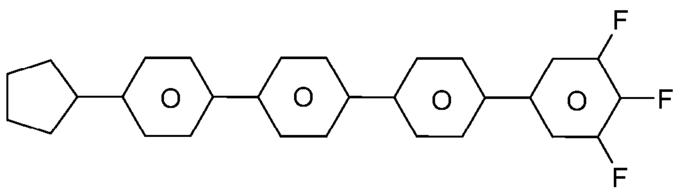

XXIIIc-6

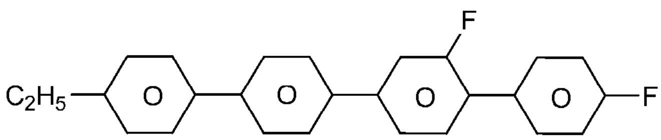

XXIIId-1

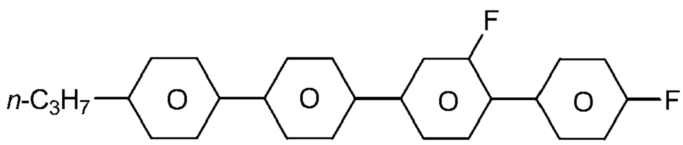

XXIIId-2

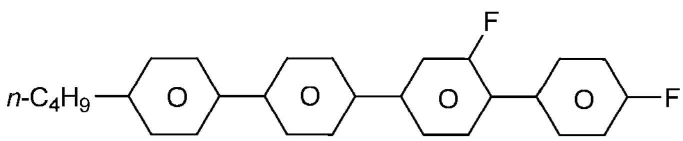

XXIIId-3

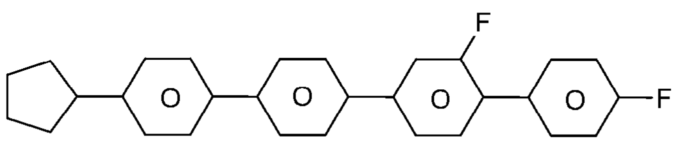

XXIIId-4

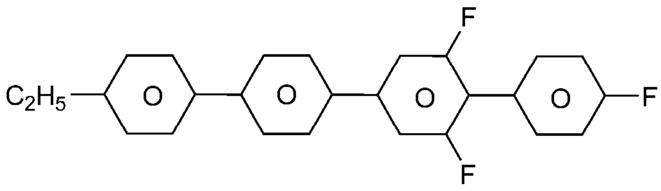

XXIIIe-1

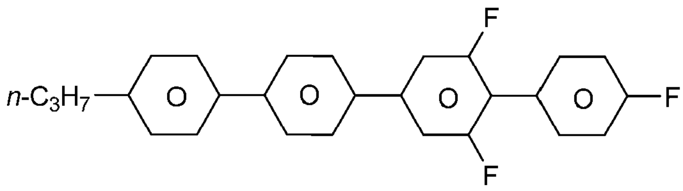

XXIIIe-2

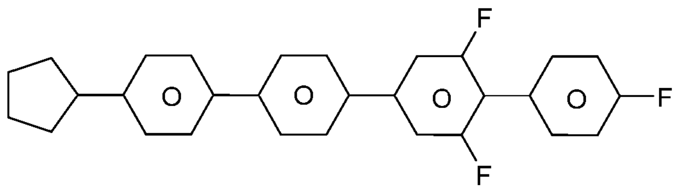

XXIIIe-3

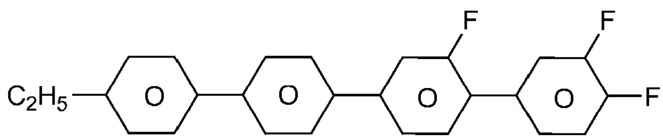

XXIIIf-1

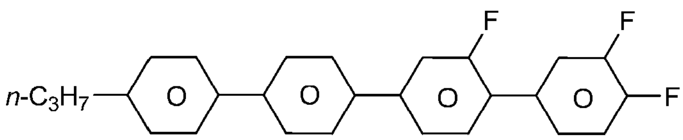

XXIIIf-2

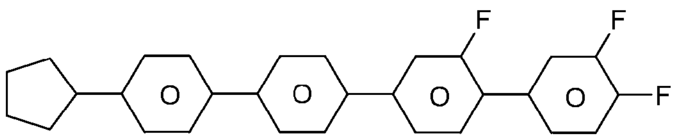

XXIIIf-3

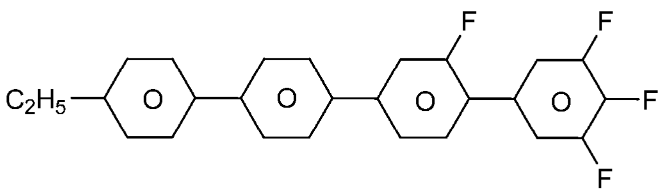

XXIIIg-1

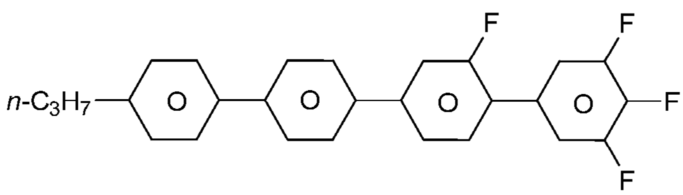

XXIIIg-2

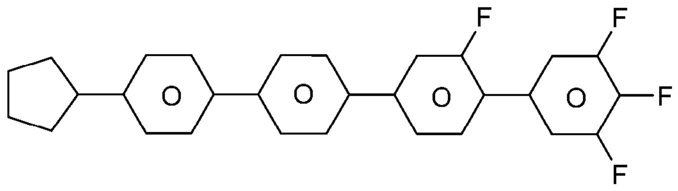

XXIIIg-3

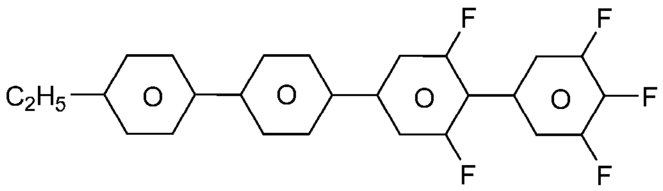

XXIIIg-1

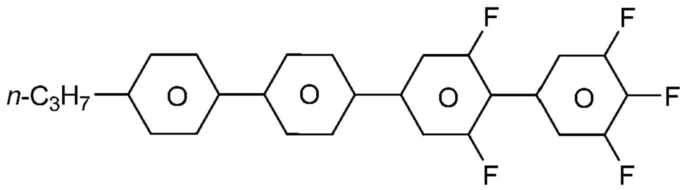

XXIIIg-2

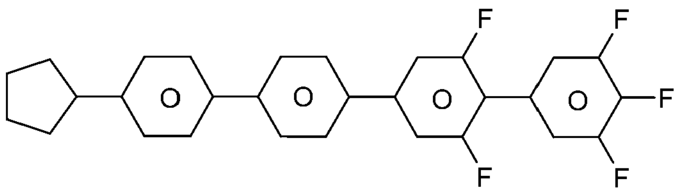

XXIIIg-3

The LC medium may further optionally comprise one or more compounds of the following formulae:

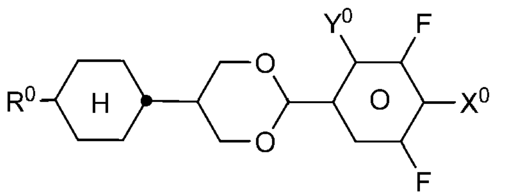

XXVII

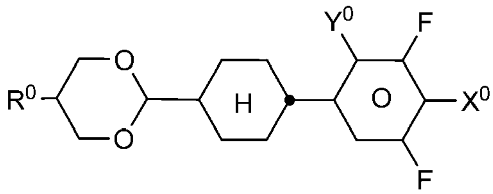

XXVIII

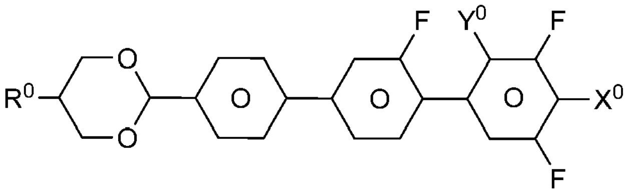

XXIX

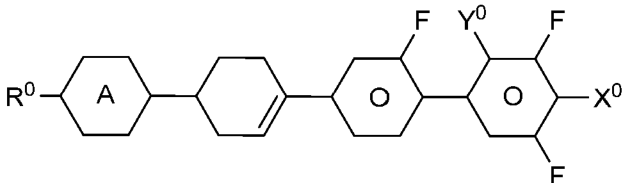

XXX

in which

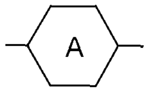

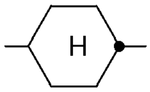 , 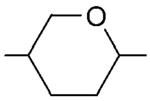 , 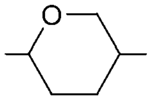 ,

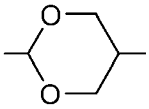 or 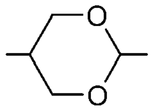 and

and $R^0$, $x^0$ and $Y^0$ have the meanings indicated in in Formulae IV to VIII for $R^0$, $x^0$ and $Y^0$, respectively. $R^1$ preferably denotes alkyl having 1 to 6 C atoms, cycloalkyl having 3 to 6 C atoms or cycloalkenyl having 5 or 6 C atoms, very preferably ethyl, propyl, butyl or pentyl . $X^0$ preferably denotes F, $CF_3$ , $CHF_2$ , $OCHF_2$ or $OCF_3$, furthermore $OCF{=}CF_2$, $OCHFCF_3$ or Cl, very preferably F, and $Y^0$ preferably denotes H. The LC medium according to the invention particularly preferably comprises one or more compounds of the Formula XXIX in which $X^0$ preferably denotes F.

Preferred compounds of Formula XXVII may be selected from one of the following:

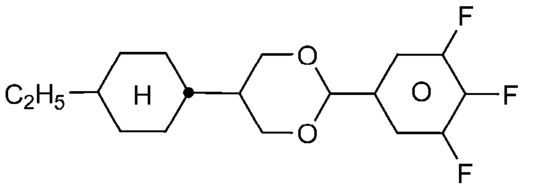

XXVII-1

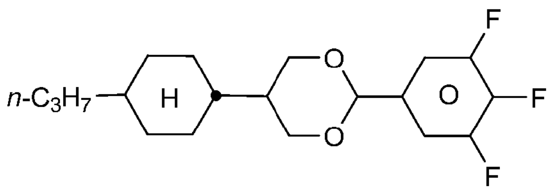

XXVII-2

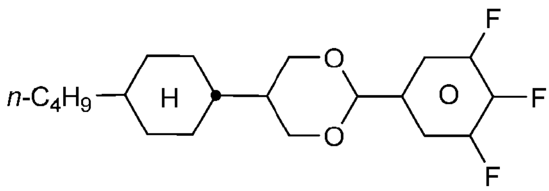

XXVII-3

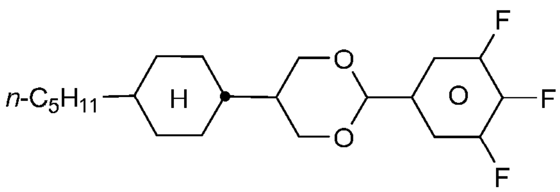

XXVII-4

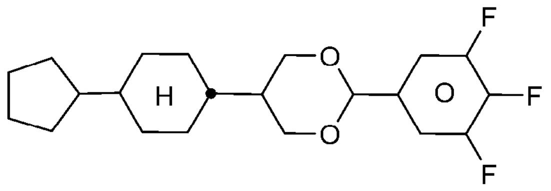

XXVII-5

Preferred compounds of Formula XXVIII may be selected from one of the following:

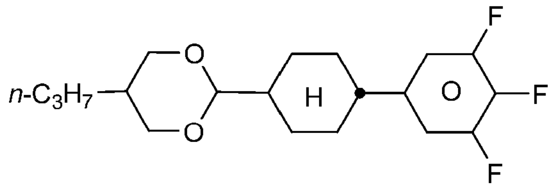

XXVIII-1

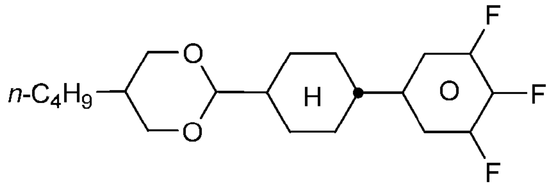

XXVIII-2

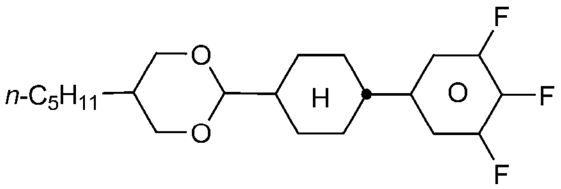

XXVIII-3

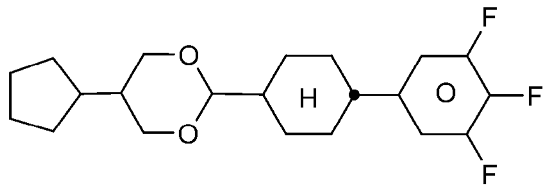

XXVIII-4

In some embodiments, the LC medium according to the invention may comprise one or more compounds of the Formulae XXIXa or XXXa:

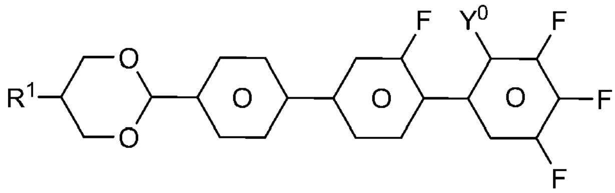

XXIXa

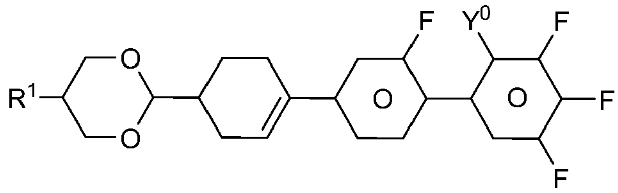

XXXa

in which $R^1$ and $Y^0$ have the meanings indicated for $R^0$ and $Y^0$ in the Formula XXIX and preferably $R^1$ denotes alkyl having 1 to 6 C atoms, cycloalkyl having 3 to 6 C atoms or cycloalkenyl having 5 or 6 C atoms, very preferably ethyl, propyl, butyl or

pentyl.

Preferred compounds of Formula XXIX may be selected from one of the following:

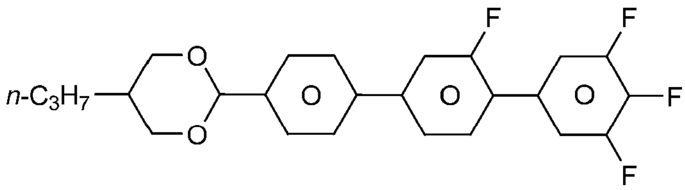

XXIX-1

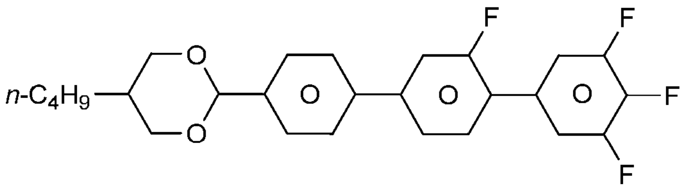

XXIX-2

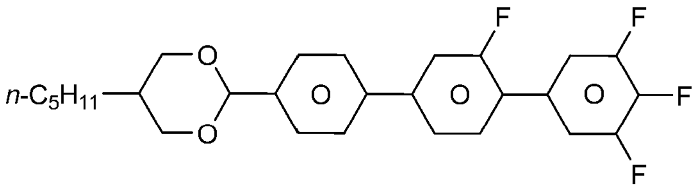

XXIX-3

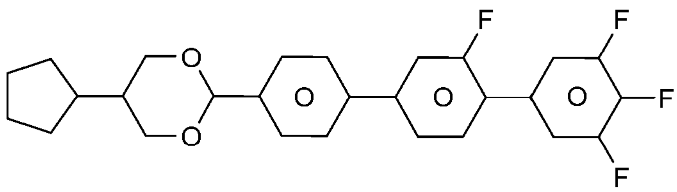

XXIX-4

Preferred compounds of Formula XXX may be selected from one of the following:

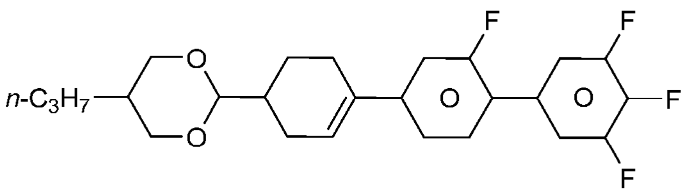

XXXa-1

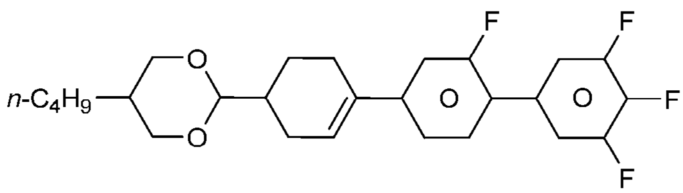

XXXa-2

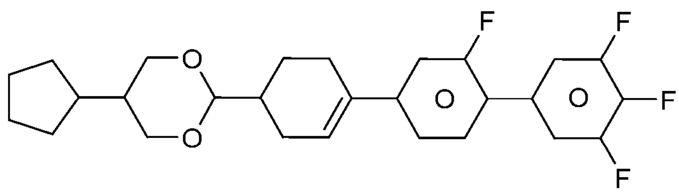

XXXa-3

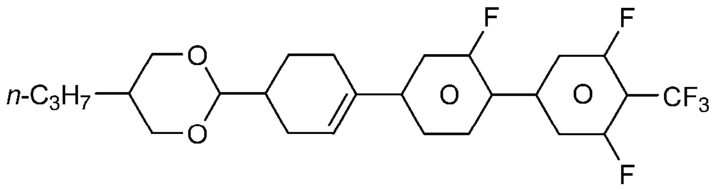

XXXa-4

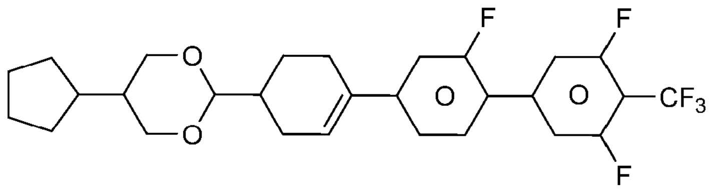

XXXa-5

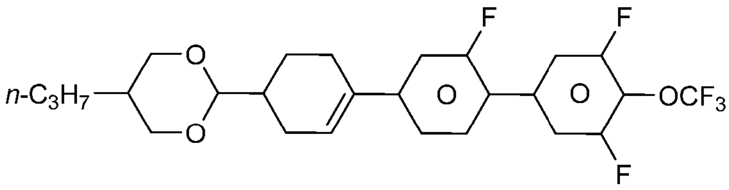

XXXa-6

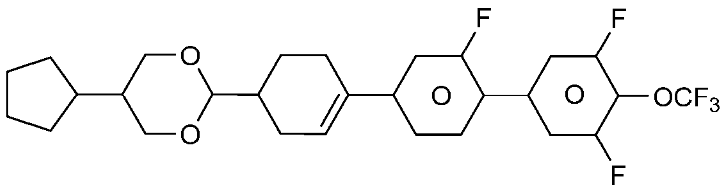

XXXa-7

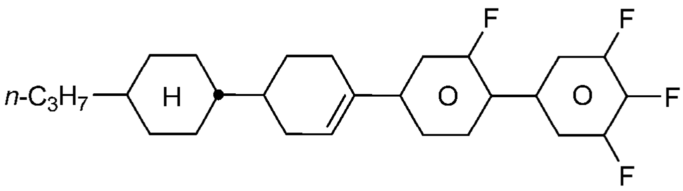

XXXb-1

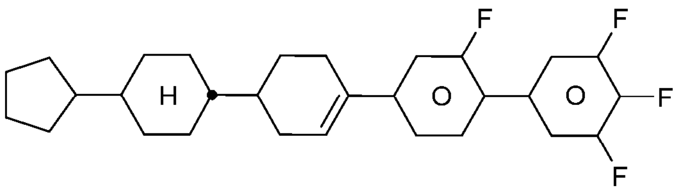

XXXb-2

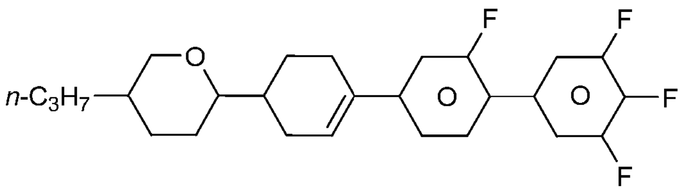

XXXc-1

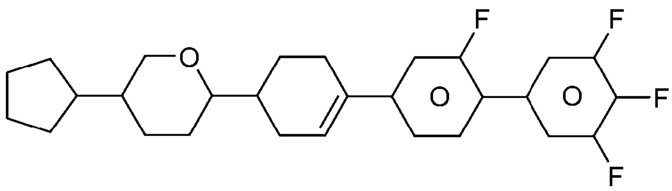

XXXc-2

The compound(s) of the Formulae XXVII - XXX is (are) preferably employed in the LC media according to the invention in amounts of 0 to 20% by weight, particularly preferably 1 to 15% by weight. Particularly preferred LC media comprise at least one compound of the Formula XXIX and/or the Formula XXX.

The compound(s) of the Formulae XXIXa and/or XXXa is/are preferably employed in the LC media according to the invention in amounts of 1 to 15% by weight, particularly preferably 2 to 10% by weight.

The LC medium may further comprise one or more compounds of the following pyrimidine or pyridine compounds of the following formulae:

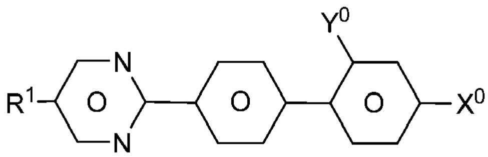

XXXI-1

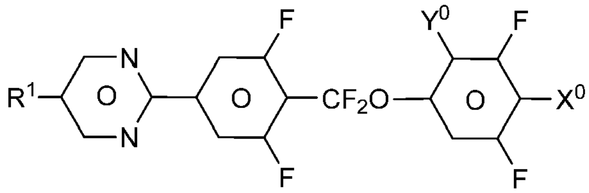

XXXI-2

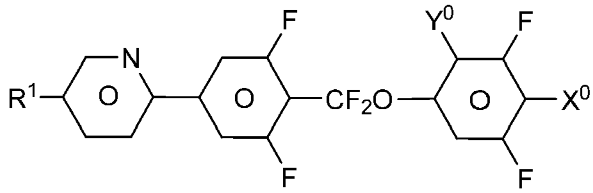

XXXI-3

in which $R^1$, $x^0$ and $Y^0$ have the meanings indicated in the Formula II for $R^0$, $X^0$ and $Y^0$, respectively. $R^1$ preferably denotes alkyl having 1 to 6 C atoms, cycloalkyl having 3 to 6 C atoms or cycloalkenyl having 5 or 6 C atoms, very preferably ethyl, propyl, butyl or pentyl. $X^0$ preferably denotes F, $CF_3$ , $CHF_2$ , $OCHF_2$ or $OCF_3$, furthermore $OCF=CF_2$,

$OCHFCF_3$ or Cl, very preferably F and $Y^0$ preferably denotes H. The medium according to the invention particularly may optionally comprise one or more compounds of the Formula XXXI-1, in which $X^0$ preferably denotes F. The compound(s) of the Formulae XXXI-1 to XXXI-3 may be employed in the LC media according to the invention in amounts of 1-20% by weight, particularly preferably 1-15% by weight.

In one preferred embodiment, the LC medium may also comprise one or more compounds of Formula S:

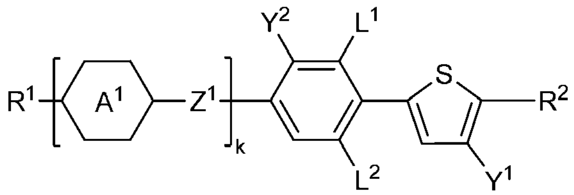

S

in which the individual substituents, on each occurrence identically or differently, and each, independently of one another, have the following meanings:

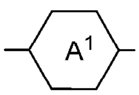

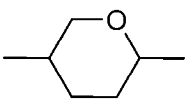

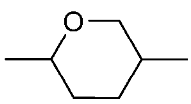

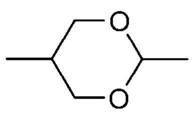

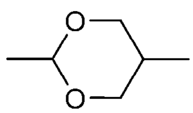

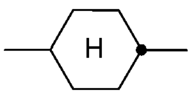 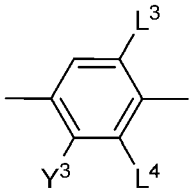 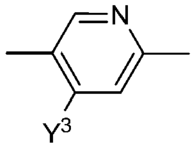 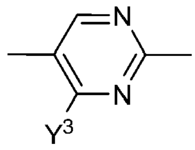

$R^1$ and $R^2$ each, independently of one another, denote a H atom, a halogen atom, , an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

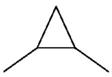, 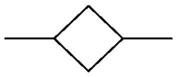, 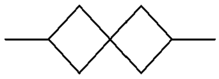, 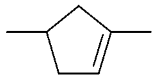, 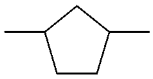, ·

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

$L^1$ to $L^4$ each, independently of one another, denote H, F or Cl;

$Y^1$ to $Y^3$ each, independently of one another, denote a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;

$Z^1$ denotes $-CF_2O-$, $-OCF_2-$, $-CH_2O-$, $-OCH_2-$, -CO-O-, -O-CO-, $-C_2H_4-$, $-C_2F_4-$, $-CF_2CH_2-$, $-CH_2CF_2-$, -CFHCFH-, $-CFHCH_2-$, $-CH_2CFH-$, - $CF_2CFH-$, $-CFHCF_2-$, -CH=CH-, -CF=CH-, -CH=CF-, -CF=CF-, -C≡C- or a single bond;

k denotes 0, 1, 2 or 3.

Preference is furthermore given to compounds of the Formula S in which k denotes 0, 1 or 2, particularly preferably 0 or 1. Preference is furthermore given to compounds of the Formula S in which k denotes 0, 1 or 2, preferably 1 or 2 and very particularly preferably 1.

$A^1$ in Formula S particularly preferably denotes phenylene-1,4-diyl, which may also be mono- or polysubstituted by F, furthermore cyclohexane-1,4-diyl, cyclohexenylene-1,4-diyl, tetrahydropyran-2,5-diyl or 1,3-dioxane-2,5-diyl.

$Z^1$ in Formula S particularly preferably denotes $-CF_2O-$, $-OCF_2-$ or a single bond, wherein a single bond is particularly preferred.

Preference is furthermore given to compounds of the Formula S in which $R^1$ and $R^2$ each, independently of one another, denotehalogen, or alkyl, alkenyl or alkynyl having up to 8, preferably up to 5 C atoms, each of which is optionally substituted by halogen, in particular by F.

Particularly preferred groups $R^1$ and $R^2$ in Formula S denote H, halogen, or alkyl, alkenyl, alkynyl or alkoxy having up to 12, preferably up to 8 C atoms, each of which is optionally substituted by halogen, in particular by F, particularly preferred are H, F, alkyl, alkenyl or alkynyl having up to 8 C atoms. Preferably, at least one group is not H, particularly preferably both groups $R^1$ and $R^2$ are not H. $R^1$ is very particularly preferably equal to alkyl. $R^2$ is furthermore preferably H, alkyl, alkyl which is substituted by at least one fluorine or fluorine. Very particularly preferably, $R^1$ is alkyl and $R^2$ is H or alkyl. $R^1$ $R^2$ each, independently of one another, very particularly preferably denote unbranched alkyl having 1 to 5 C atoms. If $R^1$ and $R^2$ denote substituted alkyl, alkoxy, alkenyl or alkynyl, the total number of C atoms in the two groups $R^1$ and $R^2$ is preferably less than 10.

Preferred alkyl groups are, for example, methyl, ethyl, *n*-propyl, *n*-butyl, *n*-pentyl, *n*-hexyl, *n*-heptyl and *n*-octyl.

Preferred alkenyl groups are, for example, ethenyl, propenyl, butenyl and pentenyl.

Preferred alkynyl groups are, for example, ethynyl, propynyl, butynyl, pentynyl, hexynyl, heptynyl and octynyl.

Preferred alkoxy groups are, for example, methoxy, ethoxy, *n*-propoxy, *n*-butoxy, *n*-pentoxy, *n*-hexoxy, *n*-heptoxy, *n*-octoxy.

Halogen preferably denotes F or Cl, F being mostly preferred.

Particularly preferred compounds of the Formula S are those selected from the following sub-formulae:

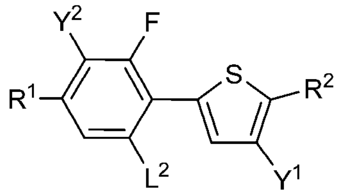

S-1-1

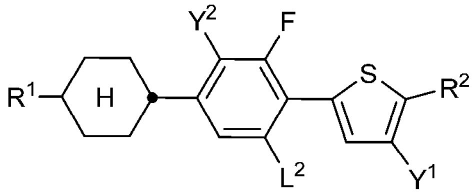

S-1-2

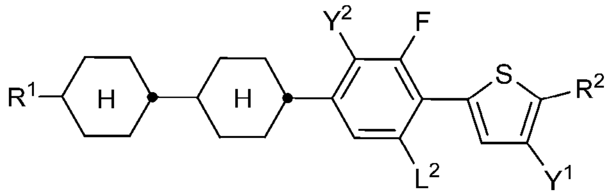

S-1-3

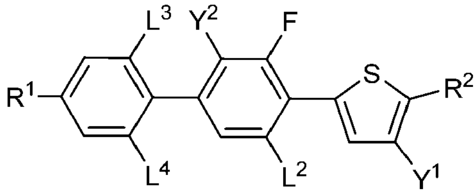

S-1-4

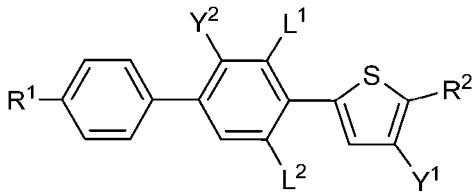

S-1-4-1

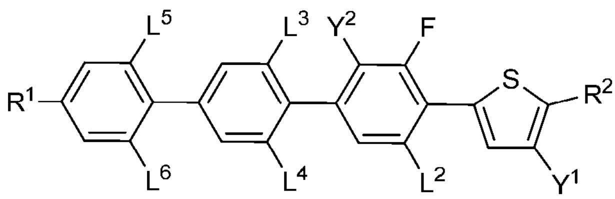

S-1-5

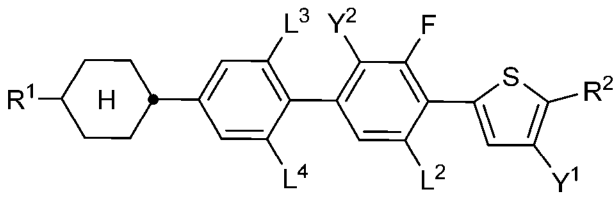

S-1-6

in which $Y^1$ $Y^2$, $R^1$ and $R^2$ and $L^1$ to $L^6$ have the meanings indicated in general Formula S.

In a preferred embodiment,

$R^1$ an alkyl or an alkoxy group having 1 to 6 C atoms or an alkenyl or an alkenyloxy group having 2 to 6 C atoms in which one or more $CH_2$ groups are optionally substituted by -C≡C-, $-CF_2O-$, $-OCF_2-$, -CH=CH-,

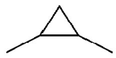,

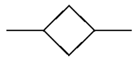, 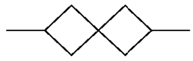, 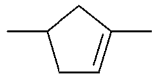, 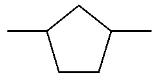,

-O-, -CO-O- or -O-CO- in such a way that O atoms are not linked directly to one another, and in which one or more H atoms may be substituted by a halogen atom;

$R^2$ a halogen atom, -CN, -SCN, -NCS, an alkyl or an alkoxy group having 1 to 6 C atoms or an alkenyloxy or an alkenyl group having 2 to 6 C atoms in which one or more $CH_2$ groups are optionally substituted by -C≡C-, $-CF_2O-$, $-OCF_2-$, -CH=CH-,

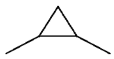, 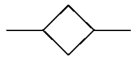, 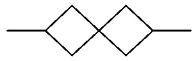, 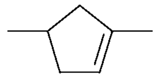,

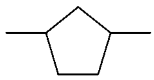, .

-O-, -CO-O- or -O-CO- in such a way that O atoms are not linked directly to one another, and in which one or more H atoms may be substituted by a halogen atom;

$Y^1$ and $Y^2$ each, independently from one another, denote a H atom or a methyl group, preferably a H atom; and

$L^1$ to $L^6$ each, independently from one another, denote a H atom, F or Cl.

$R^1$ and $R^2$ may denote optionally fluorinated alkyl or alkoxy having 1 to 12 C atoms, optionally fluorinated alkenyl or alkynyl having 2 to 12 C atoms, optionally fluorinated cycloalkyl having 3 to 12 C atoms. $Y^1$ and $Y^2$ are preferably a H atom or a methyl group.

Particularly preferred are optionally fluorinated alkyl, alkenyl or alkynyl having up to 5 C atoms. $L^2$ in the Formulae S-1-1 to S-1-6 preferably denotes F. In the Formulae S-1-4 to S-1-6, $L^3$ to $L^6$ preferably denote H.

In a particularly preferred embodiment, the compounds of Formula S are selected from the following structures:

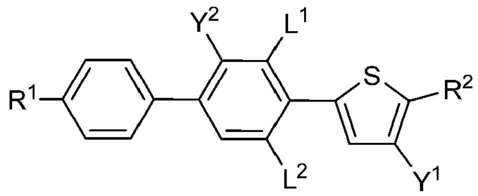

S-1-4-1

where $R^1$ has the same meaning as in the general Formula S;

$R^2$ denotes a straight-chain or branched alkyl or alkoxy group having 1 to 6 C atoms, or an akenyl, alkenyloxy, alkoxyalkyl group having 2 to 6 C atoms, or a cycloalkyl or a cycloalkoxy group having 3 to 12 C atoms, in which one or more non-adjacent $CH_2$ groups are optionally substituted by -C≡C-, $-CF_2O-$, $-OCF_2-$, -CH=CH-,

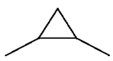, 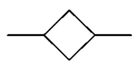, 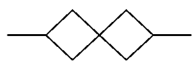, 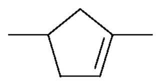,

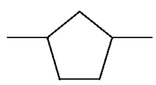,

-O-, -CO-O- or -O-CO- in such a way that O atoms are not linked directly to one another, and in which one or more H atoms may be substituted by a halogen atom; alternatively,

$R^2$ is $X^0$, wherein

| | |
|---|---|
| $X^0$ | a F atom or an alkyl or an alkoxy group having 1 to 3 C atoms or an alkenyl or an alkenyloxy group having 2 or 3 C atoms in which one or more H atoms are replaced by a F atom; and |
| $L^1$ and $L^2$ | both denote a F atom or, alternatively, $L^1$ denotes a F atom and $L^2$ denotes a H atom; and |
| $Y^1$ and $Y^2$ | each, independently from one another, denote a H atom or a straight-chain or branched alkyl group having 1 to 3 C atoms. |

LC media according to the present invention having a particularly advantageous properties are obtainable with the following compounds of the general Formula S:

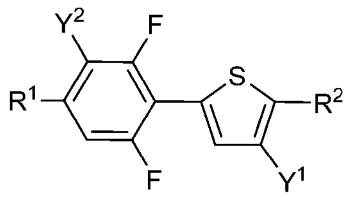

S-2-1

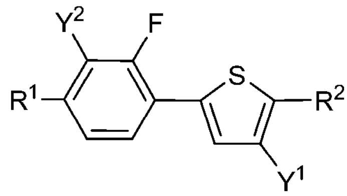

S-2-2

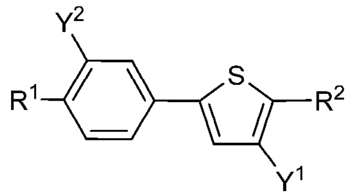

S-2-3

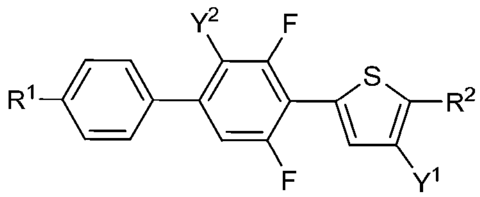

S-2-4

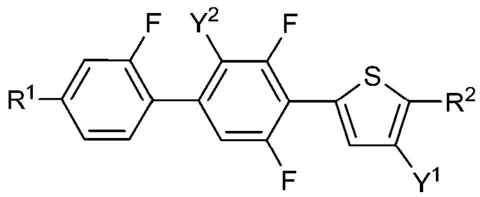

S-2-5

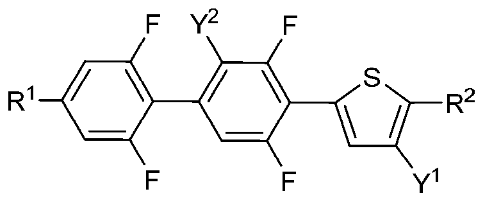

S-2-6

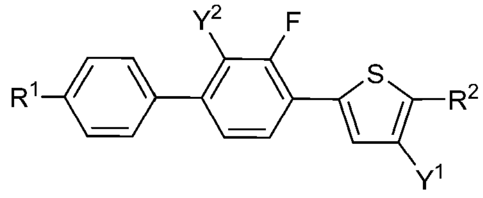

S-2-7

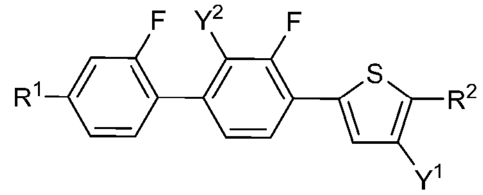

S-2-8

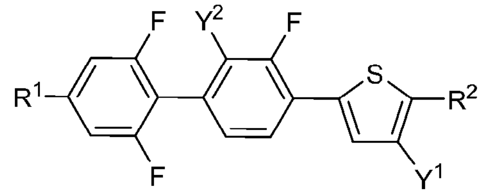

S-2-9

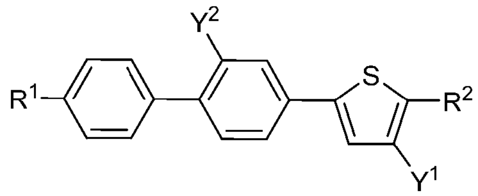

S-2-10

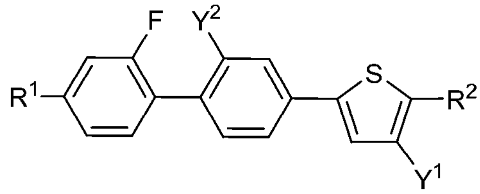

S-2-11

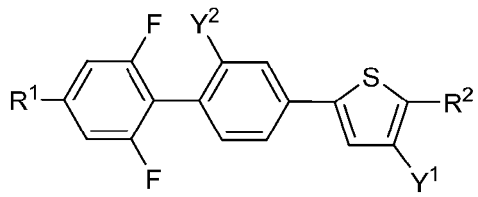

S-2-12

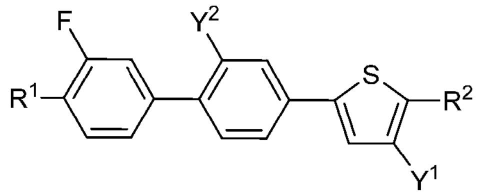

S-2-15

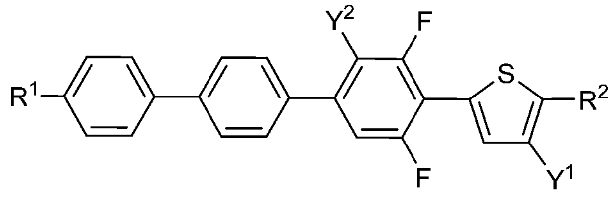

S-2-20

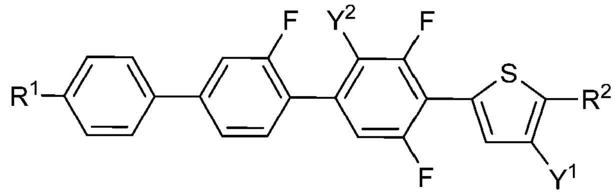

S-2-21

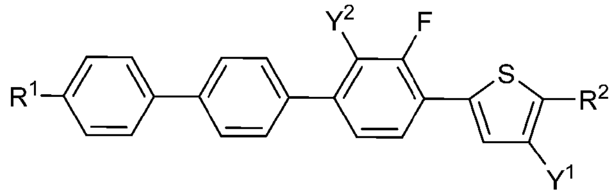

S-2-22

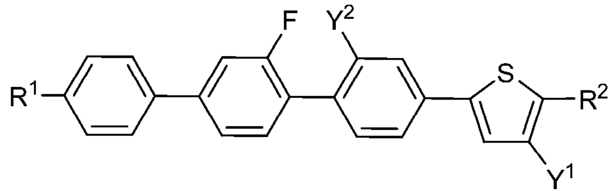

S-2-23

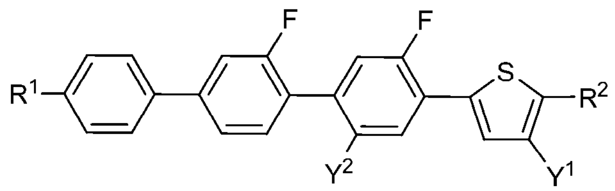

S-2-24

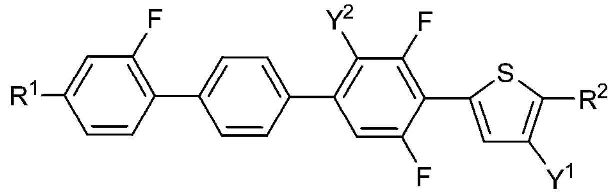

S-2-25

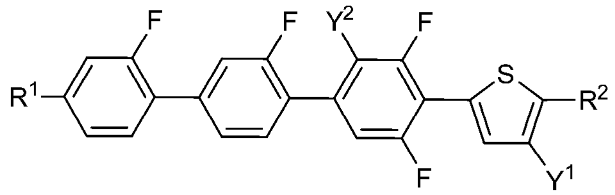

S-2-26

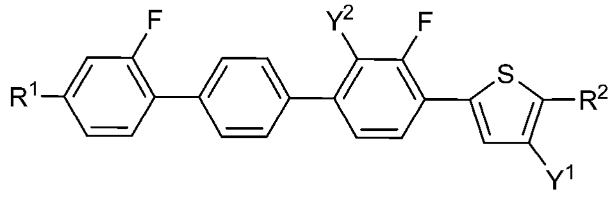

S-2-27

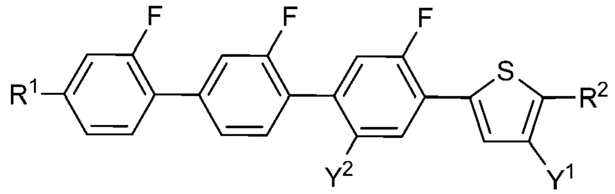

S-2-28

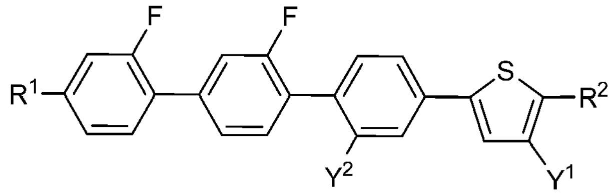

S-2-29

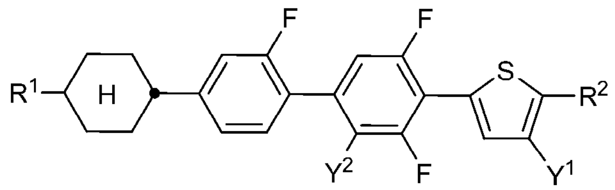

S-2-30

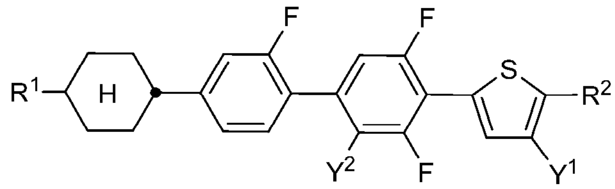

S-2-31

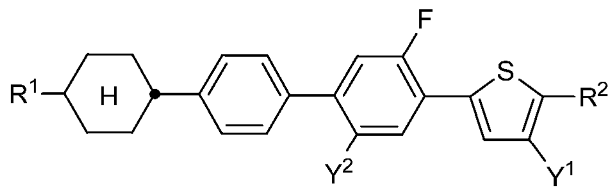

S-2-32

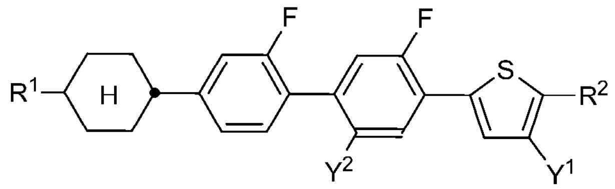

S-2-33

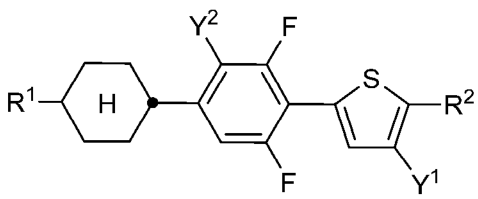

S-2-34

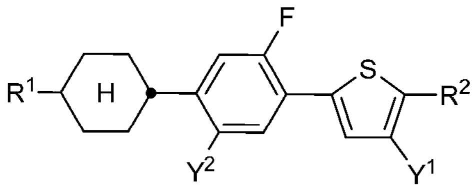

S-2-35

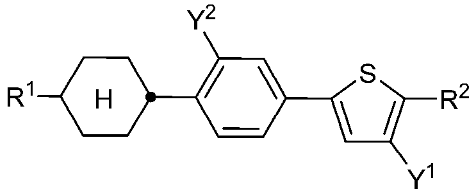

S-2-36

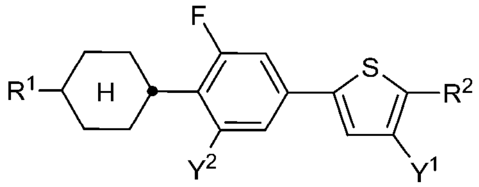

S-2-37

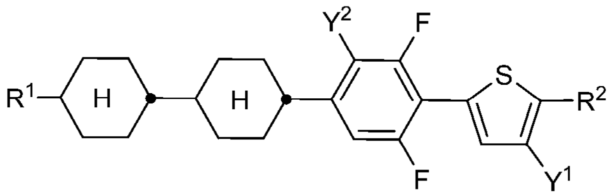

S-2-38

wherein $Y^1$, $Y^2$, $R^1$ and $R^2$ are as defined above.

In one preferred embodiment of the present invention, the LC medium comprises one or more compound of Formula S-2-4 and/or one or more compound of Formula S-2-7.

In yet a further preferred embodiment, LC media comprise the following compounds of Formula S:

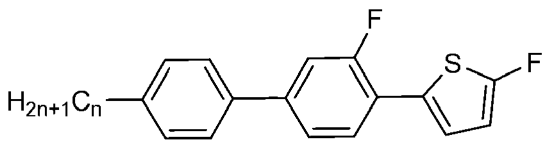

S-3-1

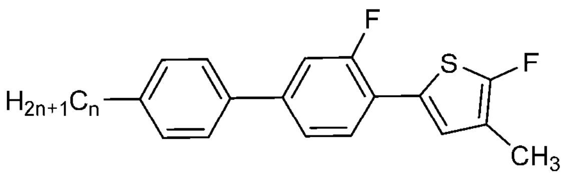

S-3-1a

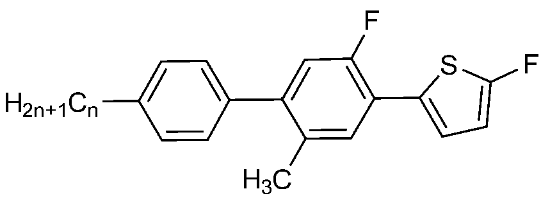

S-3-1b

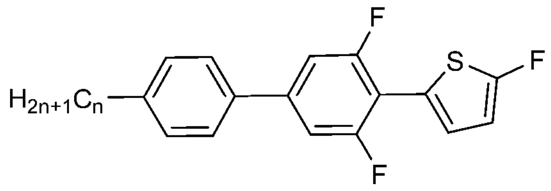

S-3-2

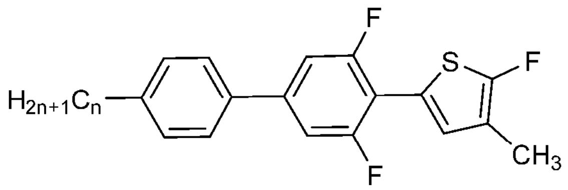

S-3-2a

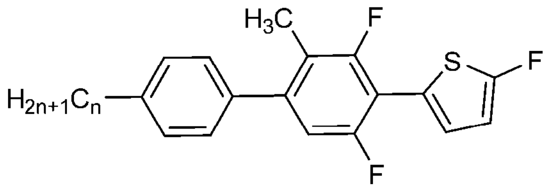

S-3-2b

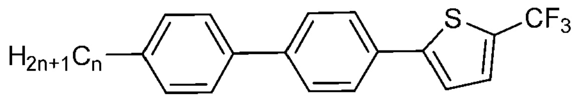

S-3-3

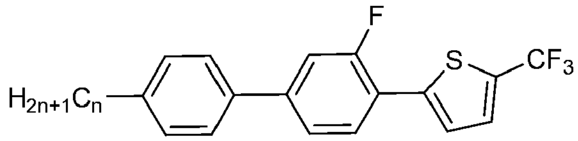

S-3-4

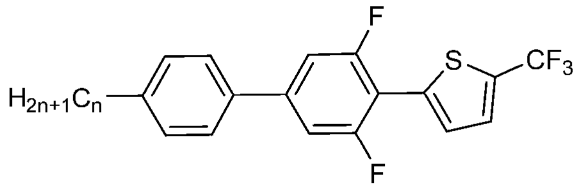

S-3-5

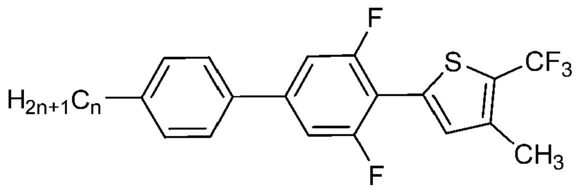

S-3-5a

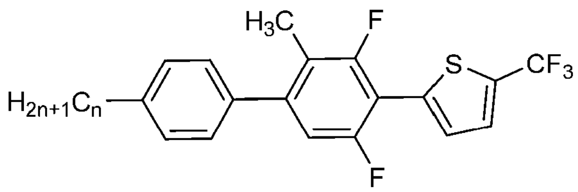

S-3-5b

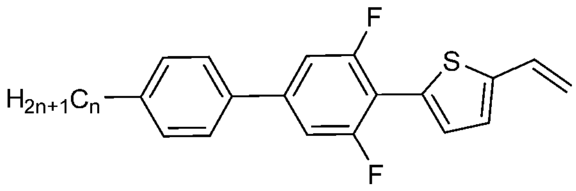

S-3-6

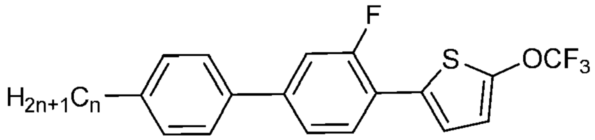

S-3-7

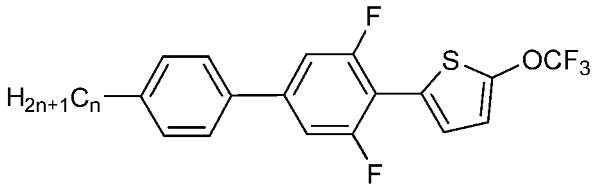

S-3-8

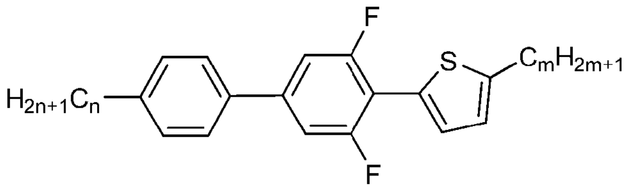

S-3-9

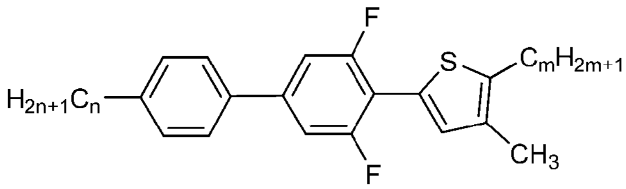

S-3-9a

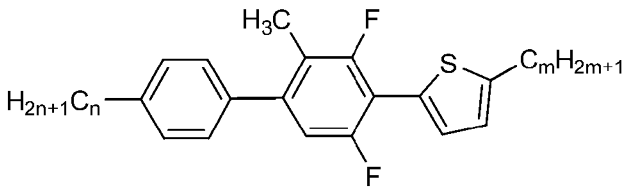

S-3-9b

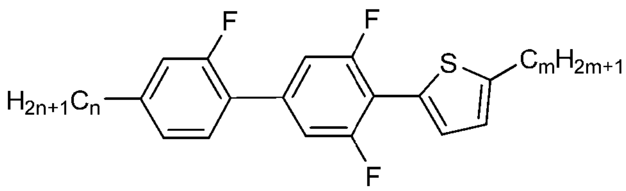

S-3-10

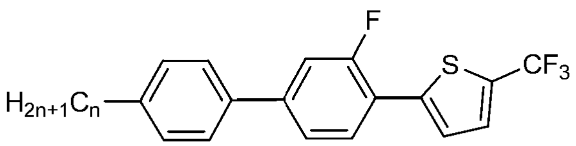

S-3-11

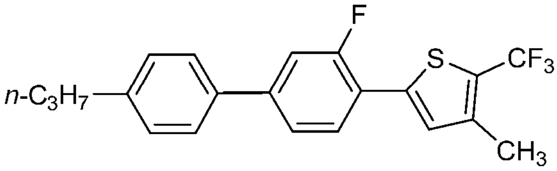

S-3-11a

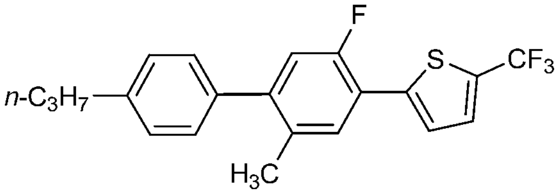

S-3-11b

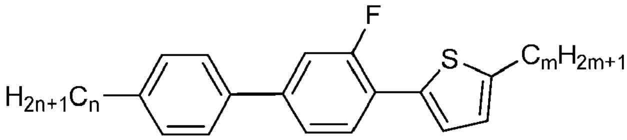

S-3-12

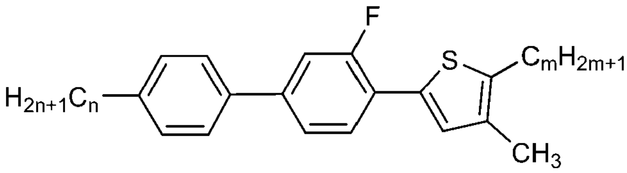

S-3-12a

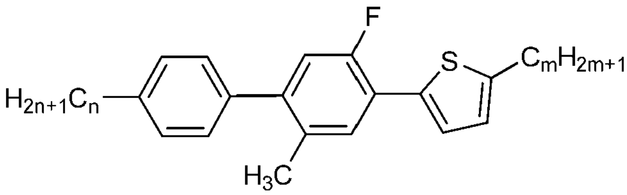

S-3-12b

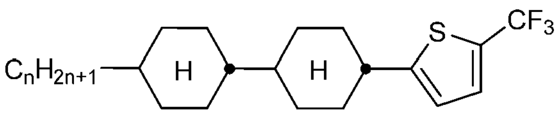

S-3-13

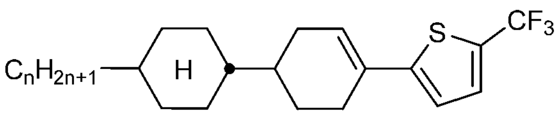

S-3-14

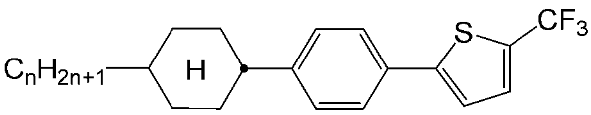

S-3-15

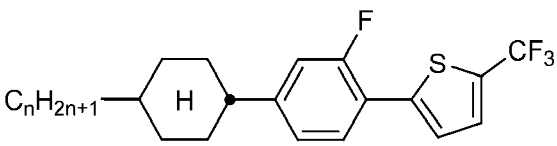

S-3-16

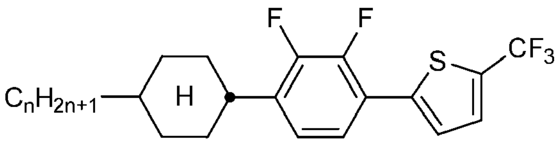

S-3-17

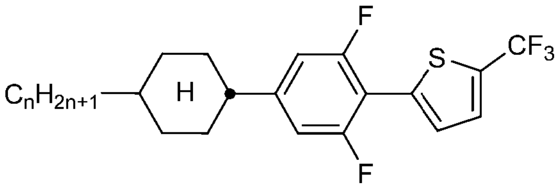

S-3-18

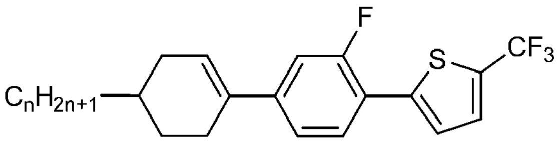

S-3-19

wherein n and m each, independently of one another, denote 0, 1, 2, 3, 4, 5, 6, 7, 8, 9, 10, 11 or 12, preferably 2, 3, 4, 5 or 6.

Mostly preferred compounds of Formula S include, in particular, one or more of the following:

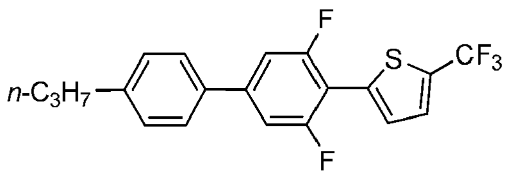

S-3-5-1

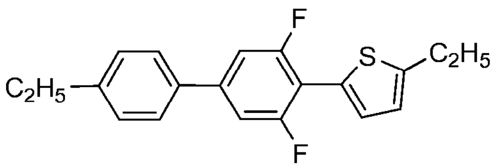

S-3-9-1

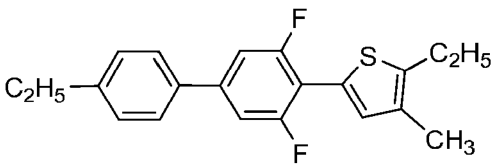

S-3-9-1a

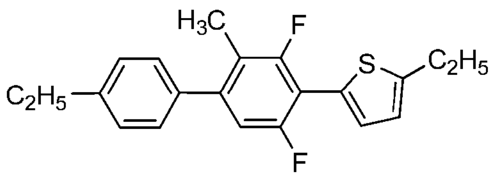

S-3-9-1b

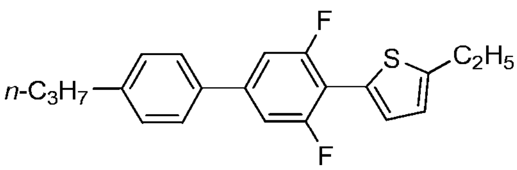

S-3-9-2

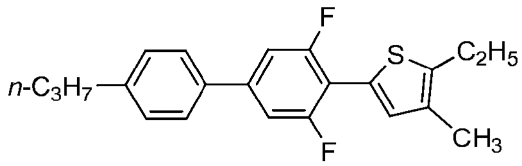

S-3-9-2a

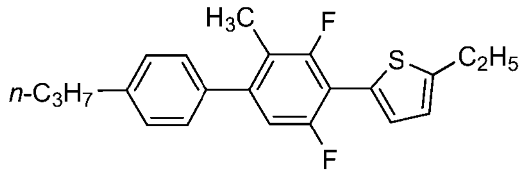

S-3-9-2b

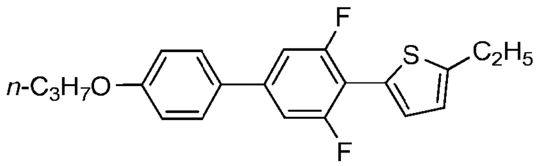

S-3-9-2c

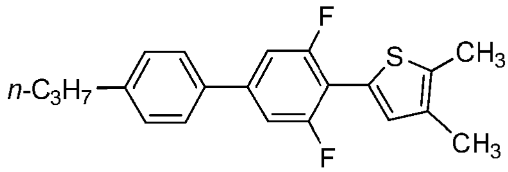

S-3-9-2d

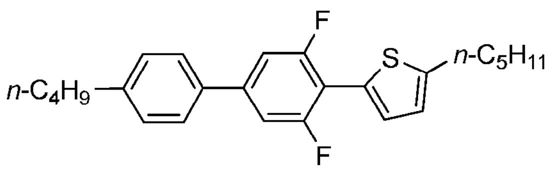

S-3-9-3

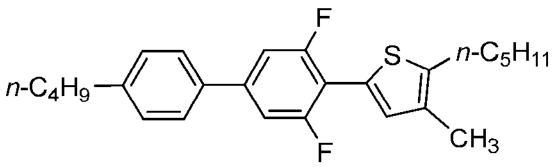

S-3-9-3a

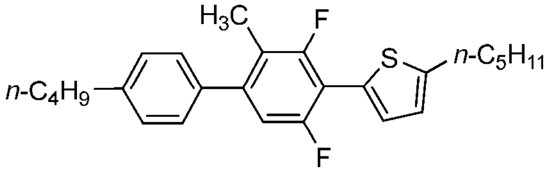

S-3-9-3b

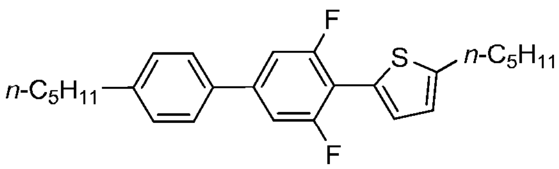

S-3-9-4

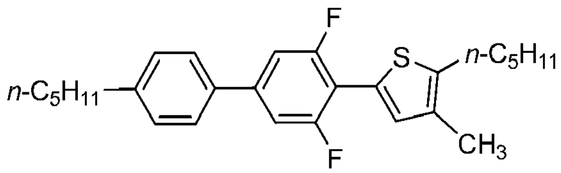

S-3-9-4a

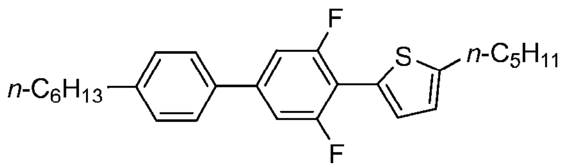

S-3-9-5

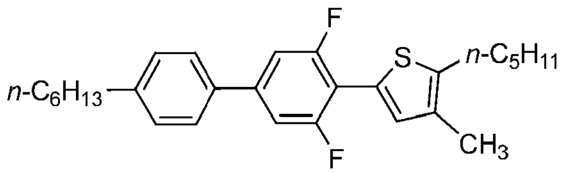

S-3-9-5a

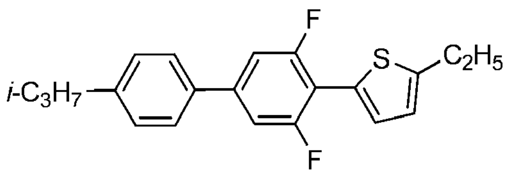

S-3-9-6

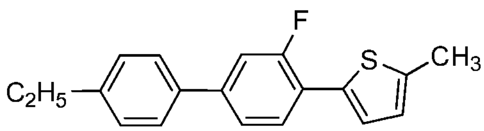

S-3-9-7

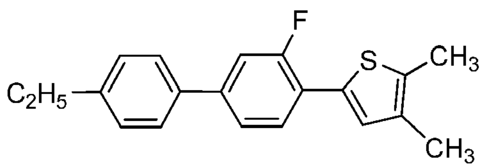

S-3-9-7a

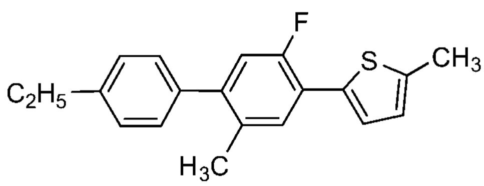

S-3-9-7b

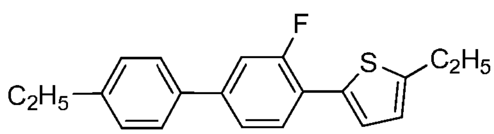

S-3-9-8

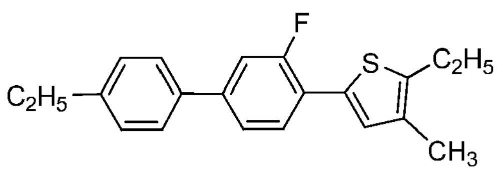

S-3-9-8a

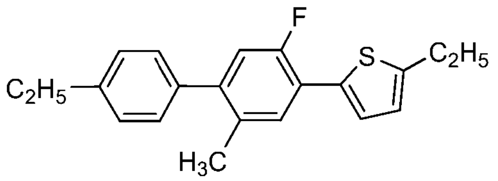

S-3-9-8b

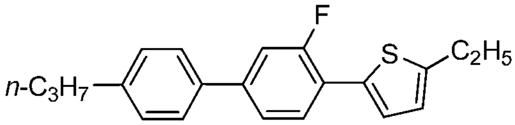

S-3-9-9

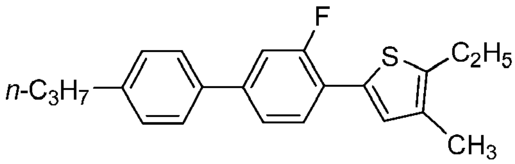

S-3-9-9a

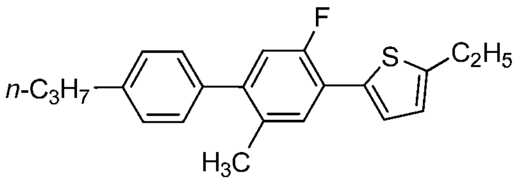

S-3-9-9b

As a further possibility, the following compounds of Formula S can be used:

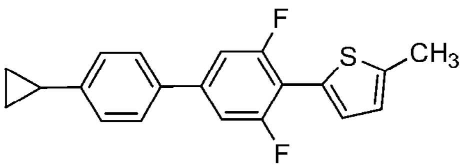

S-3-22-1

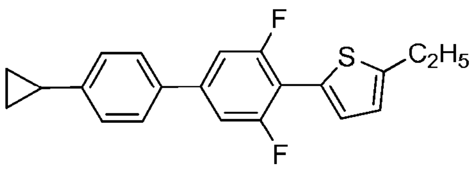

S-3-22-2

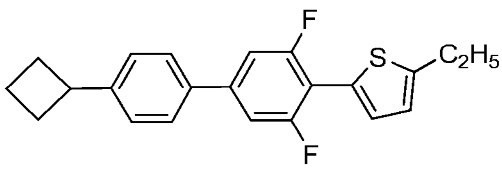

S-3-22-3

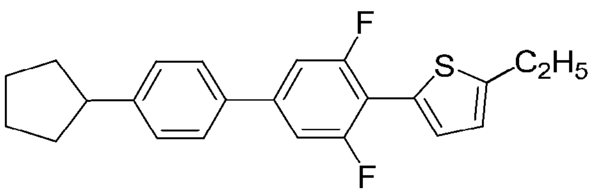

S-3-22-4

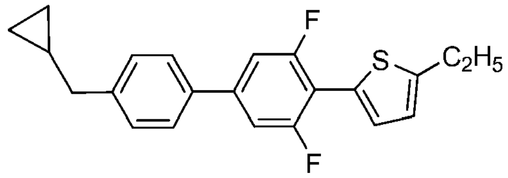

S-3-22-5

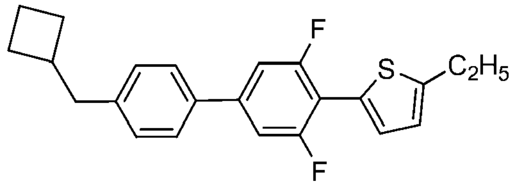

S-3-22-6

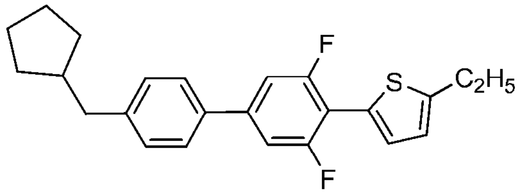

S-3-22-7

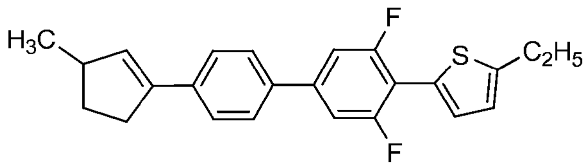

S-3-22-8

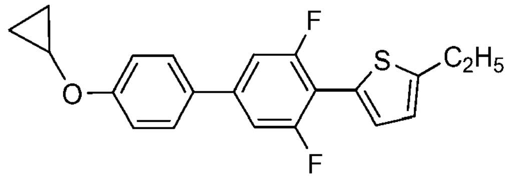

S-3-22-9

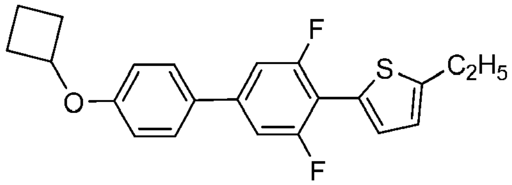

S-3-22-10

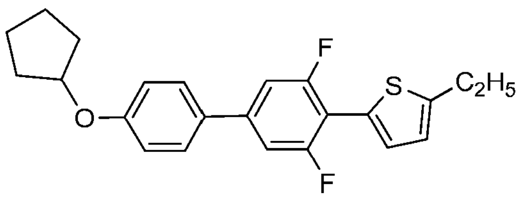

S-3-22-11

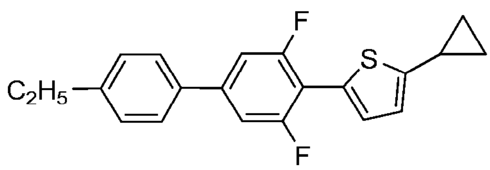

S-3-22-12

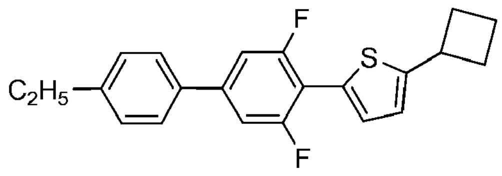

S-3-22-13

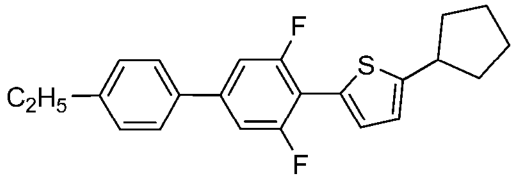

S-3-22-14

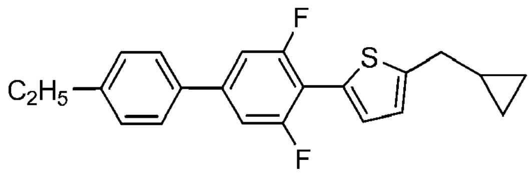

S-3-22-15

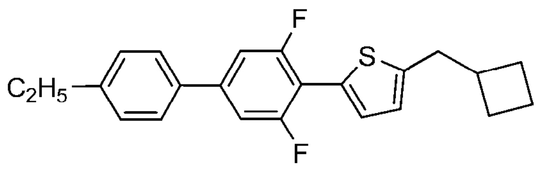

S-3-22-16

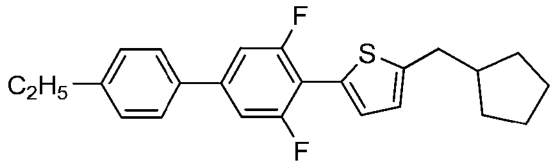

S-3-22-17

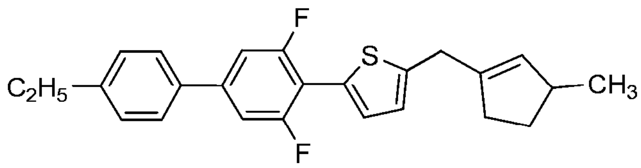

S-3-22-18

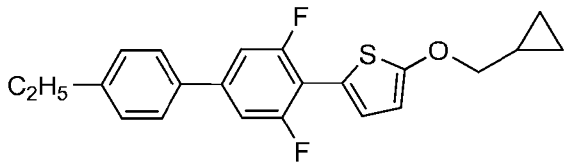

S-3-22-19

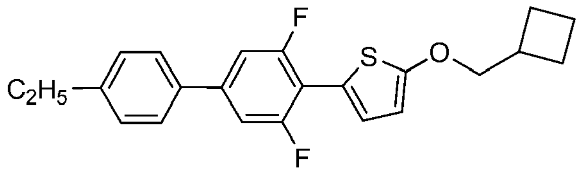

S-3-22-20

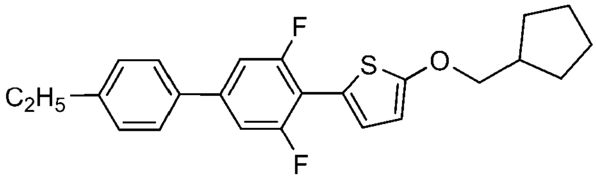

S-3-22-21

As a further possibility, the following compounds of Formula S can be used:

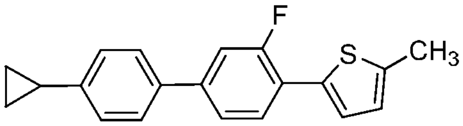

S-3-23-1

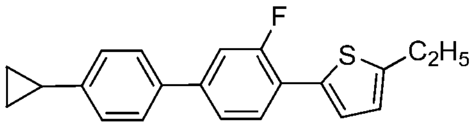

S-3-23-2

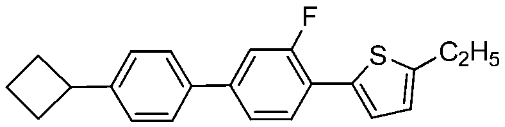

S-3-23-3

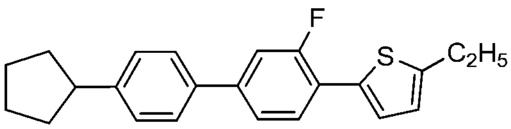

S-3-23-4

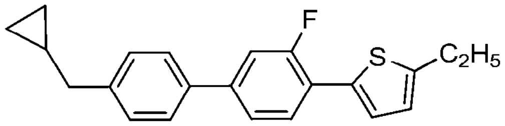

S-3-23-5

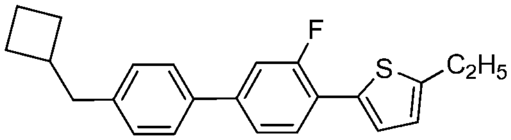

S-3-23-6

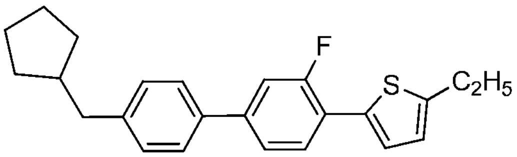

S-3-23-7

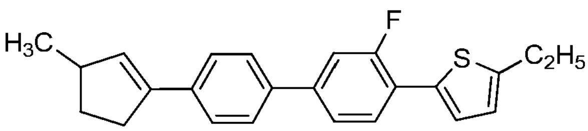

S-3-23-8

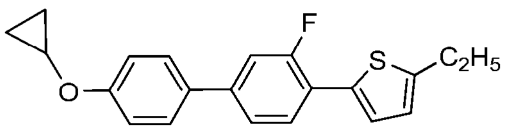

S-3-23-9

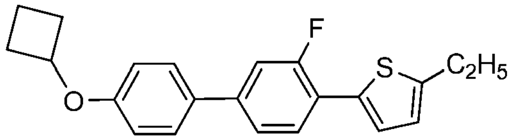

S-3-23-10

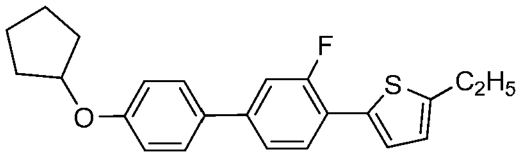

S-3-23-11

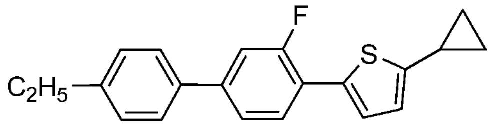

S-3-23-12

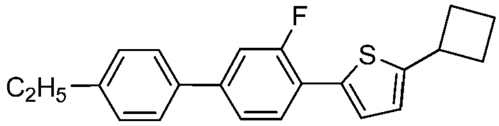

S-3-23-13

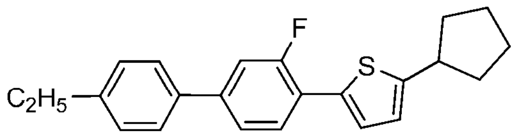

S-3-23-14

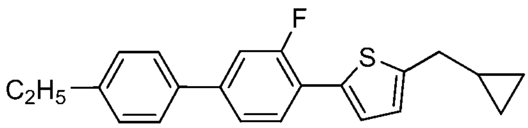

S-3-23-15

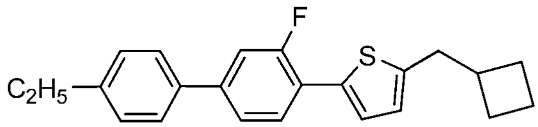

S-3-23-16

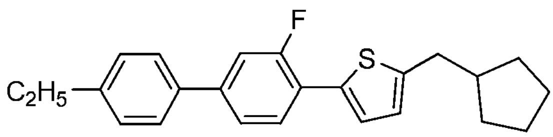

S-3-23-17

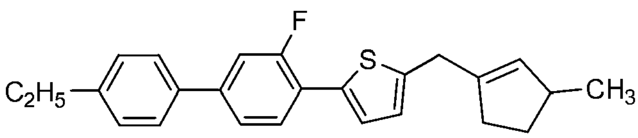

S-3-23-18

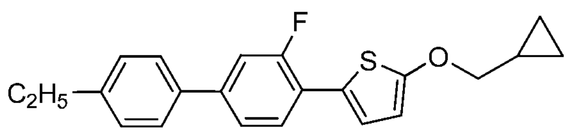

S-3-23-19

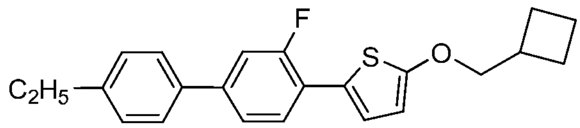

S-3-23-20

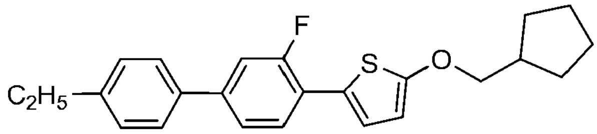

S-3-23-21

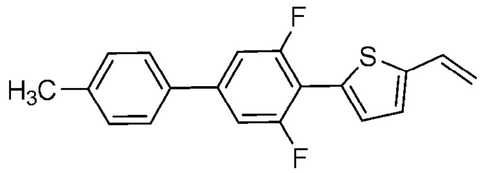

S-3-6-1

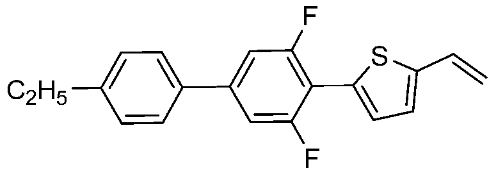

S-3-6-2

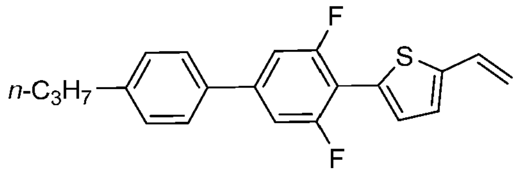

S-3-6-3

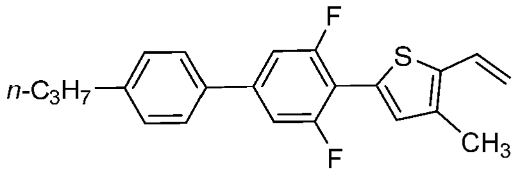

S-3-6-3a

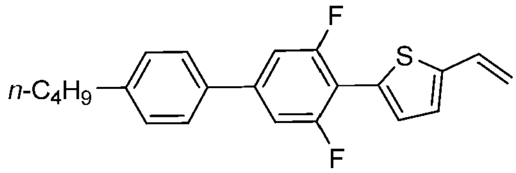

S-3-6-4

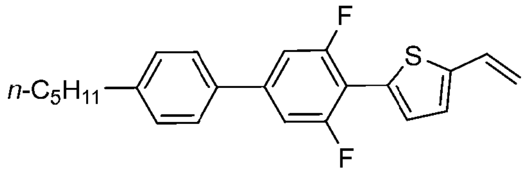

S-3-6-5

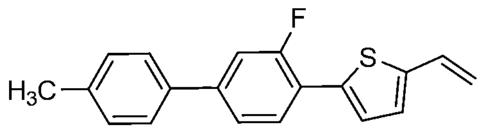

S-3-7-1

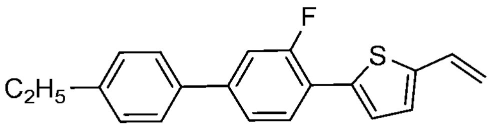

S-3-7-2

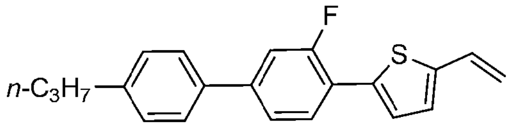

S-3-7-3

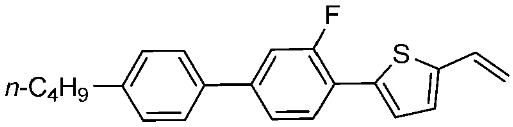

S-3-7-4

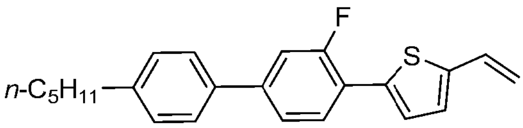

S-3-7-5

Very preferred are the compounds of formulae S-3-9-2 and S-3-5-1.

The proportion of the compounds of Formula S or its subformulae in the LC medium may range from 0 to 40%, very preferably from 1 to 30%, most preferably from 2 to 20% by weight.

The compounds of general Formula B may be preferably selected from the following subformulae:

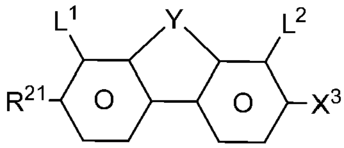

B1

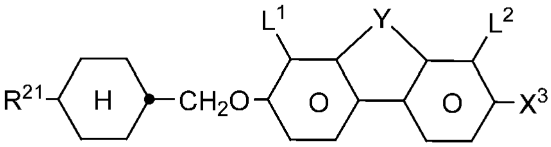

B2

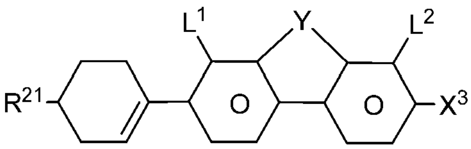

B3

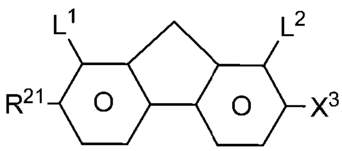

B4

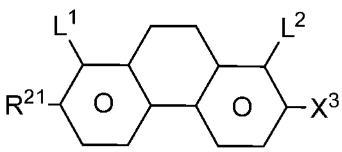

B5

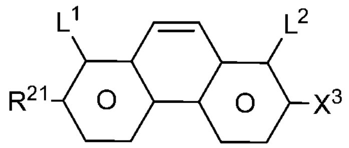

B6

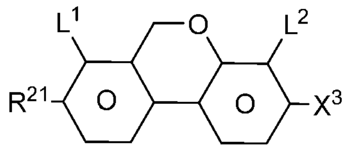

B7

wherein Y, $L^1$, $L^2$, $R^{21}$ and $X^3$ have the meanings given in the Formula B.

Preferred compounds of the Formula B3 are selected from the following subformulae:

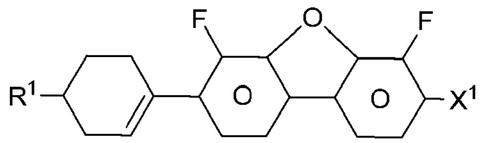

B3-1

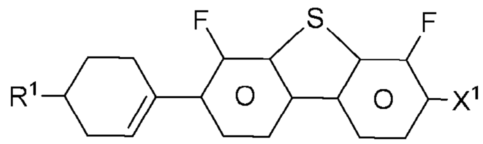

B3-2

wherein $R^1$ has one of the meanings given in the Formula B3 and preferably denotes straight-chain alkyl having 1 to 6 C atoms, very preferably methyl, ethyl, propyl, butyl, pentyl or hexyl, more preferably ethyl or propyl, most preferably propyl, and $X^1$ has one of the meanings given in the Formula B3 and preferably denotes $CF_3$, $CHF_2$, $OCHF_2$ or $OCF_3$.

Preferred compounds of the Formula B3 are selected from the following subformulae:

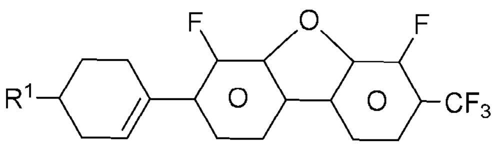

B3-1-1

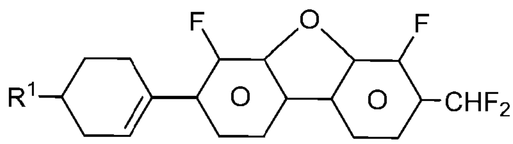

B3-1-2

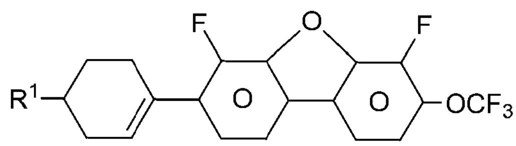

B3-1-3

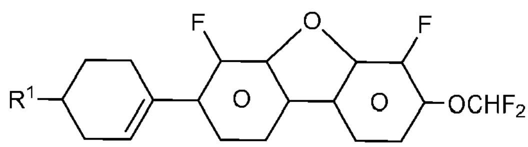

B3-1-4

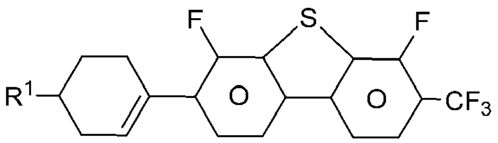

B3-2-1

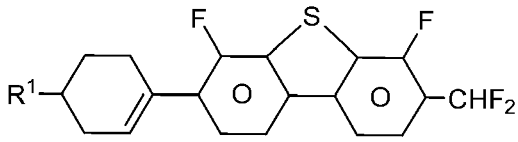

B3-2-2

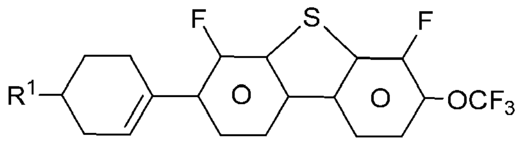

B3-2-3

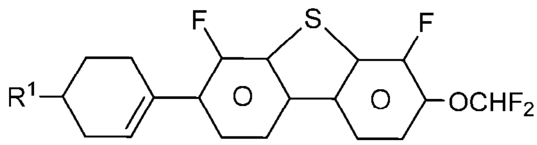

B3-2-4

wherein $R^1$ has one of the meanings given in the Formula B3 and preferably denotes straight-chain alkyl having 1 to 6 C atoms, very preferably methyl, ethyl, propyl, butyl, pentyl or hexyl, more preferably ethyl or propyl, most preferably propyl.

Most preferred are compounds of the Formulae B3-1-1 and B3-2-2.

In a preferred embodiment, the LC medium contains one or more compounds of the Formula B or its subformulae B1, B2, B3, B1-1, B1-2, B2-1, B2-2, B2-3, B3-1, B3-2, B3-1-1, B3-1-2, B3-2-1 and B3-2-2 wherein the dibenzofuran or dibenzothiophene group is substituted by a methyl or methoxy group, preferably by a methyl group, preferably in p-position to the substituent F, very preferably in p-position to the substituent F (i.e. in m-position to the terminal group $R^2$ or $X^1$).

The proportion of the compounds of the Formula B3 or its subformulae in the LC medium is preferably from 1 to 20%, very preferably from 1 to 10% by weight.

Preferably, the LC medium contains 1, 2 or 3 compounds of the Formula B3 or its subformulae.

Preferably, the total proportion of compounds of the Formula B or their subformulae in the LC medium is from 2 to 25%, very preferably from 3 to 20% by weight.

The LC medium may additionally comprise one or more compounds selected from the following Formulae:

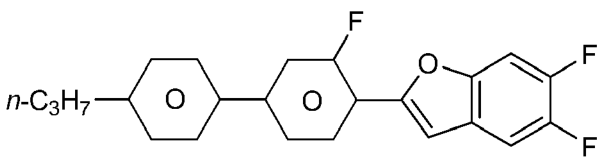

B4-1

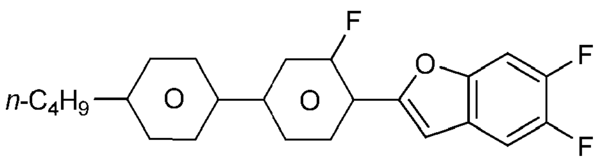

B4-2

In one preferred embodiment, the LC medium may additionally comprise one or more compounds selected from the following Formulae II and III:

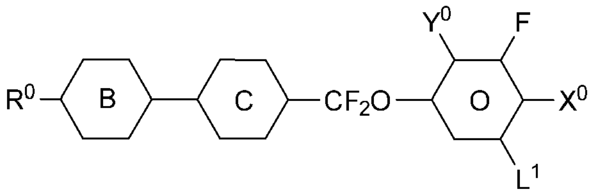

II

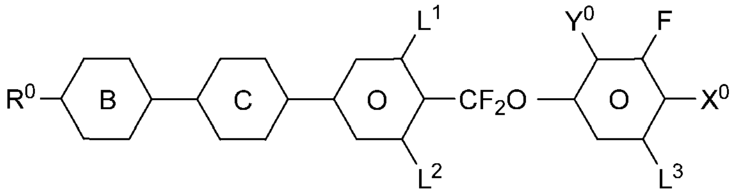

III

wherein the individual substituents, independently of each other and on each occurrence identically or differently, have the following meanings:

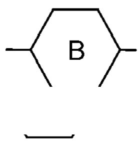

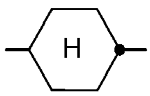 , 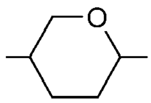 , 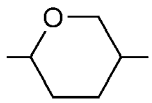 , 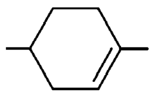 ,

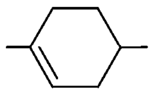 , 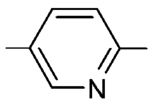 , 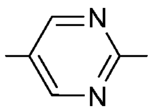 , 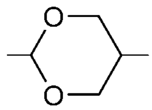 ,

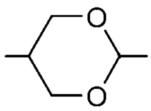 , 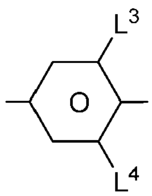 or 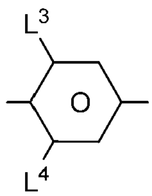

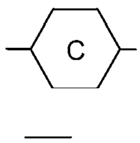

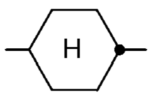 , 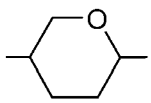 , 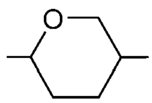 , 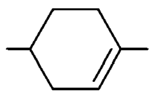 ,

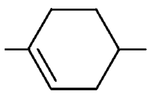 , 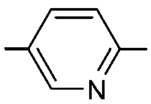 , 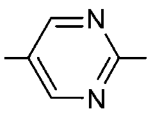 , 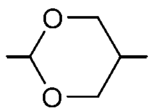 ,

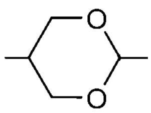 , 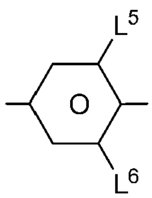 or 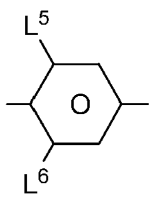

$R^0$ has one of the meanings given for $R^1$ in Formula I,

$X^0$ denotes a halogen atom, -CN, -SCN, -NCS or an alkyl or an alkoxy group having 1 to 6 C atoms or an alkenyl or an alkenyloxy group having 2 to 6 C atoms in which one or more H atoms has been substituted by a halogen atom, preferably F, $CF_3$, $CHF_2$, $OCHF_2$, or $OCF_3$,

$L^{1-8}$ each, independently of one another, denotes H, F or Cl, and

$Y^0$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$.

Preferred compounds of the Formula II and III are those wherein $Y^0$ is H.

Further preferred compounds of the Formula II and III are those wherein $R^0$ denotes alkyl having 1 to 6 C atoms or cycloalkyl having 3 to 6 C atoms, very preferably ethyl, propyl, butyl or pentyl and $X^0$ denotes F, $CF_3$, $CHF_2$, $OCHF_2$, or $OCF_3$, furthermore $OCF=CF_2$, $OCHFCF_3$ or Cl, very preferably F.

In a preferred embodiment, the LC medium comprises one or more compounds of the Formula II selected from the following subformulae:

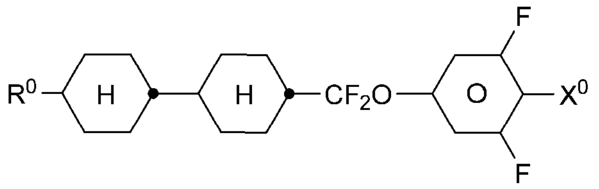

II-1

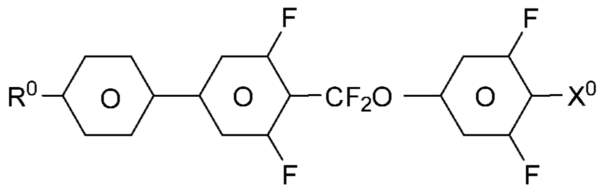

II-2

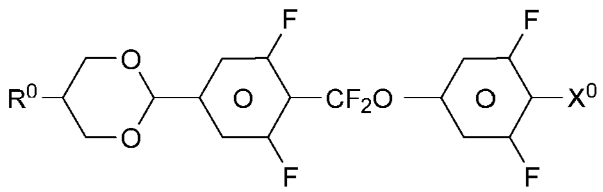

II-3

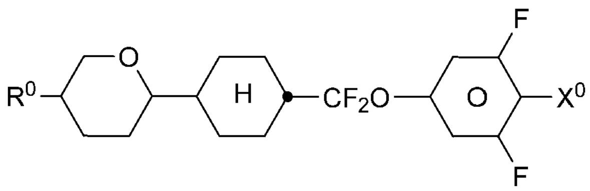

II-4

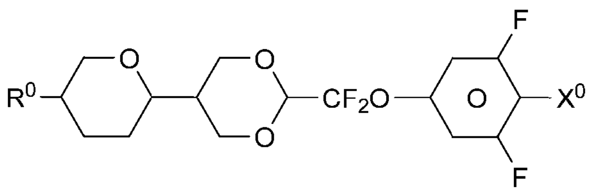

II-5

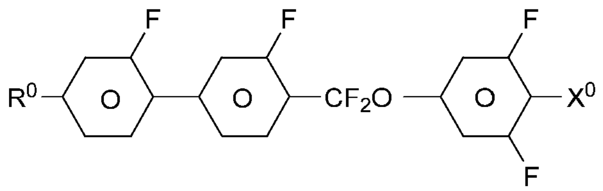

II-6

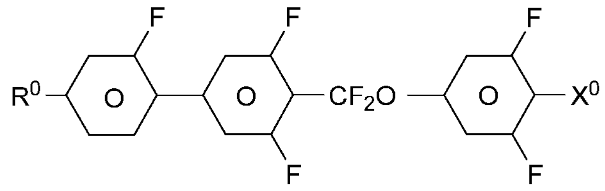

II-7

in which $R^0$ and $X^0$ have the meanings given in the Formula II.

Preferred compounds are those of the Formula II-1, II-2 and II-3, very preferred those of the Formula II-1 and II-2.

In the compounds of the Formulae II-1 to II-7 $R^0$ preferably denotes $R^0$ denotes alkyl having 1 to 6 C atoms, cycloalkyl having 3 to 6 C atoms or cycloalkenyl having 5 or 6 C atoms, very preferably ethyl, propyl, butyl or pentyl and $X^0$ denotes F, $CF_3$, $CHF_2$, $OCHF_2$, or $OCF_3$, furthermore $OCF=CF_2$, $OCHFCF_3$ or Cl, very preferably F.

In one embodiment, the LC medium contains one or more compounds of the Formula II or their subformulae as described above and below, wherein $Y^0$ is $CH_3$ . Very preferably, the LC medium according to this preferred embodiment comprises one or more compounds of the Formula II selected from the following subformulae:

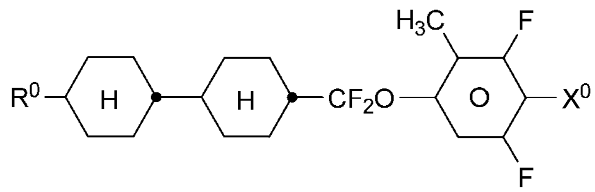

IIA-1

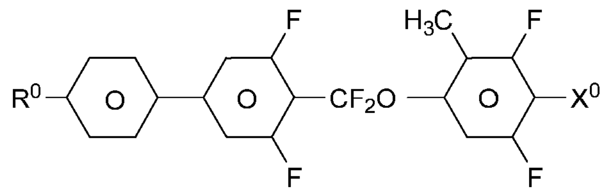

IIA-2

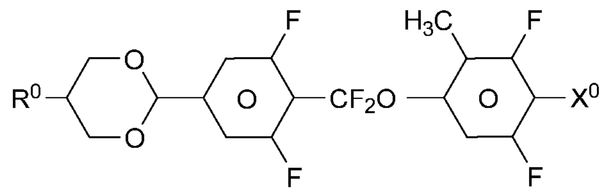

IIA-3

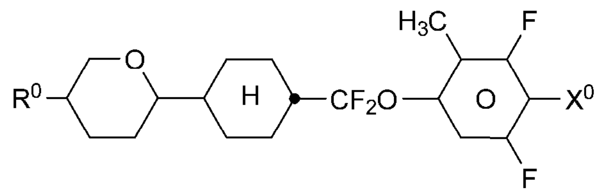

IIA-4

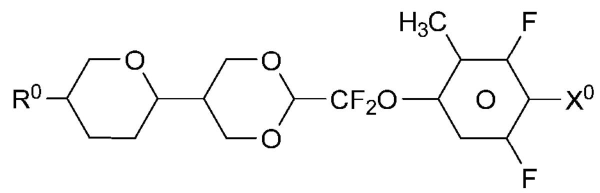

IIA-5

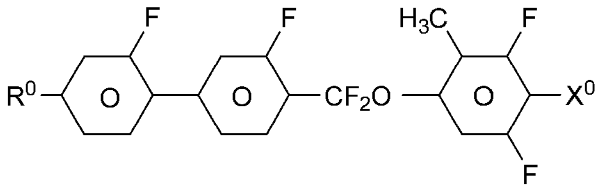

IIA-6

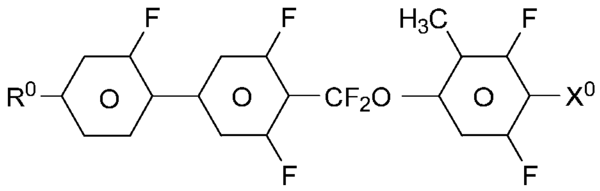

IIA-7

in which $R^0$ and $X^0$ have the meanings given in the Formula II.

Preferred compounds are those of the Formula IIA-1, IIA-2 and IIA-3, very preferred are those of Formula IIA-1 and IIA-2.

In the compounds of the Formulae IIA-1 to IIA-7 $R^0$ preferably denotes alkyl having 1 to 6 C atoms or cycloalkyl having 3 to 6 C atoms, very preferably ethyl, propyl, butyl or pentyl and $X^0$ denotes F, $CF_3$, $CHF_2$, $OCHF_2$, or $OCF_3$, furthermore $OCF=CF_2$, $OCHFCF_3$ or Cl, very preferably F.

Particularly preferred compounds of Formula II are selected from one or more of the following:

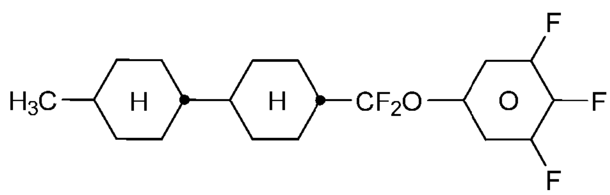

II-1-1

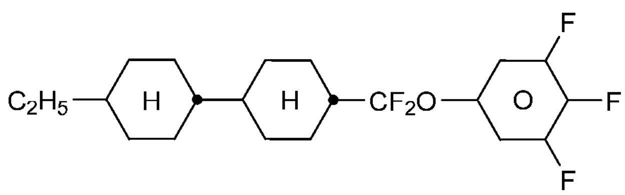

II-1-2

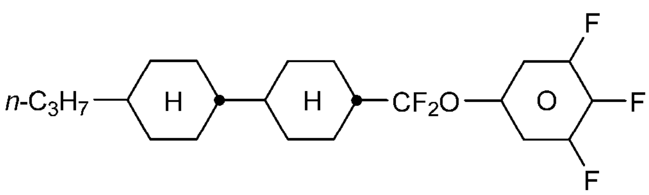

II-1-3

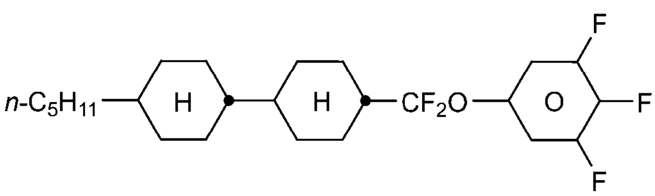

II-1-4

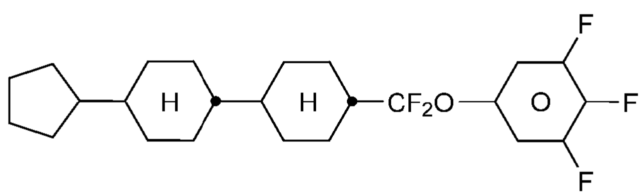

II-1-5

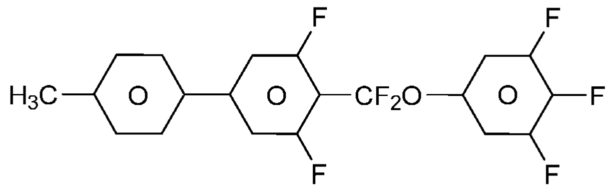

II-2-1

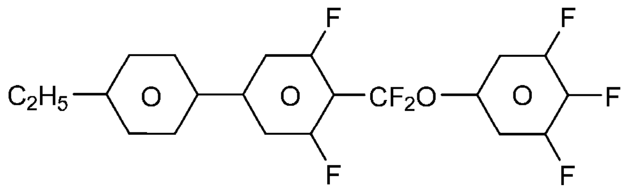

II-2-2

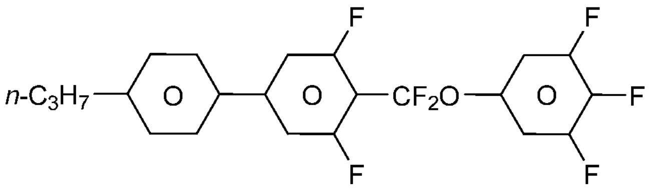

II-2-3

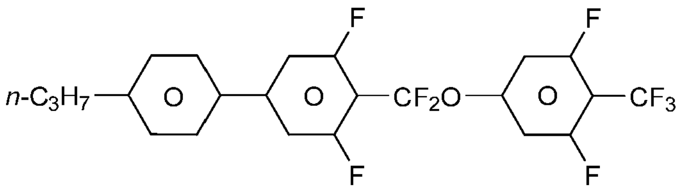

II-2-4

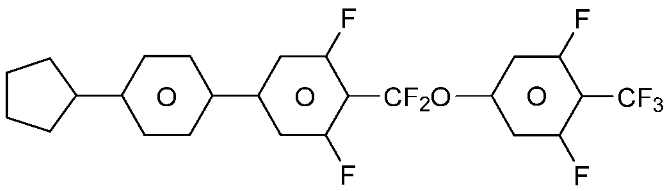

II-2-5

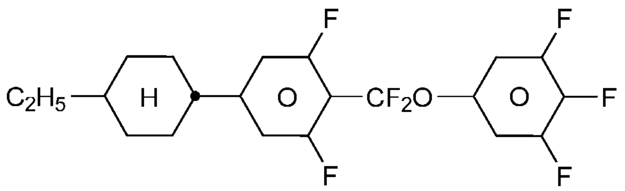

II-3-1

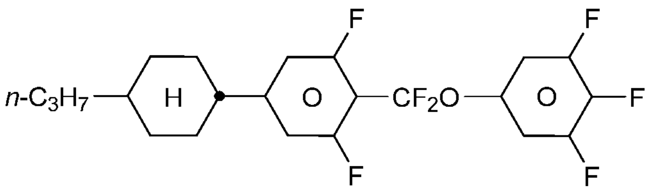

II-3-2

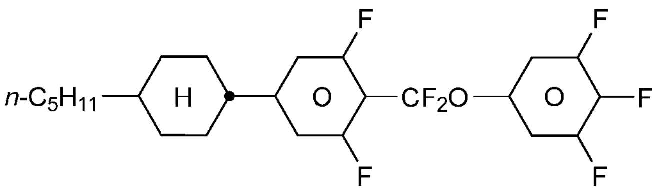

II-3-3

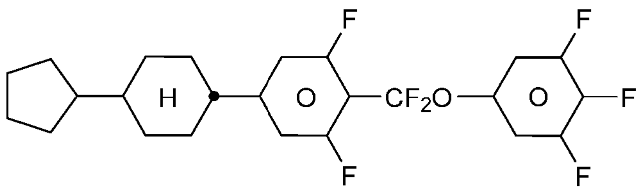

II-3-4

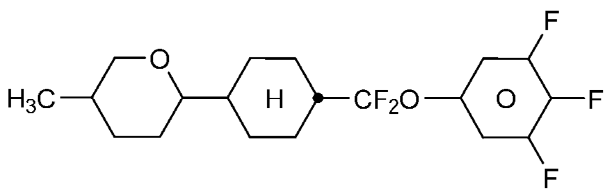

II-4-1

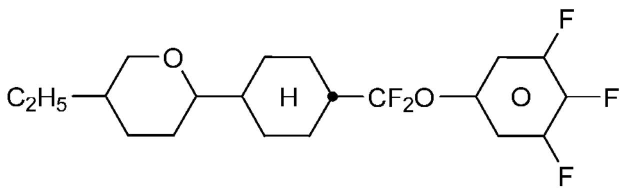

II-4-2

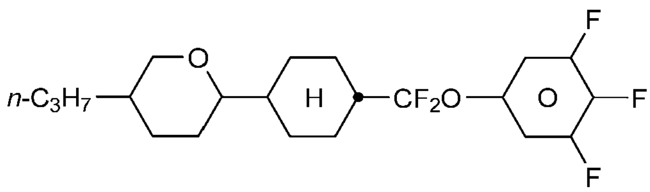

II-4-3

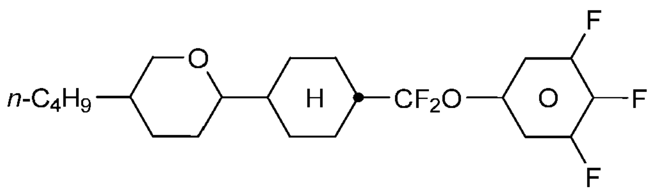

II-4-4

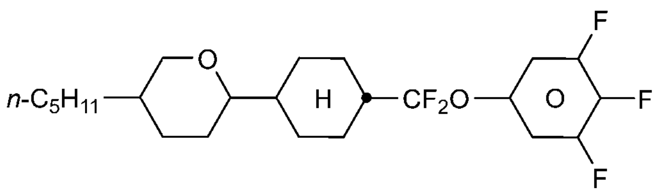

II-4-5

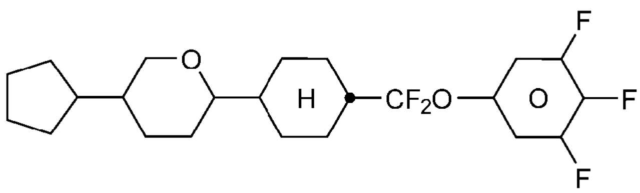

II-4-6

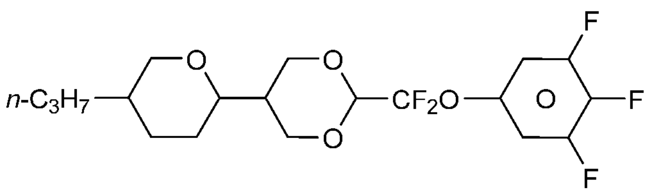

II-5-1

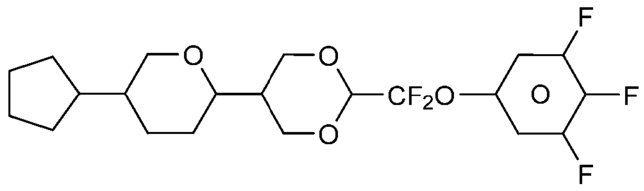

II-5-2

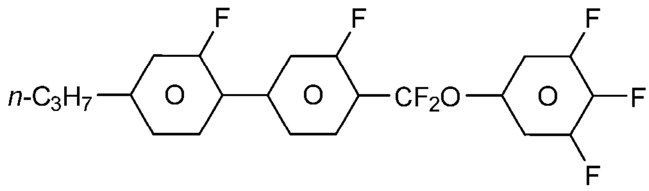

II-6-1

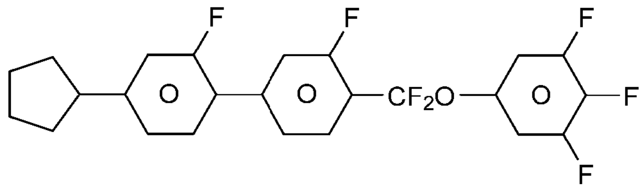

II-6-2

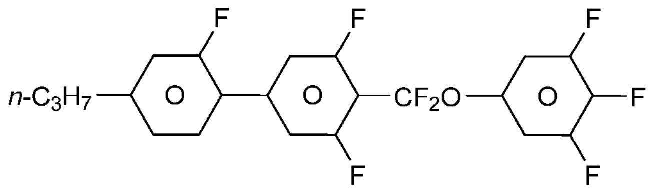

II-7-1

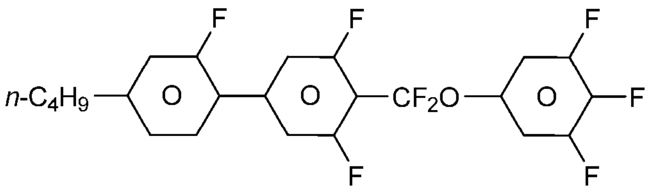

II-7-2

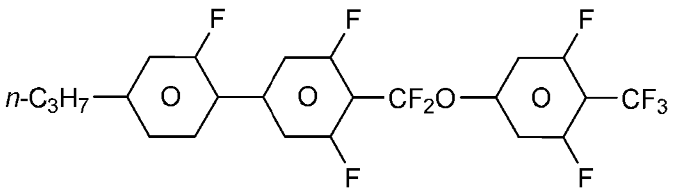

II-7-3

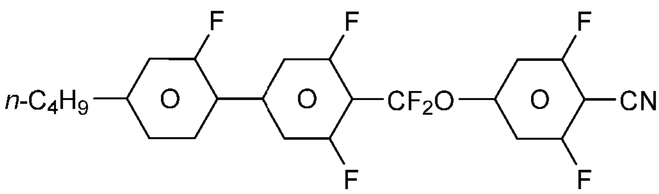

II-7-4

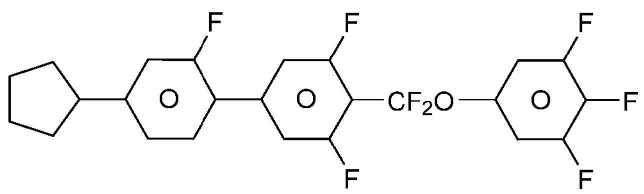

II-7-5

The proportion of the compounds of the Formula II in the LC medium is typically from 0 to 20%, very preferably from 1 to 15%, most preferably from 2 to 10% by weight.

In a further preferred embodiment, the LC medium comprises one or more compounds of the Formula III selected from the following subformulae:

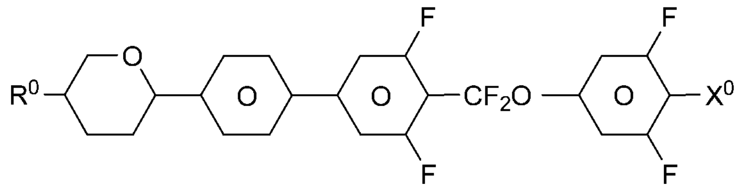

III-1

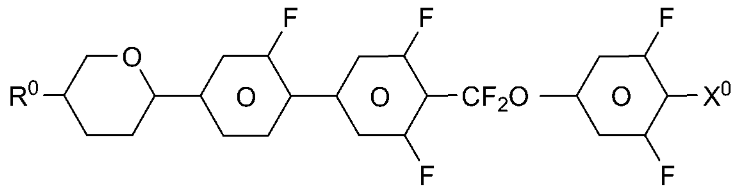

III-2

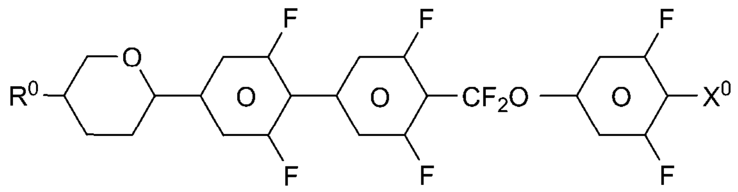

III-3

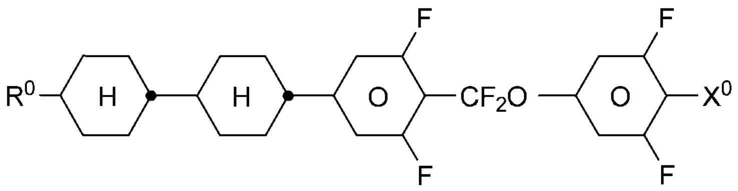

III-4

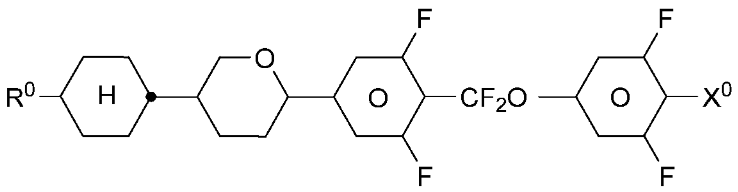

III-5

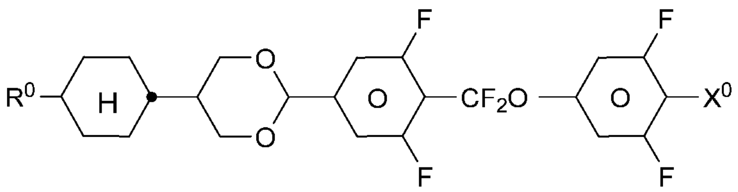

III-6

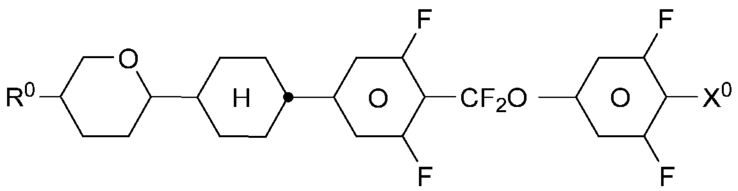

III-7

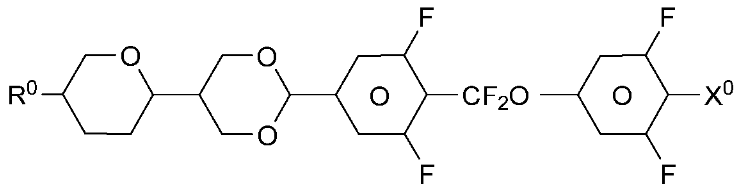

III-8

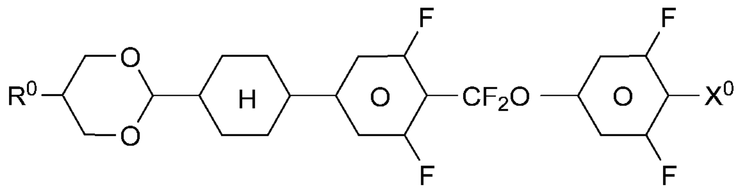

III-9

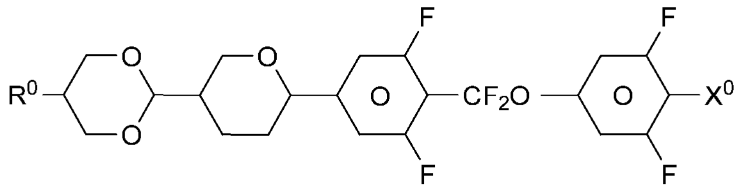

III-10

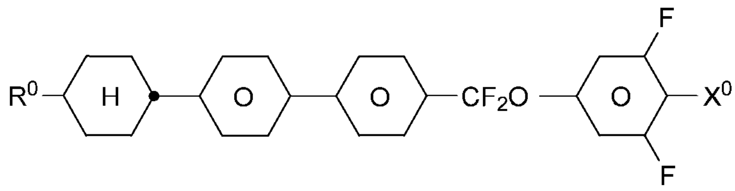

III-11

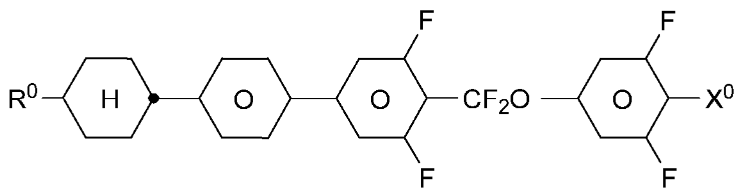

III-12

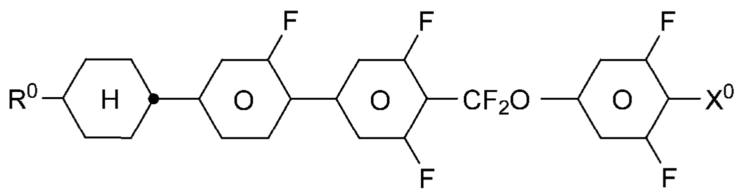

III-13

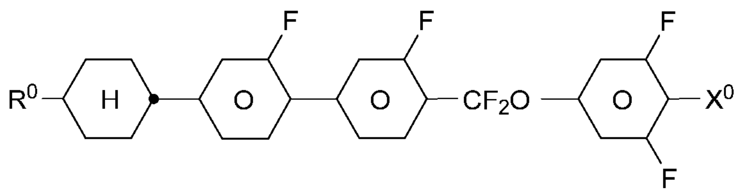

III-14

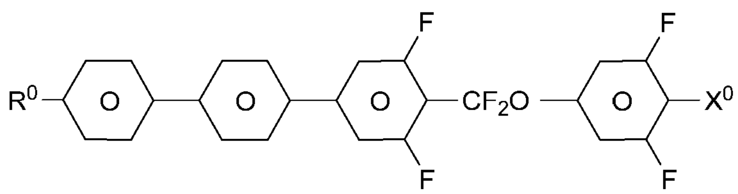

III-15

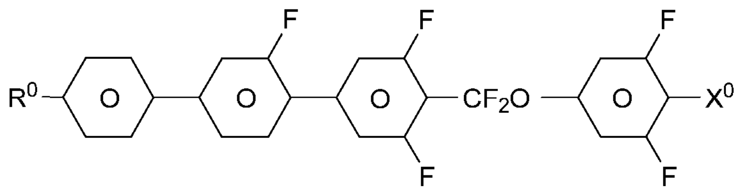

III-16

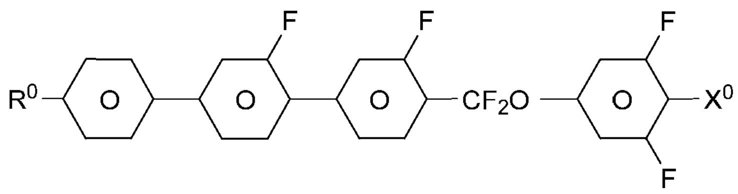

III-17

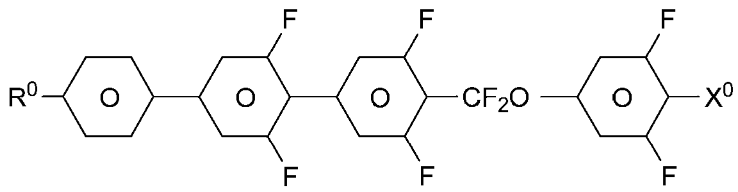

III-18

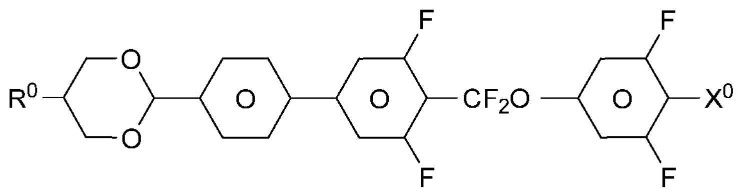

III-19

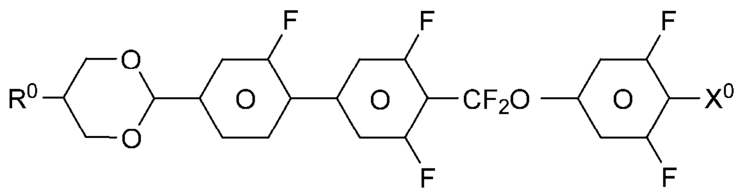

III-20

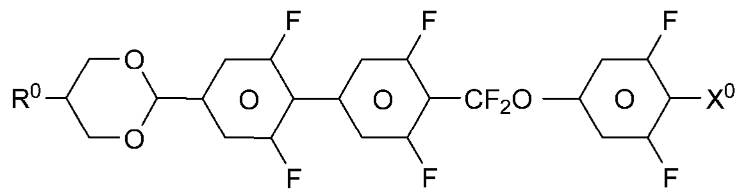

III-21

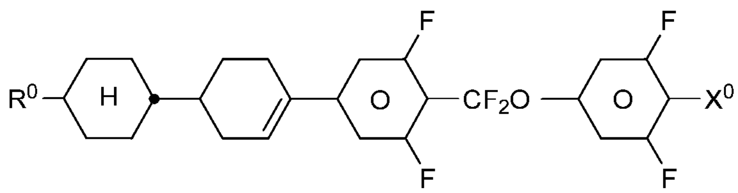

III-22

in which $R^0$ and $X^0$ have the meanings given in the Formula II.

Preferred compounds are those of the Formula III-1, III-4, III-6, III-16, III-19 and III-22.

In the compounds of the Formulae III-1 to III-22 $R^0$ denotes alkyl having 1 to 6 C atoms, cycloalkyl having 3 to 6 C atoms or cycloalkenyl having 5 or 6 C atoms, very preferably ethyl, propyl, butyl or pentyl and $X^0$ denotes F, $CF_3$, $CHF_2$, $OCHF_2$, or $OCF_3$, furthermore $OCF{=}CF_2$, $OCHFCF_3$ or Cl, very preferably F, and $Y^0$ preferably denotes H.

The LC medium may contain one or more compounds of the Formula III or their subformulae as described above and below wherein $Y^0$ is $CH_3$. Very preferably, the medium according to this preferred embodiment comprises one or more

compounds of the Formula III selected from the following subformulae:

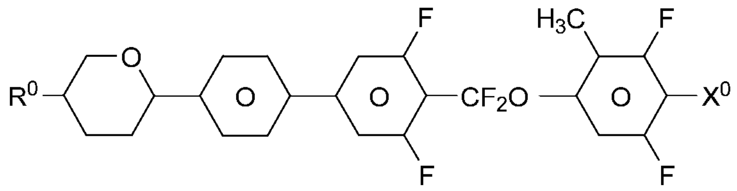

IIIA-1

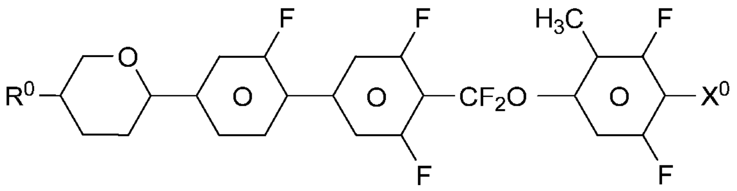

IIIA-2

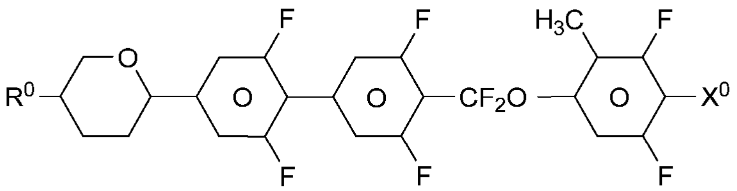

IIIA-3

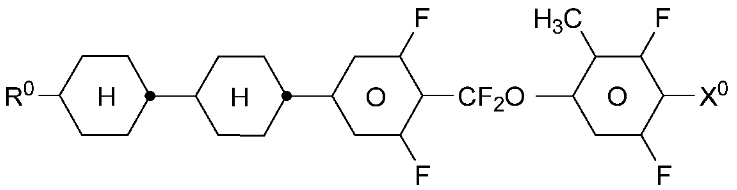

IIIA-4

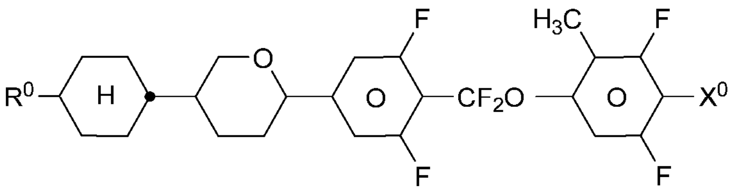

IIIA-5

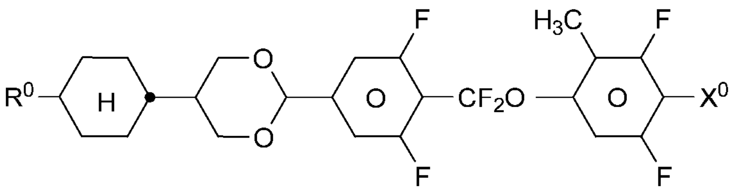

IIIA-6

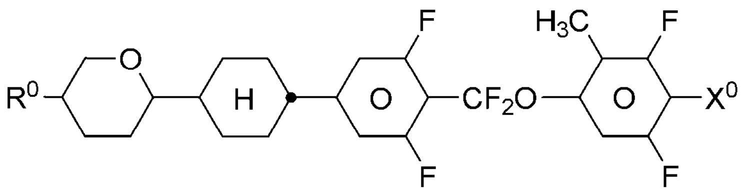

IIIA-7

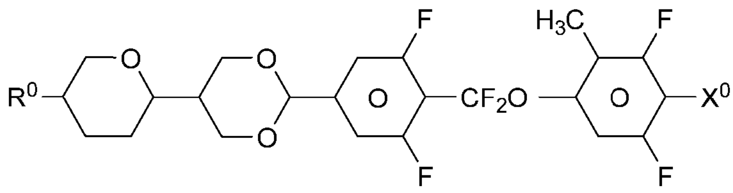

IIIA-8

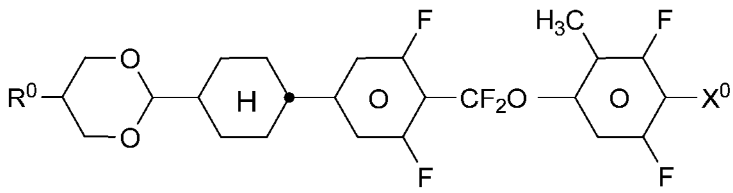

IIIA-9

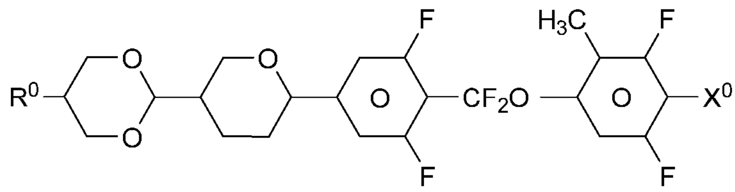

IIIA-10

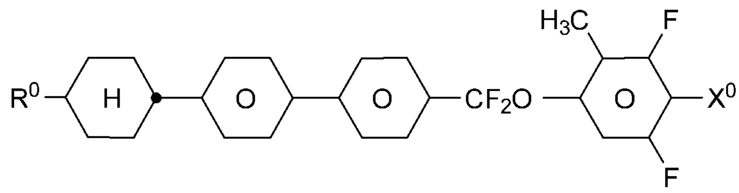

IIIA-11

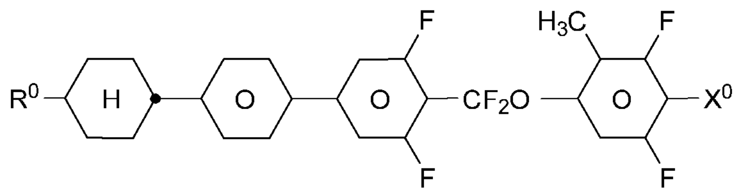

IIIA-12

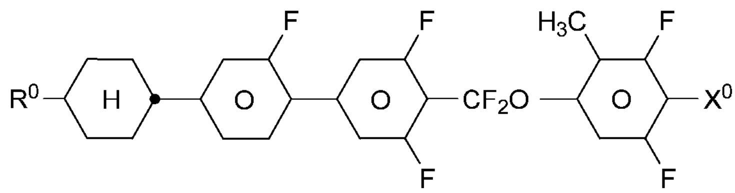

IIIA-13

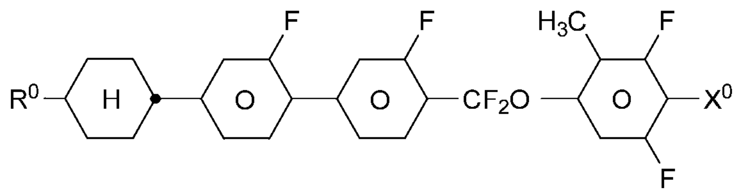

IIIA-14

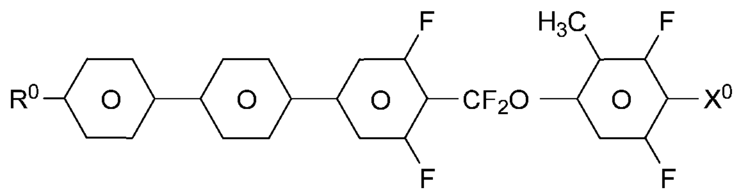

IIIA-15

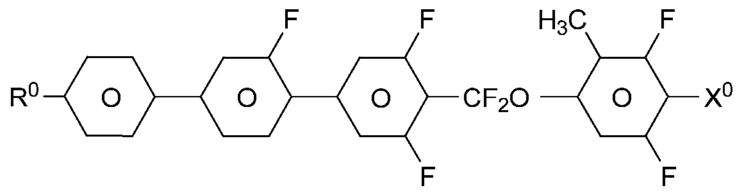

IIIA-16

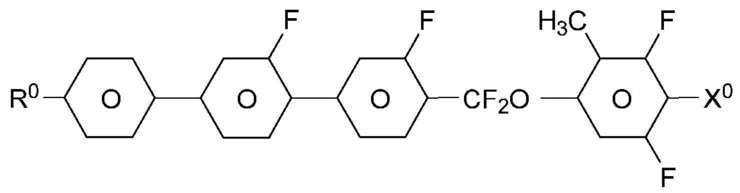

IIIA-17

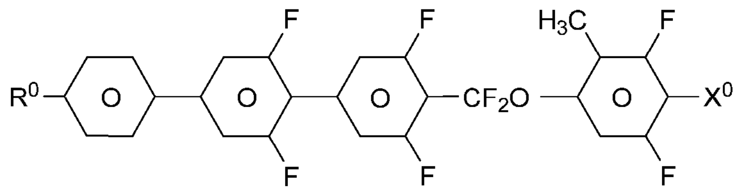

IIIA-18

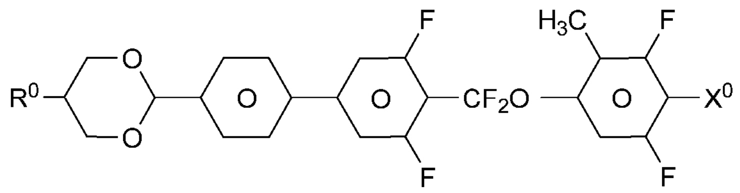

IIIA-19

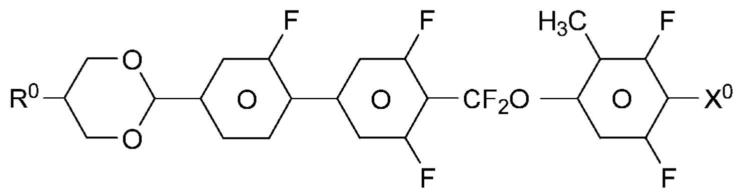

IIIA-20

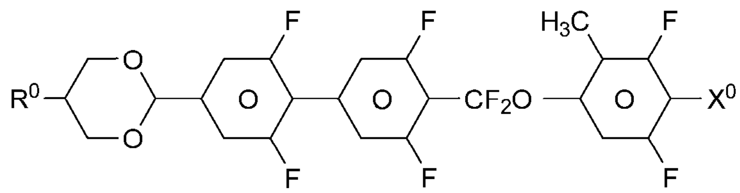

IIIA-21

in which $R^0$ and $X^0$ have the meanings given in the Formula III.

Preferred compounds are those of the Formula IIIA-1, IIIA-4, IIIA-6, IIIA-16, IIIA-19 and IIIA-20.

In the compounds of the Formulae IIIA-1 to IIIA-21 $R^0$ denotes alkyl having 1 to 6 C atoms, cycloalkyl having 3 to 6 C atoms or cycloalkenyl having 5 or 6 C atoms, very preferably ethyl, propyl, butyl or pentyl and $X^0$ denotes F, $CF_3$, $CHF_2$, $OCHF_2$, or $OCF_3$, furthermore $OCF=CF_2$, $OCHFCF_3$ or Cl, very preferably F.

Particularly preferred compounds of Formula III are selected from one or more of the following:

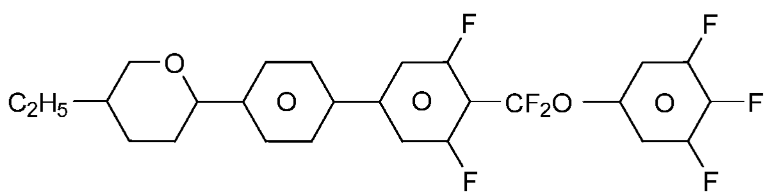

III-1-1

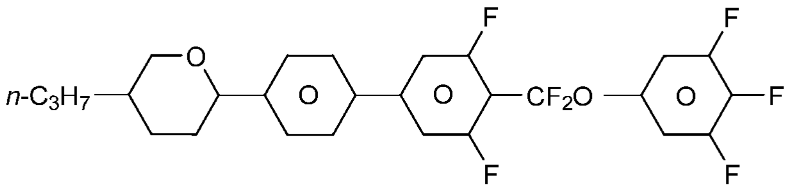

III-1-2

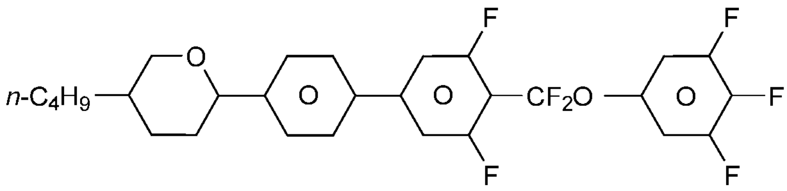

III-1-3

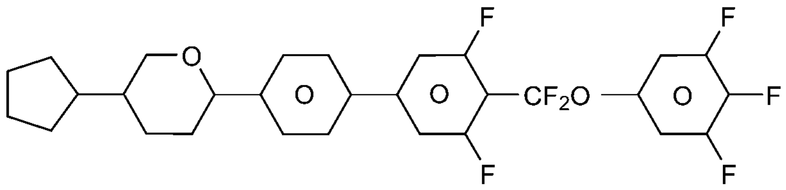

III-1-4

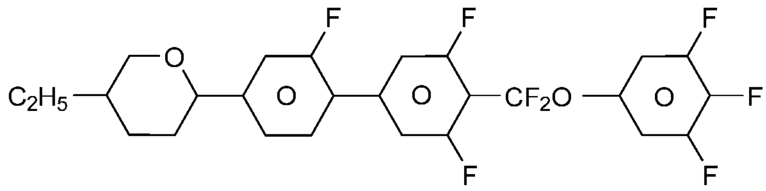

III-2-1

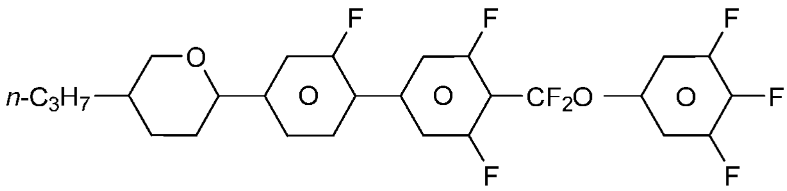

III-2-2

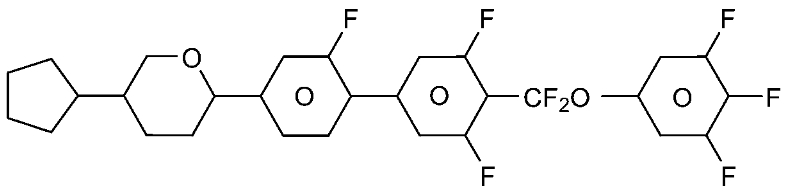

III-2-3

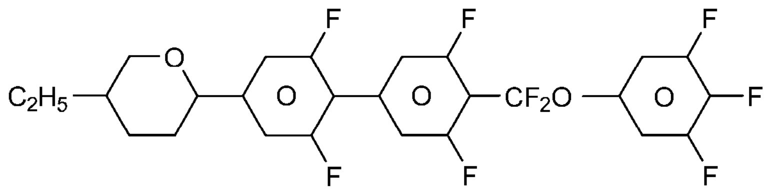

III-3-1

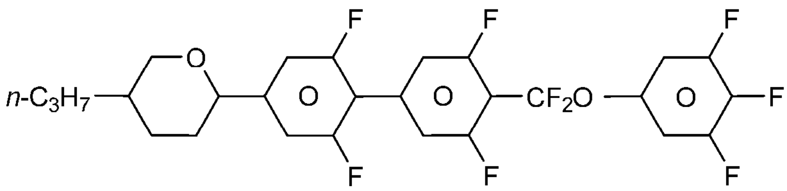

III-3-2

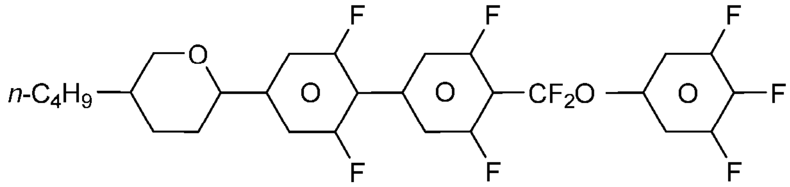

III-3-3

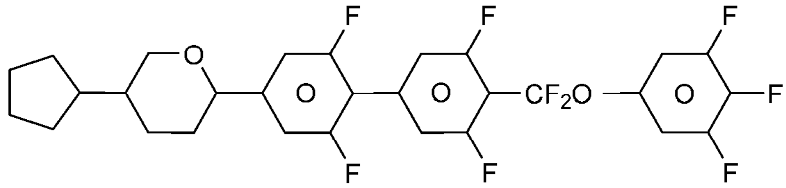

III-3-4

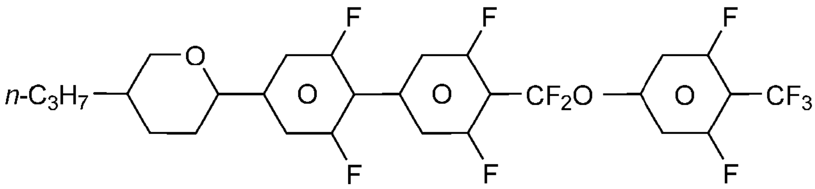

III-3-5

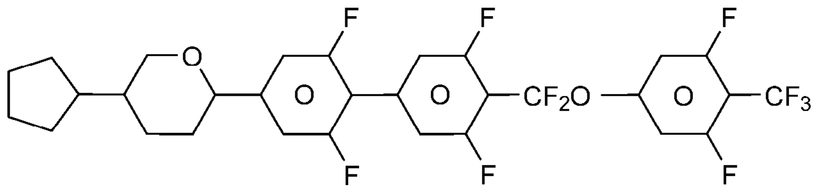

III-3-6

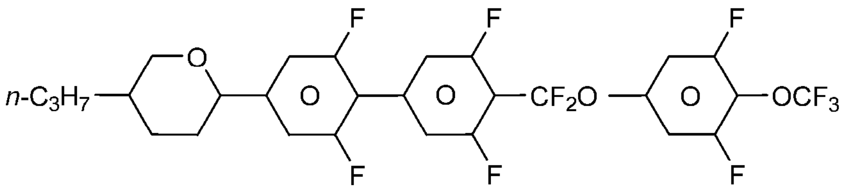

III-3-7

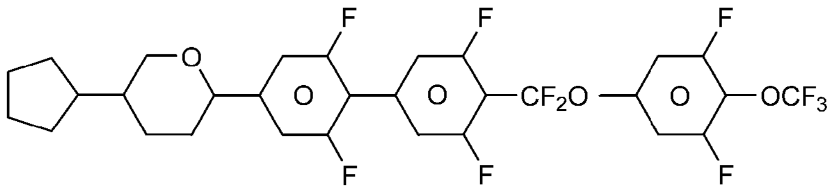

III-3-8

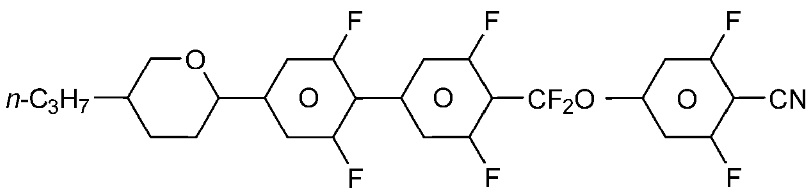

III-3-9

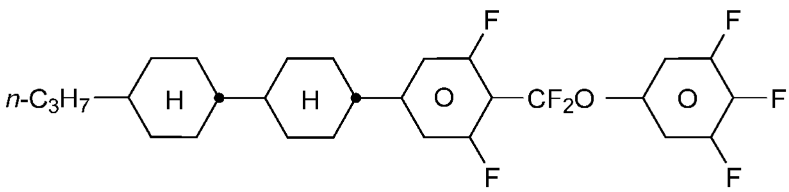

III-4-1

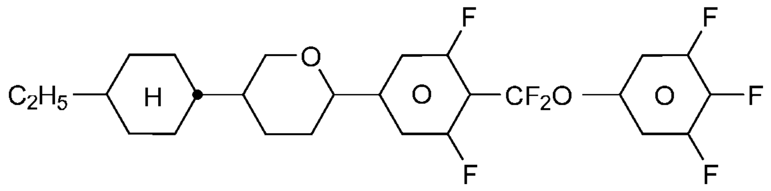

III-5-1

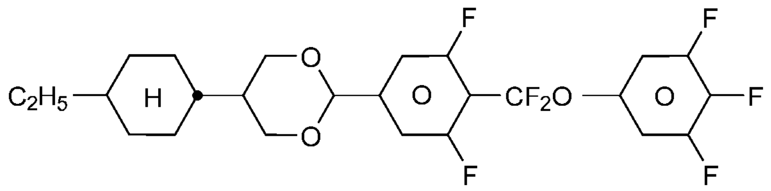

III-6-1

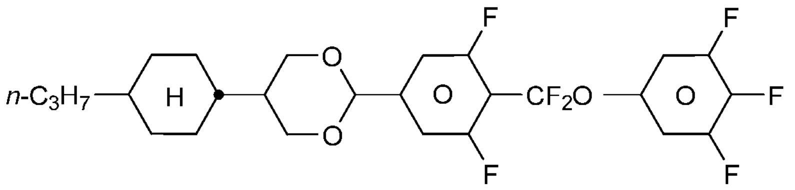

III-6-2

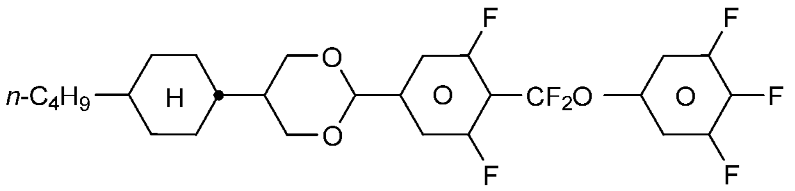

III-6-3

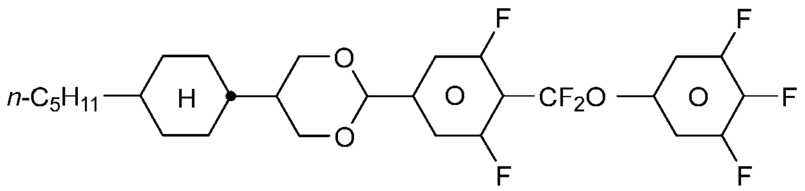

III-6-4

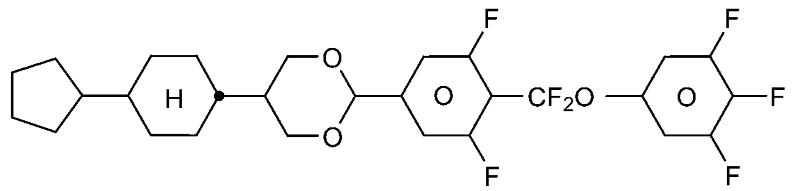

III-6-5

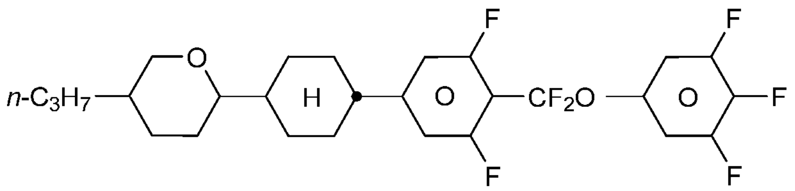

III-7-1

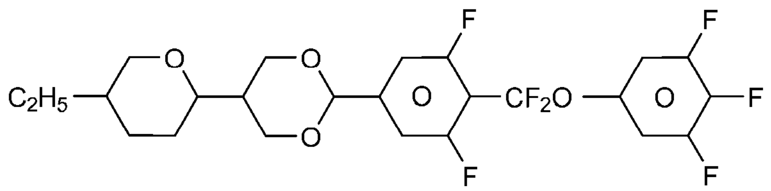

III-8-1

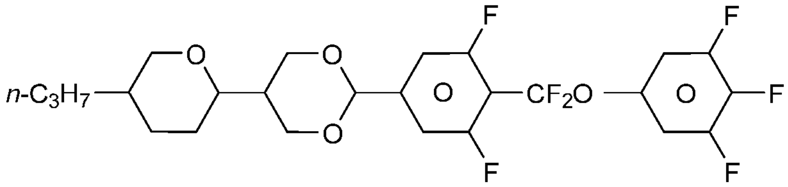
III-8-2

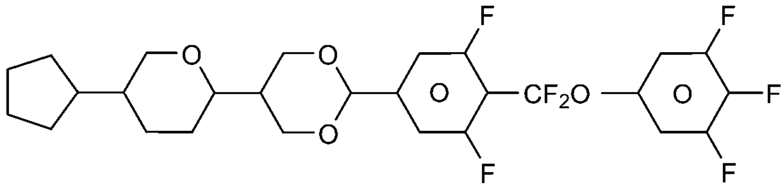
III-8-3

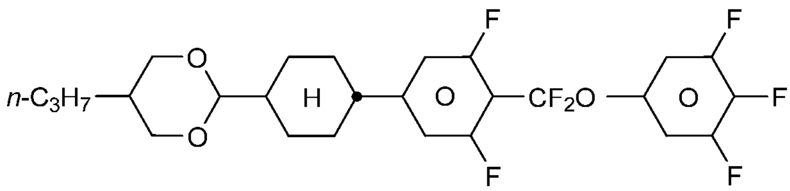
III-9-1

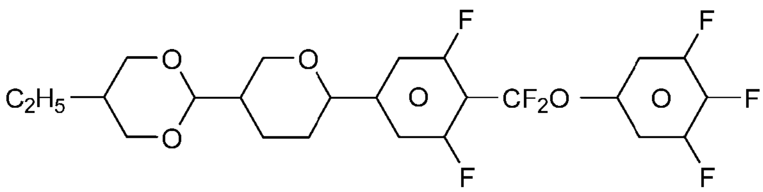
III-10-1

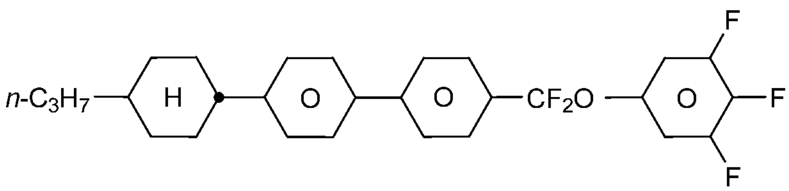
III-11-1

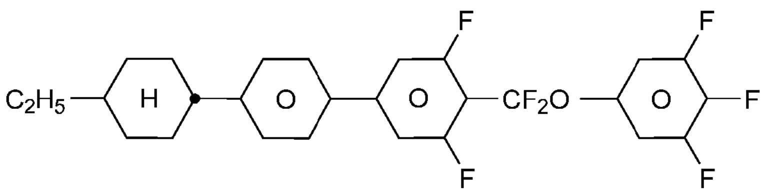
III-12-1

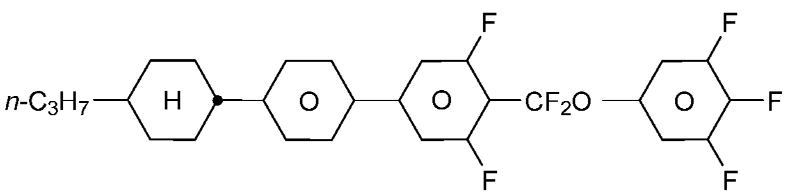
III-12-2

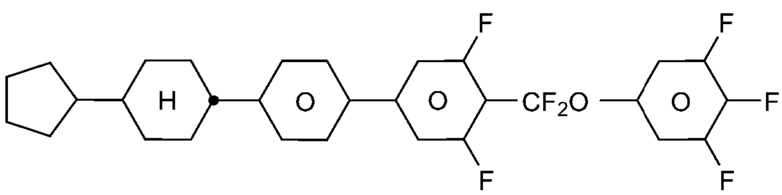
III-12-3

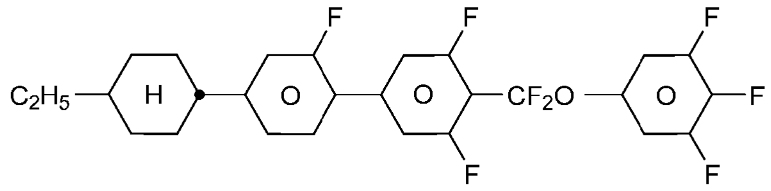

III-13-1

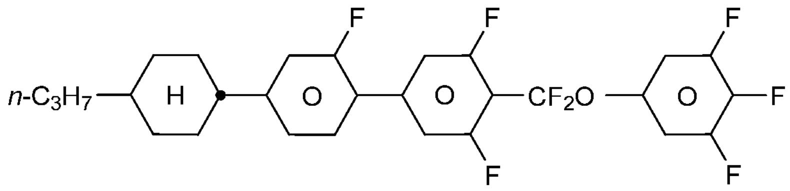

III-13-2

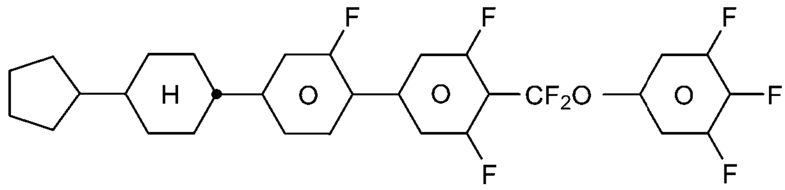

III-13-3

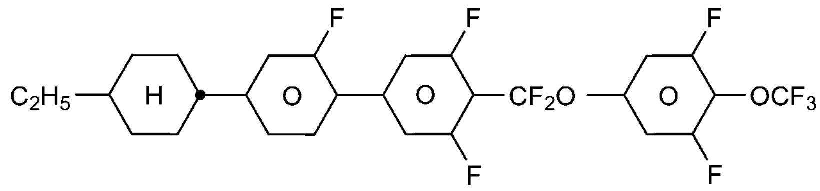

III-13-4

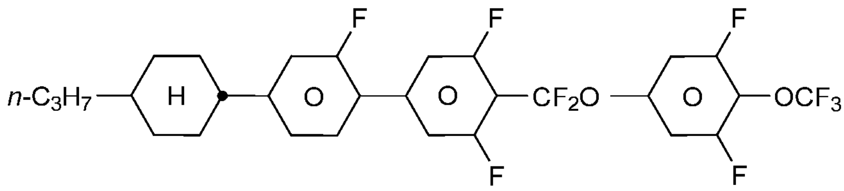

III-13-5

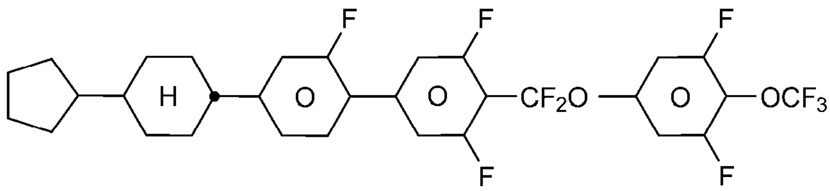

III-13-6

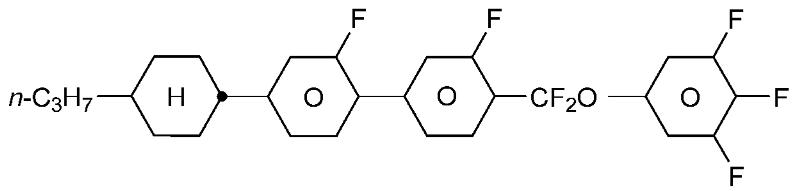

III-14-1

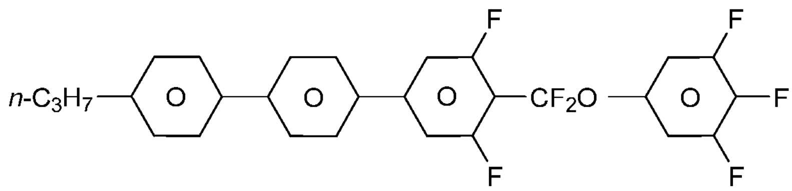

III-15-1

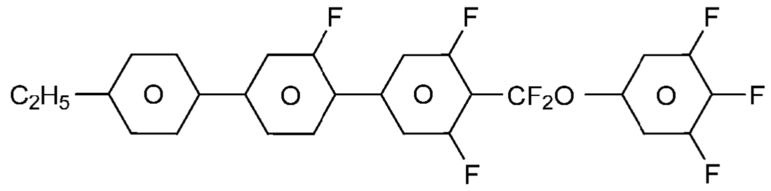

III-16-1

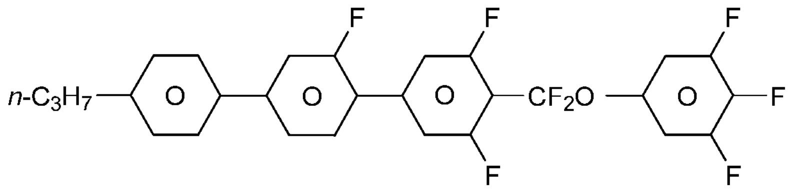

III-16-2

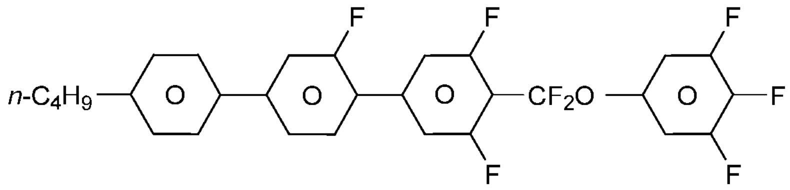

III-16-3

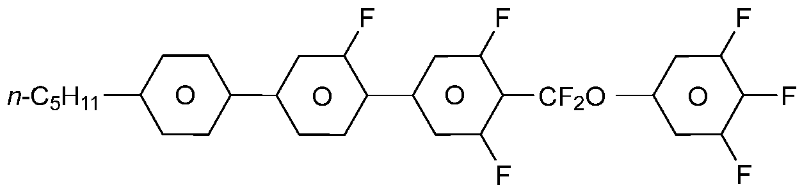

III-16-4

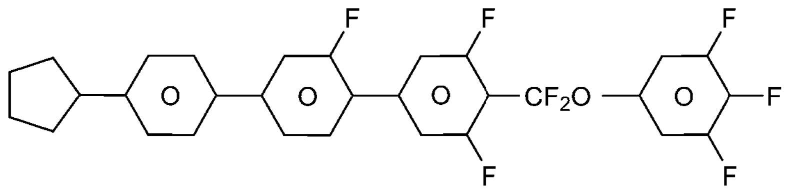

III-16-5

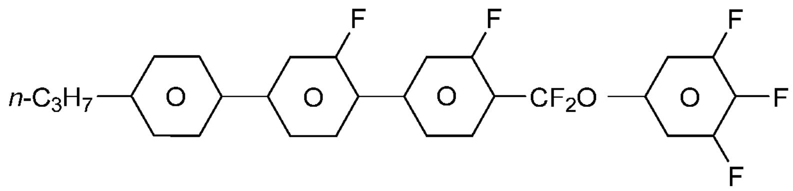

III-17-1

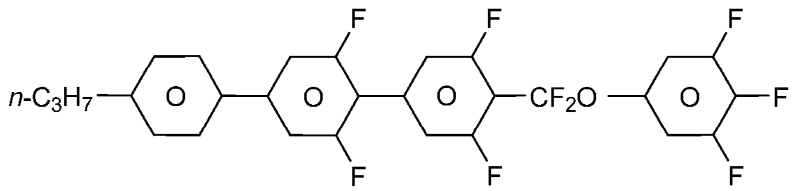

III-18-1

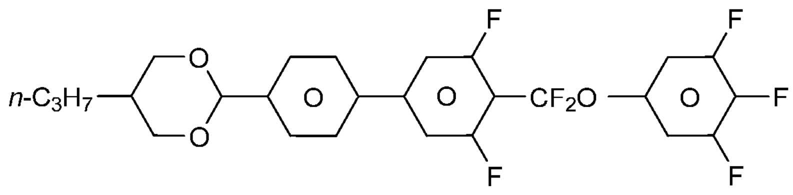

III-19-1

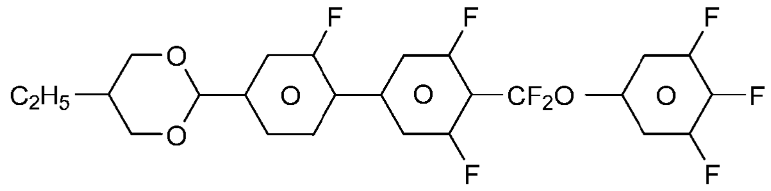

III-20-1

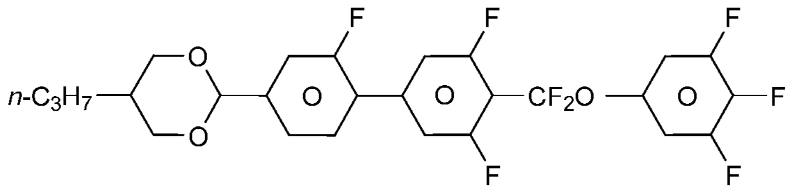

III-20-2

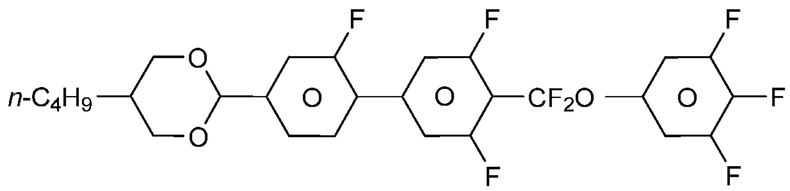

III-20-3

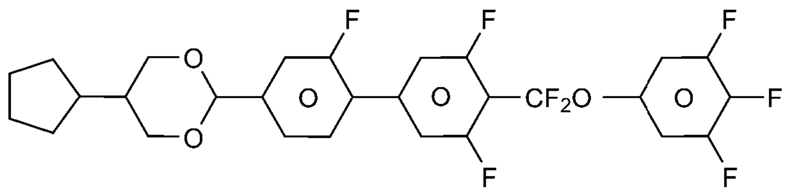

III-20-4

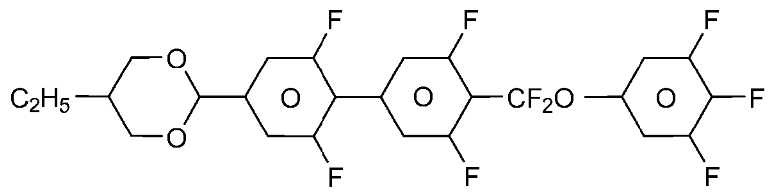

III-21-1

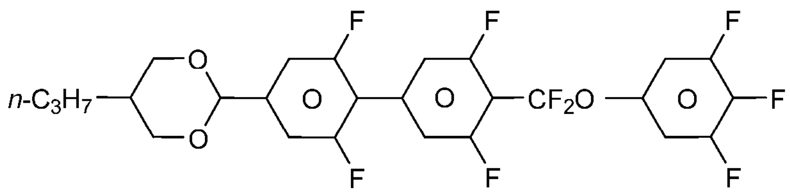

III-21-2

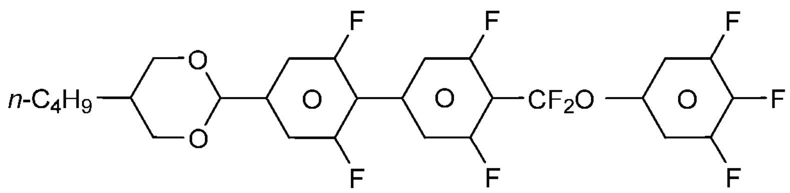

III-21-3

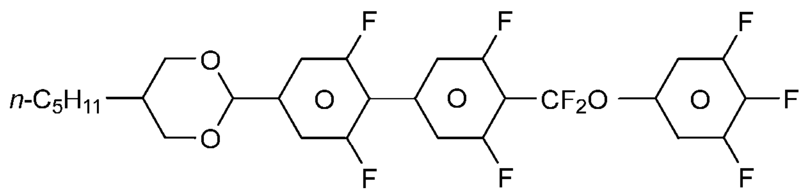

III-21-4

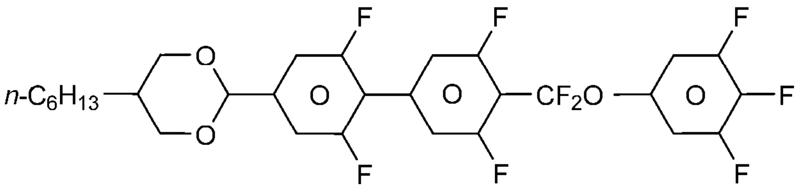

III-21-5

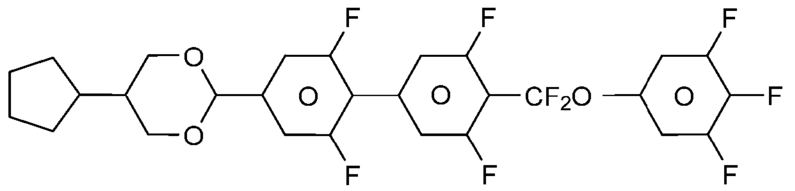

III-21-6

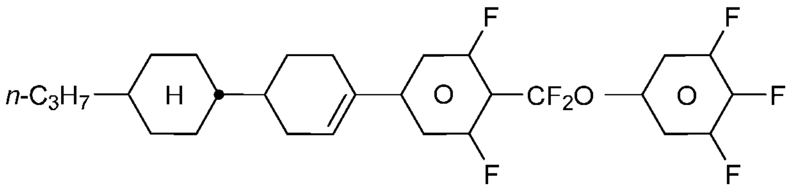

III-22-1

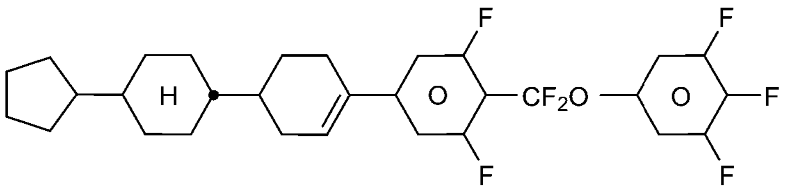

III-22-2

The proportion of the compounds of the Formula III in the LC medium is preferably from 1 to 50%, very preferably from 3 to 40%, most preferably from 5 to 30% by weight.

In a further preferred embodiment, the LC medium according to the invention comprises one or more compounds of the Formula XXa:

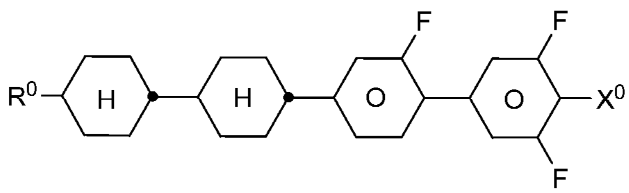

XXa

in which $R^0$ denotes alkyl having 1 to 6 C atoms, cycloalkyl having 3 to 6 C atoms or cycloalkenyl having 5 or 6 C atoms, very preferably ethyl, propyl, butyl or pentyl and $x^0$ denotes F, $CF_3$ , $CHF_2$, $OCHF_2$ or $OCF_3$, furthermore $OCF=CF_2$, $OCHFCF_3$ or Cl, very preferably F. $R^0$ preferably denotes straight-chain alkyl, in particular ethyl, n-propyl, n-butyl or n-pentyl and very particularly preferably n-propyl.

The compound(s) of the Formula XX, in particular of the Formula XXa, is (are) preferably employed in the LC media according to the invention in amounts of 0 to 15% by weight, particularly preferably 0 to 10% by weight.

Very preferably, the LC medium according to the invention comprises one or more compounds of the Formulae:

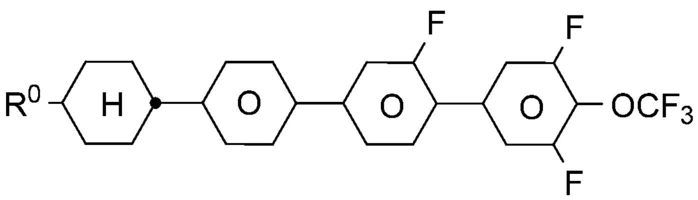

XXIa

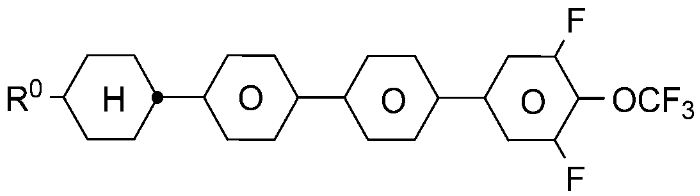

XXIb

in which $R^0$ denotes alkyl having 1 to 6 C atoms, cycloalkyl having 3 to 6 C atoms or cycloalkenyl having 5 or 6 C atoms, very preferably ethyl, propyl, butyl or pentyl . $R^0$ preferably denotes straight-chain alkyl, in particular ethyl, n-propyl, n-butyl or n-pentyl and very particularly preferably n-propyl.

The compound(s) of the Formula XXI, in particular of the Formula XXIa, is (are) preferably employed in the LC media according to the invention in amounts of 0 to 15% by weight, particularly preferably 0 to 10% by weight.

Further preferably, the LC medium according to the invention comprises one or more compounds of the Formula XXIIIa:

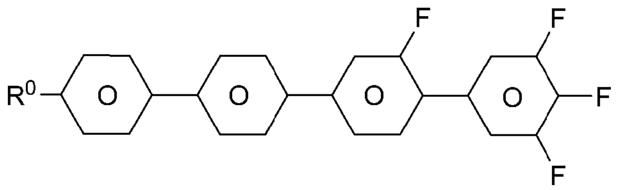

XXIIIa

in which $R^0$ denotes alkyl having 1 to 6 C atoms, cycloalkyl having 3 to 6 C atoms or cycloalkenyl having 5 or 6 C atoms. $R^0$ preferably denotes straight-chain alkyl, in particular ethyl, n-propyl, n-butyl or n-pentyl and very particularly preferably n-propyl or cycloalkyl, in particular cylclopentyl.

Preferred specific compounds of Formula XXIIIa include, in particular

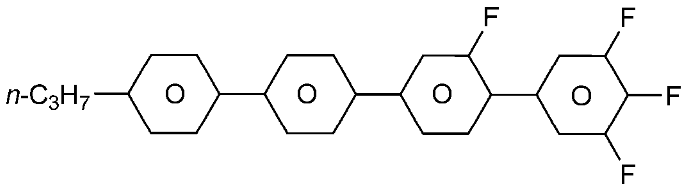

XXIIIa-1

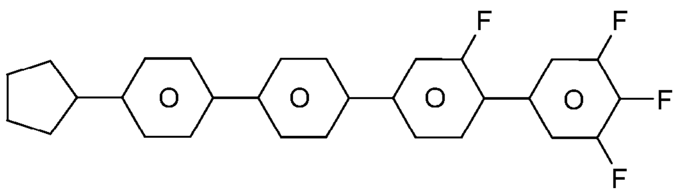

XXIIIa-2

The compound(s) of the Formula XXIII, in particular of the Formula XXIIIa, is (are) preferably employed in the LC media according to the invention in amounts of 0 to 5% by weight, particularly preferably 0 to 2% by weight.

The LC medium may additionally comprise one or more compounds of the Formula XXIV:

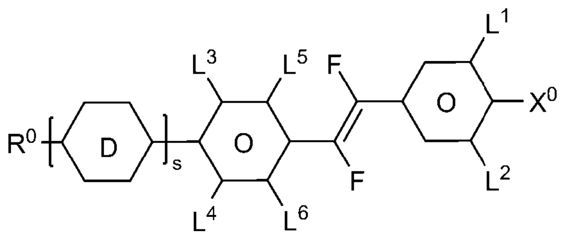

XXIV

in which $R^0$, $x^0$ and $L^{1-6}$ have the meanings indicated in the Formula III, s denotes 0 or 1, and

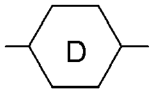 denotes 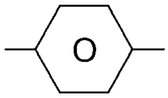 , 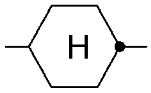 or 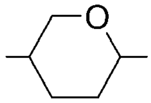

In the Formula XXIV, $X^0$ may also denote an alkyl group having 1 to 6 C atoms or an alkoxy group having 1 to 6 C atoms. The alkyl or alkoxy group is preferably straight-chain.

$R^0$ preferably denotes alkyl having 1 to 6 C atoms. $x^0$ preferably denotes F;

The compounds of the Formula XXIV are preferably selected from the following subformulae:

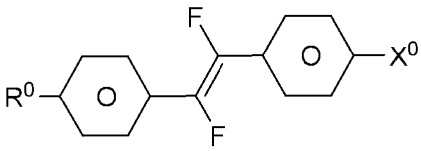 XXIVa

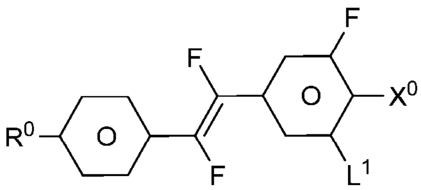 XXIVb

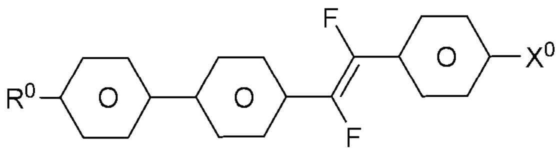 XXIVc

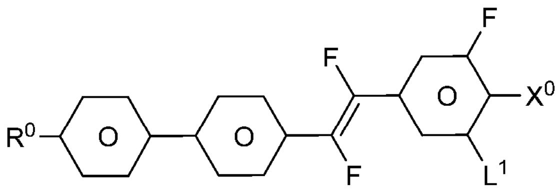 XXIVd

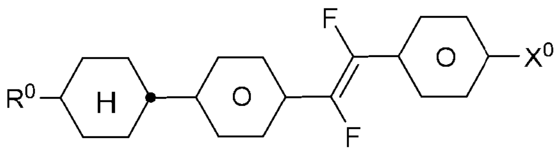 XXIVe

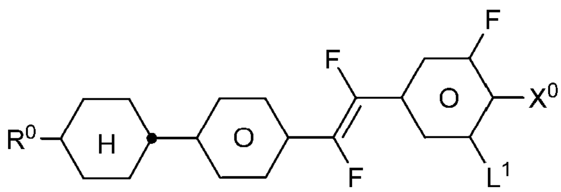 XXIVf

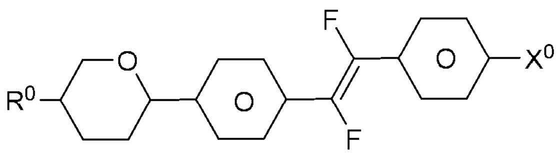 XXIVg

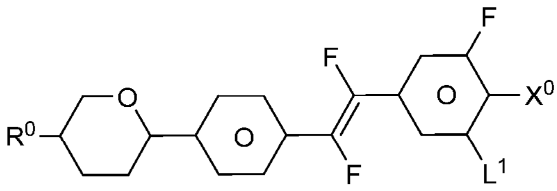

XXIVh

in which $R^0$, $x^0$ and $L^1$ have the meanings indicated in the Formula III. $R^0$ preferably denotes alkyl having 1 to 6 C atoms. $X^0$ preferably denotes F, and $L^1$ is preferably F;

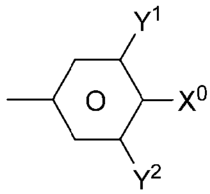

is preferably

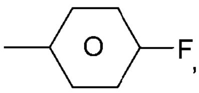, 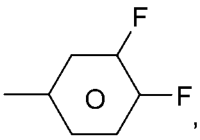, 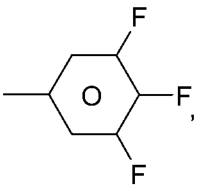,

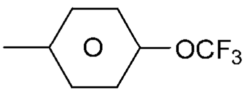, 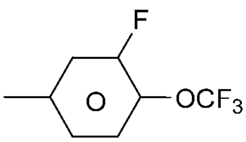, 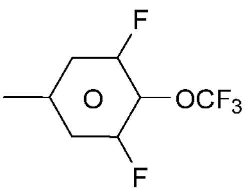, 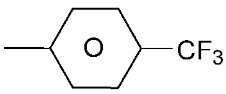,

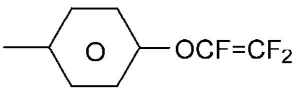, 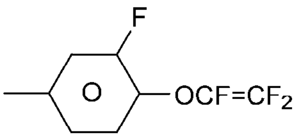, 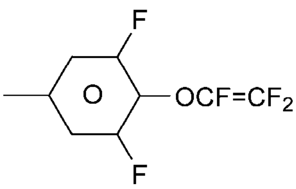,

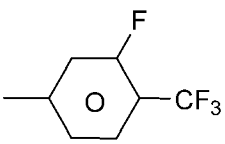, 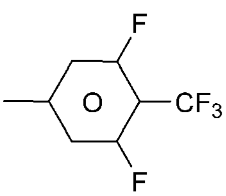, 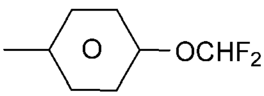, 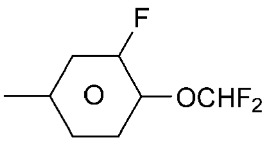,

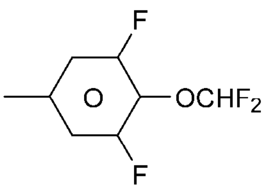, 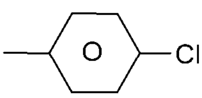, 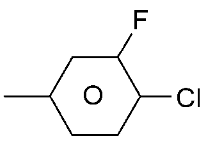 or 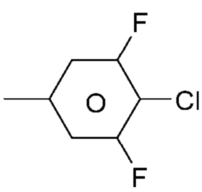.

$R^0$ is straight-chain alkyl or alkenyl having 2 to 6 C atoms;

The LC medium may further comprise one or more compounds of the following formulae:

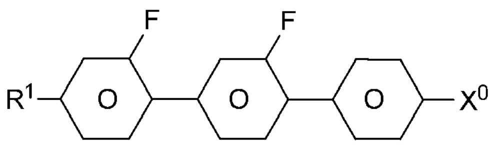

XXV

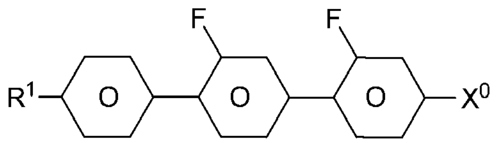

XXVI

in which $R^1$ and $X^0$ have the meanings indicated in the Formula II for $R^0$ and $X^0$, respectively. $R^1$ preferably denotes alkyl having 1 to 6 C atoms, cycloalkyl having 3 to 6 C atoms or cycloalkenyl having 5 or 6 C atoms, very preferably ethyl, propyl, butyl or pentyl. $X^0$ preferably denotes F, $CF_3$ , $CHF_2$ , $OCHF_2$ or $OCF_3$, furthermore $OCF=CF_2$, $OCHFCF_3$ or Cl, very preferably F. In the Formula XXIV, $X^0$ very particularly preferably denotes Cl.

Preferably, the LC medium of the present invention further comprises one or more compounds selected from the group consisting of compounds of the Formulae YA, YB, YC, YD, YE, YF, YG and B':

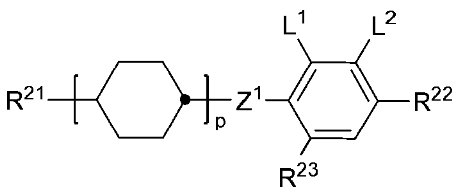

YA

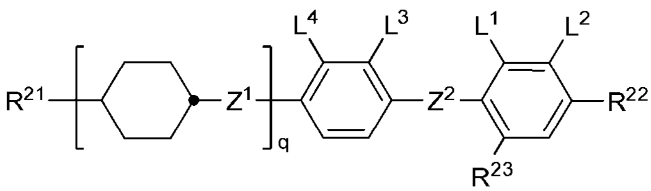

YB

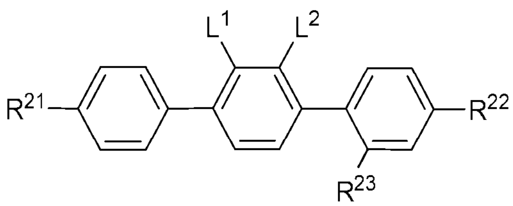

YC

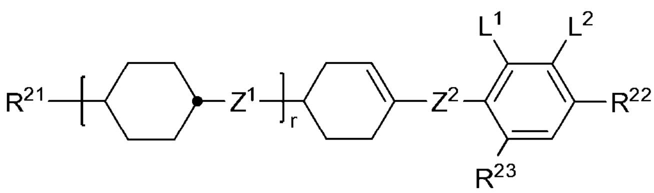

YD

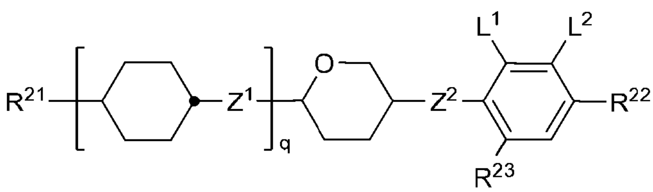

YE

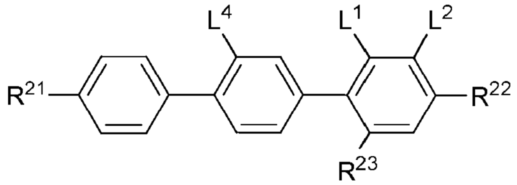 YF

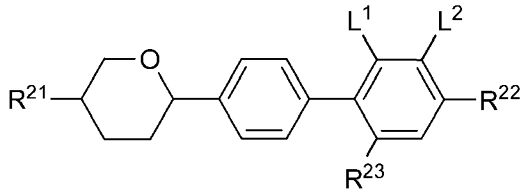 YG

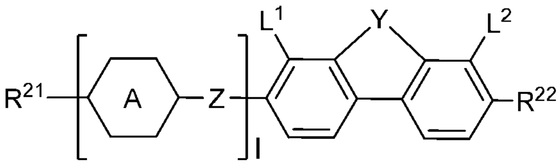 B′

in which the individual substituents have the following meanings:

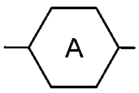 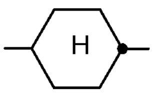, 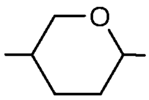, 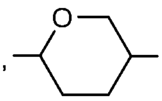, 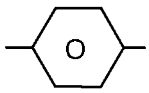, 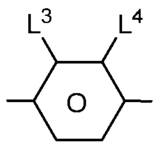

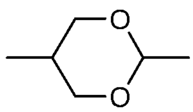, 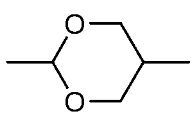, 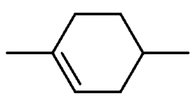, 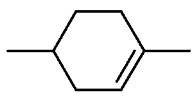

$R^{21}$ denotes an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

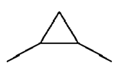, 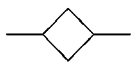, 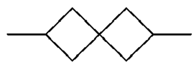,

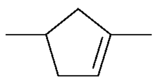, 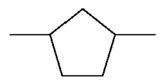, -

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

$R^{22}$ denotes an alkyl or an alkoxy group having 1 to 6 C atoms or an alkenyl or an alkenyloxy group having 2 to 6 C atoms in which one or more non-adjacent $CH_2$ groups are optionally substituted by -C≡C-, $-CF_2O-$, $-OCF_2-$, -CH=CH-,

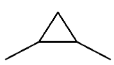, 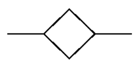, 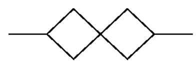, 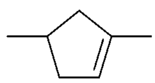,

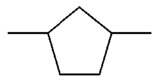

,

-O-, -CO-O- or -O-CO- in such a way that O atoms are not linked directly to one another, and in which one or more H atoms may be replaced by a halogen atom or a cycloalkyl or a cycloalkoxy group having 3 to 6 C atoms, in which one or more H atoms may be replaced by a halogen atom;

| | |
|---|---|
| $L^1$ and $L^2$ | each, independently of one another, denote F, Cl, $CF_3$ or $CHF_2$; |
| $L^3$ and $L^4$ | each, independently of one another, denote H or F; |
| $R^{23}$ | denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$; |
| $Z^1$ and $Z^2$ | each, independently of one another, denote a single bond, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O$; |
| Z | $-CH_2O-$, -O-, $-C_2H_4-$, $-OCH_2-$, or a single bond; |
| Y | denotes S or O, $CH_2$, $CH_2CH_2$, $CH_2O$, $OCH_2$, CH=CH; |
| p | 0, 1 or 2; |
| q | 0 or 1; |

In some preferred embodiments, the one or more compounds selected from the group consisting of compounds of the Formulae YA, YB, YC, YD, YE, YF and YG and B are selected from the group consisting of the following compounds:

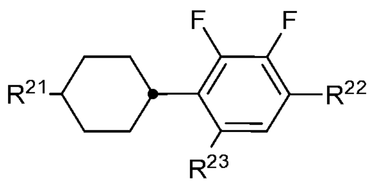

YA-2′

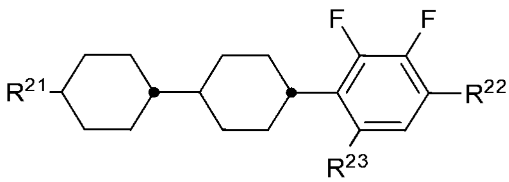

YA-9′

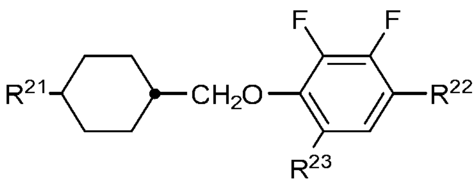

YA-37′

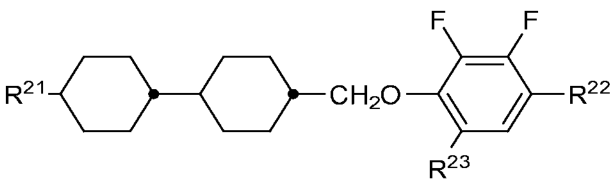

YA-41′

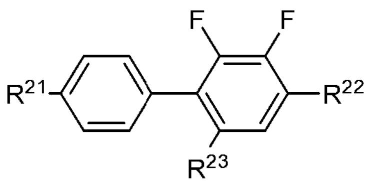

YB-9′

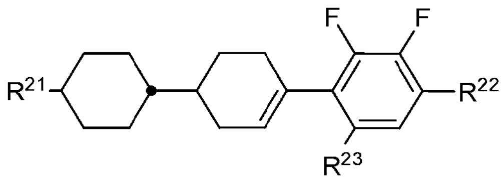
YD-1´

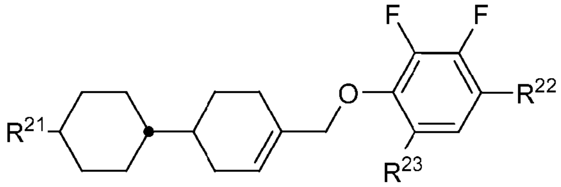
YD-7´

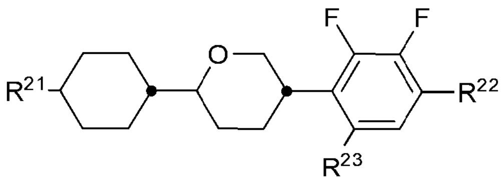
YE-10´

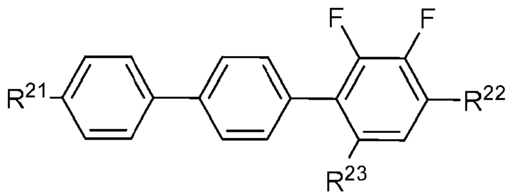
YF-1´

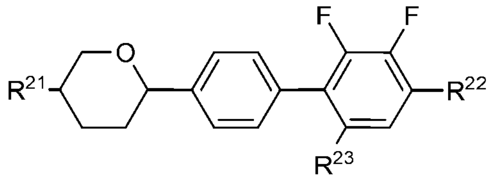
YG-2´

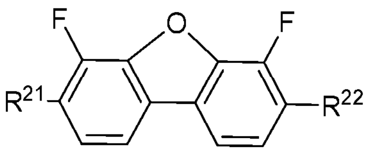
B1-1-6´

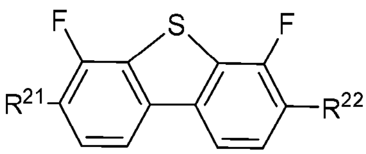
B1-2-6´

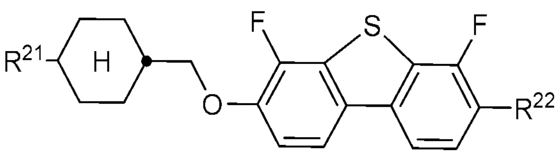
B2-2´

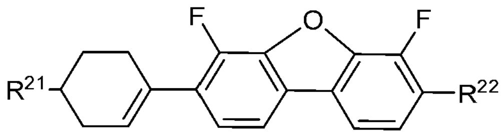

B3-1′

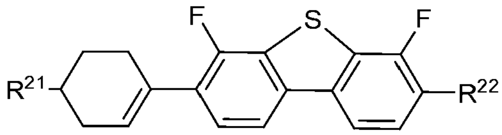

B3-2′

in which

$R2^1$ and $R^{22}$ each, independently of one another, denote an alkyl or an alkoxy group having 1 to 6 C atoms or an alkenyl or an alkenyloxy group having 2 to 6 C atoms in which one or more non-adjacent $CH_2$ groups are optionally substituted by -C≡C-, $-CF_2O-$, $-OCF_2-$, -CH=CH-,

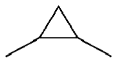, 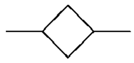,

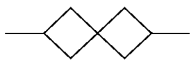, 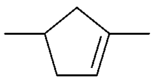, 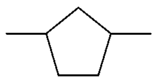,

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 6 C atoms, in which one or more H atoms may be replaced by a halogen atom;

$R^{23}$ denotes a H atom, an alkyl group having 1 to 3 C atoms or an alkenyl group having 2 to 3 C atoms, preferably H or $CH_3$.

In a preferred embodiment, the one or more compounds of Formula YA are selected from the group consisting of the following formulae:

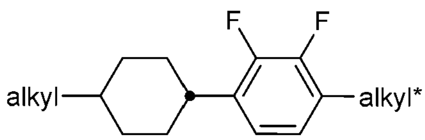

YA-1

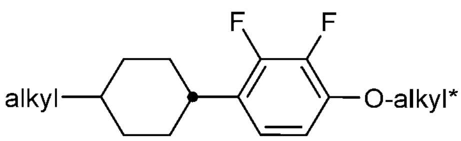

YA-2

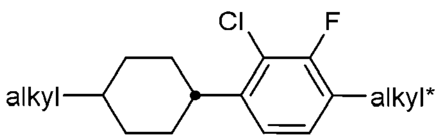

YA-3

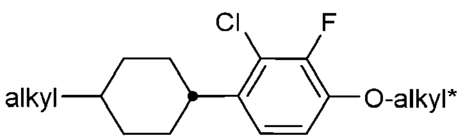

YA-4

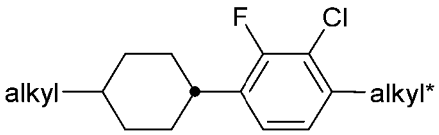

YA-5

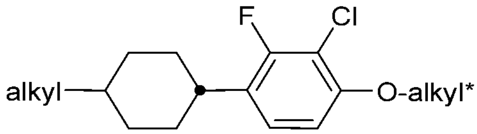

YA-6

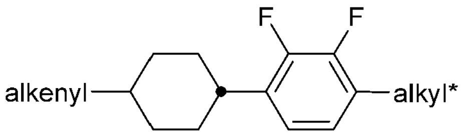

YA-7

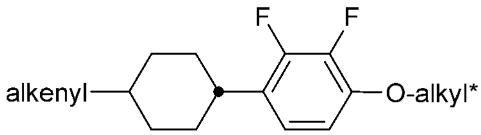

YA-8

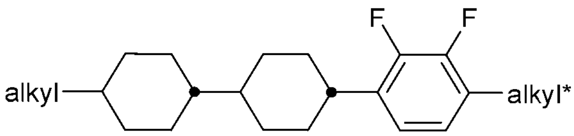

YA-9

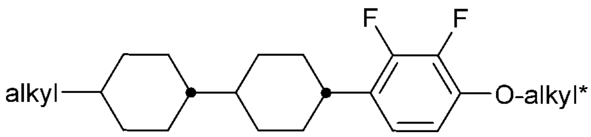

YA-10

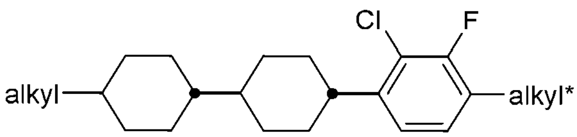

YA-11

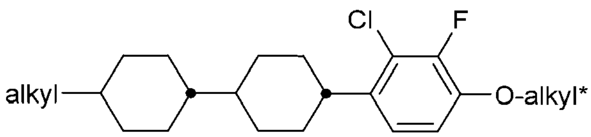

YA-12

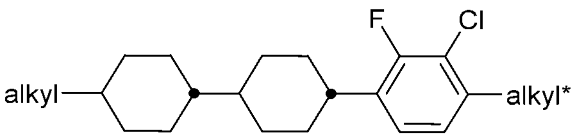

YA-13

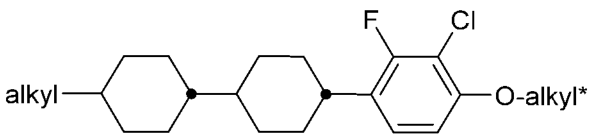

YA-14

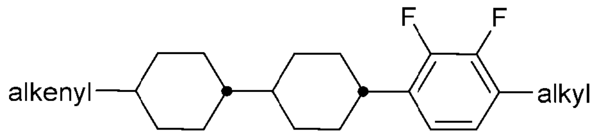

YA-15

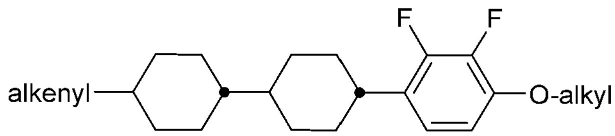

YA-16

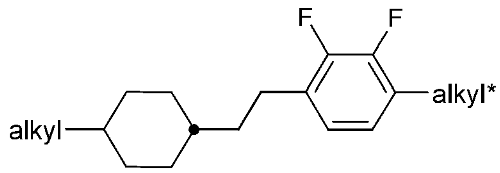

YA-17

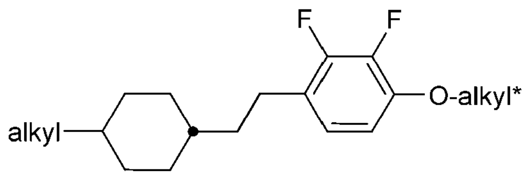

YA-18

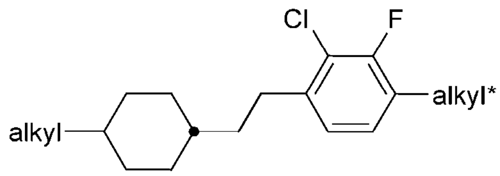

YA-19

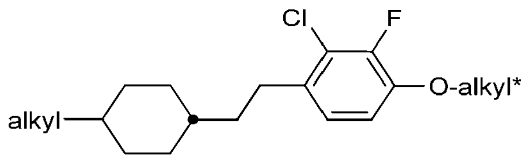

YA-20

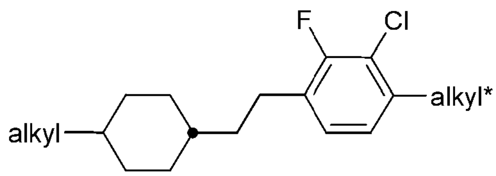

YA-21

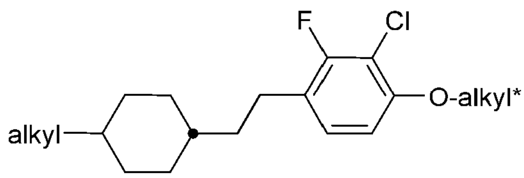

YA-22

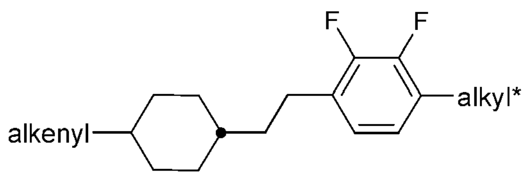

YA-23

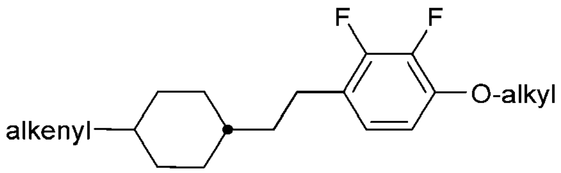

YA-24

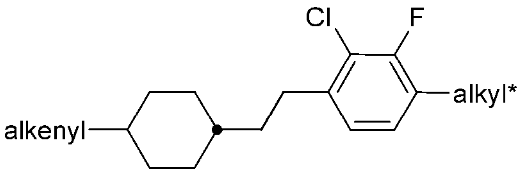

YA-25

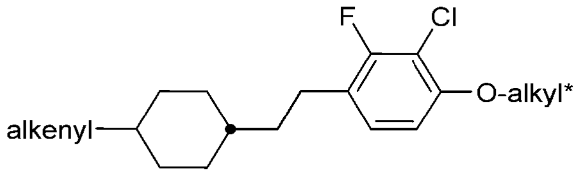

YA-26

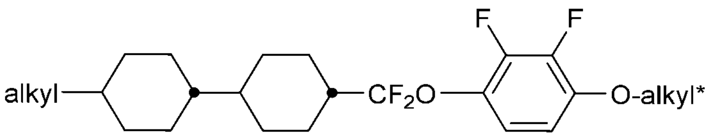

YA-27

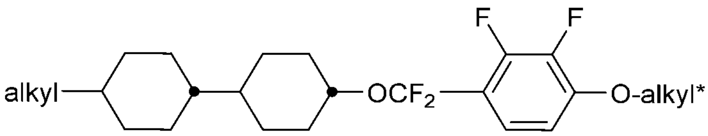

YA-28

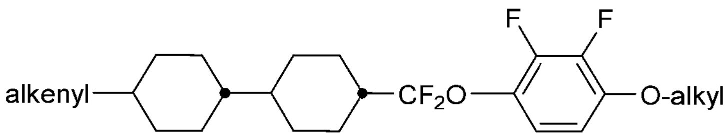

YA-29

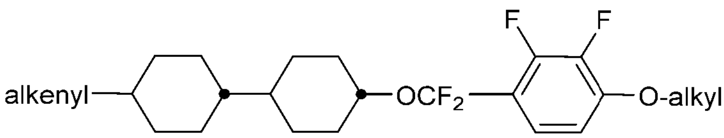

YA-30

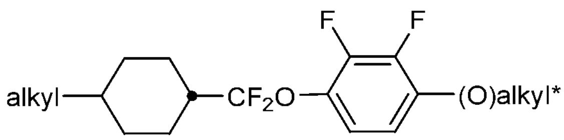

YA-31

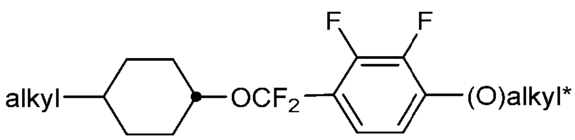

YA-32

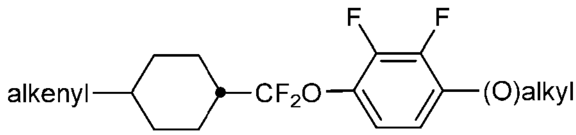
YA-33

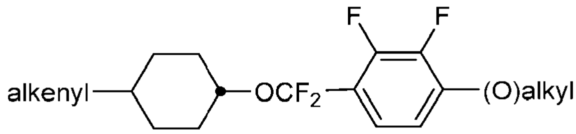
YA-34

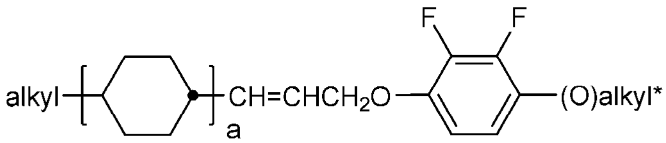
YA-35

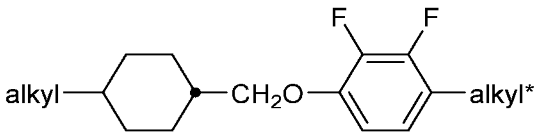
YA-36

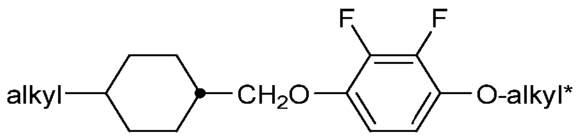
YA-37

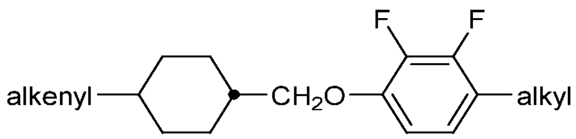
YA-38

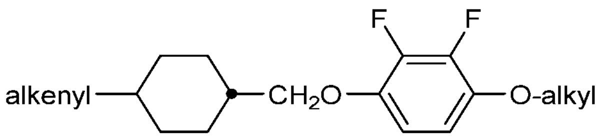
YA-39

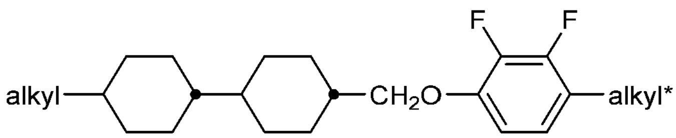
YA-40

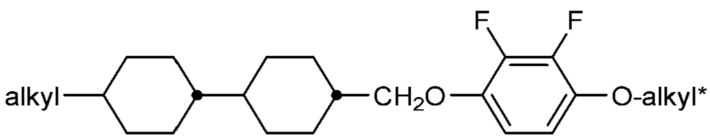
YA-41

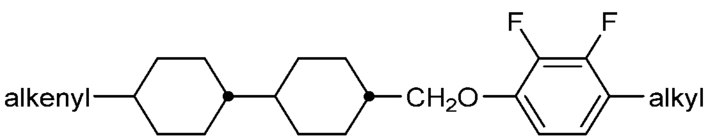
YA-42

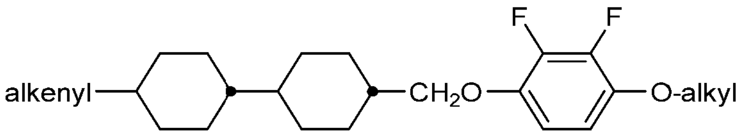
YA-43

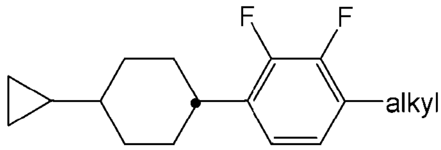
YA-44

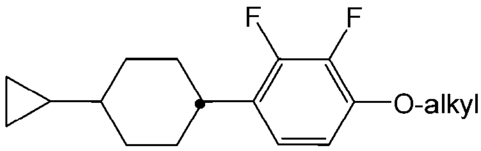
YA-45

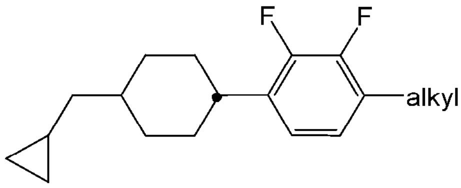
YA-46

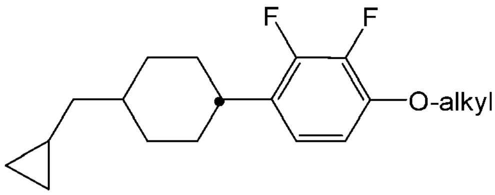
YA-47

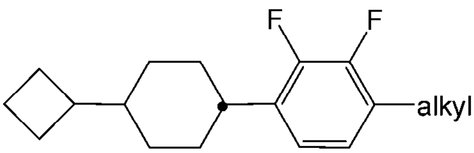
YA-48

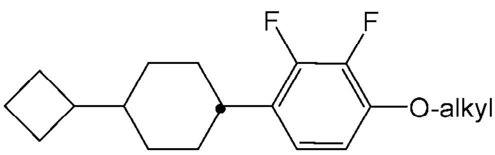
YA-49

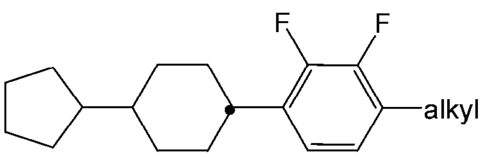
YA-50

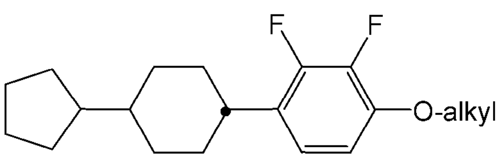
YA-51

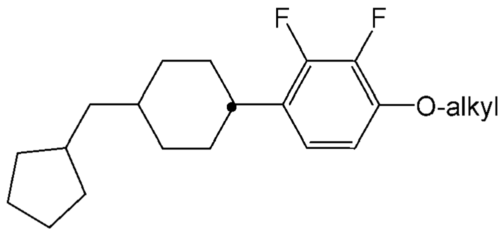

YA-52

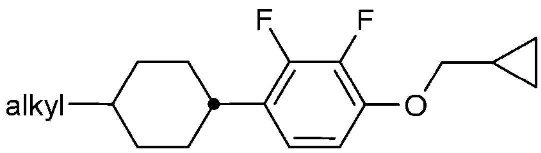

YA-53

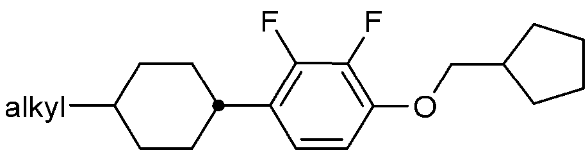

YA-54

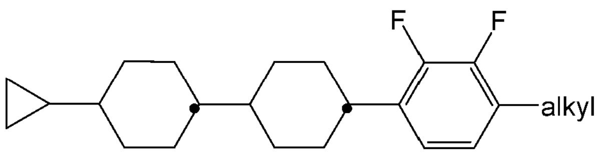

YA-55

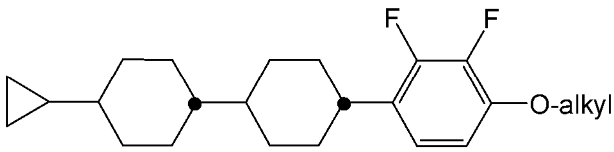

YA-56

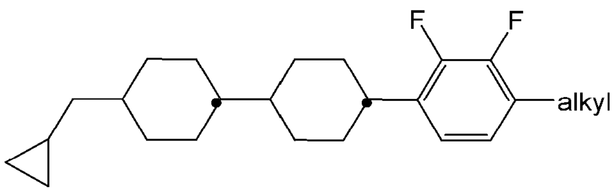

YA-57

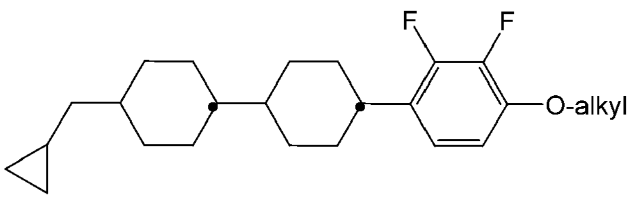

YA-58

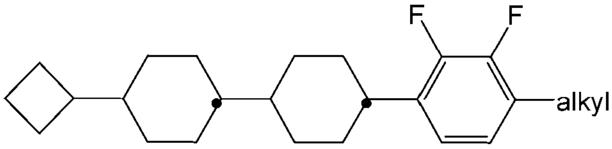

YA-59

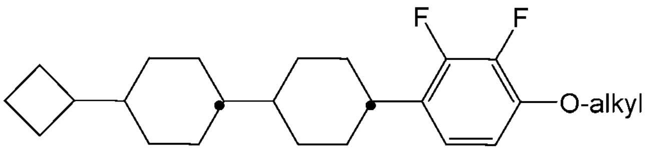

YA-60

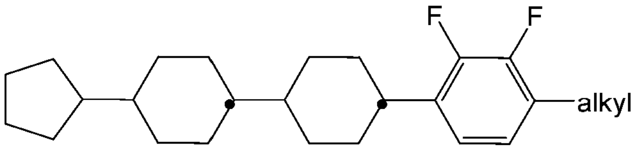

YA-61

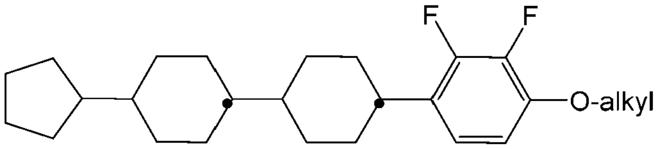

YA-62

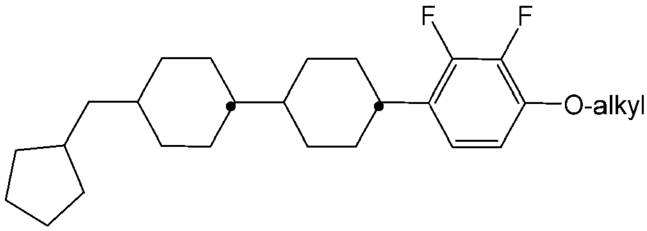

YA-63

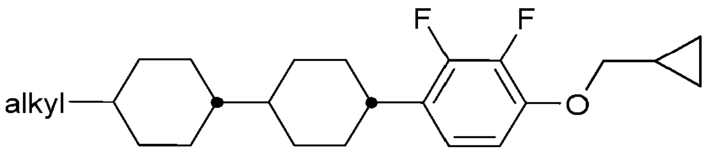

YA-64

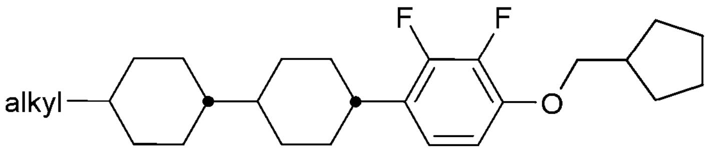

YA-65

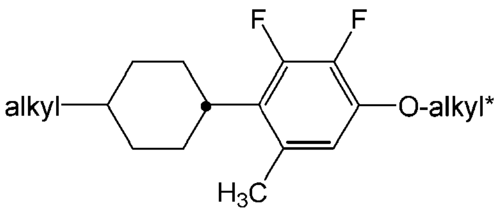

YA-66

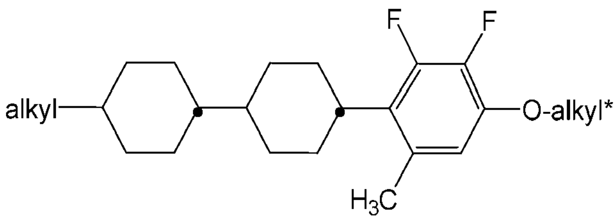

YA-67

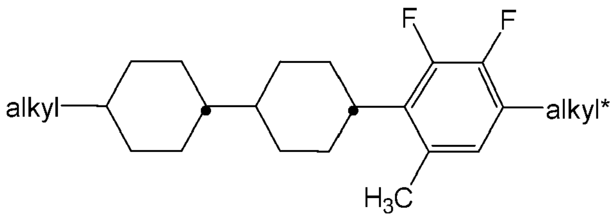

YA-68

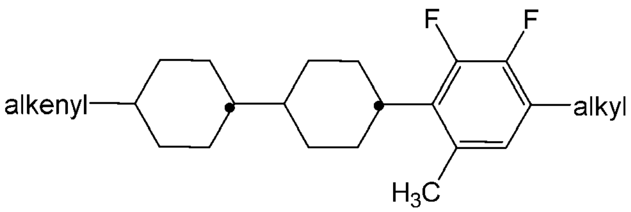

YA-69

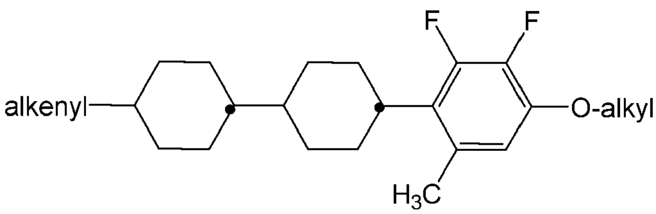

YA-70

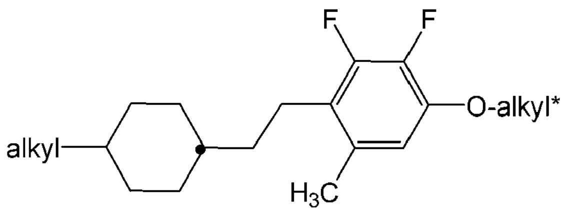

YA-71

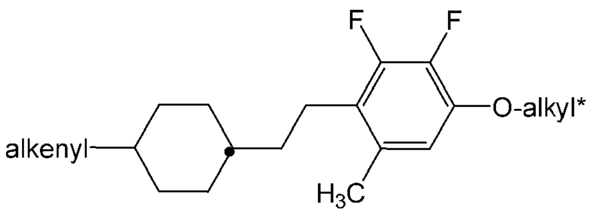

YA-72

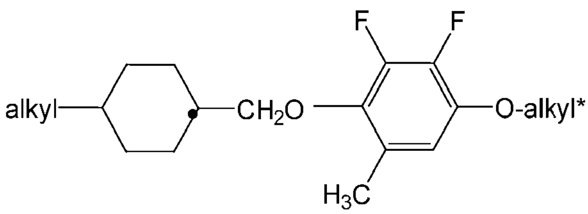

YA-73

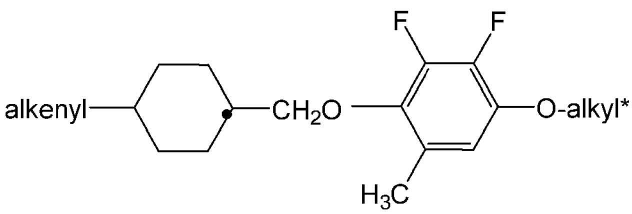

YA-74

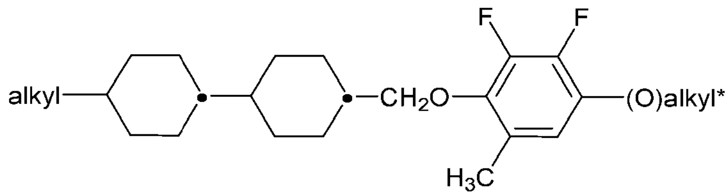
YA-75

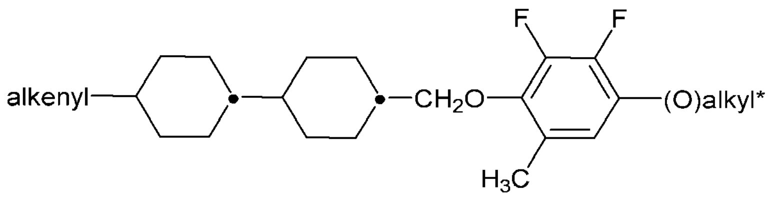
YA-76

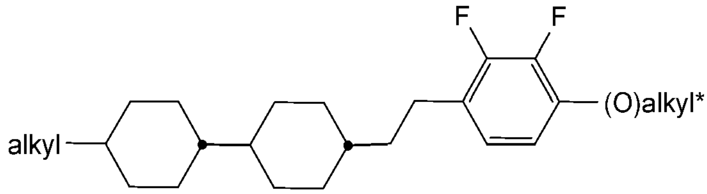
YA-77

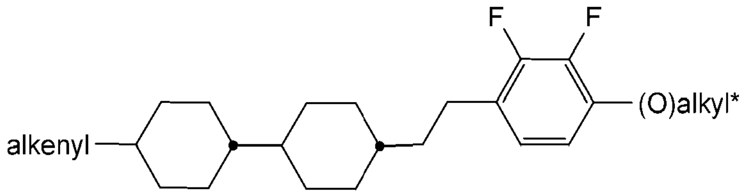
YA-78

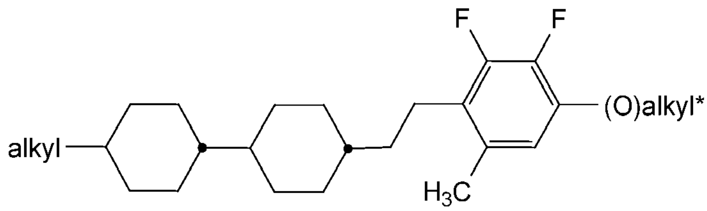
YA-79

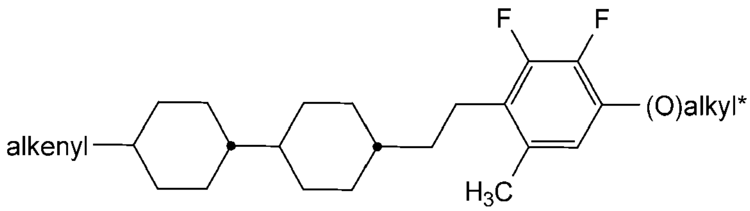
YA-80

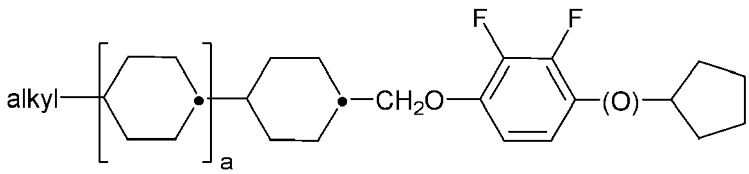
YA-81

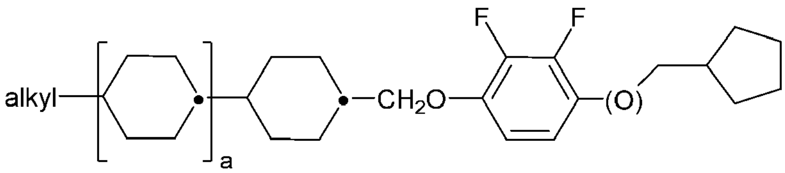
YA-82

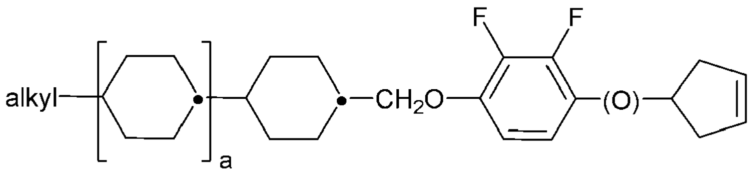
YA-83

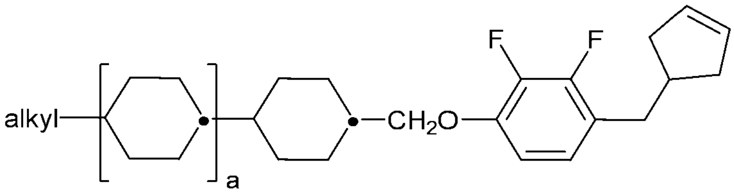
YA-84

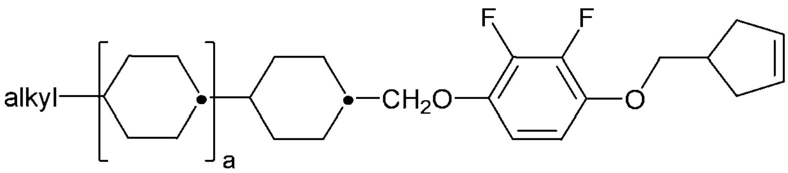
YA-85

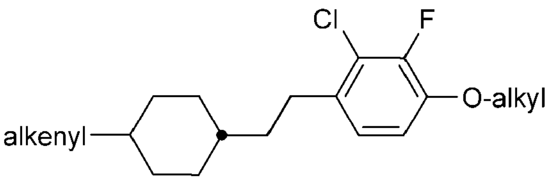
YA-86

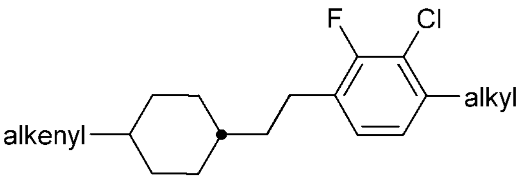
YA-87

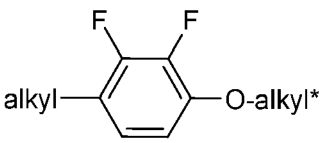
YA-88

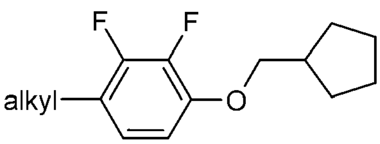
YA-89

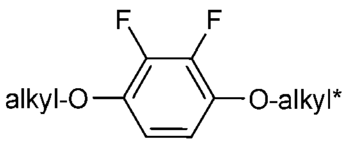

YA-90

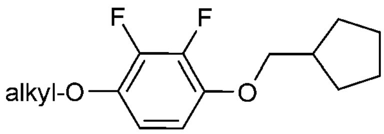

YA-91

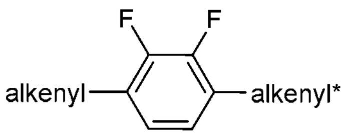

YA-92

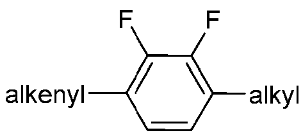

YA-93

in which

| | |
|---|---|
| a | denotes 1 or 2, |
| alkyl and alkyl* | each, independently of one another, denote a straight-chain alkyl group having 1 to 6 C atoms, |
| alkenyl | denotes a straight-chain alkenyl group having 2 to 6 C atoms, and |
| (O) | denotes an oxygen atom or a single bond, and |

alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds selected from the group consisting of formulae YA-2, YA-8, YA-10, YA-16, YA-18, YA-36, YA-37, YA-38, YA-39, YA-40, YA-41, YA-42, YA-43, YA-77, YA-78, YA-88, YA-90 and YA-92.

Preferably, the one or more compounds of Formula YA-2 are preferably selected from the following subformulae:

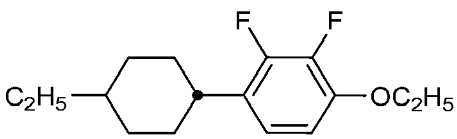

YA-2-1

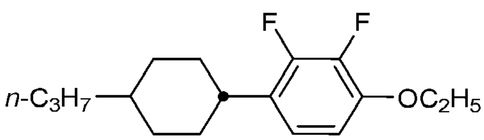

YA-2-2

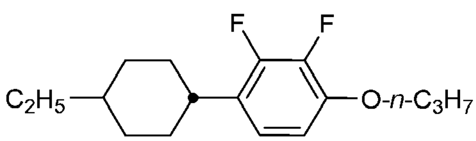

YA-2-3

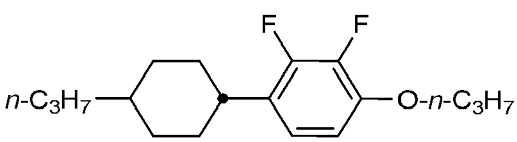

YA-2-4

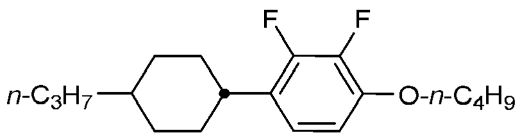

YA-2-5

Alternatively, preferably in addition to the compounds of the formulae YA-2-1 to YA-2-5, the LC medium comprises one or more compounds of the following formulae:

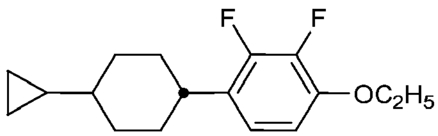

YA-2a-1

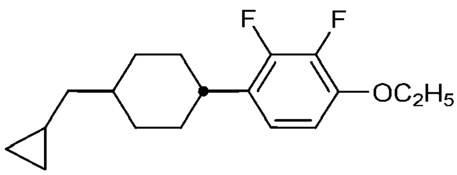

YA-2a-2

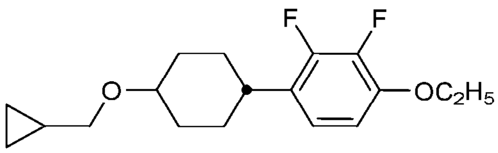

YA-2a-3

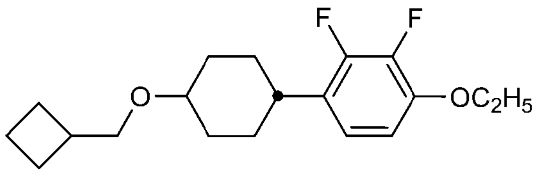

YA-2a-4

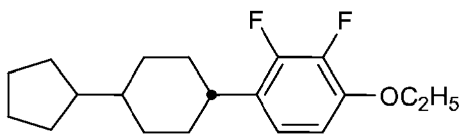

YA-2a-5

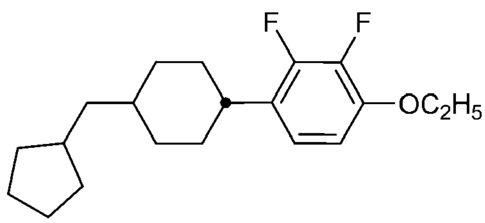

YA-2a-6

Further preferably, the LC medium comprises one or more compounds of the formula YA-10 selected from the following sub-formulae:

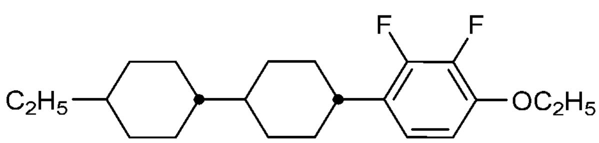

YA-10-1

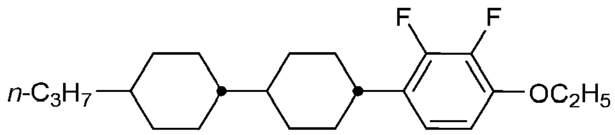

YA-10-2

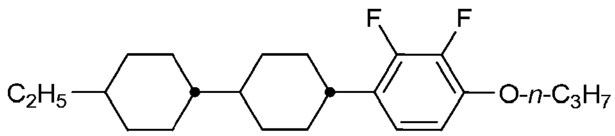

YA-10-3

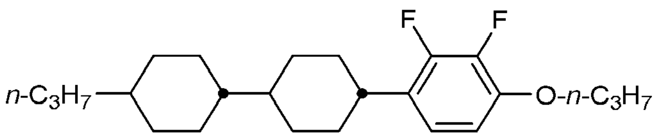

YA-10-4

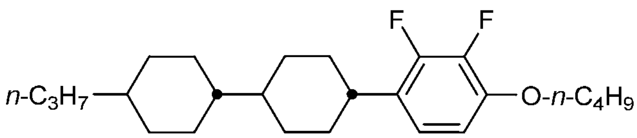

YA-10-5

Alternatively, preferably in addition to the compounds of the formulae YA-10-1 to YA-10-5, the LC medium comprises one or more compounds of the following formulae:

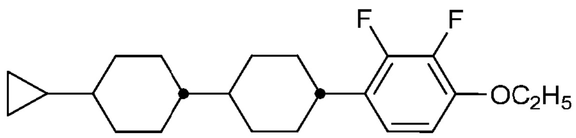

YA-10a-1

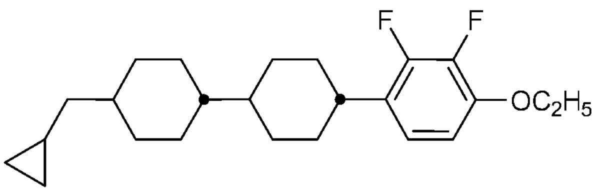

YA-10a-2

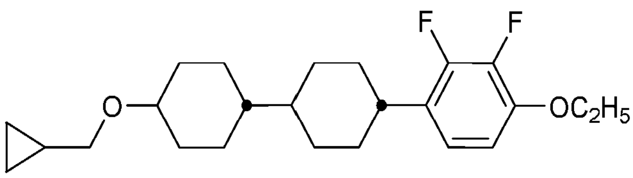

YA-10a-3

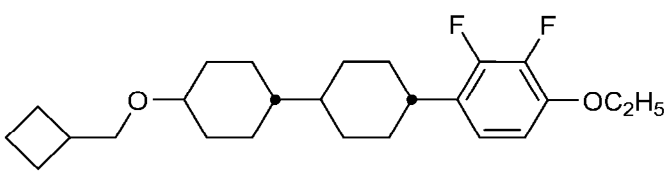

YA-10a-4

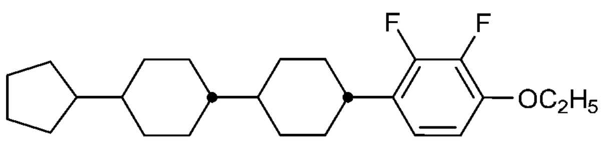

YA-10a-5

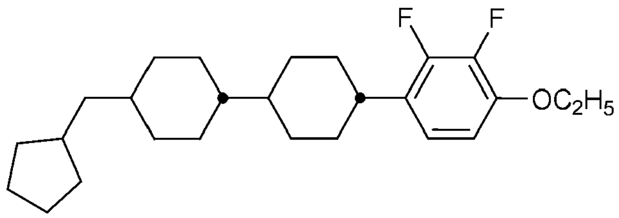

YA-10a-6

Further preferably, the LC medium comprises one or more compounds of the formula YA-37 selected from the following sub-formulae:

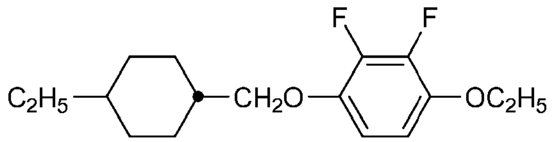

YA-37-1

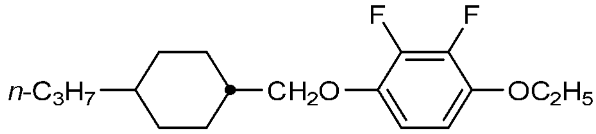

YA-37-2

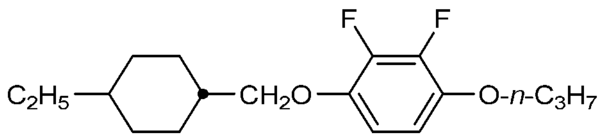

YA-37-3

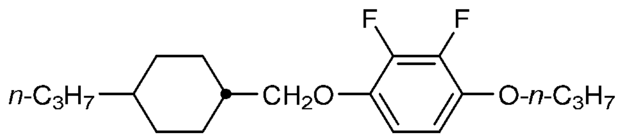

YA-37-4

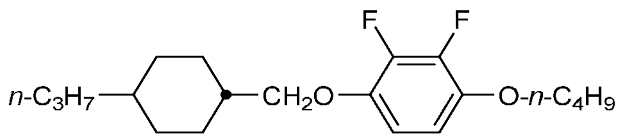

YA-37-5

Alternatively, preferably in addition to the compounds of the formulae YA-37-1 to YA-37-5, the LC medium comprises one or more compounds of the following formulae:

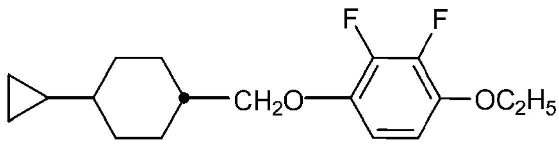

YA-37a-1

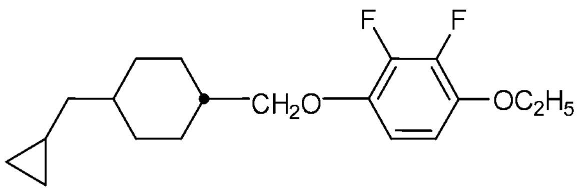

YA-37a-2

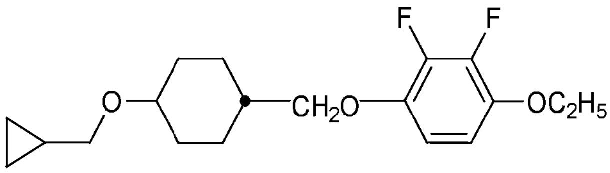

YA-37a-3

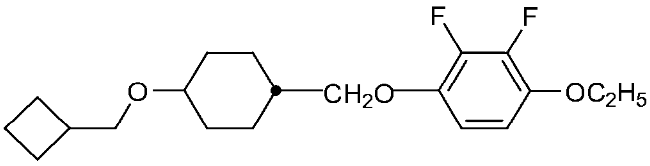

YA-37a-4

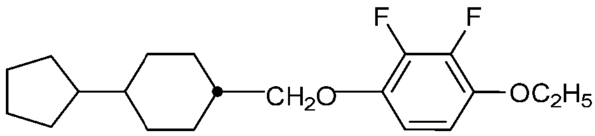

YA-37a-5

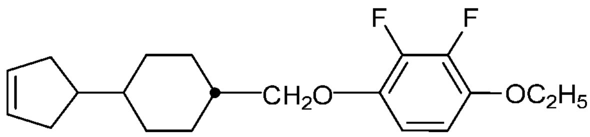

YA-37a-6

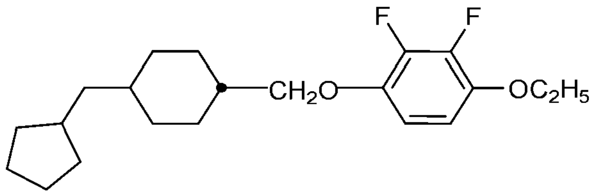

YA-37a-7

Further preferably, the LC medium comprises one or more compounds of the formula YA-41 selected from the following sub-formulae:

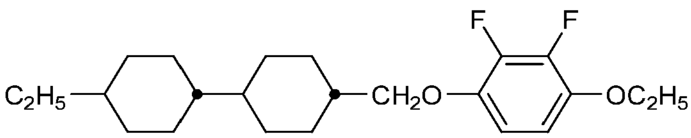

YA-41-1

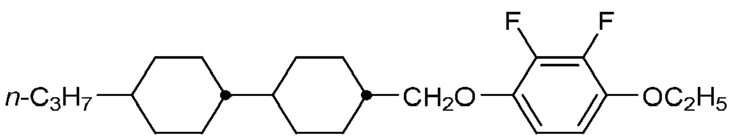

YA-41-2

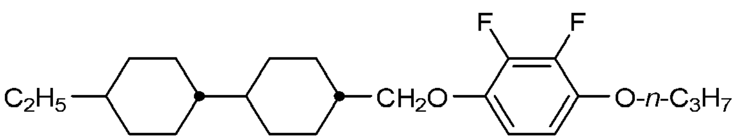

YA-41-3

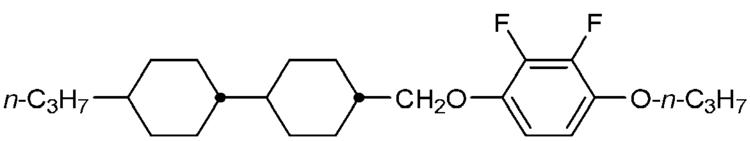

YA-41-4

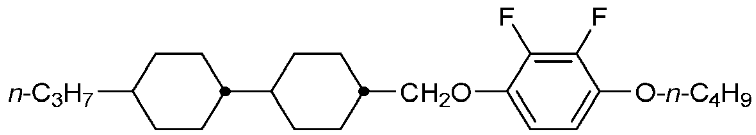

YA-41-5

Further preferably, the LC medium comprises one or more compounds of the formula YA-66 selected from the following subformulae:

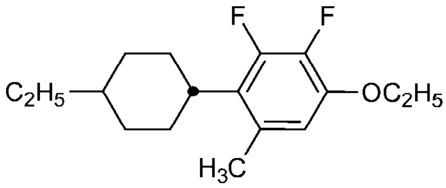

YA-66-1

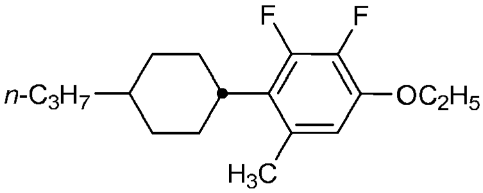

YA-66-2

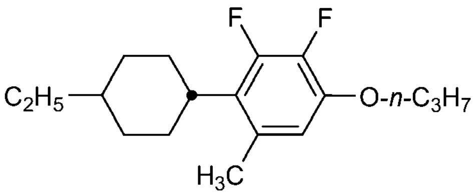

YA-66-3

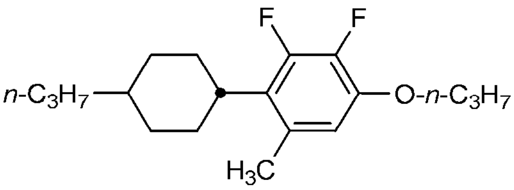

YA-66-4

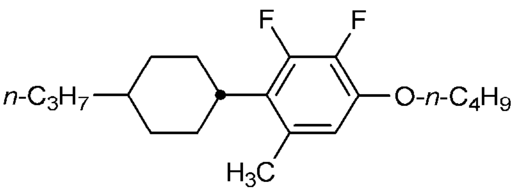

YA-66-5

Further preferably, the LC medium comprises one or more compounds of the formula YA-67 selected from the following sub-formulae:

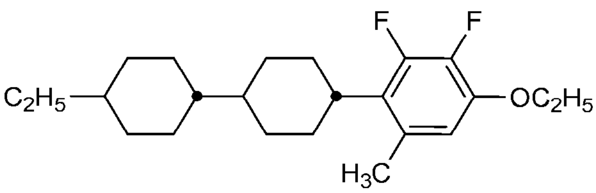

YA-67-1

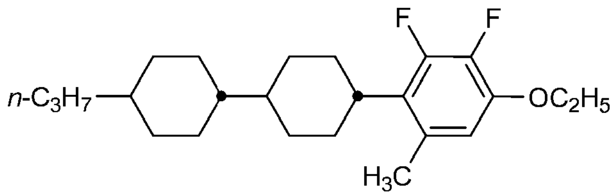

YA-67-2

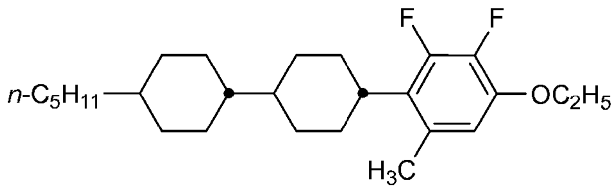

YA-67-3

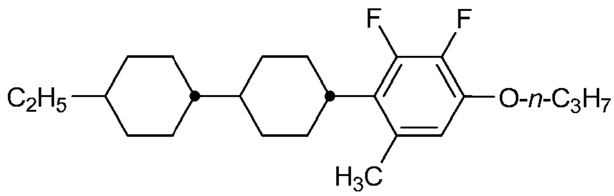

YA-67-4

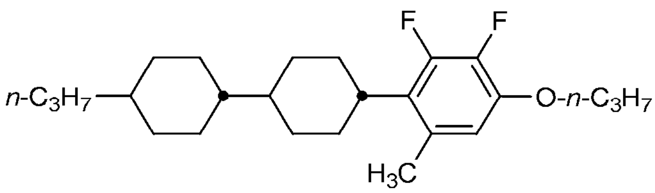

YA-67-5

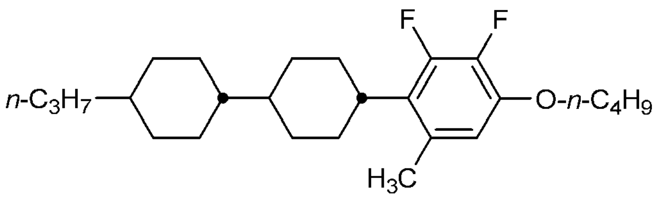

YA-67-6

Further preferably, the LC medium comprises one or more compounds of the formula YA-77 selected from the following sub-formulae:

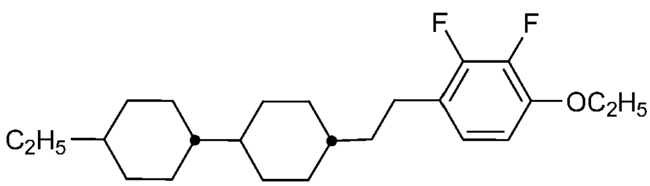

YA-77-1

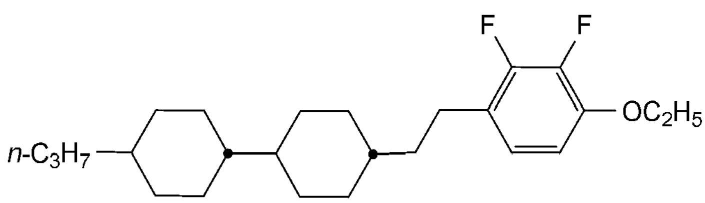

YA-77-2

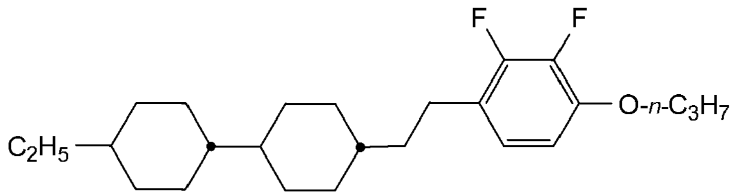

YA-77-3

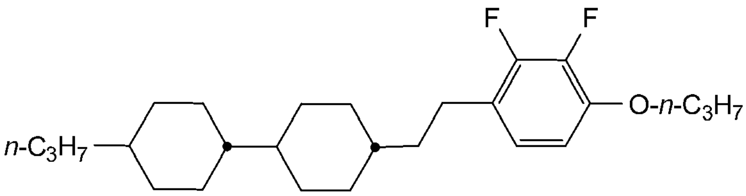

YA-77-4

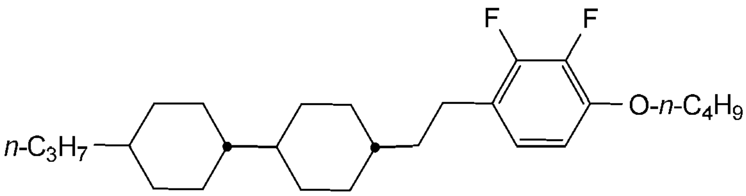

YA-77-5

Further preferably, the LC medium comprises one or more compounds of the formula YA-90 selected from the following sub-formulae:

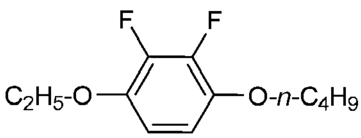

YA-90-1

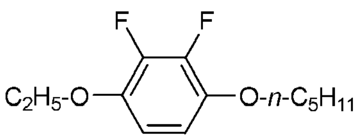

YA-90-1

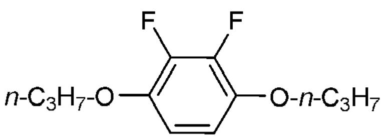

YA-90-2

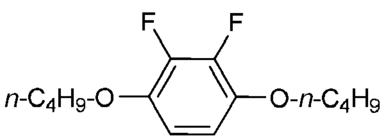

YA-90-3

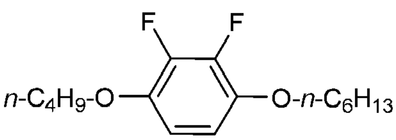

YA-90-3

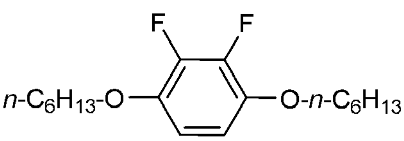

YA-90-4

In another preferred embodiment, the LC medium comprises one or more compounds of the formula YB selected from the group consisting of formulae YB-1 to YB-43:

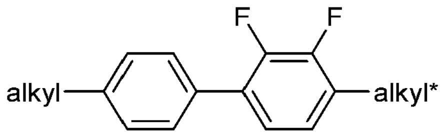

YB-1

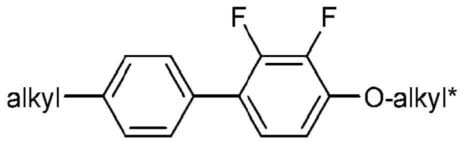

YB-2

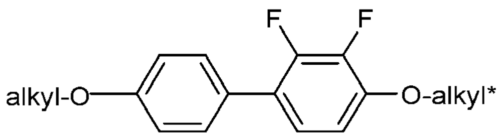

YB-3

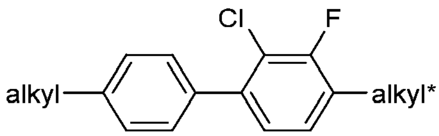

YB-4

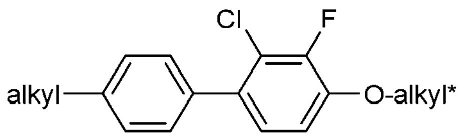

YB-5

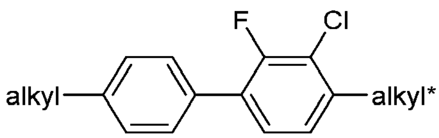

YB-6

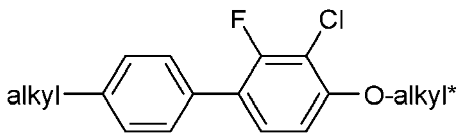

YB-7

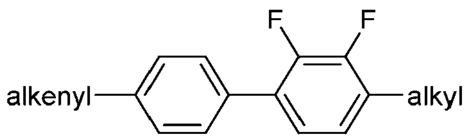

YB-8

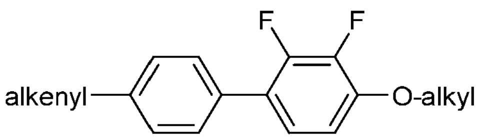

YB-9

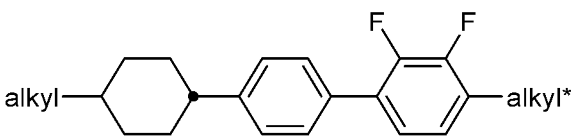

YB-10

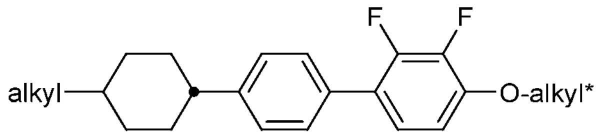

YB-11

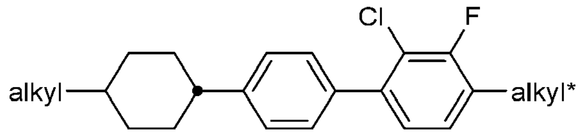

YB-12

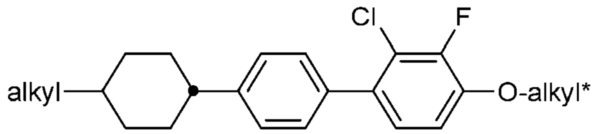

YB-13

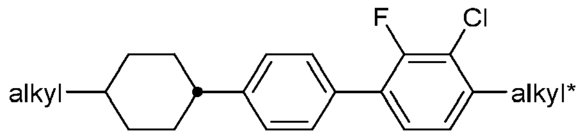

YB-14

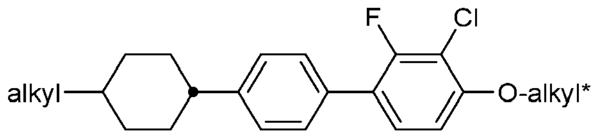

YB-15

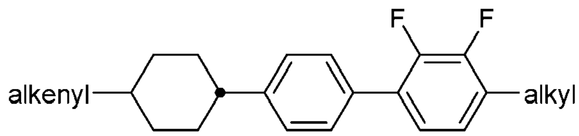

YB-16

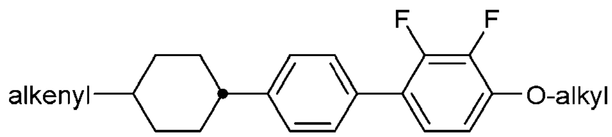

YB-17

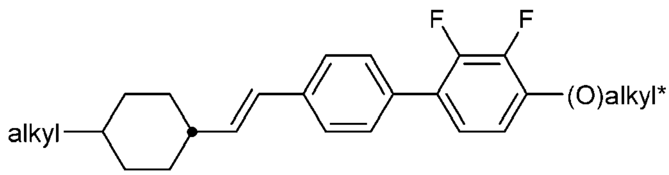

YB-18

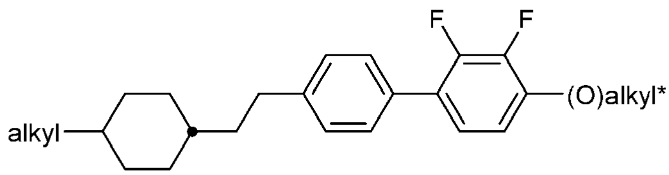

YB-19

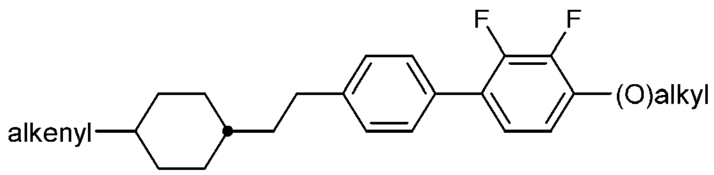

YB-20

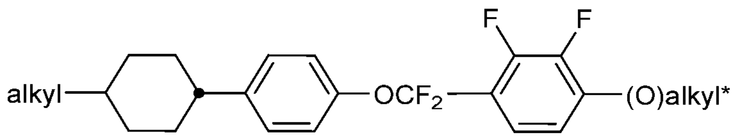

YB-21

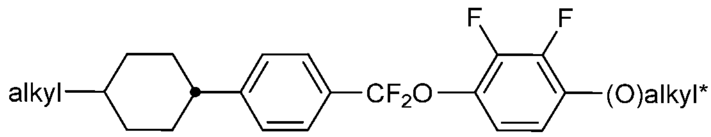

YB-22

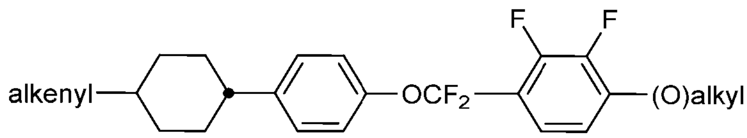

YB-23

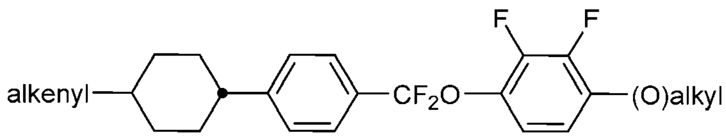

YB-24

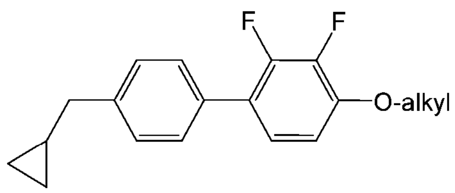

YB-25

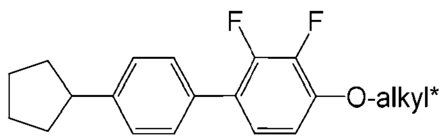

YB-26

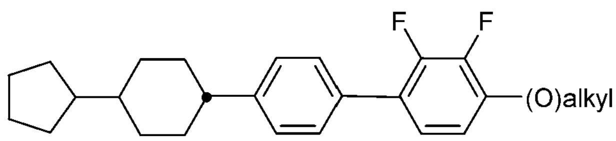

YB-27

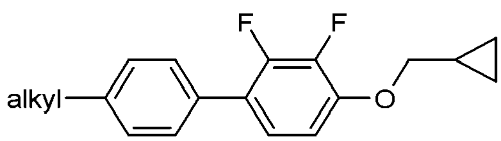

YB-28

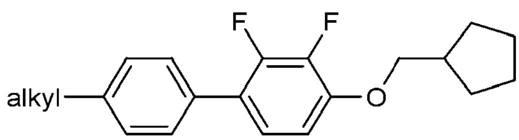

YB-29

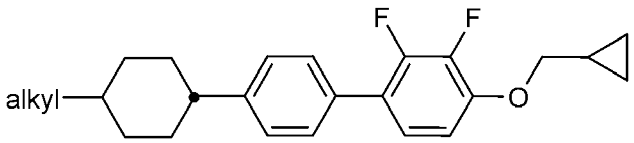

YB-30

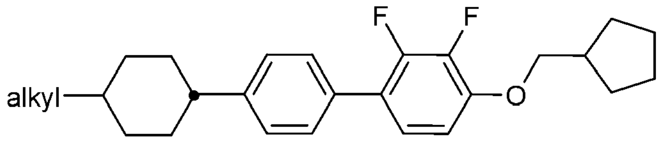

YB-31

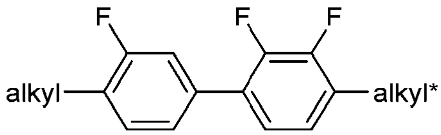

YB-32

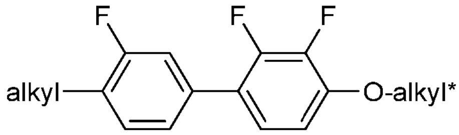

YB-33

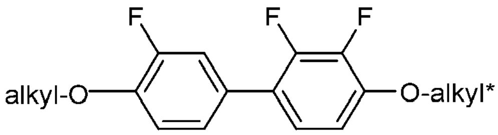

YB-34

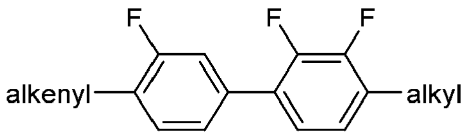

YB-35

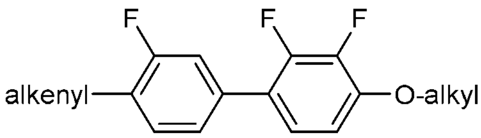

YB-36

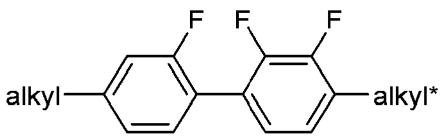

YB-37

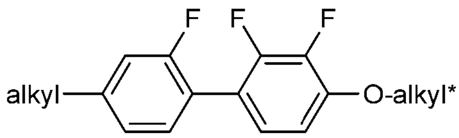

YB-38

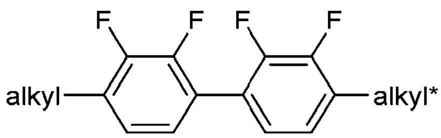

YB-39

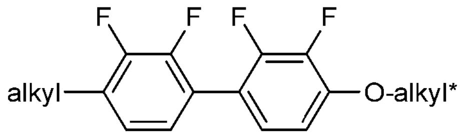

YB-40

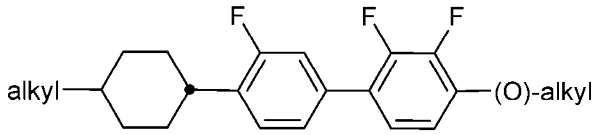

YB-41

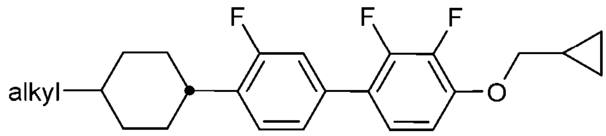

YB-42

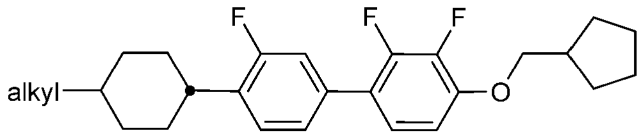

YB-43

in which

| | |
|---|---|
| alkyl and alkyl* | each, independently of one another, denote a straight-chain alkyl radical having 1 to 6 C atoms, |
| alkenyl | denotes a straight-chain alkenyl radical having 2 to 6 C atoms, and |
| (O) | denotes an oxygen atom or a single bond, and |

alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds selected from the group consisting of formulae YB-2, YB-11, YB-17 and YB-34.

Preferably, the LC medium comprises one or more compounds of the formula YB-11 selected from the following sub-formulae:

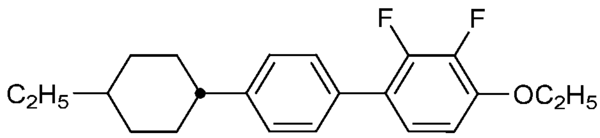

YB-11-1

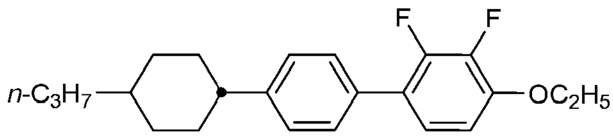

YB-11-2

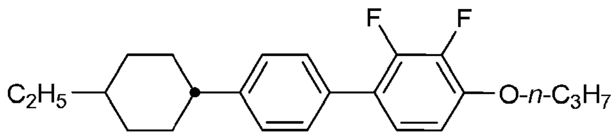

YB-11-3

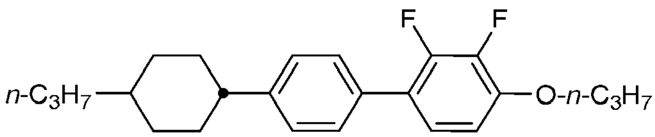

YB-11-4

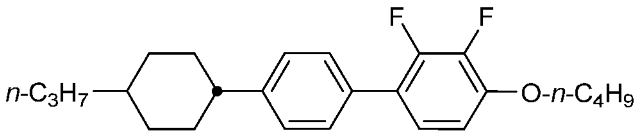

YB-11-5

Alternatively, preferably in addition to the compounds of the formulae YB-11-1 to YB-11-5, the LC medium comprises one or more compounds of the following formulae:

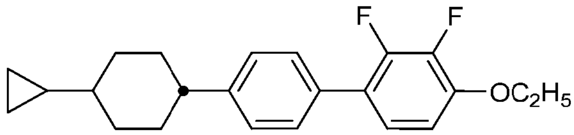

YB-11a-1

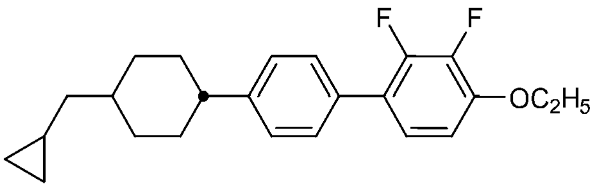

YB-11a-2

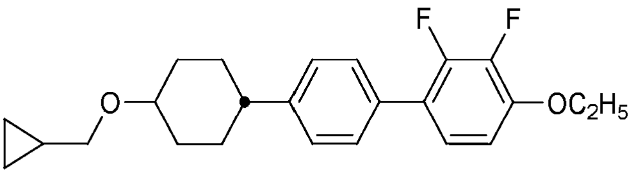

YB-11a-3

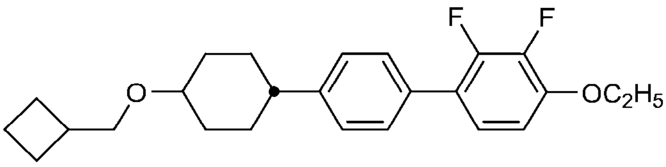

YB-11a-4

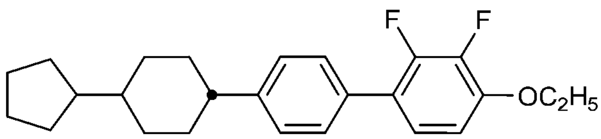

YB-11a-5

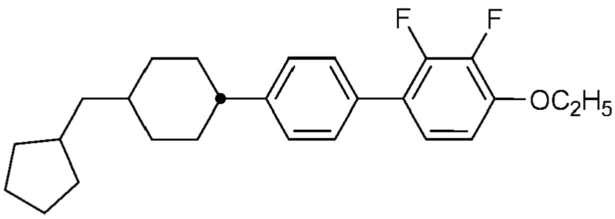

YB-11a-6

Preferably, the LC medium comprises one or more compounds of the formula YB-17 selected from the following sub-formulae:

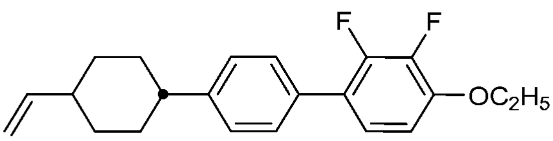

YB-17-1

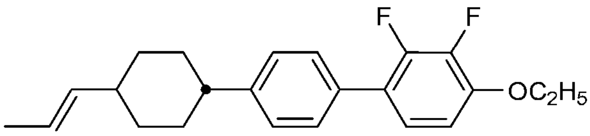

YB-17-2

The LC medium may comprise one or more compounds of the formula YB-34 selected from the following sub-formulae:

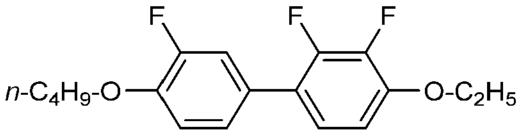

YB-34-1

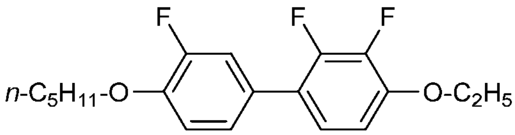

YB-34-2

In another preferred embodiment the LC medium comprises one or more compounds of the formula YC selected from the following formulae:

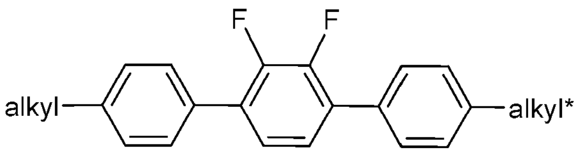

YC-1

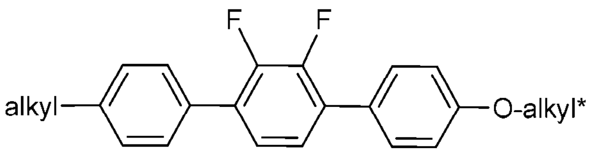

YC-2

in which alkyl and alkyl* each, independently of one another, denote a straight-chain alkyl radical having 1 to 6 C atoms.

The LC medium may comprise one or more compounds of the formula YC-1 and YC-2 selected from the following sub-formulae:

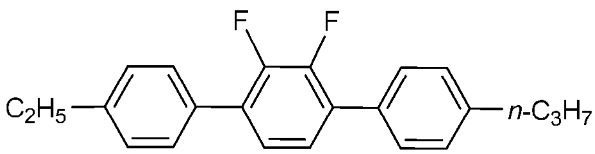

YC-1-1

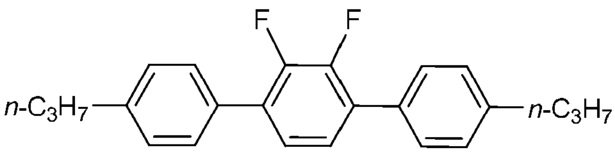

YC-1-2

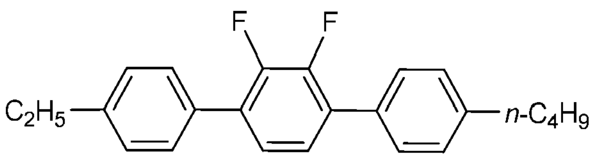

YC-1-3

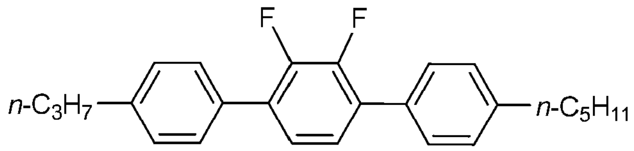
YC-1-4

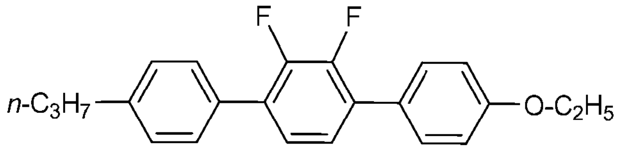
YC-2-1

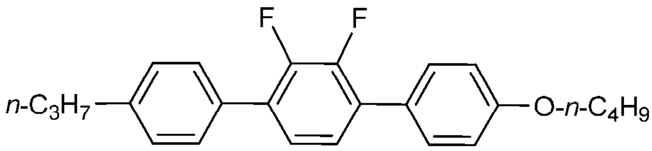
YC-2-2

In another preferred embodiment, the LC medium comprises one or more compounds of the formula YD selected from the group consisting of the following formulae

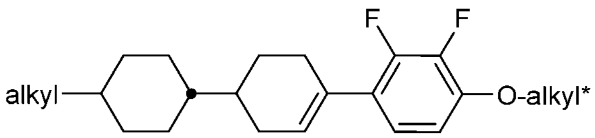
YD-1

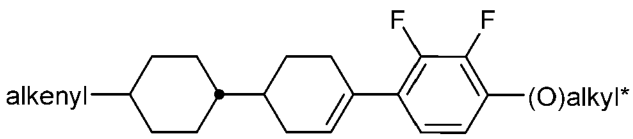
YD-2

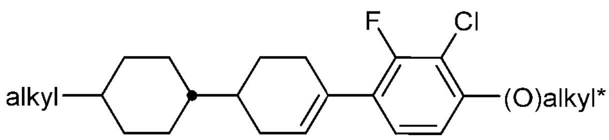
YD-3

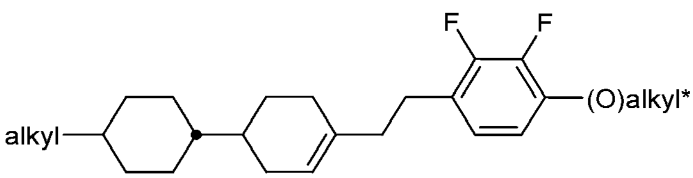
YD-4

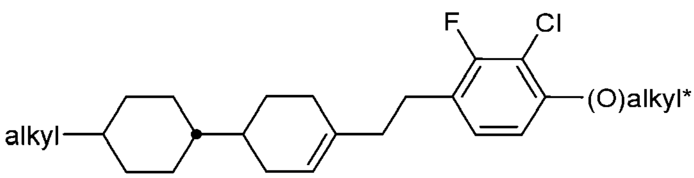
YD-5

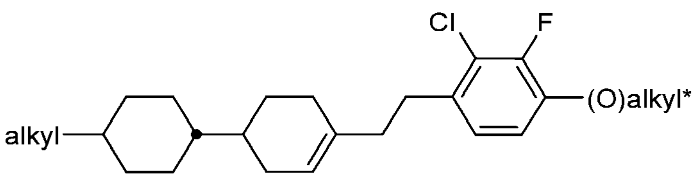
YD-6

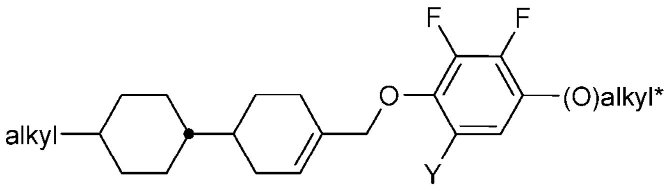

YD-7

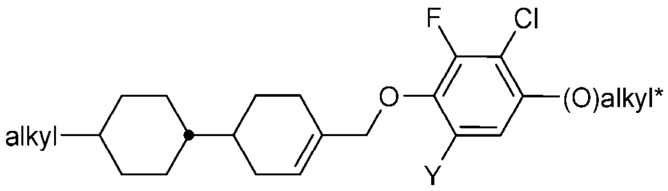

YD-8

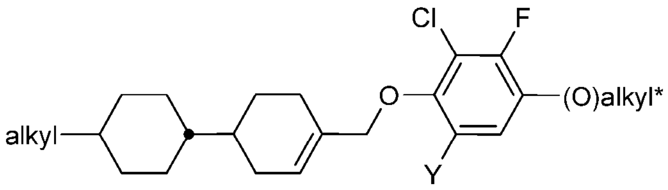

YD-9

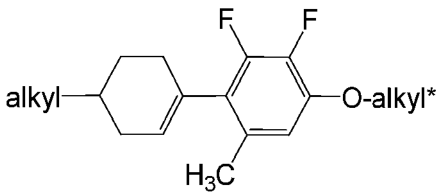

YD-10

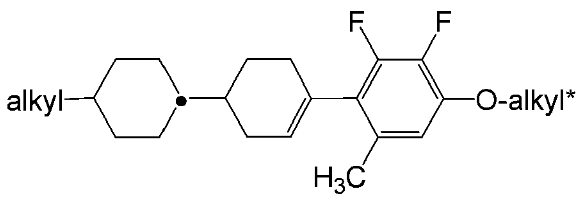

YD-11

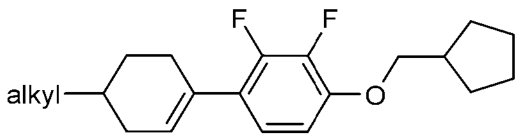

YD-12

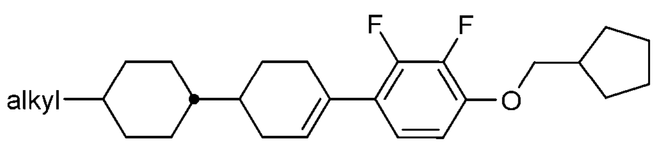

YD-13

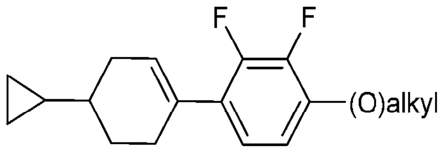

YD-14

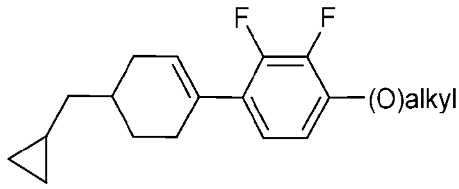

YD-15

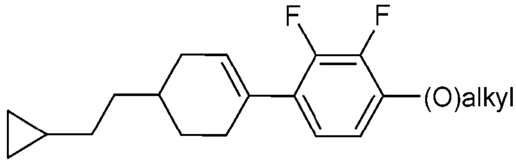

YD-16

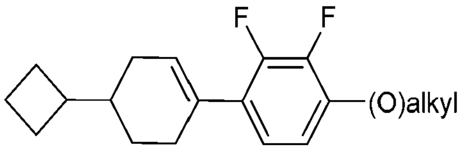

YD-17

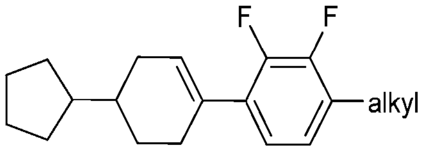

YD-18

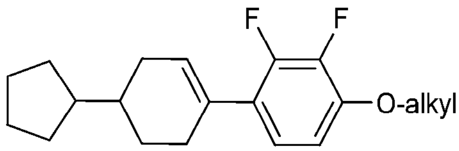

YD-19

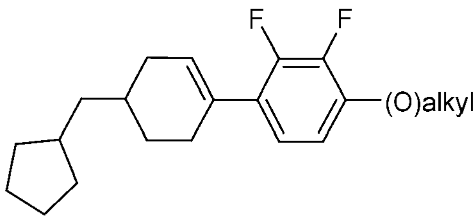

YD-20

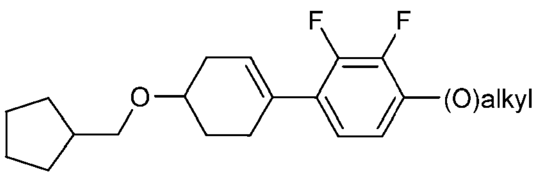

YD-21

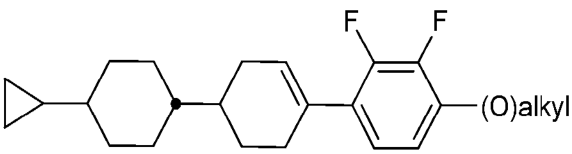

YD-22

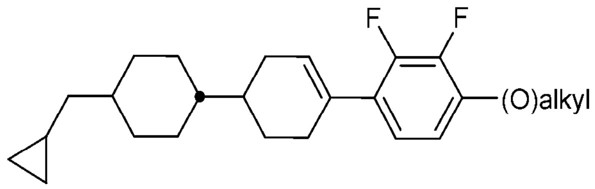

YD-23

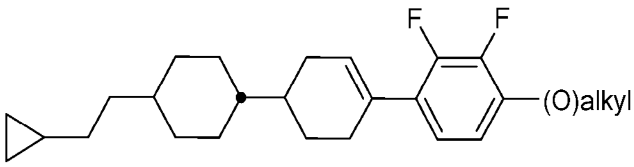

YD-24

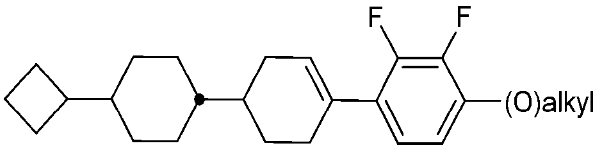

YD-25

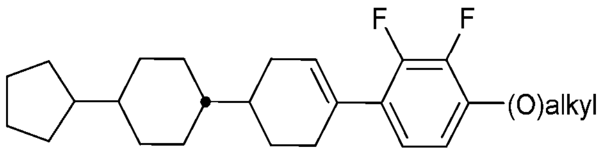

YD-26

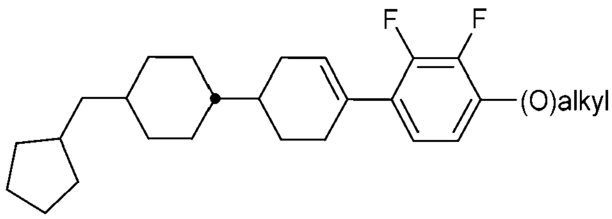

YD-27

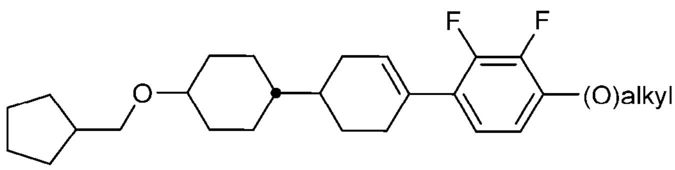

YD-28

in which

| | |
|---|---|
| alkyl and alkyl* | each, independently of one another, denote a straight-chain alkyl group having 1 to 6 C atoms, |
| alkenyl | denotes a straight-chain alkenyl group having 2 to 6 C atoms, |
| (O) | denotes an oxygen atom or a single bond, |
| Y | denotes H or $CH_3$ and |

alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Further preferred LC media according to the invention comprise one or more compounds of the formula YD-1.

Further preferred LC media according to the invention comprise one or more compounds of the formula YD, wherein q is 0, $R^{23}$ is H and $R^{22}$ denotes an alkyl or alkoxy radical having 1 to 6 C atoms wherein one $CH_2$ group is optionally replaced by a cyclopropyl, cyclobutyl, cyclopentyl or cyclopentenyl group, preferably selected from formulae YD-1, YD-12, YD-13, YD-14, YD-15, YD-16, YD-17, YD-18, YD-19 and YD-20, very preferably selected from formulae YD-13, YD-18, YD-19 and YD-20.

Very preferred compounds of the formula YD are compounds selected from the following subformulae:

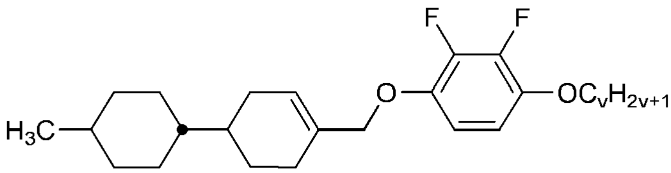

YD-7-1

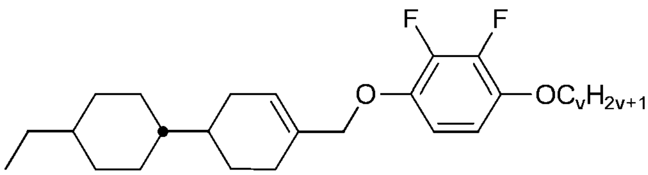

YD-7-2

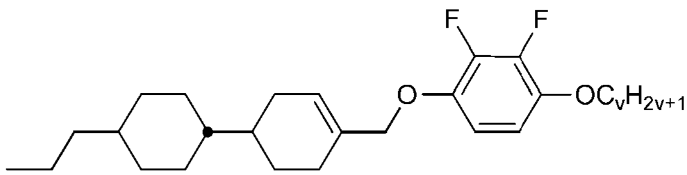

YD-7-3

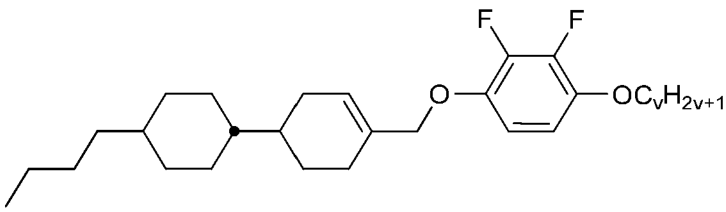

YD-7-4

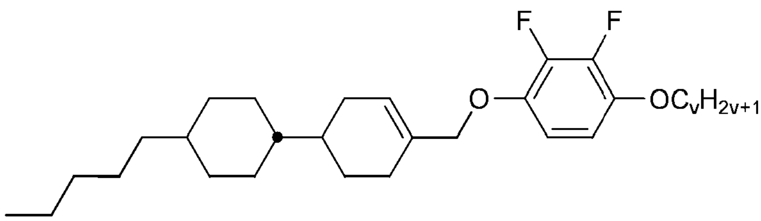

YD-7-5

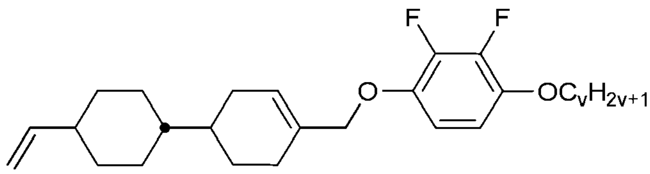

YD-7-6

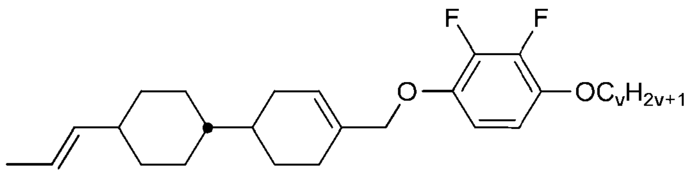

YD-7-7

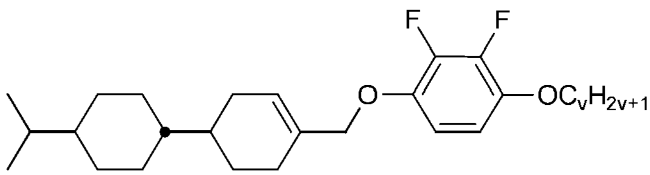

YD-7-8

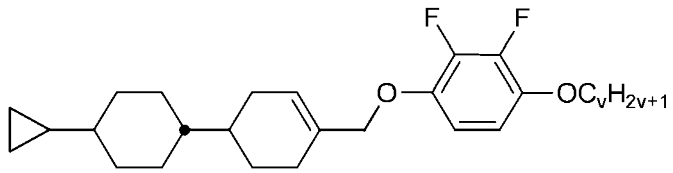

YD-7-9

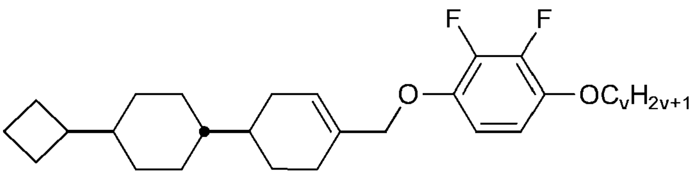

YD-7-10

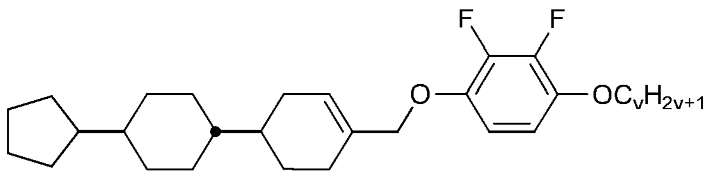

YD-7-11

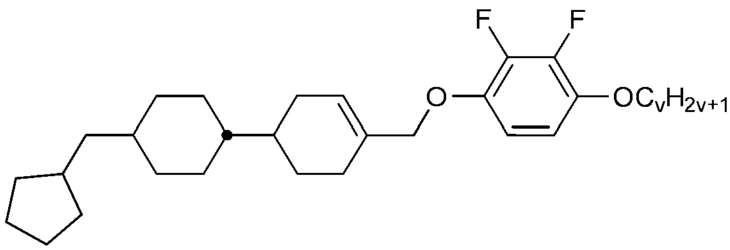

YD-7-12

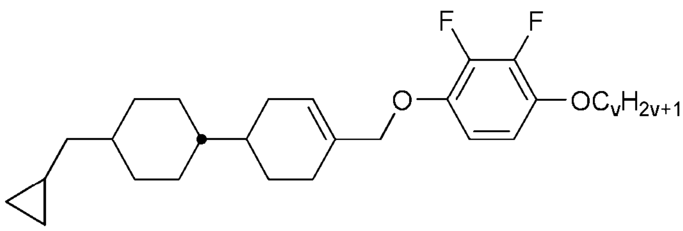

YD-7-13

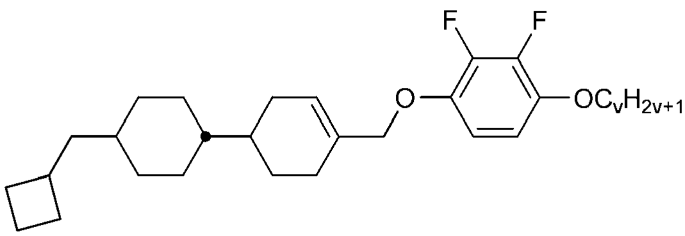

YD-7-14

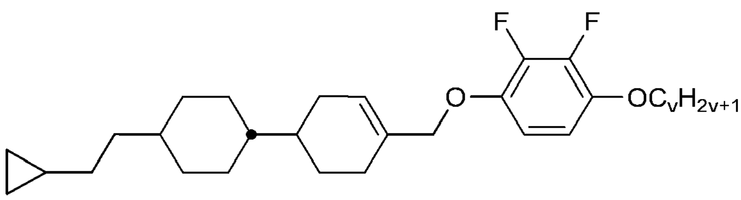

YD-7-15

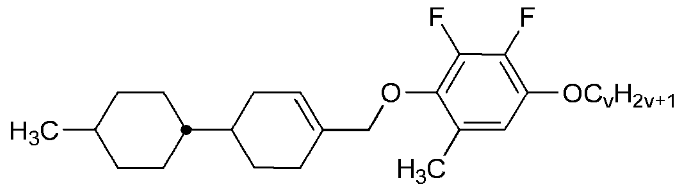

YD-7-16

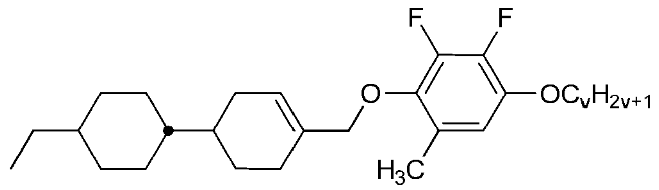

YD-7-17

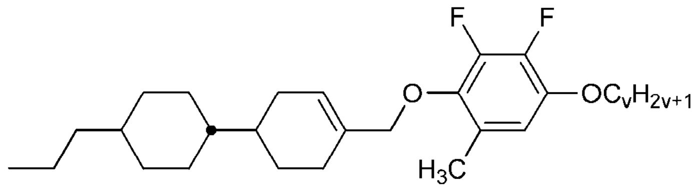

YD-7-18

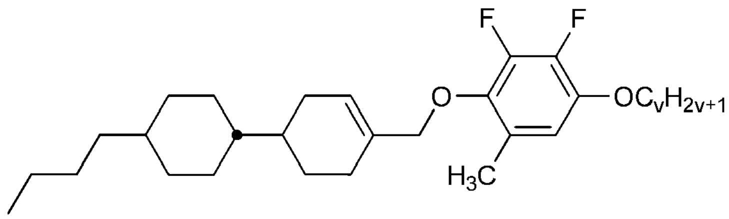

YD-7-19

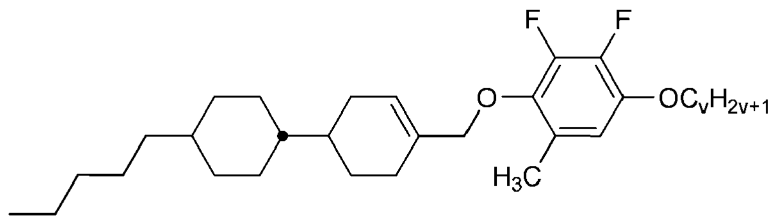

YD-7-20

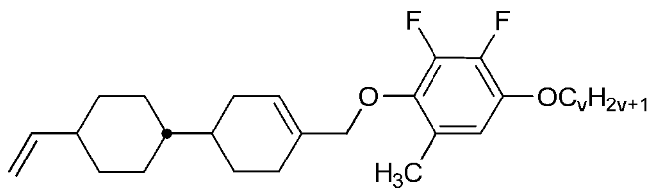

YD-7-21

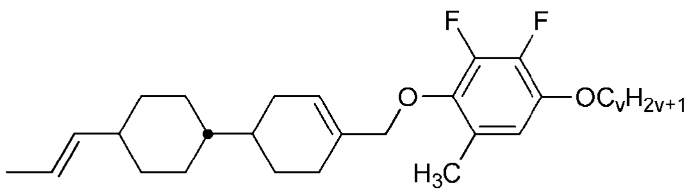

YD-7-22

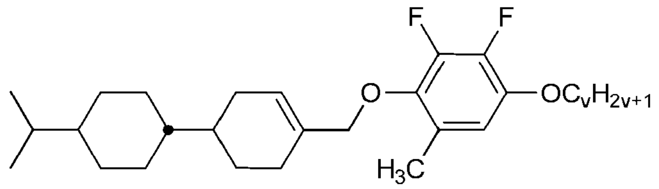

YD-7-23

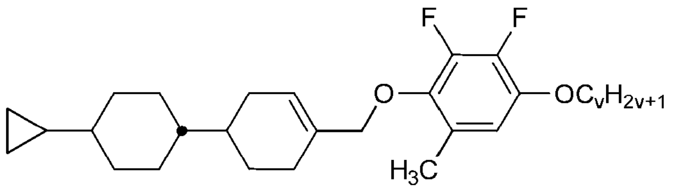

YD-7-24

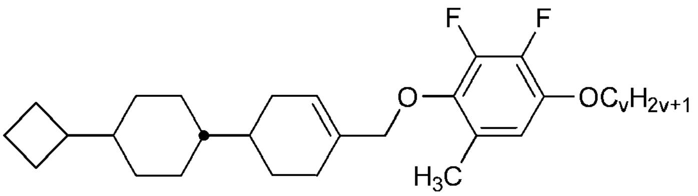

YD-7-25

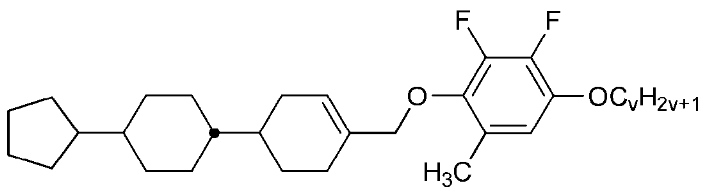

YD-7-26

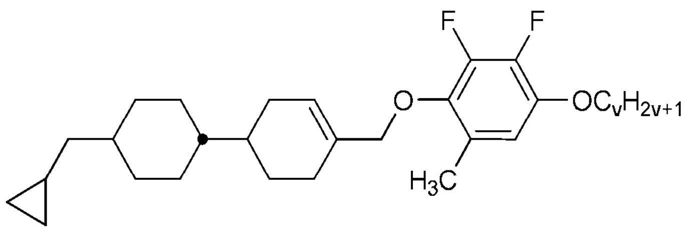

YD-7-27

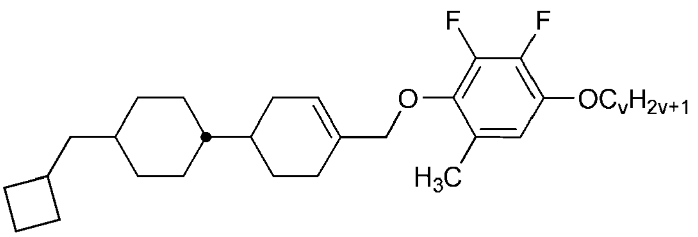

YD-7-28

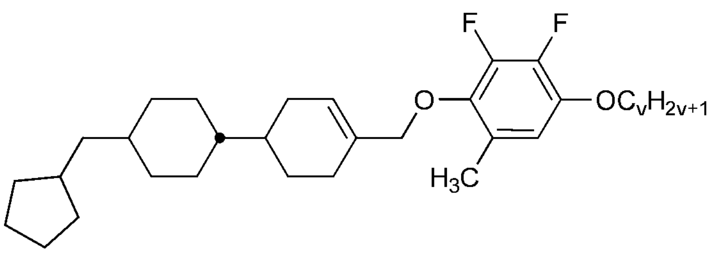

YD-7-29

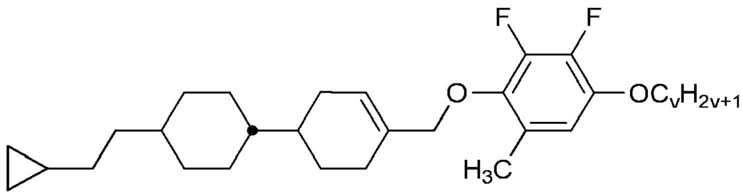

YD-7-30

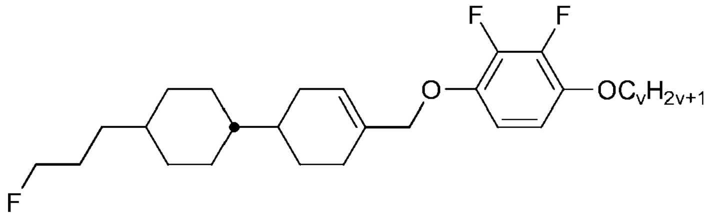

YD-7-31

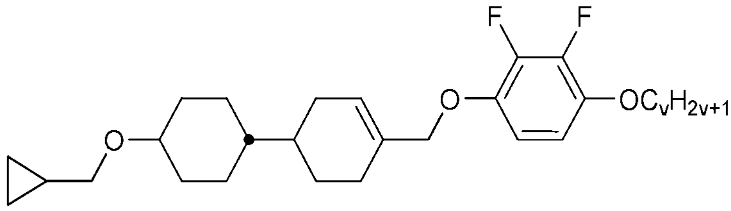

YD-7-32

wherein v is 1, 2, 3, 4, 5 or 6.

In a preferred embodiment, the LC medium comprises one or more compounds of formula YD-11a:

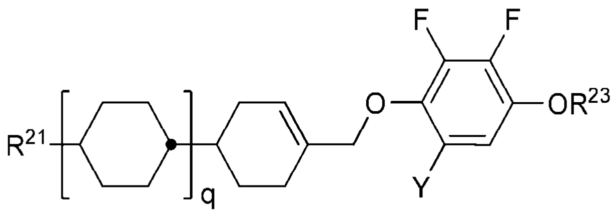

YD-7a

in which $R^{21}$, Y and q have the meanings given in formula YD, and $R^{23}$ is

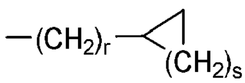

,

in which r is 0, 1, 2, 3, 4, 5 or 6 and s is 1, 2 or 3.

Preferred compounds of formula YD-11a are selected from the following subformulae:

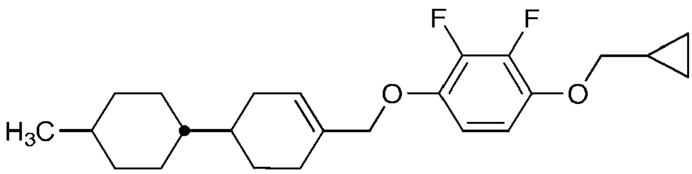

YD-7a-1

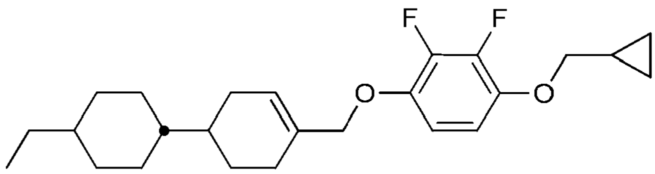

YD-7a-2

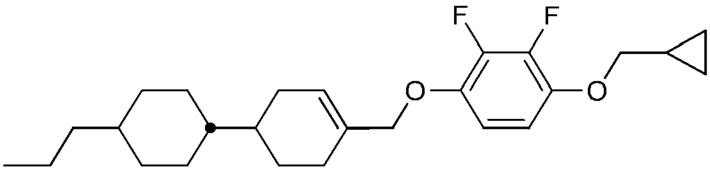

YD-7a-3

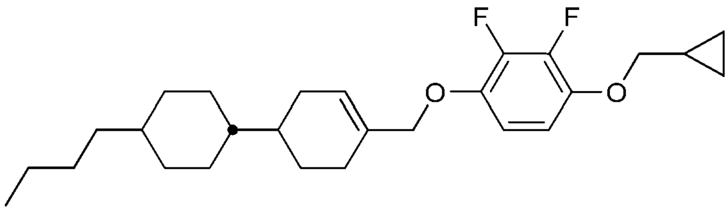

YD-7a-4

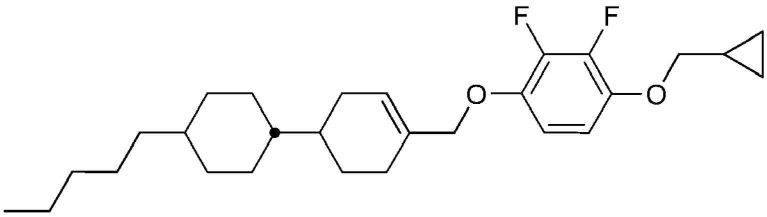

YD-7a-5

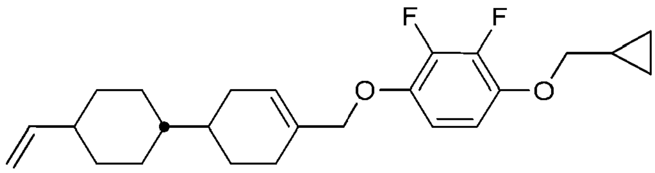

YD-7a-6

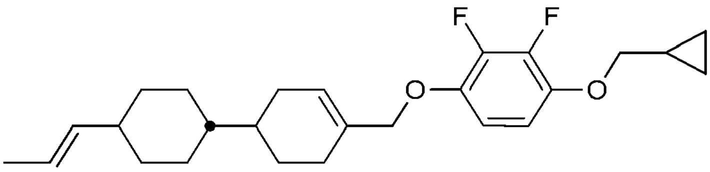

YD-7a-7

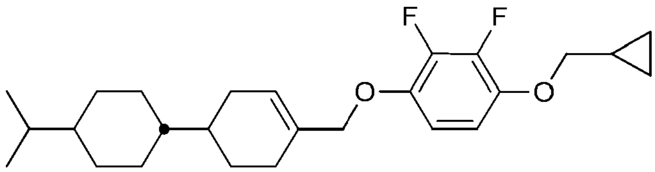

YD-7a-8

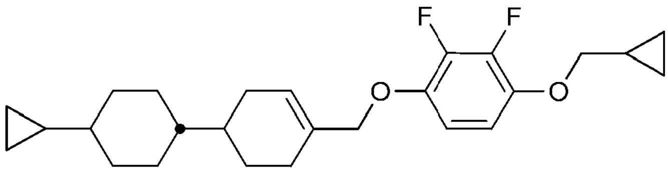

YD-7a-9

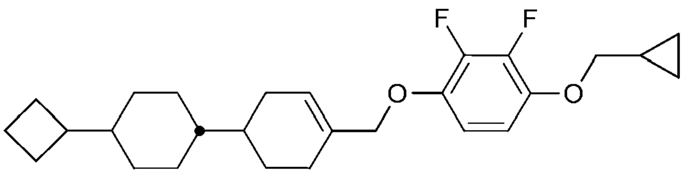

YD-7a-10

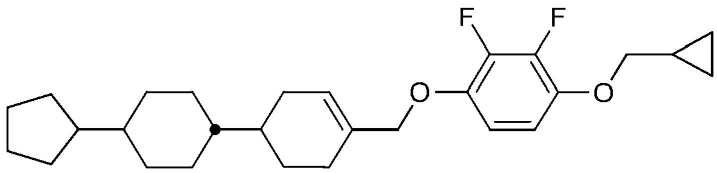

YD-7a-11

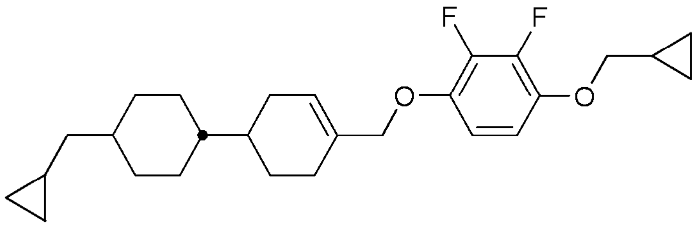

YD-7a-12

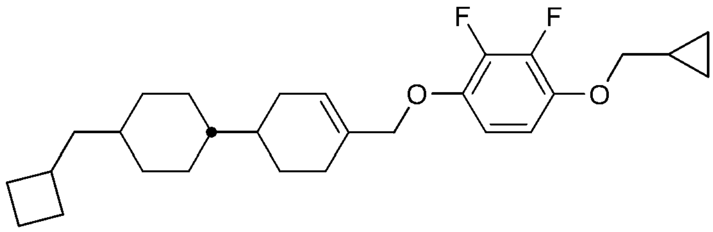

YD-7a-13

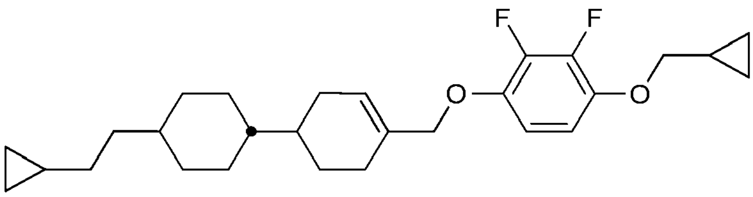

YD-7a-14

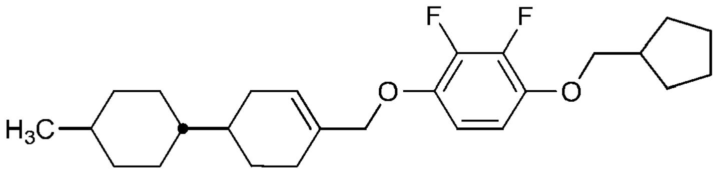

YD-7a-15

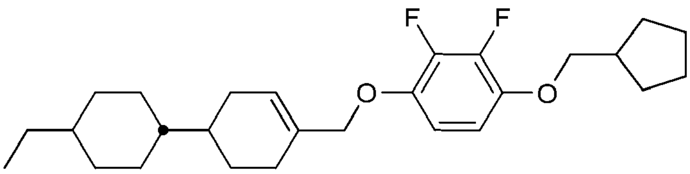

YD-7a-16

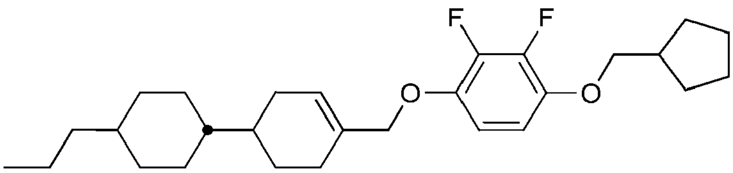

YD-7a-17

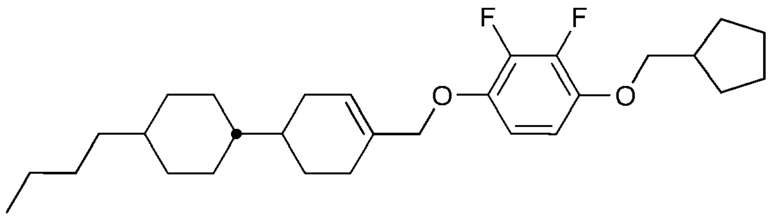

YD-7a-18

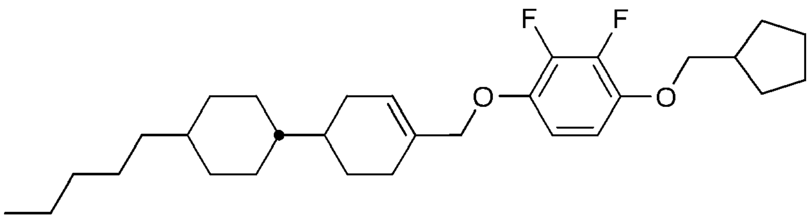

YD-7a-19

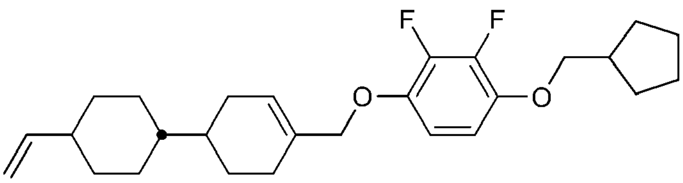

YD-7a-20

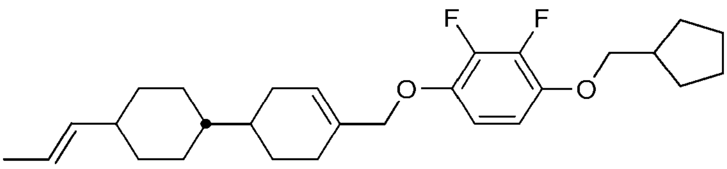

YD-7a-21

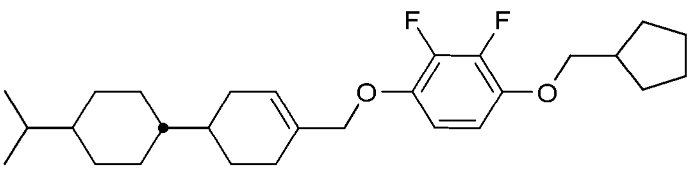

YD-7a-22

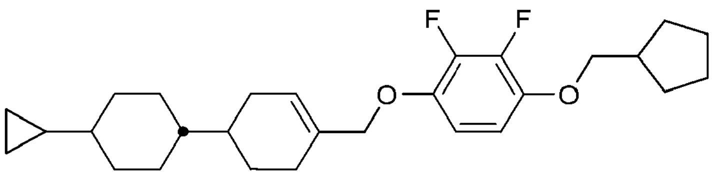

YD-7a-23

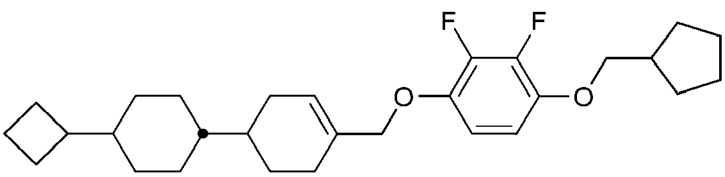

YD-7a-24

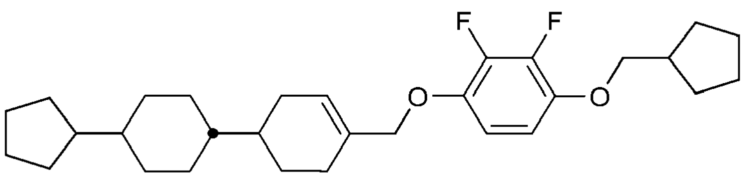

YD-7a-25

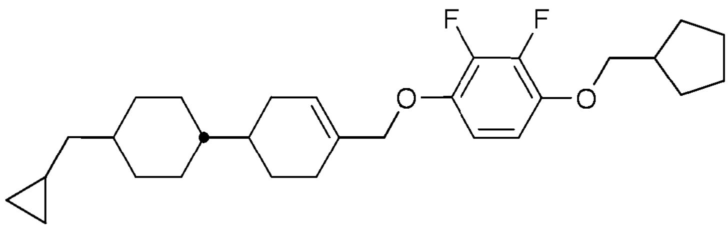

YD-7a-26

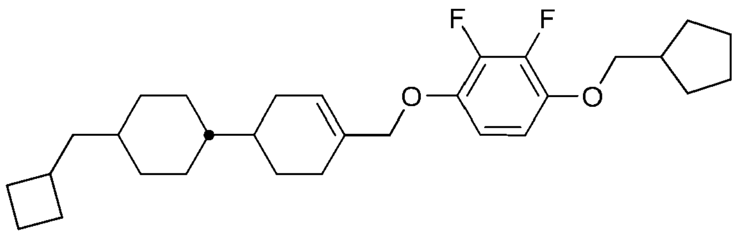

YD-7a-27

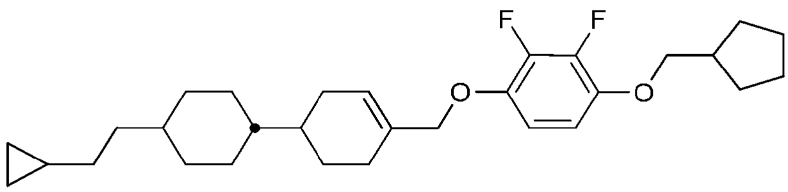

YD-7a-28

In a preferred embodiment, the LC medium comprises one or more compounds of the formula YE selected from the group consisting of the following formulae:

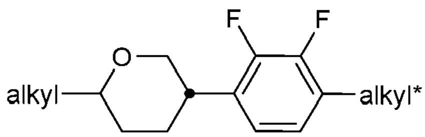

YE-1

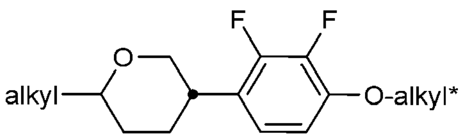

YE-2

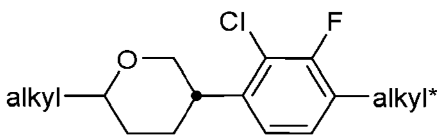

YE-3

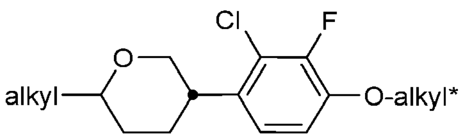

YE-4

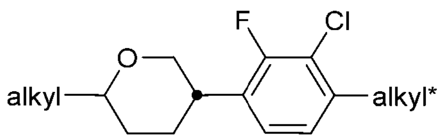

YE-5

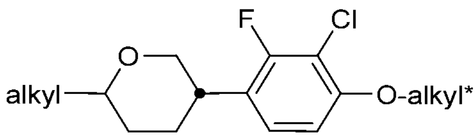

YE-6

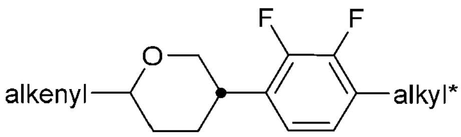

YE-7

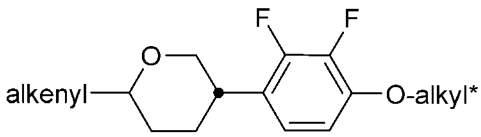

YE-8

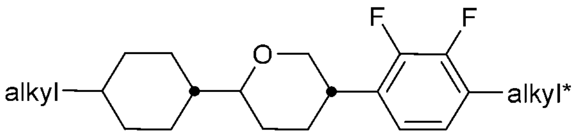

YE-9

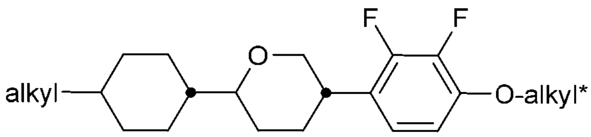

YE-10

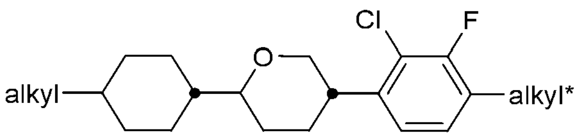

YE-11

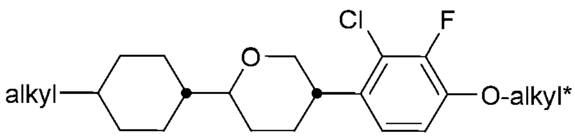

YE-12

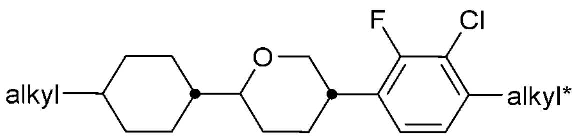

YE-13

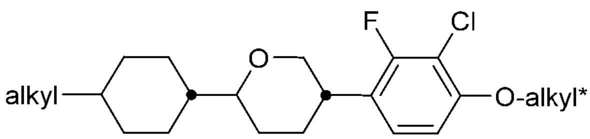

YE-14

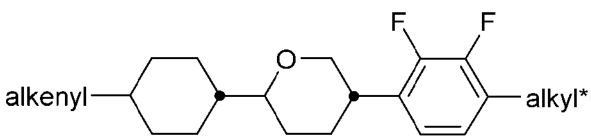

YE-15

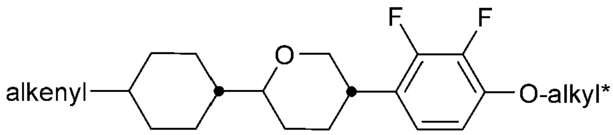

YE-16

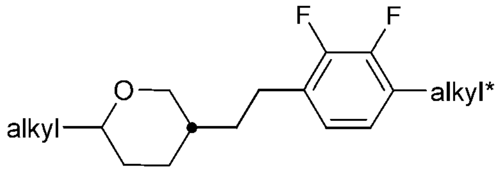

YE-17

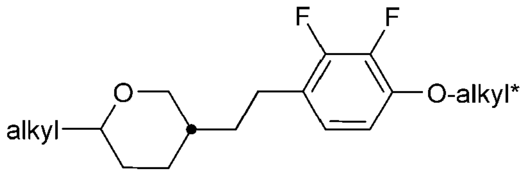

YE-18

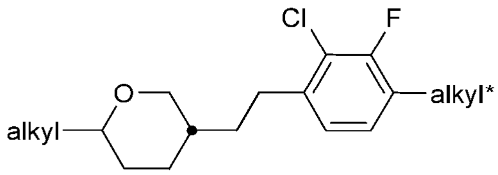

YE-19

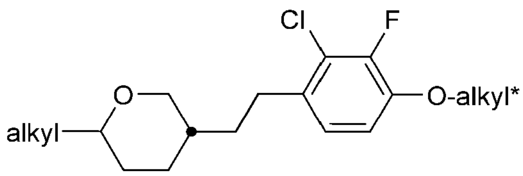

YE-20

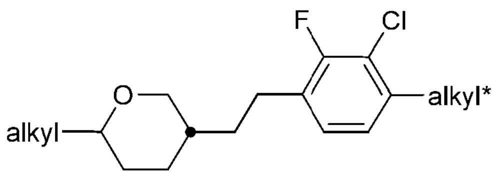

YE-21

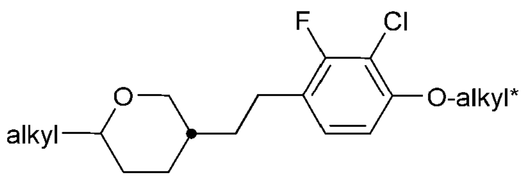

YE-22

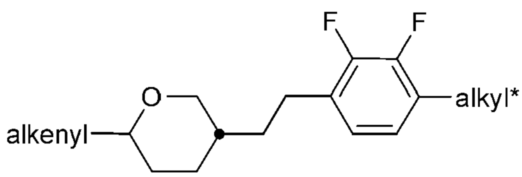

YE-23

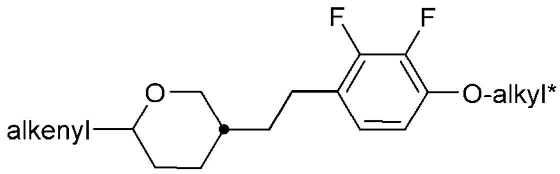

YE-24

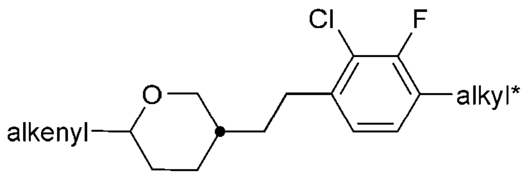

YE-25

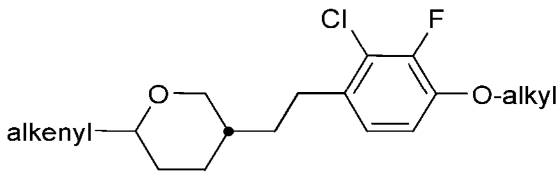

YE-26

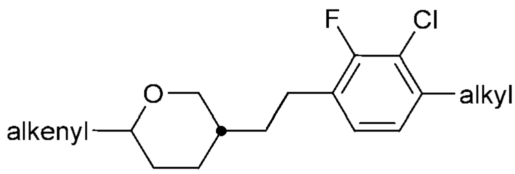

YE-27

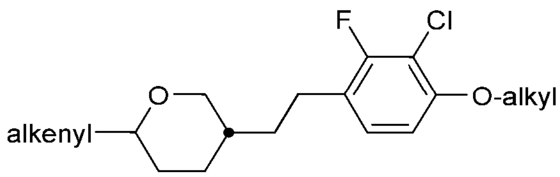

YE-28

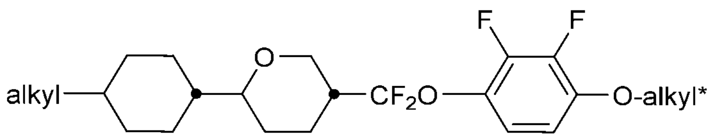

YE-29

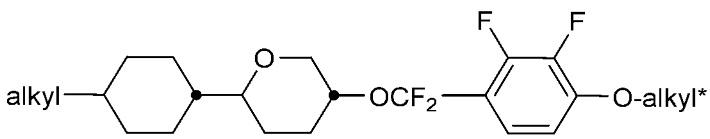

YE-30

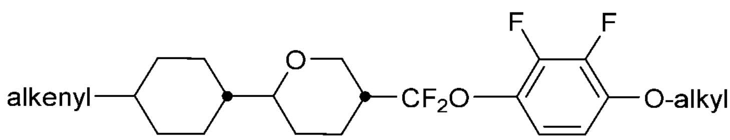

YE-31

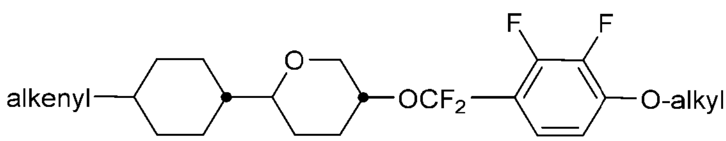

YE-32

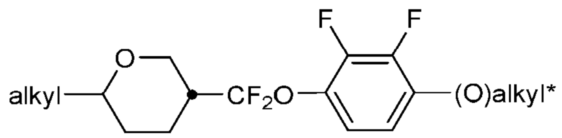

YE-33

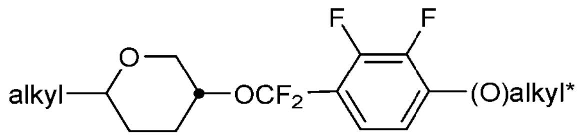

YE-34

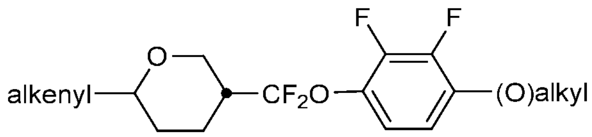

YE-35

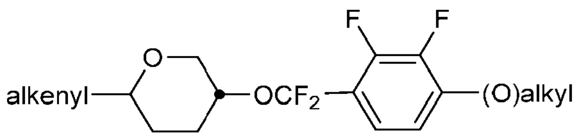

YE-36

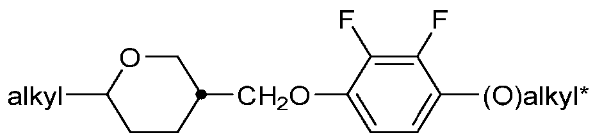

YE-37

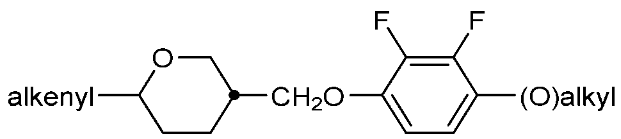

YE-38

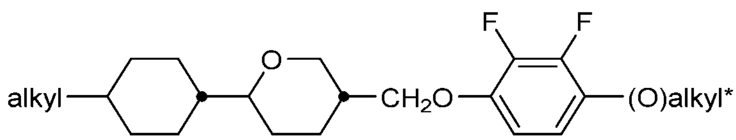

YE-39

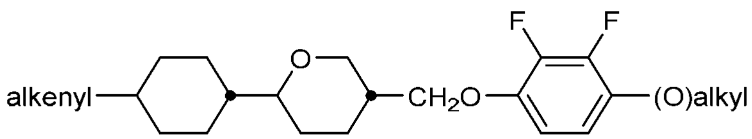

YE-40

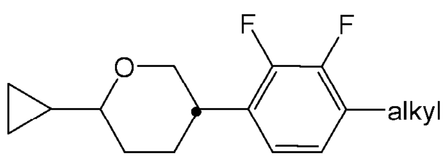

YE-41

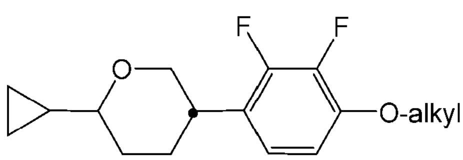

YE-42

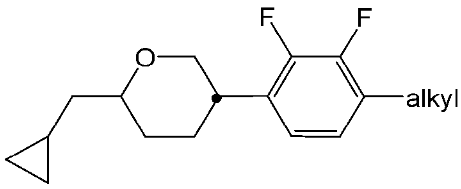

YE-43

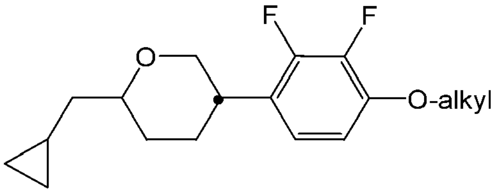

YE-44

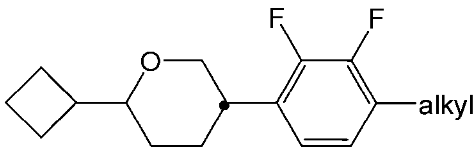

YE-45

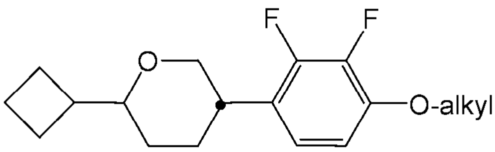

YE-46

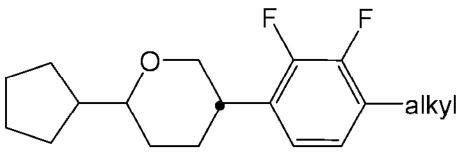

YE-47

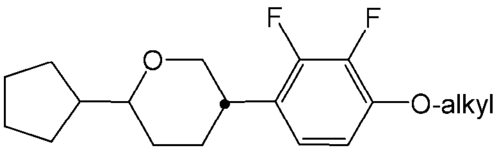

YE-48

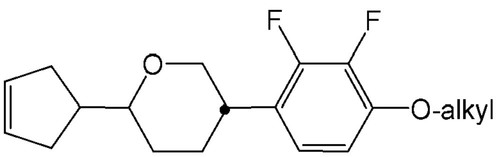

YE-49

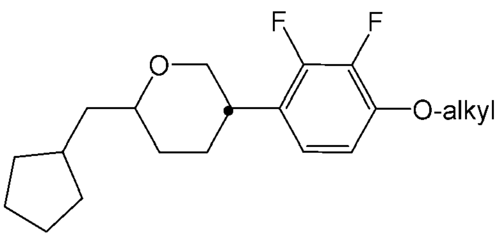

YE-50

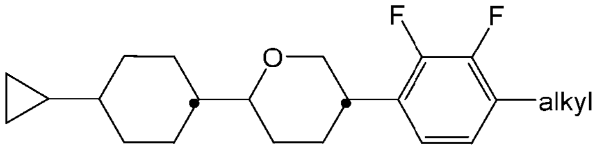

YE-51

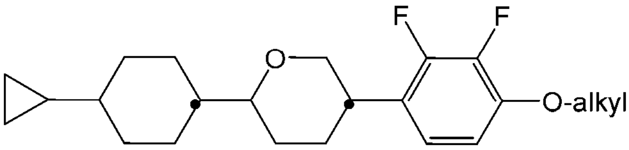

YE-52

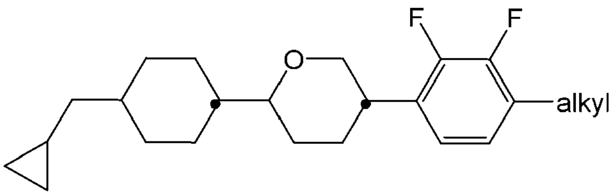

YE-53

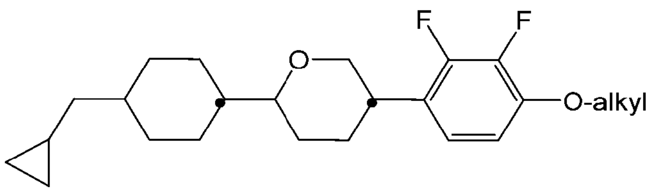

YE-54

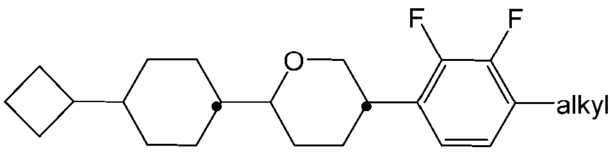

YE-55

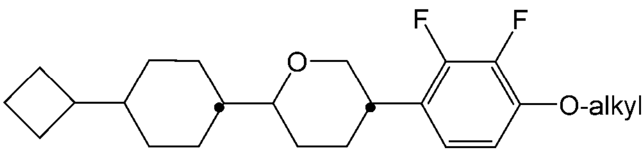

YE-56

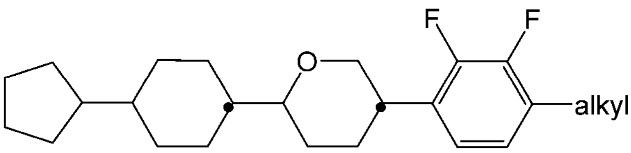

YE-57

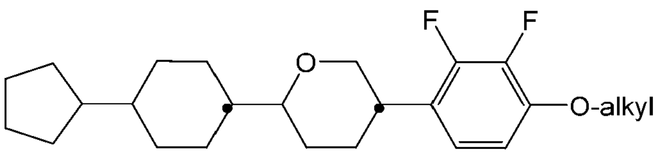

YE-58

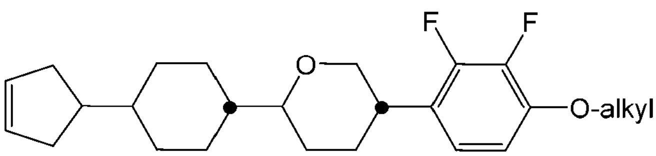

YE-59

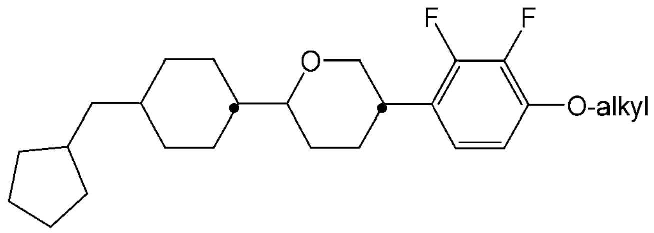

YE-60

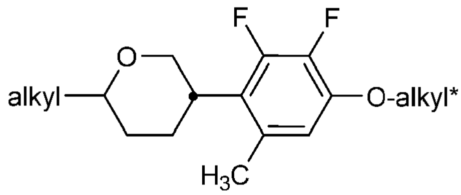

YE-61

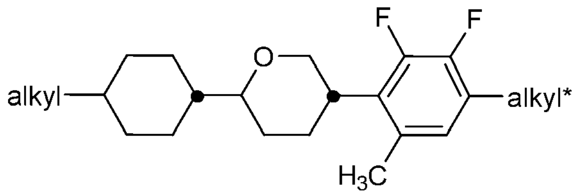

YE-62

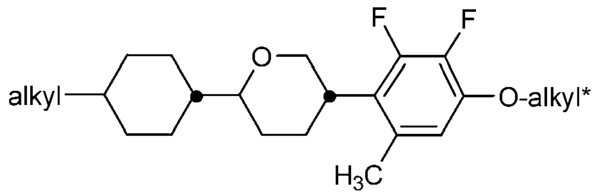

YE-63

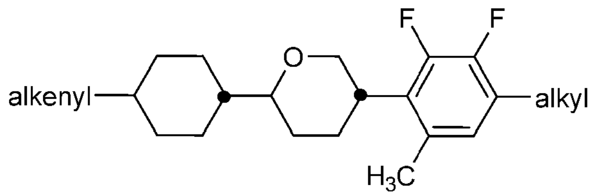

YE-64

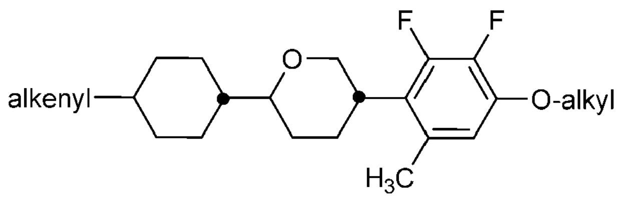

YE-65

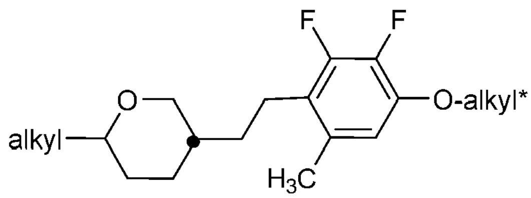

YE-66

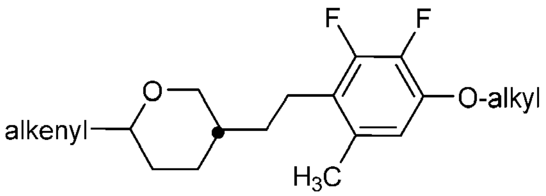

YE-67

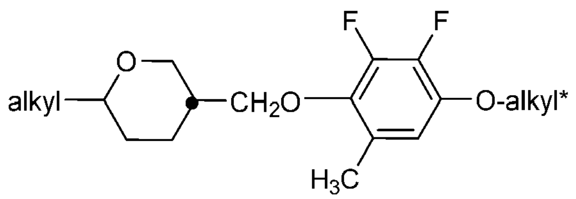

YE-68

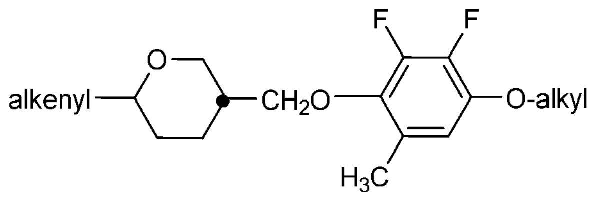

YE-69

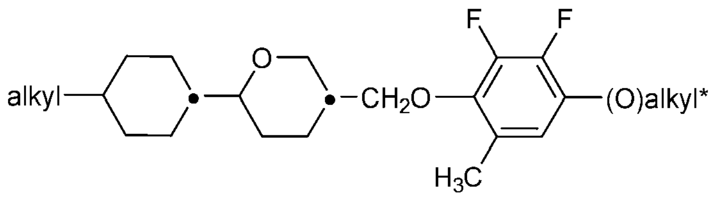

YE-70

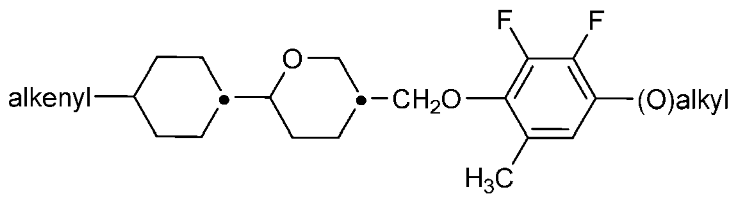

YE-71

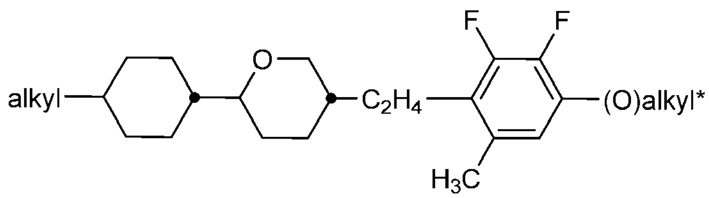

YE-72

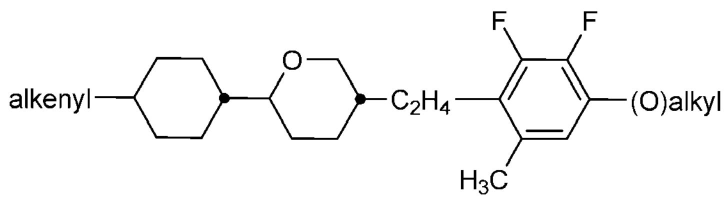

YE-73

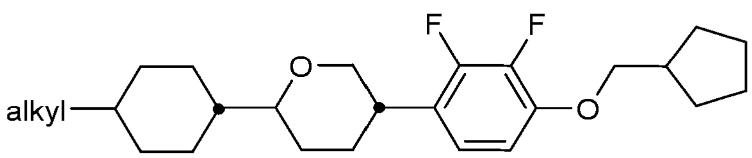

YE-74

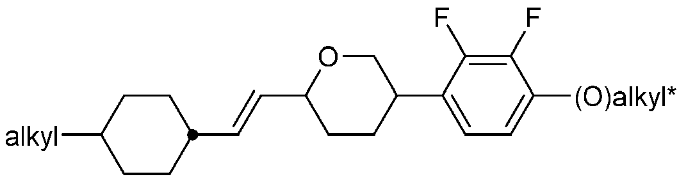

YE-75

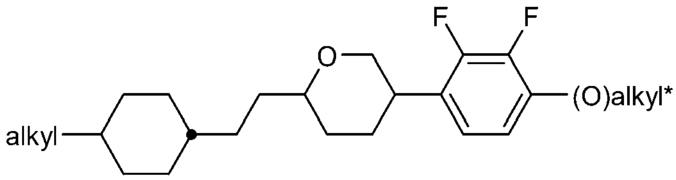

YE-76

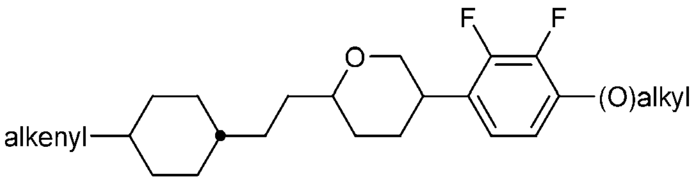

YE-77

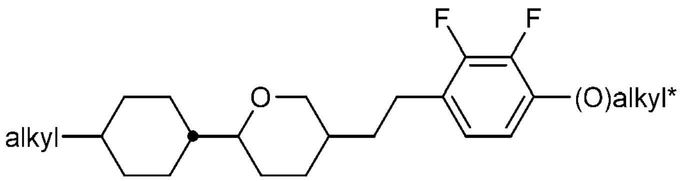

YE-78

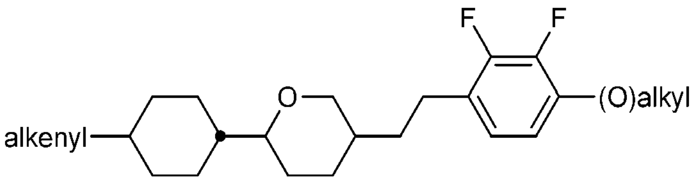

YE-79

in which

| | |
|---|---|
| a | denotes 1 or 2, |
| alkyl and alkyl* | each, independently of one another, denote a straight-chain alkyl group having 1 to 6 C atoms, |
| alkenyl | denotes a straight-chain alkenyl group having 2 to 6 C atoms, and |
| (O) | denotes an oxygen atom or a single bond, and |

alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds selected from the group consisting of formulae YE-2, YE-8, YE-10, YE-16, YE-18, YE-37, YE-38, YE-39 and YE-40.

Preferably, the LC medium comprises one or more compounds of the formula YE-2 selected from the following sub-formulae:

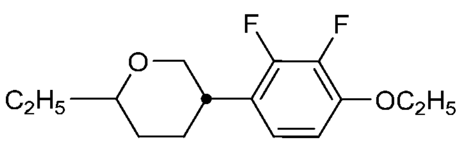

YE-2-1

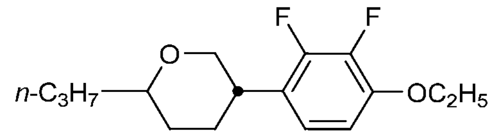

YE-2-2

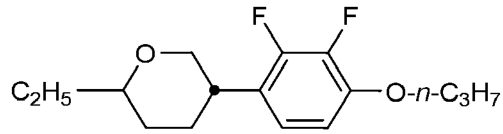

YE-2-3

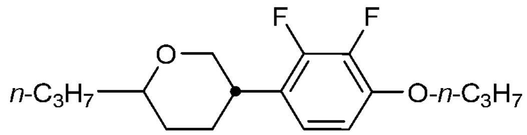

YE-2-4

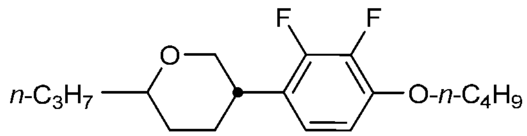

YE-2-5

Preferably, the LC medium comprises one or more compounds of the formula YE-10 selected from the following sub-formulae:

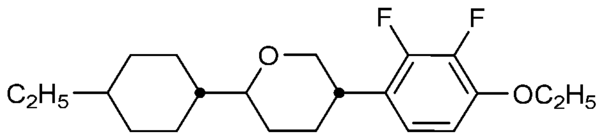

YE-10-1

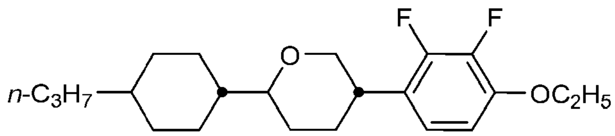

YE-10-2

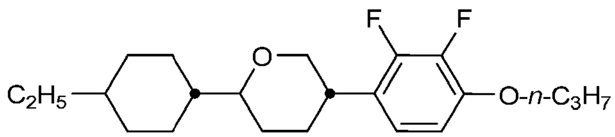

YE-10-3

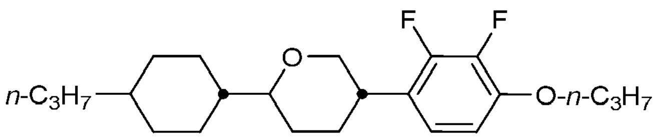

YE-10-4

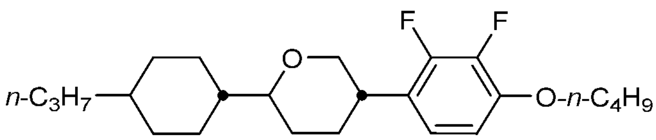

YE-10-5

In another preferred embodiment, the LC medium comprises one or more compounds of the formula YF selected from the group consisting of the following formulae:

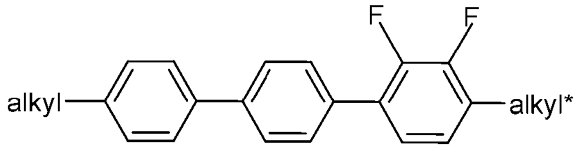

YF-1

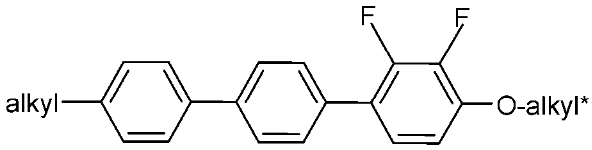

YF-2

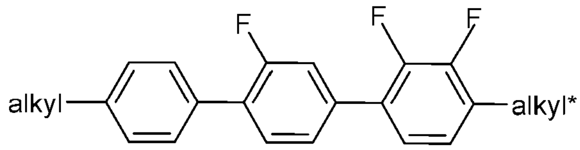

YF-3

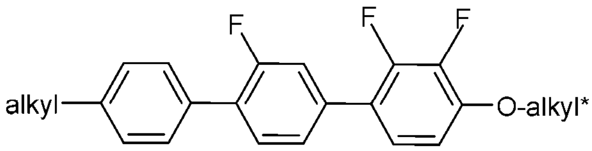

YF-4

in which
alkyl and alkyl* each, independently of one another, denote a straight-chain or branched alkyl group having 1 to 6 C atoms.

Preferably, the LC medium comprises one or more compounds of the formula YF-2 selected from the following sub-formulae:

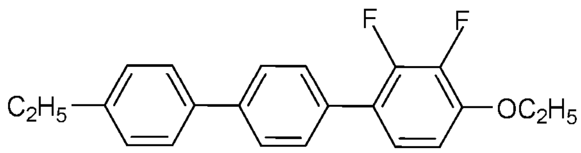

YF-2-1

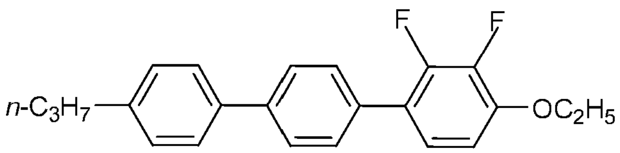

YF-2-2

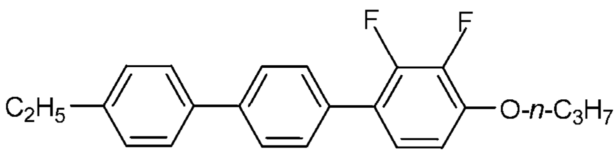

YF-2-3

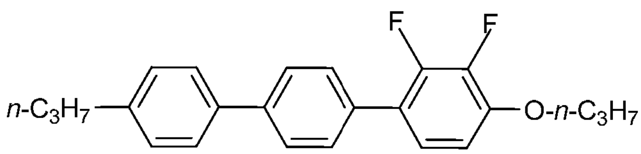

YF-2-4

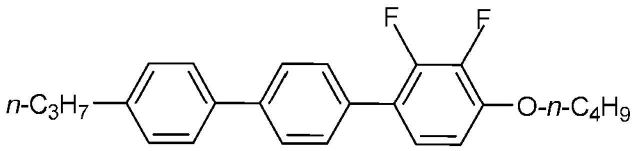

YF-2-5

Preferably, the one or more compounds of the formula YF-4 are selected from the following sub-formulae:

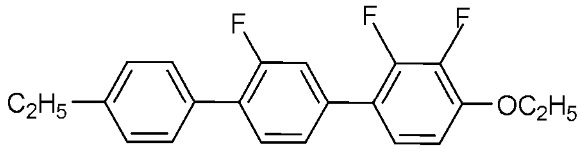

YF-4-1

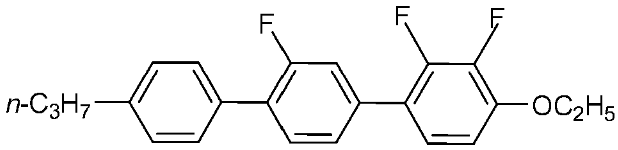

YF-4-2

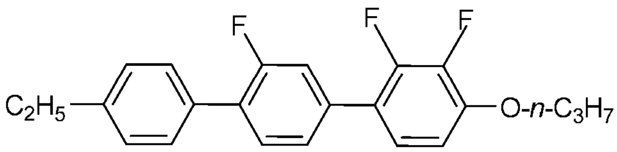

YF-4-3

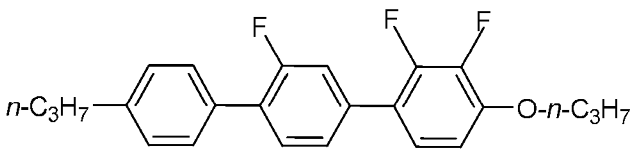

YF-4-4

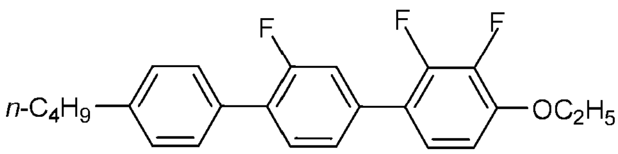

YF-4-5

In a preferred embodiment, the LC medium comprises one or more compounds of the formula YG selected from the group consisting of the following formulae:

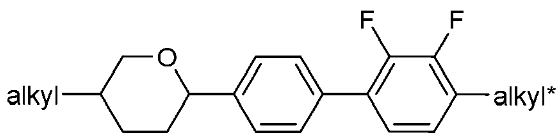

YG-1

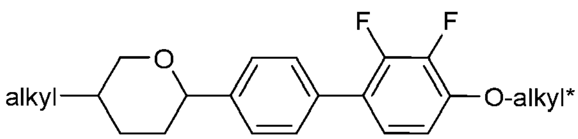

YG-2

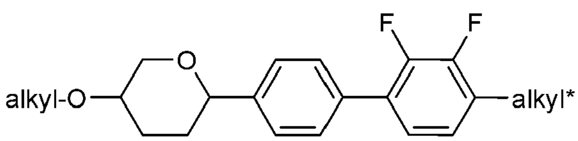

YG-3

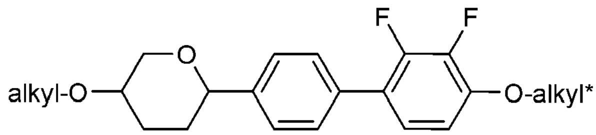
YG-4

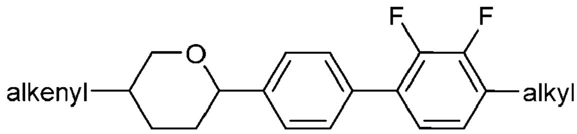
YG-5

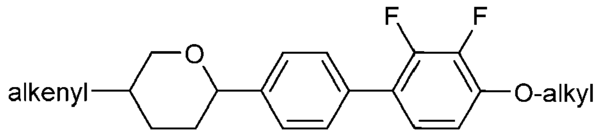
YG-6

in which

| | |
|---|---|
| alkyl and alkyl* | each, independently of one another, denote a straight-chain alkyl group having 1 to 6 C atoms, |
| alkenyl | denotes a straight-chain alkenyl group having 2 to 6 C atoms, and |
| (O) | denotes an oxygen atom or a single bond, and |

alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds selected from the group consisting of formulae YG-1, YG-2 and YG-6.

Preferably, the compounds of the formulae YG-1, YG-2 and YG-6 are selected from the following sub-formulae:

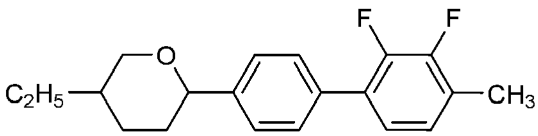
YG-1-1

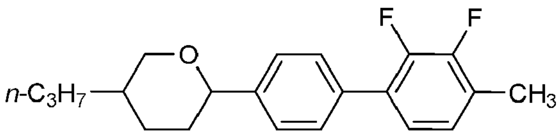
YG-1-2

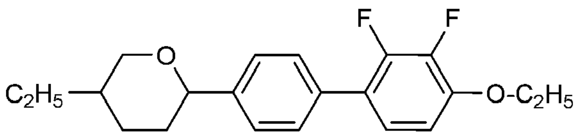
YG-2-1

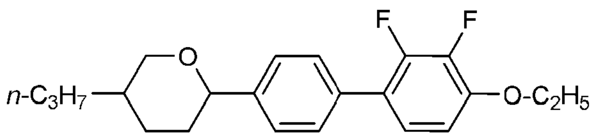
YG-2-2

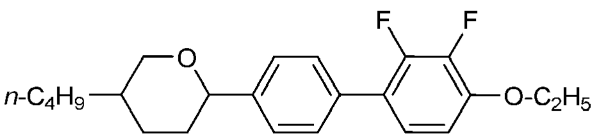
YG-2-3

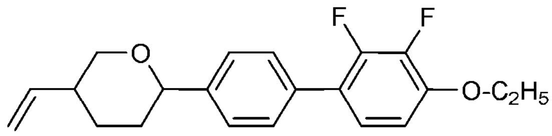

YG-6-1

In a preferred embodiment of the present invention, the medium contains one or more compounds of the Formula B' selected from the following subformulae:

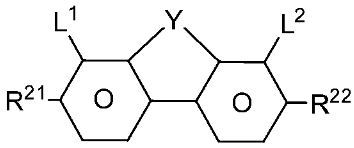

B´1

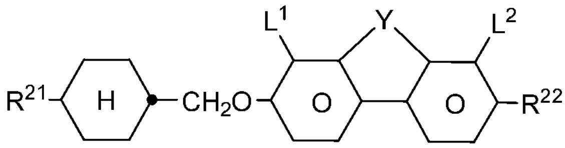

B´2

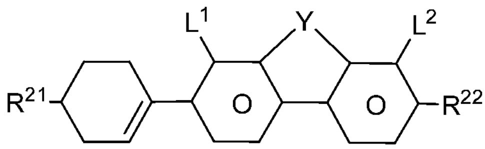

B´3

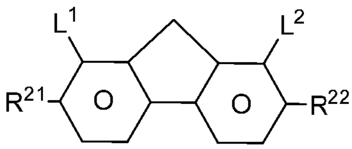

B´4

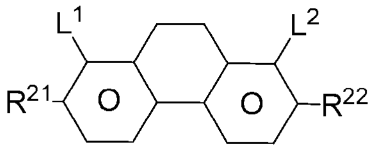

B´5

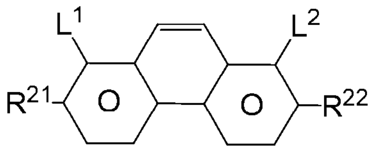

B´6

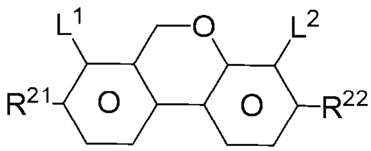

B´7

wherein Y, $L^1$, $L^2$, $R^{21}$ and $R^{22}$ have the meanings given in the Formula B'.

Preferred compounds of the Formula B'1 are selected from the following subformulae:

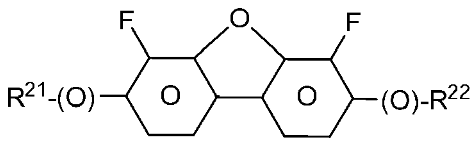

B´1-1

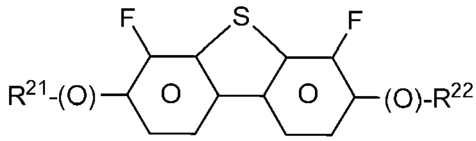

B´1-2

wherein $R^{21}$ and $R^{22}$ independently denote a straight-chain alkyl group having 1 to 6 C atoms, in which one or more $CH_2$ groups are optionally substituted by -C≡C-, $-CF_2O-$, $-OCF_2-$, -CH=CH-,

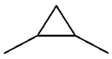 , 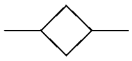 , 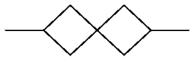 , 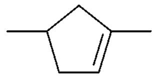 , 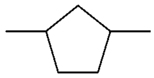 ,

-O-, -CO-O- or -O-CO- in such a way that O atoms are not linked directly to one another, and in which one or more H atoms may be replaced by a halogen atom.

Very preferred are compounds of the Formula B’1-1 and B’1-2 wherein both groups (O) denote an oxygen atom and $R^1$ and $R^3$ independently denote an alkyl group being methyl, ethyl, propyl, butyl, pentyl or hexyl, which are preferably straight-chained. Very preferably one *"alkyl"* is ethyl and the other *"alkyl*"* is *n*-pentyl.

Particularly preferred are compounds of the Formula B’1-2.

Preferably, the compounds of the Formula B’1-1 are selected from the group of compounds of the Formulae B’1-1-1 to B’1-1-11, preferably of the Formula B’1-1-6:

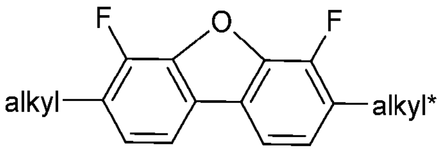

B´1-1-1

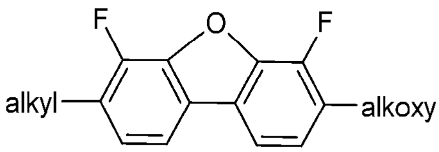

B´1-1-2

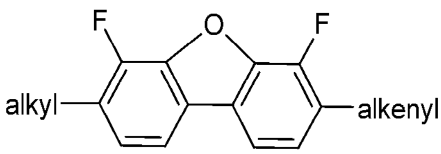

B´1-1-3

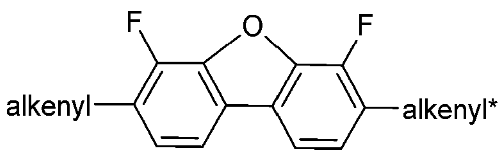

B´1-1-4

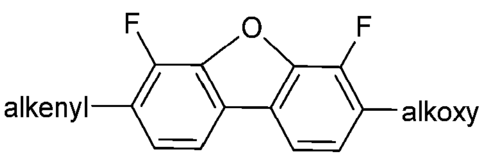

B´1-1-5

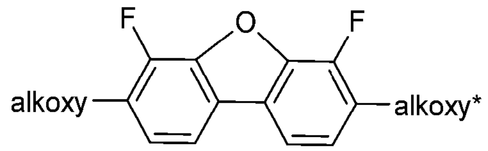

B´1-1-6

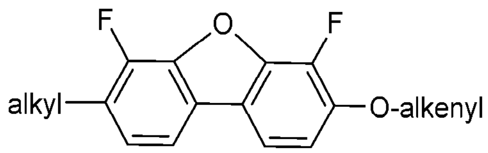

B´1-1-7

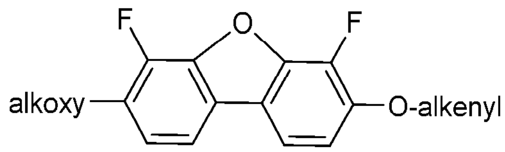

B´1-1-8

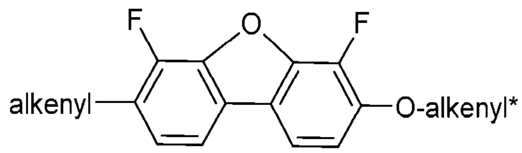

B´1-1-9

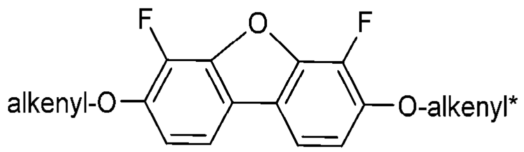

B´1-1-10

in which

| | |
|---|---|
| *"alkyl"* and *"alkyl*"* | each, independently of one another, denote a straight-chain alkyl group having 1 to 6 C atoms, |
| *"alkenyl"* and *"alkenyl*"* | each, independently of one another, denote a straight-chain alkenyl group having 2 to 6 C atoms, |
| *"alkoxy"* and *"alkoxy*"* | each, independently of one another, denote a straight-chain alkoxy group having 1 to 6 C atoms. |

Preferably, the compounds of the Formula B1-2 are selected from the group of compounds of Formulae B1-2-1 to B1-2-10, preferably of Formula B1-2-6:

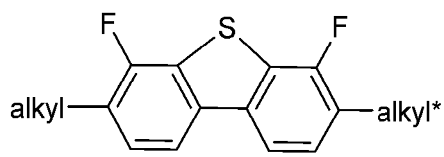

B´1-2-1

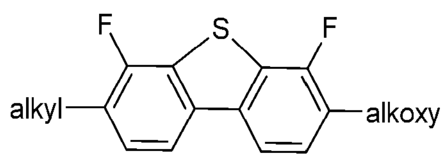

B´1-2-2

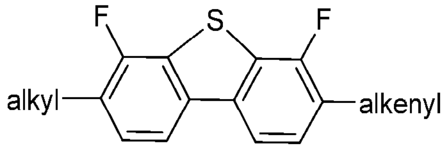

B´1-2-3

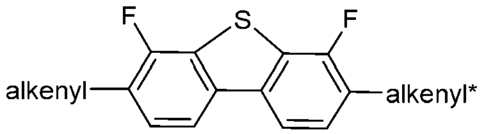

B´1-2-4

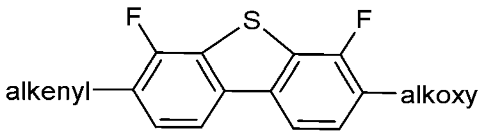

B´1-2-5

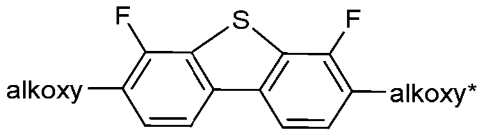

B´1-2-6

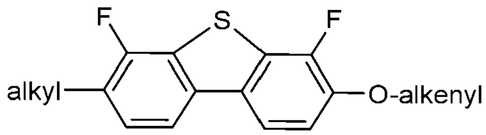

B´1-2-7

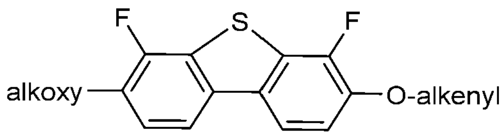

B´1-2-8

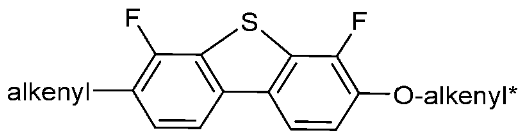

B´1-2-9

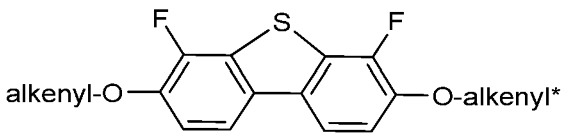

B´1-2-10

in which

| | |
|---|---|
| *"alkyl"* and *"alkyl*"* | each, independently of one another, denote a straight-chain alkyl group having 1 to 6 C atoms, |
| *"alkenyl"* and *"alkenyl*"* | each, independently of one another, denote a straight-chain alkenyl group having 2 to 6 C atoms, |
| *"alkoxy"* and *"alkoxy*"* | each, independently of one another, denote a straight-chain alkoxy group having 1 to 6 C atoms. |

Optionally, the LC medium comprises one or more compounds of the Formula B’1-1A and/or B1-2A:

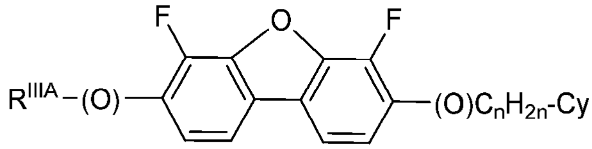

B´1-1A

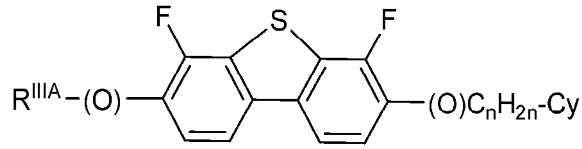

B´1-2A

in which

| | |
|---|---|
| (O) | denotes O or a single bond, |
| $R^{IIIA}$ | denotes alkyl or alkenyl having up to 7 C atoms or a group Cy-$C_mH_{2m+1}$-, |
| m and n | are, identically or differently, 0, 1, 2, 3, 4, 5 or 6, preferably 1, 2 or 3, very preferably 1, |
| Cy | denotes a cycloaliphatic group having 3, 4 or 5 ring atoms, which is optionally substituted with alkyl or alkenyl each having up to 3 C atoms, or with halogen, and preferably denotes cyclopropyl, cyclobutyl, cyclopentyl or cyclopentenyl. |

The compounds of the Formulae B’1-1A and/or B’1-2A are contained in the medium either alternatively or in addition to the compounds of the Formulae B’1-1 and B’1-2, preferably additionally.

Preferred compounds of the Formulae B’1-1A and/or B’1-2A are also the following:

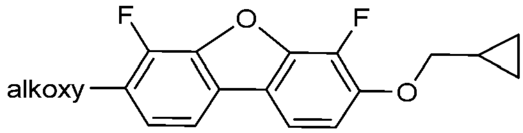

B´1-1A-1

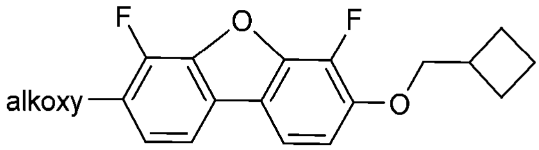

B´1-1A-2

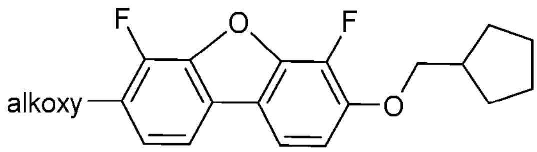

B´1-1A-3

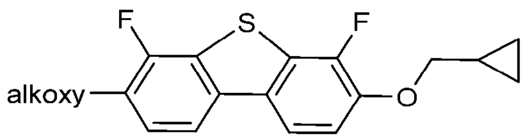

B´1-2A-1

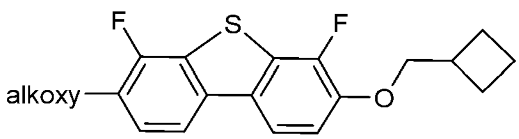

B´1-2A-2

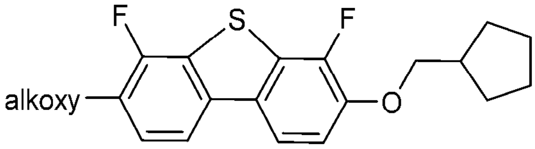

B´1-2A-3

in which alkoxy denotes a straight-chain alkoxy group having 1 to 6 C atoms or alternatively $-(CH_2)_nF$ in which n is 2, 3, 4, or 5, preferably $C_2H_4F$.

The proportion of the compounds of the Formula B'1 or its subformulae in the LC medium is preferably from 0 to 20%, very preferably from 0 to 15% by weight.

Preferably, the LC medium contains 1, 2 or 3 compounds of the Formula B'1 or its subformulae.

In a preferred embodiment of the present invention, the LC medium may comprise one or more compounds of the Formula B'2-2

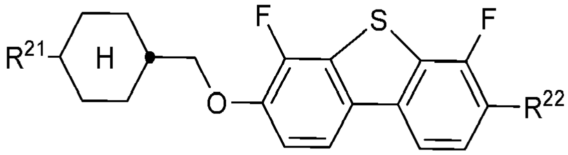

B´2-2

in which

$R^{21}$, $R^{22}$ identically or differently, denote an alkyl or alkoxy group having 1 to 6 C atoms, in which one or more $CH_2$ groups in these groups are optionally replaced, independently of one another, by -C≡C-, $-CF_2O-$, $-OCF_2-$, -CH=CH-,

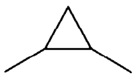
,
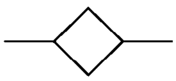
,

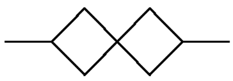
,
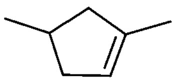
,
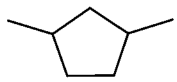
,

-O-, -CO-O- or -O-CO- in such a way that O atoms are not linked directly to one another, and in which, in addition, one or more H atoms may be replaced by halogen.

The compounds of the Formula B'2-2 are preferably selected from the group of compounds of the Formulae B'2-2-1 to B'2-2-10:

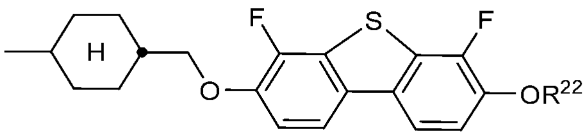

B´2-2-1

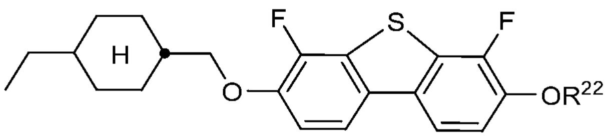

B´2-2-2

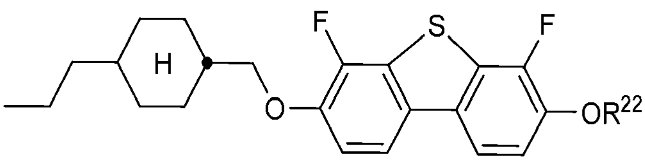

B´2-2-3

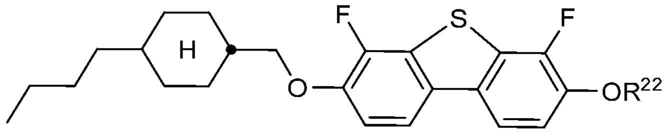

B´2-2-4

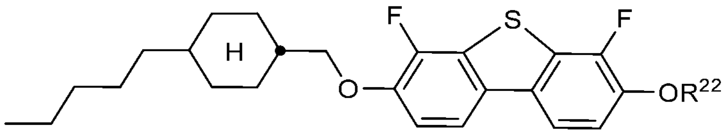

B´2-2-5

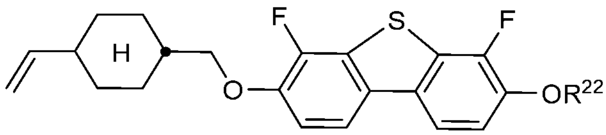

B´2-2-6

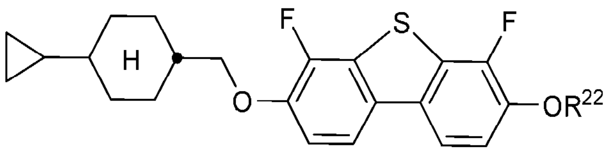

B´2-2-7

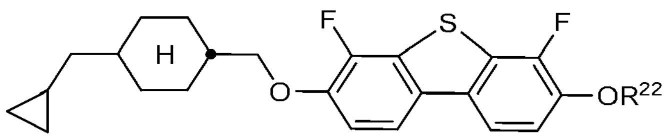

B´2-2-8

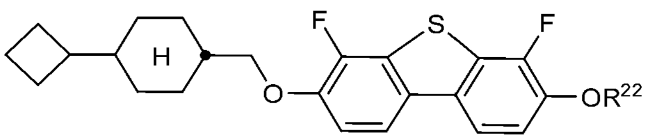

B´2-2-9

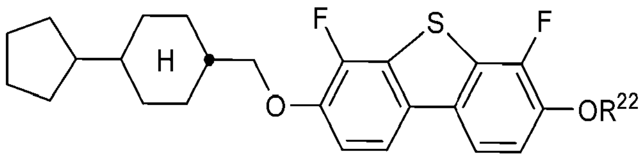

B´2-2-10

in which $R^{22}$ denotes alkyl having 1 to 6 C-atoms, preferably ethyl, n-propyl or n-butyl, or alternatively cyclopropylmethyl, cyclobutylmethyl or cyclopentylmethyl or alternatively $-(CH_2)_nF$ in which n is 2, 3, 4, or 5, preferably $C_2H_4F$.

Particularly preferred compounds of the Formula B'2 are selected from the following subformulae:

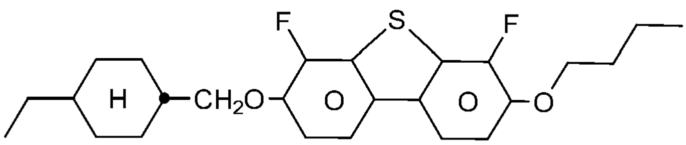

B´2-2-11

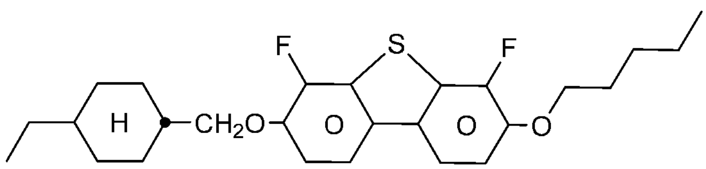

B´2-2-12

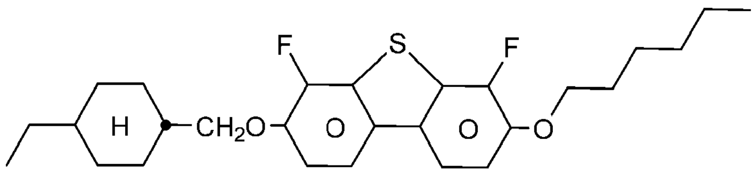

B′2-2-13

The proportion of the compounds of the Formula B'2 or its subformulae in the LC medium is preferably from 1 to 20%, very preferably from 1 to 15% by weight.

Preferably, the LC medium contains 1, 2 or 3 compounds of the Formula B2 or its subformulae.

In a preferred embodiment, the LC medium contains one or more compounds of the Formula B' or its subformulae B'1, B'2, B'3, B'1-1, B'1-2, B'2-1, B'2-2, B'2-3, B'3-1, B'3-2, B'3-1-1, B'3-1-2, B'3-2-1 and B'3-2-2 wherein the dibenzofuran or dibenzothiophene group is substituted by a methyl or methoxy group, preferably by a methyl group, preferably in p-position to the substituent F, very preferably in p-position to the substituent F (i.e. in m-position to the terminal group $R^2$ or $X^1$).

Preferably, the total proportion of compounds of the Formula B' or their subformulae in the LC medium is from 2 to 25%, very preferably from 3 to 20% by weight.

The total content of the compounds of Formulae YA to YG and B' in the LC medium preferably ranges from 0 % to 15 % by weight, more preferably from 0.5 % to 10 % by weight.

In addition to the compounds of Formulae I, P, S and/or B the LC medium preferably contains one or more compounds of the Formulae N1 and N2:

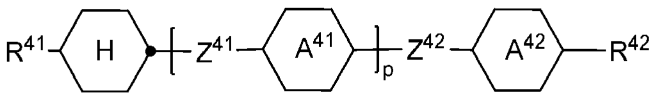

N1

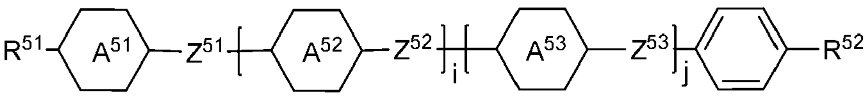

N2

in which

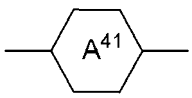

and

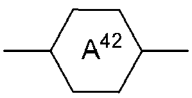

independently of one another and, if

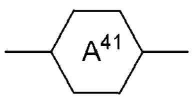

occurs twice, also these independently of one another, denote

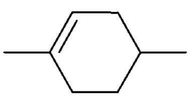

,

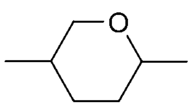

,

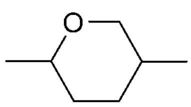

,

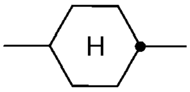, 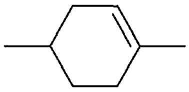, 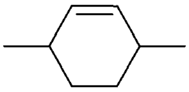,

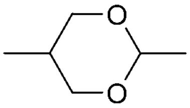, 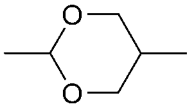, 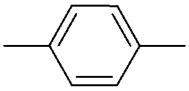,

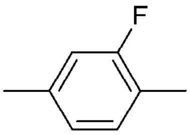, 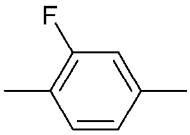, 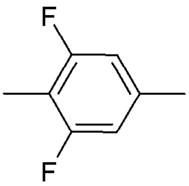,

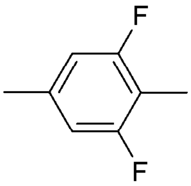 or 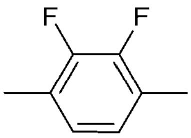,

$Z^{41}$ and $Z^{42}$ independently of one another and, if $Z^{41}$ occurs twice, also these independently of one another, denote $-CH_2CH_2-$, -COO-, *trans*-CH=CH-, *trans*-CF=CF-, $-CH_2O-$, $-CF_2O-$, -C≡C- or a single bond,

p denotes 0, 1 or 2,

$R^{41}$ and $R^{42}$ each, independently of one another, denote an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

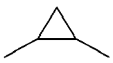, 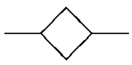,

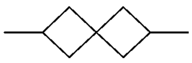, 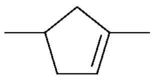, 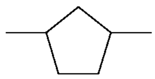,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

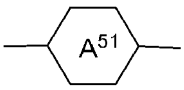

to

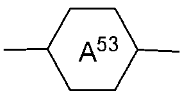,

if present, each, independently of one another, denote

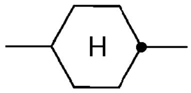,
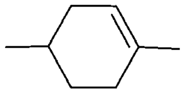,
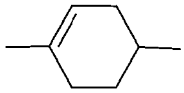,

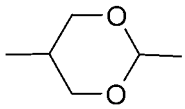,
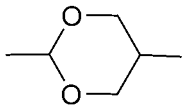,
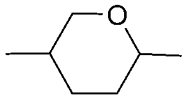,

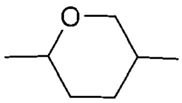,
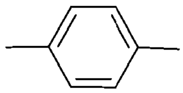,

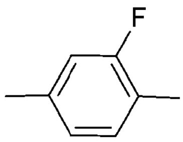
or
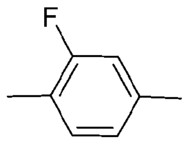,

| | |
|---|---|
| $R^{51}$ and $R^{52}$ | each, independently of one another, have the meanings of $R^{41}$ and $R^{42}$; |
| $Z^{51}$ to $Z^{53}$ | each, independently of one another, have the meanings of $Z^{41}$ and $Z^{42}$, and |
| i and j | each, independently of one another, denote 0 or 1, |

wherein or more, preferably one, of the aromatic rings may optionally be substituted by an alkyl group, preferably by methyl.

In some embodiments, the compound of Formula N1 is represented by one of the following formulae:

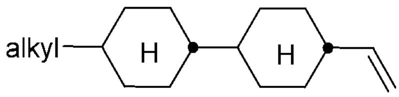
Z1

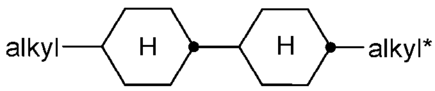
Z2

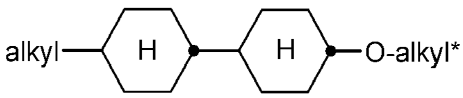
Z2'

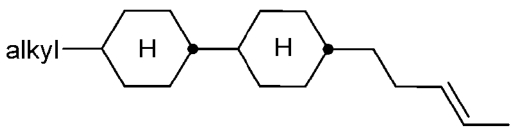
Z3

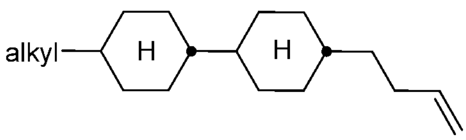
Z3'

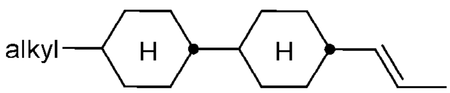
Z4

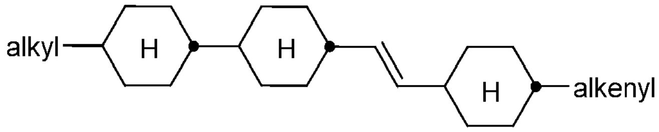

Z5

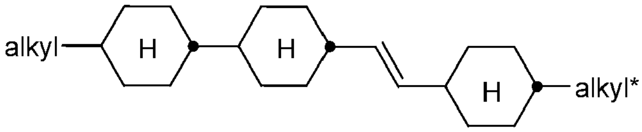

Z6

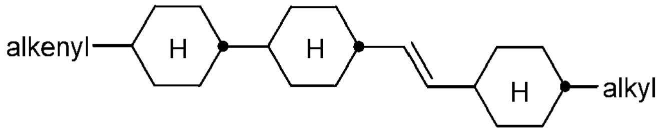

Z7

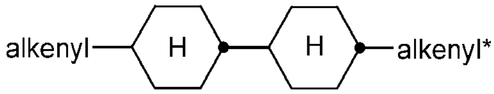

Z8

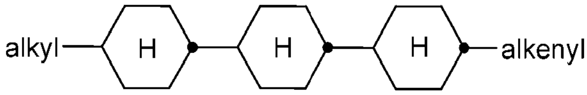

Z9

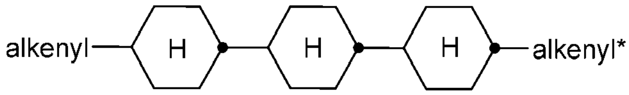

Z10

wherein

| | |
|---|---|
| *"alkyl"* and *"alkyl*"* | each, independently from one another, denote an alkyl group having 1 to 6 C atoms; |
| *"alkenyl"* and *"alkenyl*"* | each, independently of one another, denote an alkenyl group having 2 to 6 C atoms. |

Very preferred are compounds of the Formula Z1 and Z2.

Preferred compounds of the Formulae Z1 to Z10 are those selected from the following subformulae:

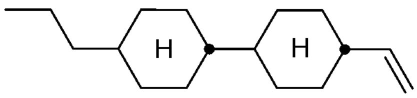

Z1-1

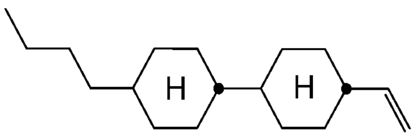

Z1-2

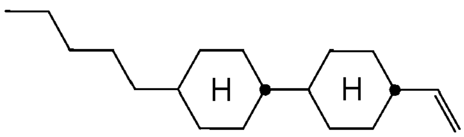

Z1-3

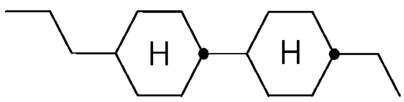

Z2-1

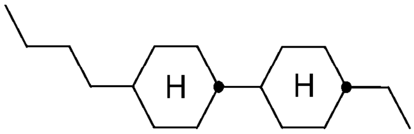

Z2-2

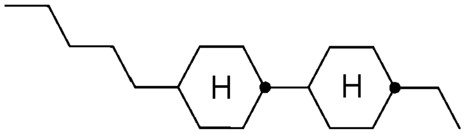

Z2-3

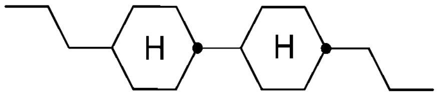

Z2-4

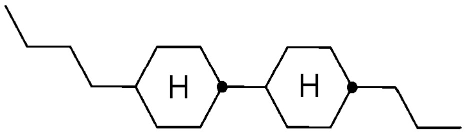

Z2-5

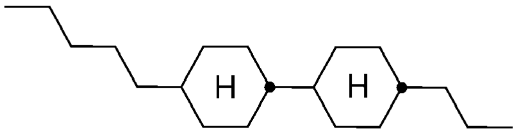

Z2-6

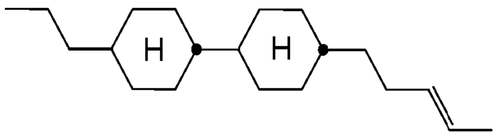

Z3-1

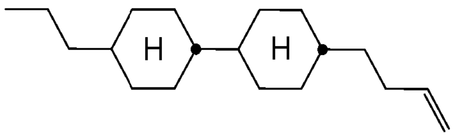

Z3'-1

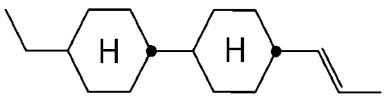

Z4-1

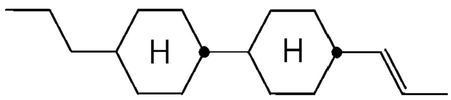

Z4-2

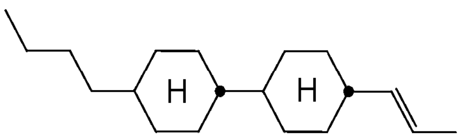

Z4-3

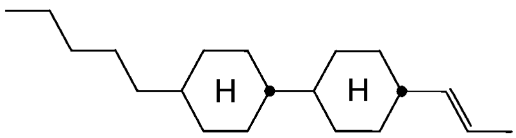

Z4-4

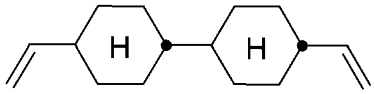

Z8-1

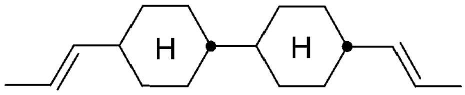

Z8-2

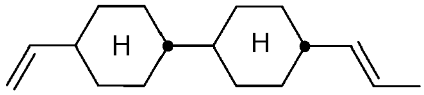

Z8-3

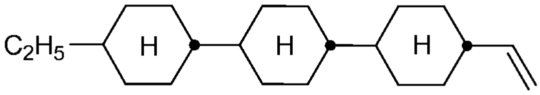

Z9-1

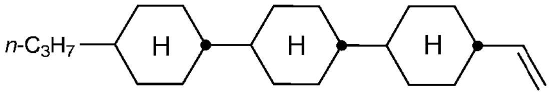

Z9-2

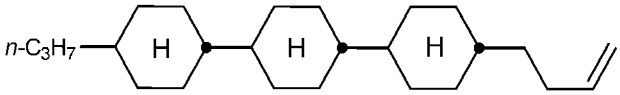

Z9-3

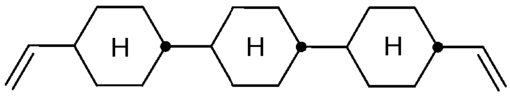

Z10-1

In another preferred embodiment, the LC medium contains one or more compounds of the Formula Z1 or its preferred subformulae and/or one or more compounds selected from the Formulae Z2, Z3, Z4 and Z5 or their preferred subformulae.

Preferably, the total proportion of compounds of the Formula Z1, Z2, Z3, Z4, Z5 and Z6 or their subformulae, such as CC-3-V in the medium is from 10 to 65%, very preferably from 20 to 60%, most preferably from 25 to 55% by weight. In yet a more preferred embodiment, the compound of the Formula Z1-1 is used in concentrations ranging from 10 wt.-% to 60 wt.-%, more preferably 25 wt.-% to 50 wt.-%, based on the total weight of the LC medium. In a further preferred embodiment, the LC medium comprises 50 wt.-% to 70 wt.-% of compounds represented by the Formulae Z1-1 and Z4-2 in total.

Preferably, the medium contains 1, 2 or 3 compounds selected from the Formulae Z1, Z2, Z3 and Z4 or their subformulae.

The LC medium may additionally comprise one or more compounds of the following general formulae

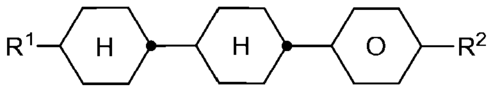

XII

in which

$R^1$ and $R^2$ each, independently of one another, denote alkyl, alkoxy, oxaalkyl or fluoroalkyl, each having 1 to 6 C atoms or alkenyl having 2 to 6 C atoms.

The compounds of the Formula XII are preferably selected from the following subformulae:

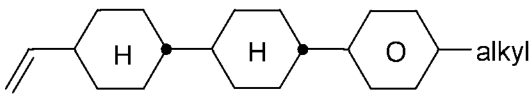

XIIa

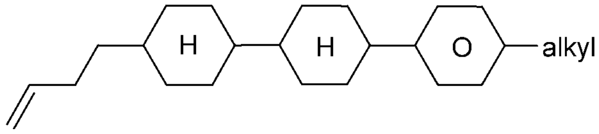

XIIb

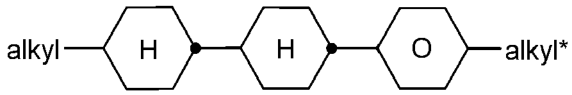

XIIc

wherein *"alkyl"* and *"alkyl*"* each, independently from one another, denote methyl, ethyl, propyl, butyl, pentyl or hexyl.

Particular preference is given to the compounds of the Formulae XIIa and XIIc. In the Formula XIIb, *"alkyl"* preferably, independently of one another, denotes $n$-$C_3H_7$, $n$-$C_4H_9$ or $n$-$C_5H_{11}$, in particular $n$-$C_3H_7$. In the Formula XIIc, *"alkyl"* preferably denotes $n$-$C_3H_7$ and "*alkyl**" is preferably $CH_3$ or $n$-$C_3H_7$.

Particularly preferred compounds of the Formula XII are described by the following structures:

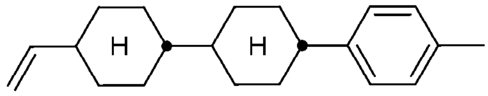

XIIa-1

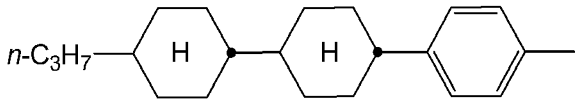

XIIc-1

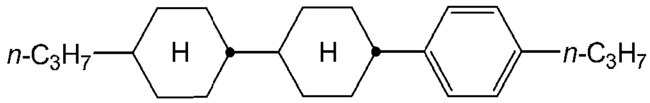

XIIc-3

The total content of the compounds of Formula XII in the LC medium preferably ranges from 0 to 20 wt.-%, more preferably from 2 to 10 wt.-%.

The LC medium may additionally comprise one or more compounds selected from the following formulae

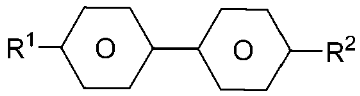

XIV

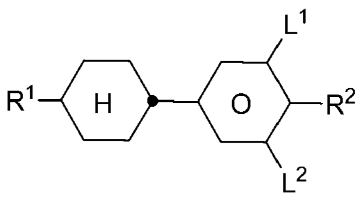

XV

in which

| | |
|---|---|
| $R^1$ and $R^2$ | each, independently of one another, denote alkyl, alkoxy, oxaalkyl or fluoroalkyl, each having 1 to 6 C atoms or alkenyl having 2 to 6 C atoms; and |
| $L^1$ and $L^2$ | each, independently of one another, denote H, F or Cl; |

and $R^1$ and $R^2$ each, independently of one another, preferably denote n-alkyl, cycloalkyl, alkoxy, oxaalkyl, fluoroalkyl or alkenyl, each having up to 6 C atoms, and preferably each, independently of one another, denote alkyl having 1 to 6 C atoms; in the compound of the Formula XIV. In some embodiments, at least one or both of the substituents $R^1$ and $R^2$ may preferably denote alkenyl having 2 to 6 C atoms.

The LC medium may further optionally comprise one or more compounds of the Formula XIV in which at least one of the substituents $R^1$ and $R^2$ denotes alkenyl having 2 to 6 C atoms, preferably those selected from the following subformulae:

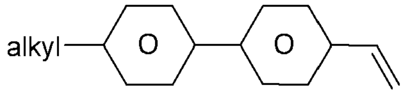
XIVa

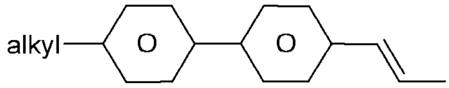
XIVb

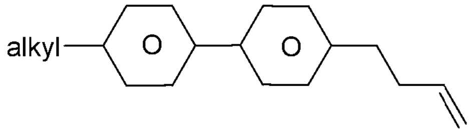
XIVc

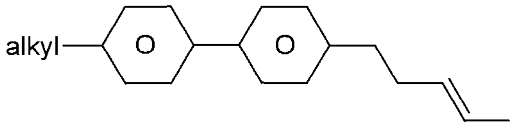
XIVd

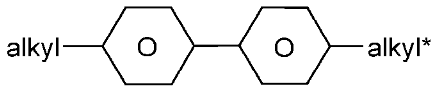
XIVe

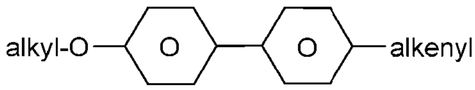
XIVf

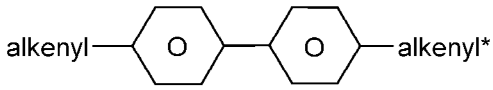
XIVg

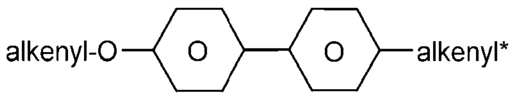
XIVh

in which "*alkyl*", *"alkyl*", "alkenyl*"* and *"alkenyl*"* have the meaning indicated above, and each, independently of one another, preferably denote methyl, ethyl or propyl.

The compounds of the Formulae XIV are preferably selected from the following subformulae:

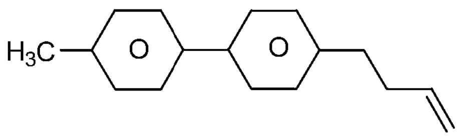
XIVc-1

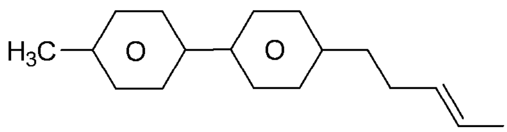
XIVd-1

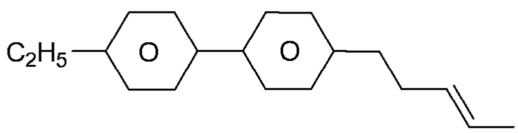
XIVd-2

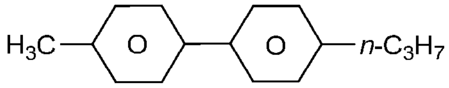
XIVe-1

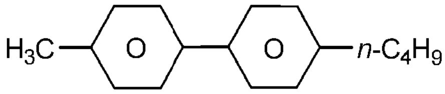
XIVe-2

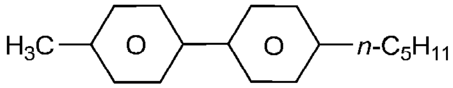
XIVe-3

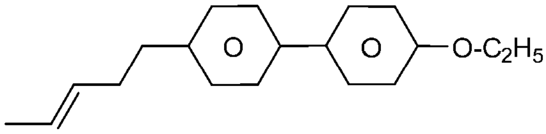
XIVf-1

Very preferred are compounds of the Formulae XIVd-1, XIVd-2, XIVe-1, XIVe-2 and XIVe-3.

The LC medium may further optionally comprise one or more compounds of the Formula XV in which at least one of the substituents $R^1$ and $R^2$ denotes alkyl or alkoxy having 2 to 6 C atoms, preferably those selected from the following subformulae:

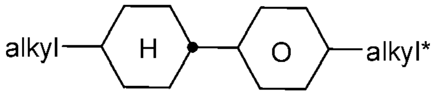
XVa

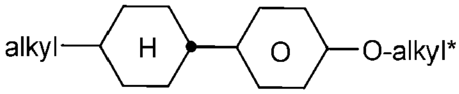
XVb

in which *"alkyl"* and *"alkyl*"* has the meaning indicated above, and each, independently of one another, preferably denote methyl, ethyl or propyl.

In yet a further embodiment, the LC medium comprises one or more compounds of the Formula XVI:

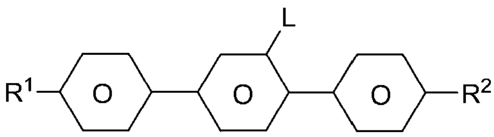
XVI

in which

$R^1$ and $R^2$ each, independently of one another, denote alkyl, alkoxy, oxaalkyl or fluoroalkyl, each having 1 to 6 C atoms or alkenyl having 2 to 6 C atoms; and

L denotes H, F or Cl.

Particularly preferred compounds of the Formula XVI are those of the subformulae:

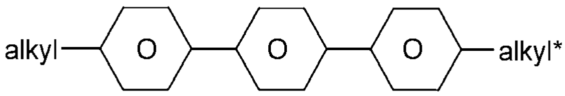
XVIa

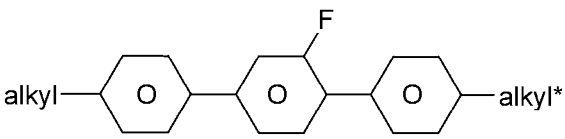
XVIb

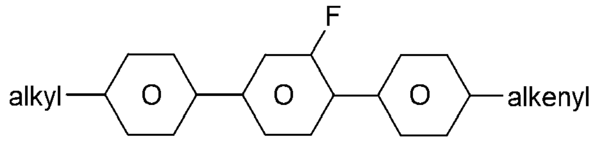

XVIc

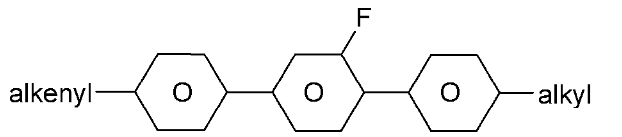

XVId

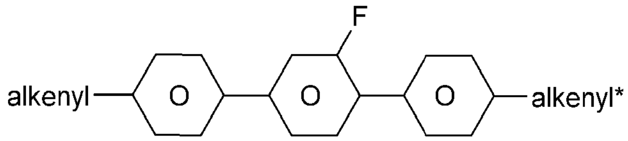

XVIe

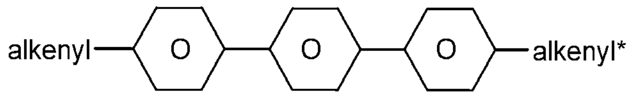

XVIf

in which

| | |
|---|---|
| *"alkyl"* and *"alkyl*"* | each, independently of one another, denote a straight-chain alkyl group having 1 to 6 C atoms, in particular ethyl, propyl or pentyl, and |
| *"alkenyl"* and "*alkenyl**" | each, independently of one another, denote a straight-chain alkenyl group having 2 to 6 C atoms, in particular $CH_2=CHC_2H_4$, $CH_3CH=CHC_2H_4$, $CH_2=CH$ and $CH_3CH=CH$. |

Particular preference is given to the compounds of the Formulae XVIb and XVIc. Very particular preference is given to the compounds of the following subformulae:

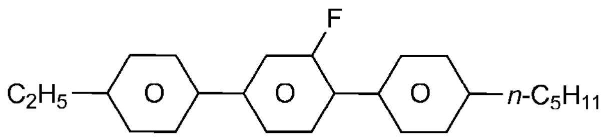

XVIb-1

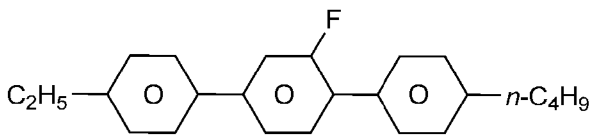

XVIb-2

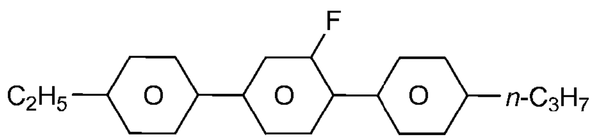

XVIb-3

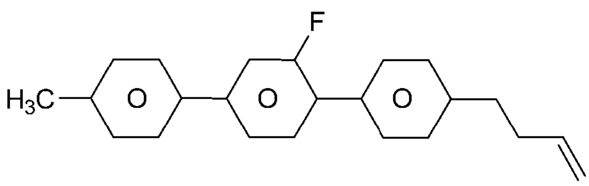

XVIc-1

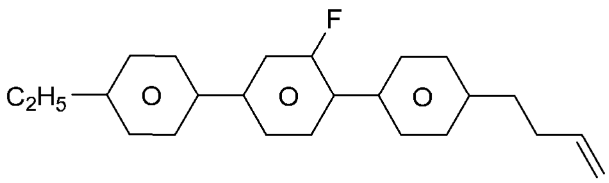

XVIc-2

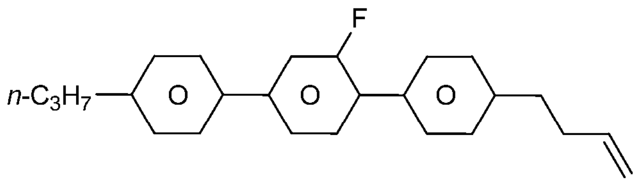

XVIc-3

In addition or as an alternative to the compounds of Formula XVI, the following compounds may be employed:

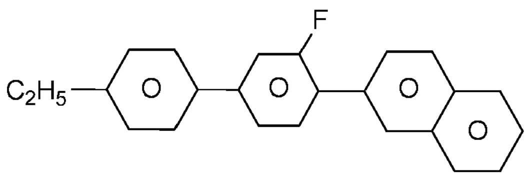

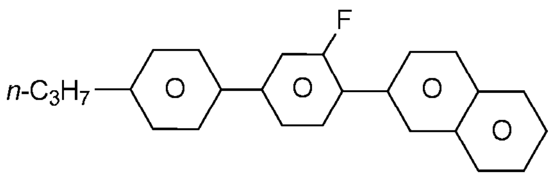

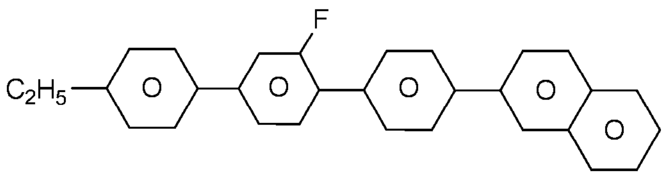

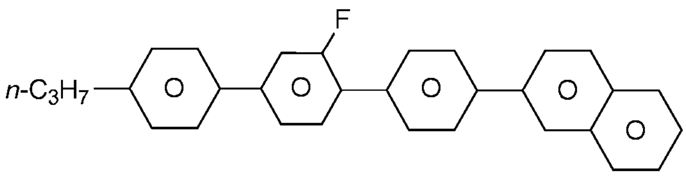

In yet a further embodiment, the LC medium comprises one or more compounds of the Formula XIII:

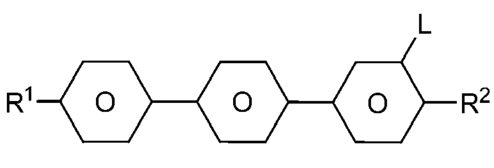

XIII

in which

| | |
|---|---|
| $R^1$ and $R^2$ | each, independently of one another, denote alkyl, alkoxy, oxaalkyl or fluoroalkyl, each having 1 to 6 C atoms or alkenyl having 2 to 6 C atoms; and |
| L | denotes H, F or Cl. |

Particularly preferred compounds of the Formula XIII are those of the subformulae:

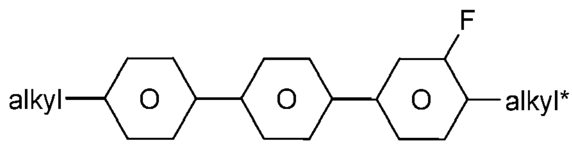

XIIIa

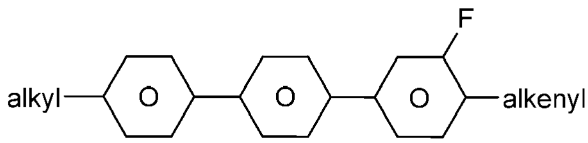

XIIIb

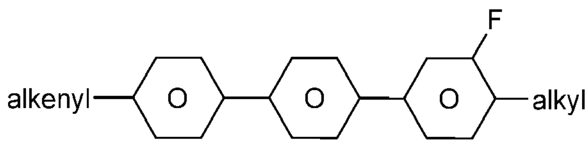

XIIIc

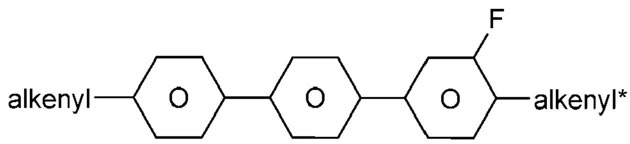

XIIId

in which

| | |
|---|---|
| *"alkyl"* and *"alkyl"* | each, independently of one another, denote a straight-chain alkyl group having 1 to 6 C atoms, in particular ethyl, propyl or pentyl, and |
| *"alkenyl"* and "*alkenyl**" | each, independently of one another, denote a straight-chain alkenyl group having 2 to 6 C atoms, in particular $CH_2$=$CHC_2H_4$, $CH_3CH$=$CHC_2H_4$, $CH_2$=CH and $CH_3CH$=CH. |

Particular preference is given to the compounds of the Formulae XIIIa and XIIIb. Very particular preference is given to the compounds of the following subformulae:

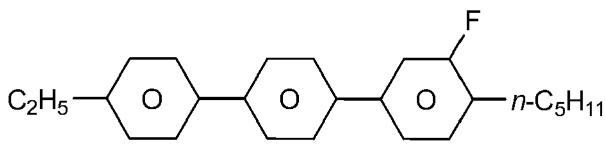

XIIIa-1

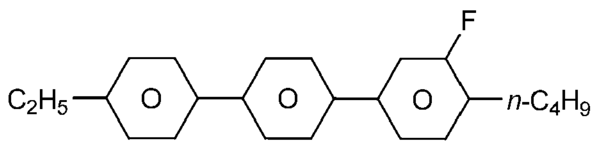

XIIIa-2

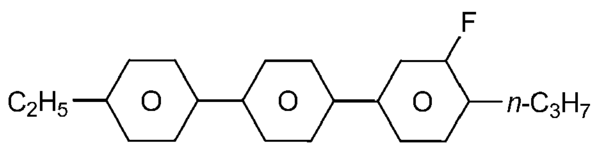

XIIIa-3

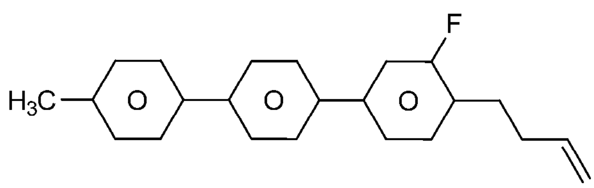

XIIIb-1

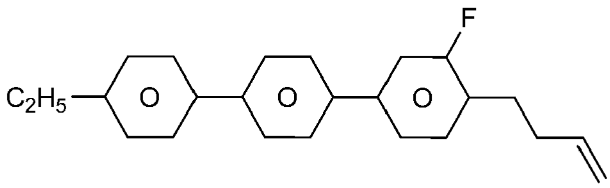

XIIIb-2

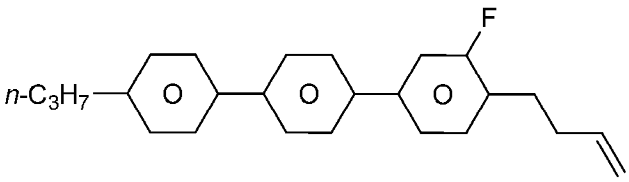

XIIIb-3

In yet a further embodiment, the LC medium comprises one or more compounds of the Formula XIII':

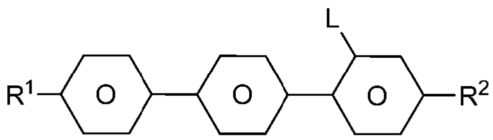

XIII′

in which $R^1$ and $R^2$ have the meanings indicated for $R^0$ in the Formula II, and preferably each, independently of one another, denote alkyl having 1 to 6 C atoms. L denotes H, F or Cl.

Particularly preferred compounds of the Formula XIII' are those of the subformulae:

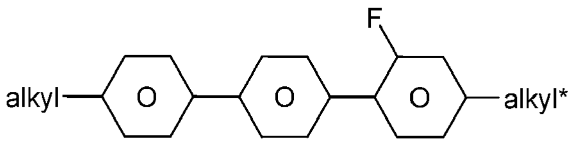

XIII′a

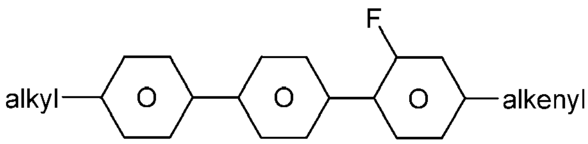

XIII′b

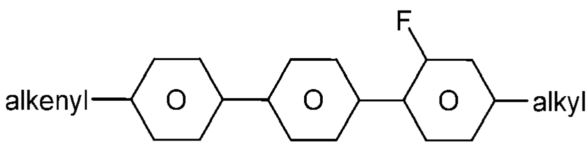

XIII′c

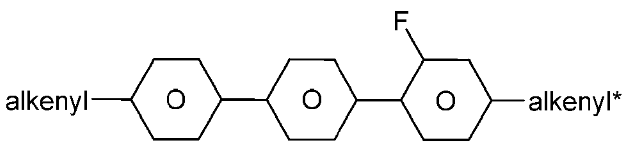

XIII′d

in which

| | |
|---|---|
| *"alkyl"* and *"alkyl*"* | each, independently of one another, denote a straight-chain alkyl group having 1 to 6 C atoms, in particular ethyl, propyl or pentyl, and |
| *"alkenyl"* and "*alkenyl**" | each, independently of one another, denote a straight-chain alkenyl group having 2 to 6 C atoms, in particular $CH_2$=$CHC_2H_4$, $CH_3CH$=$CHC_2H_4$, $CH_2$=CH and $CH_3CH$=CH. |

Particular preference is given to the compounds of the Formulae XIII'a and XIII'b. Very particular preference is given to the compounds of the following subformulae:

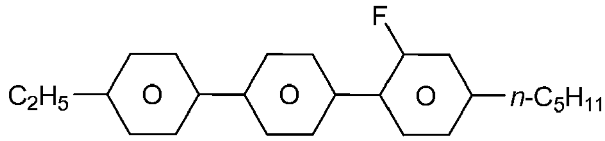

XIII´a-1

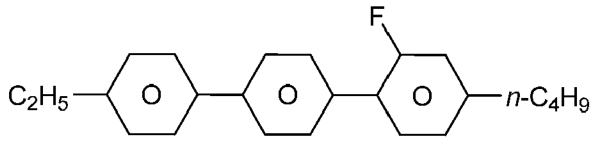

XIII´a-2

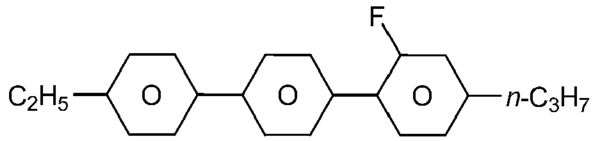

XIII´a-3

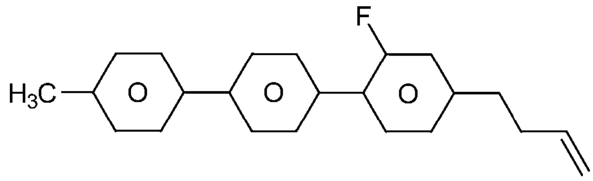

XIII´b-1

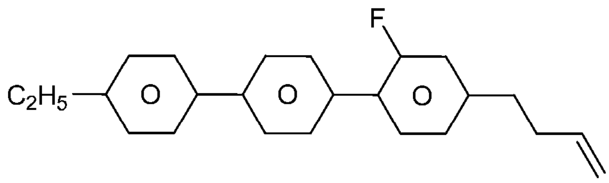

XIII´b-2

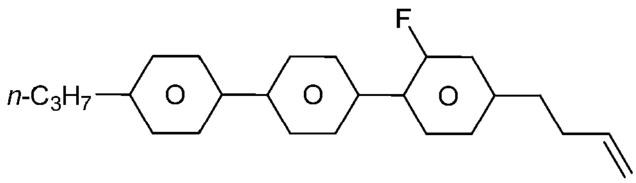

XIII´b-3

The LC medium may optionally comprise one or more compounds of the following formulae:

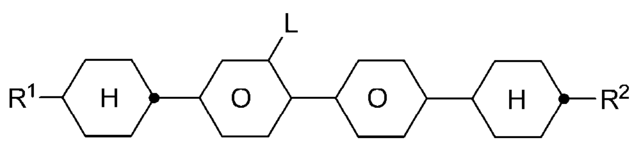

XVIIa

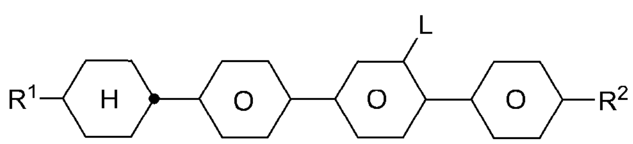

XVIIb

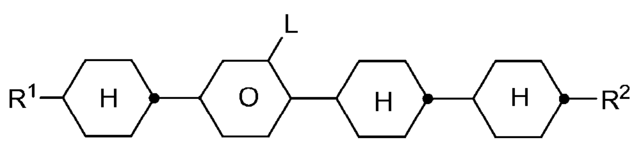

XVIIc

in which

$R^1$ and $R^2$ each, independently of one another, denote alkyl, alkoxy, oxaalkyl or fluoroalkyl, each having 1 to 6 C atoms or alkenyl having 2 to 6 C atoms; and

L denotes H, F or Cl.

Very preferred are compounds of the Formula XVIIa, wherein L is H or F. Very preferred are compounds of the Formula XVIIb, wherein L is F.

The LC medium may additionally comprise one or more compounds of the following formula:

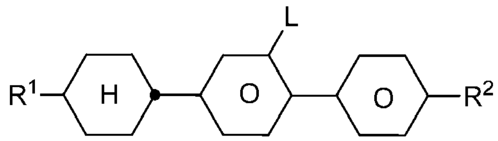

XXXII

in which $R^1$ and $R^2$ have the meanings indicated in Formula I and L has the meaning of $L^1$ in Formula YA, respectively. $R^1$ and $R^2$ preferably denote alkyl, alkoxy, oxaalkyl, fluoroalkyl or alkenyl, each having up to 6 C atoms.

Particularly preferred compounds of the Formula XXXII are those of the subformulae:

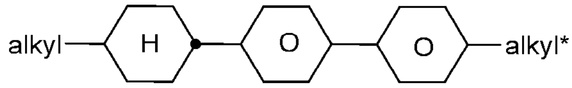

XXXIIa

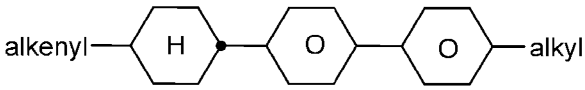

XXXIIb

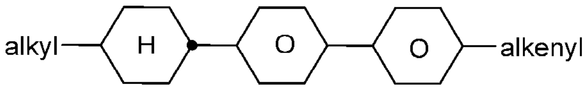

XXXIIc

in which

*"alkyl"* and *"alkyl*"* each, independently of one another, denote a straight-chain alkyl group having 1 to 6 C atoms, in particular ethyl, propyl or pentyl, and

"*alkenyl*" denotes a straight-chain alkenyl group having 2 to 6 C atoms, in particular $CH_2=CHC_2H_4$, $CH_3CH=CHC_2H_4$, $CH_2=CH$ and $CH_3CH=CH$.

Very particular preference is given to the compounds of the following subformulae:

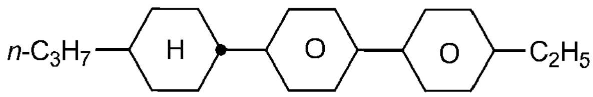

XXXIIa-1

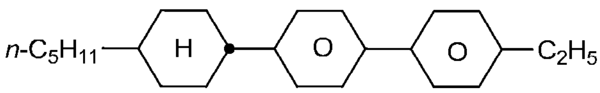

XXXIIa-2

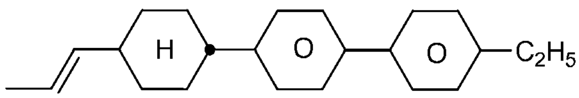

XXXIIb-1

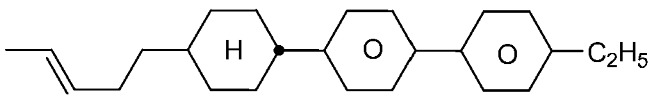

XXXIIb-2

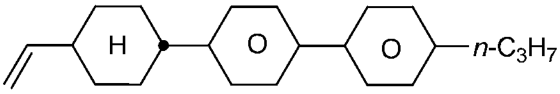

XXXIIb-3

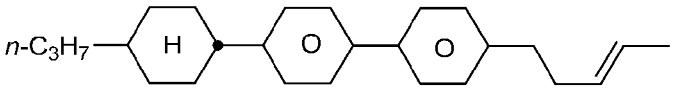

XXXIIc-1

In some further embodiments, the LC medium comprises one or more compounds of the following formulae:

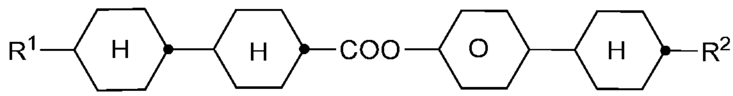

XXXV

in which $R^1$ and $R^2$ have the meanings indicated in Formula I, respectively, and preferably each, independently of one another, denote alkyl having 1 to 6 C atoms.

Advantageously, the LC medium of the present invention also comprises one or more compounds of the Formulae LP1 and LP2

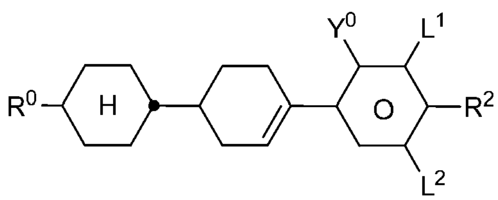

LP1

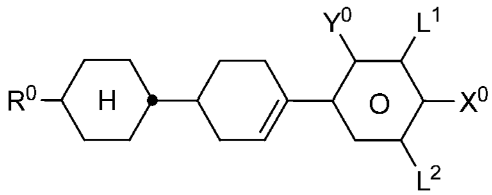

LP2

in which the individual substituents have the following meanings:

$R^0$ and $R^2$ denote an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$,

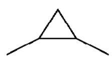 , 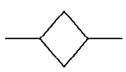 , 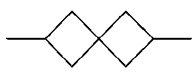 , 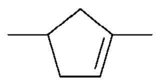 , 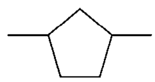 , .

-O-, -CO-O- or -O-CO- in such a way that O atoms are not linked directly to one another, and in which one or more H atoms may be substituted by a cycloalkyl or a cycloalkoxy group having 3 to 12 C atoms;

$L^1$ and $L^2$ each, independently of one another, denote H, F or Cl;

$Y^0$ denotes an H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -O-, -CO-O- or -O-CO- in such a way that O atoms are not linked directly to one another, preferably H or $CH_3$ ; and

$X^0$ denotes a halogen atom, -CN, -SCN, -NCS or an alkyl or an alkoxy group having 1 to 6 C atoms or an alkenyl or an alkenyloxy group having 2 to 6 C atoms in which one or more H atoms have been substituted by a halogen atom.

The one or more compounds of the Formulae LP1 and LP2 may be preferably described by the following Formulae LP1-1 and LP2-1:

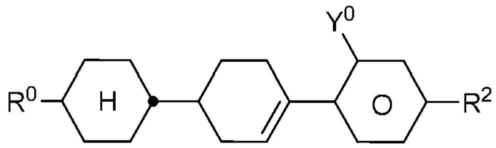

LP1-1

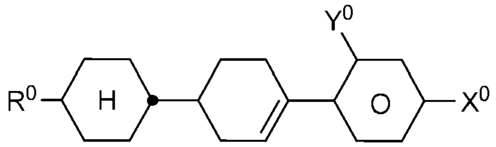

LP2-1

LP2-2

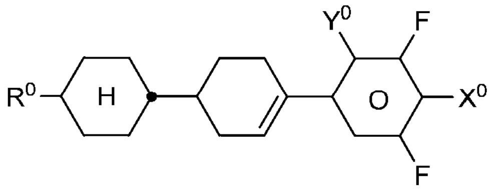

LP2-3

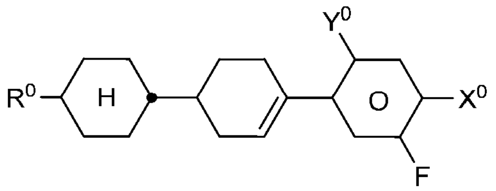

in which

$R^0$ is an alkyl or an alkoxy group having 1 to 6 C atoms or an alkenyl group having 2 to 6 C atoms in which one or more $CH_2$ groups are optionally substituted by -C≡C-, $-CF_2O-$, $-OCF_2-$, -CH=CH-,

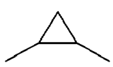 , 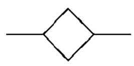 ,

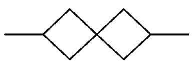 , 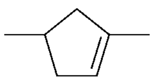 , 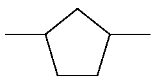 ,

-O-, -CO-O- or -O-CO- in such a way that O atoms are not linked directly to one another, and in which one or more H atoms may be replaced by a halogen atom;

$R^2$ is an alkyl group having 1 to 6 C atoms, in which one or more $CH_2$ groups are optionally substituted by -C≡C-, $-CF_2O-$, $-OCF_2-$, -CH=CH-,

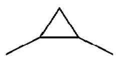 ,

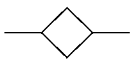 , 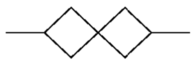 , 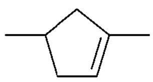 , 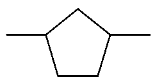 ,

-O-, -CO-O- or -O-CO- in such a way that O atoms are not linked directly to one another, and in which one or more H atoms may be replaced by a halogen atom;

$X^0$ a F atom or an alkyl or an alkoxy group having 1 to 3 C atoms or an alkenyl or an alkenyloxy group having 2 or 3 C atoms in which one or more H atoms are replaced by a F atom; and

$Y^0$ H or $CH_3$ .

The compounds of the general Formulae LP1 and LP2 can also be represented by one of the following:

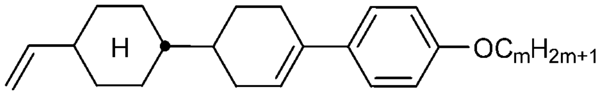

LP1a

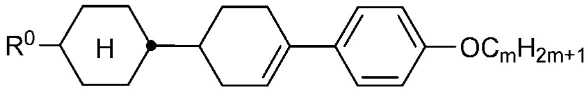

LP1b

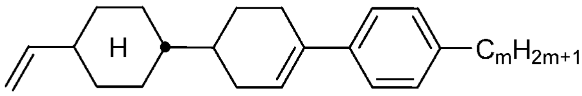

LP1c

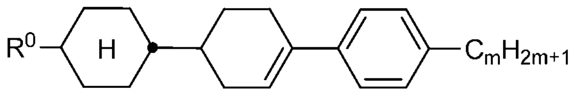

LP1d

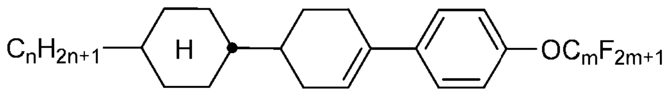

LP2a

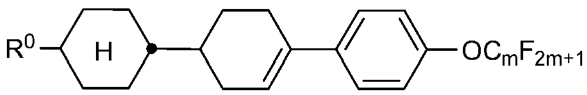

LP2b

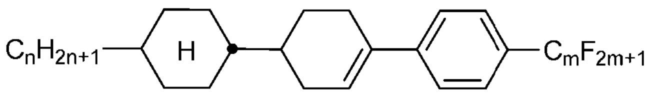

LP2c

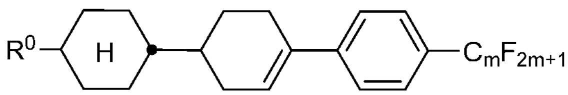

LP2d

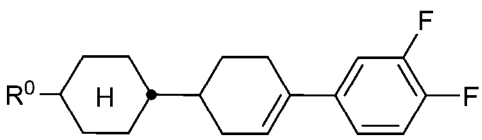

LP2e

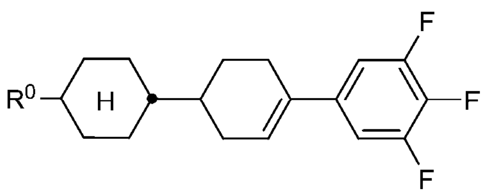

LP2f

in which

$R^0$ is an alkyl or an alkoxy group having 1 to 12 C atoms in which one or more $CH_2$ groups are optionally substituted by -C≡C-, $-CF_2O-$, $-OCF_2-$,

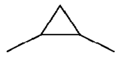,

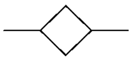, 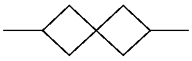, 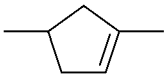, 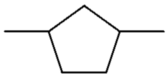,

-O-, -CO-O- or -O-CO- in such a way that O atoms are not linked directly to one another, and in which one or more H atoms may be replaced by a halogen atom, preferably an alkyl group having 1 to 4 C atoms, alkenyl or an alkenyloxy group having 2 to 6 C atoms or a cycloalkyl or a cycloalkyloxy group having 3 to 6 C atoms, wherein vinyl, allyl or cyclopentyl are particularly preferable;

n denotes 1, 2, 3, 4 or 5; and

m denotes 1, 2, 3 or 4.

Particularly preferred compounds of the Formula LP1 are those selected from the group consisting of the following subformulae:

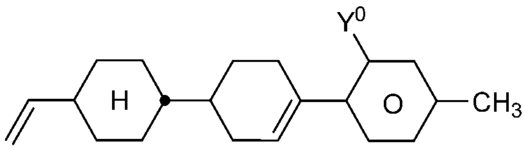

LP1-1a

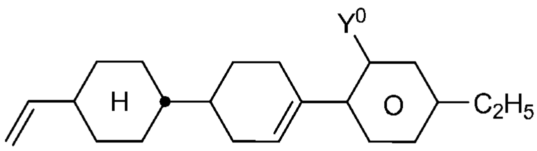

LP1-1b

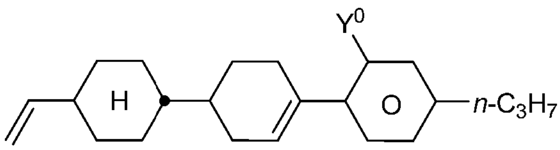

LP1-1c

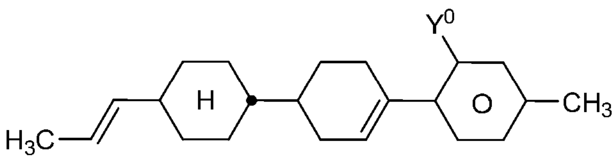

LP1-1d

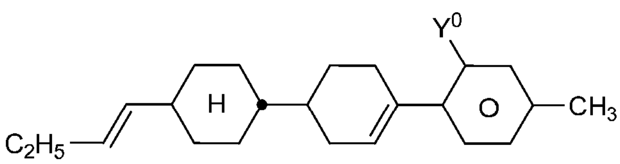

LP1-1e

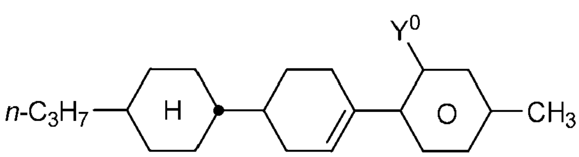

LP1-1f

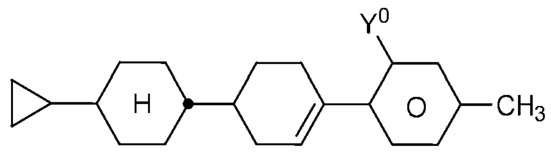

LP1-1g

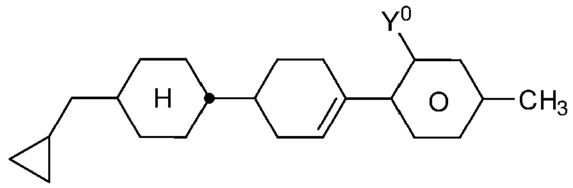

LP1-1h

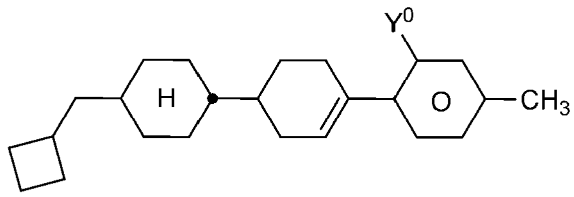

LP1-1i

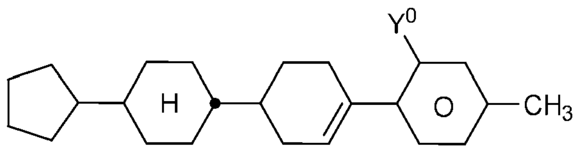

LP1-1j

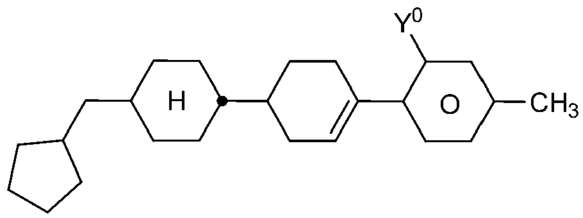

LP1-1k

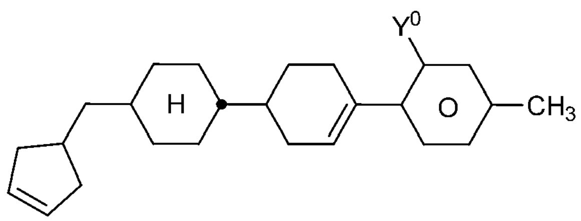

LP1-1l

wherein $Y^0$ is H or $CH_3$, preferably H.

Very preferred are the compounds of the Formulae LP1-1a, LP1-1b and LP1-1c, most preferred is the compound Formula LP1-1a.

Particularly preferred compounds of the Formula LP2 are those selected from the group consisting of the following subformulae:

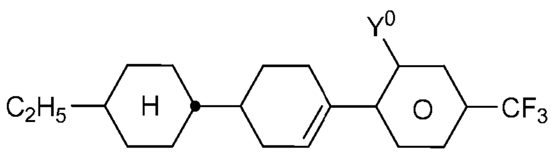

LP2-1a

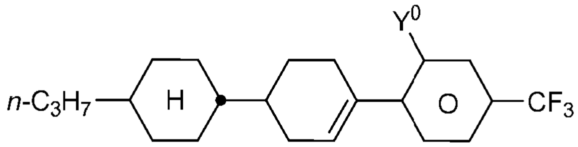
LP2-1b

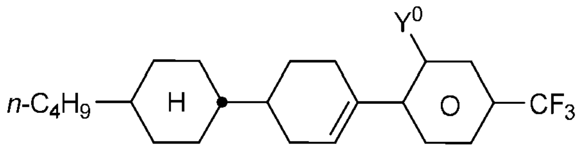
LP2-1c

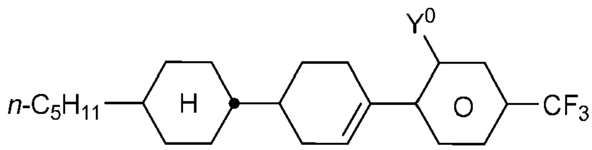
LP2-1d

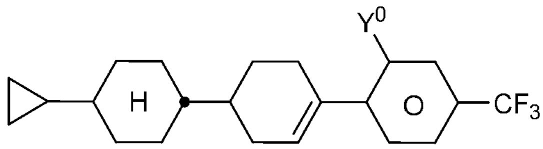
LP2-1e

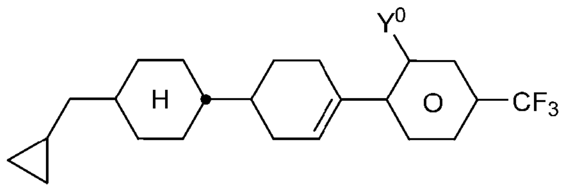
LP2-1f

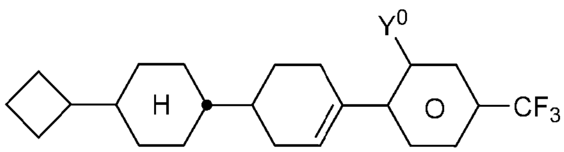
LP2-1g

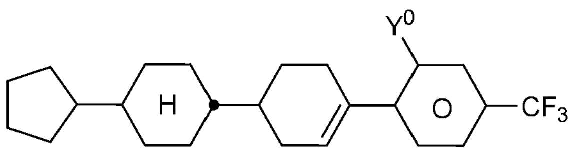
LP2-1h

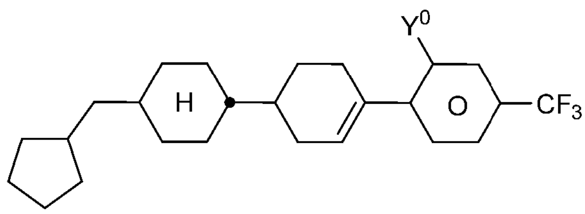
LP2-1i

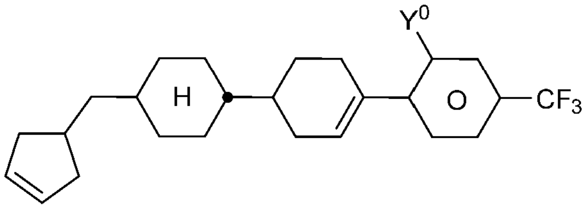

LP2-1k

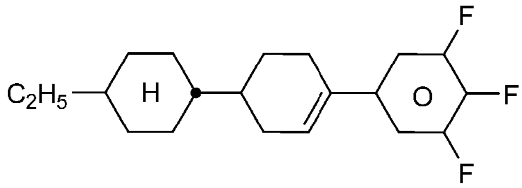

LP2-2a

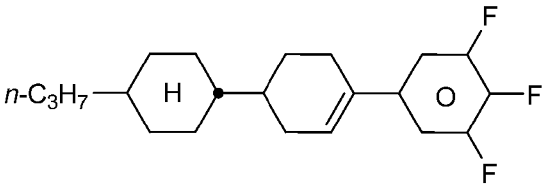

LP2-2b

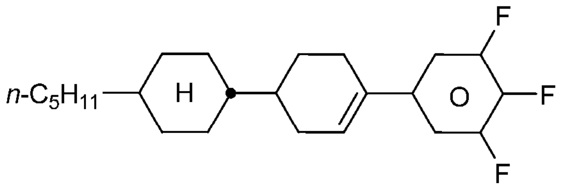

LP2-2c

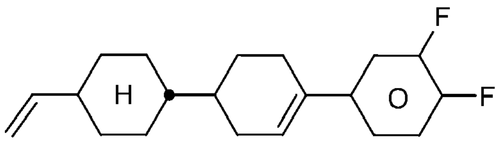

LP2-3a

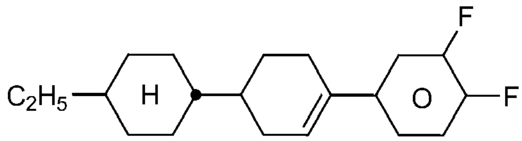

LP2-3b

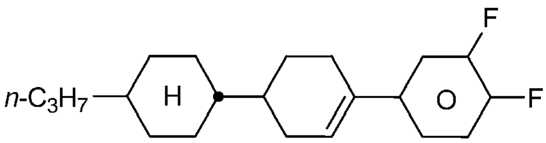

LP2-3c

wherein $Y^0$ is H or $CH_3$, preferably H.

Very preferred are compounds of the Formulae LP2-1a, LP2-1b, LP2-1c, LP2-1d, and LP2-1i, LP2-2b, LP2-2c, LP2-3a, LP2-3c mostly preferred is the compound Formula LP2-1b.

The total proportion of the compounds of the Formulae LP1 or LP2 or its subformulae in the LC medium is preferably from 2 to 35%, very preferably from 3 to 30%, most
preferably from 4 to 20% by weight.

Preferably, the LC medium contains 1, 2 or 3 compounds of the Formulae LP1 or LP2 or their subformulae. In a particularly preferred embodiment, the LC medium comprises at least one compound of the Formula LP1 and at least one compound of the Formula LP2.

**Compounds of Formula ST**

In some preferred embodiments of the present invention, the LC medium may further comprise one or more compounds of the general Formula ST:

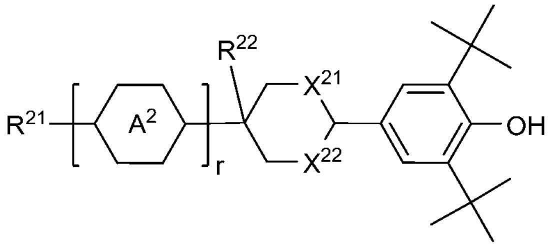

ST

in which in which the individual substituents have the following meanings:

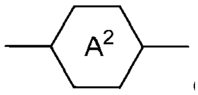

denotes

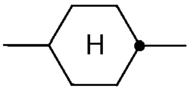 , 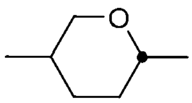 or 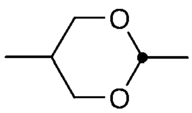 ;

$X^{21}$, $X^{22}$ each, independently of one another, denote -O-, $-CH_2-$, $-CHR^{23}-$ or $-N-R^{23}-$,

$R^{21}$ and $R^{22}$ each, independently of one another, denote a H atom or an alkyl- or alkoxy group having 1 to 12 C atoms, an alkenyl, alkynyl, alkenyloxy or alkoxyalkyl group having 2 to 12 C atoms or a cycloalkyl group having 3 to 12 C atoms, in which one or more non-adjacent $CH_2$ groups are optionally substituted by -C≡C-, $-CF_2O-$, $-OCF_2-$, -CH=CH-,

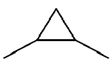 , 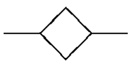 , 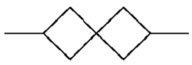 ,

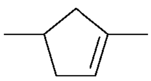 , 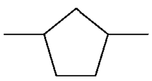 ,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom,

$R^{23}$ denotes a H atom, an alkyl or alkoxy group having1 to 10 C atoms,

r denotes 0 or 1.

LC media comprising compounds of the following sub-formulae ST-1, ST-2 and ST-3 showed a particularly high long-term thermal and UV stability:

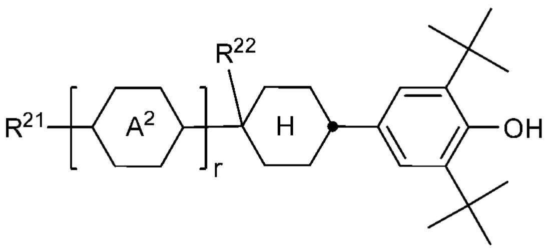

ST-1

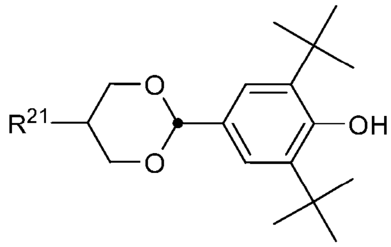

ST-2

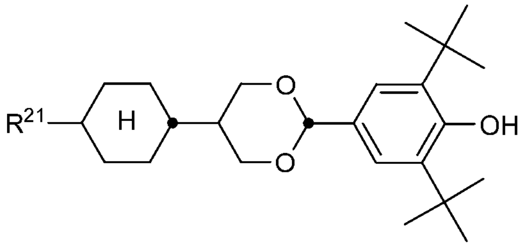

ST-3

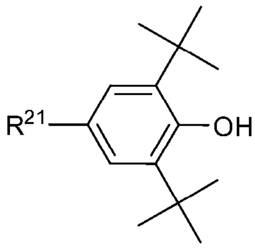

ST-4

in which the individual substituents have the following meanings:

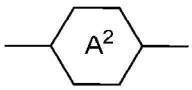

denotes

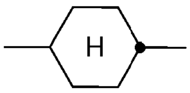 , 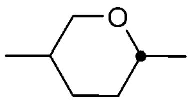 or 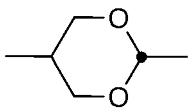 ;

$R^{21}$ and $R^{22}$ each, independently of one another, denote a H atom or an alkyl or alkoxy group having 1 to 7 C atoms, and

r denotes 0 or 1.

In particularly preferred embodiments, the compounds of the general Formula ST can be selected from the following specific structures:

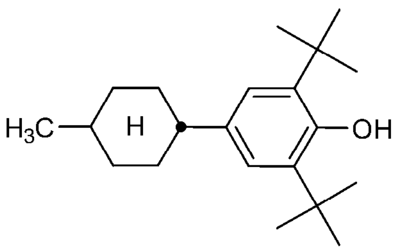

ST-1-1

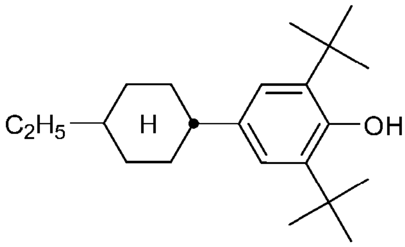

ST-1-2

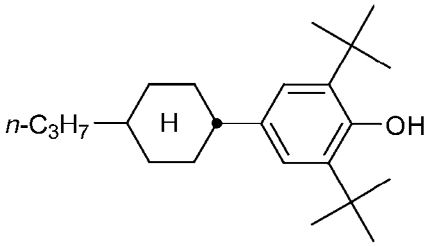

ST-1-3

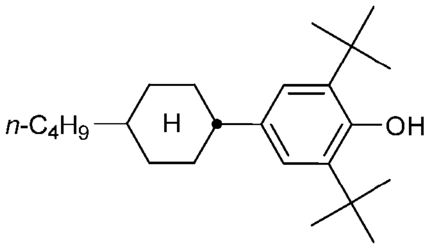

ST-1-4

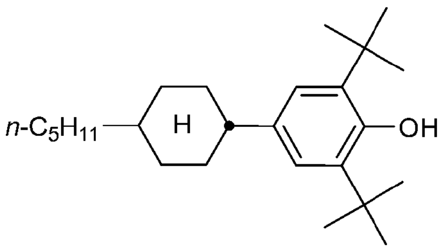

ST-1-5

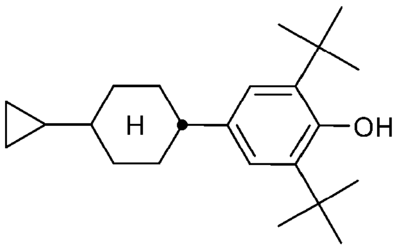

ST-1-6

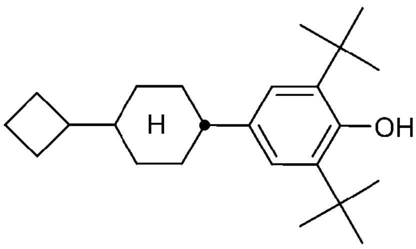

ST-1-7

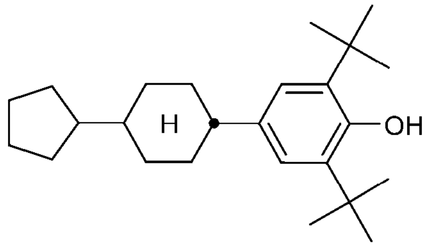

ST-1-8

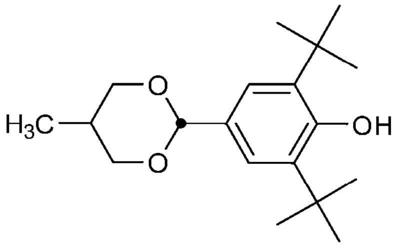

ST-2-1

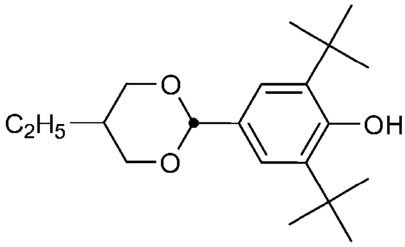

ST-2-2

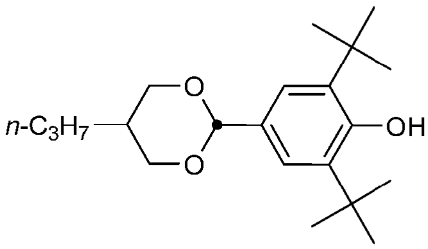

ST-2-3

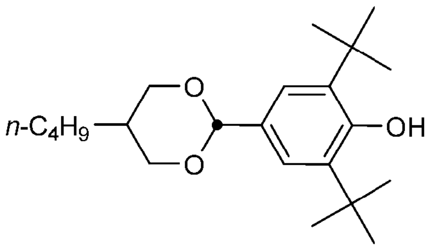

ST-2-4

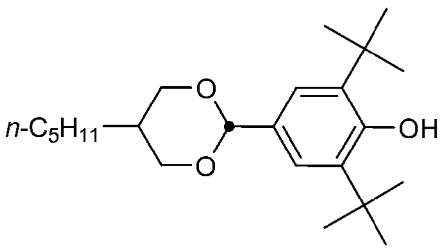

ST-2-5

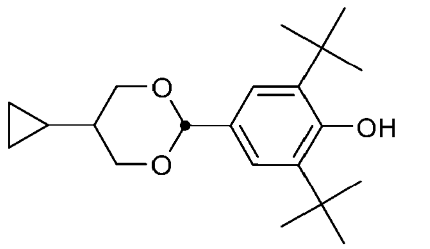

ST-2-6

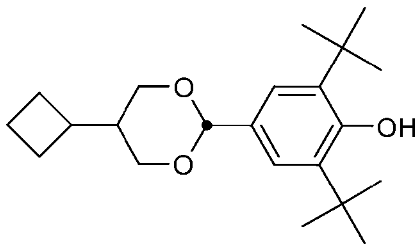

ST-2-7

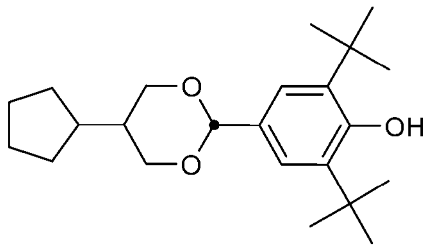

ST-2-8

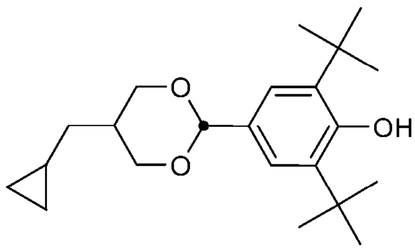

ST-2-9

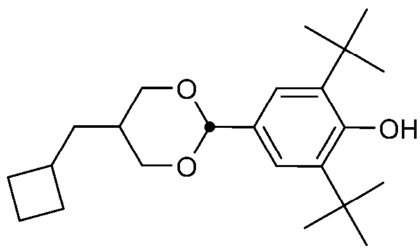

ST-2-10

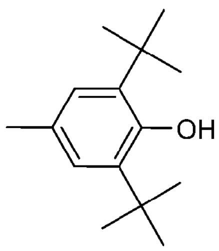

ST-4-1

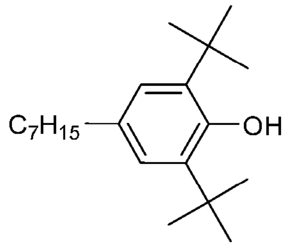

ST-4-2

In a further preferred embodiment, the LC medium according to the present invention may comprise at least one further sterically hindered phenol, which is mentioned in Table B below.

**Compounds of Formula H**

The LC medium may optionally comprise one or more compounds of the Formula H

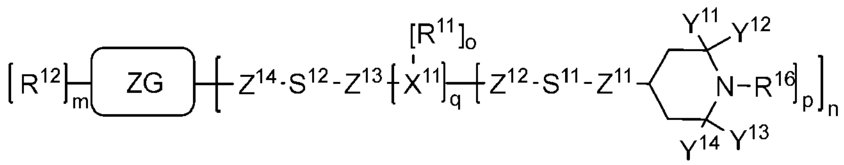

H

in which

| | |
|---|---|
| $R^{11}$ | each, independently of one another, denotes a H atom, F, an alkyl group having 1 to 20 C atoms, in which one $-CH_2-$ group or, if present, a plurality of $-CH_2-$ groups may be replaced by -O- or -C(=O)-, but two adjacent $-CH_2-$groups cannot be replaced by -O-, and one or, if present, a plurality of $-CH_2-$groups may be replaced by-CH=CH- or -C≡C-, and in which one H atom or a plurality of H atoms may be replaced by F, $OR^{13}$, $N(R^{13})(R^{14})$ or $R^{15}$, |
| $R^{12}$ | each, independently of one another, denotes a H atom, an alkyl group having 1 to 20 C atoms, in which one $-CH_2-$ group or a plurality of $-CH_2-$groups may be replaced by -O- or -C(=O)-, but two adjacent $-CH_2-$ groups cannot be replaced by -O-, a hydrocarbon group which contains a cycloalkyl or alkylcycloalkyl unit and in which one $-CH_2-$ group or a plurality of $-CH_2-$groups may be replaced by -O- or -C(=O)-, but two adjacent $-CH_2-$ groups cannot be replaced by -O-, and in which one H atom or a plurality of H atoms may be replaced by F, $OR^{13}$, $N(R^{13})(R^{14})$ or $R^{15}$, or an aromatic or heteroaromatic hydrocarbon group, in which one H atom or a plurality of H atoms may be replaced by $OR^{13}$, $N(R^{13})(R^{14})$ or $R^{15}$, |
| $R^{13}$ and $R^{14}$ | each, independently of one another, denotes an alkyl or acyl group having 1 to 10 C atoms or an aromatic hydrocarbon or carboxylic acid group having 6 to 12 C atoms, |
| $R^{15}$ | each, independently of one another, denotes an alkyl group having 1 to 10 C atoms, in which one $-CH_2-$ group or a plurality of $-CH_2-$ groups may be replaced by -O- or -C(=O)-, but two adjacent $-CH_2-$ groups cannot be replaced by -O-, |
| $R^{16}$ | each, independently of one another denotes a H atom, an alkyl group or an alkoxy group having 1 to 10 C atoms, O-cycloalkyl group having 3 to 12 C atoms, $O^{\bullet}$ or OH, |
| $S^{11}$ and $S^{12}$ | each, independently of one another, denote an alkylene group having 1 to 20 C atoms, in which one $-CH_2-$ group or, if present, a plurality of $-CH_2-$groups may be replaced by -O- or -C(=O)-, but two adjacent $-CH_2-$ groups cannot be replaced by -O-, and in which one H atom or a plurality of H atoms may be replaced by F, $OR^{13}$, $N(R^{13})(R^{14})$ or $R^{15}$, or denote a single bond, |
| $Y^{11}$ to $Y^{14}$ | each, independently of one another, denote methyl or ethyl, |
| $X^{11}$ | denotes C, |
| $Z^{11}$ to $Z^{14}$ | each, independently of one another, denote -O-, -(C=O)-, -O-(C=O)-, -(C=O)-O-, -O-(C=O)-O-, $-(N-R^{13})-$, $-N-R^{13}-(C=O)-$ or a single bond if $S^{11}$ is a single bond; both $Z^{11}$ and $Z^{12}$ do not simultaneously denote -O-; if $S^{12}$ is a single bond, both $Z^{13}$ and $Z^{14}$ do not simultaneously denote -O-; and, if q denotes 0, both $Z^{12}$ and $Z^{13}$ do not simultaneously denote -O-, |
| p | denotes 1 or 2, |
| q | denotes 0 or 1, |
| o | denotes (3-p), |
| n | denotes an integer from 1 to 10, |

m denotes an integer from 0 to 8, wherein

n * p denotes an integer from 1 to 10, preferably from 3 to 8, and

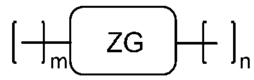

denotes an organic moiety having (m+n) bonding sites.

In some preferred embodiments of the present invention, in the compounds of the Formula H,

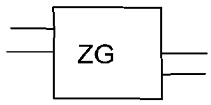

denotes,

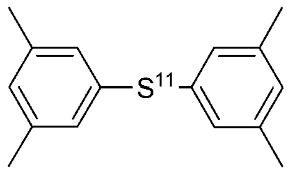

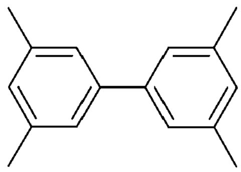

(biphenyl-1,1',3,3'-tetrayl) or

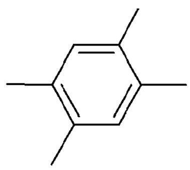

(benzene-1,2,4,5-tetrayl)

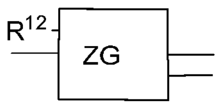

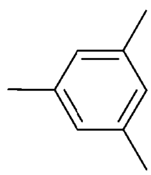

denotes (benzene-1,3,5-triyl) or

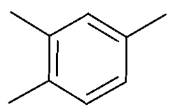

(benzene-1,2,4-triyl),

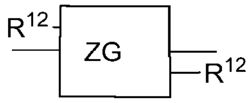

denotes $-(CH_2-)_2$, $-(CH_2-)3$, $^-(CH_2-)_4$, $-(CH_2-)_5$, $-(CH_2-)_6$, $-(CH_2-)_7$, $-(CH_2-)_8$, *i.e.* ethane-1,2-diyl, propane-1,3-diyl, butane-1,4-diyl, pentane-1,5-diyl, hexane-1,6-diyl, heptane-1,7-diyl, octane-1,8-diyl,

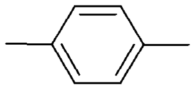

(1,4-phenylene),

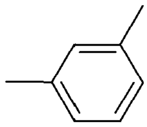

(1,3-phenylene),

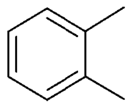

(1,2-phenylene) or

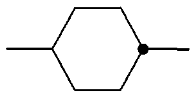

*(trans-1,4-cyclohexylene)* and/or

wherein

| | |
|---|---|
| $-Z^{12}-S^{11}-Z^{11}-$ | on each occurrence, independently of one another, denotes -O-, $S^{11}$-O-, -O-$S^{11}$-O-, -(C=O)-O-$S^{11}$-O-, -O-(C=O)-$S^{11}$-O-, -O-(C=O)-$S^{11}$-(C=O)-O-, -O-$S^{11}$-(C=O)-O-, -(C=O)-O-$S^{11}$-C, -(C=O)-O-$S^{11}$-O-(C=O)- or -(N-$R^{13}$)-$S^{11}$-O -, -(N-$R^{13}$-C(=O)-$S^{11}$-(C=O)-O or a single bond, preferably -O-, -$S^{11}$-O-, -O-$S^{11}$-O-, -(C=O)-O-$S^{11}$-O-, -O-(C=O)-$S^{11}$-O- or -O-$S^{11}$-(C=O)-O-, and/or |
| $S^{11}$ | preferably denotes an alkylene group having 1 to 20 C atoms, and/or |
| $R^{11}$ | if present, denotes alkyl, alkoxy or H, preferably H or alkyl, and/or |
| $R^{12}$ | denotes H, methyl, ethyl, propyl, isopropyl or 3-heptyl, or cyclohexyl. |

In a preferred embodiment of the present application, in the compounds of the Formula H,

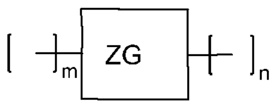

denotes a group selected from the group of the formulae:

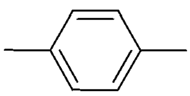 , 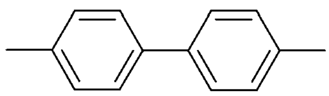 , 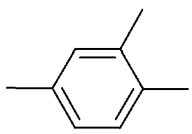 , 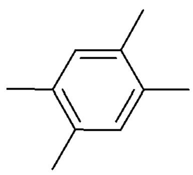 ,

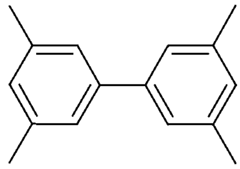
,
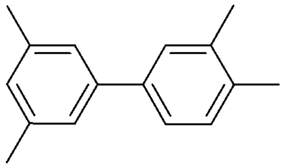
or
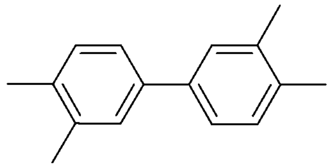

$-(CH_2)_n-$

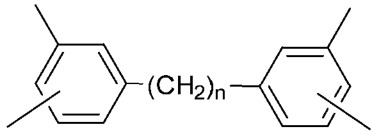

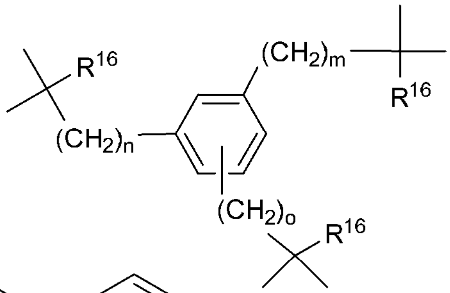

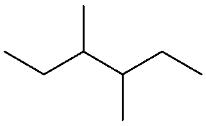

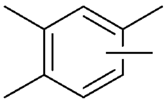

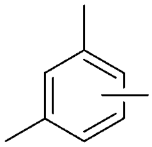

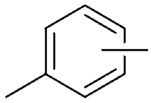

In a further preferred embodiment of the present application, in the compounds of the Formula H,

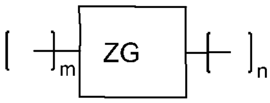

denotes a group selected from the group of the formulae

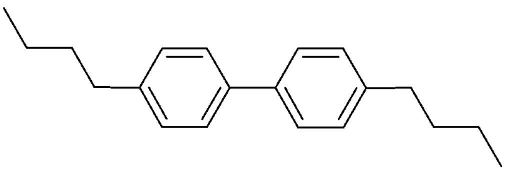
,

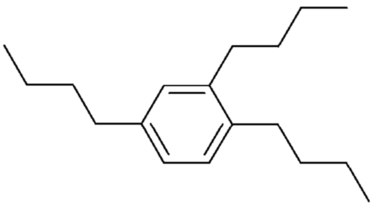
or

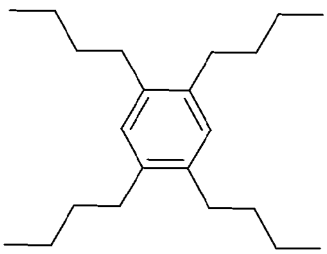
.

In yet a further preferred embodiment of the present invention, in the compounds of the Formula H in which p preferably denotes 1,

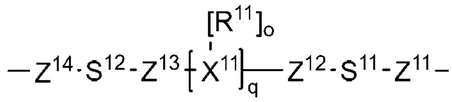

denotes

$$-Z^{12}-S^{11}-Z^{11}-$$ ,

preferably -O-$S^{11}$-O-, -$S^{11}$-O- or -O-$S^{11}$-, particularly preferably -O-$S^{11}$-O- or -$S^{11}$-O-.

In a further preferred embodiment of the present invention, in the compounds of the Formula H, the group

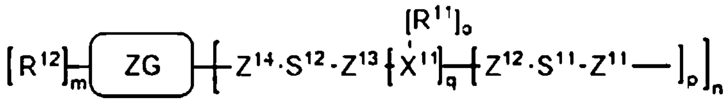

denotes a group selected from the group of the formulae

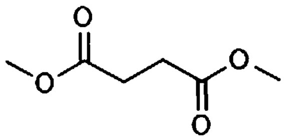

,

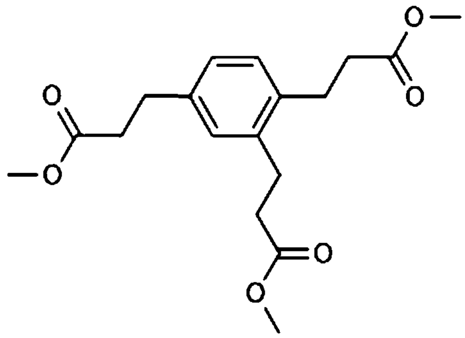

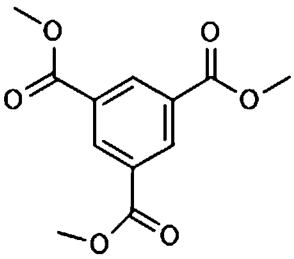

,

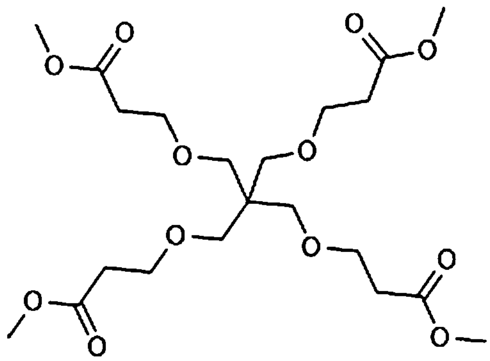

or

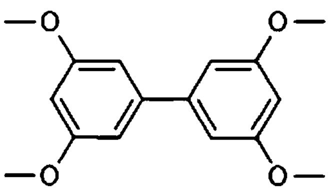

.

In a further preferred embodiment of the present invention, in which p is 2, which may be identical to or different from those described above, in the compounds of the Formula H,

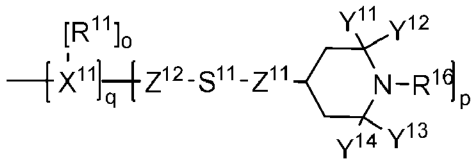

denotes a group selected from the group of the formulae

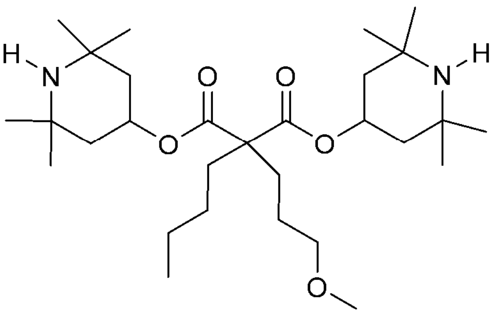

,

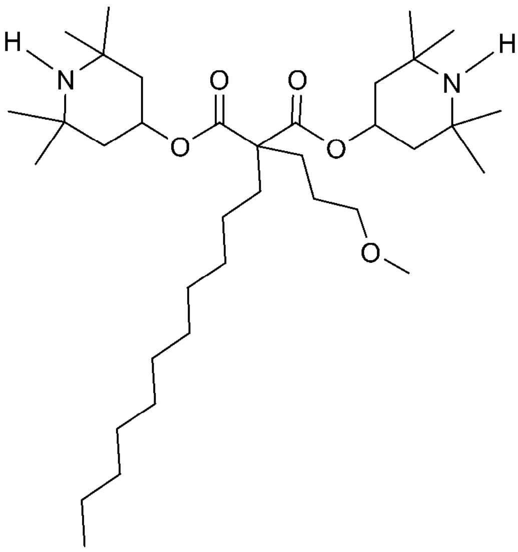

and

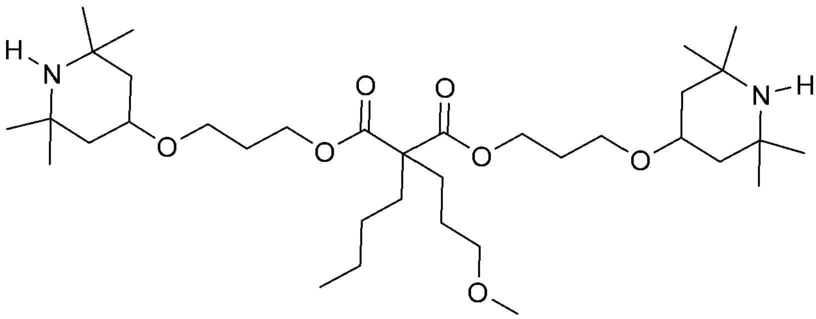

.

In yet a further preferred embodiment of the present invention, which may be identical to or different from those described above, in the compounds of the Formula H, the group

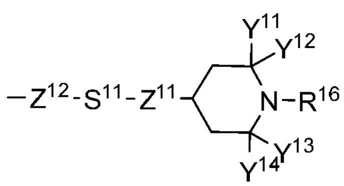

,

on each occurrence, independently of one another, denotes

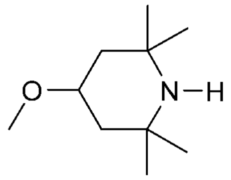

,

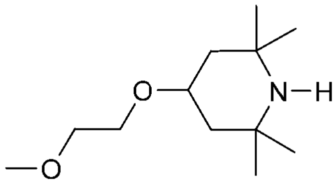

,

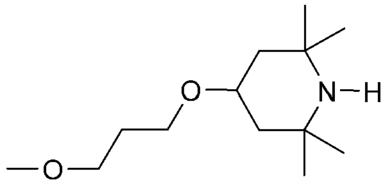

or,

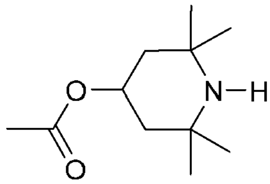

preferably

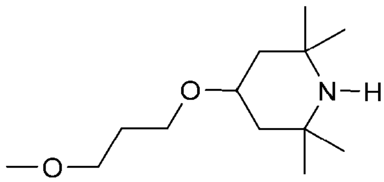

or

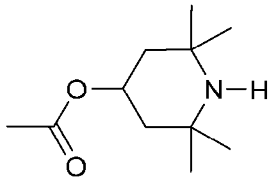

.

Compounds of the following general Formulae H-1-1, H-1-2 and H-1-3, showed to be particularly efficient UV stabilisers in LC mixtures, in particular, in terms of VHR stability:

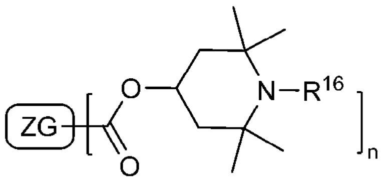

H-1-1

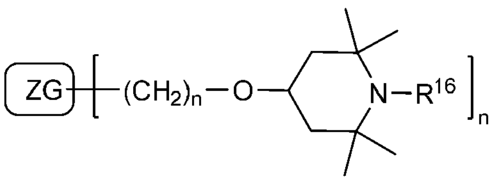

H-1-2

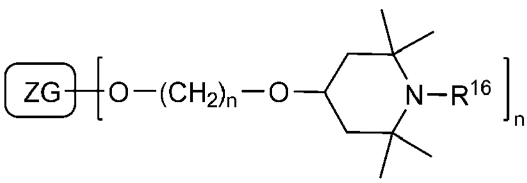

H-1-3

wherein ZG, $R^{16}$ and n are as defined above and n denotes an integer from 1 to 8. These compounds are highly suitable as stabilisers in LC mixtures and stabilise the VHR of the mixtures upon UV exposure.

In a particularly preferred embodiment, the one or more compounds of the Formula H may be selected from the group consisting of the compounds the following Formulae H-2-1 to H-2-6:

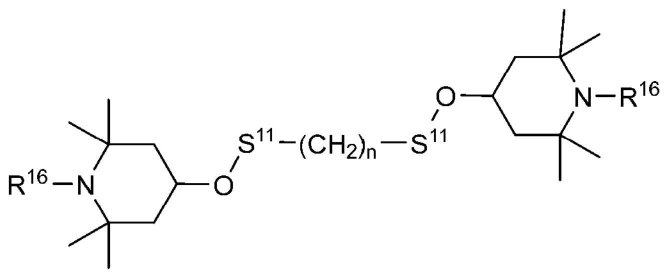

H-2-1

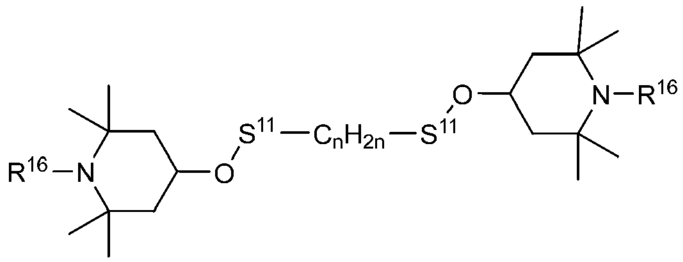

H-2-2

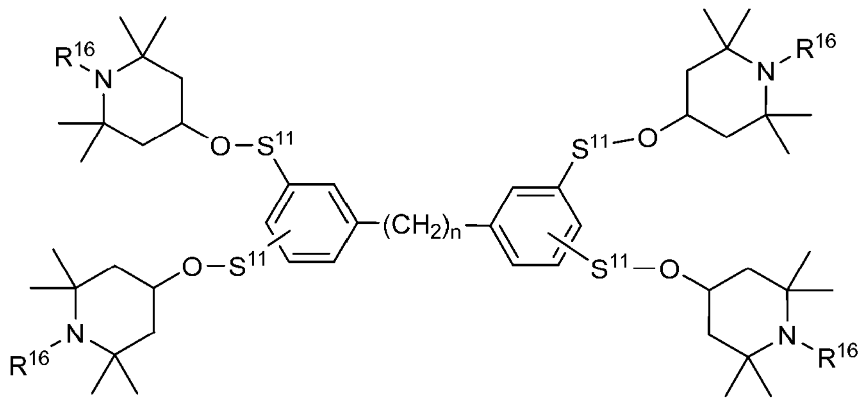

H-2-3

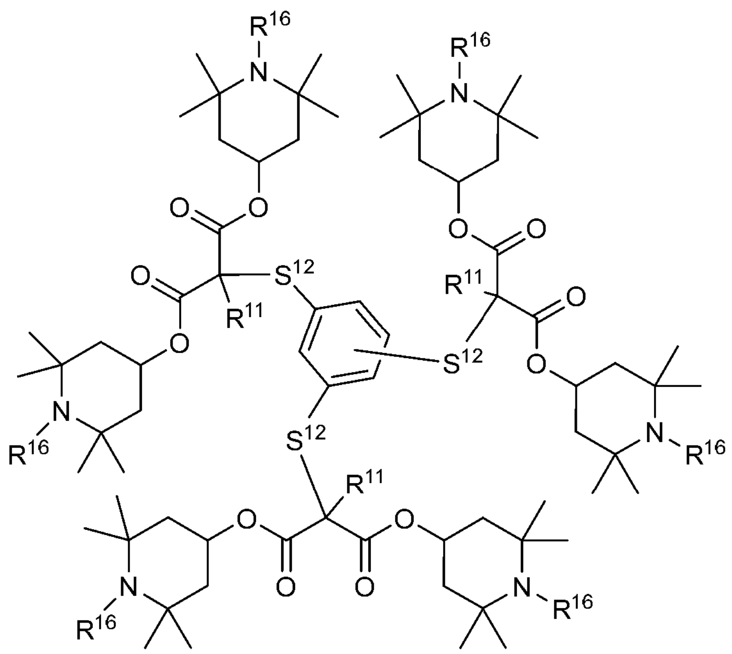

H-2-4

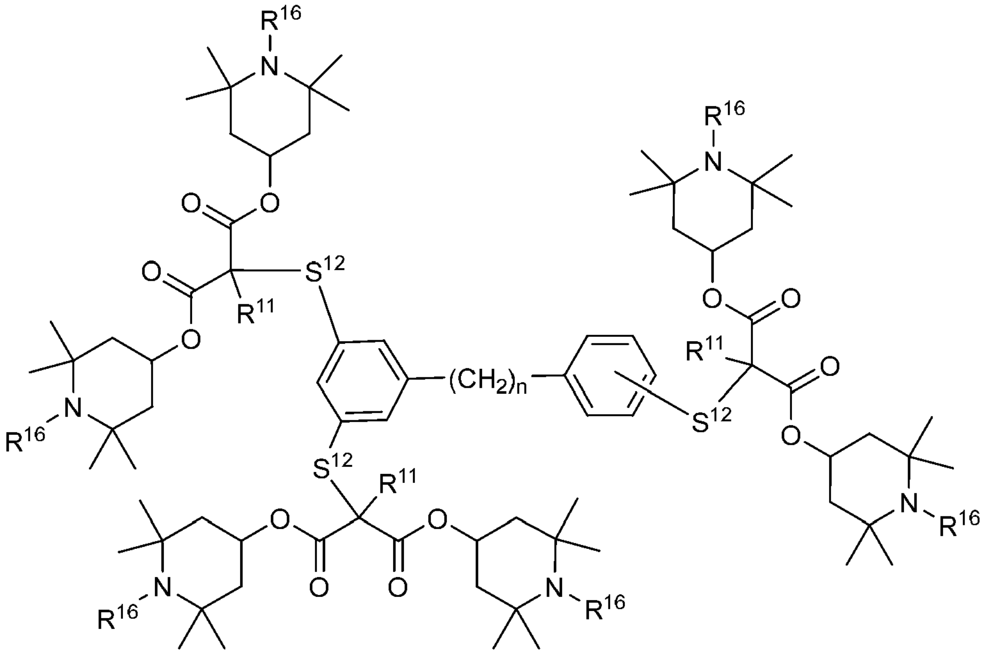

H-2-5

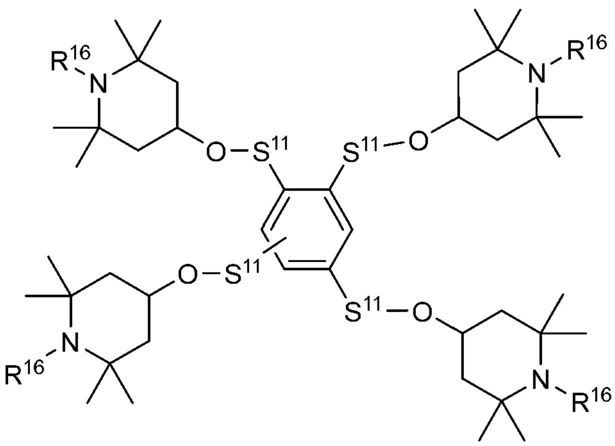

H-2-6

in which

| | |
|---|---|
| $R^{11}$ | each, independently of one another, denotes an H atom, an alkyl group having 1 to 20 C atoms, in which one $-CH_2-$ group or, if present, a plurality of $-CH_2-$ groups may be replaced by -O- or -C(=O)-, but two adjacent $-CH_2-$groups cannot be replaced by -O-, and one or, if present, a plurality of $-CH_2-$ groups may be replaced by-CH=CH- or -C≡C-, and in which one H atom or a plurality of H atoms may be replaced by F, $OR^{13}$, $N(R^{13})(R^{14})$ or R15, |
| $R^{16}$ | denotes a H atom or $O^•$, |
| n | denotes an integer from 0 to 12, and |
| $S^{11}$ and $S^{12}$ | each, independently of one another, denote an alkylene group having 1 to 20 C atoms, in which one $-CH_2-$ group or, if present, a plurality of $-CH_2-$ groups may be replaced by -O- or -C(=O)-, but two adjacent $-CH_2-$ groups cannot be replaced by -O-, and in which one H atom or a plurality of H atoms may be replaced by F, $OR^{13}$, $N(R^{13})(R^{14})$ or $R^{15}$, or denote a single bond. |

In a preferred embodiment of the present invention, the LC media according to the invention comprise in each case one or more compounds of the Formula H selected from the following group of the compounds of the formulae:

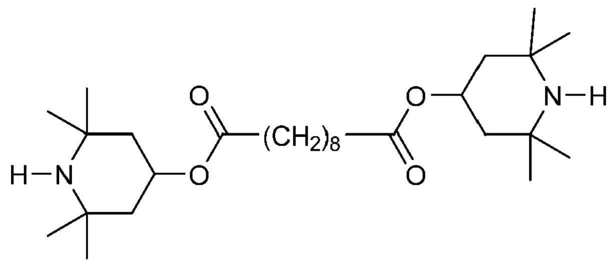

H-3-1

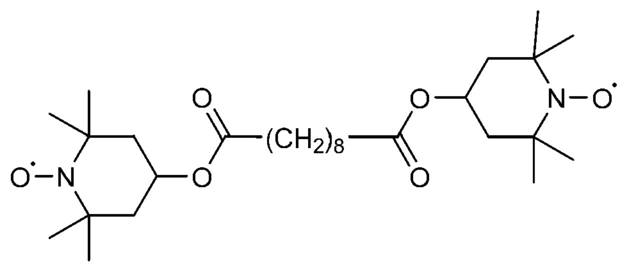

H-3-2

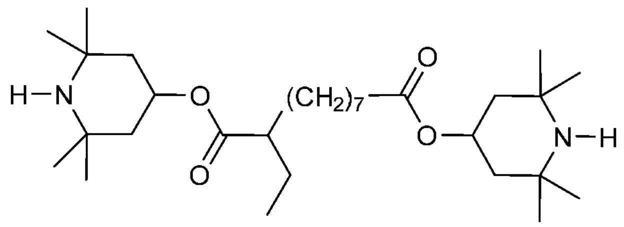

H-3-3

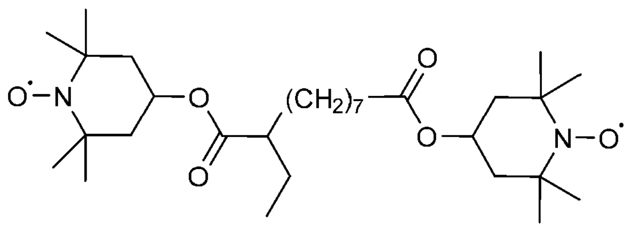

H-3-4

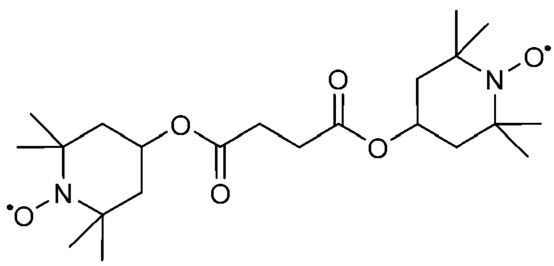

H-3-5

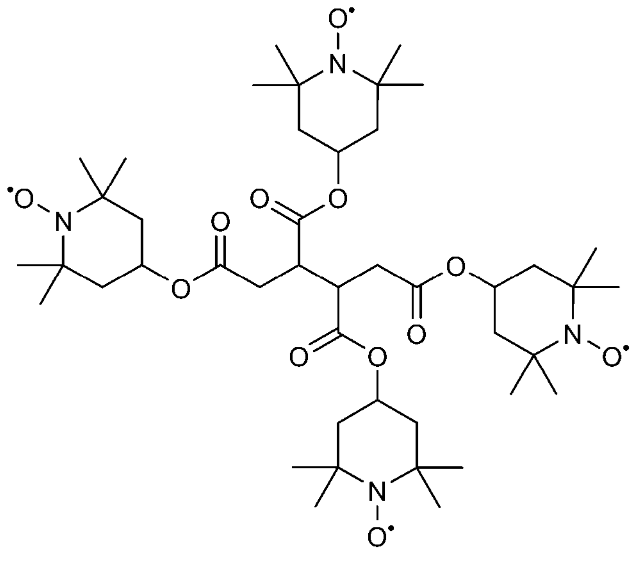

H-3-6

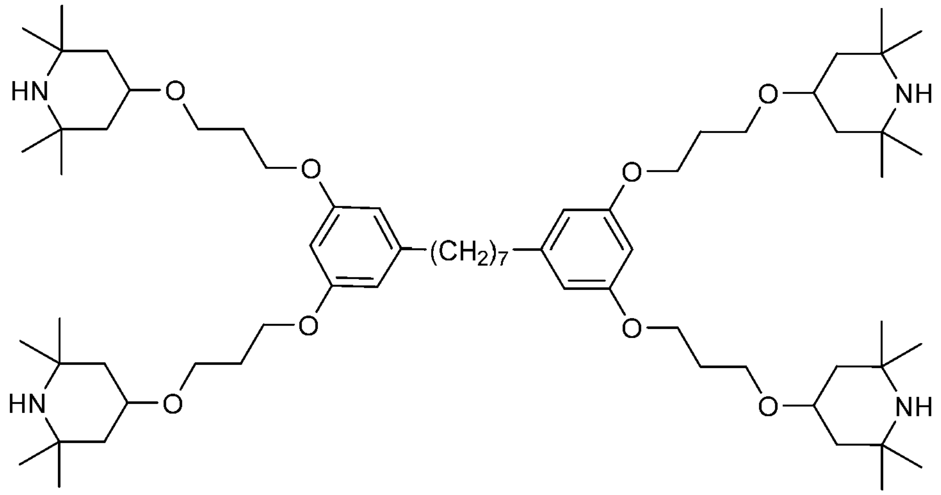

H-3-7

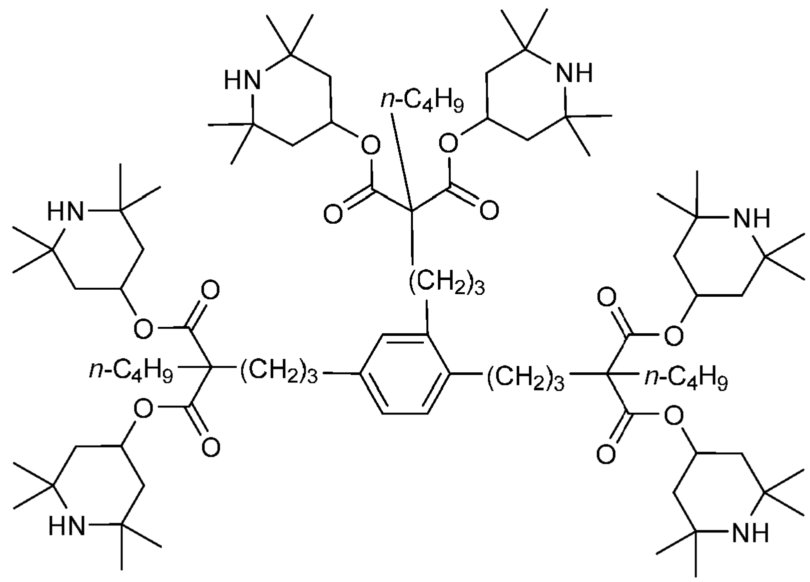

H-3-8

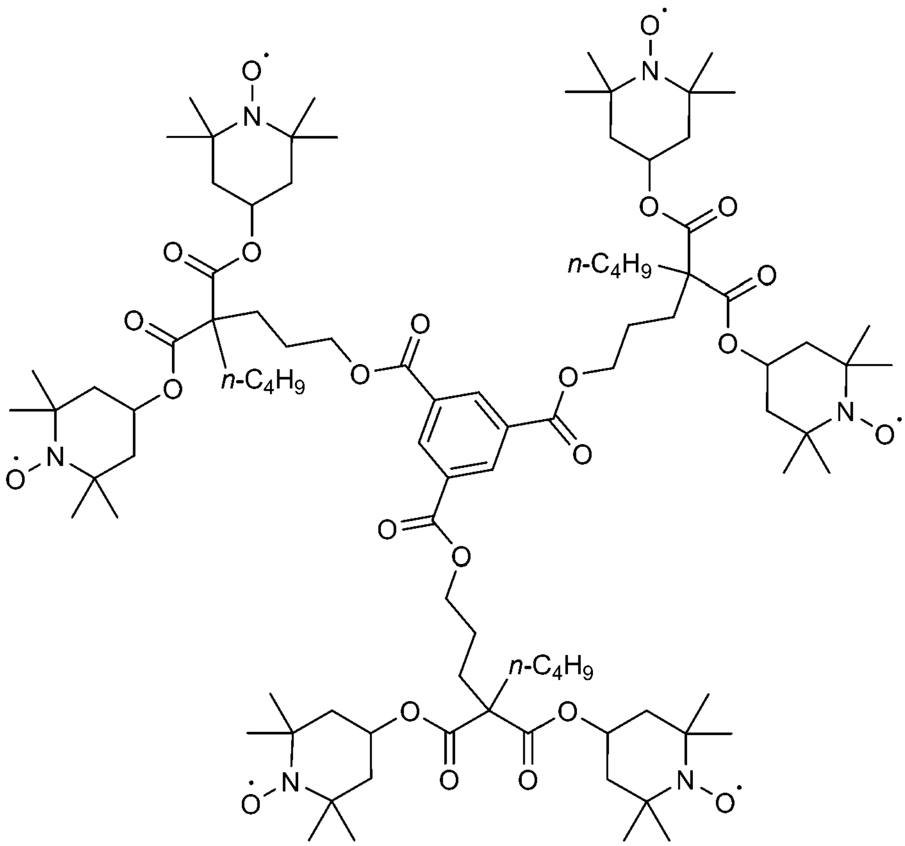

H-3-9

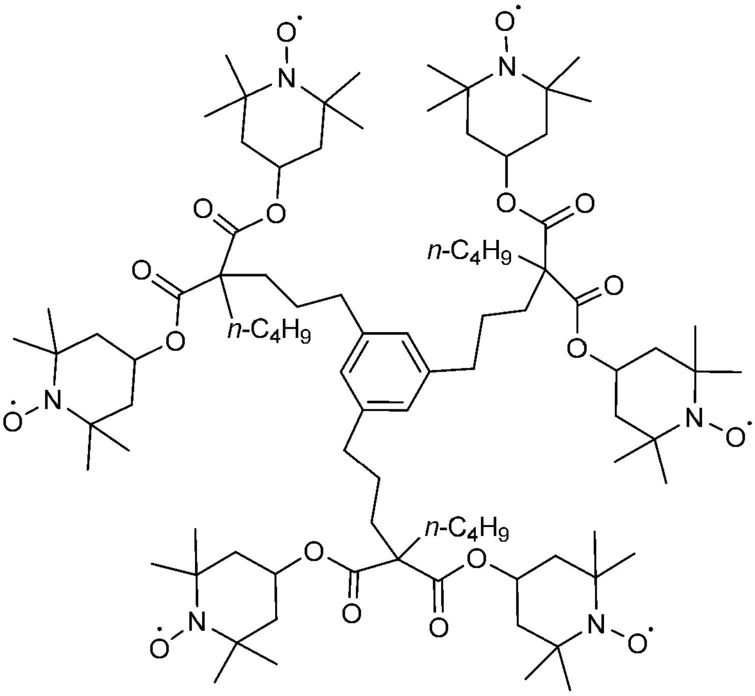

H-3-10

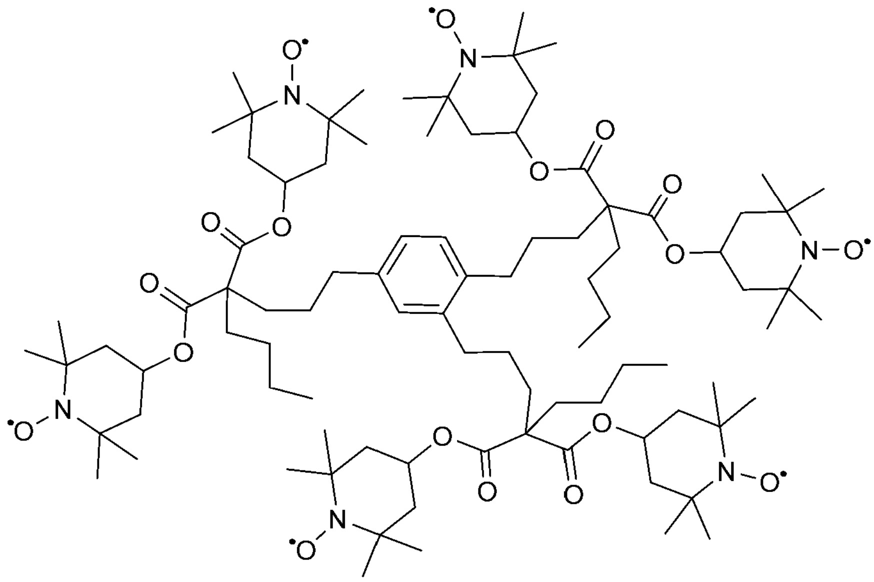

H-3-11

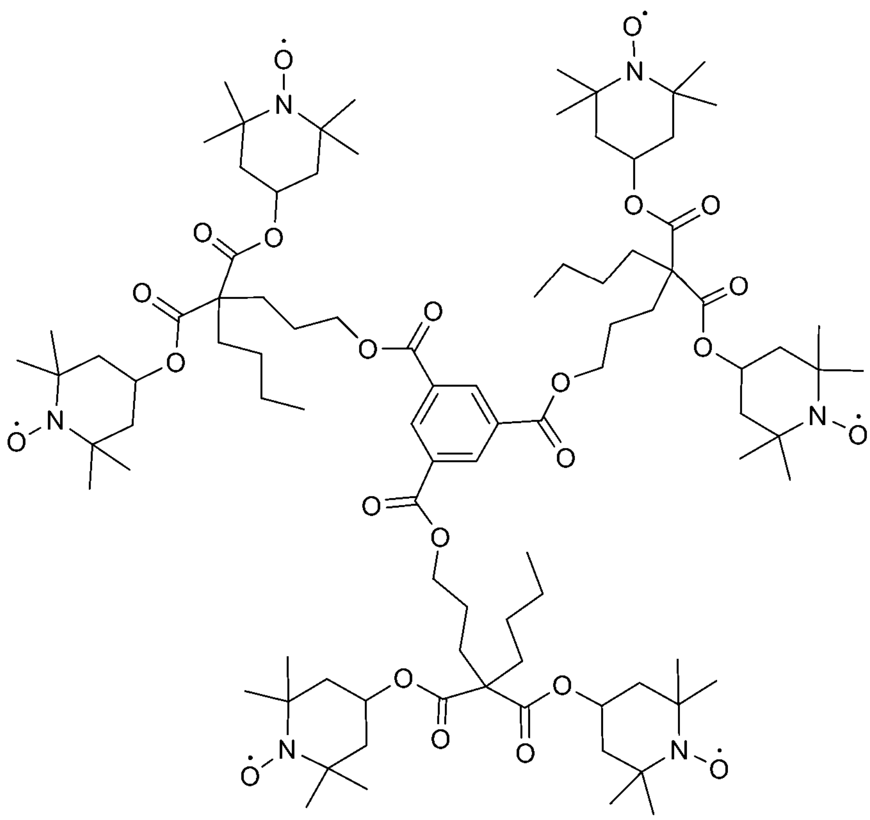

H-3-12

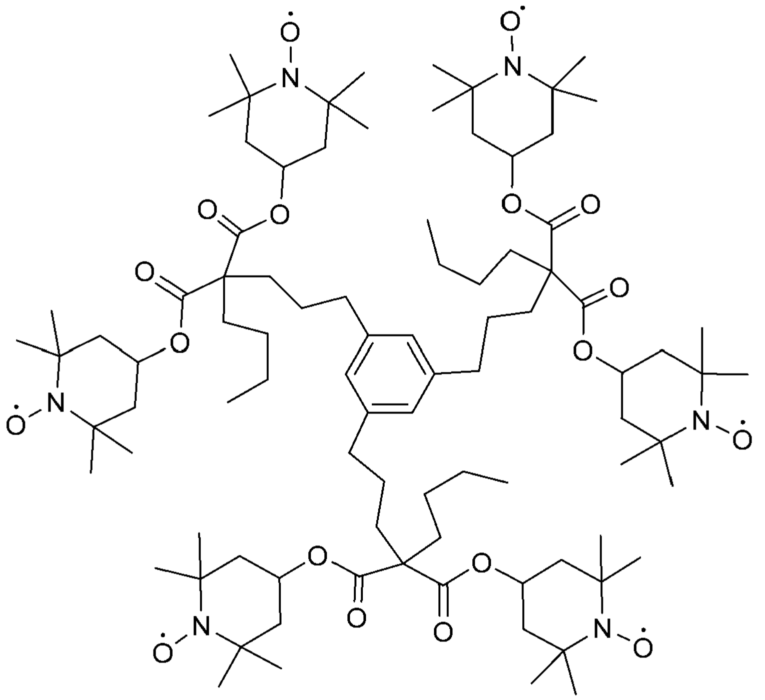

H-3-13

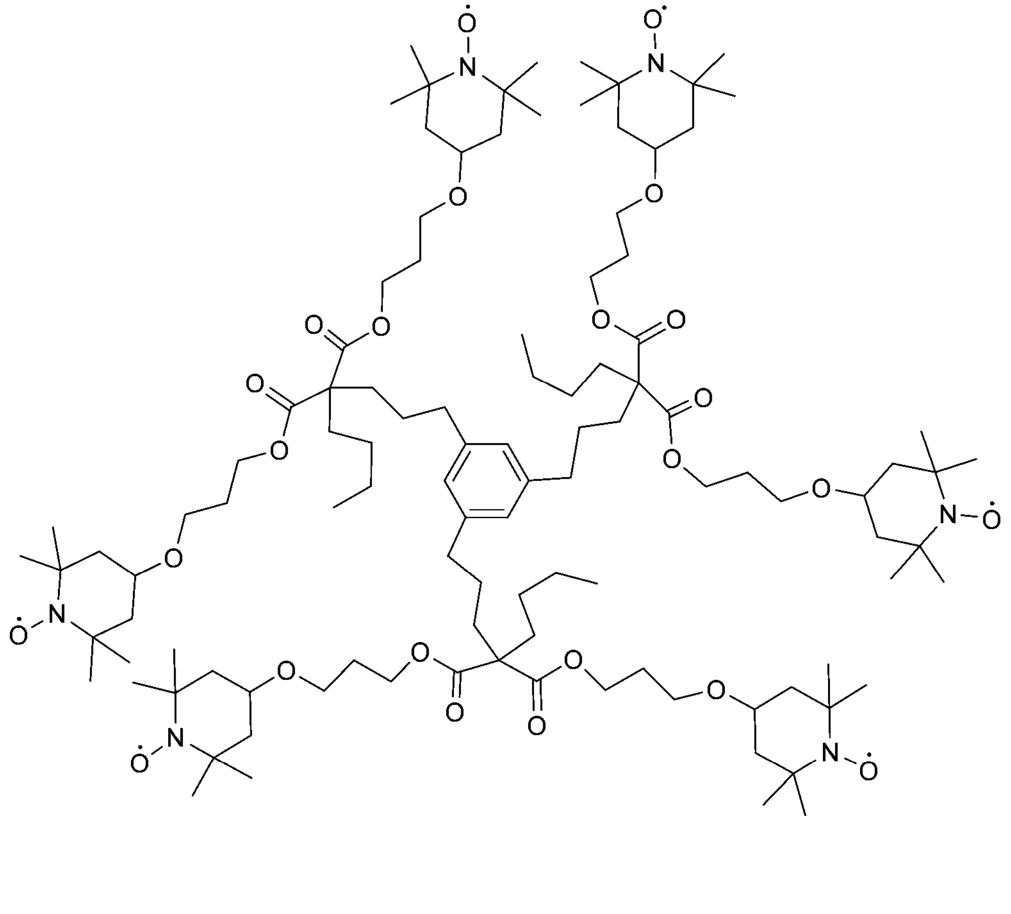

H-3-14

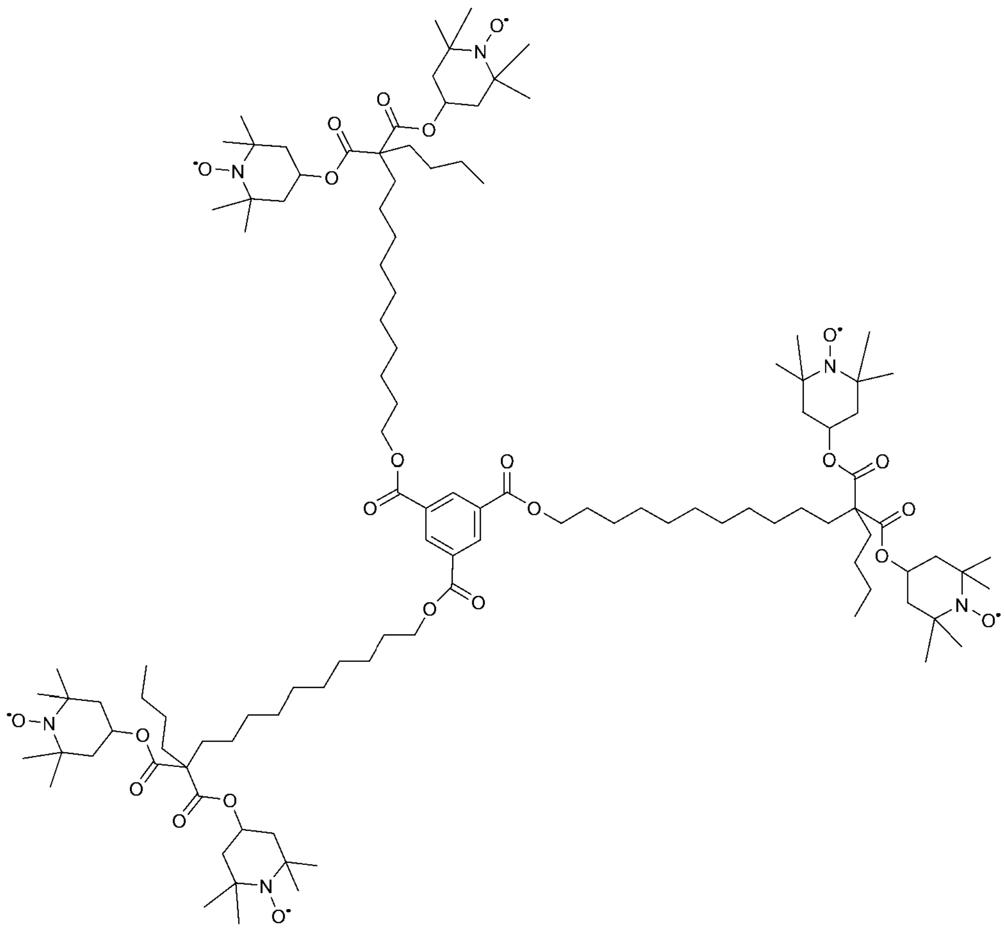

H-3-15

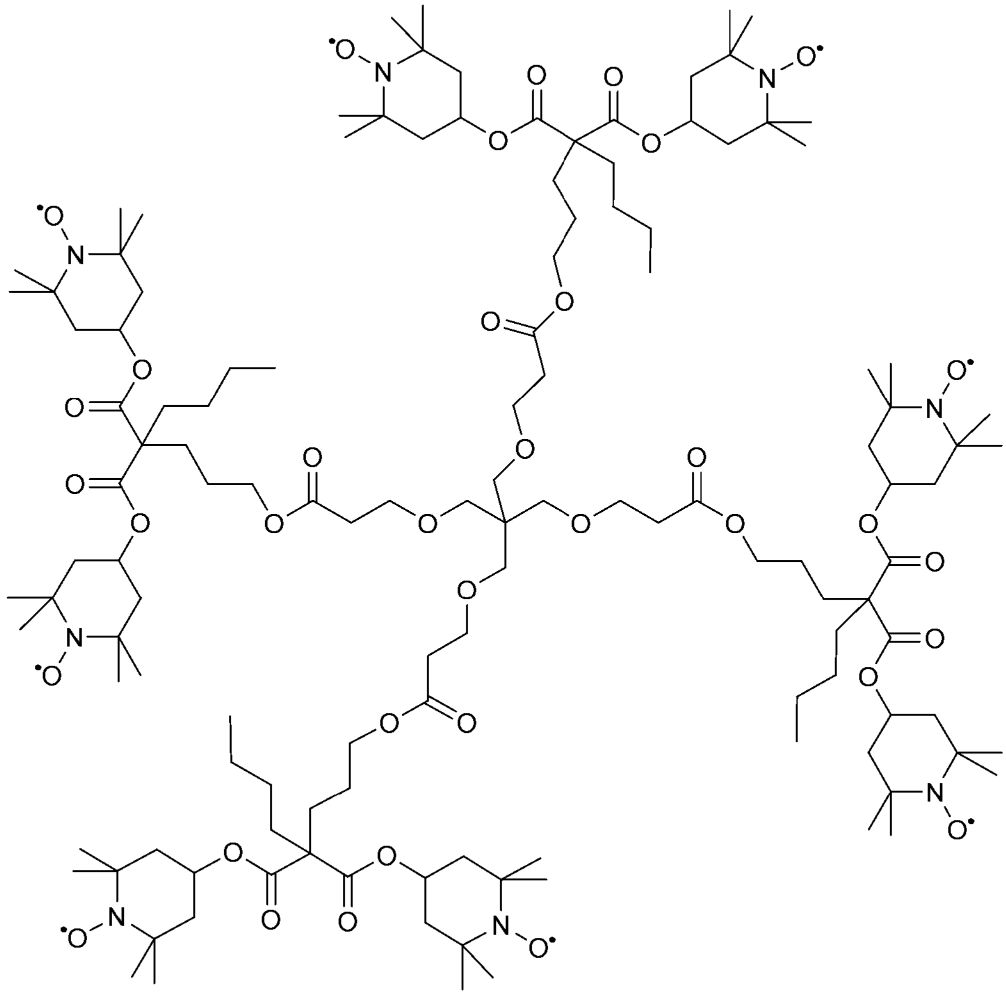

H-3-16

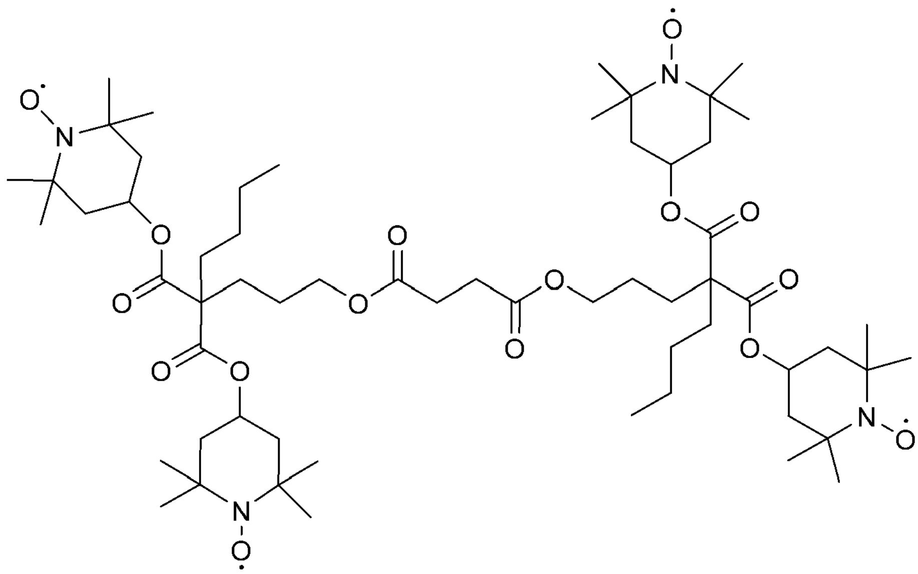

H-3-17

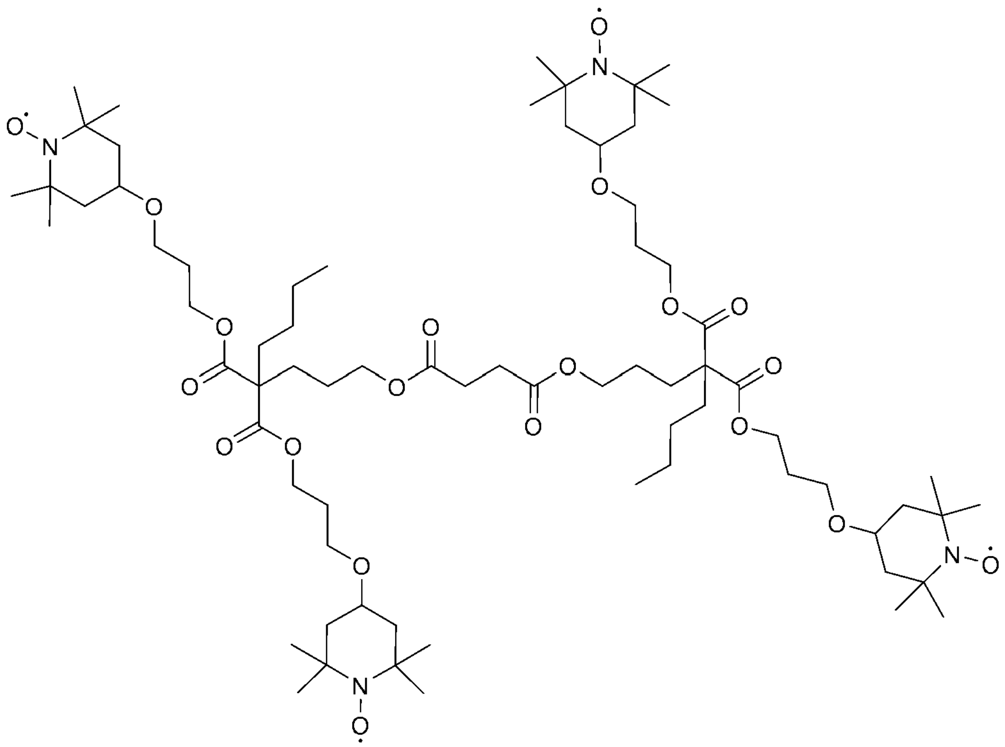

H-3-18

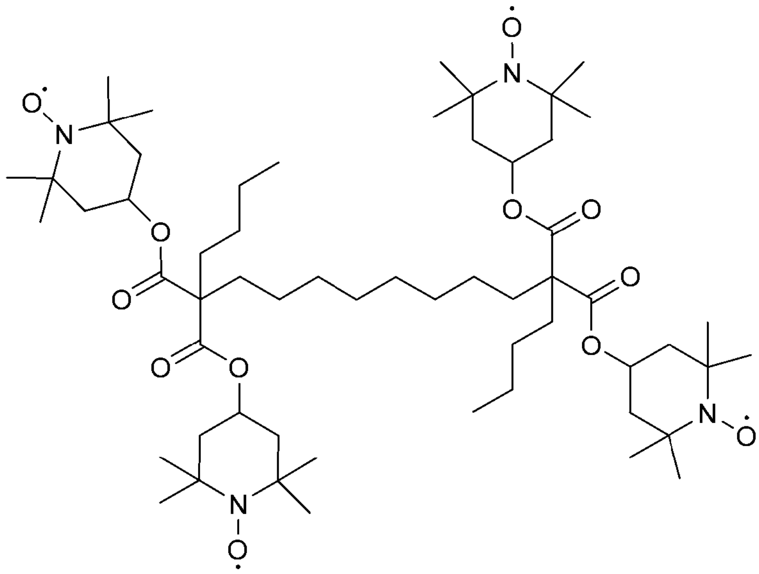

H-3-19

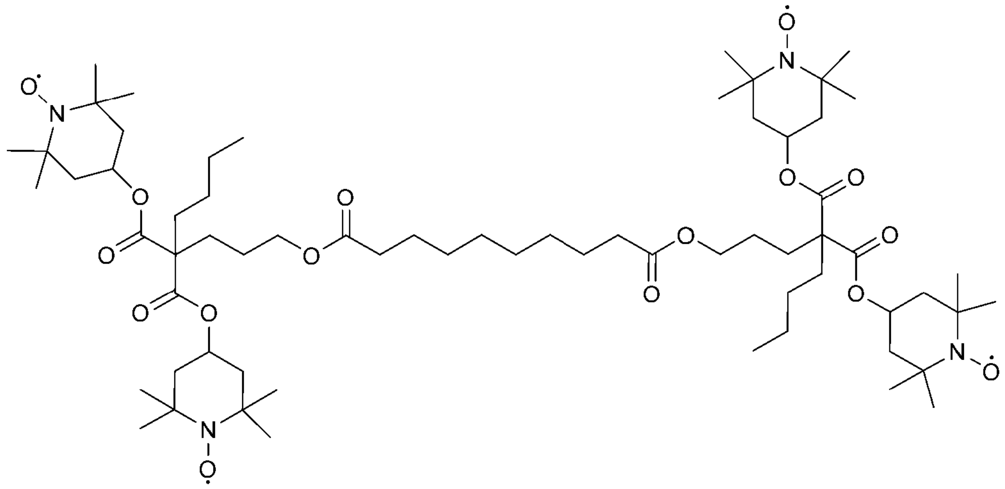

H-3-20

and

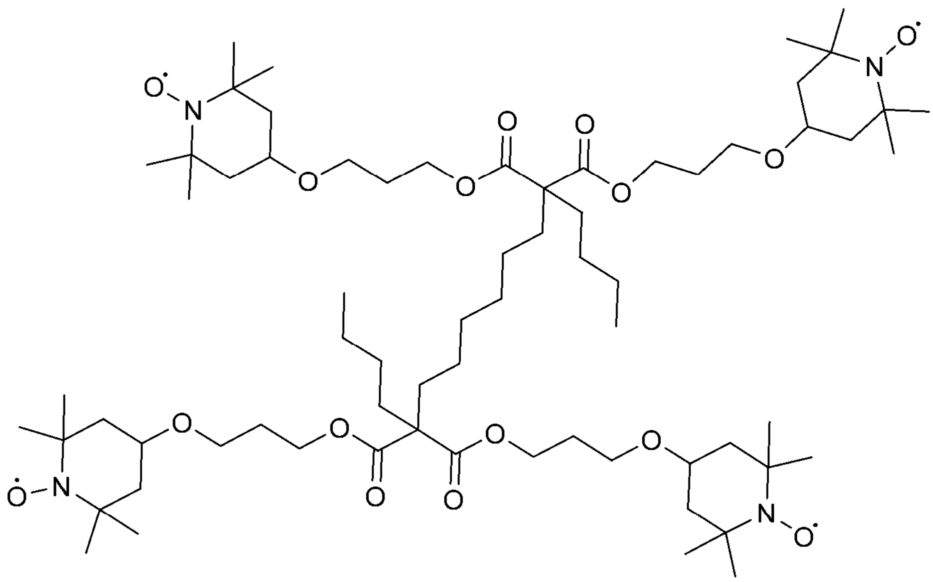

H-3-21

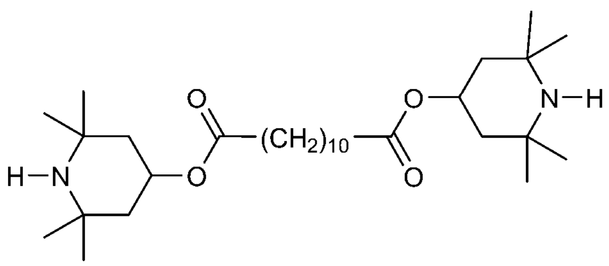

H-3-22

The preferred content of the one or more compounds of Formula H in the LC medium depends *inter alia* on the inherent chemical stability of the LC medium as well as on the nature of the compound of Formula H. Compounds of Formula H in which $R^{16}$ denotes O•, which are known as NO radical type HALS are preferably used in proportion ranging from 50 ppm to 1000 ppm, based on the weight of the LC medium. Compounds of Formula H in which $R^{16}$ denotes an H atom, which are known as NH group type HALS are advantageously used in proportion ranging from 50 ppm to 2000 ppm, based on the weight of the LC medium.

Further preferred LC media are selected from the following preferred embodiments, including any combination thereof:

- a compound of the Formula I and one or more compounds of the Formulae P, S and/or B in combination with a compound of the Formula LP1, Z1 to Z7 and II and/or III

- a compound of the Formula I and one or more compounds of the Formulae P, S and/or B in combination with a compound of the Formula LP2, Z1 to Z7 and II and/or III

- a compound of the Formula I and one or more compounds of the Formulae P, S and/or B in combination with a compound of the Formula LP1, LP2, II and/or III and a compound of the Formula Z1 and Z4

- The LC medium comprises one or more compounds of the Formula I and one or more compounds of the Formulae P, S and/or B or its subformulae and LP1 and/or LP2, II and/or III and one or more compounds selected from the group consisting of the Formulae Z1, Z2, Z3, Z4, Z5, V, VI, VII, VIII, XIV, XV, XVI, XVIIa, XVIIb, XVllc, XVIII, XIX, XX, XXI, XXIII, XXIV, XXV, XXVI, XXVII, XXVIII, XXIX, XXX, XXXa-1, XXXa-2, XXXa-3, XXXII, XXXIII and S and their subformulae.

- The LC medium comprises one or more compounds of the Formulae I or its subformulae, one or more compounds of the Formulae P, S and/or B and LP1 and/or LP2, II and/or III and one or more compounds selected from the group consisting of the Formulae Z1, Z2, Z3, Z4, Z5, IV, VI, XII, XIV, XVI, XVIIa, XVIIb, XVllc, XX, LP1-1, XXIII, XXIX and S and their subformulae.

- The LC medium comprises one or more compounds selected from the group consisting of the Formula II-1, II-2 and II-3, very preferably from the Formula II-1 and II-2. The individual concentration of each of these compounds is preferably from 2 to 15% by weight. The total concentration of these compounds is preferably from 5 to 25% by weight.

- The LC medium comprises one or more compounds selected from the group consisting of the Formula III-1, III-4, III-6, III-16, III-19 and III-20, very preferably from the group consisting of the Formula III-1, III-6, III-16 and III-20. The individual concentration of each of these compounds is preferably from 2 to 15% by weight. The total concentration of these compounds is preferably from 5 to 30% by weight.

- The LC medium comprises one or more compounds of the Formula IV, preferably selected from the Formula IVa or IVc, very preferably from the Formula IVa-1 or IVc-1, most preferably of the Formula IVc-1. The individual concentration of each of these compounds is preferably from 2 to 15% by weight. The total concentration of these compounds is preferably from 5 to 20% by weight.

- The LC medium comprises one or more compounds of the Formula VI, preferably selected from the Formula Vlb. The individual concentration of each of these compounds is preferably from 1 to 20% by weight. The total concentration of these compounds is preferably from 5 to 20% by weight.

- The LC medium comprises one or more compounds of the Formula Z1, preferably selected from the Formula Z1-1. The total concentration of these compounds is preferably from 1 to 70 % by weight, more preferably 5 to 60 % by weight, even more preferably 10 to 50 % by weight, particularly preferred 20 to 50 % by weight.

- The LC medium comprises one or more compounds of the Formula Z2, preferably selected from the Formulae Z2-1 and Z2-2. The total concentration of these compounds is preferably from 2 to 35%, very preferably from 3 to 25% by weight.

- The LC medium comprises from 5 to 20% by weight of compounds of the Formula Z3, preferably of the Formula Z3-1.

- The LC medium comprises from 5 to 20% by weight of compounds of the Formula Z4, preferably of the Formula Z4-1.

- The LC medium comprises from 1 to 20%, very preferably from 2 to 15% by weight of compounds of Formula Z5.

- The LC medium comprises one or more compounds of the Formula LP1-1, preferably of the Formula LP1-1a or LP2-1b, very preferably of the Formula LP1-1a. The concentration of these compounds is preferably from 2 to 15% by weight.

- The LC medium comprises from 1 to 15% by weight of compounds of the Formula LP2-1b.

- The LC medium comprises one or more compounds of the Formula XII, preferably of the Formula Xlla or Xllb, very preferably of the Formula Xlla, most preferably of the Formula Xlla-1. The concentration of these compounds is preferably from 2 to 15% by weight.

- The LC medium comprises from 1 to 15% by weight of compounds of the Formula XIIb.

- The LC medium comprises one or more compounds of the Formula XIV, preferably of the Formula XIVd, very preferably of the Formula XIVd-1. The concentration of these compounds is preferably from 2 to 10% by weight.

- The LC medium comprises one or more compounds of the Formula XVIb, preferably of the Formula XVIb-1, XVIb-2 and/or XVIb-3. The concentration of these compounds is preferably from 1 to 15% by weight.

- The LC medium comprises one or more compounds of the Formula XVIc, preferably of the Formula XVIc-1, XVIc-2 and/or XVIc-3. The concentration of these compounds is preferably from 2 to 20% by weight.

- The LC medium comprises one or more compounds selected from the group consisting of the Formulae XVIIa, XVIIb and XVIIc, very preferably of the Formula XVIIa wherein L is H and of the Formula XVIIb wherein L is F. The total concentration of these compounds is preferably from 0.5 to 5% by weight.

- The LC medium comprises one or more compounds of the Formula XX, preferably of the Formula XXa. The concentration of these compounds is preferably from 2 to 10% by weight.

- The LC medium comprises one or more compounds of the Formula XXI, preferably of the Formula XXIa. The concentration of these compounds is preferably from 2 to 10% by weight.

- The LC medium comprises one or more compounds of the Formula XXIII, preferably of the Formula XXIIIa. The concentration of these compounds is preferably from 0.5 to 5% by weight.

- The LC medium comprises one or more compounds of the Formula XXIX in combination with one or more compounds of the Formula XXX.

- The LC medium comprises one or more compounds of the Formula XXIX, preferably of the Formula XXIXa. The concentration of these compounds is preferably from 1 to 10% by weight, more preferably 1.5 to 5 % by weight.

- The LC medium comprises one or more compounds of the Formula XXXa. The concentration of these compounds is preferably from 2 to 10% by weight.

- The LC medium comprises one or more compounds of the Formula XII. The concentration of these compounds is preferably from 2 to 10% by weight.

- The LC medium comprises one or more compounds of the Formulae I, S, P and/or B and one or more compounds of the Formulae YA to YG and B', preferably of the Formulae I-1, one or more compounds selected from YA-2, YA-9, YA-37, YA-41, YD-1, YG-2, II and/or III, one or more compounds selected from the group consisting of the Formulae Z1, Z2 and Z3 or their subformulae, one or more compounds selected from the group consisting of the Formula XIV, one or more compounds selected from the group consisting of the Formulae IV, VI, XX, XXIII and XXIX or their subformulae, and one or more compounds selected from the group consisting of the Formulae LP2-1, XVI, XVIIa, XVIIb, XVIIc or their subformulae.

- The LC medium comprises one or more compounds of Formula I, preferably of the Formulae I-1, one or more compounds of the Formulae P, S and/or B, and one or more compounds selected from YA-2, YA-9, YA-37, YA-41, YD-1, YG-2, II and/or III, one or more compounds selected from the group consisting of the Formulae Z1, Z2, Z3, Z4 and Z5 or their subformulae, one or more compounds selected from the group consisting of the Formula XIVd or their subformulae, one or more compounds selected from the group consisting of the Formulae IVc, VIb, XXa, XXIIIa and XXIXa or their subformulae, and one or more compounds selected from the group consisting of the Formulae LP1-1b, XVIb, XVIc, XVIIa, XVIIb, XVIIc or their subformulae.

- The LC medium comprises one or more compounds of the Formula I , one or more compounds of the Formulae P, S and/or B, and one or more compounds of the Formulae YA to YG and B, preferably of the Formulae I-1 , one or more compounds selected from YA-2, YA-9, YA-37, YA-41, YD-1, YG-2, II and/or III, one or more compounds selected from the group consisting of the Formulae Z1, Z2 and Z3 or their subformulae, one or more compounds selected from the group consisting of the Formula XIV, one or more compounds selected from the group consisting of the Formulae II, III, IV, VI, XX, XXIII and XXIX or their subformulae, and one or more compounds selected from the group consisting of the

Formulae LP2-1, XVI, XVlla, XVllb, XVllc or their subformulae.

- The LC medium comprises one or more compounds of the Formula I, one or more compounds of the Formulae P, S and/or B, and one or more compounds of the Formulae YA to YG and B, preferably of the Formulae I-1 , one or more compounds selected from YA-2, YA-9, YA-37, YA-41, YD-1, YG-2, one or more compounds selected from the group consisting of the Formulae Z1, Z2, Z3, Z4 and Z5 or their subformulae, one or more compounds of Formula B, preferably selected from the group consisting of the Formulae B1, B2 and B3, one or more compounds of the Formula XIVd or their subformulae, one or more compounds selected from the group consisting of the Formulae II, III, IVc, Vlb, XXa, XXllla and XXIXa or their subformulae, and one or more compounds selected from the group consisting of the Formulae LP1-1b, XVIb, XVIc, XVIIa, XVIIb, XVllc or their subformulae.

- Besides the compounds of the Formula I, one or more compounds of the Formulae P, S and/or B, and one or more compounds of the Formulae YA to YG and B, the LC medium comprises one or more compounds of Formula Z1-1 and one or more compounds of Formula Z4-2 and /or Z4-3.

- Besides the compounds of the Formulae I, S, P and/or B, LP1 and/or LP2, the LC medium comprises further compounds selected from the group of the compounds of the Formula Z1, Z2, Z3, IV, LP1-1, XIV, XVI, XVIIa, XVIIb, XVIIc, XXI, XXIII, XXIX, XXX and XXIV or their subformulae.

- Besides the compounds of Formulae I, S, P and/or B, LP1 and/or LP2, the LC medium comprises further compounds selected from the group of the compounds of the Formulae Z1, Z2, Z3, IV, LP2-1, XIV, XVI, XVIIa, XVIIb, XVllc, XXI, XXIII, XXIX, XXX and XXIV or their subformulae.

- The proportion of compounds of the Formulae I, S, P and/or B in the LC medium is from 0.5 to 20%, very preferably from 1 to 20%, most preferably from 2 to 10% by weight.

- The proportion of compounds of the Formulae Z1, Z2, Z3, Z4 and Z5 or their subformulae in the LC medium as a whole is from 10 to 65%, very preferably from 20 to 60% by weight.

- The proportion of compounds of the Formula B or its subformulae in the LC medium as a whole is from 0 to 15%, very preferably from 2 to 10% by weight.

- The proportion of compounds of the Formulae II, III, IV-VIII, XVIII-XXIII and XXVII-XXX in the LC medium as a whole is 30 to 60% by weight.

- The proportion of compounds of the Formulae XIV and XV in the LC medium as a whole is 5 to 20% by weight.

- The proportion of compounds of the Formulae XIV, XVlla-c and XXXII in the LC medium as a whole is 0.5 to 15% by weight.

The term *"alkyl"* or *"alkyl*"* in this application encompasses straight-chain and branched alkyl groups having 1 to 6 carbon atoms, in particular the straight-chain groups methyl, ethyl, propyl, butyl, pentyl and hexyl. Groups having 2 to 5 carbon atoms are generally preferred.

The term *"alkenyl"* or *"alkenyl*"* encompasses straight-chain and branched alkenyl groups having 2 to 6 carbon atoms, in particular the straight-chain groups. Preferred alkenyl groups are $C_2$-$C_7$-1E-alkenyl, $C_4$-$C_6$-3E-alkenyl, in particular $C_2$-$C_6$-1E-alkenyl. Examples of particularly preferred alkenyl groups are vinyl, 1E-propenyl, 1E-butenyl, 1E-pentenyl, 1E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular $CH_2$=CH, $CH_3$CH=CH.

The term *"fluoroalkyl"* preferably encompasses straight-chain groups having a terminal fluorine, *i.e.* fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term *"oxaalkyl"* or *"alkoxy"* preferably encompasses straight-chain groups of the Formula $C_nH_{2n+1}$-O-$(CH_2)_m$, in which n and m each, independently of one another, denote 1 to 6. m may also denote 0. Preferably, n = 1 and m = 1 to 6 or m = 0 and n = 1 to 3. Further preferably the alkoxy or oxaalkyl group can also contain one or more further O atoms such that oxygen atoms are not directly linked to one another.

Through a suitable choice of the meanings of $R^0$ and $X^0$ in Formulae II and III, the addressing times, the threshold voltage, the steepness of the transmission characteristic lines, etc., can be modified in the desired manner. For example, 1 E-alkenyl groups, 3E-alkenyl groups, 2E-alkenyloxy groups and the like generally result in shorter addressing times,

improved nematic tendencies and a higher ratio between the elastic constants $K_3$ (bend) and $K_1$ (splay) compared with alkyl and alkoxy groups. 4-Alkenyl groups, 3-alkenyl groups and the like generally give lower threshold voltages and lower values of $K_3$ / $K_1$ compared with alkyl and alkoxy groups. The LC media according to the invention are distinguished, in particular, by high $\Delta\varepsilon$ values and thus have significantly faster response times than the LC media from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the LC media according to the invention is not crucial. The LC media can therefore comprise one or more further components for the purposes of optimisation of various properties. However, the observed effect on the desired improvement in the properties of the medium is generally greater, the higher the total concentration of compounds of the above-mentioned formulae.

In a particularly preferred embodiment, the LC media according to the invention comprise compounds of the Formulae IV to VIII (preferably IV and V) in which $X^0$ denotes F, $OCF_3$, $OCHF_2$, $OCH{=}CF_2$, $OCF{=}CF_2$ or $OCF_2$-$CF_2H$. A favourable synergistic action with the compounds of Formulae I, S, P and/or B, II and III results in particularly advantageous properties. In particular, LC media comprising compounds of the Formula I and one or more compounds of the Formulae YA to YG and B, II and III are distinguished by their low threshold voltage.

The individual compounds of the above-mentioned formulae and the subformulae thereof which can be used in the LC media according to the invention are either known or can be prepared analogously to the known compounds.

The invention also relates to a process for the preparation of a LC medium as described above and below, by mixing one or more compounds of the Formulae I, S, P and/or B with one or more mesogenic compounds and optionally one or more polymerizable compounds and/or one or more additives.

The LC medium of the present invention may optionally comprise one or more polymerisable compounds. The polymerisable compounds are preferably selected from the Formula M

$$R^a\text{-}B^1\text{-}(Z^b\text{-}B^2)_m\text{-}R^b \qquad M$$

in which the individual substituents, on each occurrence identically or differently, and each, independently of one another, have the following meaning:

$R^a$ and $R^b$ P, P-Sp-, H, F, Cl, Br, I, -CN, $-NO_2$, -NCO, -NCS, -OCN, -SCN, $SF_5$ or straight-chain or branched alkyl having 1 to 25 C atoms, in which, in addition, one or more non-adjacent $CH_2$ groups may each be replaced, independently of one another, by $-C(R^0){=}C(R^{00})-$, -C≡C-, $-N(R^{00})-$, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if $B^1$ and/or $B^2$ contain a saturated C atom, $R^a$ and/or $R^b$ may also denote a group which is spiro-linked to this saturated C atom,

wherein at least one of the substituents $R^a$ and $R^b$ denotes or contains a group P or P-Sp-,

P a polymerisable group,

Sp a spacer group or a single bond,

$B^1$ and $B^2$ an aromatic, heteroaromatic, alicyclic or heterocyclic group, preferably having 4 to 25 ring atoms, which may also contain fused rings, and which is unsubstituted, or mono- or polysubstituted by L,

$Z^b$ -O-, -S-, -CO-, -CO-O-, -OCO-, -O-CO-O-, $-OCH_2-$, $-CH_2O-$, $-SCH_2-$, $CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -C≡C-, -CH=CH-COO-, -OCO-CH=CH-, $CR^0R^{00}$ or a single bond,

$R^0$ and $R^{00}$ each, independently of one another, denote H or alkyl having 1 to 12 C atoms,

m denotes 0, 1, 2, 3 or 4,

n1 denotes 1, 2, 3 or 4,

L P, P-Sp-, OH, $CH_2OH$, F, Cl, Br, I, -CN, $-NO_2$, -NCO, -NCS, -OCN, -SCN, $-C(=O)N(R^x)_2$, $-C(=O)Y^1$, $-C(=O)R^x$, $-N(R^x)_2$, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,

P and Sp have the meanings indicated in the Formula M above,

$Y^1$ denotes halogen,

$R^x$ denotes P, P-Sp-, H, halogen, straight-chain, branched or cyclic alkyl having 1 to 25 C atoms, in which, in addition, one or more non-adjacent $CH_2$ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Further preferably, the LC media according to the present invention comprise one or more polymerisable compounds selected from Table H below.

Preferably, the proportion of polymerisable compounds in the LC medium, preferably selected from the Formula M and Table H, is from 0.01 to 5%, very preferably from 0.05 to 1%, most preferably from 0.1 to 0.5%.

It was observed that the addition of one or more polymerisable compounds to the LC medium, like those selected from the Formula M and Table H, leads to advantageous properties like fast response times. Such a LC medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the LC medium at longer UV wavelengths, so that it is possible to use such longer UV wavelengths for polymerisation, which is advantageous for the display manufacturing process.

The invention also relates to the use of a LC medium according to the present invention as described above and below for electro-optical purposes, in particular for the use is in shutter glasses, for 3D applications, in TN, PS-TN, STN, TN-TFT, OCB, IPS, PS-IPS, FFS, HB-FFS, XB-FFS, PS-FFS, positive VA and positive PS-VA displays, and to electro-optical displays, in particular of the aforementioned types, containing a LC medium according to the present invention as described above and below, in particular a TN, PS-TN, STN, TN-TFT, OCB, IPS, PS-IPS, FFS, HB-FFS, XB-FFS, PS-FFS, positive VA (vertically aligned) or positive PS-VA display.

The invention also relates to electro-optical displays, such as, for example, STN or matrix LC (MLC) displays, having two plane-parallel outer plates, which, together with a frame, form a cell, integrated non-linear elements for switching individual pixels on the outer plates, and a nematic LC medium having positive dielectric anisotropy and high specific resistance located in the cell, wherein the nematic LC medium is a LC medium according to the present invention as described above and below.

The LC media according to the invention enable a significant broadening of the available parameter latitude. The achievable combinations of clearing point, viscosity at low temperature, thermal and UV stability and high optical anisotropy are far superior to previous materials from the prior art.

In particular, the combination of compounds of the Formula I with one or more compounds of the Formulae P, S and/or B and, optionally, with compounds selected from the Formulae II-XXXII or their subformulae, leads to LC media which show a moderate positive dielectric anisotropy and at the same time an increased dielectric constant $\varepsilon_\perp$ perpendicular to the longitudinal axes of the LC molecules, while maintaining a low rotational viscosity and a low value of the ratio $\gamma_1$ / $K_1$. This enables energy efficient LC displays, especially of the FFS, HB-FFS, XB-FFS and IPS mode, with high contrast ratio and transmission and low response times.

The LC media according to the invention are suitable for mobile applications and TFT applications, such as, for example, mobile telephones and PDAs. Furthermore, the LC media according to the invention are particularly suitably for use in FFS, HB-FFS, XB-FFS and IPS displays based on dielectrically positive liquid crystals.

The LC media according to the invention, while retaining the nematic phase down to -20 °C and preferably down to -30 °C, particularly preferably down to -40 °C, and the clearing point ≥ 75 °C, preferably ≥ 80 °C, at the same time allow rotational viscosities $\gamma_1$ of ≤ 120 mPa · s, particularly preferably ≤ 100 mPa · s, to be achieved, enabling excellent MLC displays having fast response times to be achieved. The rotational viscosities are determined at 20 °C.

The dielectric anisotropy $\Delta\varepsilon$ of the LC media according to the invention at 20 °C and 1 kHz is preferably ≥ +1.5, very preferably from +2 to +18, most preferred from +3 to +10.

The birefringence $\Delta n$ of the LC media according to the invention at 20°C is preferably from 0.08 to 0.2, very preferably from 0.09 to 0.15.

The rotational viscosity $\gamma_1$ of the LC media according to the invention is preferably ≤ 120 mPa s, more preferably ≤ 110 mPa s, very preferably ≤ 90 mPa s.

The ratio $\gamma_1$ / $K_1$ (wherein $\gamma_1$ is the rotational viscosity and $K_1$ is the elastic constant for splay deformation) of the LC media according to the invention is preferably ≤ 7 mPa·s/pN, very preferably ≤ 6 mPa·s/pN, most preferably ≤ 5.5 mPa·s/pN.

The average elasticity constant ratio $K_{av}$ of the LC media according to the invention is preferably at least 14.0 pN, very preferably at least 15.0 pN, most preferably at least 16.0 pN. $K_{av}$ can be calculated according to the following formula:

$$K_{av} = (K_1 + K_2 + K_3) / 3 \approx (K_1 + ½ * K_1 + K_3) / 3.$$

The nematic phase range of the LC media according to the invention preferably has a width of at least 70 °C, more preferably of at least 80 °C, in particular at least 90 °C. This range preferably extends at least from -25 °C to +90 °C.

It goes without saying that, through a suitable choice of the components of the LC media according to the invention, it is also possible for higher clearing points (for example above 100 °C) to be achieved at higher threshold voltages or lower clearing points to be achieved at lower threshold voltages with retention of the other advantageous properties. At viscosities correspondingly increased only slightly, it is likewise possible to obtain LC media having a higher $\Delta\varepsilon$ and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the LC media according to the invention at the first minimum than in the case of LC media comprising cyano compounds. Through a suitable choice of the individual components and their proportions by weight, the person skilled in the art is able to set the birefringence necessary for a pre-specified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that LC media according to the invention comprising compounds of the Formulae ST-1, ST-2, RV, IA and IB exhibit a significantly smaller decrease in the HR on UV exposure than analogous LC media comprising cyanophenylcyclohexanes of the Formula

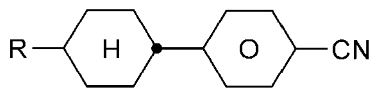

or esters of the Formula

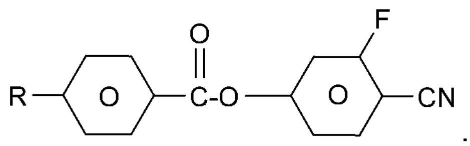

The light stability and UV stability of the LC media according to the invention are considerably better, *i.e.* they exhibit a significantly smaller decrease in the HR on exposure to light, heat or UV.

The construction of the MLC display according to the invention from polarisers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the LC parameters of the LC layer.

The LC media which can be used in accordance with the invention are prepared in a manner conventional *per se,* for example by mixing compounds of Claim 1 with one or more compounds of the Formulae II-XXXII or with further LC compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The LC media may also comprise further additives known to the person skilled in the art and described in the literature, such as, for example, polymerisation initiators, inhibitors, surface-active substances, light stabilisers, anti-oxidants, e.g. BHT, TEMPOL, microparticles, free-radical scavengers, nanoparticles, etc. For example, 0 to 15% of pleochroic dyes or chiral dopants or initiators like Irgacure® 651 or Irgacure® 907 can be added. Suitable stabilisers and dopants are mentioned below in Tables F and G. In a preferred embodiment, the LC medium comprises one or more stabilisers selected from Table G. Preferably, the proportion of stabilisers, like those of the Formula ST and H, as described above or listed in Table G, in the LC medium is from 10 to 2000 ppm, very preferably from 30 to 1000 ppm.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (*cf.*, for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

For the present invention and in the following examples, the structures of the LC compounds are indicated by means of acronyms, with the transformation into chemical formulae taking place in accordance with Tables A to C below. All substituents $C_mH_{2m+1}$, $C_nH_{2n+1}$, and $C_lH_{2l+1}$ or $C_mH_{2m-1}$, $C_nH_{2n-1}$ and $C_lH_{2l-1}$ are straight-chain alkyl groups or alkylene groups, in each case having n, m and l C atoms respectively. Preferably, n, m and l are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 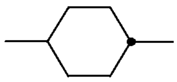 | | |
| **D** | 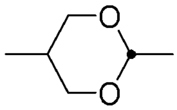 | **DI** | 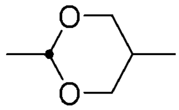 |
| **A** | 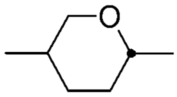 | **AI** | 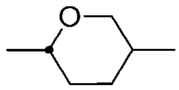 |
| **P** | 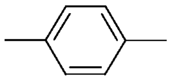 | | |
| **G** | 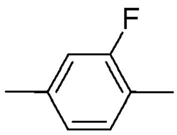 | **GI** | 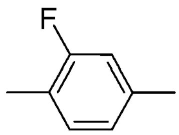 |
| **U** | 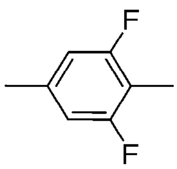 | **UI** | 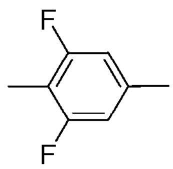 |
| **Y** | 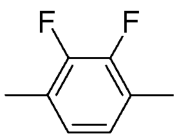 | **U(1)** | 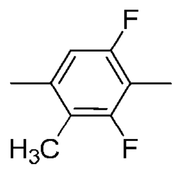 |
| **P(F, Cl)Y** | 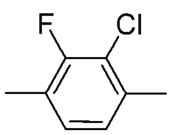 | **P(Cl,F)Y** | 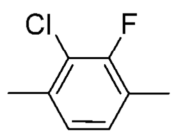 |
| **Np** | 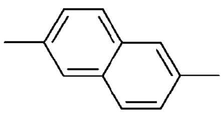 | | |

(continued)

| | | | |
|---|---|---|---|
| n3f | 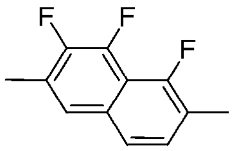 | nN3fl | 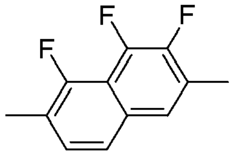 |
| th | 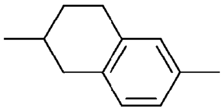 | thl | 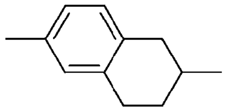 |
| tH2f | 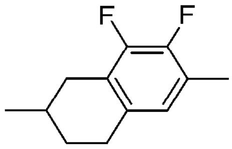 | tH2fl | 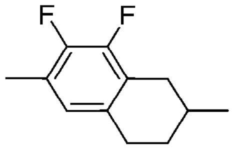 |
| o2f | 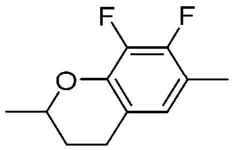 | o2fl | 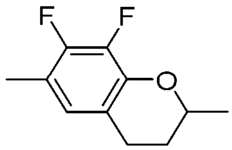 |
| dh | 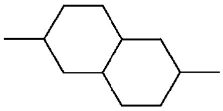 | | |
| B | 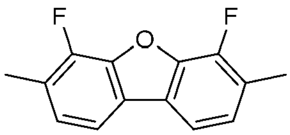 | B(S) | 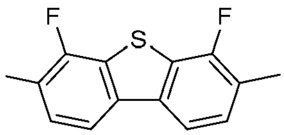 |
| B(P) | 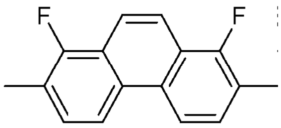 | B(A) | 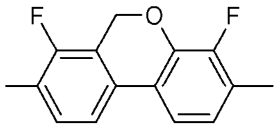 |
| B(Y) | 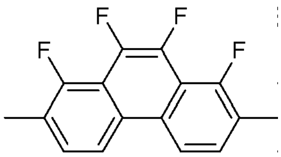 | B(Q) | 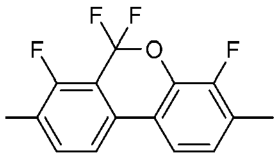 |
| B(C) | 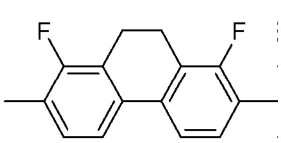 | B(Z) | 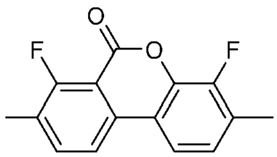 |
| O | 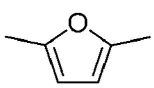 | S | 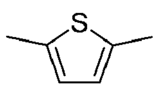 |
| K | 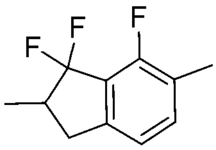 | Kl | 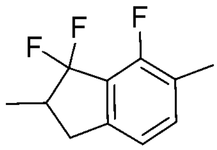 |
| L | 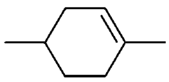 | Ll | 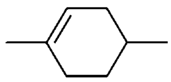 |

(continued)

| | | | |
|---|---|---|---|
| **F** | 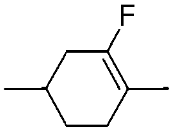 | **Fl** | 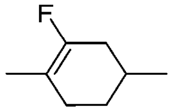 |
| **Bh** | 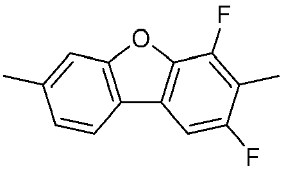 | **Bh(S)** | 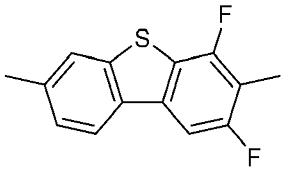 |
| **Bf** | 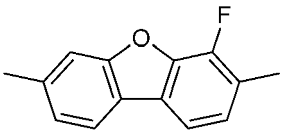 | **Bf(S)** | 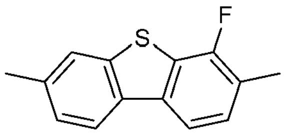 |
| **Bfi** | 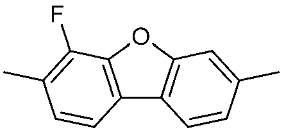 | **Bfi(S)** | 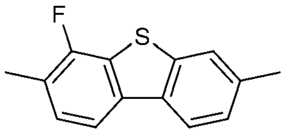 |
| **B(C)** | 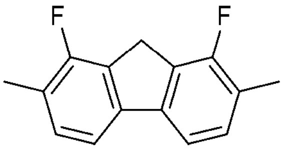 | **B(P)** | 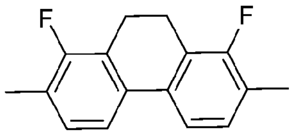 |
| **B(C)** | 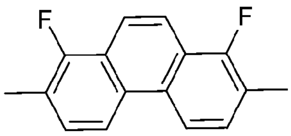 | **B(O)** | 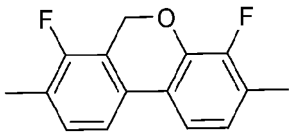 |

**Table B: Bridging units**

| | | | |
|---|---|---|---|
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | -O-CH2- |
| **Q** | $-CF_2-O-$ | **QI** | -O-CF2- |

**Table C: End groups**

| On the left individually or in combination | | On the right individually or in combination | |
|---|---|---|---|
| **n-** | $C_nH_{2n+1}-$ | **-n** | $-C_nH_{2n+1}$ |
| **nO-** | $C_nH_{2n+1}-O-$ | **-On** | $-O-C_nH_{2n+1}$ |
| **V-** | $CH_2=CH-$ | **-V** | $-CH=CH_2$ |
| **nV-** | $C_nH_{2n+1}-CH=CH-$ | **-nV** | $-C_nH_{2n}-CH=CH_2$ |
| **Vn-** | $CH_2=CH-C_nH_{2n}-$ | **-Vn** | $-CH=CH-C_nH_{2n+1}$ |
| **nVm-** | $C_nH_{2n+1}-CH=CH-C_mH_{2m}-$ | **-nVm** | $-C_nH_{2n}-CH=CH-C_mH_{2m+1}$ |
| **N-** | N≡C- | **-N** | -C≡N |
| **S-** | S=C=N- | **-S** | -N=C=S |
| **F-** | F- | **-F** | -F |

(continued)

| On the left individually or in combination | | On the right individually or in combination | |
|---|---|---|---|
| **CL-** | Cl- | **-CL** | -Cl |
| **M-** | $CFH_2$- | **-M** | -$CFH_2$ |
| **D-** | $CF_2H$- | **-D** | -$CF_2H$ |
| **T-** | $CF_3$- | **-T** | -$CF_3$ |
| **MO-** | $CFH_2O$ - | **-OM** | -$OCFH_2$ |
| **DO-** | $CF_2HO$ - | **-OD** | -$OCF_2H$ |
| **TO-** | $CF_3O$- | **-OT** | -$OCF_3$ |
| **A-** | H-C≡C- | **-A** | -C≡C-H |
| **nA-** | $C_nH_{2n+1}$-C≡C- | **-An** | -C≡C-$C_nH_{2n+1}$ |
| **NA-** | N≡C-C≡C- | **-AN** | -C≡C-C≡N |
| **(cn)-** | 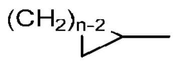 | **-(cn)** | 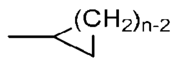 |
| **(cn)m-** | 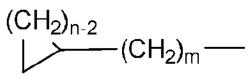 | **-m(cn)** | 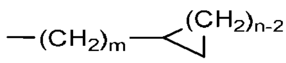 |

| On the left only in combination | | On the right only in combination | |
|---|---|---|---|
| **-...n...-** | -$C_nH_{2n}$- | **-...n...** | -$C_nH_{2n}$- |
| **-...M...-** | -CFH- | **-...M...** | -CFH- |
| **-...D...-** | -$CF_2$- | **-...D...** | -$CF_2$- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m are each integers, and the three dots "..." are placeholders for other abbreviations from this table.

The following abbreviations are used:

(n, m, k and l are, independently of one another, each an integer, preferably 1 to 12 preferably 1 to 6, k and l possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

Preferred components of the LC medium are shown in Tables D and E.

**Table D**

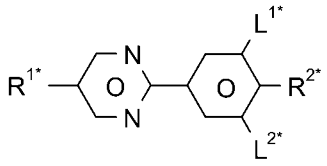

**PYP**

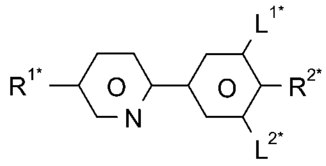

**PYRP**

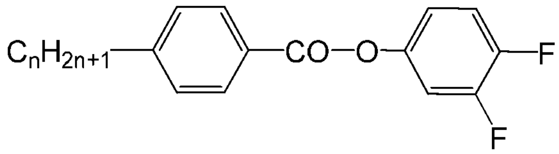

**MEnF.F**

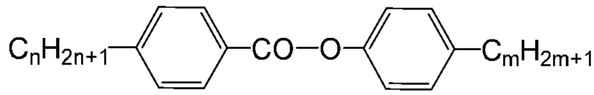

**MEnm**

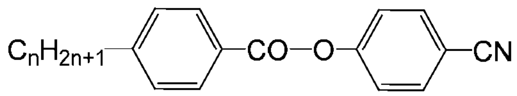

**MEnN**

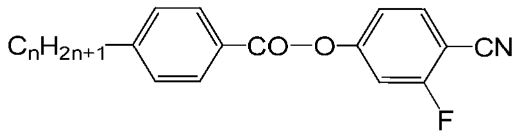

**MEnN.F**

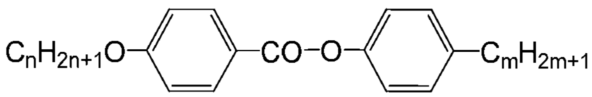

**MEnO.m**

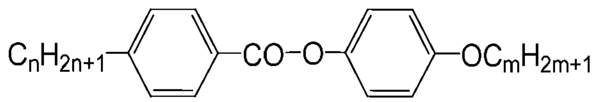

**MEn.Om**

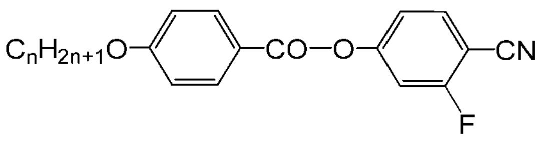

**MEnON.F**

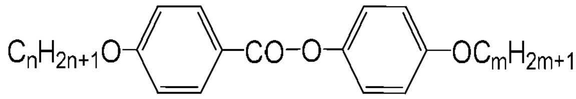

**MEnOOm**

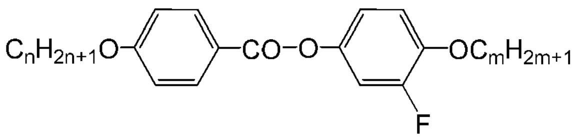

**MEnOOm.F**

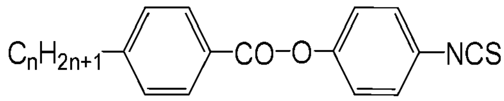

**MEnS**

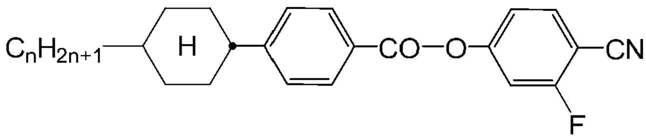

**HP-nN.F**

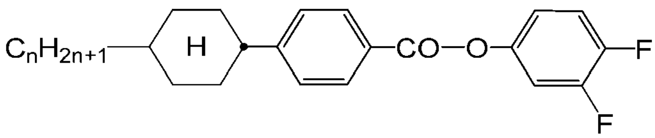

**HP-nF.F**

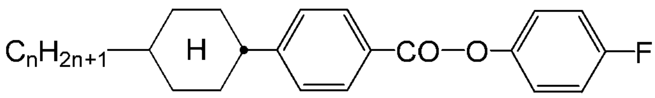

**HP-nF**

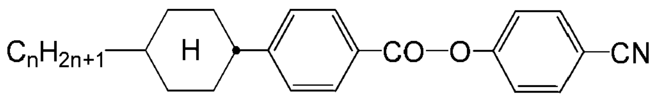

**HP-nN**

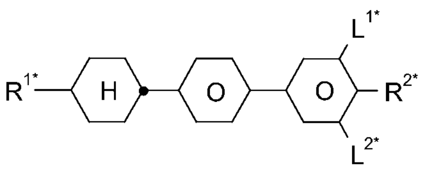

**BCH**

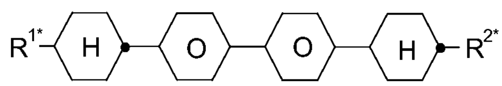

**CBC**

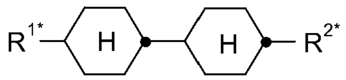

**CCH**

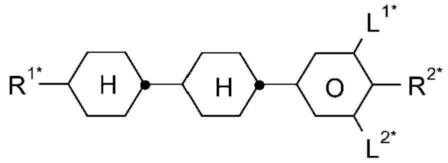

**CCP**

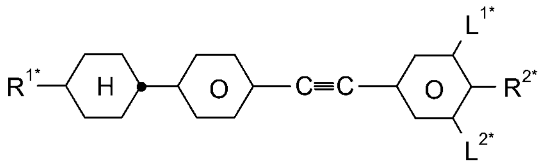

**CPTP**

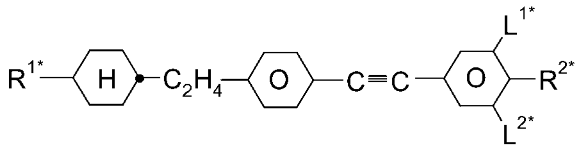

**CEPTP**

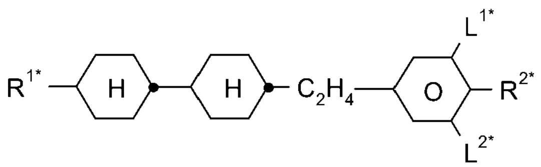

**ECCP**

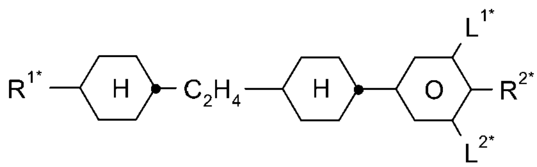

**CECP**

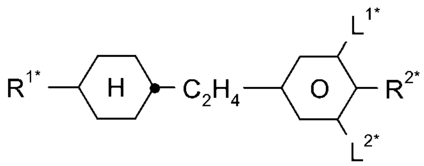

**EPCH**

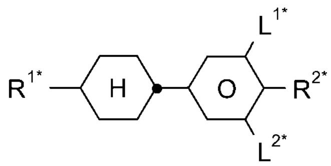

**PCH**

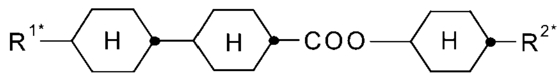

**CH**

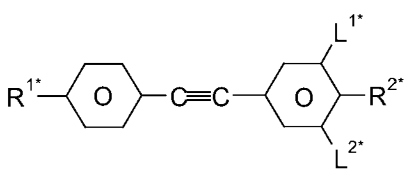

**PTP**

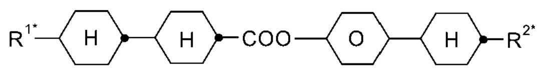

**CCPC**

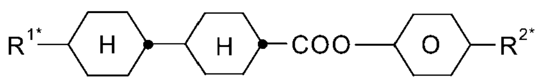

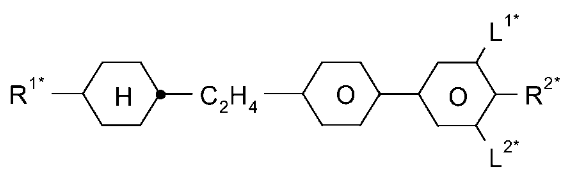

**CP**

**BECH**

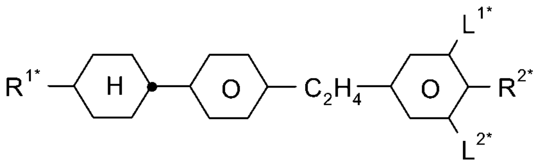

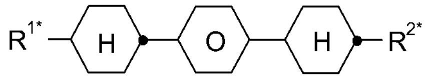

**EBCH**

**CPC**

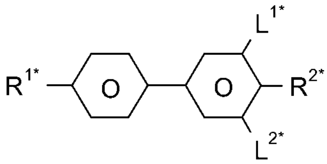

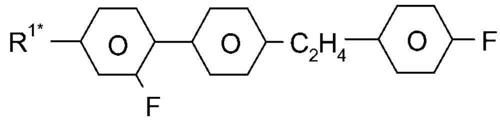

**B**

**FET-nF**

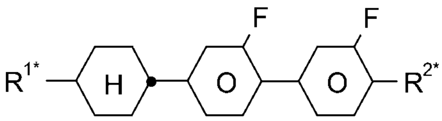

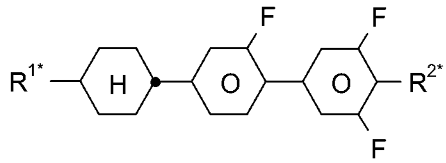

**CGG**

**CGU**

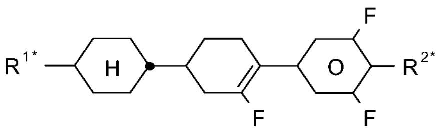

**CFU**

**Table E**

In the following formulae, n and m each, independently of one another, denote 0, 1, 2, 3, 4, 5, 6, 7, 8, 9, 10, 11 or 12, in particular 2, 3, 5, furthermore 0, 4, 6.

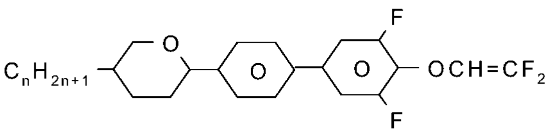

**APU-n-OXF**

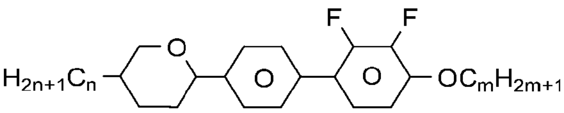

**APY-n-Om**

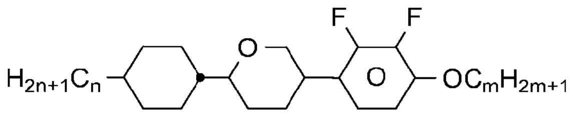

**CAIY-n-Om**

(continued)

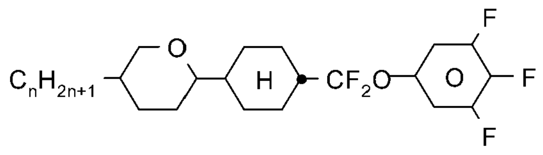

**ACQU-n-F**

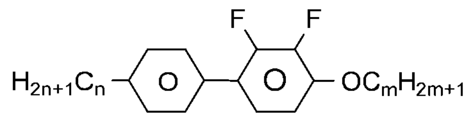

**PY-n-Om**

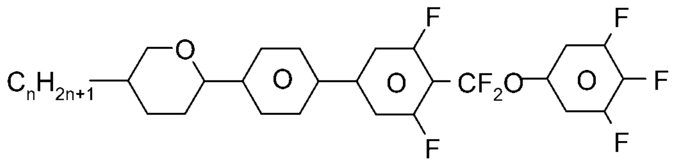

**APUQU-n-F**

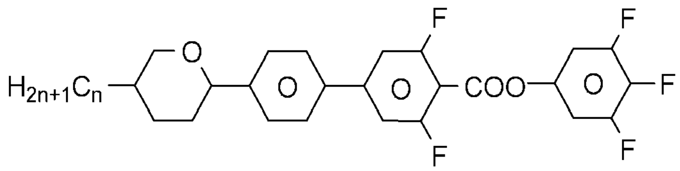

**APUZU-n-F**

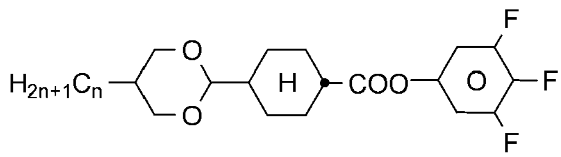

**DCZU-n-F**

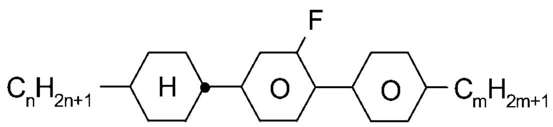

**BCH-n.Fm**

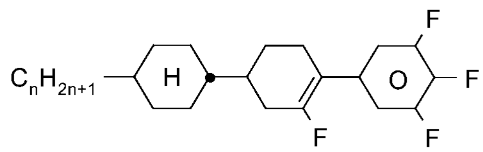

**CFU-n-F**

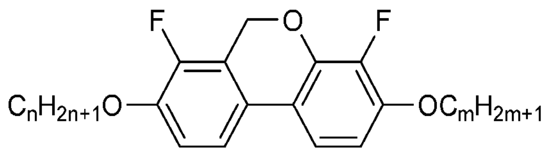

**B(A)-nO-Om**

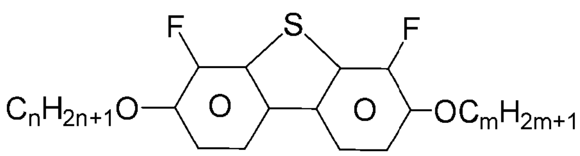

**B(S)-nO-Om**

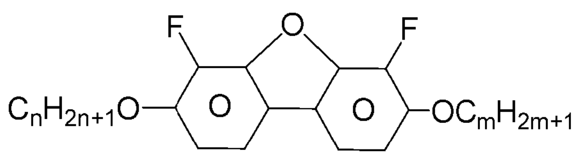

**B-nO-Om**

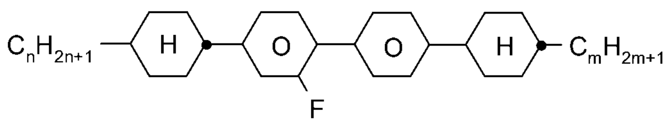

**CBC-nmF**

(continued)

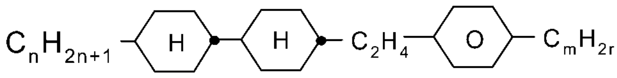

**ECCP-nm**

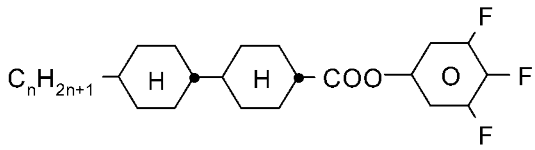

**CCZU-n-F**

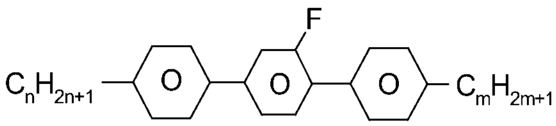

**PGP-n-m**

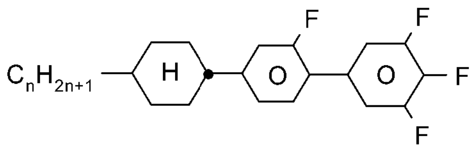

**CGU-n-F**

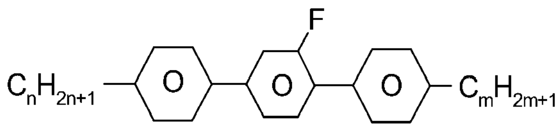

**PGP-n-m**

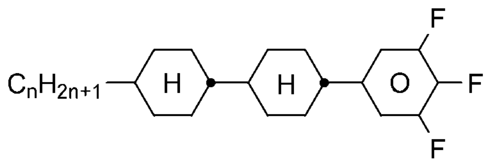

**CCU-n-F**

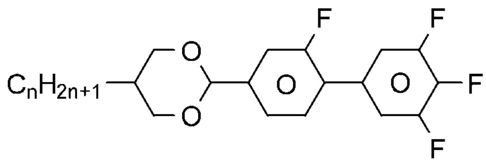

**DGU-n-F**

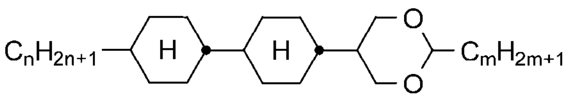

**CCD-n-m**

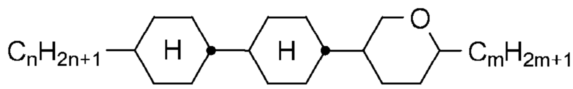

**CCA-n-m**

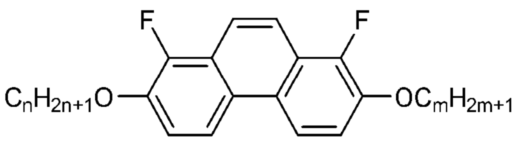

**B(P)-nO-Om**

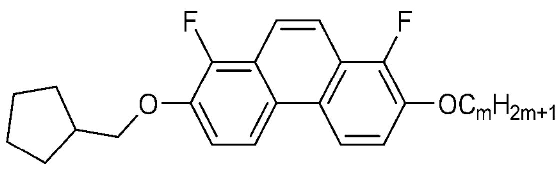

**B(P)-(c5)1O-Om**

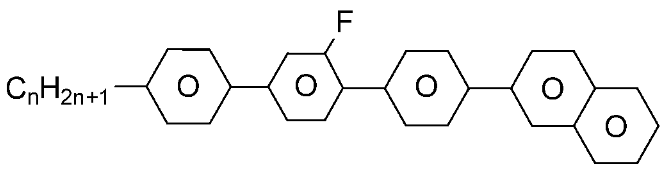

**PGP-n-Np**

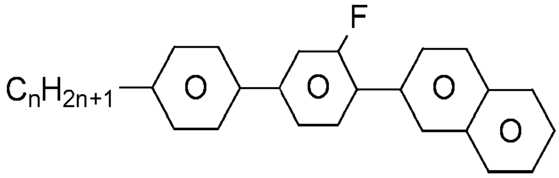

**PG-n-Np**

(continued)

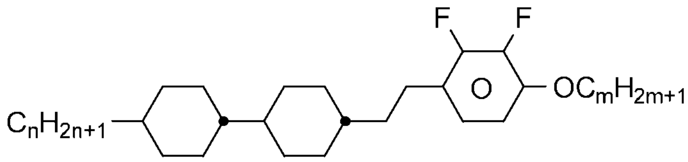

**CCEY-n-Om**

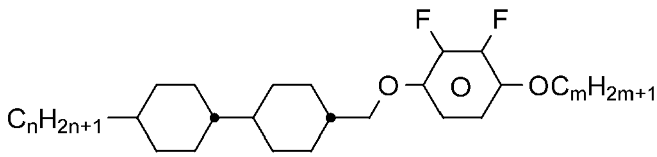

**CCOY-n-Om**

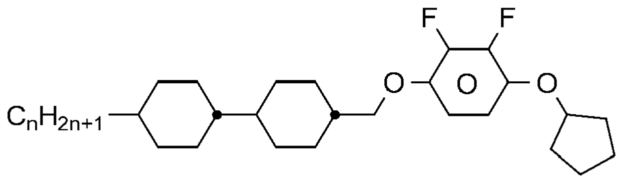

**CCOY-n-O(c5)**

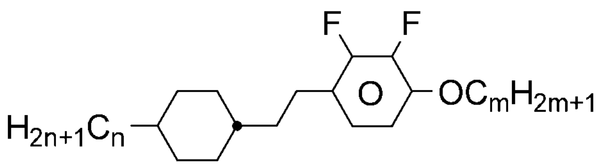

**CEY-n-Om**

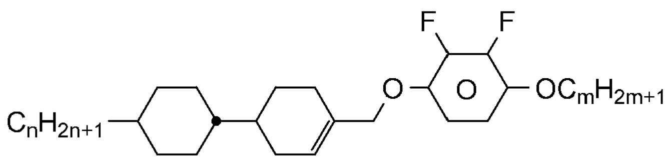

**CLOY-n-Om**

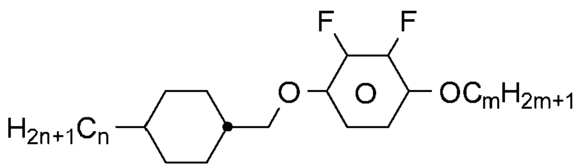

**COY-n-Om**

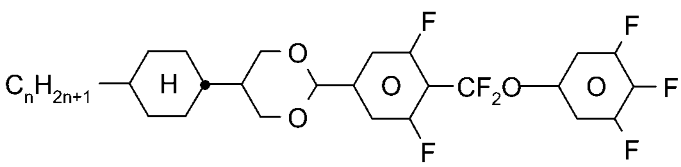

**CDUQU-n-F**

(continued)

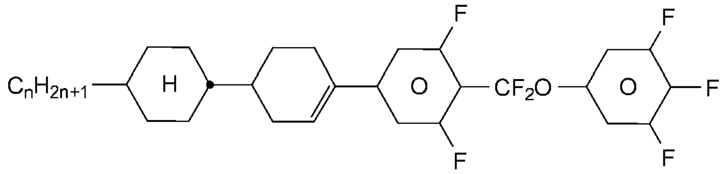

**CLUQU-n-F**

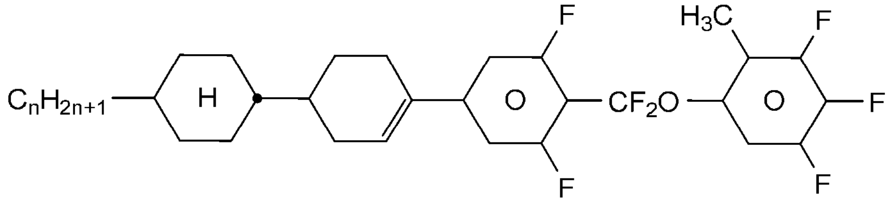

**CLUQU(1)-n-F**

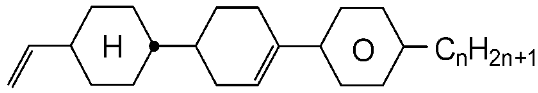

**CLP-V-n**

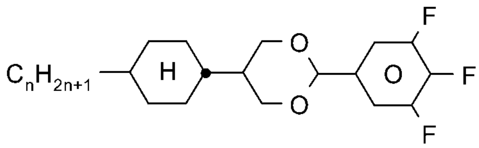

**CDU-n-F**

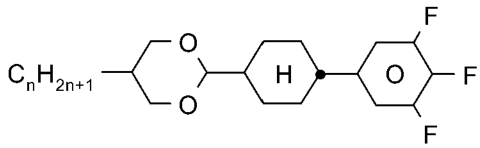

**DCU-n-F**

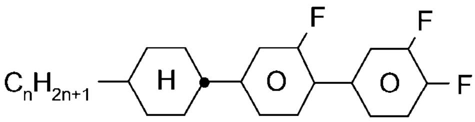

**CGG-n-F**

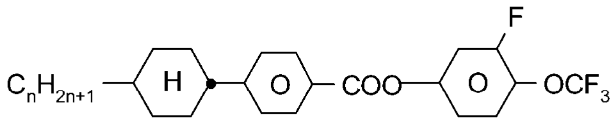

**CPZG-n-OT**

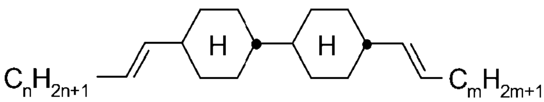

**CC-nV-Vm**

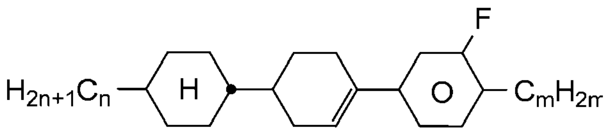

**CLG-n-m**

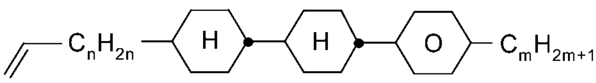

**CCP-Vn-m**

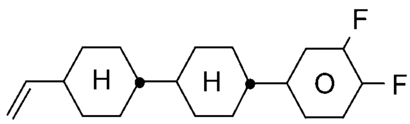

**CCG-V-F**

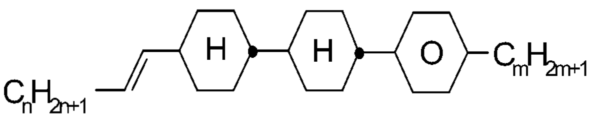

**CCP-nV-m**

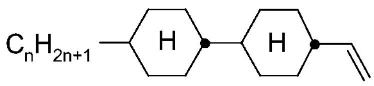

**CC-n-V**

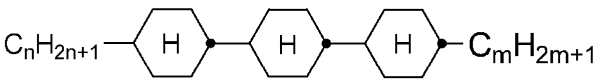

**CCC-n-m**

(continued)

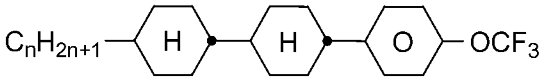

**CCP-nOCF3**

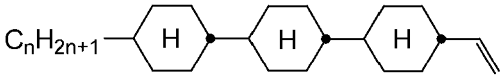

**CCC-n-V**

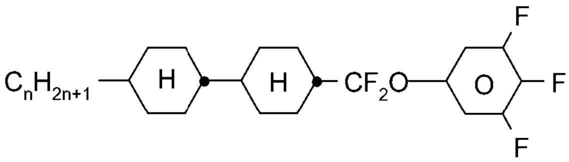

**CCQU-n-F**

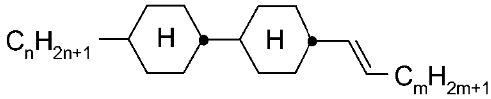

**CC-n-Vm**

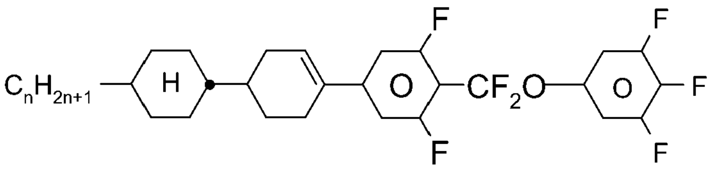

**CLUQU-n-F**

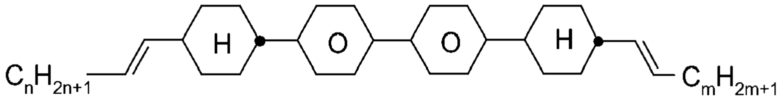

**CPPC-nV-Vm**

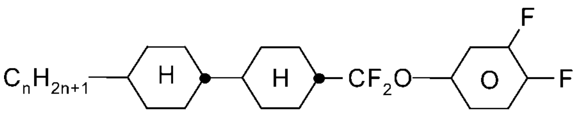

**CCQG-n-F**

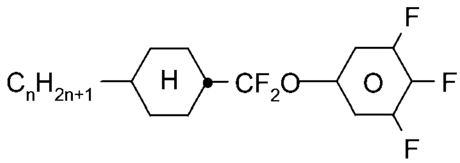

**CQU-n-F**

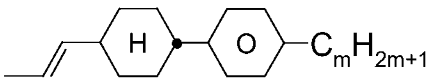

**CP-1V-m**

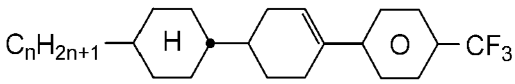

**CLP-n-T**

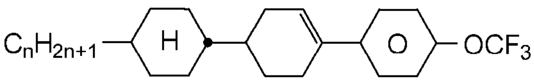

**CLP-n-OT**

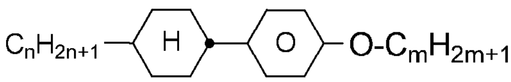

**CY-n-Om**

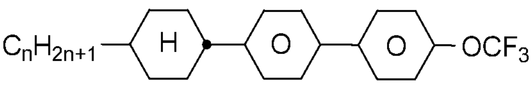

**CPP-n-OT**

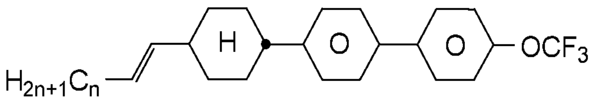

**CPP-nV-OT**

(continued)

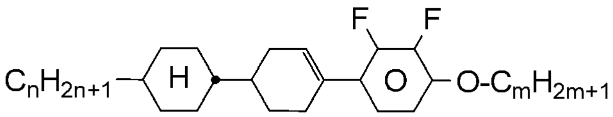

**CLY-n-Om**

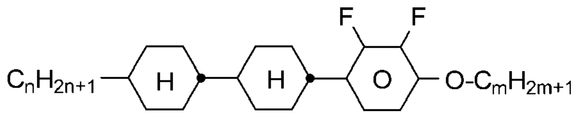

**CCY-n-Om**

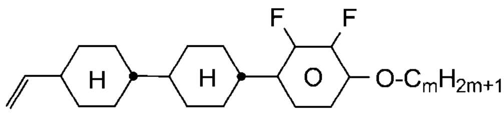

**CCY-V-Om**

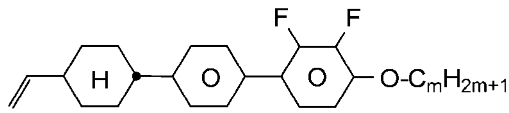

**CPY-V-Om**

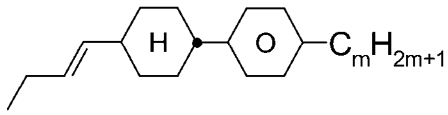

**CP-2V-m**

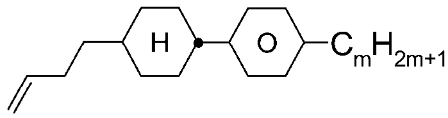

**CP-V2-m**

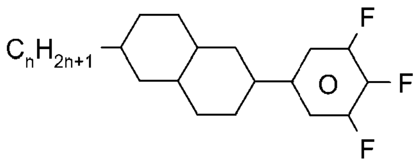

**Dec-U-n-F**

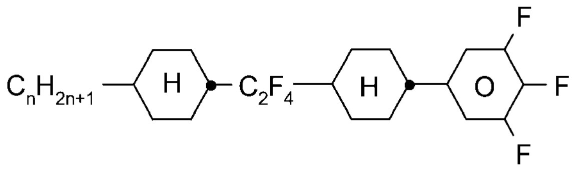

**CWCU-n-F**

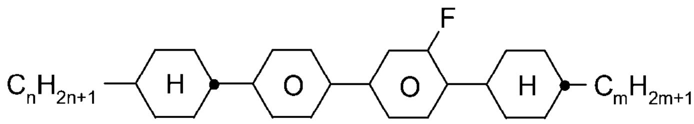

**CPGP-n-m**

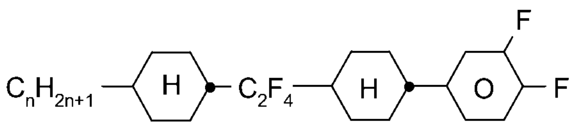

**CWCG-n-F**

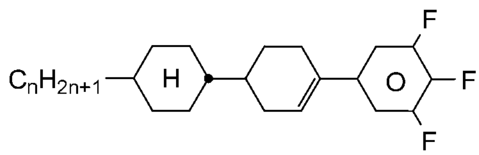

**CLU-n-F**

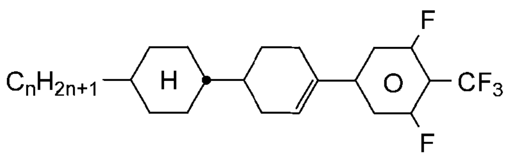

**CLU-n-T**

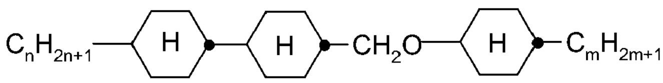

**CCOC-n-m**

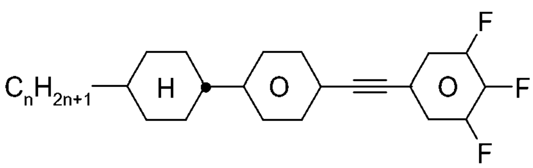

**CPTU-n-F**

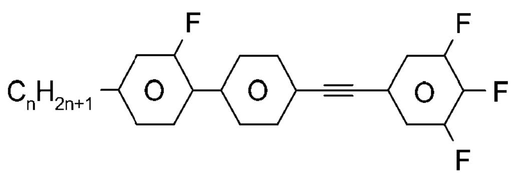

**GPTU-n-F**

(continued)

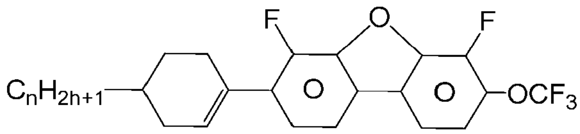

**LB-n-OT**

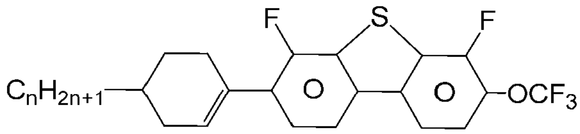

**LB(S)-n-OT**

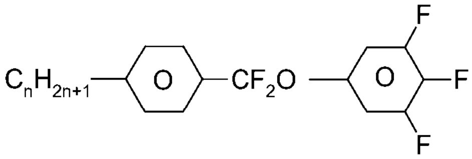

**PQU-n-F**

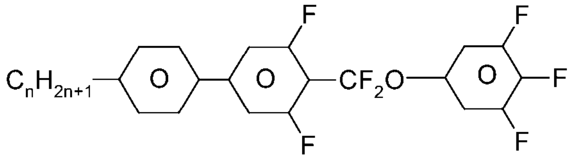

**PUQU-n-F**

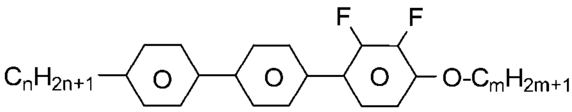

**PPY-n-Om**

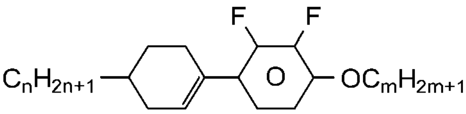

**LY-n-Om**

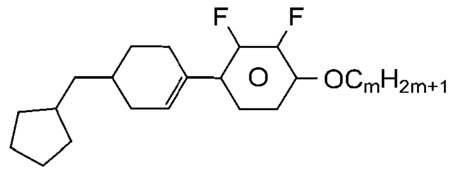

**LY-(c5)1-Om**

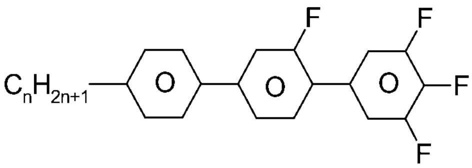

**PGU-n-F**

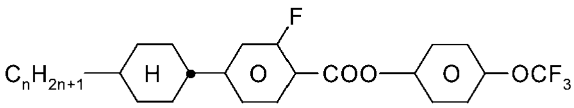

**CGZP-n-OT**

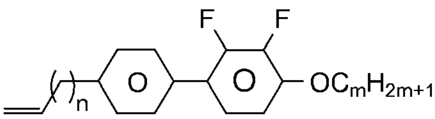

**PY-Vn-Om**

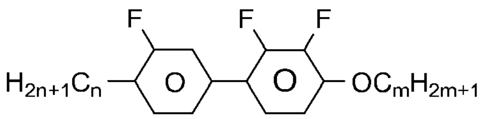

**GIY-n-Om**

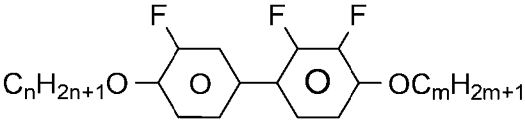

**GIY-nO-Om**

(continued)

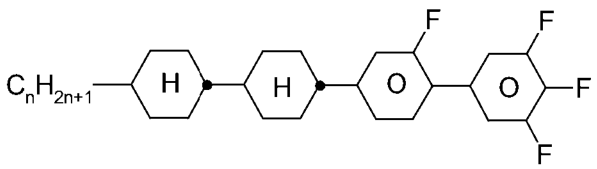

**CCGU-n-F**

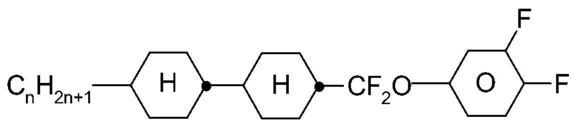

**CCQG-n-F**

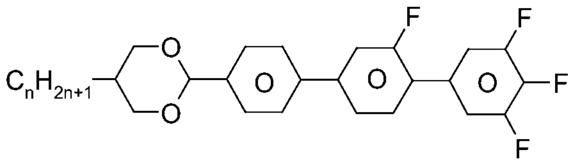

**DPGU-n-F**

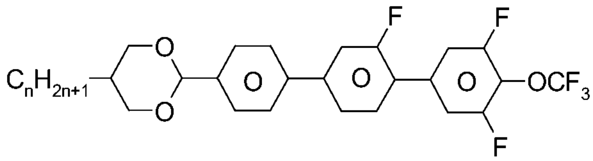

**DPGU-n-OT**

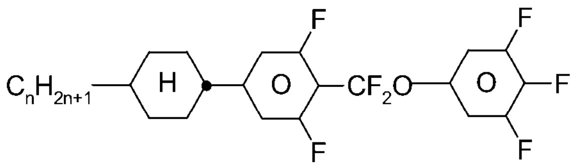

**CUQU-n-F**

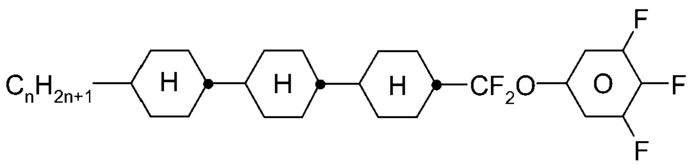

**CCCQU-n-F**

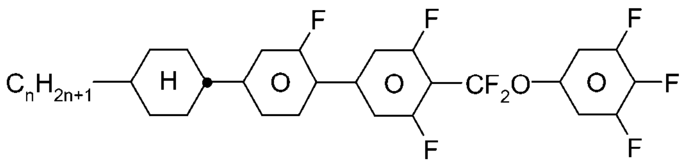

**CGUQU-n-F**

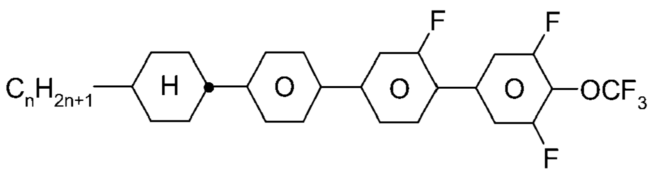

**CPGU-n-OT**

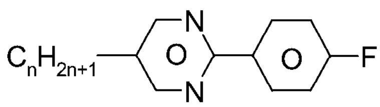

**PYP-nF or MP-n-F**

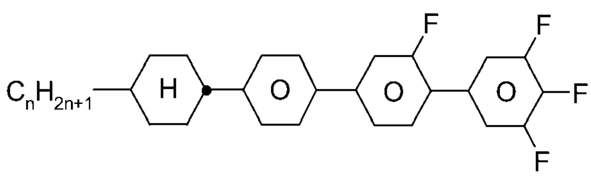

**CPGU-n-F**

(continued)

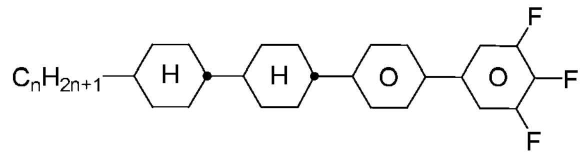

**CCPU-n-F**

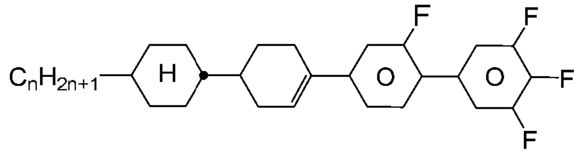

**CLGU-n-F**

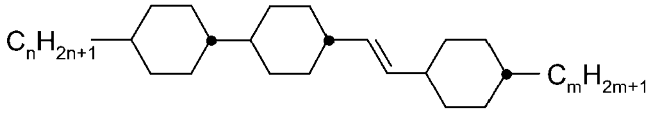

**CCVC-n-m**

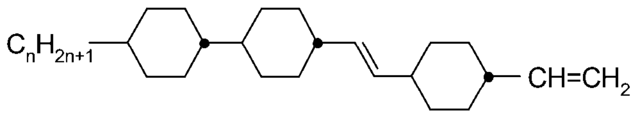

**CCVC-n-V**

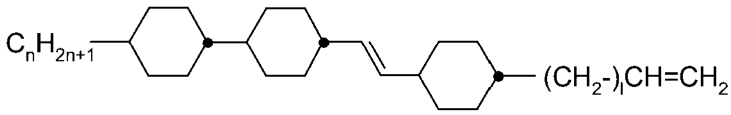

**CCVC-n-lV**

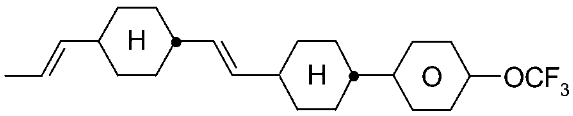

**CVCP-1V-OT**

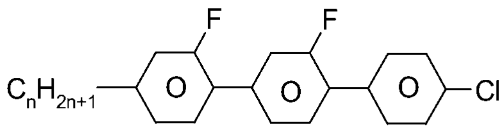

**GGP-n-Cl**

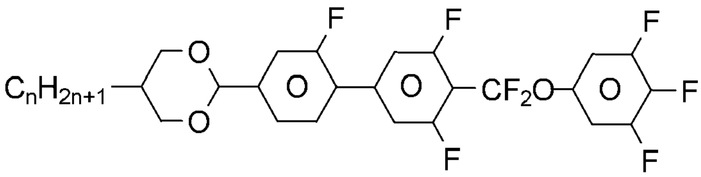

**DGUQU-n-F**

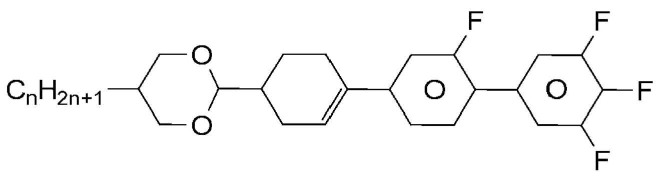

**DLGU-n-F**

(continued)

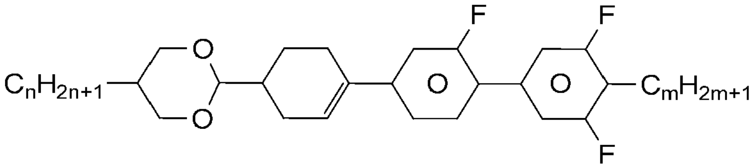

**DLGU-n-m**

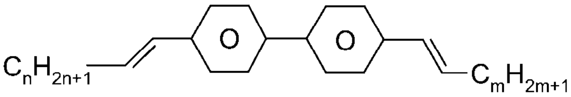

**PP-nV-Vm**

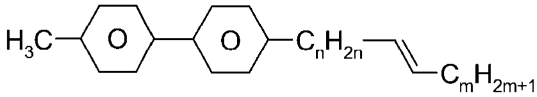

**PP-1-nVm**

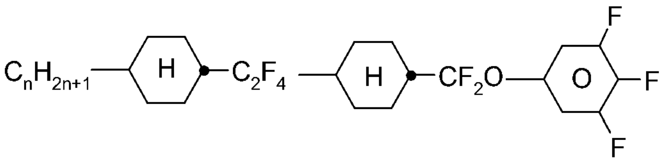

**CWCQU-n-F**

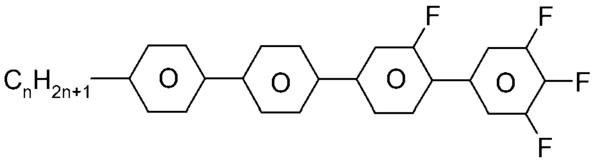

**PPGU-n-F**

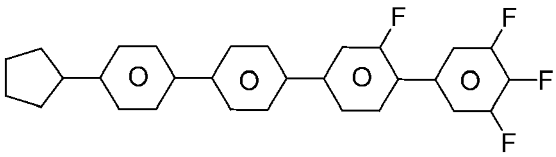

**PPGU-(c5)-F**

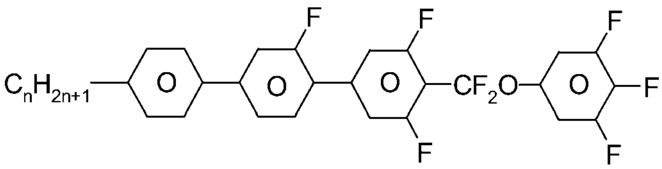

**PGUQU-n-F**

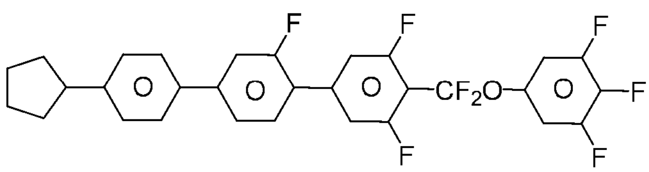

**PGUQU-(c5)-F**

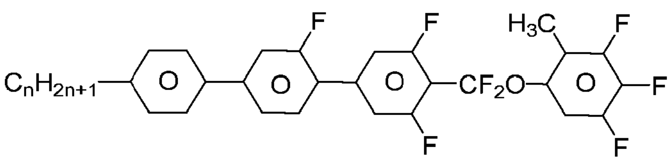

**PGUQU(1)-n-F**

(continued)

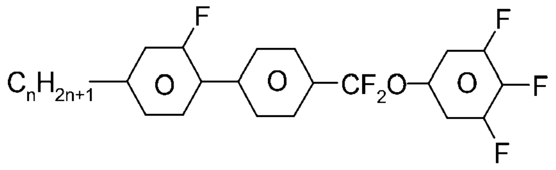

**GPQU-n-F**

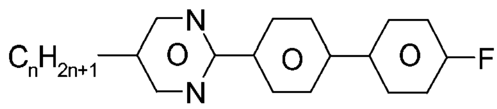

**MPP-n-F**

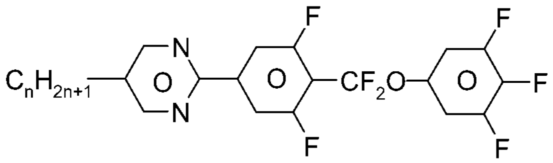

**MUQU-n-F**

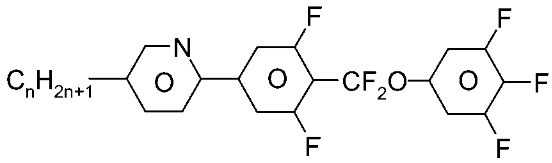

**NUQU-n-F**

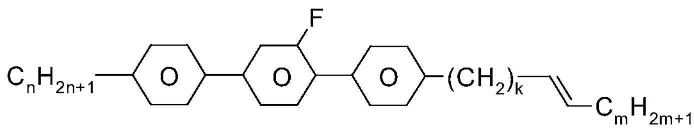

**PGP-n-kVm**

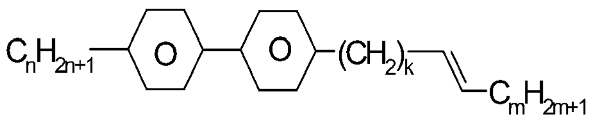

**PP-n-kVm**

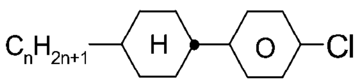

**PCH-nCl**

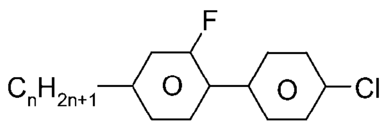

**GP-n-Cl**

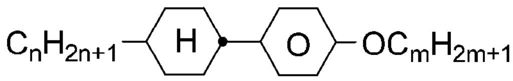

**PCH-nOm**

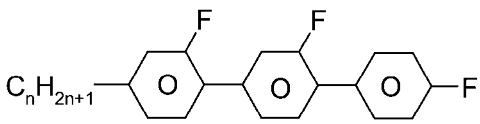

**GGP-n-F**

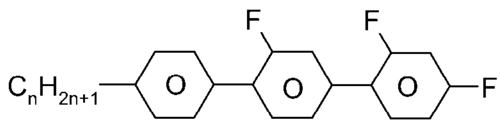

**PGIGI-n-F**

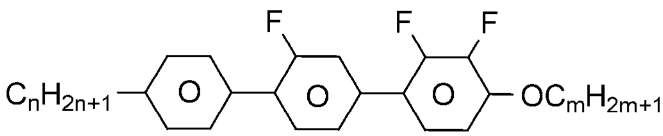

**PGIY-n-Om**

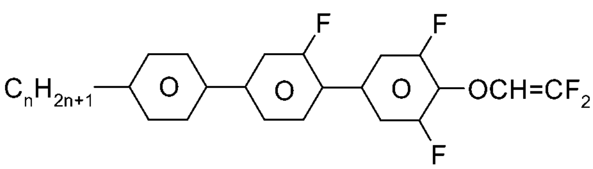

**PGU-n-OXF**

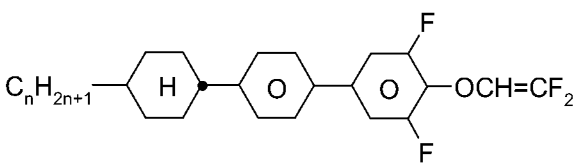

**CPU-n-OXF**

(continued)

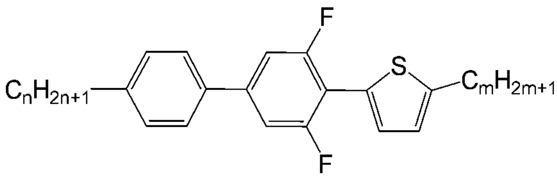

PUS-n-m

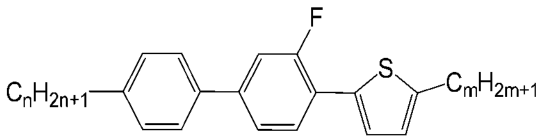

PGS-n-m

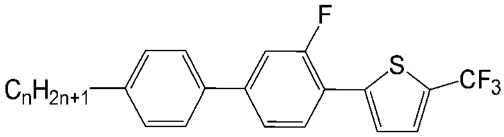

PGS-n-T

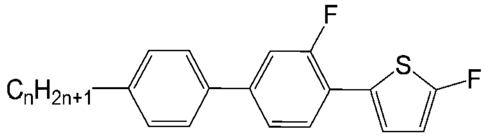

PGS-n-F

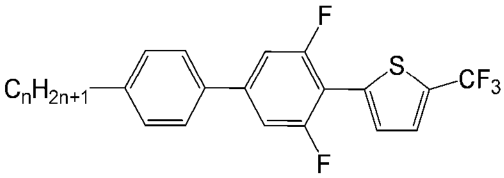

PUS-n-T

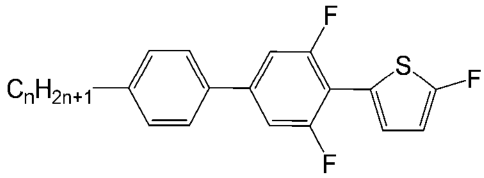

PUS-n-F

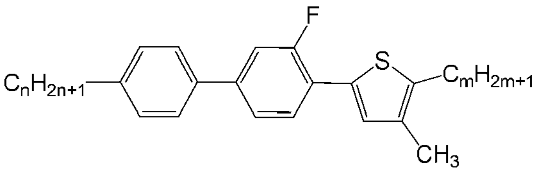

PGS(1)-n-m

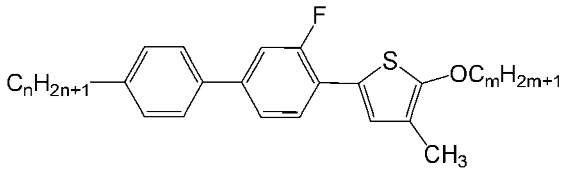

PGS(1)-n-Om

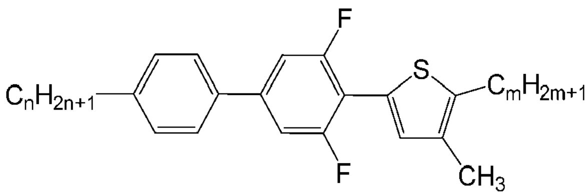

PUS(1)-n-m

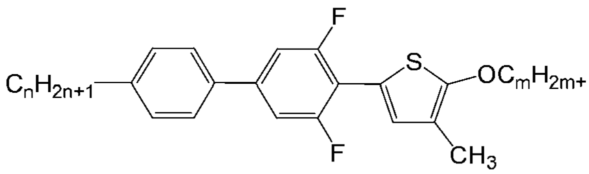

PUS(1)-n-Om

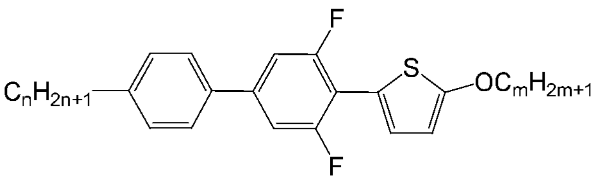

PUS-n-Om

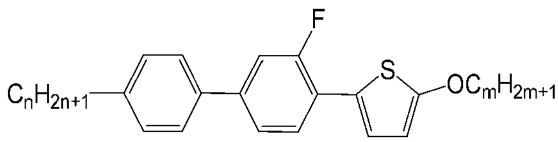

PGS-n-Om

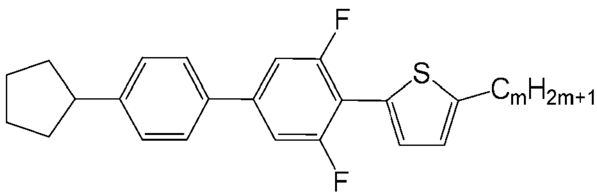

PUS-(c5)-m

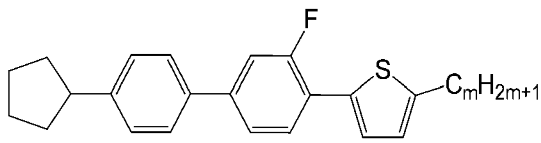

PGS-(c5)-m

(continued)

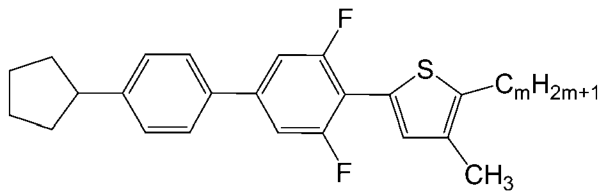

**PUS(1)-(c5)-m**

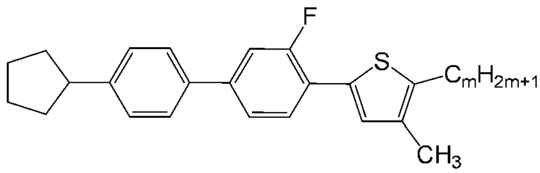

**PGS(1)-(c5)-m**

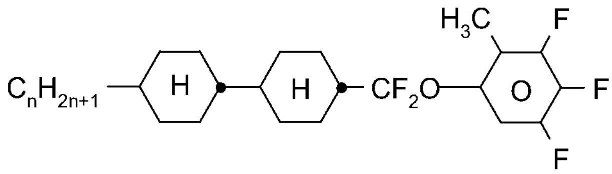

**CCQU(1)-n-F**

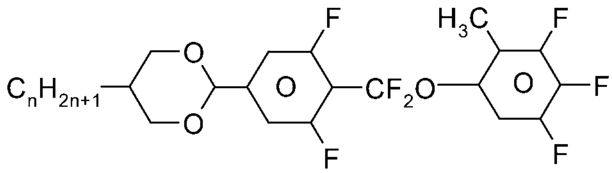

**DUQU(1)-n-F**

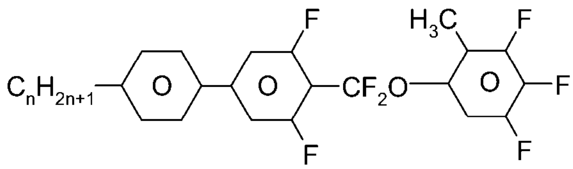

**PUQU(1)-n-F**

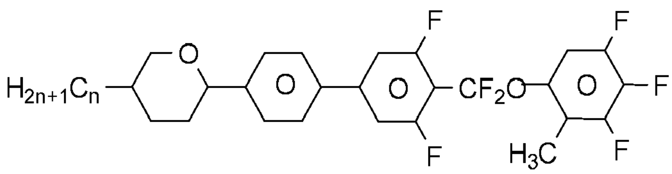

**APUQU(1)-n-F**

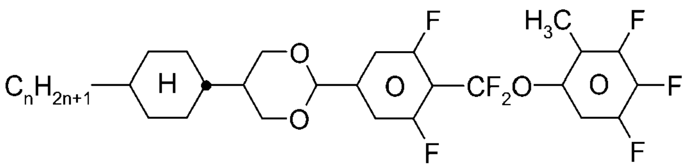

**CDUQU(1)-n-F**

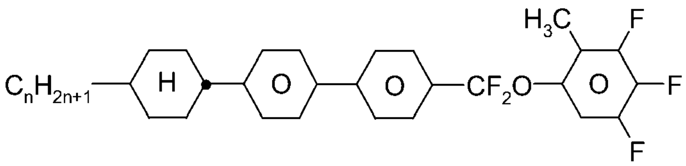

**CPPQU(1)-n-F**

(continued)

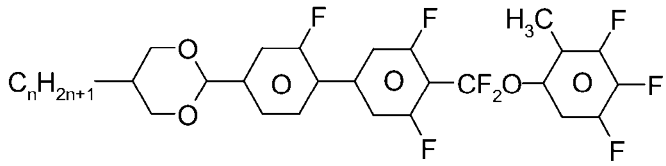

**DGUQU(1)-n-F**

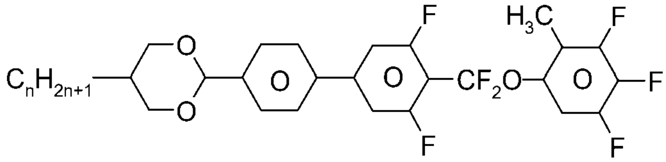

**DPUQU(1)-n-F**

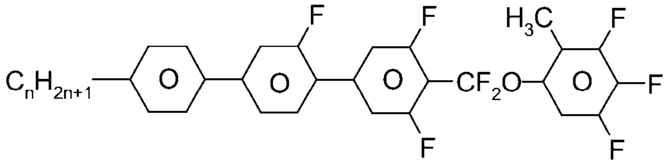

**PGUQU(1)-n-F**

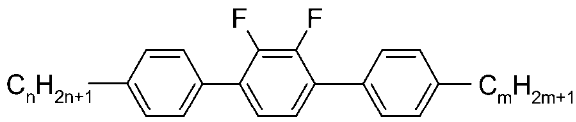

**PYP-n-m**

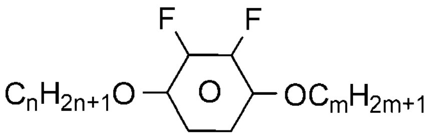

**Y-nO-Om**

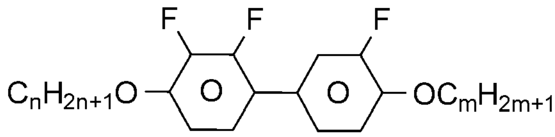

**YG-nO-Om**

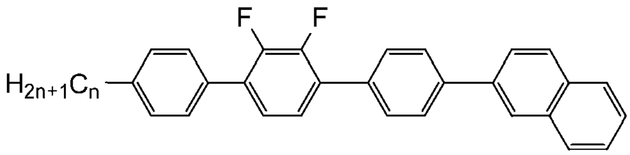

**PYP-n-Np**

Particular preference is given to LC media which, besides the compounds of the Formulae I and YA to YG and B comprise at least one, two, three, four or more compounds from Table E.

## Table F

Table F indicates possible dopants which are generally added to the LC media according to the invention. The LC media preferably comprise 0 to 10% by weight, in particular 0.01 to 5% by weight and particularly preferably 0.01 to 3% by weight of dopants.

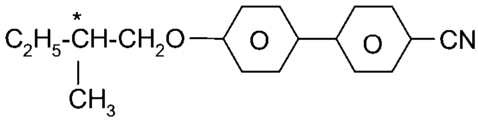

C 15

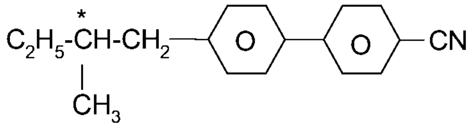

CB 15

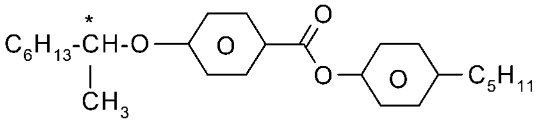

CM 21

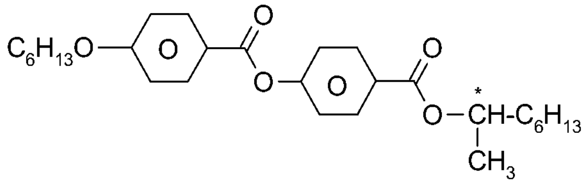

R/S-811

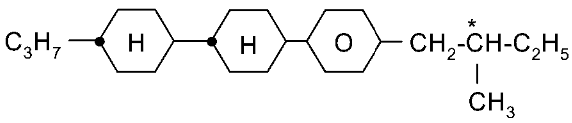

CM 44

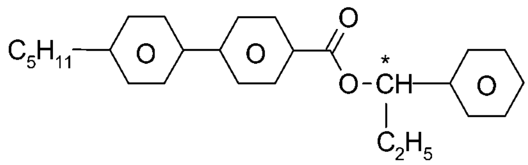

CM 45

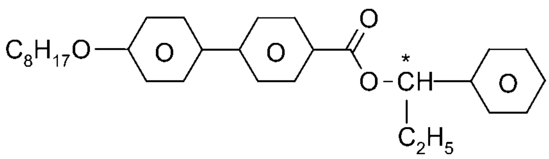

CM 47

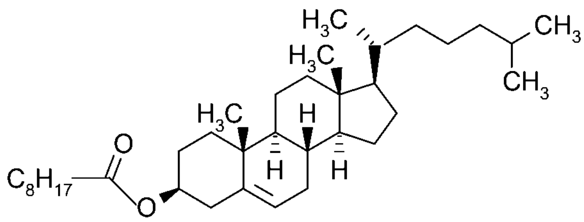

CN

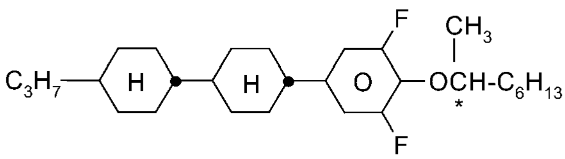

R/S-2011

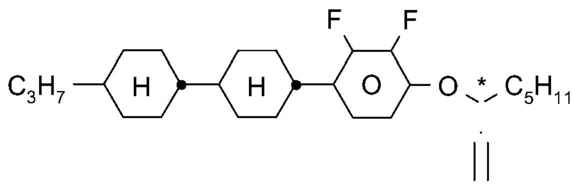

R/S-3011

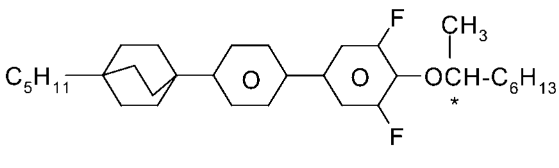

R/S-4011

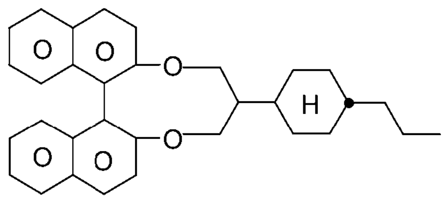

R/S-5011

(continued)

Table F indicates possible dopants which are generally added to the LC media according to the invention. The LC media preferably comprise 0 to 10% by weight, in particular 0.01 to 5% by weight and particularly preferably 0.01 to 3% by weight of dopants.

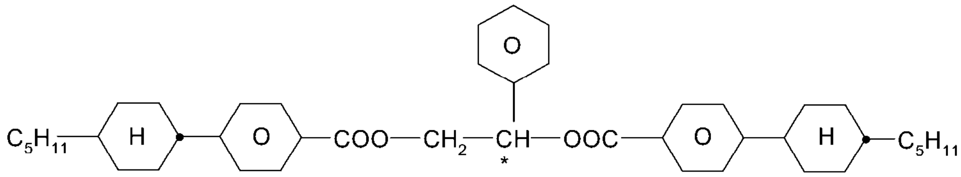

**R/S-1011**

**Table G**

Stabilisers, which can additionally be added, for example, to the LC media according to the invention in amounts of 0 to 10% by weight, are mentioned below.

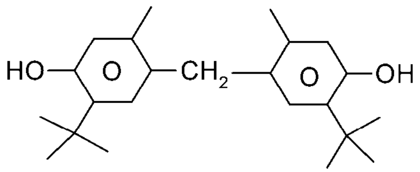

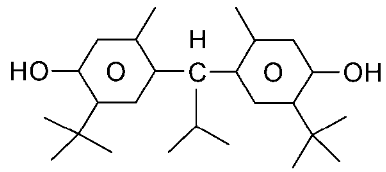

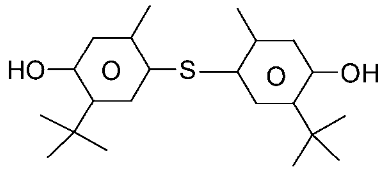

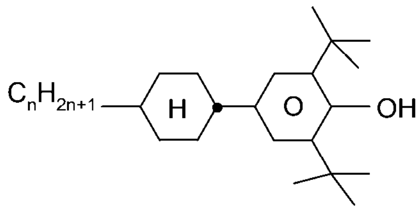

n = 1, 2, 3, 4, 5, 6 or 7

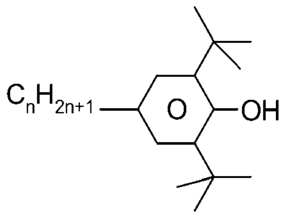

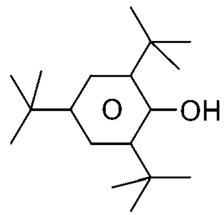

n = 1, 2, 3, 4, 5, 6 or 7

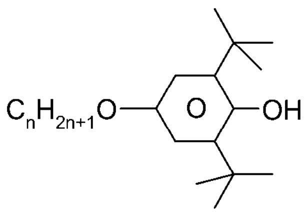

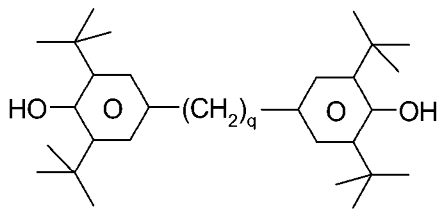

n = 1, 2, 3, 4, 5, 6 or 7

q = 1, 2, 3, 4, 5, 6 or 7

(continued)

Stabilisers, which can additionally be added, for example, to the LC media according to the invention in amounts of 0 to 10% by weight, are mentioned below.

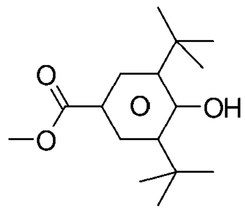

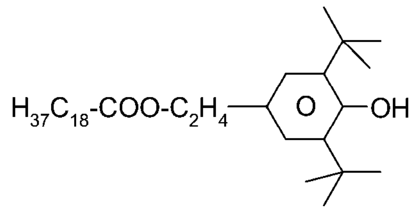

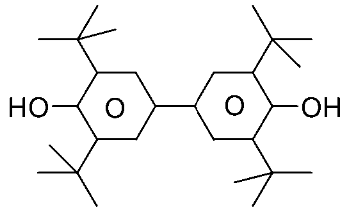

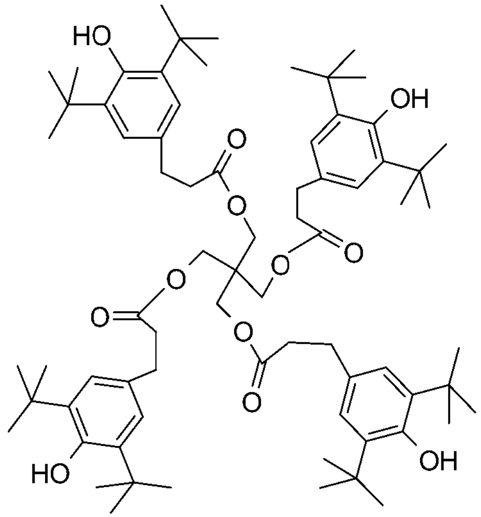

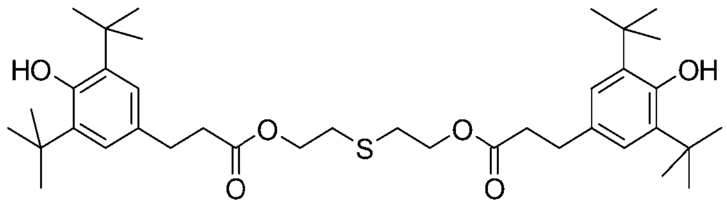

(continued)

Stabilisers, which can additionally be added, for example, to the LC media according to the invention in amounts of 0 to 10% by weight, are mentioned below.

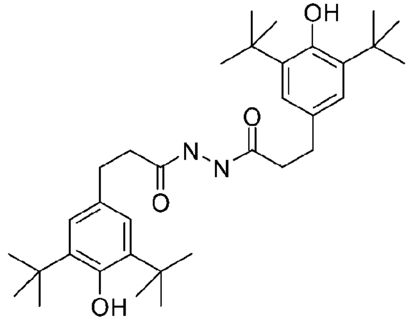

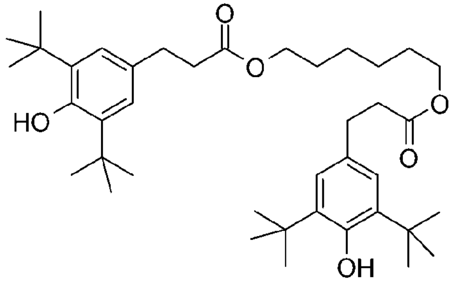

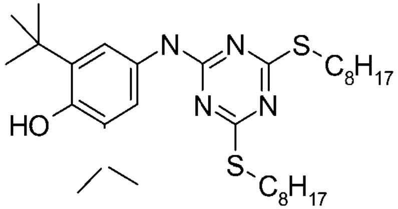

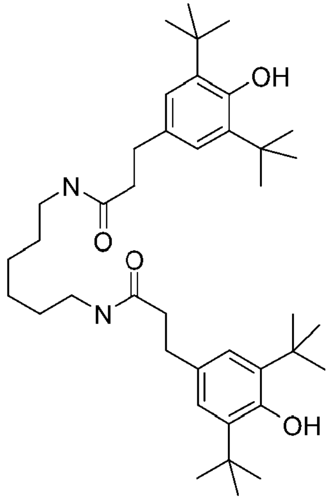

(continued)

Stabilisers, which can additionally be added, for example, to the LC media according to the invention in amounts of 0 to 10% by weight, are mentioned below.

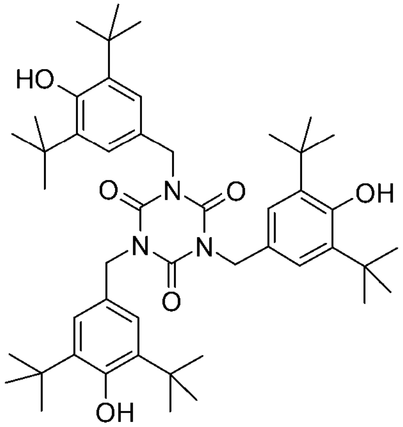

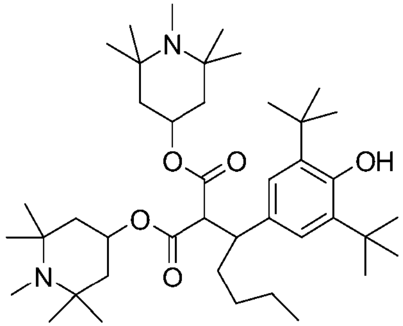

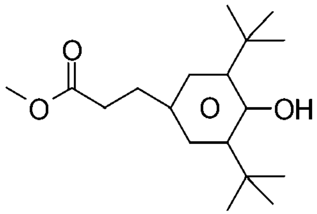

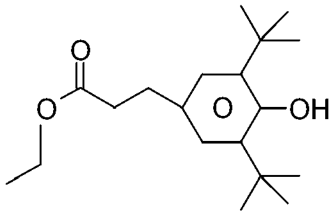

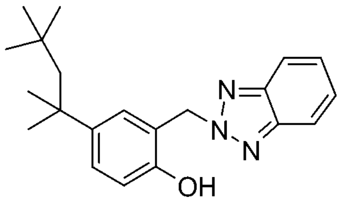

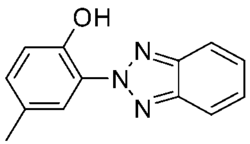

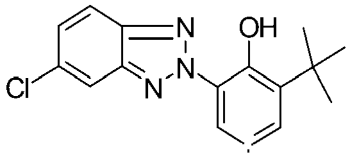

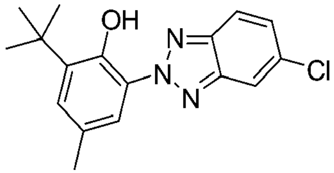

(continued)

Stabilisers, which can additionally be added, for example, to the LC media according to the invention in amounts of 0 to 10% by weight, are mentioned below.

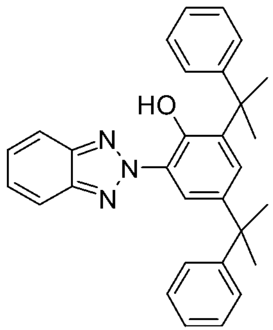

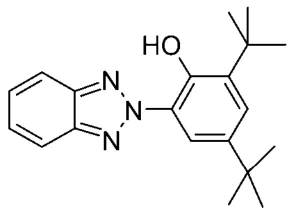

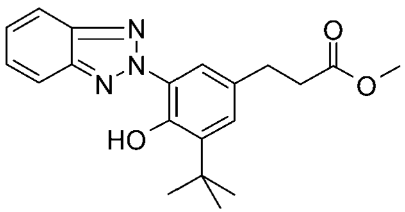

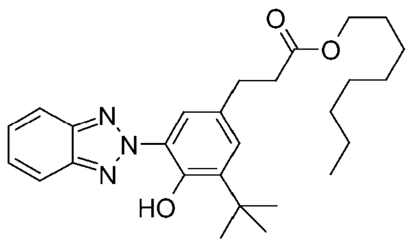

(continued)

Stabilisers, which can additionally be added, for example, to the LC media according to the invention in amounts of 0 to 10% by weight, are mentioned below.

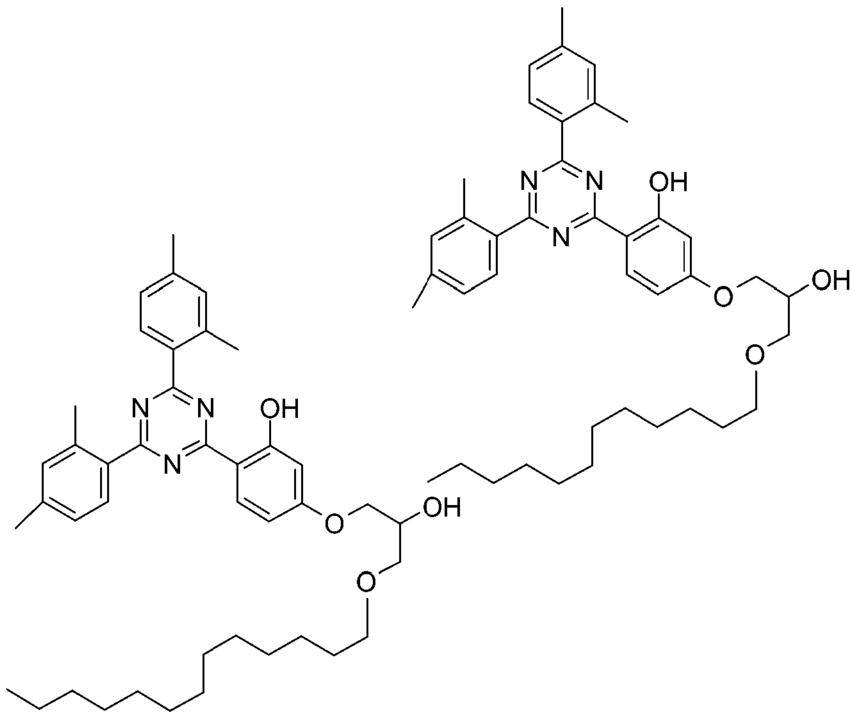

(continued)

Stabilisers, which can additionally be added, for example, to the LC media according to the invention in amounts of 0 to 10% by weight, are mentioned below.

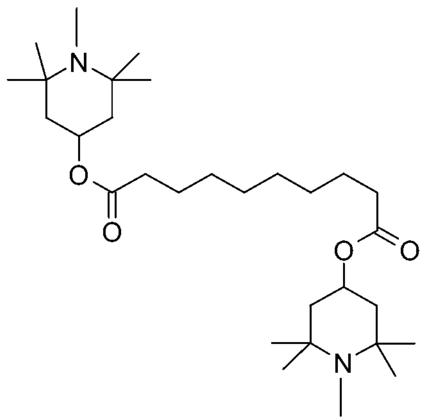

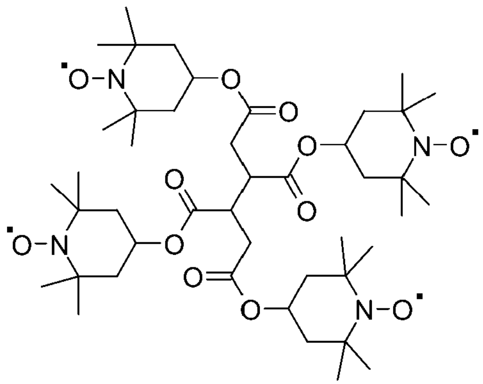

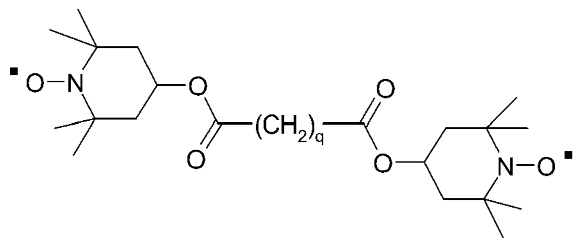

q = 1, 2, 3, 4, 5, 6, 7, 8, 9 or 10

**Table H**

Table H shows illustrative reactive mesogenic compounds (RMs) which can be used in the LC media in accordance with the present invention.

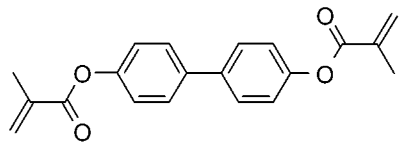

RM-1

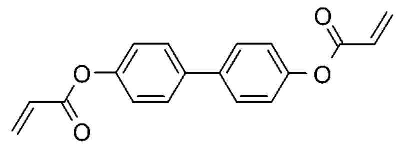

RM-2

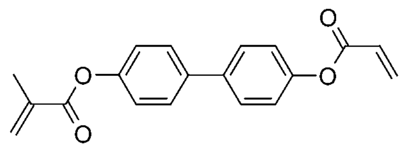

RM-3

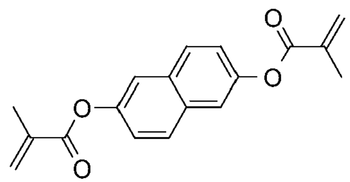

RM-4

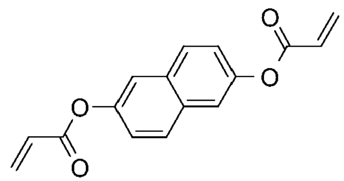

RM-5

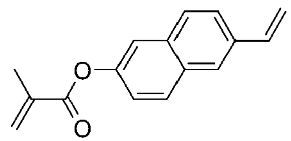

RM-6

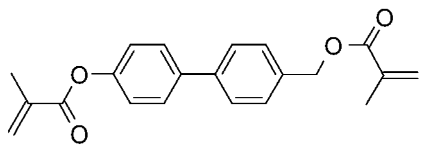

RM-7

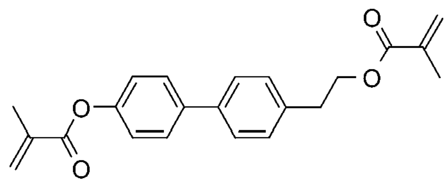

RM-8

(continued)

Table H shows illustrative reactive mesogenic compounds (RMs) which can be used in the LC media in accordance with the present invention.

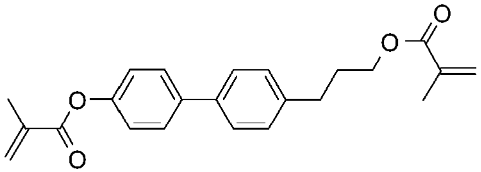

RM-9

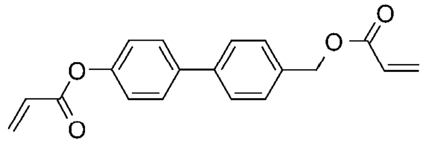

RM-10

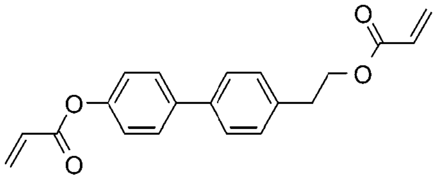

RM-11

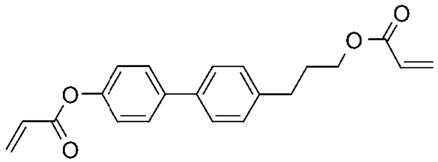

RM-12

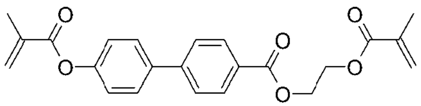

RM-13

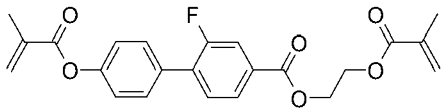

RM-14

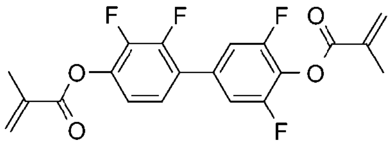

RM-15

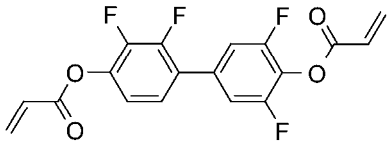

RM-16

(continued)

Table H shows illustrative reactive mesogenic compounds (RMs) which can be used in the LC media in accordance with the present invention.

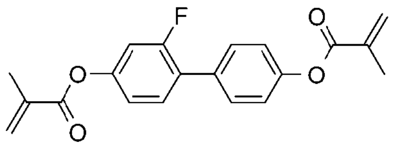

RM-17

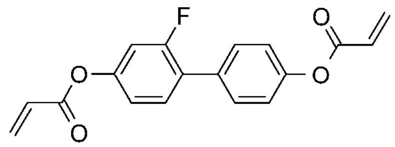

RM-18

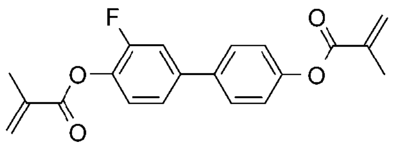

RM-19

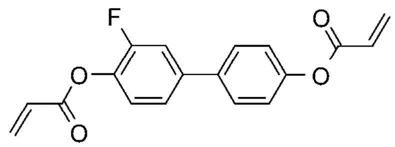

RM-20

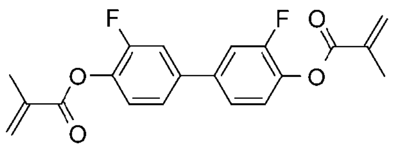

RM-21

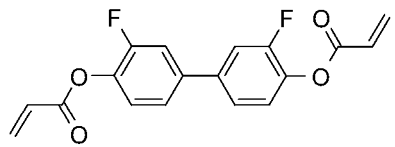

RM-22

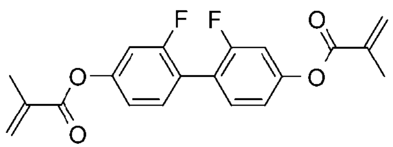

RM-23

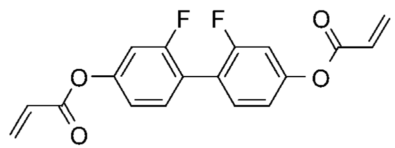

RM-24

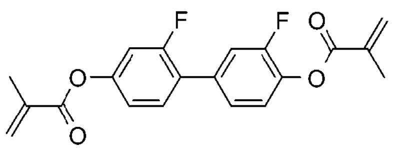

RM-25

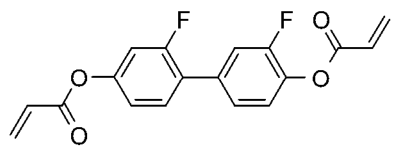

RM-26

(continued)

Table H shows illustrative reactive mesogenic compounds (RMs) which can be used in the LC media in accordance with the present invention.

| | |
|---|---|
| 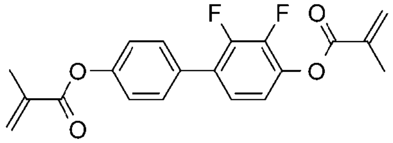<br>RM-27 | 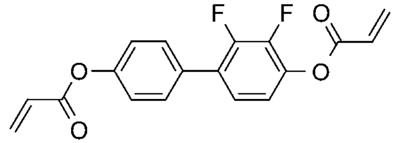<br>RM-28 |
| 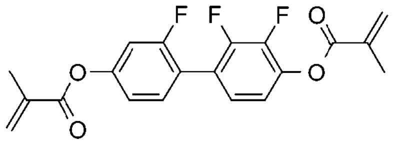<br>RM-29 | 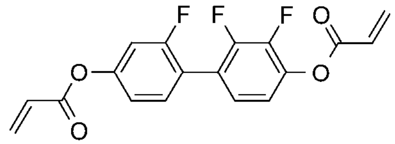<br>RM-30 |
| 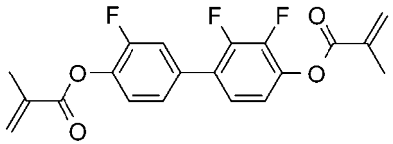<br>RM-31 | 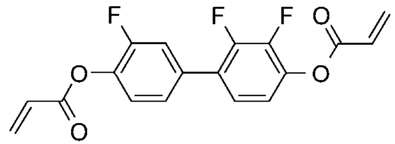<br>RM-32 |
| 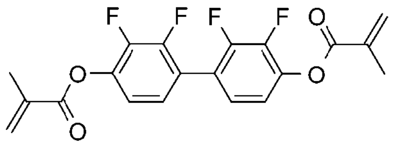<br>RM-33 | 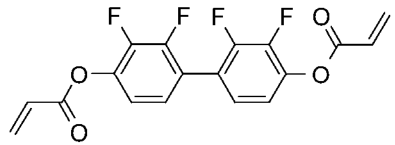<br>RM-34 |

(continued)

Table H shows illustrative reactive mesogenic compounds (RMs) which can be used in the LC media in accordance with the present invention.

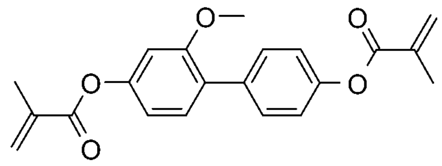

RM-35

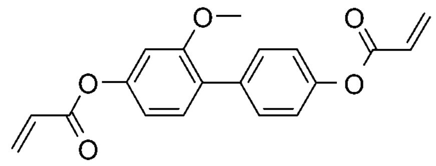

RM-36

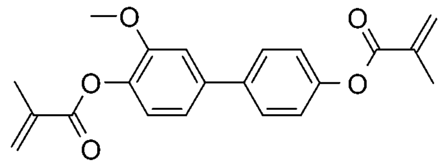

RM-37

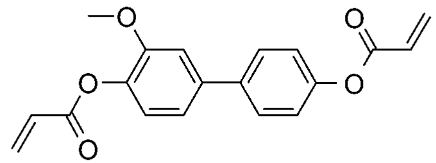

RM-38

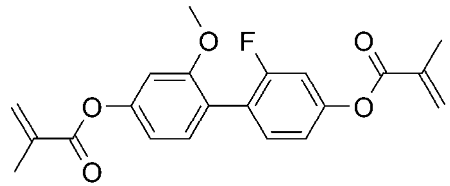

RM-39

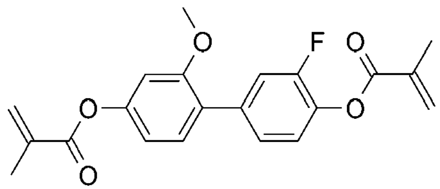

RM-40

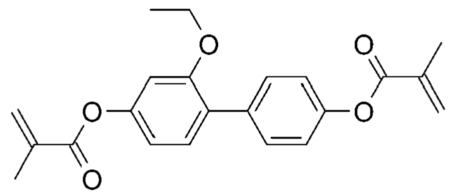

RM-41

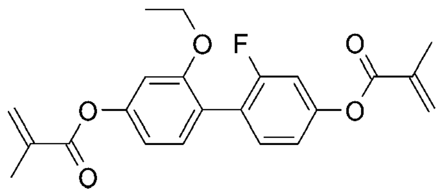

RM-42

(continued)

Table H shows illustrative reactive mesogenic compounds (RMs) which can be used in the LC media in accordance with the present invention.

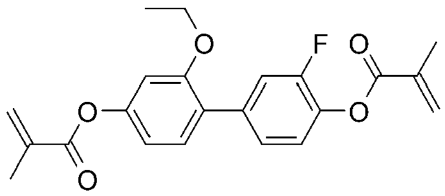

RM-43

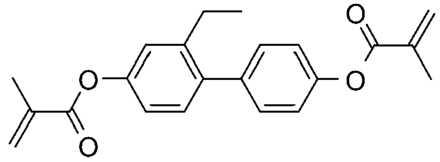

RM-44

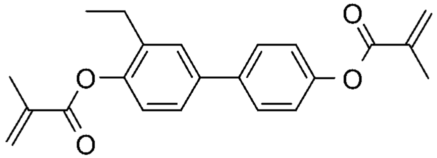

RM-45

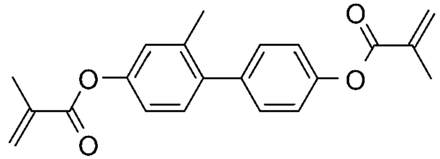

RM-46

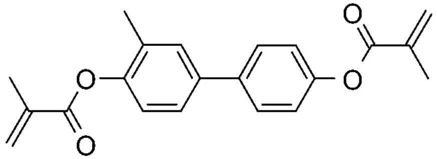

RM-47

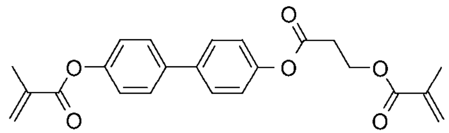

RM-48

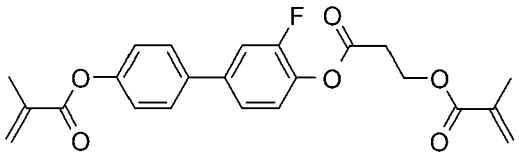

RM-49

(continued)

Table H shows illustrative reactive mesogenic compounds (RMs) which can be used in the LC media in accordance with the present invention.

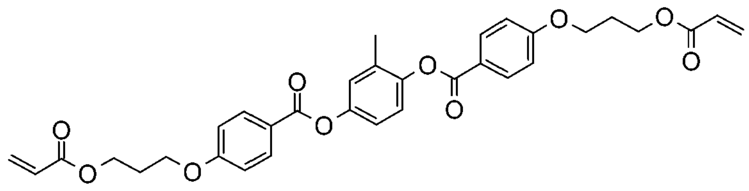

RM-50

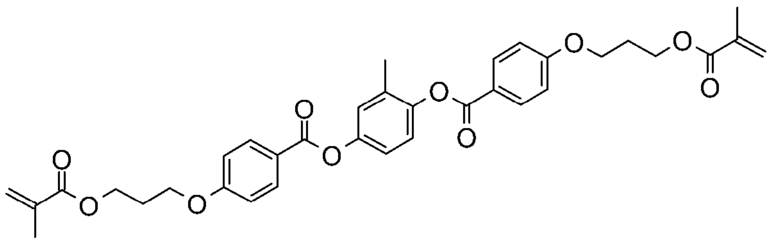

RM-51

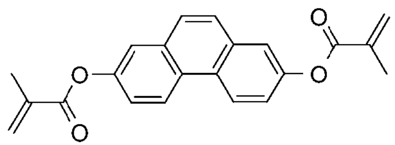

RM-52

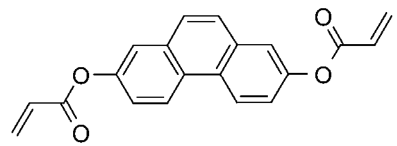

RM-53

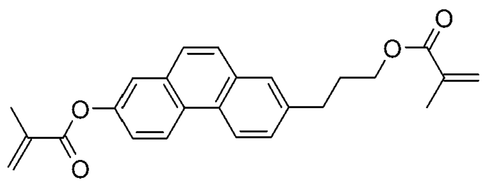

RM-54

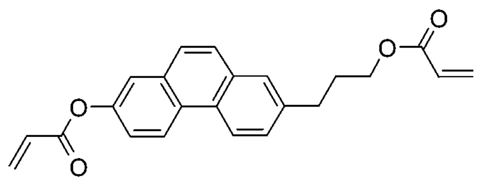

RM-55

(continued)

Table H shows illustrative reactive mesogenic compounds (RMs) which can be used in the LC media in accordance with the present invention.

| | |
|---|---|
| 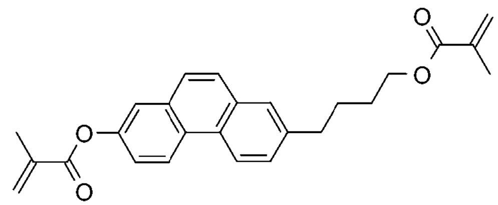 | 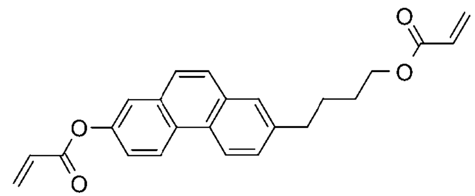 |
| RM-56 | RM-57 |
| 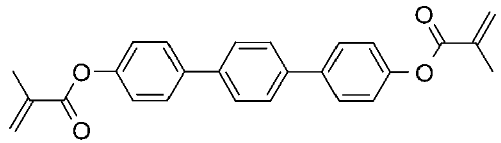 | 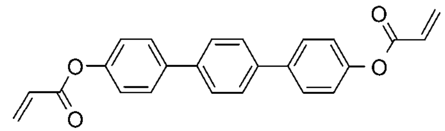 |
| RM-58 | RM-59 |
| 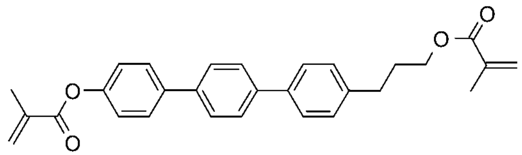 | 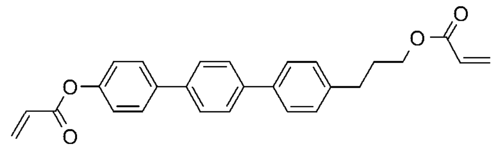 |
| RM-60 | RM-61 |
| 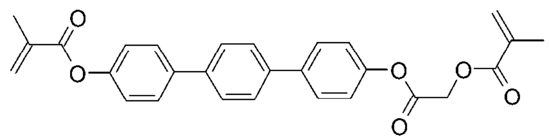 | 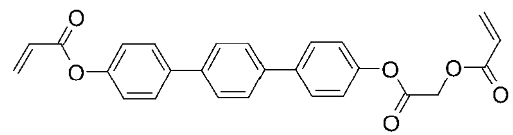 |
| RM-62 | RM-63 |

(continued)

Table H shows illustrative reactive mesogenic compounds (RMs) which can be used in the LC media in accordance with the present invention.

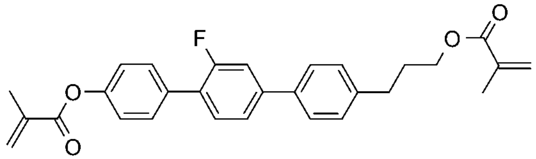

RM-64

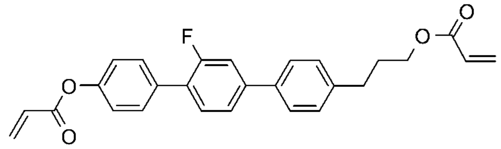

RM-65

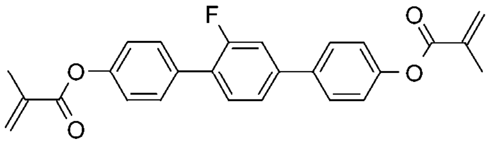

RM-66

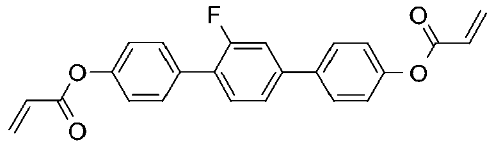

RM-67

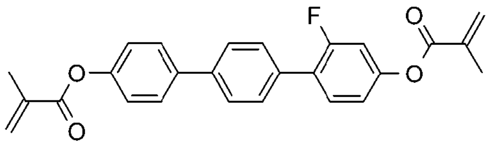

RM-68

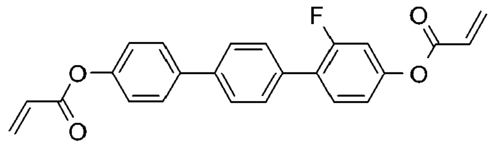

RM-69

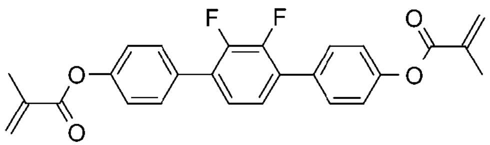

RM-70

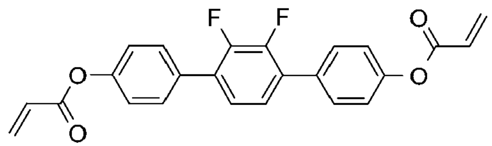

RM-71

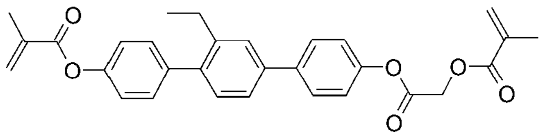

RM-72

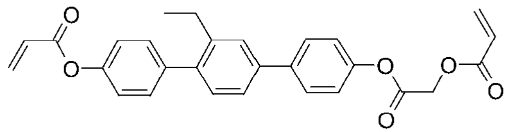

RM-73

(continued)

Table H shows illustrative reactive mesogenic compounds (RMs) which can be used in the LC media in accordance with the present invention.

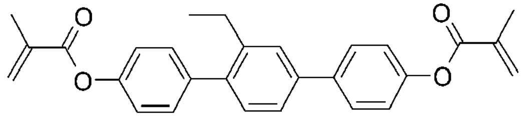

RM-74

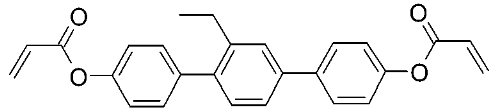

RM-75

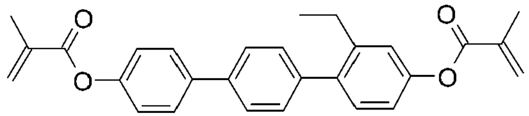

RM-76

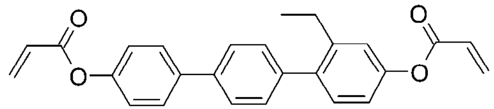

RM-77

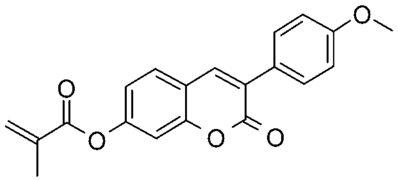

RM-78

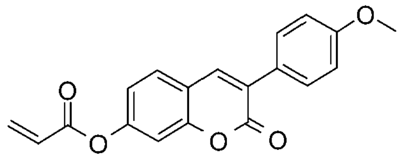

RM-79

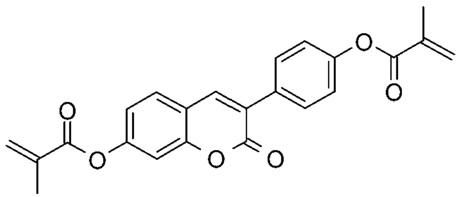

RM-80

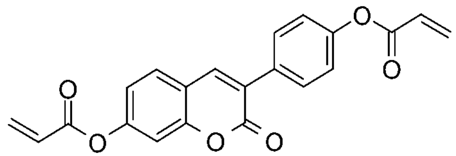

RM-81

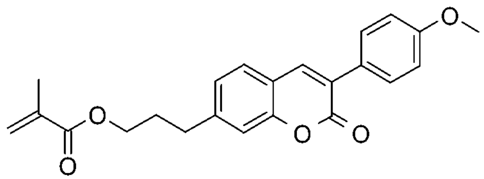

RM-82

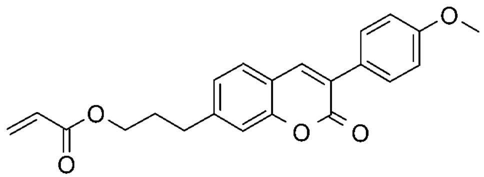

RM-83

(continued)

Table H shows illustrative reactive mesogenic compounds (RMs) which can be used in the LC media in accordance with the present invention.

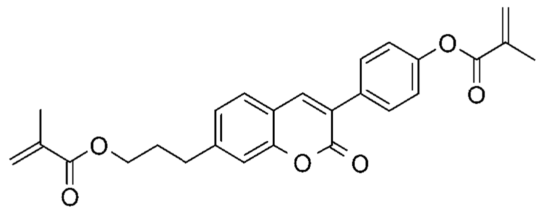

RM-84

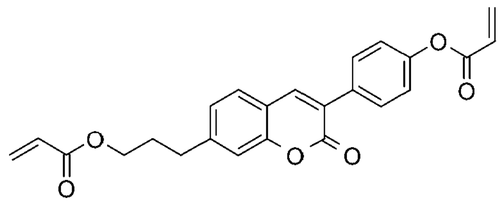

RM-85

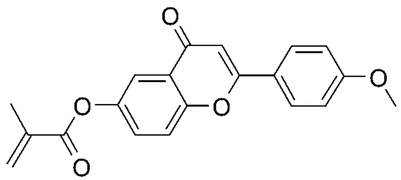

RM-86

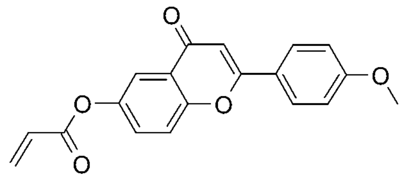

RM-87

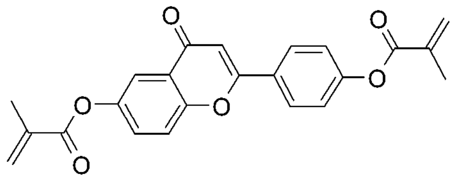

RM-88

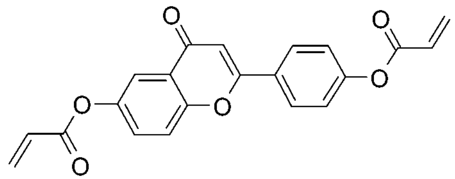

RM-89

(continued)

Table H shows illustrative reactive mesogenic compounds (RMs) which can be used in the LC media in accordance with the present invention.

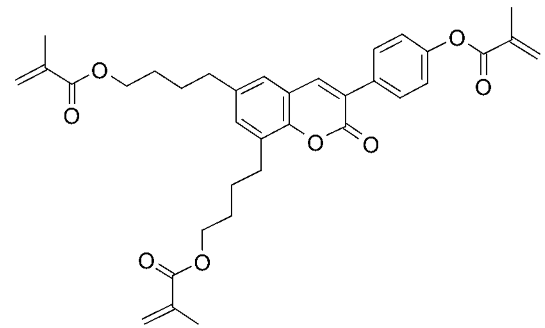

RM-90

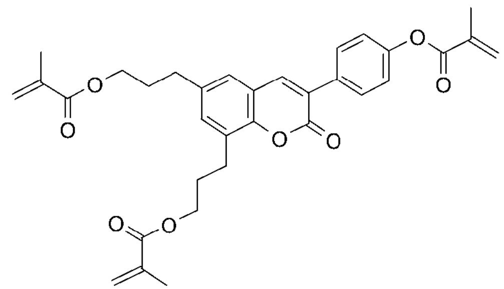

RM-91

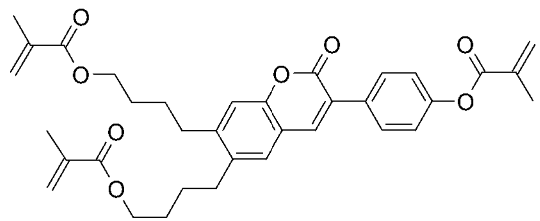

RM-92

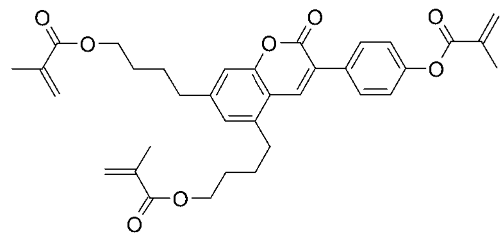

RM-93

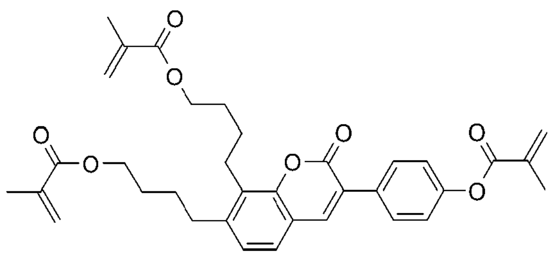

RM-94

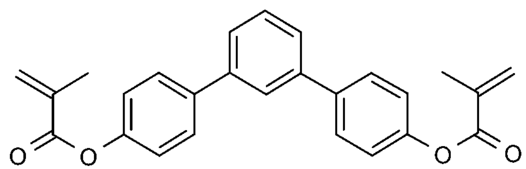

RM-95

(continued)

Table H shows illustrative reactive mesogenic compounds (RMs) which can be used in the LC media in accordance with the present invention.

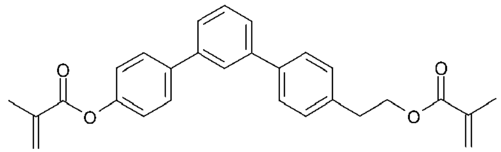

RM-96

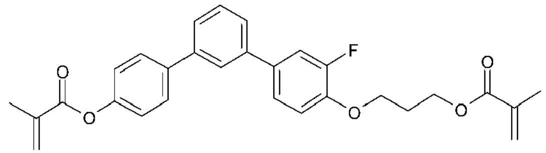

RM-97

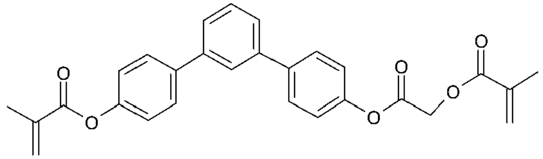

RM-98

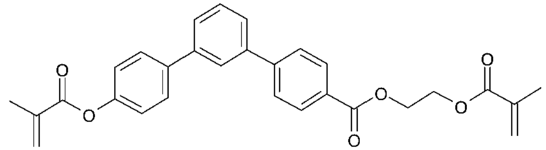

RM-99

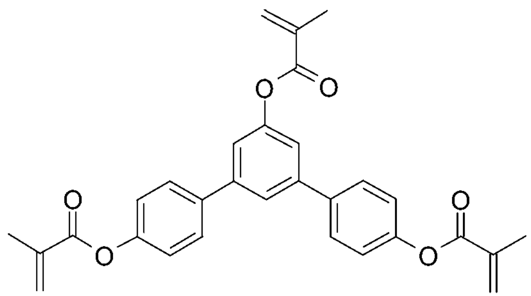

RM-100

(continued)

Table H shows illustrative reactive mesogenic compounds (RMs) which can be used in the LC media in accordance with the present invention.

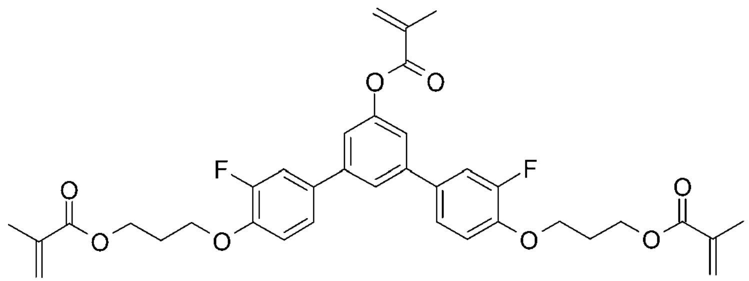

RM-101

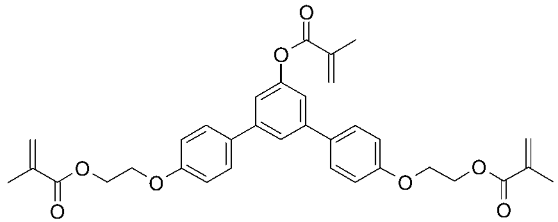

RM-102

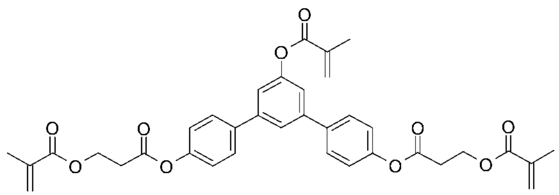

RM-103

(continued)

Table H shows illustrative reactive mesogenic compounds (RMs) which can be used in the LC media in accordance with the present invention.

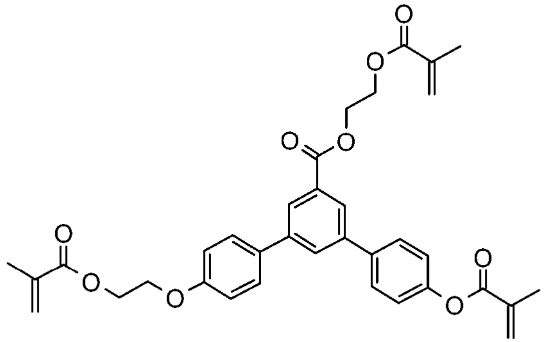

RM-104

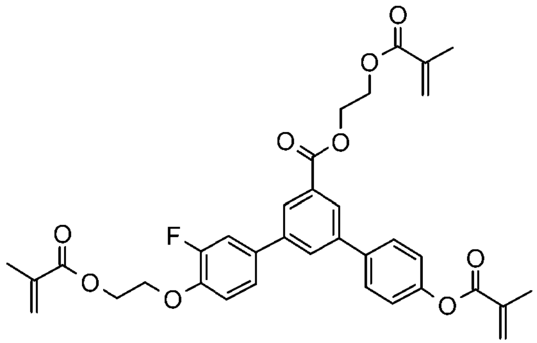

RM-105

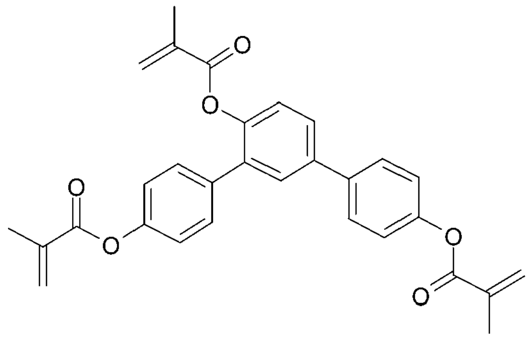

RM-106

(continued)

Table H shows illustrative reactive mesogenic compounds (RMs) which can be used in the LC media in accordance with the present invention.

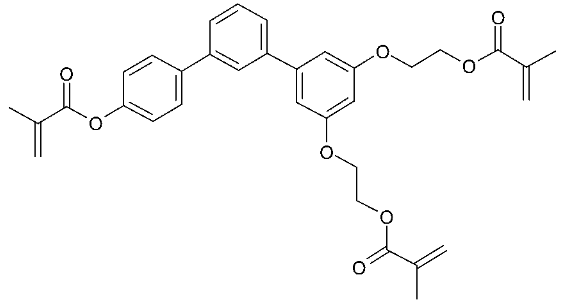

RM-107

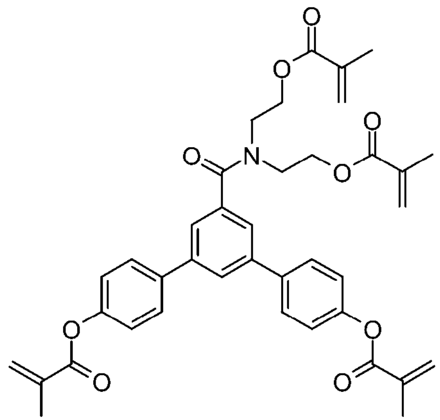

RM-108

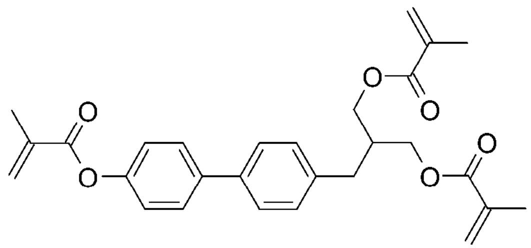

RM-109

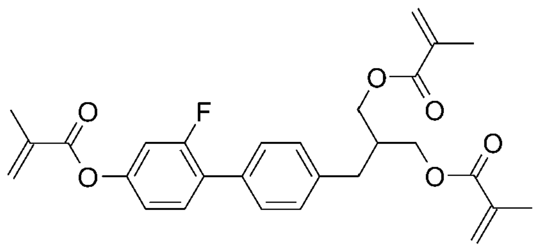

RM-110

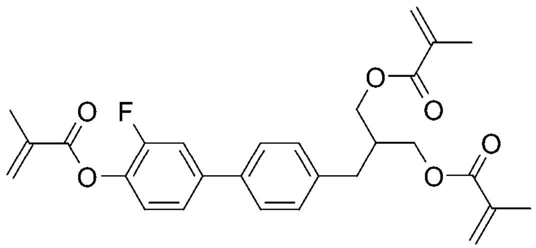

RM-111

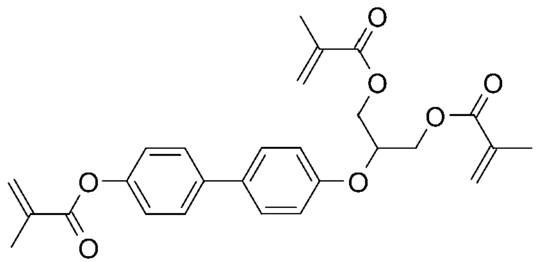

RM-112

(continued)

Table H shows illustrative reactive mesogenic compounds (RMs) which can be used in the LC media in accordance with the present invention.

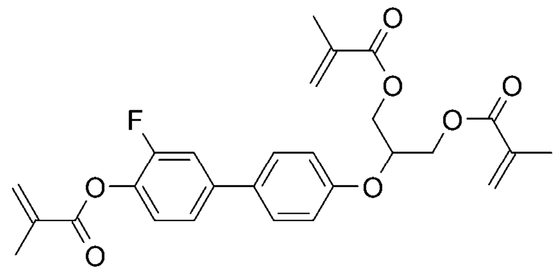

RM-113

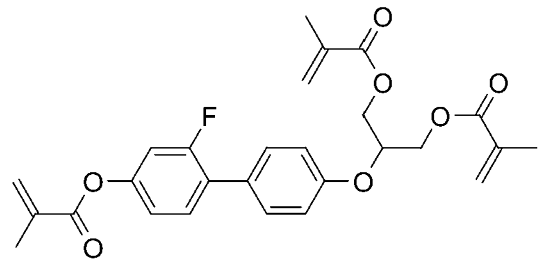

RM-114

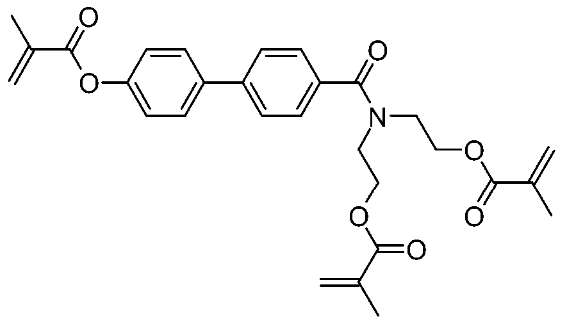

RM-115

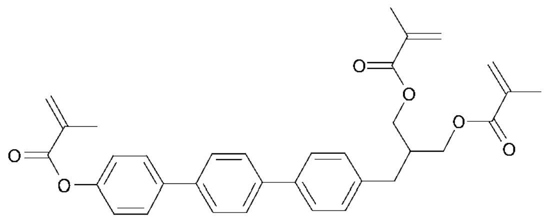

RM-116

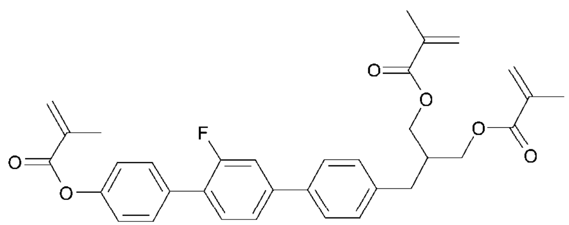

RM-117

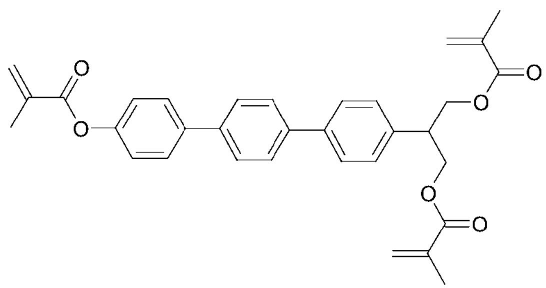

RM-118

(continued)

Table H shows illustrative reactive mesogenic compounds (RMs) which can be used in the LC media in accordance with the present invention.

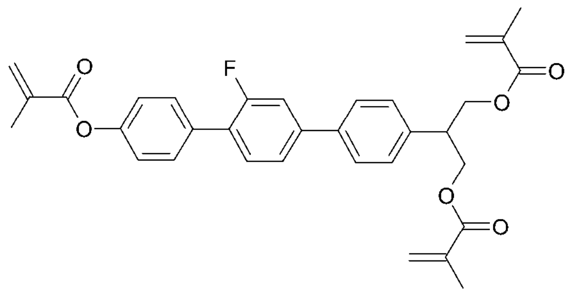

RM-119

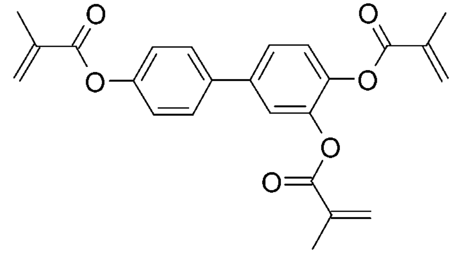

RM-120

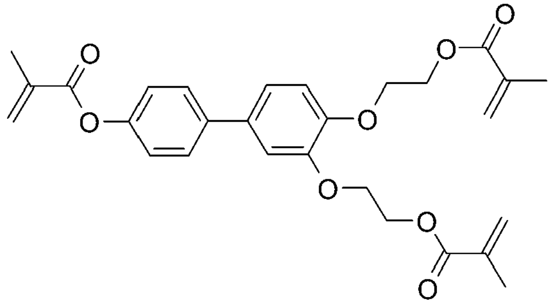

RM-121

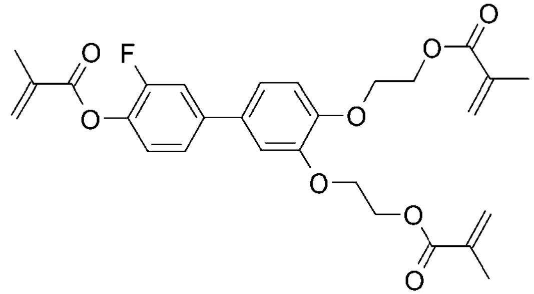

RM-122

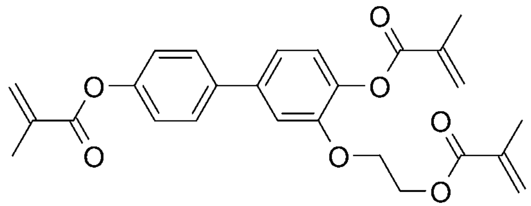

RM-123

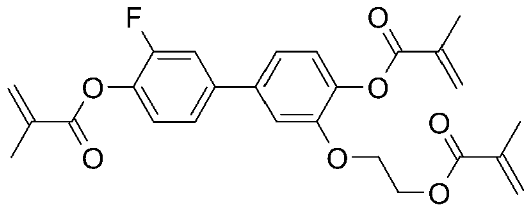

RM-124

(continued)

Table H shows illustrative reactive mesogenic compounds (RMs) which can be used in the LC media in accordance with the present invention.

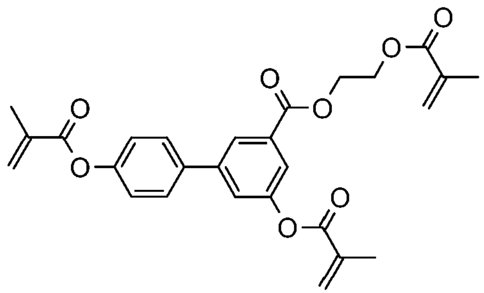

RM-125

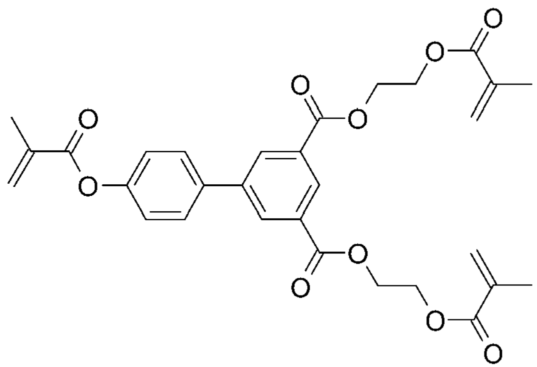

RM-126

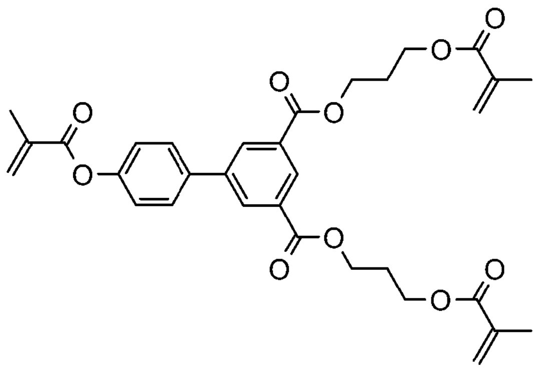

RM-127

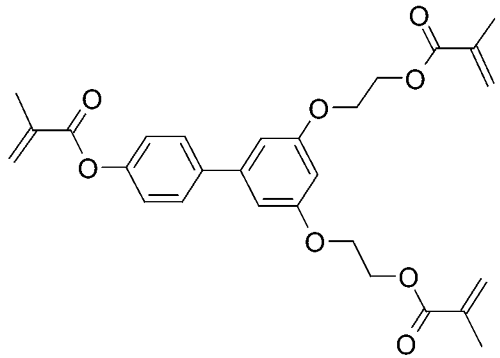

RM-128

(continued)

Table H shows illustrative reactive mesogenic compounds (RMs) which can be used in the LC media in accordance with the present invention.

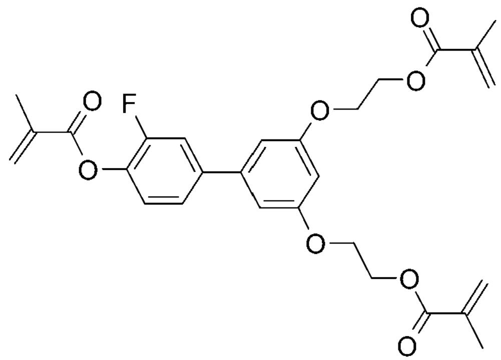

RM-129

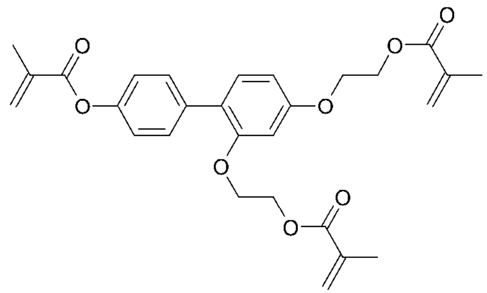

RM-130

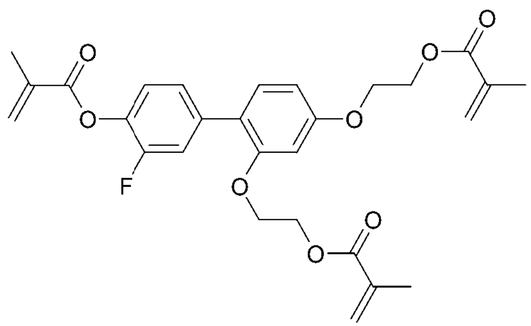

RM-131

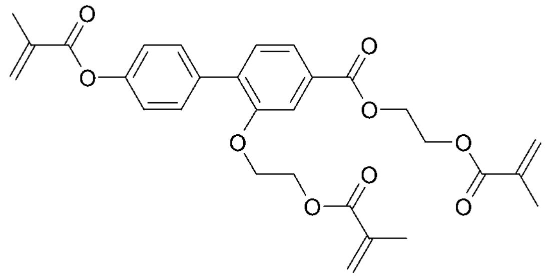

RM-132

(continued)

Table H shows illustrative reactive mesogenic compounds (RMs) which can be used in the LC media in accordance with the present invention.

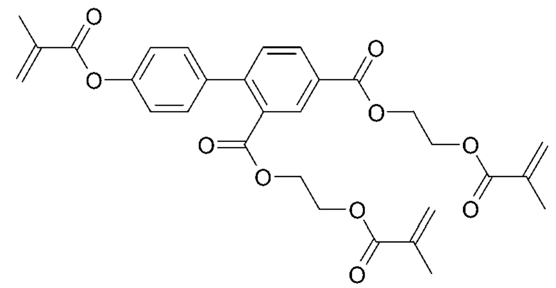

RM-133

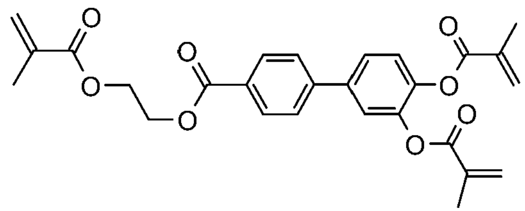

RM-134

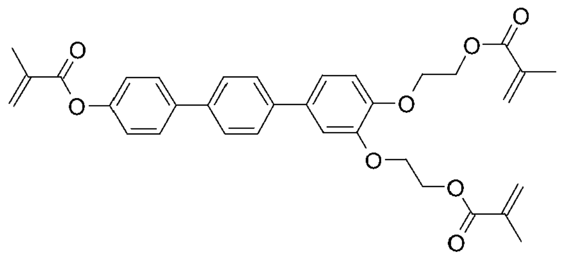

RM-135

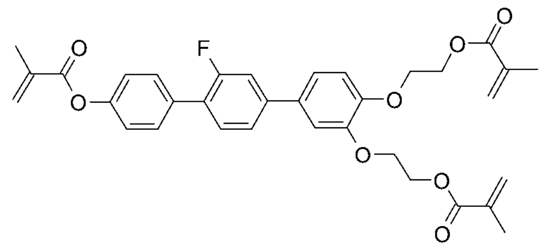

RM-136

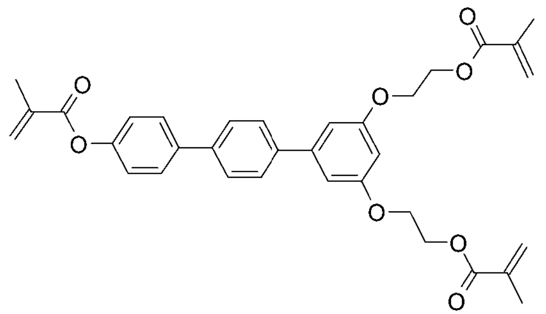

RM-137

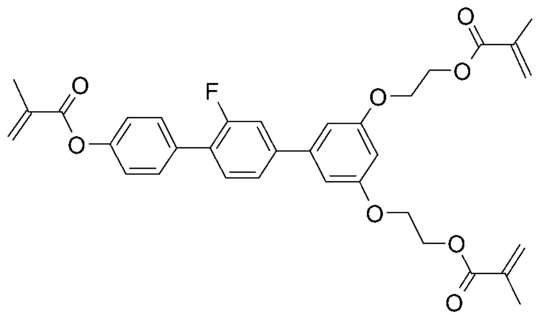

RM-138

(continued)

Table H shows illustrative reactive mesogenic compounds (RMs) which can be used in the LC media in accordance with the present invention.

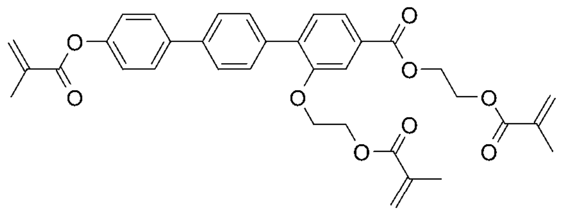

RM-139

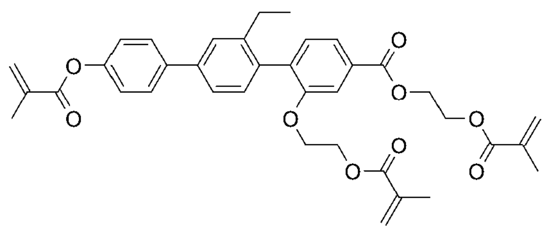

RM-140

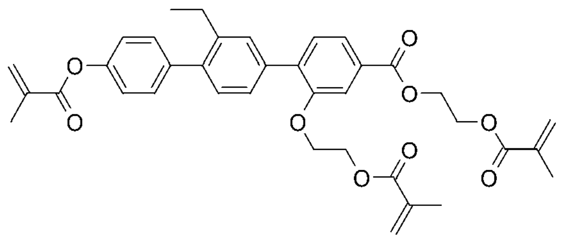

RM-141

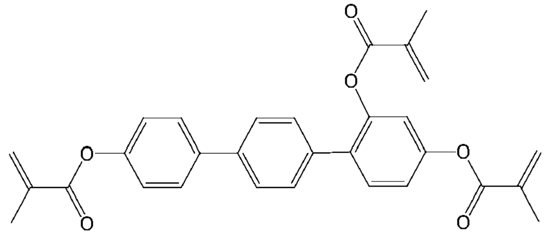

RM-142

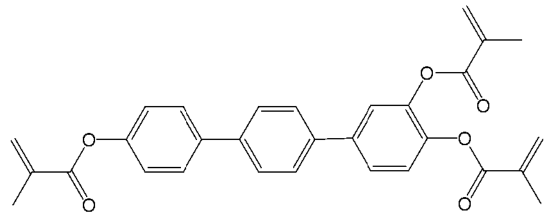

RM-143

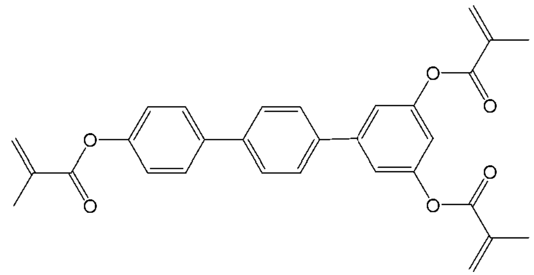

RM-144

(continued)

Table H shows illustrative reactive mesogenic compounds (RMs) which can be used in the LC media in accordance with the present invention.

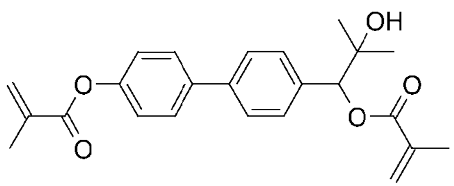

RM-145

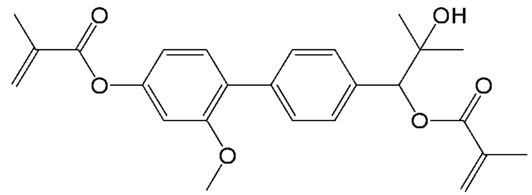

RM-146

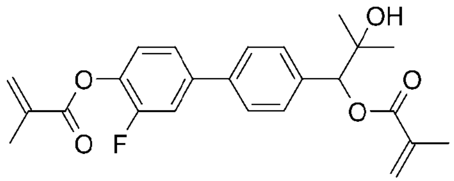

RM-147

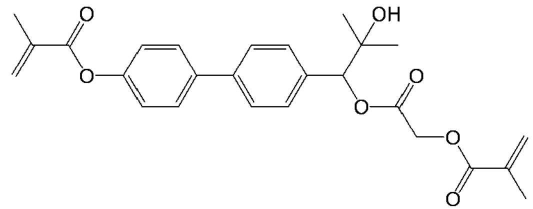

RM-148

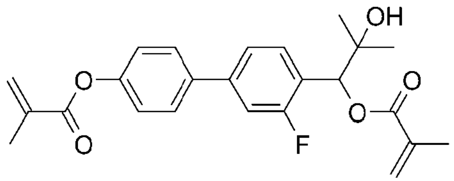

RM-149

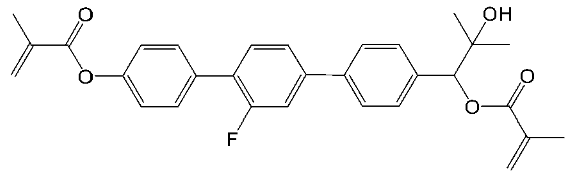

RM-150

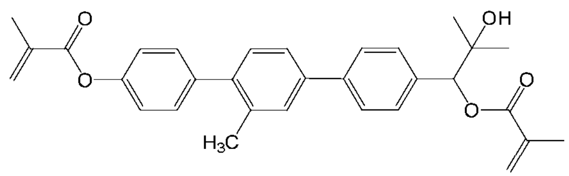

RM-151

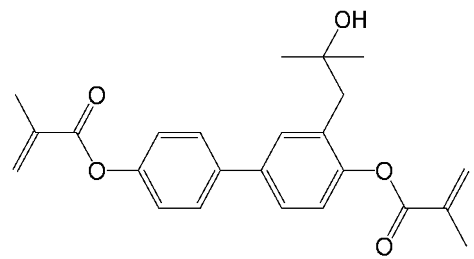

RM-152

(continued)

Table H shows illustrative reactive mesogenic compounds (RMs) which can be used in the LC media in accordance with the present invention.

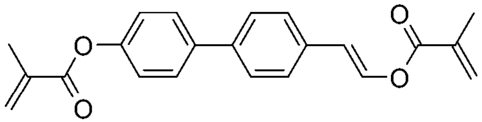

RM-153

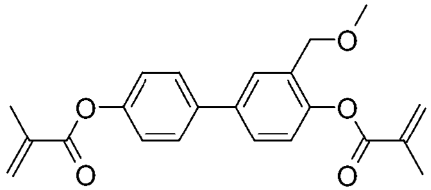

RM-154

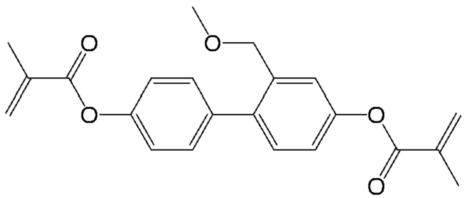

RM-155

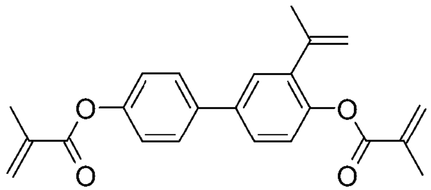

RM-156

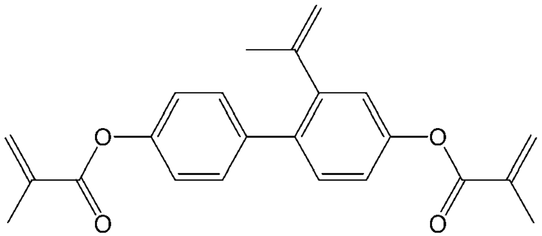

RM-157

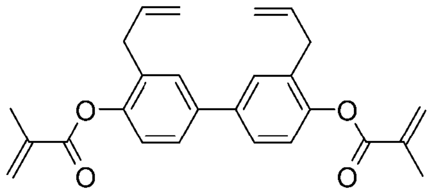

RM-158

(continued)

Table H shows illustrative reactive mesogenic compounds (RMs) which can be used in the LC media in accordance with the present invention.

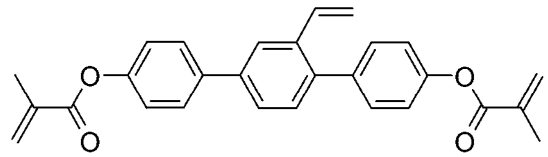

RM-159

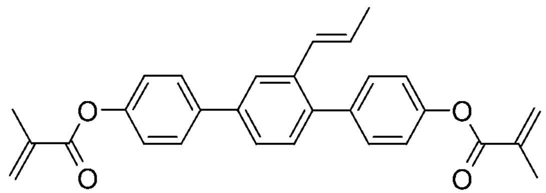

RM-160

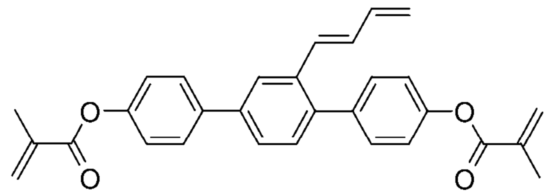

RM-161

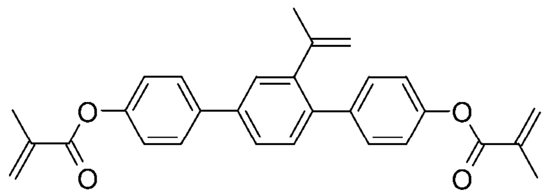

RM-162

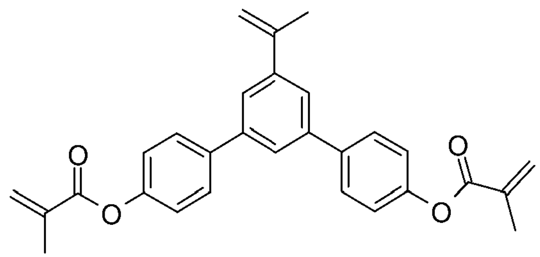

RM-163

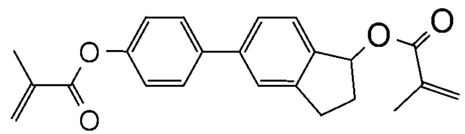

RM-164

(continued)

Table H shows illustrative reactive mesogenic compounds (RMs) which can be used in the LC media in accordance with the present invention.

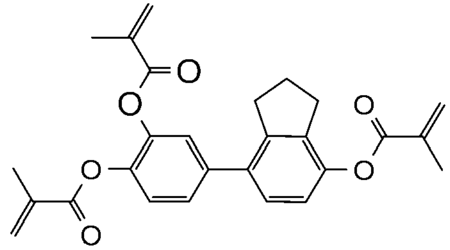

RM-165

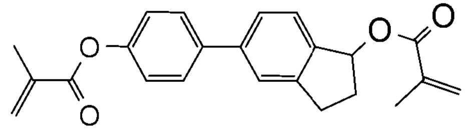

RM-166

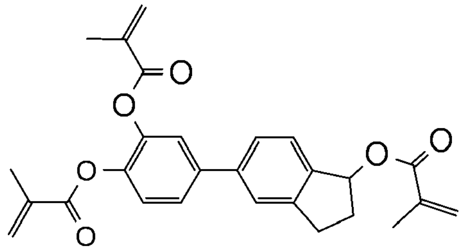

RM-167

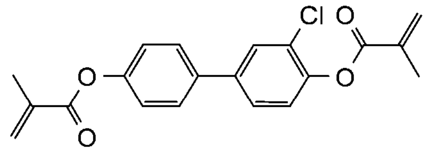

RM-168

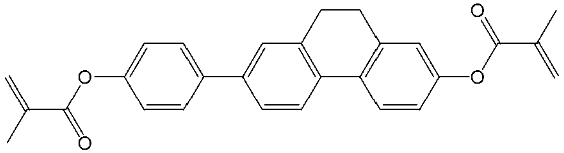

RM-169

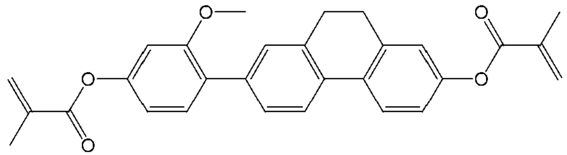

RM-170

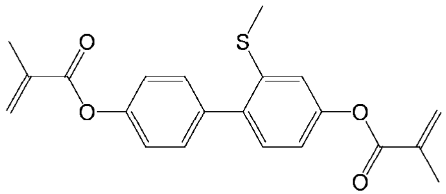

RM-171

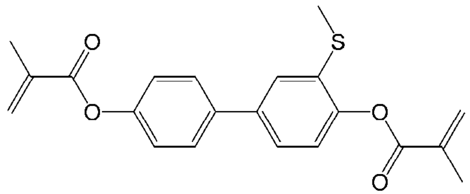

RM-172

(continued)

Table H shows illustrative reactive mesogenic compounds (RMs) which can be used in the LC media in accordance with the present invention.

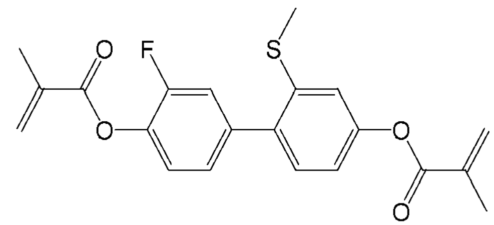

RM-173

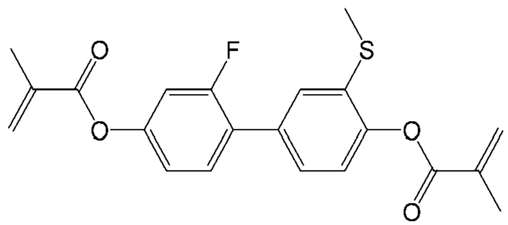

RM-174

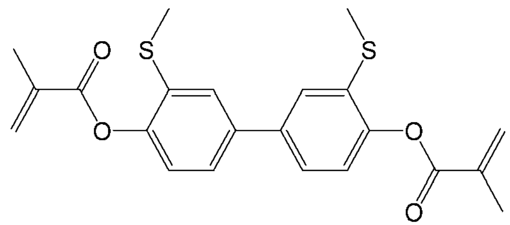

RM-175

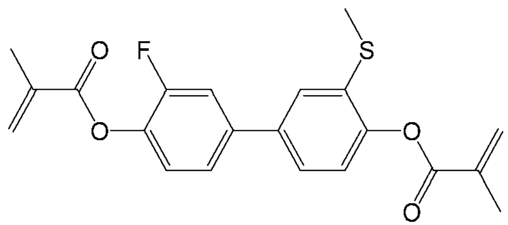

RM-176

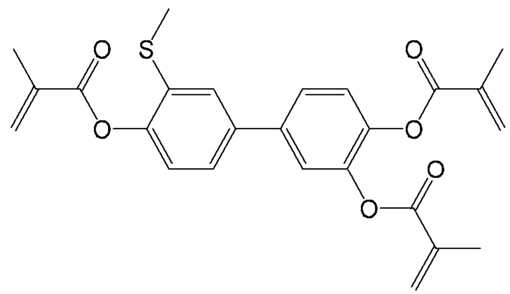

RM-177

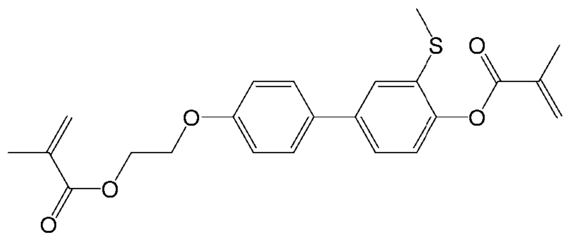

RM-178

(continued)

Table H shows illustrative reactive mesogenic compounds (RMs) which can be used in the LC media in accordance with the present invention.

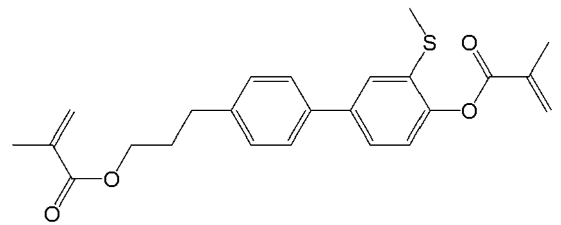

RM-179

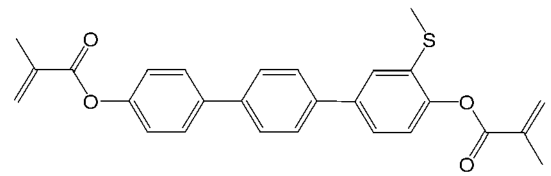

RM-180

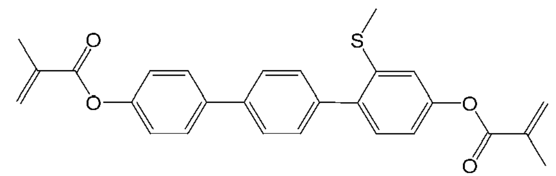

RM-181

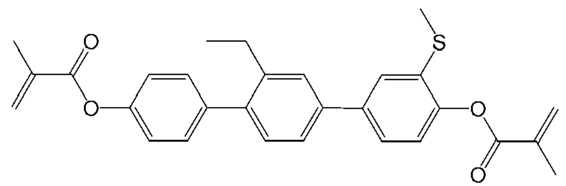

RM-182

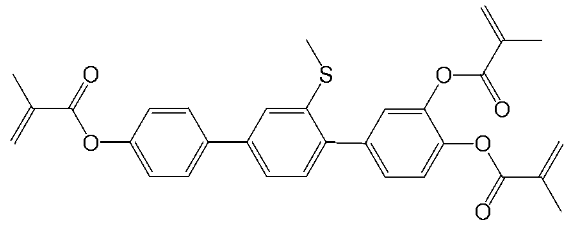

RM-183

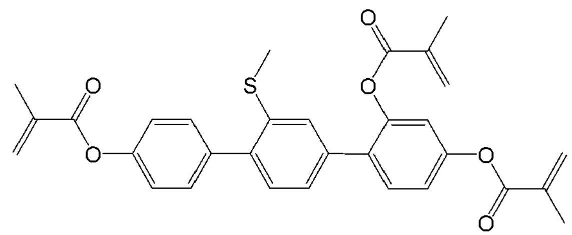

RM-184

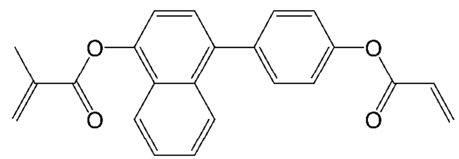

RM-185

The LC media according to the invention may optionally comprise one or more polymerizable compounds, preferably selected from the polymerizable compounds of the Formulae RM-1 to RM-184. Of these, compounds RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-184 are particularly preferred.

The following examples are intended to explain the invention without limiting it.

Above and below, percentage data denote per cent by weight. All temperatures are indicated in degrees Celsius. m.p. denotes melting point, cl.p. = clearing point. Furthermore, C = crystalline state, N = nematic phase, S = smectic phase and I = isotropic phase. The data between these symbols represent the transition temperatures. Furthermore, the following symbols are used

| | |
|---|---|
| $V_0$ | Freedericks threshold voltage, capacitive [V] at 20°C, |
| $V_{10}$ | voltage [V] for 10% transmission, |
| $n_e$ | extraordinary refractive index measured at 20°C and 589 nm, |
| $n_0$ | ordinary refractive index measured at 20°C and 589 nm, |
| $\Delta n$ | optical anisotropy measured at 20°C and 589 nm, |
| $\varepsilon_\perp$ | dielectric susceptibility (or *"dielectric constant*") perpendicular to the to the longitudinal axes of the molecules at 20°C and 1 kHz, |
| $\varepsilon\|$ | dielectric susceptibility (or *"dielectric constant*") parallel to the to the longitudinal axes of the molecules at 20 °C and 1 kHz, |
| $\Delta\varepsilon$ | dielectric anisotropy at 20 °C and 1 kHz, |
| cl.p. or T(N,I) | clearing point [°C], |
| v | flow viscosity measured at 20 °C [$mm^2 \cdot s^{-1}$], |
| $\gamma_1$ | rotational viscosity measured at 20 °C [mPa·s], |
| $K_1$ | elastic constant, *"splay"* deformation at 20 °C [pN], |
| $K_2$ | elastic constant, *"twist"* deformation at 20 °C [pN], |
| $K_3$ | elastic constant, "bend" deformation at 20 °C [pN], and |
| VHR | voltage holding ratio. |

All physical properties are determined in accordance with "Merck Liquid Crystals, Physical Properties of Liquid Crystals", status Nov. 1997, Merck KGaA, Germany, and apply for a temperature of 20°C, unless explicitly indicated otherwise.

## Examples

Comparative Example C1

A nematic LC medium is formulated as follows:

| Composition | | | Properties | | |
|---|---|---|---|---|---|
| Nr. | Comp. | Conc., wt.-% | | | |
| 1 | APUQU-3-F | 2.0 | T(N, I) | = | 106.1 °C |
| 2 | CC-3-2V1 | 3.0 | $\Delta n$ (20 °C, 589 nm) | = | 0.0927 |
| 3 | CC-3-V | 33.5 | $\varepsilon_\|$ (20 °C, 1 kHz) | = | 6.4 |
| 4 | CC-3-V1 | 7.0 | $\varepsilon_\perp$ (20 °C, 1 kHz) | = | 3.2 |
| 5 | CCP-V-1 | 4.0 | $\Delta\varepsilon$ (20 °C, 1 kHz) | = | 3.2 |
| 6 | CCP-V2-1 | 12.0 | $K_1$ (20 °C) | = | 18.3 pN |
| 7 | CCVC-3-V | 6.0 | $K_3$ (20 °C) | = | 21.3 pN |
| 8 | CDUQU-3-F | 7.0 | | | |
| 9 | CLP-V-1 | 8.0 | | | |
| 10 | CLY-3-O2 | 6.5 | | | |
| 11 | DGUQU-4-F | 3.5 | | | |
| 12 | LB(S)-3-OT | 2.0 | | | |
| 13 | PCH-302 | 2.0 | | | |

(continued)

| Composition | | | Properties |
|---|---|---|---|
| Nr. | Comp. | Conc., wt.-% | |
| 14 | PP-1-2V1 | 3.5 | |

Mixture Example M1

A nematic LC medium is formulated as follows:

| Composition | | | Properties | | |
|---|---|---|---|---|---|
| Nr. | Comp. | Conc., wt.-% | | | |
| 1 | APUQU-3-F | 1.94 | T(N, I) | = | 102.6 °C |
| 2 | CC-3-2V1 | 2.91 | $\Delta n$ (20 °C, 589 nm) | = | 0.0932 |
| 3 | CC-3-V | 32.495 | $\varepsilon_{\parallel}$ (20 °C, 1 kHz) | = | 6.3 |
| 4 | CC-3-V1 | 6.79 | $\varepsilon_{\perp}$ (20 °C, 1 kHz) | = | 3.4 |
| 5 | CCP-V-1 | 3.88 | $\Delta\varepsilon$ (20 °C, 1 kHz) | = | 2.9 |
| 6 | CCP-V2-1 | 11.64 | $K_1$(20 °C) | = | 17.4 pN |
| 7 | CCVC-3-V | 5.82 | $K_3$ (20 °C) | = | 20.2 pN |
| 8 | CDUQU-3-F | 6.79 | | | |
| 9 | CLP-V-1 | 7.76 | | | |
| 10 | CLY-3-O2 | 6.305 | | | |
| 11 | DGUQU-4-F | 3.395 | | | |
| 12 | LB(S)-3-OT | 1.94 | | | |
| 13 | PCH-302 | 1.94 | | | |
| 14 | PP-1-2V1 | 3.395 | | | |
| 15 | LY-3-O2 | 3.0 | | | |

This mixture shows an increased $\varepsilon_{\perp}$ compared to mixture of Comparative Example C1 which leads to an increased transmittance in an FFS LC display.

Mixture Example S1 (stabilised with compound of Formula ST-2-3)

A nematic LC mixture according to the invention is formulated as follows:

| | |
|---|---|
| Mixture M1 | 99.95 wt.-% |
| Compound of Formula ST-2-3 | 500 ppm |

Addition of 500 ppm of the compound of the Formula ST-2-3 significantly improves the $VHR_{100}$ after UV exposure compared to the non-stabilized mixture M1, without affecting the remaining physical properties of the mixture.

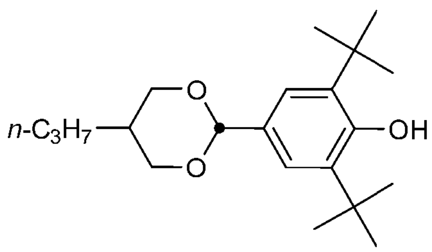

ST-2-3

Mixture Example S1a (stabilised with compound of Formula ST-2-8)

A nematic LC mixture according to the invention is formulated as follows:

| | |
|---|---|
| Mixture M1 | 99.95 wt.-% |
| Compound of Formula ST-2-8 | 500 ppm |

Addition of 500 ppm of the compound of the Formula ST-2-8 significantly improves the $VHR_{100}$ after UV exposure compared to the non-stabilized mixture M1, without affecting the remaining physical properties of the mixture.

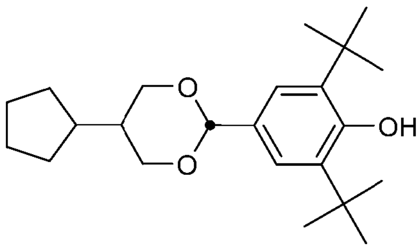

ST-2-8

Mixture Example M2

A nematic LC medium is formulated as follows:

| Composition | | | Properties | | |
|---|---|---|---|---|---|
| **Nr.** | **Comp.** | **Conc., wt.-%** | | | |
| 1 | APUQU-3-F | 1.9 | T(N, I) | = | 100.4 °C |
| 2 | CC-3-2V1 | 2.85 | Δn (20 °C, 589 nm) | = | 0.0937 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.5 |
| 5 | CCP-V-1 | 3.8 | Δε (20 °C, 1 kHz) | = | 2.8 |
| 6 | CCP-V2-1 | 11.4 | $K_1$ (20 °C) | = | 17.2 pN |
| 7 | CCVC-3-V | 5.7 | $K_3$ (20 °C) | = | 19.9 pN |
| 8 | CDUQU-3-F | 6.65 | | | |
| 9 | CLP-V-1 | 7.6 | | | |
| 10 | CLY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

This mixture shows an increased $\varepsilon_{\perp}$ compared to mixture of Comparative Example C1 which leads to an increased transmittance in an FFS LC display.

Mixture Example S2 (stabilised with compound of Formula H-3-1)

A nematic LC mixture according to the invention is formulated as follows:

| | |
|---|---|
| Mixture M2 | 99.95 wt.-% |
| Compound of Formula H-3-1 | 500 ppm |

Addition of 500 ppm of the compound of Formula H-3-1 significantly improves the $VHR_{100}$ after UV exposure compared to the non-stabilized mixture M2, without affecting the remaining physical properties of the mixture.

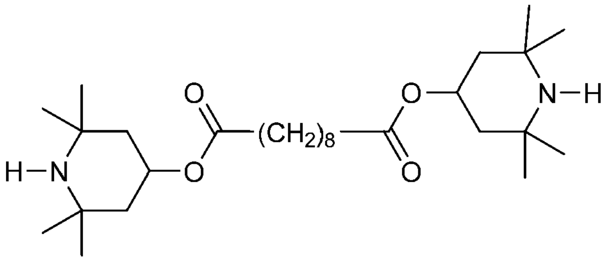

H-3-1

Mixture Example S2a (stabilised with compound of Formula H-3-22)

A nematic LC mixture according to the invention is formulated as follows:

| | |
|---|---|
| Mixture M2 | 99.92 wt.-% |
| Compound of Formula H-3-22 | 800 ppm |

Addition of 800 ppm of the compound of Formula H-3-22 significantly improves the $VHR_{100}$ after UV exposure compared to the non-stabilized mixture M2, without affecting the remaining physical properties of the mixture.

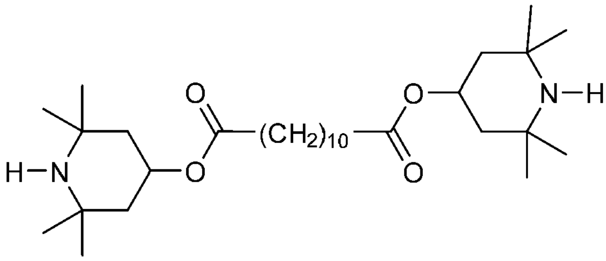

H-3-22

Mixture Example M3

A nematic LC medium is formulated as follows:

| Composition | | | Properties | | |
|---|---|---|---|---|---|
| Nr. | Comp. | Conc., wt.-% | | | |
| 1 | APUQU-3-F | 1.8 | T(N, I) | = | 95.2 °C |
| 2 | CC-3-2V1 | 2.7 | Δn (20 °C, 589 nm) | = | 0.0943 |
| 3 | CC-3-V | 30.15 | $\varepsilon_{\parallel}$ (20 °C, 1 kHz) | = | 6.2 |
| 4 | CC-3-V1 | 6.3 | $\varepsilon_{\perp}$ (20 °C, 1 kHz) | = | 3.8 |
| 5 | CCP-V-1 | 3.6 | Δε (20 °C, 1 kHz) | = | 2.4 |
| 6 | CCP-V2-1 | 10.8 | $K_1$ (20 °C) | = | 16.6 pN |
| 7 | CCVC-3-V | 5.4 | $K_3$ (20 °C) | = | 19.1 pN |
| 8 | CDUQU-3-F | 6.3 | | | |
| 9 | CLP-V-1 | 7.2 | | | |
| 10 | CLY-3-O2 | 5.85 | | | |
| 11 | DGUQU-4-F | 3.15 | | | |
| 12 | LB(S)-3-OT | 1.8 | | | |
| 13 | PCH-302 | 1.8 | | | |
| 14 | PP-1-2V1 | 3.15 | | | |
| 15 | LY-3-O2 | 10.0 | | | |

This mixture shows an increased $\varepsilon_\perp$ compared to mixture of Comparative Example C1 which leads to an increased transmittance in an FFS LC display.

Mixture Example S3 (stabilised with compound of Formula ST-4-2)

A nematic LC mixture according to the invention is formulated as follows:

| | |
|---|---|
| Mixture M3 | 99.9 wt.-% |
| Compound of Formula ST-4-2 | 1 000 ppm |

Addition of 1000 ppm of the compound of the Formula ST-4-2 significantly improves the $VHR_{100}$ after UV exposure compared to the non-stabilized mixture M3, without affecting the remaining physical properties of the mixture.

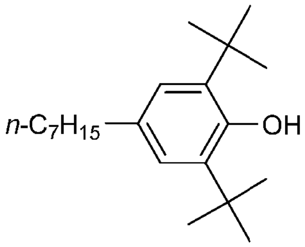

ST-4-2

Mixture Example M4

A nematic LC medium is formulated as follows:

| Composition | | | Properties | | |
|---|---|---|---|---|---|
| Nr. | Comp. | Conc., wt.-% | | | |
| 1 | B(S)-2O-O5 | 1.2 | T(N, I) | = | 110.7 °C |
| 2 | CC-3-2V1 | 6.0 | $\Delta n$ (20 °C, 589 nm) | = | 0.0911 |
| 3 | CC-3-V | 24.3 | $\varepsilon_\parallel$ (20 °C, 1 kHz) | = | 6.7 |
| 4 | CC-3-V1 | 8.0 | $\varepsilon_\perp$ (20 °C, 1 kHz) | = | 3.4 |
| 5 | CCP-V-1 | 17.0 | $\Delta\varepsilon$ (20 °C, 1 kHz) | = | 3.3 |
| 6 | CCP-V2-1 | 10.0 | $K_1$ (20 °C) | = | 19.0 pN |
| 7 | CCVC-3-V | 5.0 | $K_3$ (20 °C) | = | 22.2 pN |
| 8 | CDUQU-3-F | 8.0 | | | |
| 9 | CLP-3-T | 5.0 | | | |
| 10 | CLY-3-O2 | 4.5 | | | |
| 11 | DGUQU-4-F | 3.5 | | | |
| 12 | LB(S)-3-OT | 2.5 | | | |
| 13 | LY-3-O2 | 2.0 | | | |
| 14 | PCH-302 | 3.0 | | | |

This mixture shows an increased $\varepsilon_\perp$ compared to mixture of Comparative Example C1 which leads to an increased transmittance in an FFS LC display.

Mixture Example S4 (stabilised with compound of Formula H-3-7)

A nematic LC mixture according to the invention is formulated as follows:

| | |
|---|---|
| Mixture M4 | 99.95 wt.-% |
| Compound of Formula H-3-7 | 500 ppm |

Addition of 500 ppm of the compound of Formula H-3-7 significantly improves the $VHR_{100}$ after UV exposure compared to the non-stabilized mixture M4, without affecting the remaining physical properties of the mixture.

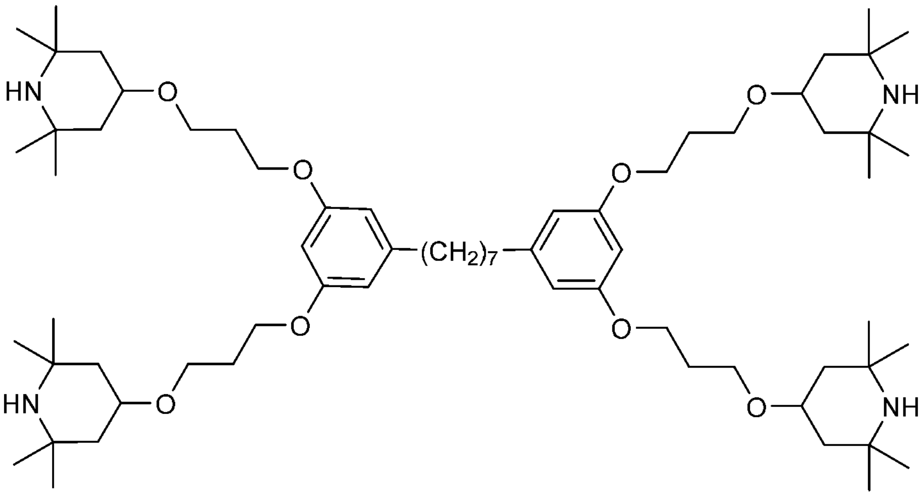

H-3-7

Mixture Example M5

A nematic LC medium is formulated as follows:

| Composition | | | Properties | | |
|---|---|---|---|---|---|
| **Nr.** | **Comp.** | **Conc., wt.-%** | | | |
| 1 | B(S)-2O-O5 | 0.4 | T(N, I) | = | 111.1 °C |
| 2 | CC-3-2V1 | 5.0 | Δn (20 °C, 589 nm) | = | 0.0916 |
| 3 | CC-3-V | 23.0 | $\varepsilon_{\parallel}$ (20 °C, 1 kHz) | = | 6.2 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.7 |
| 6 | CCP-30CF3 | 4.0 | $K_1$ (20 °C) | = | 19.9 pN |
| 7 | CCP-V-1 | 5.3 | $K_3$ (20 °C) | = | 22.4 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

This mixture shows an increased $\varepsilon_{\perp}$ compared to mixture of Comparative Example C1 which leads to an increased transmittance in an FFS LC display.

Mixture Example S5 (stabilised with compound of Formula H-3-5)

A nematic LC mixture according to the invention is formulated as follows:

| | |
|---|---|
| Mixture M5 | 99.995 wt.-% |
| Compound of Formula H-3-5 | 50 ppm |

Addition of 50 ppm of the compound of the Formula H-3-5 significantly improves the $VHR_{100}$ after UV exposure compared to the non-stabilized mixture M5, without affecting the remaining physical properties of the mixture.

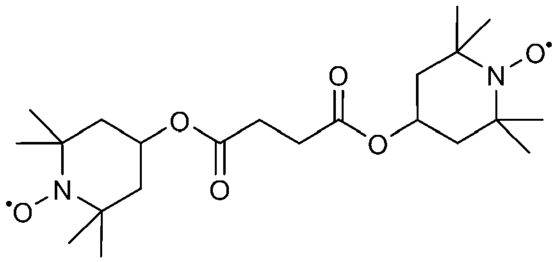

H-3-5

Mixture Examples M6

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 100.4 °C |
| 2 | CC-3-2V1 | 2.85 | Δn (20 °C, 589 nm) | = | 0.0937 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.5 |
| 5 | CCP-V-1 | 3.8 | Δε (20 °C, 1 kHz) | = | 2.8 |
| 6 | CCP-V2-1 | 11.4 | $K_1$ (20 °C) | = | 17.2 pN |
| 7 | CCVC-3-V | 5.7 | $K_3$ (20 °C) | = | 19.9 pN |
| 8 | CDUQU-3-F | 6.65 | | | |
| 9 | CLP-V-1 | 7.6 | | | |
| 10 | CLY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S6 (stabilised with compound of Formula ST-1-3)

A nematic LC mixture according to the invention is formulated as follows:

| | |
|---|---|
| Mixture M6 | 99.95 wt.-% |
| Compound of Formula ST-1-3 | 500 ppm |

Addition of 400 ppm of the compound of the Formula ST-1-3 significantly improves the $VHR_{100}$ after UV exposure compared to the non-stabilized mixture M6, without affecting the remaining physical properties of the mixture.

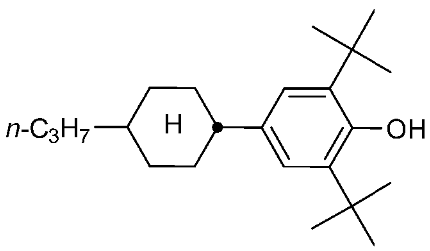

ST-1-3

Mixture Example M7

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 89 °C |
| 2 | CC-3-2V1 | 2.85 | Δn (20 °C, 589 nm) | = | 0.0900 |
| 3 | CC-3-V | 31.825 | $\varepsilon_{\parallel}$ (20 °C, 1 kHz) | = | 6.5 |
| 4 | CC-3-V1 | 6.65 | $\varepsilon_{\perp}$ (20 °C, 1 kHz) | = | 4.0 |
| 5 | CCP-V-1 | 3.8 | Δε (20 °C, 1 kHz) | = | 2.5 |
| 6 | CCP-V2-1 | 11.4 | $K_1$ (20 °C) | = | 15.3 pN |
| 7 | CCVC-3-V | 5.7 | $K_3$ (20 °C) | = | 17.8 pN |
| 8 | CDUQU-3-F | 6.65 | | | |
| 9 | CLP-V-1 | 7.6 | | | |
| 10 | COY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S7 (stabilised with compound of Formula H-3-2)

A nematic LC mixture according to the invention is formulated as follows:

| | |
|---|---|
| Mixture M7 | 99.995 wt.-% |
| Compound of Formula H-3-2 | 50 ppm |

Addition of 50 ppm of the compound of the Formula H-3-2 significantly improves the $VHR_{100}$ after UV exposure compared to the non-stabilized mixture M7, without affecting the remaining physical properties of the mixture.

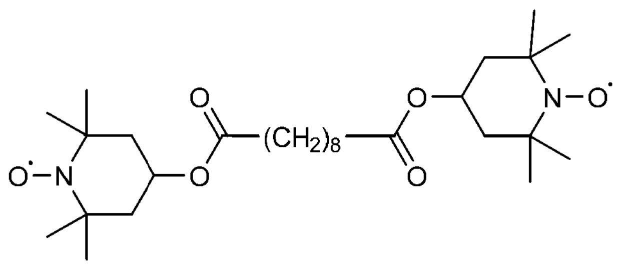

H-3-2

Mixture Example M8

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 98.5 °C |
| 2 | CC-3-2V1 | 2.85 | Δn (20 °C, 589 nm) | = | 0.0918 |
| 3 | CC-3-V | 31.825 | $\varepsilon_{\parallel}$ (20 °C, 1 kHz) | = | 6.4 |
| 4 | CC-3-V1 | 6.65 | $\varepsilon_{\perp}$ (20 °C, 1 kHz) | = | 3.9 |

(continued)

| Composition | | | Properties | | |
|---|---|---|---|---|---|
| Nr. | Comp. | Conc., wt.-% | | | |
| 5 | CCP-V-1 | 3.8 | Δε (20 °C, 1 kHz) | = | 2.5 |
| 6 | CCP-V2-1 | 11.4 | $K_1$(20 °C) | = | 16.8 pN |
| 7 | CCVC-3-V | 5.7 | $K_3$(20 °C) | = | 19.8 pN |
| 8 | CDUQU-3-F | 6.65 | | | |
| 9 | CLP-V-1 | 7.6 | | | |
| 10 | CCOY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S8 (stabilised with compound of Formula H-3-4)

A nematic LC mixture according to the invention is formulated as follows:

| | |
|---|---|
| Mixture M8 | 99.995 wt.-% |
| Compound of Formula H-3-4 | 50 ppm |

Addition of 50 ppm of the compound of the Formula H-3-4 significantly improves the $VHR_{100}$ after UV exposure compared to the non-stabilized mixture M8, without affecting the remaining physical properties of the mixture.

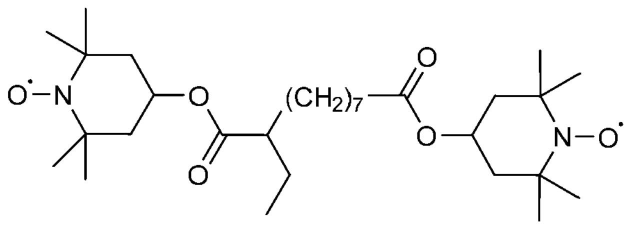

H-3-4

Mixture Example M9

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 87.5 °C |
| 2 | CC-3-2V1 | 2.85 | Δn (20 °C, 589 nm) | = | 0.0897 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.7 |
| 5 | CCP-V-1 | 3.8 | Δε (20 °C, 1 kHz) | = | 2.6 |
| 6 | CCP-V2-1 | 11.4 | $K_1$ (20 °C) | = | 15.3 pN |
| 7 | CCVC-3-V | 5.7 | $K_3$ (20 °C) | = | 18.0 pN |
| 8 | CDUQU-3-F | 6.65 | | | |
| 9 | CLP-V-1 | 7.6 | | | |
| 10 | CEY-3-O2 | 6.175 | | | |
| 11 | DGUQU-4-F | 3.325 | | | |
| 12 | LB(S)-3-OT | 1.9 | | | |

(continued)

| Composition | | | Properties |
|---|---|---|---|
| Nr. | Comp. | Conc., wt.-% | |
| 13 | PCH-302 | 1.9 | |
| 14 | PP-1-2V1 | 3.325 | |
| 15 | LY-3-O2 | 5.0 | |

Mixture Example S9 (stabilised with compound of Formula H-3-10)

A nematic LC mixture according to the invention is formulated as follows:

| | |
|---|---|
| Mixture M9 | 99.99 wt.-% |
| Compound of Formula H-3-10 | 100 ppm |

Addition of 100 ppm of the compound of the Formula H-3-10 significantly improves the $VHR_{100}$ after UV exposure compared to the non-stabilized mixture M9, without affecting the remaining physical properties of the mixture.

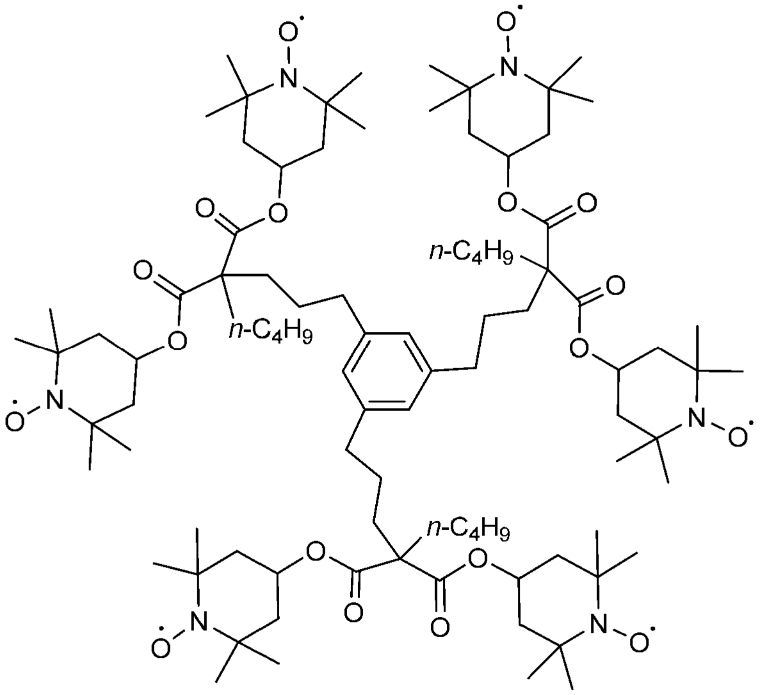

H-3-10

Mixture Example M10

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 98.5 °C |
| 2 | CC-3-2V1 | 2.85 | Δn (20 °C, 589 nm) | = | 0.0921 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.6 |
| 5 | CCP-V-1 | 3.8 | Δε (20 °C, 1 kHz) | = | 2.7 |
| 6 | CCP-V2-1 | 11.4 | $K_1$(20 °C) | = | 17.1 pN |

(continued)

| Composition | | | Properties | | |
|---|---|---|---|---|---|
| Nr. | Comp. | Conc., wt.-% | | | |
| 7 | CCVC-3-V | 5.7 | $K_3$ (20 °C) | = | 20.2 pN |
| 8 | CDUQU-3-F | 6.65 | | | |
| 9 | CLP-V-1 | 7.6 | | | |
| 10 | CCEY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S10 (stabilised with compound of Formula H-3-2)

A nematic LC mixture according to the invention is formulated as follows:

| | |
|---|---|
| Mixture M10 | 99.995 wt.-% |
| Compound of Formula H-3-2 | 50 ppm |

Addition of 50 ppm of the compound of the Formula H-3-2 significantly improves the $VHR_{100}$ after UV exposure compared to the non-stabilized mixture M10, without affecting the remaining physical properties of the mixture.

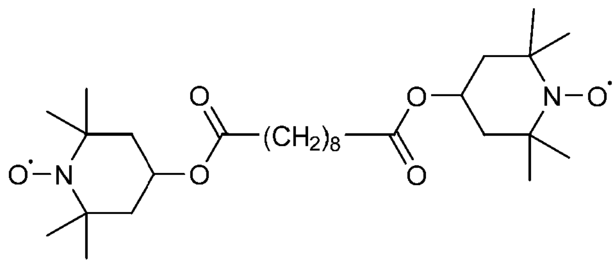

H-3-2

Mixture Example M11

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 96.5 °C |
| 2 | CC-3-2V1 | 2.85 | Δn (20 °C, 589 nm) | = | 0.0902 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.8 |
| 5 | CCP-V-1 | 3.8 | Δε (20 °C, 1 kHz) | = | 2.5 |
| 6 | CCP-V2-1 | 11.4 | $K_1$(20 °C) | = | 16.2 pN |
| 7 | CCVC-3-V | 5.7 | $K_3$ (20 °C) | = | 19.5 pN |
| 8 | CDUQU-3-F | 6.65 | | | |
| 9 | CLP-V-1 | 7.6 | | | |
| 10 | CCEY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |

(continued)

| Composition | | | Properties |
|---|---|---|---|
| Nr. | Comp. | Conc., wt.-% | |
| 14 | PP-1-2V1 | 3.325 | |
| 15 | LY-3-O2 | 5.0 | |

Mixture Example S11 (stabilised with compound of Formula H-3-3)

A nematic LC mixture according to the invention is formulated as follows:

| | |
|---|---|
| Mixture M11 | 99.9 wt.-% |
| Compound of Formula H-3-3 | 1 000 ppm |

Addition of 1 000 ppm of the compound of Formula H-3-3 significantly improves the $VHR_{100}$ after UV exposure compared to the non-stabilized mixture M11, without affecting the remaining physical properties of the mixture.

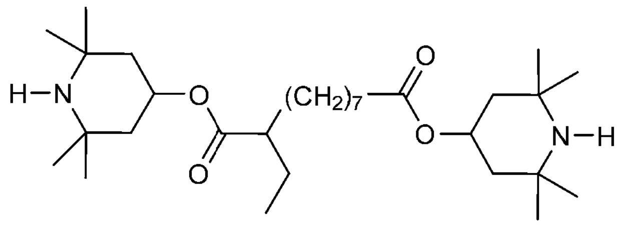

H-3-3

Mixture Example M12

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 94.5 °C |
| 2 | CC-3-2V1 | 2.85 | $\Delta n$ (20 °C, 589 nm) | = | 0.0904 |
| 3 | CC-3-V | 31.825 | $\varepsilon_{\parallel}$ (20 °C, 1 kHz) | = | 6.4 |
| 4 | CC-3-V1 | 6.65 | $\varepsilon_{\perp}$ (20 °C, 1 kHz) | = | 3.9 |
| 5 | CCP-V-1 | 3.8 | $\Delta\varepsilon$ (20 °C, 1 kHz) | = | 2.5 |
| 6 | CCP-V2-1 | 11.4 | $K_1$ (20 °C) | = | 16.7 pN |
| 7 | CCVC-3-V | 5.7 | $K_3$ (20 °C) | = | 19.7 pN |
| 8 | CDUQU-3-F | 6.65 | | | |
| 9 | CLP-V-1 | 7.6 | | | |
| 10 | CLOY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S12 (stabilised with compound of Formula H-3-6)

A nematic LC mixture according to the invention is formulated as follows:

| | |
|---|---|
| Mixture M12 | 99.995 wt.-% |
| Compound of Formula H-3-6 | 50 ppm |

Addition of 50 ppm of the compound of the Formula H-3-6 significantly improves the $VHR_{100}$ after UV exposure compared to the non-stabilized mixture M12, without affecting the remaining physical properties of the mixture.

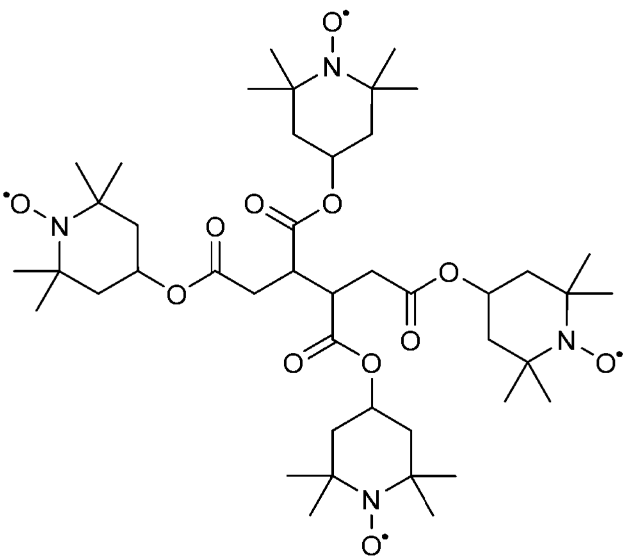

H-3-6

Mixture Example M13

A nematic LC medium is formulated as follows:

| Composition | | | Properties | | |
|---|---|---|---|---|---|
| **Nr.** | **Comp.** | **Conc., wt.-%** | | | |
| 1 | APUQU-3-F | 1.9 | T(N, I) | = | 94 °C |
| 2 | CC-3-2V1 | 2.85 | Δn (20 °C, 589 nm) | = | 0.0902 |
| 3 | CC-3-V | 31.825 | $\varepsilon_{\parallel}$ (20 °C, 1 kHz) | = | 6.4 |
| 4 | CC-3-V1 | 6.65 | $\varepsilon_{\perp}$ (20 °C, 1 kHz) | = | 3.9 |
| 5 | CCP-V-1 | 3.8 | Δε (20 °C, 1 kHz) | = | 2.5 |
| 6 | CCP-V2-1 | 11.4 | $K_1$ (20 °C) | = | 16.6 pN |
| 7 | CCVC-3-V | 5.7 | $K_3$ (20 °C) | = | 19.6 pN |
| 8 | CDUQU-3-F | 6.65 | | | |
| 9 | CLP-V-1 | 7.6 | | | |
| 10 | CLOY-(c5)-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

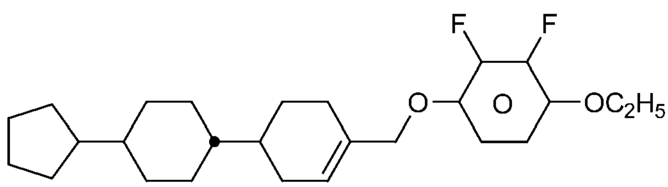

CLOY-(c5)-O2

Mixture Example S13 (stabilised with compound of Formula H-3-8)

A nematic LC mixture according to the invention is formulated as follows:

| | |
|---|---|
| Mixture M13 | 99.95 wt.-% |
| Compound of Formula H-3-8 | 500 ppm |

Addition of 500 ppm of the compound of Formula H-3-8 significantly improves the $VHR_{100}$ after UV exposure compared to the non-stabilized mixture M13, without affecting the remaining physical properties of the mixture.

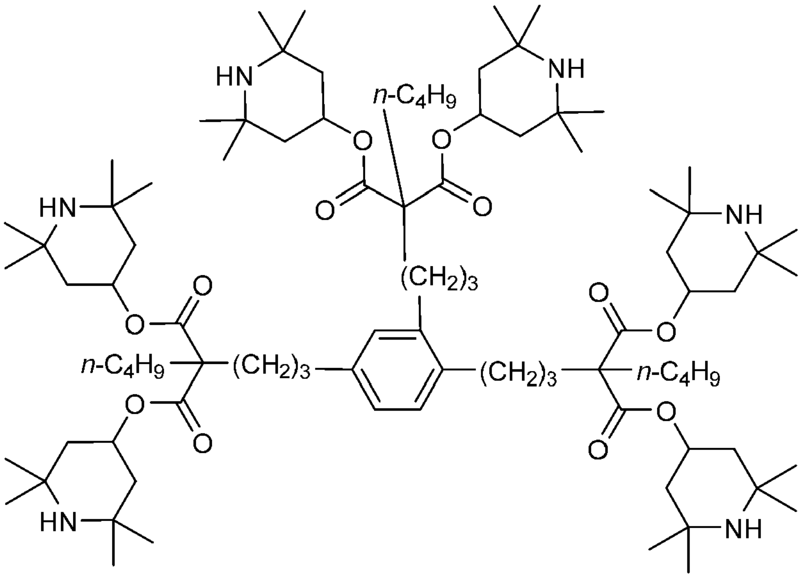

H-3-8

Mixture Example M14

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109 °C |
| 2 | CC-3-2V1 | 5.0 | Δn (20 °C, 589 nm) | = | 0.0911 |
| 3 | CC-3-V | 23.0 | $\varepsilon_{\parallel}$ (20 °C, 1 kHz) | = | 6.4 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.9 |
| 6 | CCU-3-F | 4.0 | $K_1$(20 °C) | = | 19.2 pN |
| 7 | CCP-V-1 | 5.3 | $K_3$ (20 °C) | = | 22.0 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S14 (stabilised with compound of Formula H-3-9)

A nematic LC mixture according to the invention is formulated as follows:

| | |
|---|---|
| Mixture M14 | 99.995 wt.-% |
| Compound of Formula H-3-9 | 50 ppm |

Addition of 50 ppm of the compound of the Formula H-3-9 significantly improves the $VHR_{100}$ after UV exposure compared to the non-stabilized mixture M14, without affecting the remaining physical properties of the mixture.

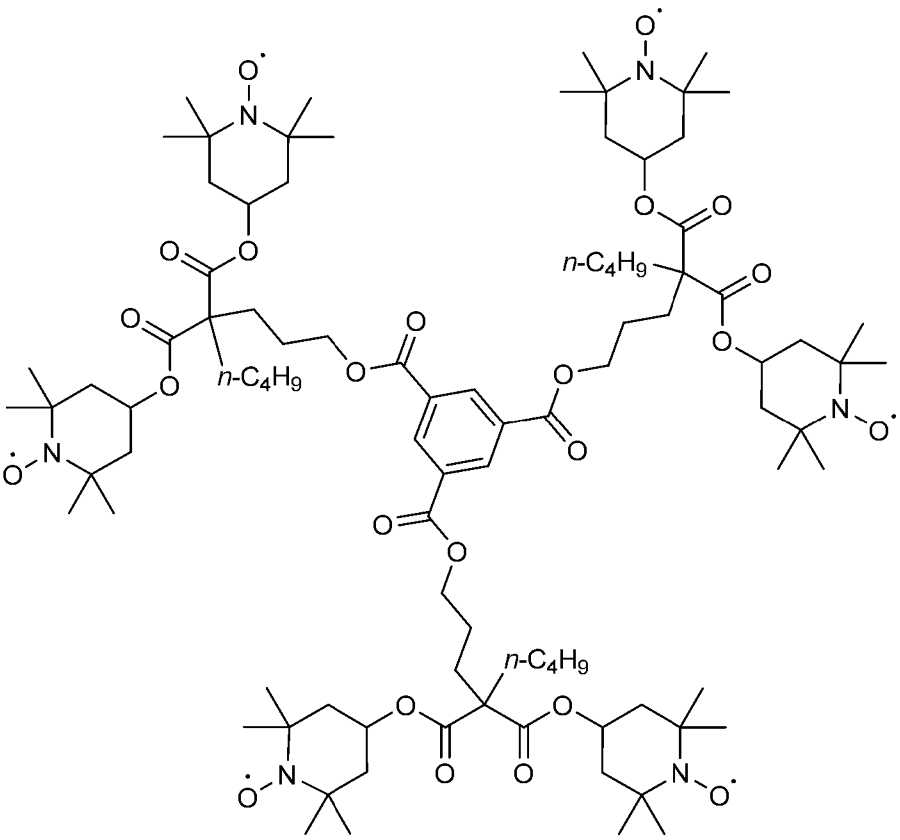

H-3-9

Mixture Example M15

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109.5 °C |
| 2 | CC-3-2V1 | 5.0 | Δn (20 °C, 589 nm) | = | 0.0913 |
| 3 | CC-3-V | 23.0 | $\varepsilon_{\parallel}$ (20 °C, 1 kHz) | = | 6.3 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 2.7 |
| 6 | CCG-V-F | 4.0 | $K_1$(20 °C) | = | 19.0 pN |
| 7 | CCP-V-1 | 5.3 | $K_3$ (20 °C) | = | 22.4 pN |
| 8 | CCP-V2-1 | 10.0 | | | |
| 9 | CCVC-3-V | 7.0 | | | |
| 10 | CDUQU-3-F | 5.5 | | | |

(continued)

| Composition | | | Properties |
|---|---|---|---|
| Nr. | Comp. | Conc., wt.-% | |
| 11 | CLP-3-T | 6.0 | |
| 12 | CLY-3-O2 | 6.0 | |
| 13 | DGUQU-4-F | 3.0 | |
| 14 | LB(S)-3-OT | 3.0 | |
| 15 | LY-3-O2 | 3.5 | |
| 16 | PCH-302 | 5.0 | |
| 17 | PGP-1-2V | 0.3 | |

Mixture Example S15 (stabilised with compound of Formula H-3-11)

A nematic LC mixture according to the invention is formulated as follows:

| | |
|---|---|
| Mixture M15 | 99.99 wt.-% |
| Compound of Formula H-3-11 | 100 ppm |

Addition of 100 ppm of the compound of the Formula H-3-11 significantly improves the $VHR_{100}$ after UV exposure compared to the non-stabilized mixture M15, without affecting the remaining physical properties of the mixture.

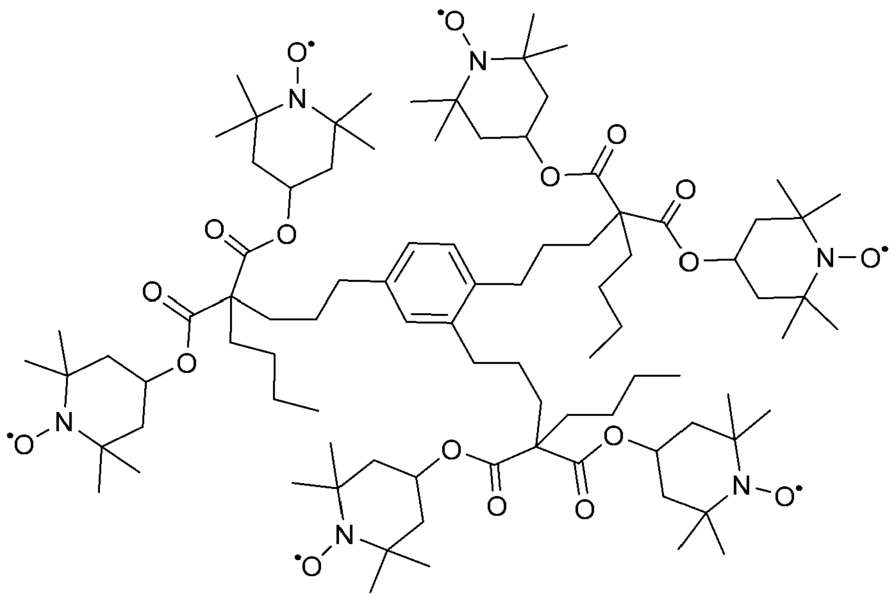

H-3-11

Mixture Example M16

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 88.5 °C |
| 2 | CC-3-2V1 | 2.85 | Δn (20 °C, 589 nm) | = | 0.0895 |
| 3 | CC-3-V | 31.825 | $\varepsilon_{\parallel}$ (20 °C, 1 kHz) | = | 6.4 |
| 4 | CC-3-V1 | 6.65 | $\varepsilon_{\perp}$ (20 °C, 1 kHz) | = | 3.7 |
| 5 | CCP-V-1 | 3.8 | Δε (20 °C, 1 kHz) | = | 2.7 |

(continued)

| Composition | | | Properties | | |
|---|---|---|---|---|---|
| Nr. | Comp. | Conc., wt.-% | | | |
| 6 | CCP-V2-1 | 11.4 | $K_1$(20 °C) | = | 14.9 pN |
| 7 | CCVC-3-V | 5.7 | $K_3$ (20 °C) | = | 17.4 pN |
| 8 | CDUQU-3-F | 6.65 | | | |
| 9 | CLP-V-1 | 7.6 | | | |
| 10 | CY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S16 (stabilised with compound of Formula H-3-13)

A nematic LC mixture according to the invention is formulated as follows:

| | |
|---|---|
| Mixture M16 | 99.99 wt.-% |
| Compound of Formula H-3-13 | 100 ppm |

Addition of 100 ppm of the compound of the Formula H-3-13 significantly improves the $VHR_{100}$ after UV exposure compared to the non-stabilized mixture M16, without affecting the remaining physical properties of the mixture.

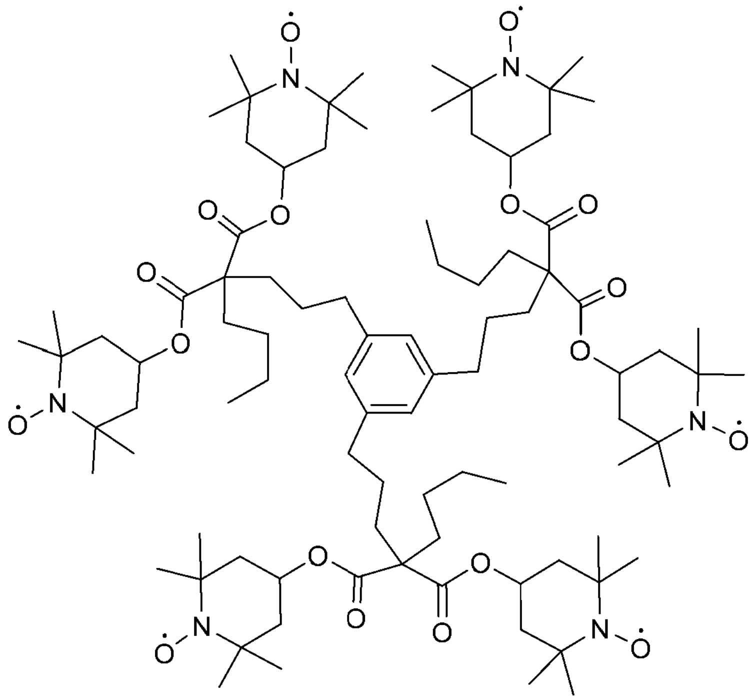

H-3-13

Mixture Example M17

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 100 °C |
| 2 | CC-3-2V1 | 2.85 | Δn (20 °C, 589 nm) | = | 0.0923 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.6 |
| 5 | CCP-V-1 | 3.8 | Δε (20 °C, 1 kHz) | = | 2.7 |
| 6 | CCP-V2-1 | 11.4 | $K_1$ (20 °C) | = | 16.9 pN |
| 7 | CCVC-3-V | 5.7 | $K_3$ (20 °C) | = | 19.9 pN |
| 8 | CDUQU-3-F | 6.65 | | | |
| 9 | CLP-V-1 | 7.6 | | | |
| 10 | CCY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S17 (stabilised with compound of Formula H-3-14)

A nematic LC mixture according to the invention is formulated as follows:

| | |
|---|---|
| Mixture M17 | 99.99 wt.-% |
| Compound of Formula H-3-14 | 100 ppm |

Addition of 100 ppm of the compound of the Formula H-3-14 significantly improves the $VHR_{100}$ after UV exposure compared to the non-stabilized mixture M17, without affecting the remaining physical properties of the mixture.

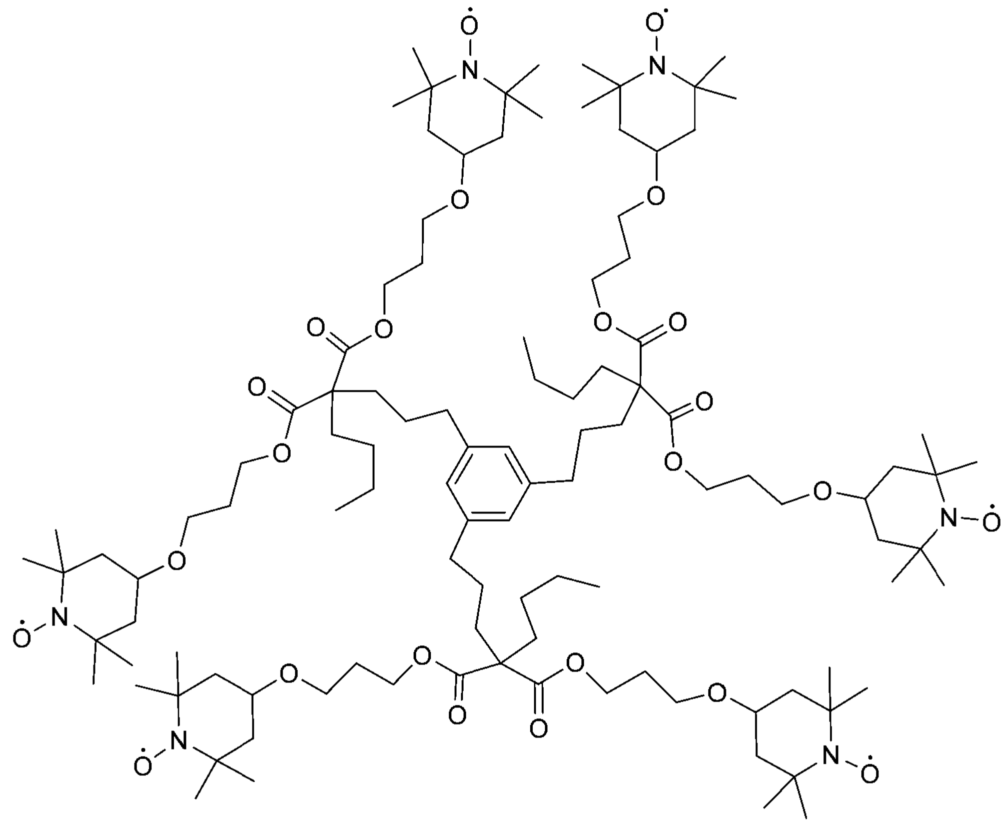

H-3-14

Mixture Example M18

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 96.5 °C |
| 2 | CC-3-2V1 | 2.85 | Δn (20 °C, 589 nm) | = | 0.0992 |
| 3 | CC-3-V | 31.825 | $\varepsilon_{\parallel}$ (20 °C, 1 kHz) | = | 6.4 |
| 4 | CC-3-V1 | 6.65 | $\varepsilon_{\perp}$ (20 °C, 1 kHz) | = | 3.6 |
| 5 | CCP-V-1 | 3.8 | Δε (20 °C, 1 kHz) | = | 2.8 |
| 6 | CCP-V2-1 | 11.4 | $K_1$ (20 °C) | = | 16.2 pN |
| 7 | CCVC-3-V | 5.7 | $K_3$ (20 °C) | = | 18.3 pN |
| 8 | CDUQU-3-F | 6.65 | | | |
| 9 | CLP-V-1 | 7.6 | | | |
| 10 | PGIY-2-O4 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S18 (stabilised with compound of Formula H-3-16)

A nematic LC mixture according to the invention is formulated as follows:

| | |
|---|---|
| Mixture M18 | 99.99 wt.-% |

(continued)

| | |
|---|---|
| Compound of Formula H-3-16 | 100 ppm |

Addition of 100 ppm of the compound of the Formula H-3-16 significantly improves the $VHR_{100}$ after UV exposure compared to the non-stabilized mixture M18, without affecting the remaining physical properties of the mixture.

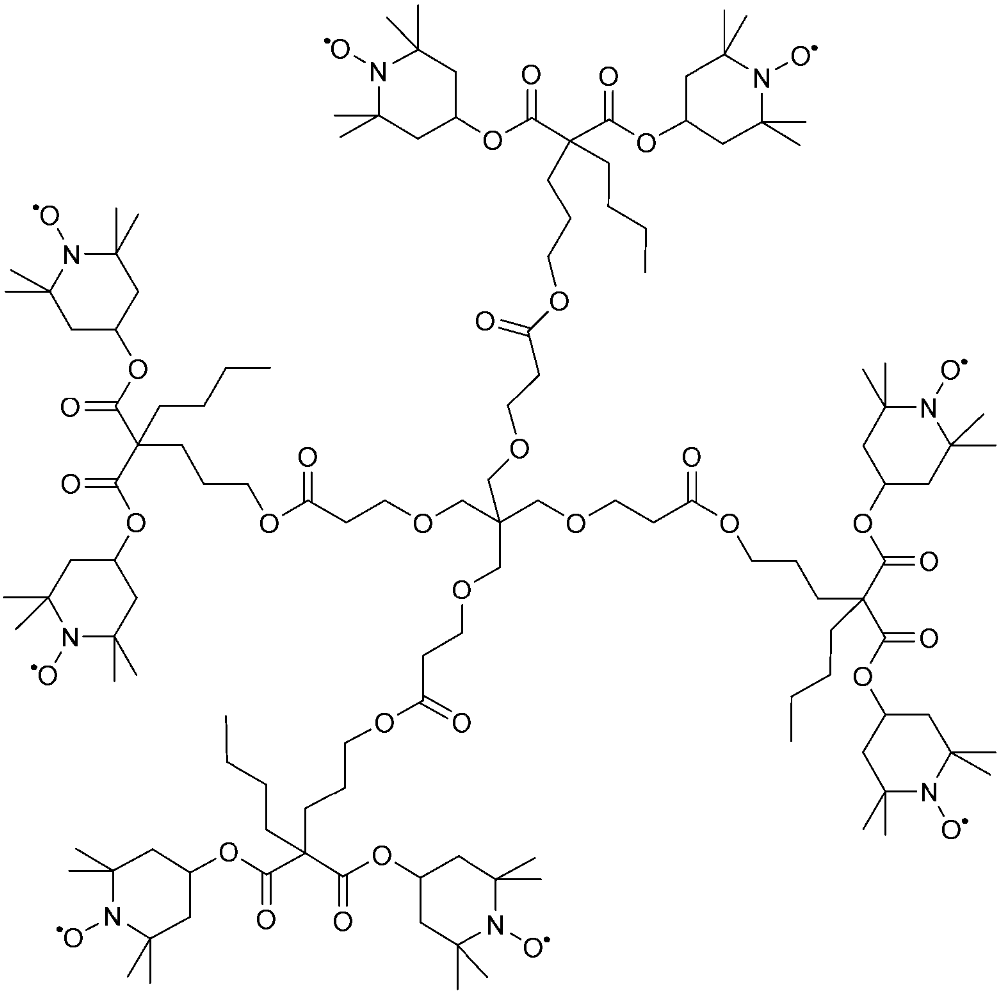

H-3-16

Mixture Example M19

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 96 °C |
| 2 | CC-3-2V1 | 2.85 | Δn (20 °C, 589 nm) | = | 0.1009 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.4 |
| 5 | CCP-V-1 | 3.8 | Δε (20 °C, 1 kHz) | = | 2.9 |
| 6 | CCP-V2-1 | 11.4 | $K_1$ (20 °C) | = | 16.2 pN |
| 7 | CCVC-3-V | 5.7 | $K_3$ (20 °C) | = | 18.3 pN |
| 8 | CDUQU-3-F | 6.65 | | | |
| 9 | CLP-V-1 | 7.6 | | | |
| 10 | PYP-2-3 | 6.175 | | | |

(continued)

| Composition | | | Properties |
|---|---|---|---|
| Nr. | Comp. | Conc., wt.-% | |
| 11 | DGUQU-4-F | 3.325 | |
| 12 | LB(S)-3-OT | 1.9 | |
| 13 | PCH-302 | 1.9 | |
| 14 | PP-1-2V1 | 3.325 | |
| 15 | LY-3-O2 | 5.0 | |

Mixture Example S19 (stabilised with compound of Formula H-3-17)

A nematic LC mixture according to the invention is formulated as follows:

| | |
|---|---|
| Mixture M19 | 99.99 wt.-% |
| Compound of Formula H-3-17 | 100 ppm |

Addition of 100 ppm of the compound of the Formula H-3-17 significantly improves the $VHR_{100}$ after UV exposure compared to the non-stabilized mixture M19, without affecting the remaining physical properties of the mixture.

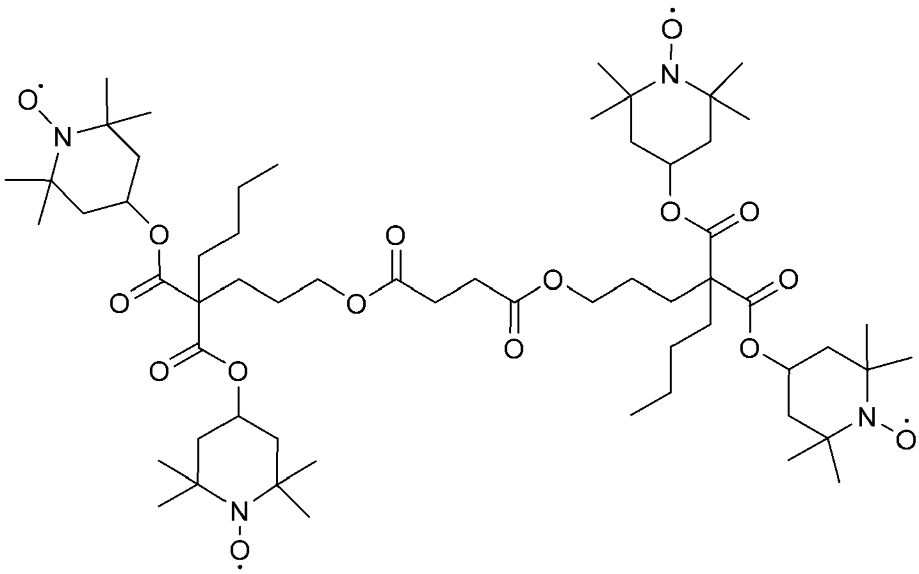

H-3-17

Mixture Example M20

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 89.5 °C |
| 2 | CC-3-2V1 | 2.85 | Δn (20 °C, 589 nm) | = | 0.0954 |
| 3 | CC-3-V | 31.825 | $\varepsilon_{\parallel}$ (20 °C, 1 kHz) | = | 6.4 |
| 4 | CC-3-V1 | 6.65 | $\varepsilon_{\perp}$ (20 °C, 1 kHz) | = | 3.8 |
| 5 | CCP-V-1 | 3.8 | Δε (20 °C, 1 kHz) | = | 2.6 |
| 6 | CCP-V2-1 | 11.4 | $K_1$ (20 °C) | = | 15.3 pN |
| 7 | CCVC-3-V | 5.7 | $K_3$ (20 °C) | = | 17.8 pN |
| 8 | CDUQU-3-F | 6.65 | | | |

(continued)

| Composition | | | Properties |
|---|---|---|---|
| Nr. | Comp. | Conc., wt.-% | |
| 9 | CLP-V-1 | 7.6 | |
| 10 | PY-V2-O2 | 6.175 | |
| 11 | DGUQU-4-F | 3.325 | |
| 12 | LB(S)-3-OT | 1.9 | |
| 13 | PCH-302 | 1.9 | |
| 14 | PP-1-2V1 | 3.325 | |
| 15 | LY-3-O2 | 5.0 | |

Mixture Example S20 (stabilised with compound of Formula H-3-15)

A nematic LC mixture according to the invention is formulated as follows:

| | |
|---|---|
| Mixture M20 | 99.99 wt.-% |
| Compound of Formula H-3-15 | 100 ppm |

Addition of 100 ppm of the compound of the Formula H-3-15 significantly improves the $VHR_{100}$ after UV exposure compared to the non-stabilized mixture M20, without affecting the remaining physical properties of the mixture.

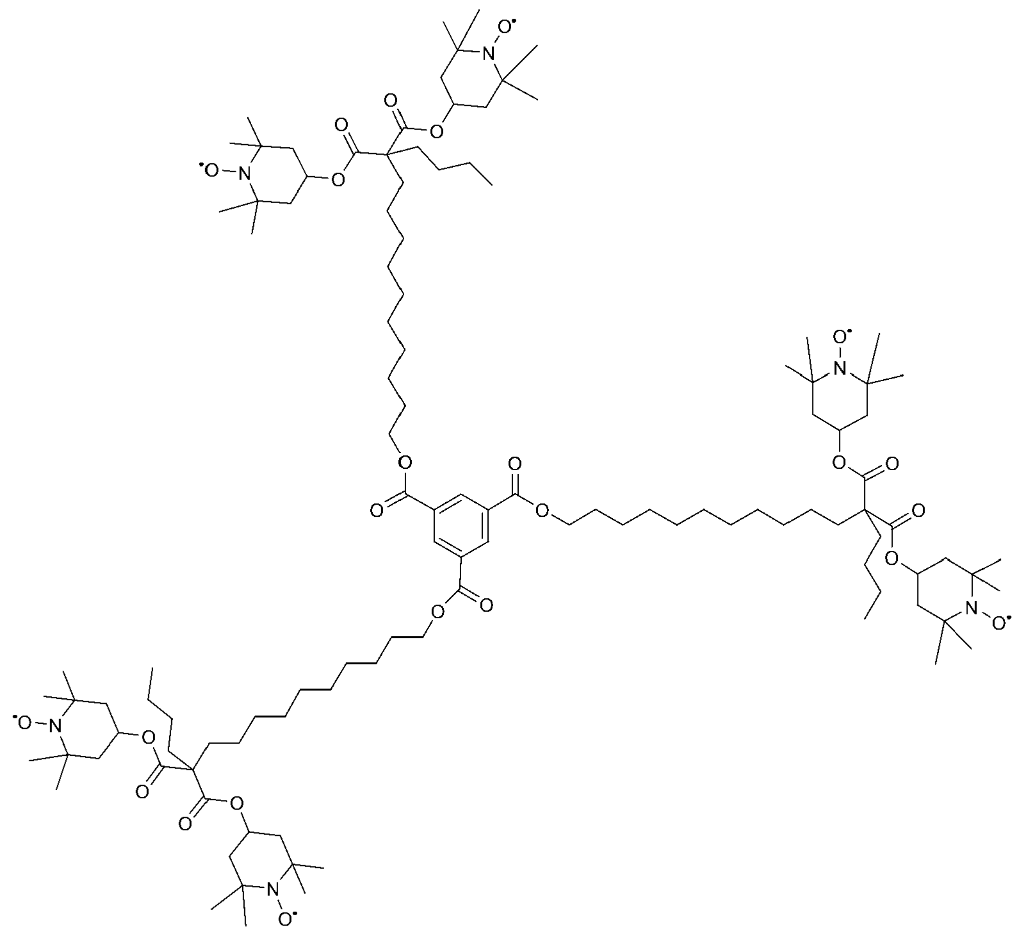

H-3-15

Mixture Example M21

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 99.5 °C |
| 2 | CC-3-2V1 | 2.85 | Δn (20 °C, 589 nm) | = | 0.0926 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.7 |
| 5 | CCP-V-1 | 3.8 | Δε (20 °C, 1 kHz) | = | 2.6 |
| 6 | CCP-V2-1 | 11.4 | $K_1$ (20 °C) | = | 16.5 pN |
| 7 | CCVC-3-V | 5.7 | $K_3$ (20 °C) | = | 19.4 pN |
| 8 | CDUQU-3-F | 6.65 | | | |
| 9 | CLP-V-1 | 7.6 | | | |
| 10 | CCY-V-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S21 (stabilised with compounds of Formulae H-3-6 and ST-1-3)

A nematic LC mixture according to the invention is formulated as follows:

| | |
|---|---|
| Mixture M21 | 99.965 wt.-% |
| Compound of Formula H-3-6 | 50 ppm |
| Compound of Formula ST-1-3 | 300 ppm |

Addition of compounds of Formulae H-3-6 and ST-1-3 significantly improves the $VHR_{100}$ after UV exposure compared to the non-stabilized mixture M21, without affecting the remaining physical properties of the mixture.

Mixture Example M22

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 99.5 °C |
| 2 | CC-3-2V1 | 2.85 | Δn (20 °C, 589 nm) | = | 0.0963 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.5 |
| 5 | CCP-V-1 | 3.8 | Δε (20 °C, 1 kHz) | = | 2.8 |
| 6 | CCP-V2-1 | 11.4 | $K_1$ (20 °C) | = | 16.8 pN |
| 7 | CCVC-3-V | 5.7 | $K_3$ (20 °C) | = | 19.7 pN |
| 8 | CDUQU-3-F | 6.65 | | | |
| 9 | CLP-V-1 | 7.6 | | | |
| 10 | CPY-3-O2 | 6.175 | | | |
| 11 | DGUQU-4-F | 3.325 | | | |

(continued)

| Composition | | | Properties |
|---|---|---|---|
| Nr. | Comp. | Conc., wt.-% | |
| 12 | LB(S)-3-OT | 1.9 | |
| 13 | PCH-302 | 1.9 | |
| 14 | PP-1-2V1 | 3.325 | |
| 15 | LY-3-O2 | 5.0 | |

Mixture Example S22 (stabilised with compounds of Formulae H-3-1 and ST-1-3)

A nematic LC mixture according to the invention is formulated as follows:

| | |
|---|---|
| Mixture M22 | 99.88 wt.-% |
| Compound of Formula H-3-1 | 800 ppm |
| Compound of Formula ST-1-3 | 400 ppm |

Addition of compounds of Formulae H-3-1 and ST-1-3 significantly improves the $VHR_{100}$ after UV exposure compared to the non-stabilized mixture M22, without affecting the remaining physical properties of the mixture.

Mixture Example M23

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 98.5 °C |
| 2 | CC-3-2V1 | 2.85 | Δn (20 °C, 589 nm) | = | 0.0969 |
| 3 | CC-3-V | 31.825 | $\varepsilon_{\parallel}$ (20 °C, 1 kHz) | = | 6.4 |
| 4 | CC-3-V1 | 6.65 | $\varepsilon_{\perp}$ (20 °C, 1 kHz) | = | 3.7 |
| 5 | CCP-V-1 | 3.8 | Δε (20 °C, 1 kHz) | = | 2.7 |
| 6 | CCP-V2-1 | 11.4 | $K_1$ (20 °C) | = | 16.5 pN |
| 7 | CCVC-3-V | 5.7 | $K_3$ (20 °C) | = | 19.2 pN |
| 8 | CDUQU-3-F | 6.65 | | | |
| 9 | CLP-V-1 | 7.6 | | | |
| 10 | CPY-V-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S23 (stabilised with compounds of Formulae H-3-1 and ST-2-3)

A nematic LC mixture according to the invention is formulated as follows:

| | |
|---|---|
| Mixture M23 | 99.88 wt.-% |
| Compound of Formula H-3-1 | 800 ppm |
| Compound of Formula ST-2-3 | 400 ppm |

Addition of compounds of Formulae H-3-1 and ST-2-3 significantly improves the $VHR_{100}$ after UV exposure compared to the non-stabilized mixture M23, without affecting the remaining physical properties of the mixture.

Mixture Example M24

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 106 °C |
| 2 | CC-3-2V1 | 5.0 | Δn (20 °C, 589 nm) | = | 0.0909 |
| 3 | CC-3-V | 23.0 | $\varepsilon_{\parallel}$ (20 °C, 1 kHz) | = | 6.8 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.2 |
| 6 | DCU-3-F | 4.0 | $K_1$ (20 °C) | = | 19.1 pN |
| 7 | CCP-V-1 | 5.3 | $K_3$ (20 °C) | = | 21.8 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S24 (stabilised with compounds of Formulae H-3-3 and ST-1-3)

A nematic LC mixture according to the invention is formulated as follows:

| | |
|---|---|
| Mixture M24 | 99.91 wt.-% |
| Compound of Formula H-3-3 | 700 ppm |
| Compound of Formula ST-1-3 | 200 ppm |

Addition of compounds of Formulae H-3-3 and ST-1-3 significantly improves the $VHR_{100}$ after UV exposure compared to the non-stabilized mixture M24, without affecting the remaining physical properties of the mixture.

Mixture Example M25

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109 °C |
| 2 | CC-3-2V1 | 5.0 | Δn (20 °C, 589 nm) | = | 0.0921 |
| 3 | CC-3-V | 23.0 | $\varepsilon_{\parallel}$ (20 °C, 1 kHz) | = | 6.4 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.9 |
| 6 | CLU-3-F | 4.0 | $K_1$ (20 °C) | = | 19.9 pN |
| 7 | CCP-V-1 | 5.3 | $K_3$ (20 °C) | = | 22.4 pN |

(continued)

| Composition | | | Properties |
|---|---|---|---|
| Nr. | Comp. | Conc., wt.-% | |
| 8 | CCP-V2-1 | 10.0 | |
| 9 | CCVC-3-V | 7.0 | |
| 10 | CDUQU-3-F | 5.5 | |
| 11 | CLP-3-T | 6.0 | |
| 12 | CLY-3-O2 | 6.0 | |
| 13 | DGUQU-4-F | 3.0 | |
| 14 | LB(S)-3-OT | 3.0 | |
| 15 | LY-3-O2 | 3.5 | |
| 16 | PCH-302 | 5.0 | |
| 17 | PGP-1-2V | 0.3 | |

Mixture Example S25 (stabilised with compounds of Formulae H-3-4 and ST-2-3)

A nematic LC mixture according to the invention is formulated as follows:

| | |
|---|---|
| Mixture M25 | 99.972 wt.-% |
| Compound of Formula H-3-4 | 80 ppm |
| Compound of Formula ST-2-3 | 200 ppm |

Addition of compounds of Formulae H-3-4 and ST-2-3 significantly improves the $VHR_{100}$ after UV exposure compared to the non-stabilized mixture M25, without affecting the remaining physical properties of the mixture.

Mixture Example M26

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109.5 °C |
| 2 | CC-3-2V1 | 5.0 | Δn (20 °C, 589 nm) | = | 0.0924 |
| 3 | CC-3-V | 23.0 | $\varepsilon_{\parallel}$ (20 °C, 1 kHz) | = | 6.8 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 3.3 |
| 6 | CLU-3-T | 4.0 | $K_1$ (20 °C) | = | 19.9 pN |
| 7 | CCP-V-1 | 5.3 | $K_3$ (20 °C) | = | 21.9 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S26 (stabilised with compounds of Formulae H-3-6 and ST-2-3)

A nematic LC mixture according to the invention is formulated as follows:

| | |
|---|---|
| Mixture M26 | 99.97 wt.-% |
| Compound of Formula H-3-6 | 100 ppm |
| Compound of Formula ST-2-3 | 300 ppm |

Addition of compounds of Formulae H-3-6 and ST-2-3 significantly improves the $VHR_{100}$ after UV exposure compared to the non-stabilized mixture M26, without affecting the remaining physical properties of the mixture.

Mixture Example M27

A nematic LC medium is formulated as follows:

| Composition | | | Properties | | |
|---|---|---|---|---|---|
| **Nr.** | **Comp.** | **Conc., wt.-%** | | | |
| 1 | APUQU-3-F | 1.9 | T(N, I) | = | 98.5 °C |
| 2 | CC-3-2V1 | 2.85 | Δn (20 °C, 589 nm) | = | 0.0964 |
| 3 | CC-3-V | 31.825 | $\varepsilon_{\parallel}$ (20 °C, 1 kHz) | = | 6.6 |
| 4 | CC-3-V1 | 6.65 | $\varepsilon_{\perp}$ (20 °C, 1 kHz) | = | 4.0 |
| 5 | CCP-V-1 | 3.8 | Δε (20 °C, 1 kHz) | = | 2.6 |
| 6 | CCP-V2-1 | 11.4 | $K_1$ (20 °C) | = | 16.4 pN |
| 7 | CCVC-3-V | 5.7 | $K_3$ (20 °C) | = | 19.2 pN |
| 8 | CDUQU-3-F | 6.65 | | | |
| 9 | CLP-V-1 | 7.6 | | | |
| 10 | APY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S27 (stabilised with compounds of Formulae H-3-7 and ST-2-3)

A nematic LC mixture according to the invention is formulated as follows:

| | |
|---|---|
| Mixture M27 | 99.91 wt.-% |
| Compound of Formula H-3-7 | 500 ppm |
| Compound of Formula ST-2-3 | 400 ppm |

Addition of compounds of Formulae H-3-7 and ST-2-3 significantly improves the $VHR_{100}$ after UV exposure compared to the non-stabilized mixture M27, without affecting the remaining physical properties of the mixture.

Mixture Example M28

A nematic LC medium is formulated as follows:

| Composition | | | Properties | | |
|---|---|---|---|---|---|
| Nr. | Comp. | Conc., wt.-% | | | |
| 1 | APUQU-3-F | 1.9 | T(N, I) | = | 101.5 °C |
| 2 | CC-3-2V1 | 2.85 | Δn (20 °C, 589 nm) | = | 0.1020 |
| 3 | CC-3-V | 31.825 | $\varepsilon_{\parallel}$ (20 °C, 1 kHz) | = | 6.3 |
| 4 | CC-3-V1 | 6.65 | $\varepsilon_{\perp}$ (20 °C, 1 kHz) | = | 3.6 |
| 5 | CCP-V-1 | 3.8 | Δε (20 °C, 1 kHz) | = | 2.7 |
| 6 | CCP-V2-1 | 11.4 | $K_1$ (20 °C) | = | 17.2 pN |
| 7 | CCVC-3-V | 5.7 | $K_3$ (20 °C) | = | 19.9 pN |
| 8 | CDUQU-3-F | 6.65 | | | |
| 9 | CLP-V-1 | 7.6 | | | |
| 10 | PPY-3-O2 | 6.175 | | | |
| 11 | DGUQU-4-F | 3.325 | | | |
| 12 | LB(S)-3-OT | 1.9 | | | |
| 13 | PCH-302 | 1.9 | | | |
| 14 | PP-1-2V1 | 3.325 | | | |
| 15 | LY-3-O2 | 5.0 | | | |

Mixture Example S28 (stabilised with compounds of Formulae H-3-8 and ST-1-3)

A nematic LC mixture according to the invention is formulated as follows:

| | |
|---|---|
| Mixture M28 | 99.91 wt.-% |
| Compound of Formula H-3-8 | 700 ppm |
| Compound of Formula ST-1-3 | 200 ppm |

Addition of compounds of Formulae H-3-8 and ST-1-3 significantly improves the $VHR_{100}$ after UV exposure compared to the non-stabilized mixture M28, without affecting the remaining physical properties of the mixture.

Mixture Example M29

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109.5 °C |
| 2 | CC-3-2V1 | 5.0 | Δn (20 °C, 589 nm) | = | 0.0920 |
| 3 | CC-3-V | 23.0 | $\varepsilon_{\parallel}$ (20 °C, 1 kHz) | = | 6.6 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.1 |
| 6 | CLU-3-OT | 4.0 | $K_1$ (20 °C) | = | 19.6 pN |
| 7 | CCP-V-1 | 5.3 | $K_3$ (20 °C) | = | 21.8 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |

(continued)

| Composition | | | Properties |
|---|---|---|---|
| Nr. | Comp. | Conc., wt.-% | |
| 16 | PCH-302 | 5.0 | |
| 17 | PGP-1-2V | 0.3 | |

Mixture Example S29 (stabilised with compounds of Formulae H-3-8 and ST-2-3)

A nematic LC mixture according to the invention is formulated as follows:

| | |
|---|---|
| Mixture M29 | 99.89 wt.-% |
| Compound of Formula H-3-8 | 700 ppm |
| Compound of Formula ST-2-3 | 400 ppm |

Addition of compounds of Formulae H-3-8 and ST-2-3 significantly improves the $VHR_{100}$ after UV exposure compared to the non-stabilized mixture M29, without affecting the remaining physical properties of the mixture.

Mixture Example M30

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 108 °C |
| 2 | CC-3-2V1 | 5.0 | Δn (20 °C, 589 nm) | = | 0.0931 |
| 3 | CC-3-V | 23.0 | $\varepsilon_{\parallel}$ (20 °C, 1 kHz) | = | 6.6 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.0 |
| 6 | CPU-3-F | 4.0 | $K_1$ (20 °C) | = | 19.0 pN |
| 7 | CCP-V-1 | 5.3 | $K_3$ (20 °C) | = | 21.4 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S30 (stabilised with compounds of Formulae H-3-8 and ST-4-2)

A nematic LC mixture according to the invention is formulated as follows:

| | |
|---|---|
| Mixture M30 | 99.88 wt.-% |
| Compound of Formula H-3-1 | 700 ppm |
| Compound of Formula ST-4-2 | 500 ppm |

Addition of compounds of Formulae H-3-8 and ST-4-2 significantly improves the $VHR_{100}$ after UV exposure compared to the non-stabilized mixture M30, without affecting the remaining physical properties of the mixture.

Mixture Example M31

A nematic LC medium is formulated as follows:

| Composition | | | Properties | | |
|---|---|---|---|---|---|
| **Nr.** | **Comp.** | **Conc., wt.-%** | | | |
| 1 | B(S)-2O-O5 | 0.4 | T(N, I) | = | 107 °C |
| 2 | CC-3-2V1 | 5.0 | $\Delta n$ (20 °C, 589 nm) | = | 0.0933 |
| 3 | CC-3-V | 23.0 | $\varepsilon_{\parallel}$ (20 °C, 1 kHz) | = | 7.2 |
| 4 | CC-3-V1 | 8.0 | $\varepsilon_{\perp}$ (20 °C, 1 kHz) | = | 3.6 |
| 5 | CCP-3-1 | 5.0 | $\Delta\varepsilon$ (20 °C, 1 kHz) | = | 3.6 |
| 6 | DGU-3-F | 4.0 | $K_1$ (20 °C) | = | 18.9 pN |
| 7 | CCP-V-1 | 5.3 | $K_3$ (20 °C) | = | 21.8 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S31 (stabilised with compounds of Formulae H-3-2 and ST-1-3)

A nematic LC mixture according to the invention is formulated as follows:

| | |
|---|---|
| Mixture M31 | 99.95 wt.-% |
| Compound of Formula H-3-2 | 100 ppm |
| Compound of Formula ST-1-3 | 400 ppm |

Addition of compounds of Formulae H-3-2 and ST-1-3 significantly improves the $VHR_{100}$ after UV exposure compared to the non-stabilized mixture M31, without affecting the remaining physical properties of the mixture.

Mixture Example M32

A nematic LC medium is formulated as follows:

| Composition | | | Properties | | |
|---|---|---|---|---|---|
| **Nr.** | **Comp.** | **Conc., wt.-%** | | | |
| 1 | B(S)-2O-O5 | 0.4 | T(N, I) | = | 110.5 °C |
| 2 | CC-3-2V1 | 5.0 | $\Delta n$ (20 °C, 589 nm) | = | 0.0941 |
| 3 | CC-3-V | 23.0 | $\varepsilon_{\parallel}$ (20 °C, 1 kHz) | = | 6.3 |
| 4 | CC-3-V1 | 8.0 | $\varepsilon_{\perp}$ (20 °C, 1 kHz) | = | 3.5 |
| 5 | CCP-3-1 | 5.0 | $\Delta\varepsilon$ (20 °C, 1 kHz) | = | 2.8 |
| 6 | CPP-3-OT | 4.0 | $K_1$ (20 °C) | = | 19.9 pN |
| 7 | CCP-V-1 | 5.3 | $K_3$ (20 °C) | = | 22.2 pN |

(continued)

| Composition | | | Properties |
|---|---|---|---|
| Nr. | Comp. | Conc., wt.-% | |
| 8 | CCP-V2-1 | 10.0 | |
| 9 | CCVC-3-V | 7.0 | |
| 10 | CDUQU-3-F | 5.5 | |
| 11 | CLP-3-T | 6.0 | |
| 12 | CLY-3-O2 | 6.0 | |
| 13 | DGUQU-4-F | 3.0 | |
| 14 | LB(S)-3-OT | 3.0 | |
| 15 | LY-3-O2 | 3.5 | |
| 16 | PCH-302 | 5.0 | |
| 17 | PGP-1-2V | 0.3 | |

Mixture Example S32 (stabilised with compounds of Formulae H-3-2 and ST-2-3)

A nematic LC mixture according to the invention is formulated as follows:

| | |
|---|---|
| Mixture M32 | 99.94 wt.-% |
| Compound of Formula H-3-2 | 100 ppm |
| Compound of Formula ST-2-3 | 500 ppm |

Addition of compounds of Formulae H-3-2 and ST-2-3 significantly improves the $VHR_{100}$ after UV exposure compared to the non-stabilized mixture M32, without affecting the remaining physical properties of the mixture.

Mixture Example M33

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 107 °C |
| 2 | CC-3-2V1 | 5.0 | Δn (20 °C, 589 nm) | = | 0.0926 |
| 3 | CC-3-V | 23.0 | $\varepsilon_{\parallel}$ (20 °C, 1 kHz) | = | 6.6 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.0 |
| 6 | CGU-3-F | 4.0 | $K_1$ (20 °C) | = | 18.6 pN |
| 7 | CCP-V-1 | 5.3 | $K_3$ (20 °C) | = | 21.0 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S33 (stabilised with compounds of Formulae H-3-3 and ST-2-3)

A nematic LC mixture according to the invention is formulated as follows:

| | |
|---|---|
| Mixture M33 | 99.9 wt.-% |
| Compound of Formula H-3-3 | 500 ppm |
| Compound of Formula ST-2-3 | 500 ppm |

Addition of compounds of Formulae H-3-3 and ST-2-3 significantly improves the $VHR_{100}$ after UV exposure compared to the non-stabilized mixture M33, without affecting the remaining physical properties of the mixture.

Mixture Example M34

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 110 °C |
| 2 | CC-3-2V1 | 5.0 | Δn (20 °C, 589 nm) | = | 0.0942 |
| 3 | CC-3-V | 23.0 | $\varepsilon_{\parallel}$ (20 °C, 1 kHz) | = | 6.6 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.0 |
| 6 | CPU-3-OXF | 4.0 | $K_1$ (20 °C) | = | 19.5 pN |
| 7 | CCP-V-1 | 5.3 | $K_3$ (20 °C) | = | 21.7 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S34 (stabilised with compounds of Formulae H-3-3 and ST-1-3)

A nematic LC mixture according to the invention is formulated as follows:

| | |
|---|---|
| Mixture M34 | 99.88 wt.-% |
| Compound of Formula H-3-3 | 700 ppm |
| Compound of Formula ST-1-3 | 500 ppm |

Addition of compounds of Formulae H-3-3 and ST-1-3 significantly improves the $VHR_{100}$ after UV exposure compared to the non-stabilized mixture M34, without affecting the remaining physical properties of the mixture.

Mixture Example M35

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 107.5 °C |
| 2 | CC-3-2V1 | 5.0 | Δn (20 °C, 589 nm) | = | 0.0963 |
| 3 | CC-3-V | 23.0 | $\varepsilon_{\parallel}$ (20 °C, 1 kHz) | = | 6.8 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.2 |
| 6 | PGU-3-F | 4.0 | $K_1$ (20 °C) | = | 19.3 pN |
| 7 | CCP-V-1 | 5.3 | $K_3$ (20 °C) | = | 21.0 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S35 (stabilised with compounds of Formulae H-3-4 and ST-1-3)

A nematic LC mixture according to the invention is formulated as follows:

| | |
|---|---|
| Mixture M35 | 99.94 wt.-% |
| Compound of Formula H-3-4 | 100 ppm |
| Compound of Formula ST-1-3 | 500 ppm |

Addition of compounds of Formulae H-3-4 and ST-1-3 significantly improves the $VHR_{100}$ after UV exposure compared to the non-stabilized mixture M35, without affecting the remaining physical properties of the mixture.

Mixture Example M36

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 107.5 °C |
| 2 | CC-3-2V1 | 5.0 | Δn (20 °C, 589 nm) | = | 0.0961 |
| 3 | CC-3-V | 23.0 | $\varepsilon_{\parallel}$ (20 °C, 1 kHz) | = | 7.1 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.5 |
| 6 | PGU-3-T | 4.0 | $K_1$ (20 °C) | = | 18.9 pN |
| 7 | CCP-V-1 | 5.3 | $K_3$ (20 °C) | = | 20.9 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |

(continued)

| Composition | | | Properties |
|---|---|---|---|
| Nr. | Comp. | Conc., wt.-% | |
| 14 | LB(S)-3-OT | 3.0 | |
| 15 | LY-3-O2 | 3.5 | |
| 16 | PCH-302 | 5.0 | |
| 17 | PGP-1-2V | 0.3 | |

Mixture Example S36 (stabilised with compounds of Formulae H-3-4 and ST-2-3)

A nematic LC mixture according to the invention is formulated as follows:

| | |
|---|---|
| Mixture M36 | 99.94 wt.-% |
| Compound of Formula H-3-4 | 100 ppm |
| Compound of Formula ST-2-3 | 500 ppm |

Addition of compounds of Formulae H-3-4 and ST-2-3 significantly improves the $VHR_{100}$ after UV exposure compared to the non-stabilized mixture M36, without affecting the remaining physical properties of the mixture.

Mixture Example M37

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109 °C |
| 2 | CC-3-2V1 | 5.0 | Δn (20 °C, 589 nm) | = | 0.0974 |
| 3 | CC-3-V | 23.0 | $\varepsilon_{\parallel}$ (20 °C, 1 kHz) | = | 6.4 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.9 |
| 6 | PGP-3-F | 4.0 | $K_1$ (20 °C) | = | 19.5 pN |
| 7 | CCP-V-1 | 5.3 | $K_3$ (20 °C) | = | 21.5 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S37 (stabilised with compounds of Formulae H-3-5 and ST-1-3)

A nematic LC mixture according to the invention is formulated as follows:

| | |
|---|---|
| Mixture M37 | 99.95 wt.-% |
| Compound of Formula H-3-5 | 100 ppm |

(continued)

| | |
|---|---|
| Compound of Formula ST-1-3 | 400 ppm |

Addition of compounds of Formulae H-3-5 and ST-1-3 significantly improves the $VHR_{100}$ after UV exposure compared to the non-stabilized mixture M37, without affecting the remaining physical properties of the mixture.

Mixture Example M38

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 110 °C |
| 2 | CC-3-2V1 | 5.0 | Δn (20 °C, 589 nm) | = | 0.0991 |
| 3 | CC-3-V | 23.0 | $\varepsilon_{\parallel}$ (20 °C, 1 kHz) | = | 6.3 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.8 |
| 6 | PGS-3-F | 4.0 | $K_1$ (20 °C) | = | 20.3 pN |
| 7 | CCP-V-1 | 5.3 | $K_3$ (20 °C) | = | 22.0 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S38 (stabilised with compounds of Formulae H-3-5 and ST-2-3)

A nematic LC mixture according to the invention is formulated as follows:

| | |
|---|---|
| Mixture M38 | 99.95 wt.-% |
| Compound of Formula H-3-5 | 100 ppm |
| Compound of Formula ST-2-3 | 400 ppm |

Addition of compounds of Formulae H-3-5 and ST-2-3 significantly improves the $VHR_{100}$ after UV exposure compared to the non-stabilized mixture M37, without affecting the remaining physical properties of the mixture.

Mixture Example M39

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109 °C |
| 2 | CC-3-2V1 | 5.0 | Δn (20 °C, 589 nm) | = | 0.0979 |
| 3 | CC-3-V | 23.0 | $\varepsilon_{\parallel}$ (20 °C, 1 kHz) | = | 6.6 |

(continued)

| Composition | | | Properties | | |
|---|---|---|---|---|---|
| Nr. | Comp. | Conc., wt.-% | | | |
| 4 | CC-3-V1 | 8.0 | $\varepsilon_{\perp}$ (20 °C, 1 kHz) | = | 3.6 |
| 5 | CCP-3-1 | 5.0 | $\Delta\varepsilon$ (20 °C, 1 kHz) | = | 3.0 |
| 6 | PGS-3-T | 4.0 | $K_1$ (20 °C) | = | 19.9 pN |
| 7 | CCP-V-1 | 5.3 | $K_3$ (20 °C) | = | 21.3 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S39 (stabilised with compounds of Formulae H-3-6 and ST-1-3)

A nematic LC mixture according to the invention is formulated as follows:

| | |
|---|---|
| Mixture M39 | 99.96 wt.-% |
| Compound of Formula H-3-6 | 100 ppm |
| Compound of Formula ST-1-3 | 300 ppm |

Addition of compounds of Formulae H-3-6 and ST-1-3 significantly improves the $VHR_{100}$ after UV exposure compared to the non-stabilized mixture M39, without affecting the remaining physical properties of the mixture.

Mixture Example M40

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 109 °C |
| 2 | CC-3-2V1 | 5.0 | $\Delta n$ (20 °C, 589 nm) | = | 0.0983 |
| 3 | CC-3-V | 23.0 | $\varepsilon_{\parallel}$ (20 °C, 1 kHz) | = | 6.3 |
| 4 | CC-3-V1 | 8.0 | $\varepsilon_{\perp}$ (20 °C, 1 kHz) | = | 3.5 |
| 5 | CCP-3-1 | 5.0 | $\Delta\varepsilon$ (20 °C, 1 kHz) | = | 2.8 |
| 6 | PUS-3-F | 4.0 | $K_1$ (20 °C) | = | 19.7 pN |
| 7 | CCP-V-1 | 5.3 | $K_3$ (20 °C) | = | 21.9 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |

(continued)

| Composition | | | Properties | | |
|---|---|---|---|---|---|
| Nr. | Comp. | Conc., wt.-% | | | |
| 16 | PCH-302 | 5.0 | | | |
| 17 | PGP-1-2V | 0.3 | | | |

Mixture Example S40 (stabilised with compounds of Formulae H-3-6 and ST-2-3)

A nematic LC mixture according to the invention is formulated as follows:

| | |
|---|---|
| Mixture M40 | 99.96 wt.-% |
| Compound of Formula H-3-6 | 100 ppm |
| Compound of Formula ST-2-3 | 300 ppm |

Addition of compounds of Formulae H-3-6 and ST-2-3 significantly improves the $VHR_{100}$ after UV exposure compared to the non-stabilized mixture M40, without affecting the remaining physical properties of the mixture.

Mixture Example M41

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 108 °C |
| 2 | CC-3-2V1 | 5.0 | Δn (20 °C, 589 nm) | = | 0.0974 |
| 3 | CC-3-V | 23.0 | $\varepsilon_{\parallel}$ (20 °C, 1 kHz) | = | 6.7 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.1 |
| 6 | PUS-3-T | 4.0 | $K_1$ (20 °C) | = | 19.9 pN |
| 7 | CCP-V-1 | 5.3 | $K_3$ (20 °C) | = | 21.4 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S41 (stabilised with compounds of Formulae H-3-7 and ST-1-3)

A nematic LC mixture according to the invention is formulated as follows:

| | |
|---|---|
| Mixture M41 | 99.92 wt.-% |
| Compound of Formula H-3-7 | 500 ppm |
| Compound of Formula ST-1-3 | 300 ppm |

Addition of compounds of Formulae H-3-7 and ST-1-3 significantly improves the $VHR_{100}$ after UV exposure compared to the non-stabilized mixture M41, without affecting the remaining physical properties of the mixture.

Mixture Example M42

A nematic LC medium is formulated as follows:

| Composition | | | Properties | | |
|---|---|---|---|---|---|
| **Nr.** | **Comp.** | **Conc., wt.-%** | | | |
| 1 | B(S)-2O-O5 | 0.4 | T(N, I) | = | 115 °C |
| 2 | CC-3-2V1 | 5.0 | Δn (20 °C, 589 nm) | = | 0.0944 |
| 3 | CC-3-V | 23.0 | $\varepsilon_{\parallel}$ (20 °C, 1 kHz) | = | 6.5 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 3.0 |
| 6 | CCPU-3-F | 4.0 | $K_1$ (20 °C) | = | 20.5 pN |
| 7 | CCP-V-1 | 5.3 | $K_3$ (20 °C) | = | 21.9 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S42 (stabilised with compounds of Formulae H-3-7 and ST-2-3)

A nematic LC mixture according to the invention is formulated as follows:

| | |
|---|---|
| Mixture M42 | 99.92 wt.-% |
| Compound of Formula H-3-7 | 500 ppm |
| Compound of Formula ST-2-3 | 300 ppm |

Addition of compounds of Formulae H-3-7 and ST-2-3 significantly improves the $VHR_{100}$ after UV exposure compared to the non-stabilized mixture M42, without affecting the remaining physical properties of the mixture.

Mixture Example M43

A nematic LC medium is formulated as follows:

| Composition | | | Properties | | |
|---|---|---|---|---|---|
| **Nr.** | **Comp.** | **Conc., wt.-%** | | | |
| 1 | B(S)-2O-O5 | 0.4 | T(N, I) | = | 114 °C |
| 2 | CC-3-2V1 | 5.0 | Δn (20 °C, 589 nm) | = | 0.0952 |
| 3 | CC-3-V | 23.0 | $\varepsilon_{\parallel}$ (20 °C, 1 kHz) | = | 6.7 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.1 |
| 6 | CLGU-4-F | 4.0 | $K_1$ (20 °C) | = | 20.2 pN |
| 7 | CCP-V-1 | 5.3 | $K_3$ (20 °C) | = | 21.5 pN |

(continued)

| Composition | | | Properties |
|---|---|---|---|
| Nr. | Comp. | Conc., wt.-% | |
| 8 | CCP-V2-1 | 10.0 | |
| 9 | CCVC-3-V | 7.0 | |
| 10 | CDUQU-3-F | 5.5 | |
| 11 | CLP-3-T | 6.0 | |
| 12 | CLY-3-O2 | 6.0 | |
| 13 | DGUQU-4-F | 3.0 | |
| 14 | LB(S)-3-OT | 3.0 | |
| 15 | LY-3-O2 | 3.5 | |
| 16 | PCH-302 | 5.0 | |
| 17 | PGP-1-2V | 0.3 | |

Mixture Example S43 (stabilised with compounds of Formulae H-3-8 and ST-1-3)

A nematic LC mixture according to the invention is formulated as follows:

| | |
|---|---|
| Mixture M43 | 99.9 wt.-% |
| Compound of Formula H-3-8 | 500 ppm |
| Compound of Formula ST-1-3 | 500 ppm |

Addition of compounds of Formulae H-3-8 and ST-1-3 significantly improves the $VHR_{100}$ after UV exposure compared to the non-stabilized mixture M43, without affecting the remaining physical properties of the mixture.

Mixture Example M44

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 112 °C |
| 2 | CC-3-2V1 | 5.0 | Δn (20 °C, 589 nm) | = | 0.0953 |
| 3 | CC-3-V | 23.0 | $\varepsilon_{\parallel}$ (20 °C, 1 kHz) | = | 7.1 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.5 |
| 6 | DLGU-3-F | 4.0 | $K_1$ (20 °C) | = | 20.5 pN |
| 7 | CCP-V-1 | 5.3 | $K_3$ (20 °C) | = | 21.1 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S44 (stabilised with compounds of Formulae H-3-8 and ST-2-3)

A nematic LC mixture according to the invention is formulated as follows:

| | |
|---|---|
| Mixture M44 | 99.9 wt.-% |
| Compound of Formula H-3-8 | 500 ppm |
| Compound of Formula ST-2-3 | 500 ppm |

Addition of compounds of Formulae H-3-8 and ST-2-3 significantly improves the $VHR_{100}$ after UV exposure compared to the non-stabilized mixture M44, without affecting the remaining physical properties of the mixture.

Mixture Example M45

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 111.5 °C |
| 2 | CC-3-2V1 | 5.0 | Δn (20 °C, 589 nm) | = | 0.0951 |
| 3 | CC-3-V | 23.0 | $\varepsilon_{\parallel}$ (20 °C, 1 kHz) | = | 7.2 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.6 |
| 6 | DLGU(1)-3-F | 4.0 | $K_1$ (20 °C) | = | 20.5 pN |
| 7 | CCP-V-1 | 5.3 | $K_3$ (20 °C) | = | 21.1 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

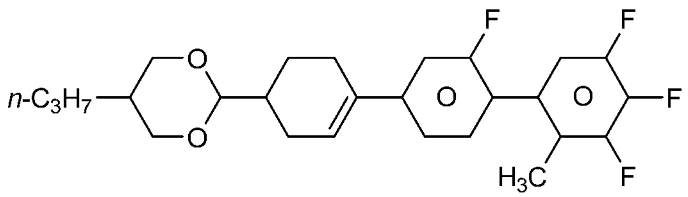

DLGU(1)-3-F

Mixture Example S45 (stabilised with compounds of Formulae H-3-9 and ST-2-3)

A nematic LC mixture according to the invention is formulated as follows:

| | |
|---|---|
| Mixture M45 | 99.96 wt.-% |
| Compound of Formula H-3-9 | 100 ppm |
| Compound of Formula ST-2-3 | 300 ppm |

Addition of compounds of Formulae H-3-9 and ST-2-3 significantly improves the $VHR_{100}$ after UV exposure compared to the non-stabilized mixture M45, without affecting the remaining physical properties of the mixture.

Mixture Example M46

A nematic LC medium is formulated as follows:

| Composition | | | Properties | | |
|---|---|---|---|---|---|
| **Nr.** | **Comp.** | **Conc., wt.-%** | | | |
| 1 | B(S)-2O-O5 | 0.4 | T(N, I) | = | 111.5 °C |
| 2 | CC-3-2V1 | 5.0 | $\Delta n$ (20 °C, 589 nm) | = | 0.0953 |
| 3 | CC-3-V | 23.0 | $\varepsilon_{\parallel}$ (20 °C, 1 kHz) | = | 7.0 |
| 4 | CC-3-V1 | 8.0 | $\varepsilon_{\perp}$ (20 °C, 1 kHz) | = | 3.6 |
| 5 | CCP-3-1 | 5.0 | $\Delta\varepsilon$ (20 °C, 1 kHz) | = | 3.4 |
| 6 | DLGU-(c5)-F | 4.0 | $K_1$ (20 °C) | = | 20.4 pN |
| 7 | CCP-V-1 | 5.3 | $K_3$ (20 °C) | = | 20.9 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

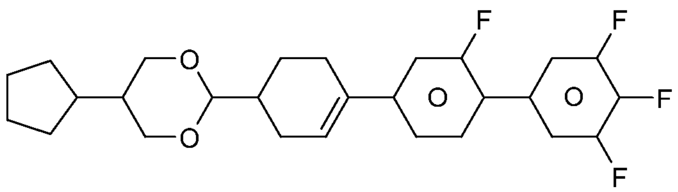

DLGU-(c5)-F

Mixture Example S46 (stabilised with compounds of Formulae H-3-9 and ST-1-3)

A nematic LC mixture according to the invention is formulated as follows:

| | |
|---|---|
| Mixture M46 | 99.96 wt.-% |
| Compound of Formula H-3-9 | 100 ppm |
| Compound of Formula ST-1-3 | 300 ppm |

Addition of compounds of Formulae H-3-9 and ST-1-3 significantly improves the $VHR_{100}$ after UV exposure compared to the non-stabilized mixture M46, without affecting the remaining physical properties of the mixture.

Mixture Example M47

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 112.5 °C |
| 2 | CC-3-2V1 | 5.0 | Δn (20 °C, 589 nm) | = | 0.0964 |
| 3 | CC-3-V | 23.0 | $\varepsilon_{\parallel}$ (20 °C, 1 kHz) | = | 7.2 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.6 |
| 6 | DPGU-4-F | 4.0 | $K_1$ (20 °C) | = | 20.3 pN |
| 7 | CCP-V-1 | 5.3 | $K_3$ (20 °C) | = | 21.1 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S47 (stabilised with compounds of Formulae H-3-10 and ST-1-3)

A nematic LC mixture according to the invention is formulated as follows:

| | |
|---|---|
| Mixture M47 | 99.96 wt.-% |
| Compound of Formula H-3-10 | 100 ppm |
| Compound of Formula ST-1-3 | 300 ppm |

Addition of compounds of Formulae H-3-10 and ST-1-3 significantly improves the $VHR_{100}$ after UV exposure compared to the non-stabilized mixture M47, without affecting the remaining physical properties of the mixture.

Mixture Example M48

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 112.5 °C |
| 2 | CC-3-2V1 | 5.0 | Δn (20 °C, 589 nm) | = | 0.0965 |
| 3 | CC-3-V | 23.0 | $\varepsilon_{\parallel}$ (20 °C, 1 kHz) | = | 7.2 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.6 |
| 6 | DPGU(1)-4-F | 4.0 | $K_1$ (20 °C) | = | 20.4 pN |
| 7 | CCP-V-1 | 5.3 | $K_3$ (20 °C) | = | 21.1 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |

(continued)

| Composition | | | Properties |
|---|---|---|---|
| Nr. | Comp. | Conc., wt.-% | |
| 14 | LB(S)-3-OT | 3.0 | |
| 15 | LY-3-O2 | 3.5 | |
| 16 | PCH-302 | 5.0 | |
| 17 | PGP-1-2V | 0.3 | |

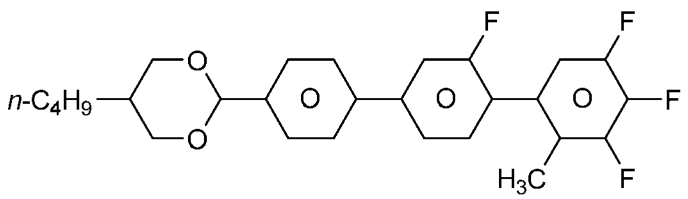

DPGU(1)-4-F

Mixture Example S48 (stabilised with compounds of Formulae H-3-10 and ST-2-3)

A nematic LC mixture according to the invention is formulated as follows:

| | |
|---|---|
| Mixture M48 | 99.96 wt.-% |
| Compound of Formula H-3-10 | 100 ppm |
| Compound of Formula ST-2-3 | 300 ppm |

Addition of compounds of Formulae H-3-10 and ST-2-3 significantly improves the $VHR_{100}$ after UV exposure compared to the non-stabilized mixture M48, without affecting the remaining physical properties of the mixture.

Mixture Example M49

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 112.5 °C |
| 2 | CC-3-2V1 | 5.0 | Δn (20 °C, 589 nm) | = | 0.0965 |
| 3 | CC-3-V | 23.0 | $\varepsilon_{\parallel}$ (20 °C, 1 kHz) | = | 7.0 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.4 |
| 6 | DPGU-(c5)-F | 4.0 | $K_1$ (20 °C) | = | 20.2 pN |
| 7 | CCP-V-1 | 5.3 | $K_3$ (20 °C) | = | 20.9 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

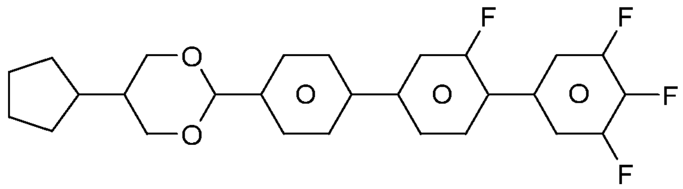

DPGU-(c5)-F

Mixture Example S49 (stabilised with compounds of Formulae H-3-11 and ST-1-3)

A nematic LC mixture according to the invention is formulated as follows:

| | |
|---|---|
| Mixture M49 | 99.96 wt.-% |
| Compound of Formula H-3-11 | 100 ppm |
| Compound of Formula ST-1-3 | 300 ppm |

Addition of compounds of Formulae H-3-11 and ST-1-3 significantly improves the $VHR_{100}$ after UV exposure compared to the non-stabilized mixture M49, without affecting the remaining physical properties of the mixture.

Mixture Example M50

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 113.5 °C |
| 2 | CC-3-2V1 | 5.0 | Δn (20 °C, 589 nm) | = | 0.0965 |
| 3 | CC-3-V | 23.0 | $\varepsilon_{\parallel}$ (20 °C, 1 kHz) | = | 6.8 |
| 4 | CC-3-V1 | 8.0 | $\varepsilon_{\perp}$ (20 °C, 1 kHz) | = | 3.6 |
| 5 | CCP-3-1 | 5.0 | Δε (20 °C, 1 kHz) | = | 3.2 |
| 6 | CPGU-3-OT | 4.0 | $K_1$ (20 °C) | = | 20.1 pN |
| 7 | CCP-V-1 | 5.3 | $K_3$ (20 °C) | = | 22.4 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |

Mixture Example S50 (stabilised with compounds of Formulae H-3-11 and ST-2-3)

A nematic LC mixture according to the invention is formulated as follows:

| | |
|---|---|
| Mixture M50 | 99.96 wt.-% |
| Compound of Formula H-3-11 | 100 ppm |
| Compound of Formula ST-2-3 | 300 ppm |

Addition of compounds of Formulae H-3-11 and ST-2-3 significantly improves the $VHR_{100}$ after UV exposure compared to the non-stabilized mixture M50, without affecting the remaining physical properties of the mixture.

Mixture Example M51

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 112 °C |
| 2 | CC-3-2V1 | 5.0 | Δn (20 °C, 589 nm) | = | 0.0938 |
| 3 | CC-3-V | 23.0 | $\varepsilon_{\parallel}$ (20 °C, 1 kHz) | = | 6.3 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.8 |
| 6 | CCP-30CF3 | 3.0 | $K_1$ (20 °C) | = | 19.9 pN |
| 7 | CCP-V-1 | 5.3 | $K_3$ (20 °C) | = | 22.5 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |
| 18 | PPGU-3-F | 1.0 | | | |

Mixture Example S51 (stabilised with compounds of Formulae H-3-12 and ST-1-3)

A nematic LC mixture according to the invention is formulated as follows:

| | |
|---|---|
| Mixture M51 | 99.96 wt.-% |
| Compound of Formula H-3-12 | 100 ppm |
| Compound of Formula ST-1-3 | 500 ppm |

Addition of compounds of Formulae H-3-12 and ST-1-3 significantly improves the $VHR_{100}$ after UV exposure compared to the non-stabilized mixture M51, without affecting the remaining physical properties of the mixture.

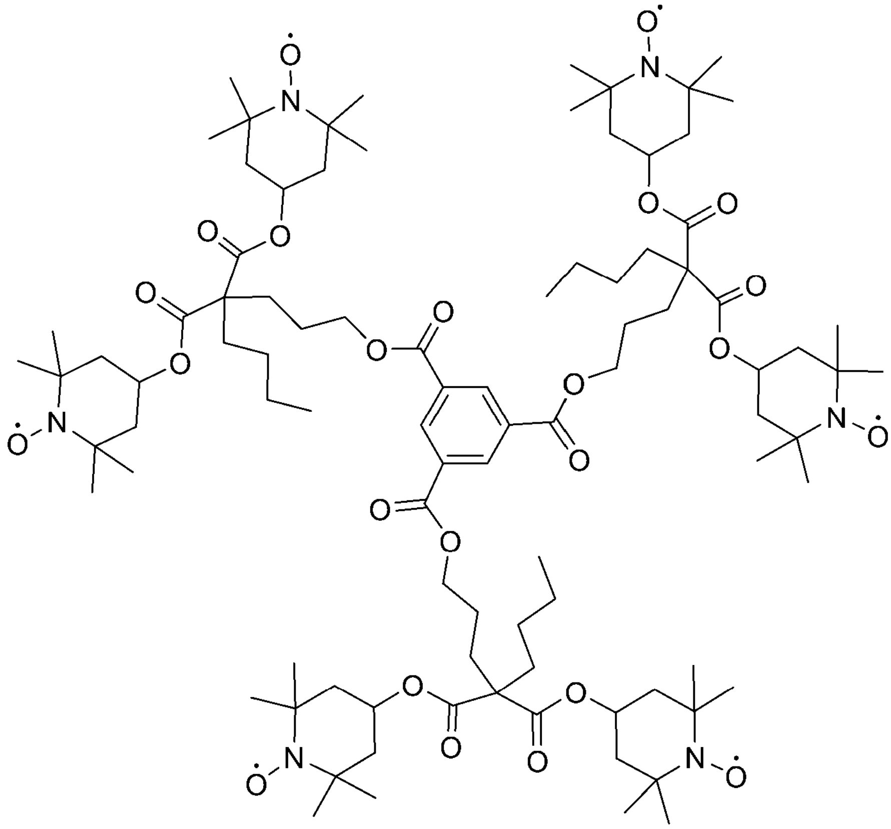

H-3-12

Mixture Example M52

A nematic LC medium is formulated as follows:

| Composition | | | Properties | | |
|---|---|---|---|---|---|
| Nr. | Comp. | Conc., wt.-% | | | |
| 1 | B(S)-2O-O5 | 0.4 | T(N, I) | = | 112 °C |
| 2 | CC-3-2V1 | 5.0 | Δn (20 °C, 589 nm) | = | 0.0936 |
| 3 | CC-3-V | 23.0 | $\varepsilon_{\parallel}$ (20 °C, 1 kHz) | = | 6.3 |
| 4 | CC-3-V1 | 8.0 | $\varepsilon_{\perp}$ (20 °C, 1 kHz) | = | 3.5 |
| 5 | CCP-3-1 | 5.0 | Δε (20 °C, 1 kHz) | = | 2.8 |
| 6 | CCP-30CF3 | 3.0 | $K_1$ (20 °C) | = | 19.9 pN |
| 7 | CCP-V-1 | 5.3 | $K_3$ (20 °C) | = | 22.5 pN |
| 8 | CCP-V2-1 | 10.0 | | | |
| 9 | CCVC-3-V | 7.0 | | | |
| 10 | CDUQU-3-F | 5.5 | | | |
| 11 | CLP-3-T | 6.0 | | | |
| 12 | CLY-3-O2 | 6.0 | | | |
| 13 | DGUQU-4-F | 3.0 | | | |
| 14 | LB(S)-3-OT | 3.0 | | | |
| 15 | LY-3-O2 | 3.5 | | | |
| 16 | PCH-302 | 5.0 | | | |
| 17 | PGP-1-2V | 0.3 | | | |
| 18 | PPGU-(c5)-F | 1.0 | | | |

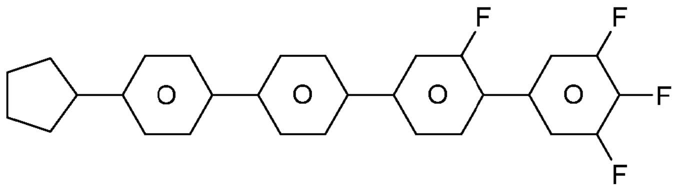

PPGU-(c5)-F

Mixture Example S52 (stabilised with compounds of Formulae H-3-12 and ST-2-3)

A nematic LC mixture according to the invention is formulated as follows:

| | |
|---|---|
| Mixture M52 | 99.96 wt.-% |
| Compound of Formula H-3-12 | 100 ppm |
| Compound of Formula ST-2-3 | 500 ppm |

Addition of compounds of Formulae H-3-12 and ST-2-3 significantly improves the $VHR_{100}$ after UV exposure compared to the non-stabilized mixture M52, without affecting the remaining physical properties of the mixture.

## Claims

1. Liquid-crystalline medium having a positive dielectric anisotropy, **characterised in that** it comprises one or more compounds of Formula I

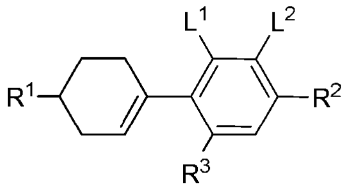

I

in which the individual substituents have the following meanings:

$R^1$ and $R^2$ each, independently of one another, denote an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

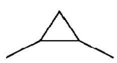,

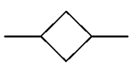, 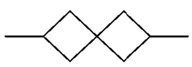, 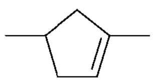, 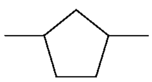,

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 12 C atoms, in which one or more H atoms may be replaced by a halogen atom;

$R^3$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;

$L^1$ and $L^2$ each, independently of one another, denote F, Cl, $CF_3$ or $CHF_2$, preferably $L^1$ and $L^2$ both denote F; and

one or more compounds selected from the group consisting of compounds of the Formulae P, S and B:

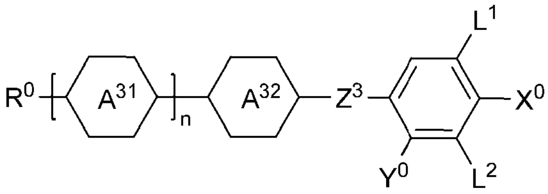 P

in which

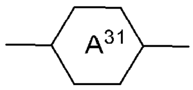

and

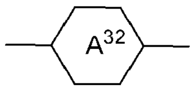

on each appearance, independently of one another, are

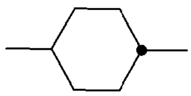 , 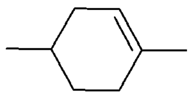 , 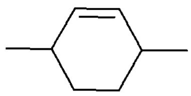 ,

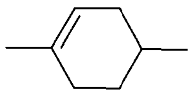 , 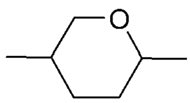 , 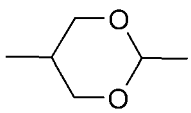 ,

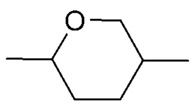 , 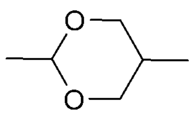 ,

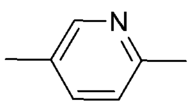 , 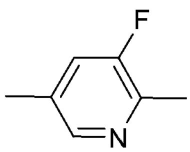 , 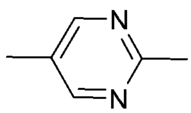 ,

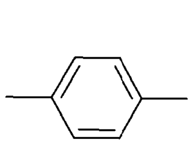 , 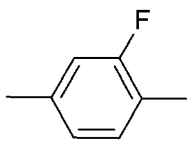 , 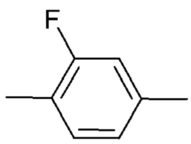 ,

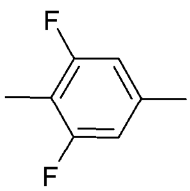 or 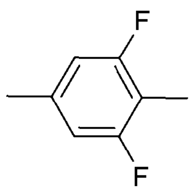 ,

preferably

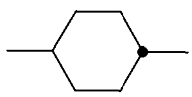 , 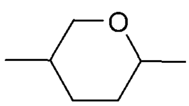 , 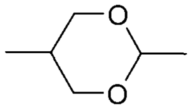 ,

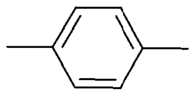 , 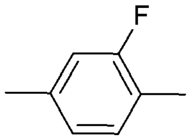 , 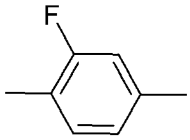 ,

or

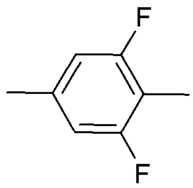 ,

$R^0$ denotes an alkyl or an alkoxy group having 1 to 12 C atoms or an alkenyl or an alkenyloxy group having 2 to 12 C atoms in which one or more non-adjacent $CH_2$ groups are optionally substituted by -C≡C-, - $CF_2O$-, -$OCF_2$-, -CH=CH-,

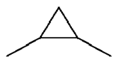 , 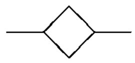 , 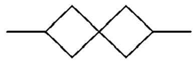 ,

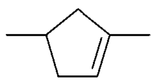 , 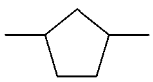 ,

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 12 C atoms, in which one or more H atoms may be replaced by a halogen atom;

$L^1$ and $L^2$ independently of one another, denote H or F, preferably $L^2$ denotes F,

$Y^0$ denotes a H atom, an alkyl group having 1 to 3 C atoms or an alkenyl group having 2 to 3 C atoms in which one or more non-adjacent $CH_2$ groups are optionally substituted by -C≡C-, -$CF_2O$-, -$OCF_2$-, -CH=CH-, -O-, -CO-O- or -O-CO- in such a way that O atoms are not linked directly to one another, preferably H or $CH_3$;

$X^0$ denotes halogen, halogenated alkyl or alkoxy having 1 to 6 C atoms or halogenated alkenyl or alkenyloxy having 2 or 6 C atoms, F, Cl, - $OCF_3$, -$OCHF_2$, -O-$CH_2CF_3$, -O-CH=$CF_2$, -O-CH=$CH_2$ or -$CF_3$, very preferably F, -$CF_3$, -$CHF_2$, -$OCHF_2$ or -$OCF_3$,

$Z^3$ denotes -$CH_2CH_2$-, -$CF_2CF_2$-, -COO-, -OCO-, *trans*-CH=CH-, *trans*-CF=CF-, -$CH_2O$-, -$OCH_2$- or a single bond, preferably -$CH_2CH_2$-, -COO-, *trans*-CH=CH- or a single bond and very preferably -COO-, *trans*-CH=CH- or a single bond, and

n denotes 0, 1, 2 or 3, preferably 1, 2 or 3 and particularly preferably 1;

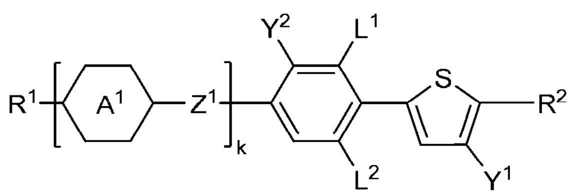 S

in which the individual substituents, on each occurrence identically or differently, and each, independently of one another, have the following meanings:

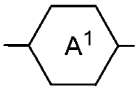 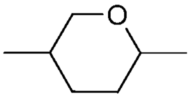 , 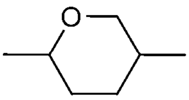 , 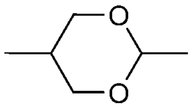 , 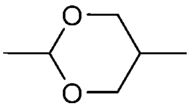

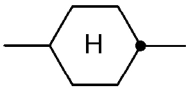 , 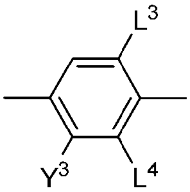 , 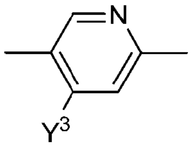 , 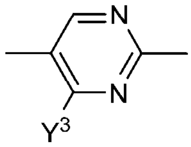

$R^1$ and $R^2$ each, independently of one another, denote a H atom, a halogen atom, an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

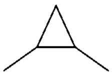 , 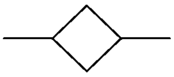 , 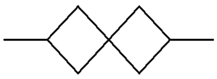 , 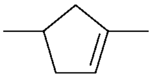 , 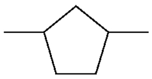 ,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

$L^1$ to $L^4$ each, independently of one another, denote H, F or Cl;

$Y^1$ to $Y^3$ each, independently of one another, denote a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;

$Z^1$ denotes $-CF_2O-$, $-OCF_2-$, $-CH_2O-$, $-OCH_2-$, -CO-O-, -O-CO-, $-C_2H_4-$, $-C_2F_4-$, $-CF_2CH_2-$, $-CH_2CF_2-$, -CFHCFH-, $-CFHCH_2-$, $-CH_2CFH-$, $- CF_2CFH-$, $-CFHCF_2-$, -CH=CH-, -CF=CH-, -CH=CF-, -CF=CF-, -C≡C- or a single bond;

k denotes 0, 1, 2 or 3;

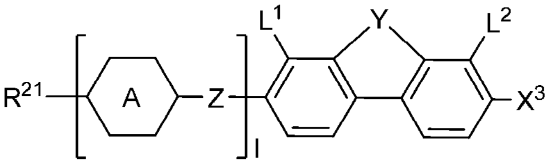 B

in which the individual substituents have the following meanings:

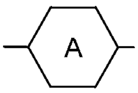 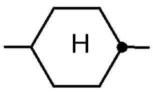 , 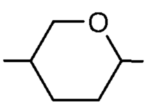 , 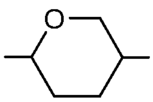 , 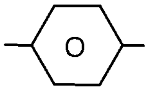 , 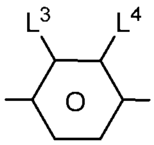

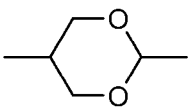 , 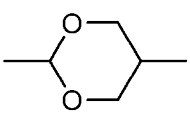 , 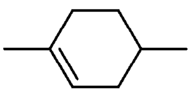 , 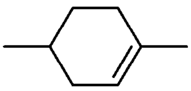

$R^{21}$ denotes an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

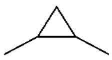, 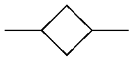, 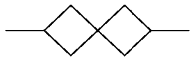, 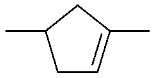, 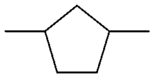,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

$X^3$ denotes halogen, halogenated alkyl or alkoxy having 1 to 3 C atoms or halogenated alkenyl or alkenyloxy having 2 or 3 C atoms, F, Cl, $-OCF_3$, $-OCHF_2$, $-O-CH_2CF_3$, $-O-CH=CF_2$, $-O-CH=CH_2$ or $-CF_3$, very preferably F, Cl, $-O-CH=CF_2$, $-OCHF_2$ or $-OCF_3$,

$L^1$ and $L^2$ each, independently of one another, denote F, Cl, $CF_3$ or $CHF_2$;

$L^3$ and $L^4$ each, independently of one another, denote H or F;

Z denotes a single bond, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O$;

Y denotes S or O, $CH_2$, $CH_2CH_2$, $CH_2O$, $OCH_2$, CH=CH;

I 0 or 1.

2. Medium according to Claim 1, **characterised in that** the one or more compounds of Formula P is selected from the group consisting of the following formulae:

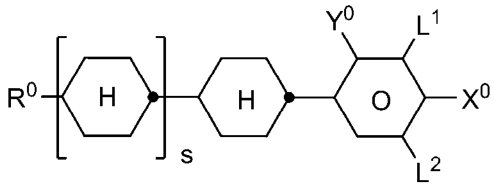

IV

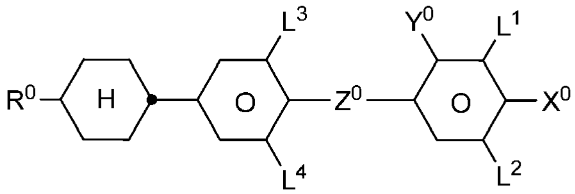

V

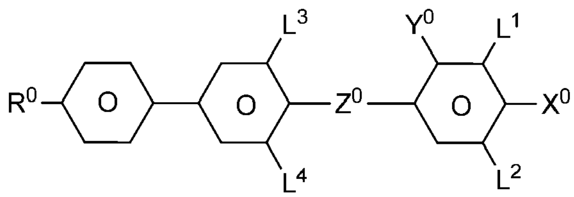

VI

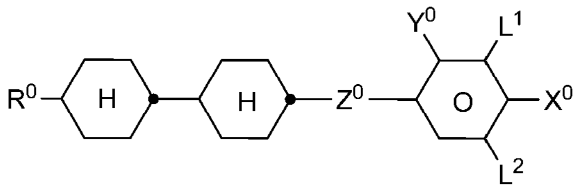

VII

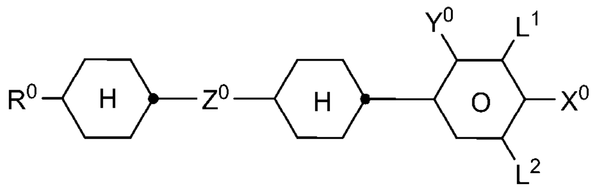

VIII

in which

$R^0$ denotes an alkyl or an alkoxy group having 1 to 6 C atoms or an alkenyl or an alkenyloxy group having 2 to 6 C atoms in which one or more non-adjacent $CH_2$ groups are optionally substituted by -C≡C-, $-CF_2O-$, $-OCF_2-$, -CH=CH-,

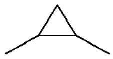, 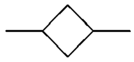, 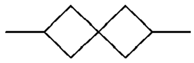,

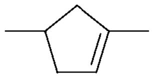, 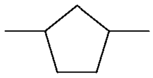,

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 6 C atoms, in which one or more H atoms may be replaced by a halogen atom;
$X^0$ denotes halogen, halogenated alkyl or alkoxy having 1 to 3 C atoms or halogenated alkenyl or alkenyloxy having 2 or 3 C atoms, F, Cl, $-OCF_3$, $-OCHF_2$, $-O-CH_2CF_3$, $-O-CH=CF_2$, $-O-CH=CH_2$ or $-CF_3$, very preferably F, $-CF_3$, $-CHF_2$, $-OCHF_2$ or $-OCF_3$,
$L^1$ to $L^4$ each, independently of one another, denote H, F or Cl;
$Y^0$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;
$Z^0$ denotes $-C_2H_4-$, $-(CH_2)_4-$, -CH=CH-, -CF=CF-, $-C_2F_4-$, $-CH_2CF_2-$, $-CF_2CH_2-$, $-CH_2O-$, $-OCH_2-$, -COO-, $-CF_2O-$, or $-OCF_2-$, in the Formulae V and VI also a single bond; and
s denotes 0 or 1.

3. Medium according to Claim 1, **characterised in that** the one or more compounds of Formula P is selected from the group consisting of the following formulae:

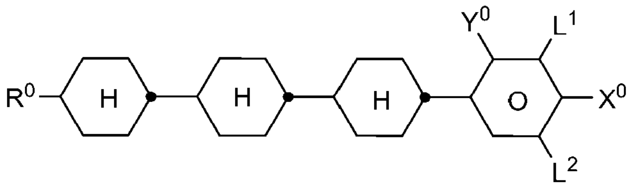
XVIII

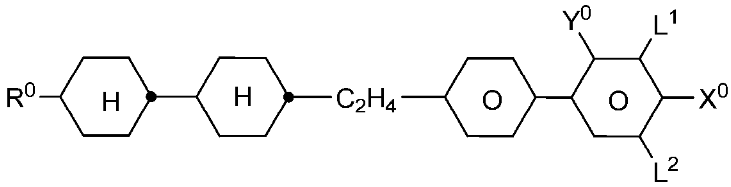
XIX

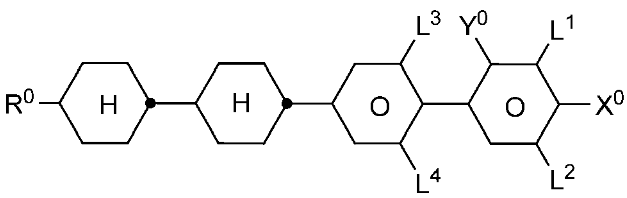
XX

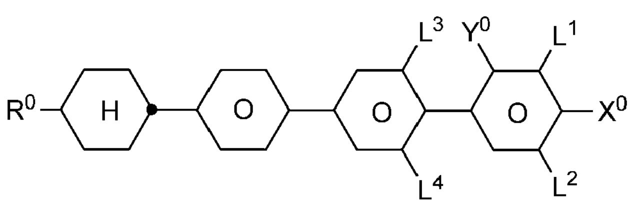
XXI

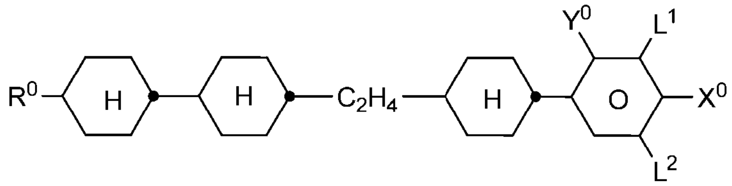

XXII

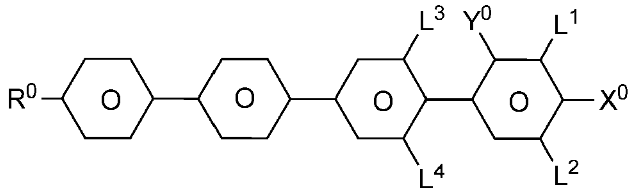

XXIII

in which $R^0$, $x^0$, $Y^0$ and $L^{1-4}$ each, independently of one another, have one of the meanings indicated in Formulae IV to VIII in Claim 2.

4. Medium according to Claim 1, **characterized in that** the one or more compounds of Formula P is selected from the group consisting of the following formulae:

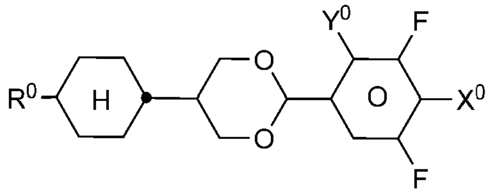

XXVII

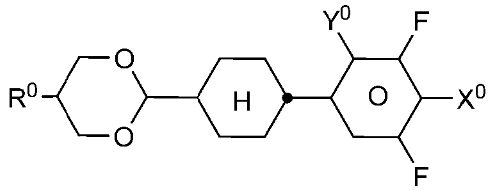

XXVIII

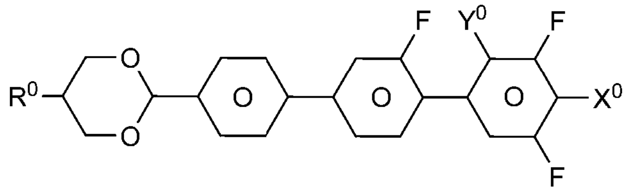

XXIX

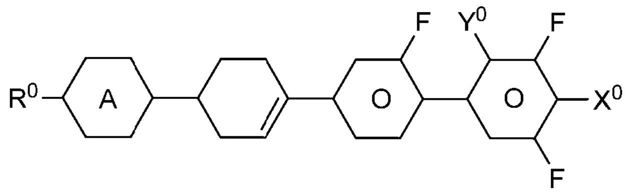

XXX

in which

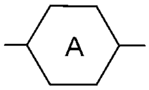

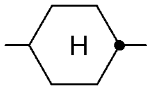 , 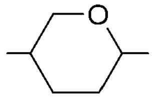 , 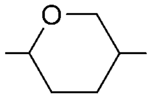 ,

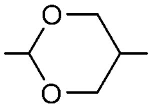 or 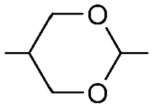 and

$R^0$, $X^0$ and $Y^0$ have the meanings indicated in in Formulae IV to VIII in Claim 2 for $R^0$, $X^0$ and $Y^0$, respectively.

5. Medium according to one or more of Claims 1 to 4, **characterised in that** it comprises one or more compounds selected from the group consisting of compounds of the Formulae YA, YB, YC, YD, YE, YF, YG and B':

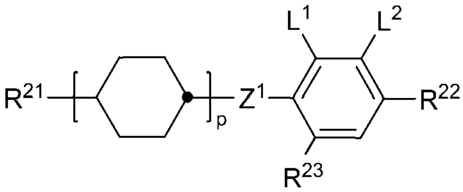

YA

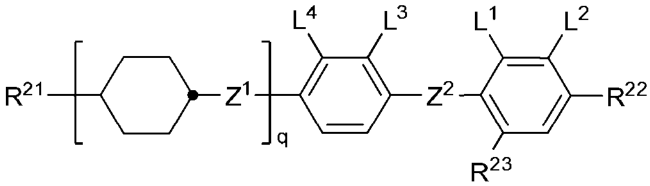

YB

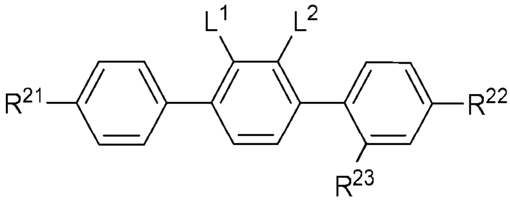

YC

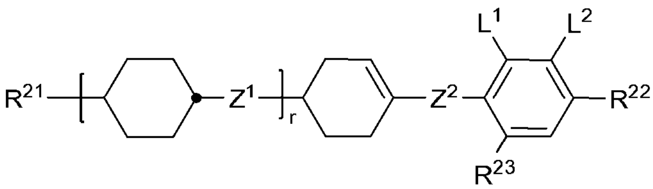

YD

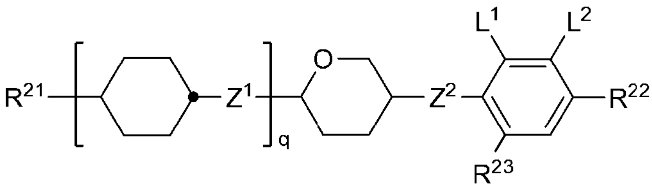

YE

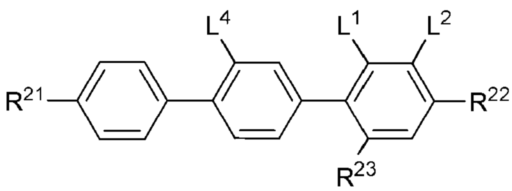

YF

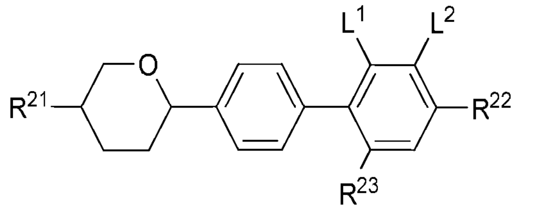 YG

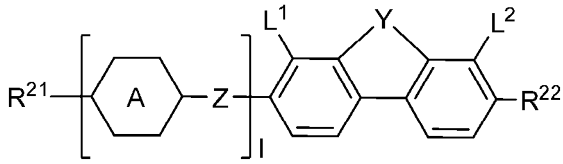 B′

in which the individual substituents have the following meanings:

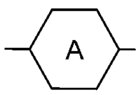 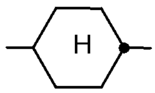, 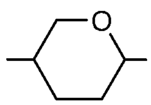, 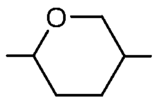, 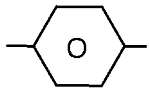, 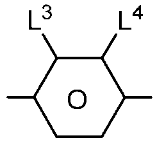

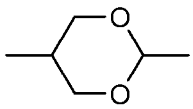, 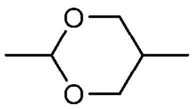, 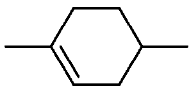, 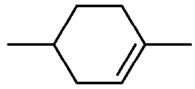

$R^{21}$ denotes an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

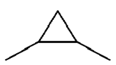, 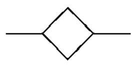, 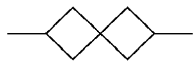,

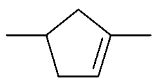, 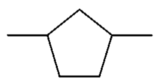,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

$R^{22}$ denotes an alkyl or an alkoxy group having 1 to 6 C atoms or an alkenyl or an alkenyloxy group having 2 to 6 C atoms in which one or more non-adjacent $CH_2$ groups are optionally substituted by -C≡C-, $-CF_2O-$, $-OCF_2-$, -CH=CH-,

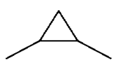, 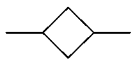, 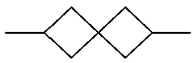, 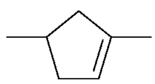,

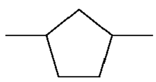,

-O-, -CO-O- or -O-CO- in such a way that O atoms are not linked directly to one another, and in which one or more H atoms may be replaced by a halogen atom or a cycloalkyl or a cycloalkoxy group having 3 to 6 C atoms, in which one or more H atoms may be replaced by a halogen atom;

$L^1$ and $L^2$ each, independently of one another, denote F, Cl, $CF_3$ or $CHF_2$;
$L^3$ and $L^4$ each, independently of one another, denote H or F;
$R^{23}$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$;
$Z^1$ and $Z^2$ each, independently of one another, denote a single bond, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O$;
Z $-CH_2O-$, -O-, $-C_2H_4-$, $-OCH_2-$, or a single bond;
Y denotes S or O, $CH_2$, $CH_2CH_2$, $CH_2O$, $OCH_2$, CH=CH;
p 0, 1 or 2;
q 0 or 1;
r 1 or 2; and.
1 0 or 1.

6. Medium according to Claim 5, **characterised in that** the one or more compounds selected from the group consisting of compounds of the Formulae YA, YB, YC, YD, YE, YF and YG and B are selected from the group consisting of the following compounds:

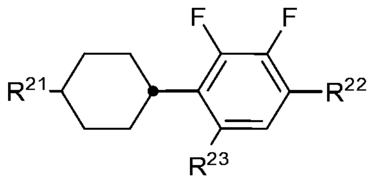

YA-2´

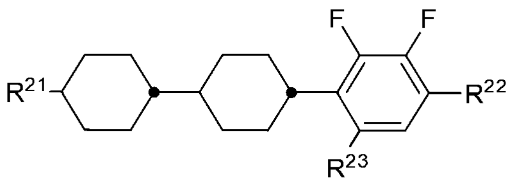

YA-9´

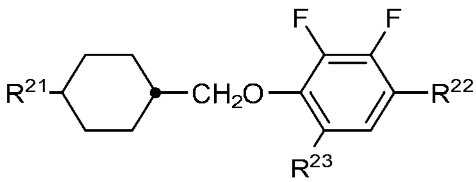

YA-37´

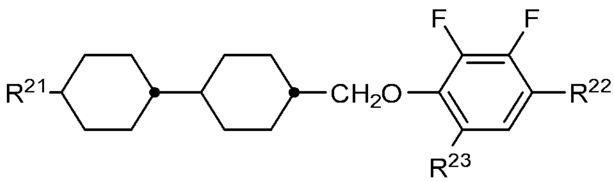

YA-41´

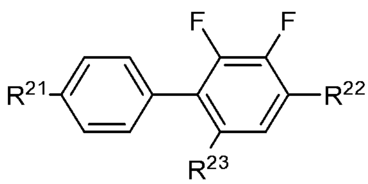

YB-9´

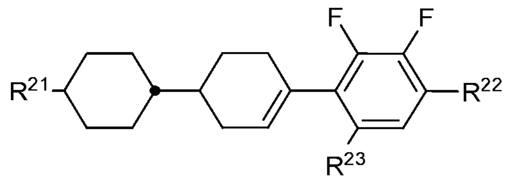

YD-1´

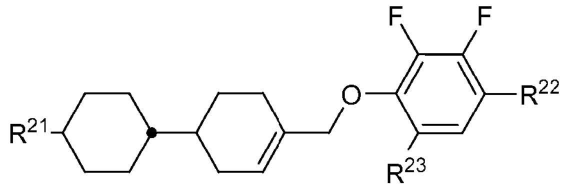

YD-7´

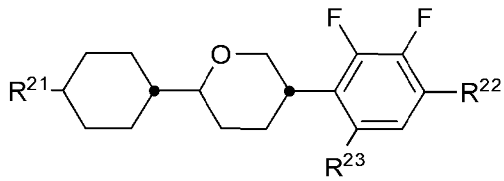

YE-10´

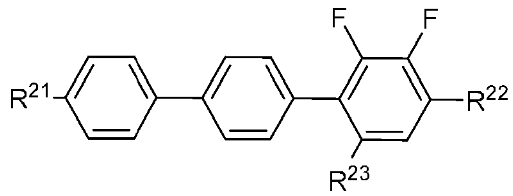

YF-1´

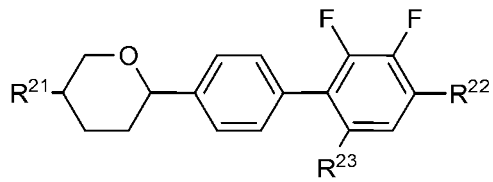

YG-2´

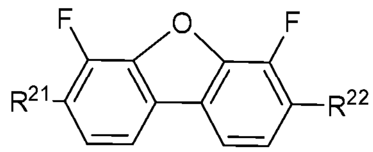

B1-1-6´

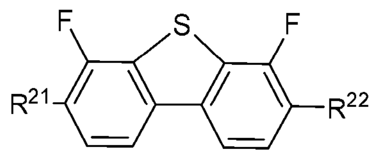

B1-2-6´

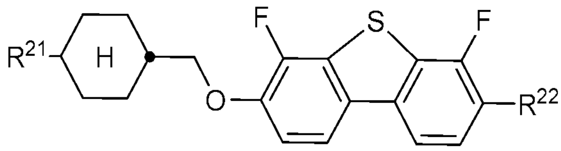

B2-2´

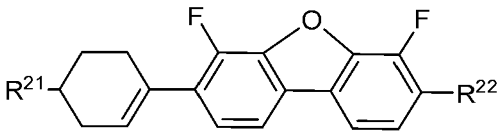

B3-1´

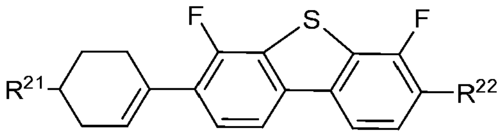

B3-2´

in which

$R^{21}$ and $R^{22}$ each, independently of one another, denote an alkyl or an alkoxy group having 1 to 6 C atoms or an alkenyl or an alkenyloxy group having 2 to 6 C atoms in which one or more non-adjacent $CH_2$ groups are optionally substituted by -C≡C-, $-CF_2O-$, $-OCF_2-$, -CH=CH-,

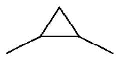 ,

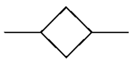 , 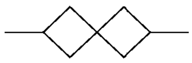 , 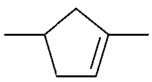 , 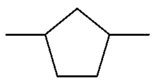 ,

-O-, -CO-O- or -O-CO- in such a way that O atoms are not linked directly to one another, and in which one or more H atoms may be replaced by a halogen atom or a cycloalkyl, cycloalkenyl or a cycloalkoxy group having 3 to 6 C atoms, in which one or more H atoms may be replaced by a halogen atom; and
$R^{23}$ denotes a H atom, an alkyl group having 1 to 3 C atoms or an alkenyl group having 2 to 3 C atoms, preferably H or $CH_3$ .

**7.** Medium according to one or more of Claims 1 to 6, **characterized in that** it comprises one or more compounds selected from the group consisting of the following formulae:

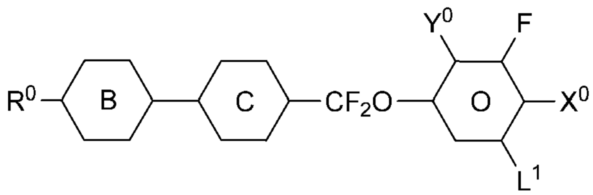

II

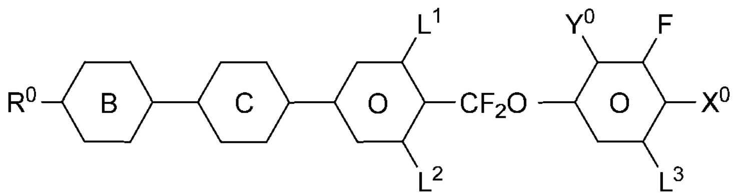

III

in which the individual substituents have the following meanings:

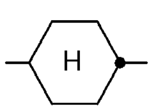 , 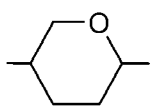 , 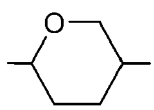 , 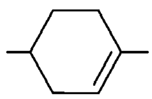 ,

(continued)

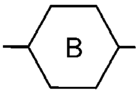 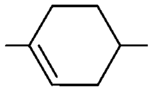 , 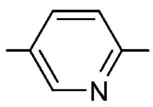 , 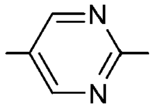 , 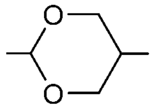 ,

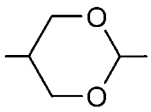 , 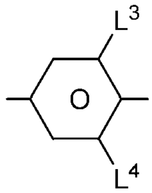 or 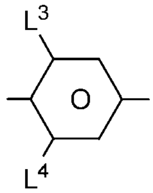

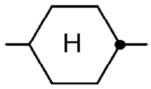 , 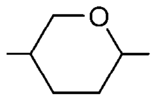 , 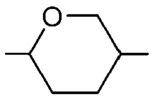 , 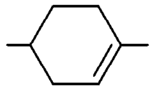 ,

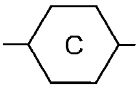 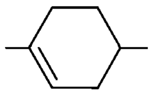 , 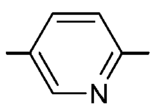 , 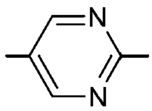 , 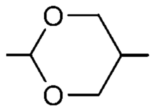 ,

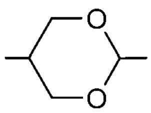 , 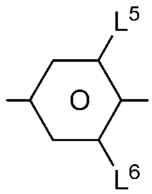 or 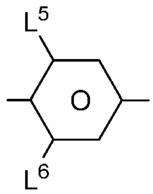

$R^0$ has one of the meanings given in Claim 1 for $R^1$ and $R^2$;
$X^0$ denotes a halogen atom, -CN, -SCN, -NCS or an alkyl or an alkoxy group having 1 to 6 C atoms or an alkenyl or an alkenyloxy group having 2 to 6 C atoms in which one or more H atoms has been substituted by a halogen atom, preferably F, $CF_3$, $CHF_2$, $OCHF_2$, or $OCF_3$;
$L^1$ to $L^6$ each, independently of one another, denote H, F or Cl;
$Y^0$ denotes a H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -CH=CH-, -O-, -CO-O- or -O-CO- in such a way that O atoms are not linked directly to one another, preferably H or $CH_3$.

**8.** Medium according to Claim 7, wherein the one or more compounds of Formula II are selected from the following subformulae:

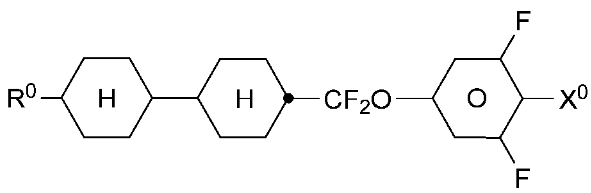 II-1

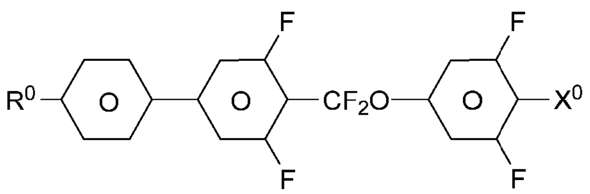 II-2

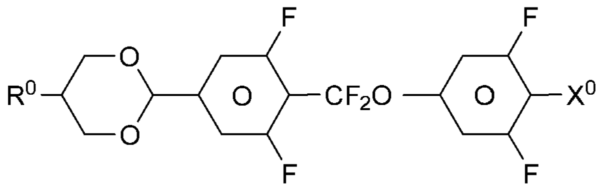

II-3

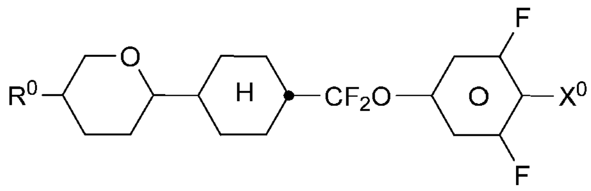

II-4

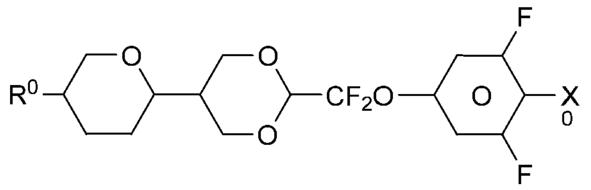

II-5

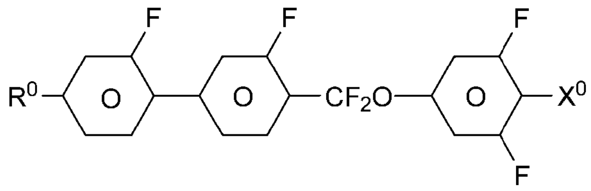

II-6

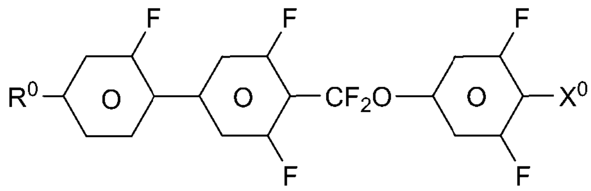

II-7

in which $R^0$ and $X^0$ have the meanings given in Formula II.

**9.** Medium according to Claim 7, wherein the one or more compounds of Formula III are selected from the following subformulae:

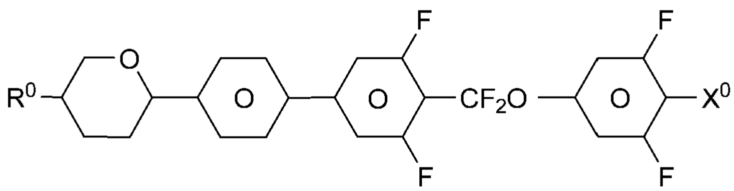

III-1

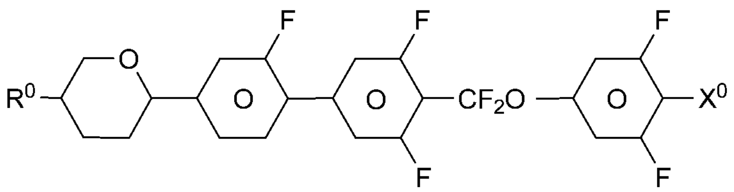

III-2

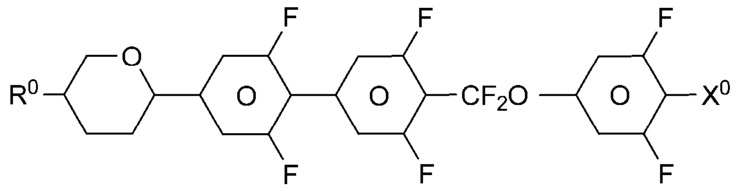 III-3

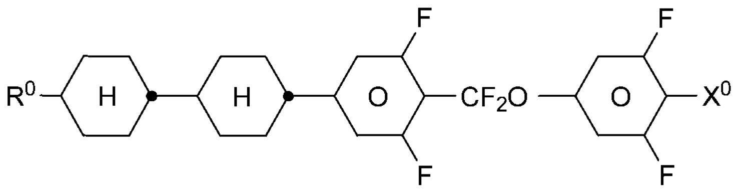 III-4

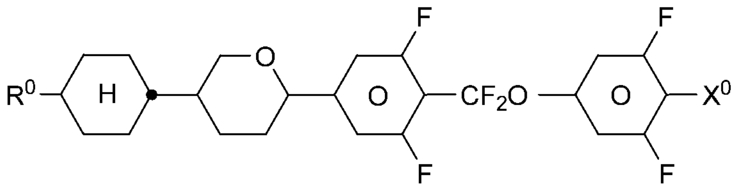 III-5

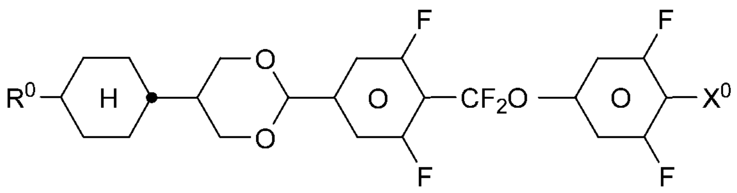 III-6

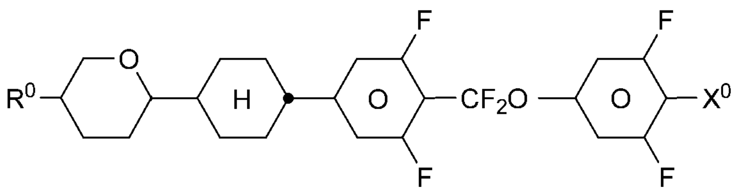 III-7

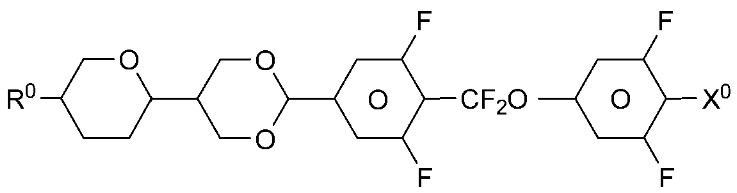 III-8

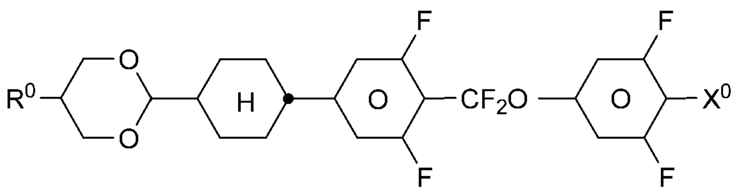 III-9

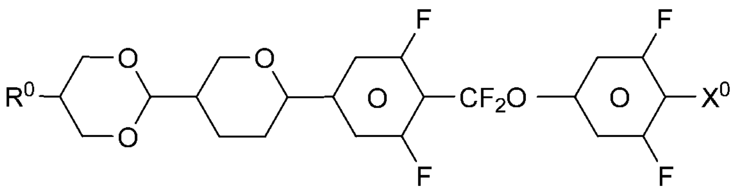 III-10

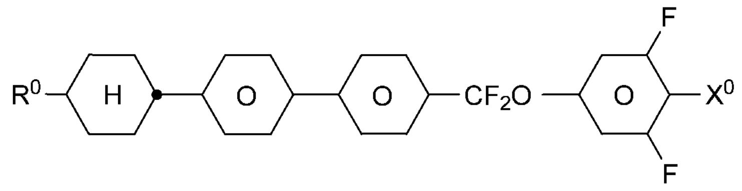
III-11

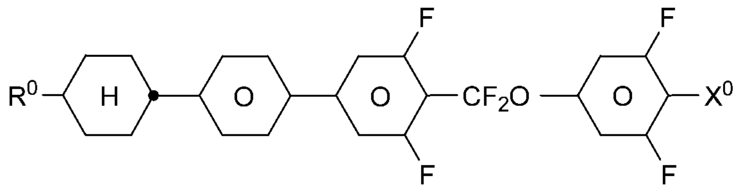
III-12

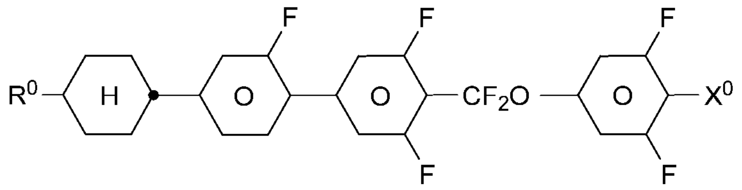
III-13

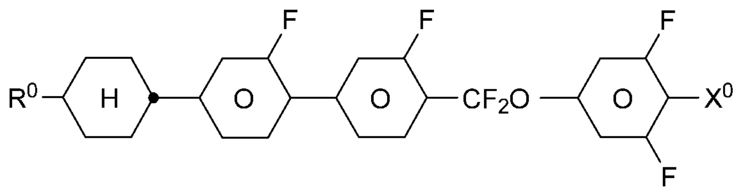
III-14

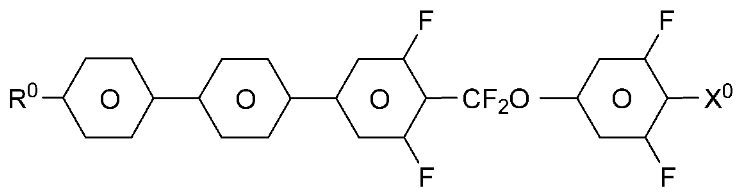
III-15

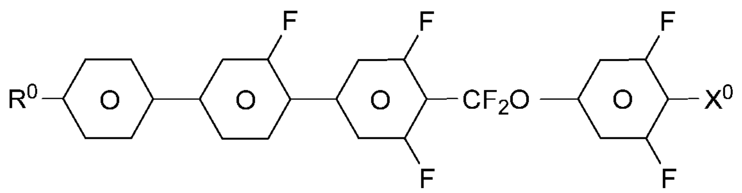
III-16

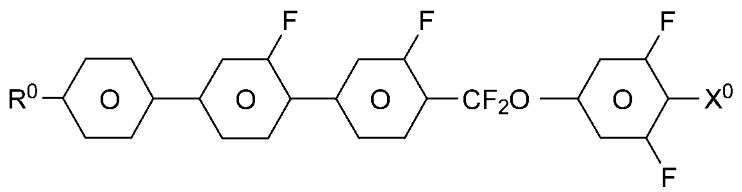
III-17

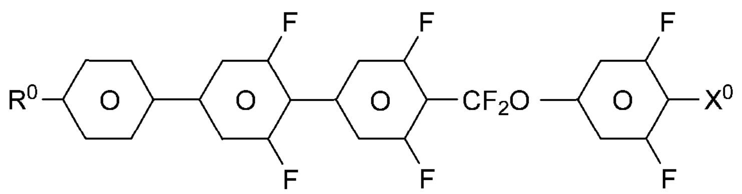
III-18

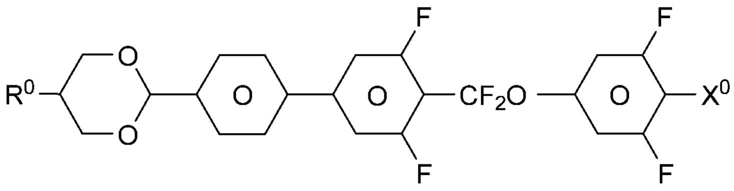

III-19

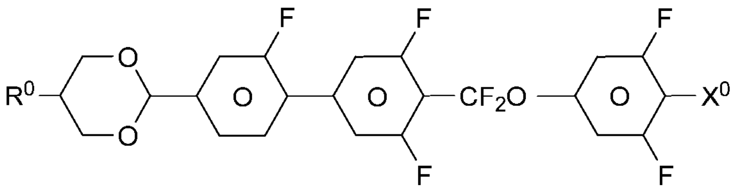

III-20

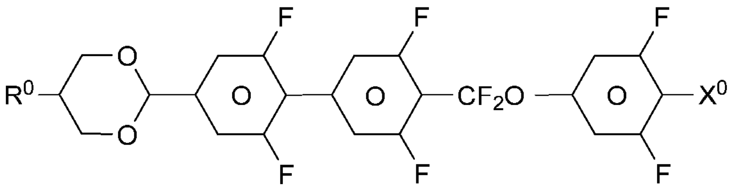

III-21

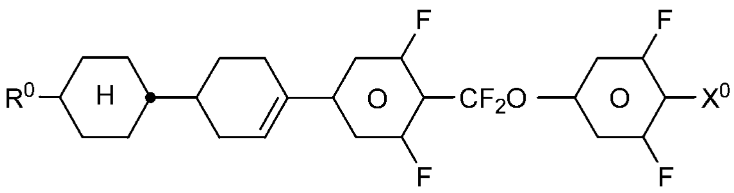

III-22

in which $R^0$ and $X^0$ have the meanings given in Formula III.

**10.** Medium according to one or more of Claims 1 to 9, **characterised in that** it comprises one or more compounds selected from the group of Formulae N1 and N2:

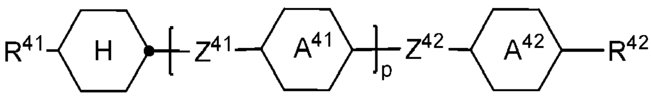

N1

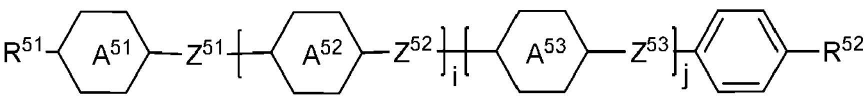

N2

in which

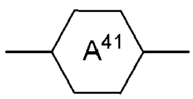

and

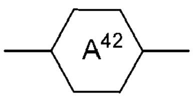

independently of one another and, if

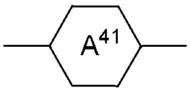,

occurs twice, also these independently of one another, denote

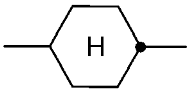, 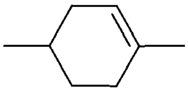, 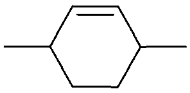,

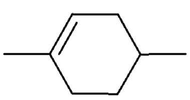, 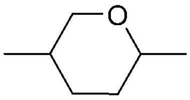, 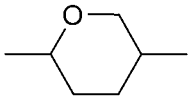,

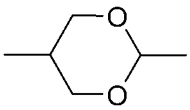, 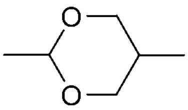, 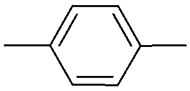,

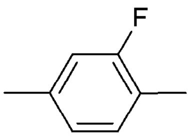, 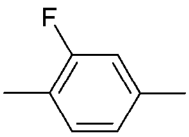, 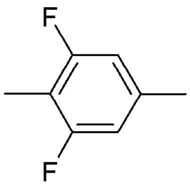,

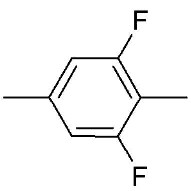 or 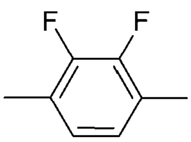,

$Z^{41}$ and $Z^{42}$ independently of one another and, if $Z^{41}$ occurs twice, also these independently of one another, denote $-CH_2CH_2-$, -COO-, *trans*-CH=CH-, trans-CF=CF-, $-CH_2O-$, $-CF_2O-$, -C≡C- or a single bond,

p denotes 0, 1 or 2,

$R^{41}$ and $R^{42}$ each, independently of one another, denote an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$, -CH=CH-,

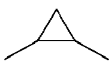, 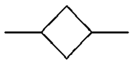,

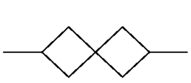, 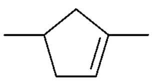, 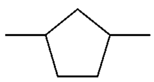,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom;

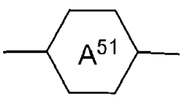

to

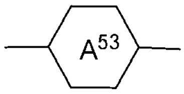,

if present, each, independently of one another, denote

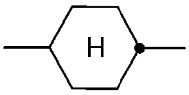, 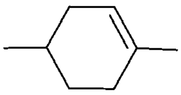, 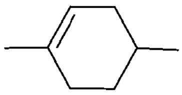,

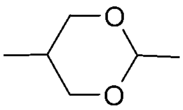, 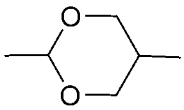, 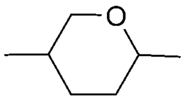,

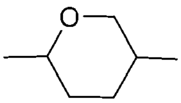, 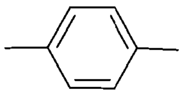,

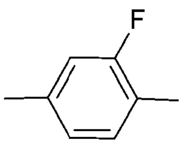 or 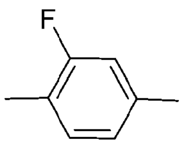,

$R^{51}$ and $R^{52}$ each, independently of one another, have the meanings of $R^{41}$ and $R^{42}$;
$Z^{51}$ to $Z^{53}$ each, independently of one another, have the meanings of $Z^{41}$ and $Z^{42}$, and
i and j each, independently of one another, denote 0 or 1,

wherein or more, preferably one, of the aromatic rings may optionally be substituted by an alkyl group, preferably by methyl.

**11.** Medium according to one or more of Claims 1 to 10, **characterised in that** it comprises one or more compounds selected from group consisting of the following formulae:

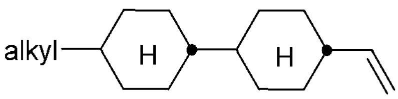 Z1

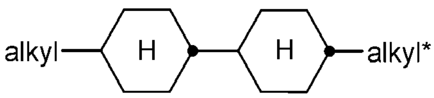 Z2

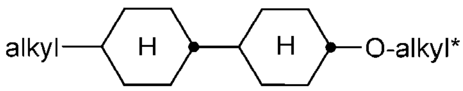 Z2'

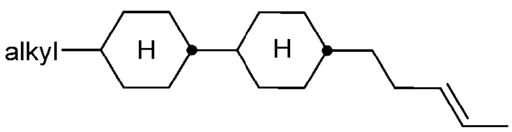 Z3

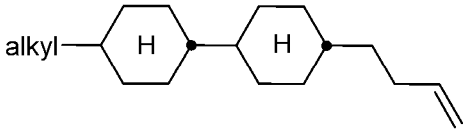
Z3'

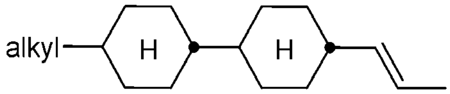
Z4

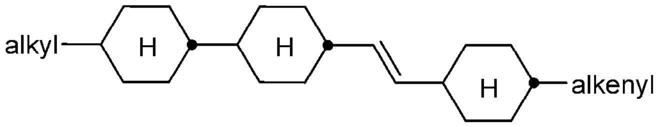
Z5

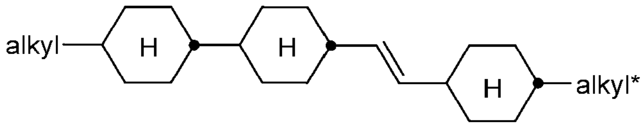
Z6

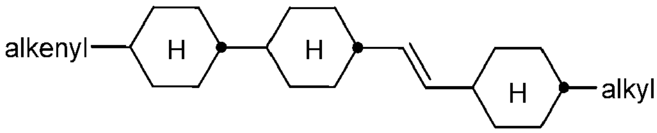
Z7

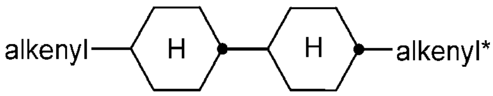
Z8

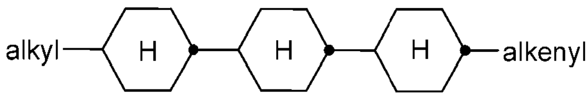
Z9

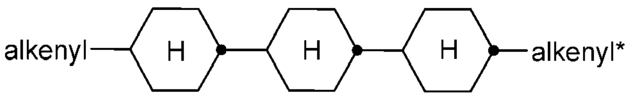
Z10

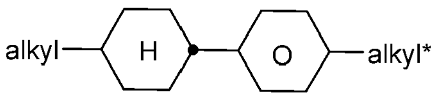
XVa

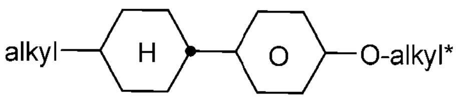
XVb

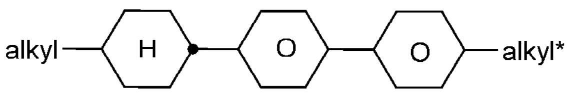
XXXIIa

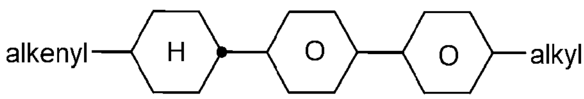
XXXIIb

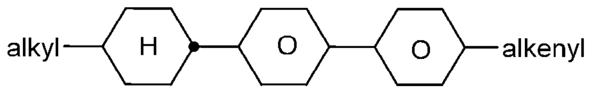

XXXIIc

in which the individual substituents have the following meanings:

*"alkyl"* and *"alkyl*"* each, independently from one another, denote an alkyl group having 1 to 6 C atoms; "*alkenyl*" and "*alkenyl**" each, independently of one another, denote an alkenyl group having 2 to 6 C atoms.

**12.** Medium according to one or more of Claims 1 to 11, **characterised in that** it comprises a compound of Formula Z1-1:

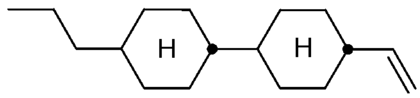

Z1-1

**13.** Medium according to one or more of Claims 1 to 12, **characterised in that** it comprises one or more compounds selected from the group consisting of the following formulae:

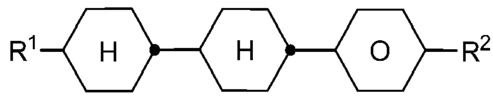

XII

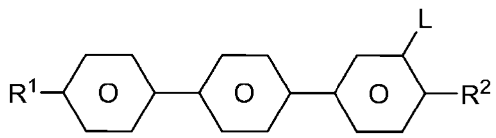

XIII

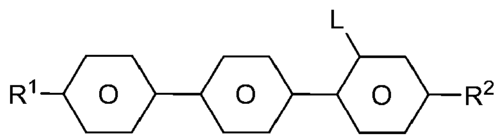

XIII′

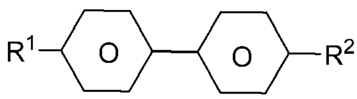

XIV

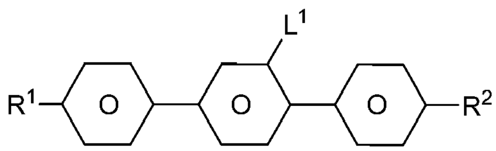

XVI

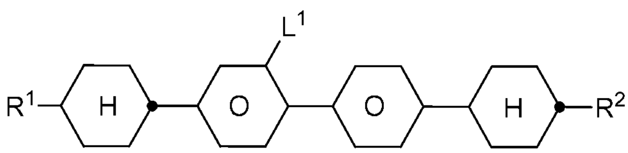

XVIIa

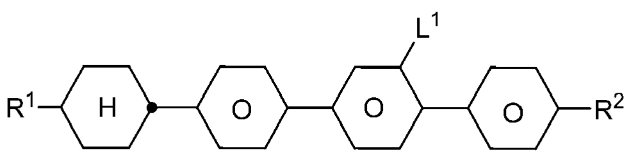

XVIIb

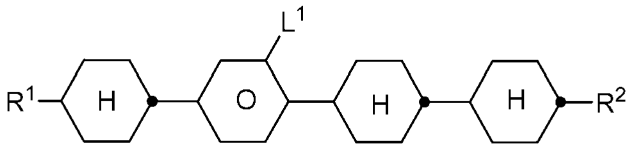

XVIIc

in which

$R^1$ and $R^2$ each, independently of one another, denote alkyl, alkoxy, oxaalkyl or fluoroalkyl, each having 1 to 6 C atoms or alkenyl having 2 to 6 C atoms; and
$L^1$ and L each, independently of one another, denote H, F or Cl.

**14.** Medium according to one or more of Claims 1 to 13, **characterized in that** it further comprises one or more compounds selected from those of Formulae LP1 and LP2

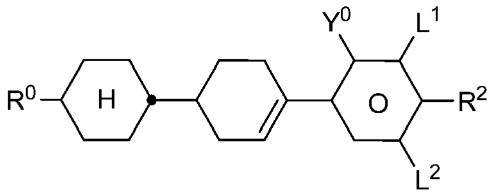

LP1

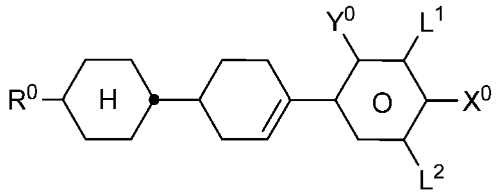

LP2

in which the individual substituents have the following meanings:

$R^0$ and $R^2$ denote an alkyl or an alkoxy group having 1 to 12 C atoms or an alkenyl or an alkenyloxy group having 2 to 12 C atoms in which one or more non-adjacent $CH_2$ groups are optionally substituted by -C≡C-, $-CF_2O-$, $-OCF_2-$,

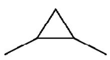 , 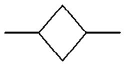 , 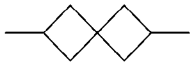 , 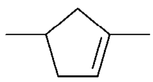 , 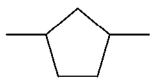

-O-, -CO-O- or -O-CO- in such a way that O atoms are not linked directly to one another, and in which one or more H atoms may be substituted by a cycloalkyl or a cycloalkoxy group having 3 to 12 C atoms;
$L^1$ and $L^2$ each, independently of one another, denote H, F or Cl;
$Y^0$ denotes an H atom, an alkyl group having 1 to 3 C atoms or an alkenyl group having 2 to 3 C atoms in which one or more non-adjacent $CH_2$ groups are optionally substituted by -C≡C-, $-CF_2O-$, $-OCF_2-$, -O-, -CO-O- or -O-CO- in such a way that O atoms are not linked directly to one another, preferably H or $CH_3$ ; and
$X^0$ denotes a halogen atom, -CN, -SCN, -NCS or an alkyl or an alkoxy group having 1 to 6 C atoms or an alkenyl or an alkenyloxy group having 2 to 6 C atoms in which one or more H atoms have been substituted by a halogen atom.

**15.** Medium according to one or more of Claims 1 to 14, **characterised in that** the medium comprises one or more compounds of the Formula H

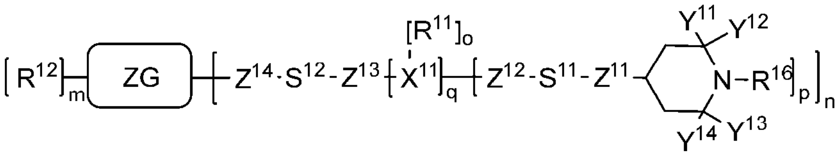

H

in which

$R^{11}$ each, independently of one another, denotes a H atom, F, an alkyl group having 1 to 20 C atoms, in which one $-CH_2-$ group or, if present, a plurality of $-CH_2-$ groups may be replaced by -O- or -C(=O)-, but two adjacent $-CH_2-$ groups cannot be replaced by -O-, and one or, if present, a plurality of $-CH_2-$ groups may be replaced by-CH=CH- or -C=C-, and in which one H atom or a plurality of H atoms may be replaced by F, $OR^{13}$, $N(R^{13})(R^{14})$ or $R^{15}$,

$R^{12}$ each, independently of one another, denotes a H atom, an alkyl group having 1 to 20 C atoms, in which one $-CH_2-$ group or a plurality of $-CH_2-$groups may be replaced by -O- or -C(=O)-, but two adjacent $-CH_2-$ groups cannot be replaced by -O-, a hydrocarbon group which contains a cycloalkyl or alkylcycloalkyl unit and in which one $-CH_2-$ group or a plurality of $-CH_2-$groups may be replaced by -O- or -C(=O)-, but two adjacent $-CH_2-$ groups cannot be replaced by -O-, and in which one H atom or a plurality of H atoms may be replaced by F, $OR^{13}$, $N(R^{13})(R^{14})$ or $R^{15}$, or an aromatic or heteroaromatic hydrocarbon group, in which one H atom or a plurality of H atoms may be replaced by $OR^{13}$, $N(R^{13})(R^{14})$ or $R^{15}$,

$R^{13}$ and $R^{14}$ each, independently of one another, denotes an alkyl or acyl group having 1 to 10 C atoms or an aromatic hydrocarbon or carboxylic acid group having 6 to 12 C atoms,

$R^{15}$ each, independently of one another, denotes an alkyl group having 1 to 10 C atoms, in which one $-CH_2-$ group or a plurality of $-CH_2-$ groups may be replaced by -O- or -C(=O)-, but two adjacent $-CH_2-$ groups cannot be replaced by -O-,

$R^{16}$ each, independently of one another denotes a H atom, an alkyl group or an alkoxy group having 1 to 10 C atoms, O-cycloalkyl group having 3 to 12 C atoms, $O^\bullet$ or OH,

$S^{11}$ and $S^{12}$ each, independently of one another, denote an alkylene group having 1 to 20 C atoms, in which one $-CH_2-$ group or, if present, a plurality of $-CH_2-$groups may be replaced by -O- or -C(=O)-, but two adjacent $-CH_2-$ groups cannot be replaced by -O-, and in which one H atom or a plurality of H atoms may be replaced by F, $OR^{13}$, $N(R^{13})(R^{14})$ or $R^{15}$, or denote a single bond,

$Y^{11}$ to $Y^{14}$ each, independently of one another, denote methyl or ethyl,

$X^{11}$ denotes C,

$Z^{11}$ to $Z^{14}$ each, independently of one another, denote -O-, -(C=O)-, -O-(C=O)-, -(C=O)-O-, -O-(C=O)-O-, $-(N-R^{13})-$, $-N-R^{13}-(C=O)-$ or a single bond if $S^{11}$ is a single bond; both $Z^{11}$ and $Z^{12}$ do not simultaneously denote -O-; if $S^{12}$ is a single bond, both $Z^{13}$ and $Z^{14}$ do not simultaneously denote -O-; and, if q denotes 0, both $Z^{12}$ and $Z^{13}$ do not simultaneously denote -O-,

p denotes 1 or 2,

q denotes 0 or 1,

o denotes (3-p),

n denotes an integer from 1 to 10,

m denotes an integer from 0 to 8, wherein

n * p denotes an integer from 1 to 10, preferably from 3 to 8, and

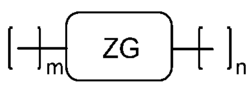

denotes an organic moiety having (m+n) bonding sites.

**16.** Medium according to one or more of Claims 1 to 15, **characterized in that** the medium comprises one or more compounds of the Formula ST:

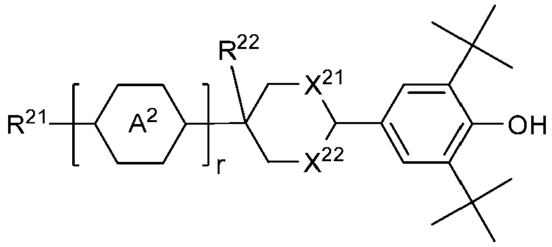 ST

in which the individual substituents have the following meanings:

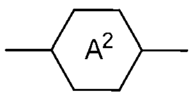 denotes 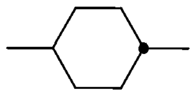 , 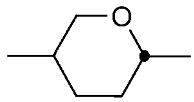 or 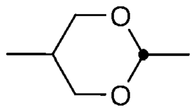 ;

$X^{21}$, $X^{22}$ each, independently of one another, -O-, $-CH_2-$, $-CHR^{23}-$ or $-N-R^{23}-$ ,
$R^{21}$ and $R^{22}$ each, independently of one another, a H atom or an alkyl- or alkoxy group having 1 to 12 C atoms, an alkenyl, alkynyl, alkenyloxy or alkoxyalkyl group having 2 to 12 C atoms or a cycloalkyl group having 3 to 12 C atoms, in which one or more non-adjacent $CH_2$ groups are optionally substituted by -C≡C-, $-CF_2O-$, $-OCF_2-$, -CH=CH-,

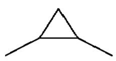 ,

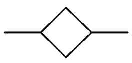 , 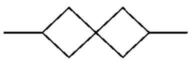 , 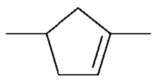 , 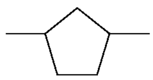 ,

-O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom,
$R^{23}$ denotes a H atom, an alkyl or alkoxy group having1 to 10 C atoms,
r denotes 0 or 1.

**17.** Medium according to one or more of Claims 1 to 16, **characterised in that** the medium comprises one or more additives selected from polymerisation initiators, inhibitors, surface-active substances, light stabilisers, anti-oxidants, microparticles, free-radical scavengers, nanoparticles, pleochroic dyes and chiral dopants.

**18.** Process for the preparation of a liquid-crystalline medium according to one or more of Claims 1 to 17, **characterised in that** one or more compounds of the Formula B and one or more compounds of the Formula C are mixed with one or more mesogenic compounds and optionally one or more polymerizable compounds and/or one or more additives.

**19.** Use of a liquid-crystalline medium according to one or more of Claims 1 to 17 for electro-optical purposes.

**20.** Electro-optical liquid-crystal display or an AR/VR headset containing a liquid-crystalline medium according to one or more of Claims 1 to 17.

**21.** Electro-optical liquid-crystal display according to Claim 20, **characterized in that** it is a TN, PS-TN, STN, TN-TFT, OCB, IPS, PS-IPS, FFS, HB-FFS, XB-FFS, PS-HB-FFS, PS-XB-FFS, SA-HB-FFS, SA-XB-FS, polymer stabilised SA-HB-FFS, polymer stabilised SA-XB-FFS, positive VA or positive PS-VA display.

**22.** Electro-optical liquid-crystal display or an AR/VR headset according to Claim 21, **characterized in that** it is an FFS, HB-FFS, XB-FFS, PS-HB-FFS, PS-XB-FFS, IPS or PS-IPS display.

Europäisches Patentamt
European Patent Office
Office européen des brevets

# EUROPEAN SEARCH REPORT

Application Number
EP 26 15 2849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 610 332 A1 (MERCK PATENT GMBH [DE]) 3 September 2025 (2025-09-03)<br>* claims; examples 43, 57 *<br>----- | 1,5, 10-13, 18-22 | INV.<br>C09K19/30<br>C09K19/34 |
| X,P | EP 4 502 108 A1 (MERCK PATENT GMBH [DE]) 5 February 2025 (2025-02-05)<br>* claims; example M16 *<br>----- | 1,3,5-7, 9-13, 18-22 | |
| A | EP 2 199 362 A2 (MERCK PATENT GMBH [DE]) 23 June 2010 (2010-06-23)<br>* claims; examples *<br>----- | 1-22 | |
| A | US 2024/228877 A1 (HAN YEON-JEONG [KR] ET AL) 11 July 2024 (2024-07-11)<br>* paragraph [0301]; claims; examples *<br>----- | 1-22 | |
| A | EP 4 299 694 A1 (MERCK PATENT GMBH [DE]) 3 January 2024 (2024-01-03)<br>* claims; examples *<br>----- | 1-22 | TECHNICAL FIELDS SEARCHED (IPC)<br>C09K |

The present search report has been drawn up for all claims

2

| Place of search | Date of completion of the search | Examiner |
|---|---|---|
| The Hague | 22 May 2026 | Schoenhentz, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 2849

This annex lists the patent family members relating to the patent documents cited in the above-mentioned European search report. The members are as contained in the European Patent Office EDP file on
The European Patent Office is in no way liable for these particulars which are merely given for the purpose of information.

22-05-2026

| Patent document cited in search report | | Publication date | Patent family member(s) | | | Publication date |
|---|---|---|---|---|---|---|
| EP 4610332 | A1 | 03-09-2025 | CN | 120555072 | A | 29-08-2025 |
| | | | EP | 4610332 | A1 | 03-09-2025 |
| | | | JP | 2025138584 | A | 25-09-2025 |
| | | | KR | 20250133218 | A | 05-09-2025 |
| | | | TW | 202600788 | A | 01-01-2026 |
| | | | US | 2025277152 | A1 | 04-09-2025 |
| EP 4502108 | A1 | 05-02-2025 | CN | 119432396 | A | 14-02-2025 |
| | | | EP | 4502108 | A1 | 05-02-2025 |
| | | | TW | 202519635 | A | 16-05-2025 |
| EP 2199362 | A2 | 23-06-2010 | AT | E523576 | T1 | 15-09-2011 |
| | | | CN | 101490212 | A | 22-07-2009 |
| | | | EP | 2041239 | A1 | 01-04-2009 |
| | | | EP | 2199362 | A2 | 23-06-2010 |
| | | | JP | 5813287 | B2 | 17-11-2015 |
| | | | JP | 2010503733 | A | 04-02-2010 |
| | | | JP | 2013177607 | A | 09-09-2013 |
| | | | JP | 2016084476 | A | 19-05-2016 |
| | | | KR | 20090031781 | A | 27-03-2009 |
| | | | TW | 200819520 | A | 01-05-2008 |
| | | | US | 2009309066 | A1 | 17-12-2009 |
| | | | WO | 2008009417 | A1 | 24-01-2008 |
| US 2024228877 | A1 | 11-07-2024 | CN | 118146806 | A | 07-06-2024 |
| | | | EP | 4382586 | A1 | 12-06-2024 |
| | | | JP | 2024082264 | A | 19-06-2024 |
| | | | KR | 20240085197 | A | 14-06-2024 |
| | | | TW | 202440885 | A | 16-10-2024 |
| | | | US | 2024228877 | A1 | 11-07-2024 |
| EP 4299694 | A1 | 03-01-2024 | CN | 117327495 | A | 02-01-2024 |
| | | | EP | 4299694 | A1 | 03-01-2024 |
| | | | TW | 202409256 | A | 01-03-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9110936 A1
- EP 0588568 A2
- DE 19824137 A1
- DE 19528104 A1
- JP 7181439 A
- EP 0667555 A1
- EP 0673986 A2
- DE 19509410 A1
- DE 19528106 A1
- DE 19528107 A1
- EP 4261267 A1
- DE 3022818
- DE 2209127 A
- DE 2240864 A
- DE 2321632 A
- DE 2338281 A
- DE 2450088 A
- DE 2637430 A
- DE 2853728 A


### Non-patent literature cited in the description


- **R.A. SOREF**. *Journal of Applied Physics*, 1974, vol. 45 (12), 5466-5468
- **S.H. JUNG et al.** *Jpn. J. Appl. Phys.*, 2004, vol. 43 (3), 1028
- **C.H. GOOCH** ; **H.A. TARRY**. *Electron. Lett.*, 1974, vol. 10 (2-4)
- **C.H. GOOCH** ; **H.A. TARRY**. *Appl. Phys.*, 1975, vol. 8, 1575-1584
- **S. MATSUMOTO et al.** *Liquid Crystals*, 1989, vol. 5, 1320
- **K. NIWA et al.** *Proc. SID Conference*, June 1984, 304
- **G. WEBER et al.** *Liquid Crystals*, 1989, vol. 5, 1381
- **HALLER et al.** *Mol. Cryst. Liq. Cryst.*, 1973, vol. 24, 249-258
- Merck Liquid Crystals, Physical Properties of Liquid Crystals. *Merck KGaA*, November 1997